# EUROPÄISCHE PATENTANMELDUNG

(11) **EP 3 151 137 A2**
(43) Veröffentlichungstag der Anmeldung: **05.04.2017**
(21) Anmeldenummer: 15199629.5
(22) Anmeldetag: 03.08.2010
(51) Int. Cl.: G06F 17/50

(54) **COMPUTERGESTÜTZTES ENTWICKLUNGSVERFAHREN**

(30) Priorität: 03.08.2009 DE 102009035751
(62) Teilanmeldung aus: 10775692.6
(71) Anmelder: Anetseder, Leo Philip, 82319 Starnberg (DE)
(72) Erfinder: Anetseder, Leo Philip, 82319 Starnberg (DE)
(74) Vertreter: Weickmann & Weickmann PartmbB

(57) **Zusammenfassung**

Computergestütztes Entwicklungsverfahren zur Erzeugung von Hardware-Systemen oder/und Software-Systemen, bestehend aus Komponenten/Objekten unterschiedlicher Wertigkeit, die in den niederwertigsten Komponenten/Objekten eine beliebige Anzahl von Elementen umfassen können wobei der Datenverarbeitungsablauf durch sequenzielle Datenverarbeitungssteps (DVSTPs) gebildet wird.

## Beschreibung

Die Erfindung betrifft ein Spezifikations-Verfahren zur Erzeugung von Datenverarbeitungs-Systemen in Form von Software-Systemen oder Hardware-Systemen.

Gemäß dem Stand der Technik werden Datenverarbeitungs-Systeme, die als Software-Systeme oder Hardware-Systeme realisiert werden können, in Textform und/oder Ablauf-Plänen/-Diagrammen spezifiziert und durch Umsetzung in Software mittels Programmiersprachen erzeugt.

Wie bekannt, werden zur Erzeugung der Software für Software-Systeme beispielsweise die Programmiersprachen "C" oder "C++", für Hardware-Systeme beispielsweise die Programmiersprachen "VHDL" oder "VERILOG" eingesetzt.

Für die Realisierung von Programmabläufen auf Maschinen-/Computer-Plattformen, Mikroprozessor-Konfigurationen, etc., werden die in beispielsweise "C" oder "C++" programmierten Software-Systeme über entsprechende Compiler oder/und Interpreter in einen ablauffähigen Objekt-Code umgesetzt.

Für die Realisierung von Hardware-Konfigurationen in "FPGAs", "ASICs", etc., werden die in beispielsweise "VHDL" oder "VERILOG" programmierten Hardware-Systeme über entsprechende Compiler in eine fest verdrahtete Logik-Struktur umgesetzt.

Bei Software-Systemen und Hardware-Systemen wird der sequenzielle Ablauf der Datenverarbeitung bzw. die Ergebnisbildung in der Regel wesentlich von Bedingungen und Kriterien beeinflußt bzw. gesteuert.

Bei den bekannten Verfahren bzw. Programmiersprachen zur Erzeugung von Software-Systemen und Hardware-Systemen werden bei jedem Datenverarbeitungs-Schritt, abhängig von den wirksamen Bedingungen und Kriterien, die alternativen Ergebnisbildungen definiert bzw. programmiert. In der sequenziellen Weiterführung der Programmierung von Datenverarbeitungs-Schritten sind die alternativen Ergebnisbildungen vorangegangener Datenverarbeitungs-Schritte und die für die Ergebnisbildung wirksame Bedingungen und Kriterien jedes folgenden Datenverarbeitungs-Schritts zu berücksichtigen. Entsprechend der Anzahl der Bedingungen, Kriterien und sequentiellen Datenverarbeitungs-Schritte sind bei der Programmierung bzw. Erzeugung von Software-Systemen und Hardware-Systemen in der Regel eine große Anzahl von Kombinationen aus wirksamen Bedingungen, Kriterien bzw. Variationen der Ergebnisbildungen zu berücksichtigen. Dies führt in der Regel zu Fehlern bei der Programmierung zur Erzeugung von Software-Systemen und Hardware-Systemen. Ausserdem ist deshalb auch, nach Erkennung von Fehlern in nachfolgenden Tests, die Fehler-Behebung durch Änderung der Programmierung schwierig und es können dadurch neue Fehler entstehen. Hierdurch kann, in Abhängigkeit von der Größe der Software- und Hardware-Systeme bzw. der Komplexität der Kombinationen aus Bedingungen und Kriterien, ein erheblicher Test-Aufwand entstehen, der wesentlich größer als der Programmier-Aufwand ist.

Ferner ist bei den bekannten Verfahren bzw. Programmiersprachen zur Erzeugung von Software-Systemen und Hardware-Systemen die Lesbarkeit bzw. Verständlichkeit des Zusammenhangs komplexer Datenverarbeitungs-Abläufe für Personen schwierig, die den zu interpretierenden Datenverarbeitungs-Komplex nicht entwickelt haben. Führen solche Personen Programm-Änderungen oder/und -Erweiterungen durch, dann erhöht sich in der Regel die Fehlerhäufigkeit.

Durch die der Spezifikation nachgeschaltete Programmierung zur Erzeugung von Software-Systemen und Hardware-Systemen ist durch Fehlinterpretation von Details in der Spezifikation eine weitere Fehlerquelle gegeben.

Während bei Software-Systemen die mittels Programmiersprachen, beispielsweise mit der Programmiersprache "C" oder "C++", programmiert bzw. erzeugt und über entsprechende Compiler ablauffähig auf Maschinen-/Computer-Plattformen, Mikroprozessor-Konfigurationen, etc., portiert werden, die Programmablauf-Steuerung vom Compiler bzw. Interpreter erzeugt wird, muß bei Hardware-Systemen die mittels Programmiersprachen, beispielsweise mit der Programmiersprache "VHDL" oder "VERILOG", programmiert bzw. erzeugt werden, die Programmablauf-Steuerung bei der Programmierung erstellt werden.

Der Erfindung liegt daher die Aufgabe zu Grunde, zur Erzeugung von Software-Systemen und Hardware-Systemen ein einheitliches Spezifikations-Verfahren zu schaffen, das ohne Nachschaltung einer Software-Programmierung auskommt und so Programmabläufe bei Software-Systemen direkt über Compiler oder/und Interpreter auf Maschinen-/Computer-Plattformen, Mikroprozessor-Konfigurationen, etc., erzeugt bzw. steuert sowie bei Hardware-Systemen direkt über Compiler Hardware-Konfigurationen inklusive der Programmablauf-Steuerung in "FPGAs", "ASICs", etc., realisiert.

Diese Aufgabe wird bei einem Spezifikations-Verfahren der eingangs genannten Art erfindungsgemäß durch die im Kennzeichen des Anspruchs 1, 31 und 40 genannten Merkmale gelöst.

Durch die erfindungsgemäße Lösung erfolgt bei Software-Systemen und Hardware-Systemen die Spezifizierung eines Datenverarbeitungs-Schritts ohne Berücksichtigung von Kombinationen aus Bedingungen, Kriterien bzw. Variationen vorangegangener Ergebnisbildungen. Dies wird erreicht, in dem ein erster Datenverarbeitungs-Ablauf, ein sog. Basisoperations-Ablauf, mit einer festen Kombination aus Bedingungen und Kriterien, spezifiziert wird. Dabei wird für die Kombination aus Bedingungen und Kriterien ein sog. Standard-/Normal-Zustand, ohne Fehler-Ereignisse vorausgesetzt. Danach wird für jede einzelne Kombination aus Bedingungen und Kriterien je ein weiterer Datenverarbeitungs-Ablauf, eine sog. RTI-Basisoperations-Variante, spezifiziert. Bei der Spezifizierung einer RTI-Basisoperations-Variante werden nur die gegenüber der RTI-Basisoperation unterschiedlichen Datenverarbeitungs-Schritte geändert bzw. ergänzt spezifiziert. Die hierbei im Datenverarbeitungs-Ablauf durch Änderung fehlerhaft gewordenen Datenverarbeitungs-Schritte werden vorzugsweise automatisch, schrittweise in Datenverarbeitungs-Ablaufrichtung aufgerufen und gekennzeichnet, sodaß die entsprechenden Korrekturen eingebracht werden können.

Vorteilhafte Weiterbildungen der Erfindung sind in den Unteransprüchen gekennzeichnet.

Nachfolgend wird die Erfindung anhand der in den Zeichnungen dargestellten Ausführungsbeispiele näher beschrieben. Es zeigt:
- Fig.1: den Toplevel "AB" mit seinen Instanzen und Unterinstanzen in Blockstruktur-Darstellung;
- Fig.2: den Toplevel "AB" von Fig.1 mit seinen Instanzen und Unterinstanzen in einer Verzeichnisbaumstruktur-Darstellung (Directory);
- Fig.3: den Toplevel "A" mit seinen Instanzen und Unterinstanzen in Blockstruktur-Darstellung;
- Fig.4: den Toplevel "A" von Fig.3 mit seinen Instanzen und Unterinstanzen in einer Verzeichnisbaumstruktur-Darstellung (Directory);
- Fig.5: die Menüzeile "Z1" nach Aufruf des SPV;
- Fig.6: die Menüzeile "Z1" mit geöffnetem Projekt-Fenster und ProjektAuswahl "NEU";
- Fig.7: die Menüzeile "Z1" mit Projekt-Auswahl "NEU" in "FELD1" durch Schließen des Projekt-Fensters von Fig.6 und den manuellen Projekt-Eintrag "A" in "FELD2";
- Fig.8: die Menüzeile "Z1" mit geöffnetem Programm-Fenster und Programm-Auswahl "INSTANZIIEREN";
- Fig.9: den Bildschirm "INSTANZIIEREN" nach dem Schließen des Programmfensters von Fig.8;
- Fig.10a: den manuellen Eintrag des Entwicklungsstandes in der Zeile des Toplevels "A";
- Fig.10b: die Erzeugung von Instanz-Zeilen mit manuellen Eintrag der Instanzen "AA", "AB" und "AC";
- Fig.10c: die Bestätigung der Instanziierung der Komponenten "AA", "AB" und "AC" und die Löschung der überzähligen Instanzzeilen;
- Fig.11: den Bildschirm "INSTANZIIEREN" nach Löschung der Instanzzeile "AB";
- Fig.12a-12b: die Vorbereitung für einen Wechsel des Toplevels von "A" nach "AB";
- Fig.13: den Bildschirm "INSTANZIIEREN" nach Bestätigung des Toplevel-Wechsels von "A" nach "AB";
- Fig.14-21: die Instanziierung von Komponenten und ihre Unterinstanzen unter dem Toplevel "AB" und die Bedienung der Funktionen des Bildschirms "INSTANZIIEREN", inklusive der EditierFunktionen;
- Fig.22: im Bildschirm "INSTANZIIEREN" die Instanziierung der Komponenten "AA", "AB" und "AC" mit ihren Unterinstanzen im Toplevel "A";
- Fig.23: den Bildschirm "VERBINDEN" nach dem Öffnen, mit dem Toplevel "A" und seinen Instanzen "AA", "AB" und "AC" im X-/Y-Bereich und den Unterinstanzen "ABA", "ABB" und "ABC" der Instanz "AB" im Y-Bereich;
- Fig.24: den Toplevel "AB" mit seinen Instanzen "ABA", "ABB" und "ABC" in Blockstruktur-Darstellung;
- Fig.25a: den Bildschirm "VERBINDEN" mit Toplevel "AB" und seinen Instanzen "ABA", "ABB" und "ABC";
- Fig.25b-32b: die Spezifizierung der Verbindungen im Bildschirm "VERBINDEN" nach Blockstruktur von Fig.24;
- Fig.33: die gegenüber Fig.32b weggeschalteten AB-Sendeports;
- Fig.34: die Darstellung der Blockstruktur von Fig.24, zusätzlich mit Port-Bezeichnungen getrennt für Sende-Ports mit "T" (Transmit) und Empfangs-Ports mit "R" (Receive);
- Fig.35: im Bildschirm "VERBINDEN" die Bezeichnungen der SendePorts im X-Bereich mit "T" und der Empfangs-Ports im Y-Bereich mit "R";
- Fig.36a: den Bildschirm "VERBINDEN" mit den Sende-Ports im Y-Bereich und den Empfangs-Ports im X-Bereich;
- Fig.36b: gegenüber Fig.36a die selektive Umschaltung der Signalübertragungs-Richtung für die Instanz "ABC" mit Sende-Ports im X-Bereich und Empfangs-Ports im Y-Bereich;
- Fig.37: den Bildschirm "VERBINDEN" mit gegenüber Fig.36a weggeschaltetem Toplevel "AB" und Darstellung des Signalverbindungszeilen-Scrollbereichs;
- Fig.38: die Darstellung des Scrollbereichs für die Spalten im Y-Bereich;
- Fig.39: gegenüber Fig.38 eine für die ABA-Empfangs-Ports durch Editierung geänderte Zuweisung von Sende-Ports;
- Fig.40: eine gegenüber Fig.34 erweiterte Blockstruktur für den Toplevel "AB";
- Fig.41a: den Bildschirm "VERBINDEN" mit der Erweiterung durch die Unterinstanzen "ABAA", "ABAAA", ABAAB", "ABAAC", "ABAAD" und "ABAB" für die Instanz "ABA", entsprechend der Blockstruktur von Fig.40, dadurch werden die ABA-Sende-/Empfangs-Ports zu Durchgangsports und damit die Signalverbindungen unvollständig, was automatisch durch ein Fragezeichen "?" in der Schaltfläche "CORR" in "Z3" hinter CORR angezeigt wird;

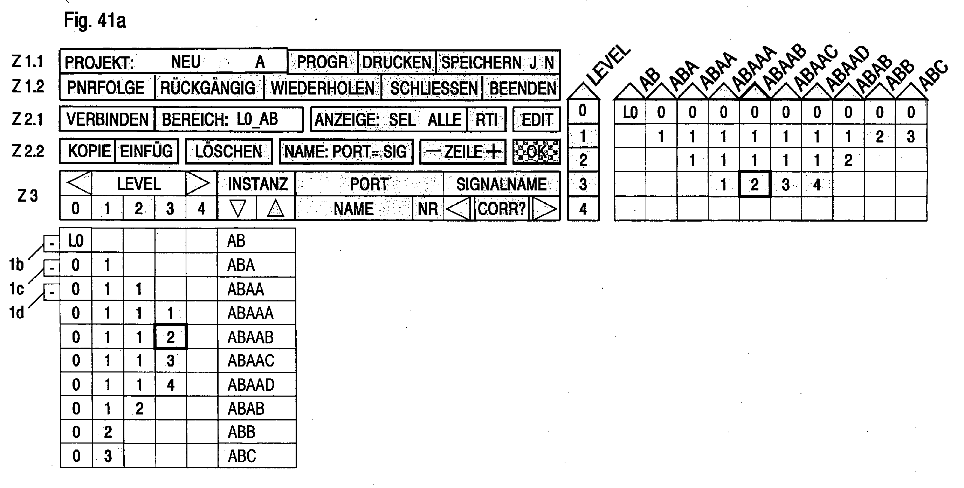

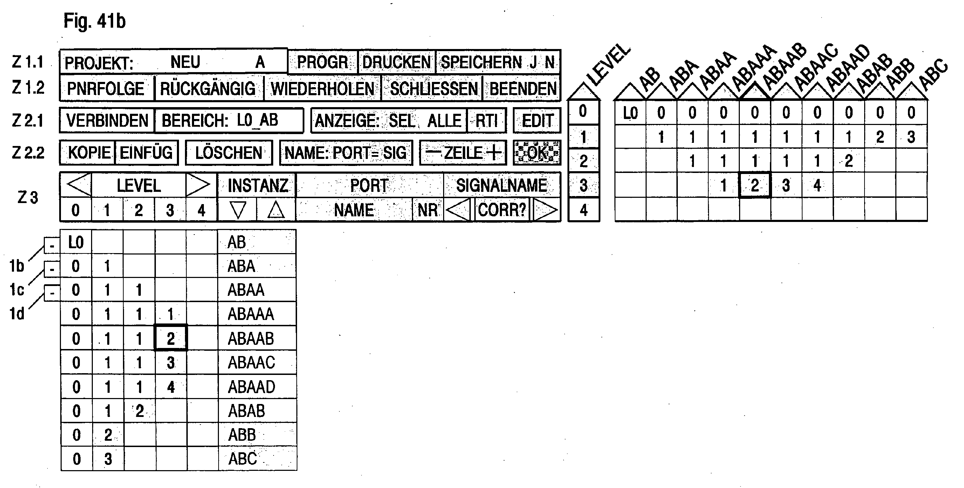

- Fig.41 b: den Bildschirm "VERBINDEN" mit Markierungen desToplevels "AB" und den Instanzen "ABA", "ABB" und "ABC" in der Spalte "INSTANZ" als Vorbereitung für eine selektive Darstellung der Signalverbindungen zwischen diesen markierten Einheiten;

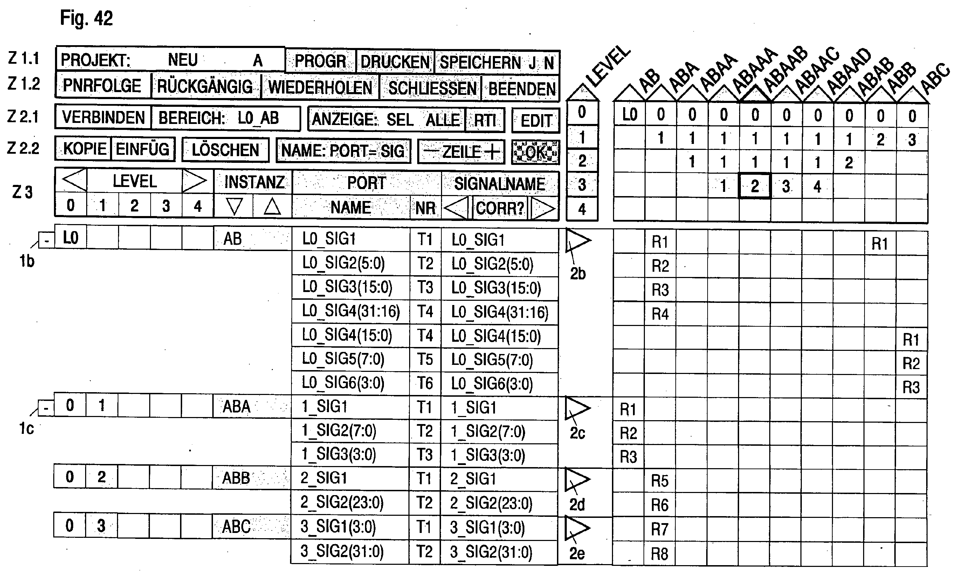

- Fig.42: die selektive Darstellung der bisher spezifizierten Signalverbindungen durch Umschaltung in der Schaltfläche "ANZEIGE:ALLE" in "Z2.1" auf "ANZEIGE:SEL";

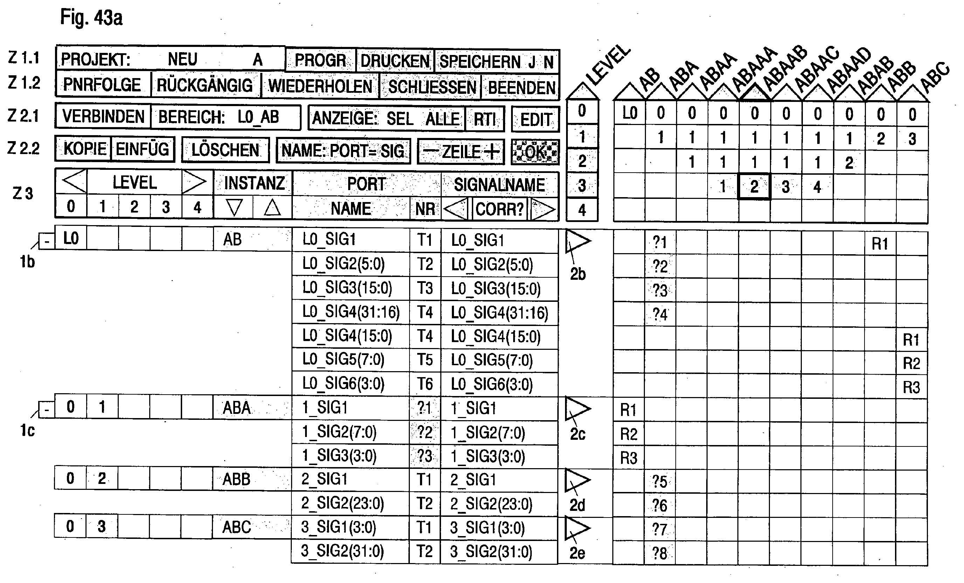

- Fig.43a: die aktivierte Schaltfläche Korrektur "CORR?" in "Z3", dadurch wird die Instanz-Erweiterung von Fig.41a für die Signalverbindungs-Spezifizierung mit einbezogen und die ABA-Sende/Empfangs-Ports als Durchgangs-Ports mit einem Fragezeichen "?" gekennzeichnet;

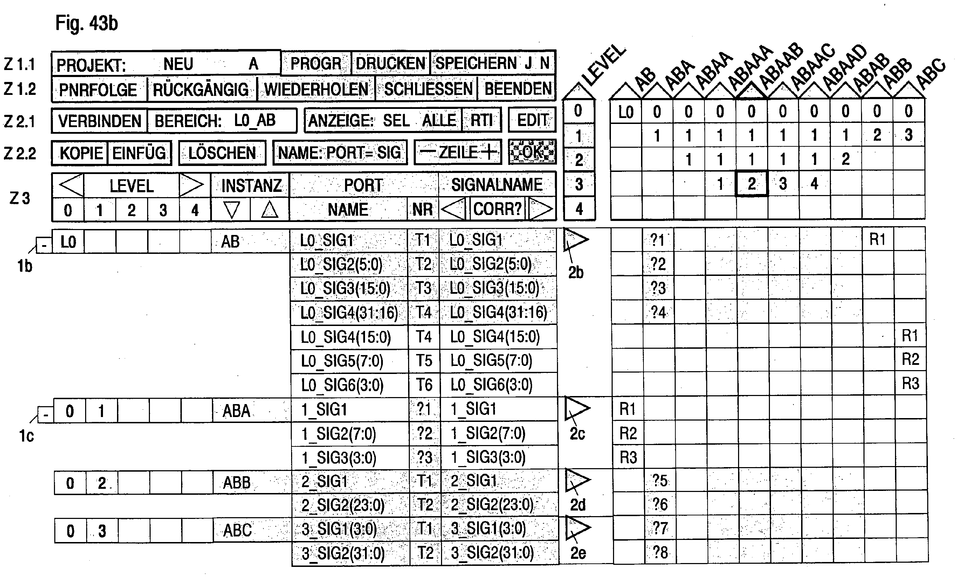

- Fig.43b: die Vorbereitung für die Signalverbindungs-Spezifizierung für die Instanz-Erweiterung von Fig.41a;

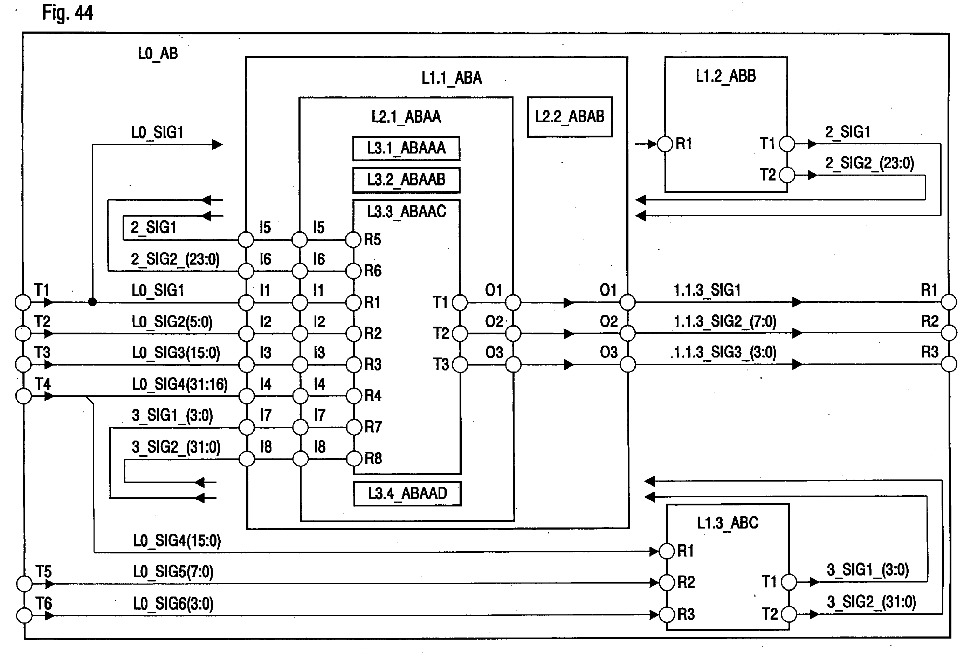

- Fig.44: die Blockstruktur mit der Instanz-Erweiterung nach Fig.41a und die zu spezifizierenden, zusätzlichen Signalverbindungen;

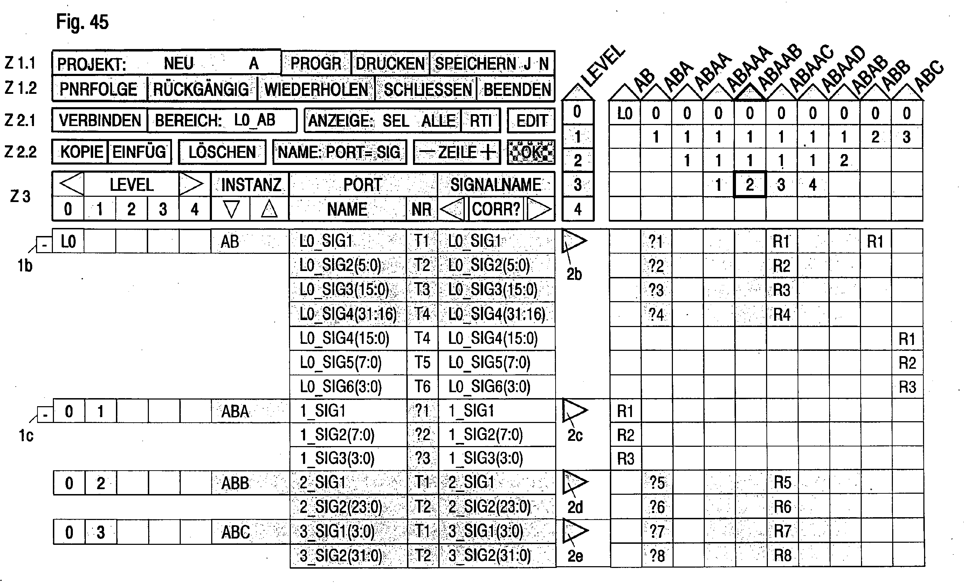

- Fig.45: den Eintrag für die ABAAC-Empfangsports "R1-8" im Y-Bereich;

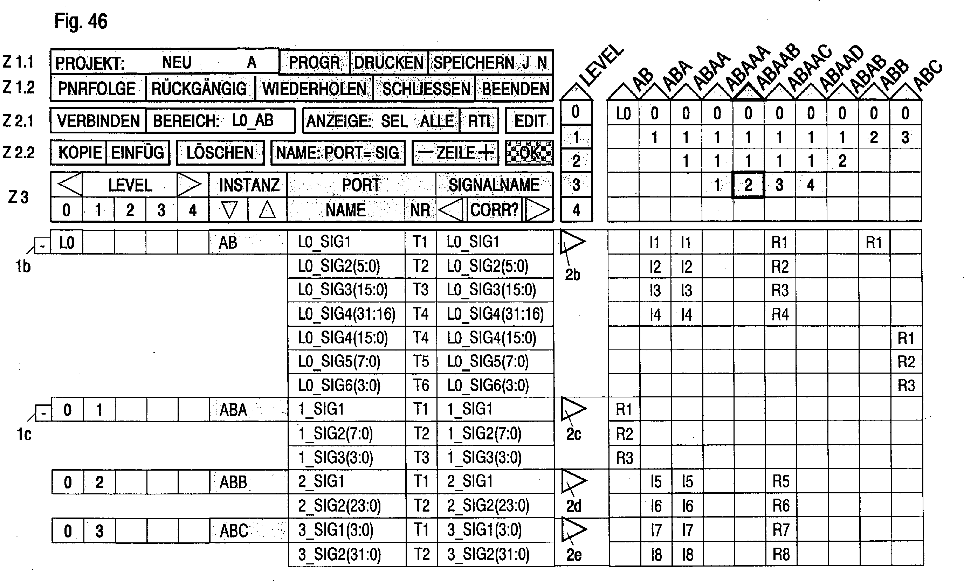

- Fig.46: den Bildschirm "VERBINDEN" nach Eintrag und Bestätigung der ABAAC-Empfangsports "R1-8" von Fig.45, dabei wurden die ABA-/ABAA-Durchgangsinputports "I1-8" automatisch eingetragen;

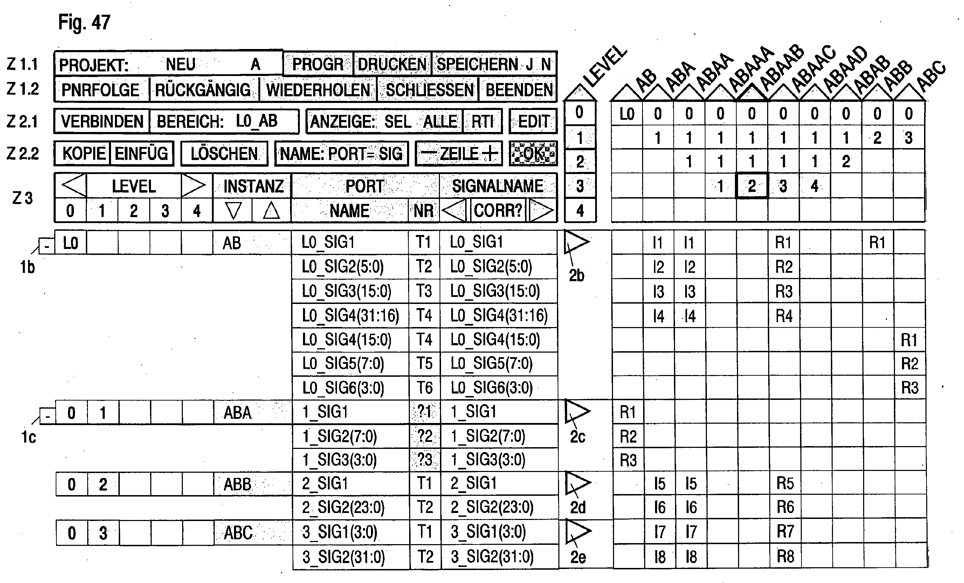

- Fig.47: eine erneute Aktivierung der Schaltfläche Korrektur "CORR?" in "Z3" mit durch Fragezeichen "?" gekennzeichnete ABA-Sendeports;

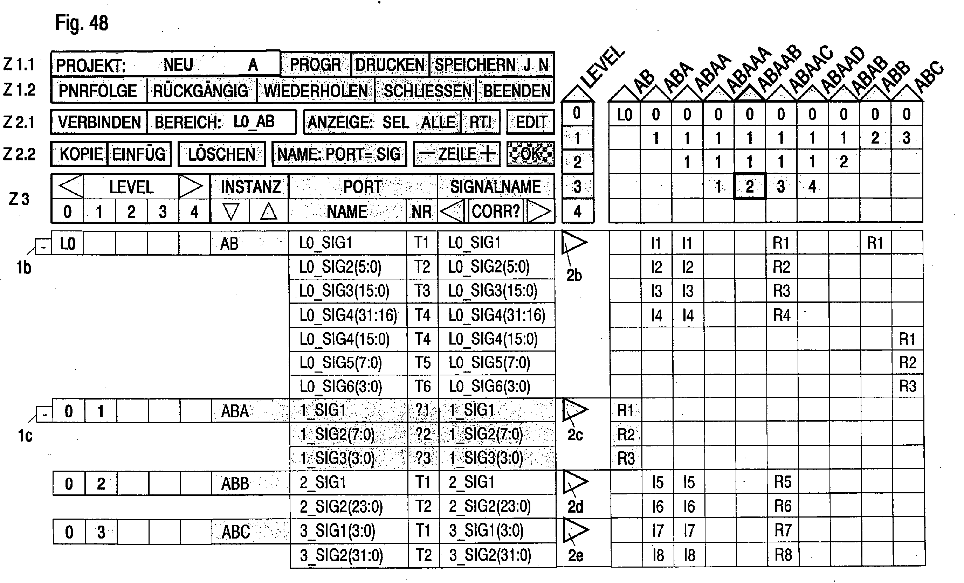

- Fig.48-49: die AB-Empfangsports "R1-3" nach Umschaltung vom Y-Bereich in den X-Bereich und die Kennzeichnung der möglichen Sendeports im Y-Bereich durch Markierung;

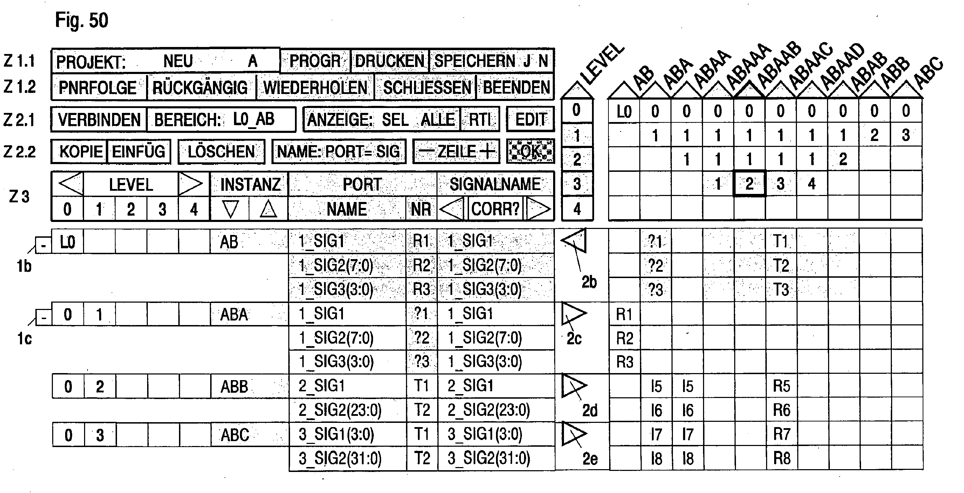

- Fig.50: die Eintragung der ABAAC-Sendeports "T1-3" im Y-Bereich;

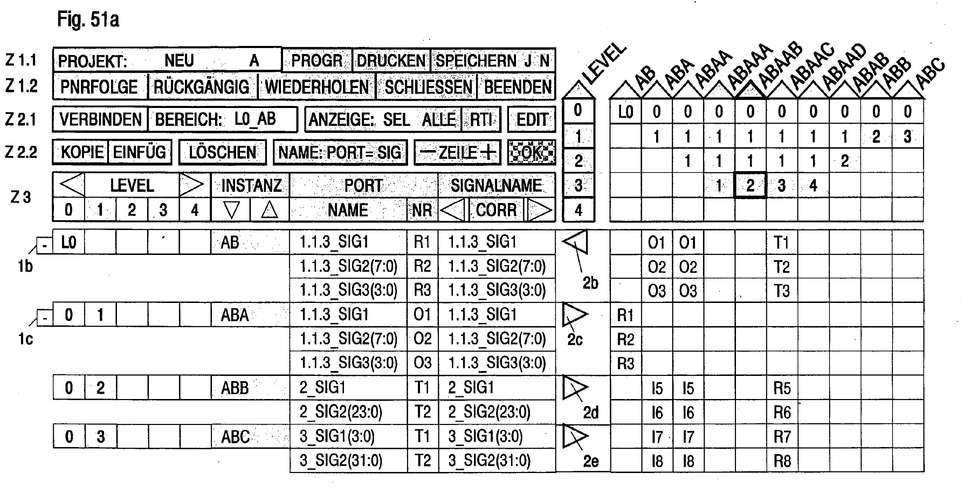

- Fig.51a: den Bildschirm "VERBINDEN" nach Eintragung und Bestätigung der ABAAC-Sendeports "T1-3" im Y-Bereich von Fig.50, dabei wurden die ABA-/ABAA-Durchgangsoutputports "O1-3" automatisch eingetragen;

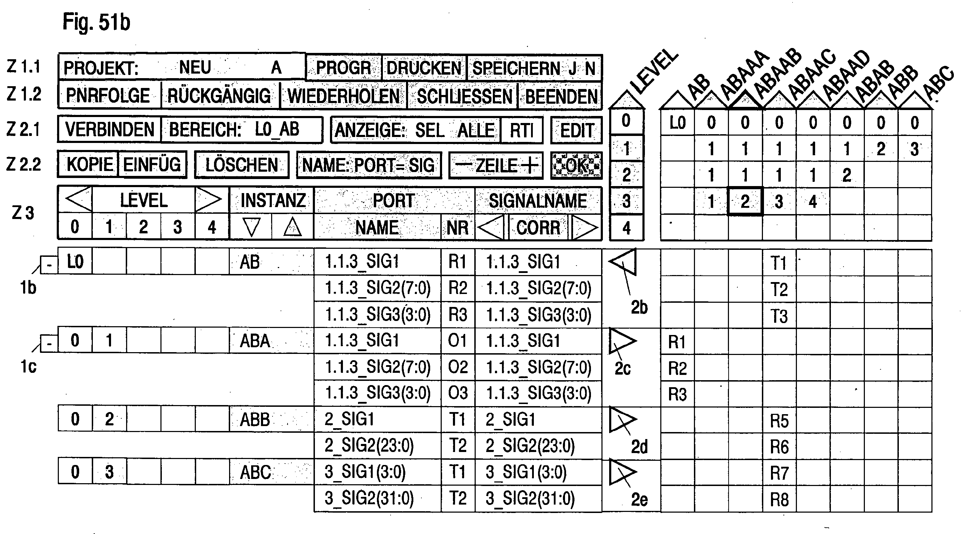

- Fig.51b: die Aktivierung der Schaltfläche "RTI" in "Z2.1 ", dabei werden im Y-Bereich nur noch die niederwertigsten Instanzen (RTIn) des Toplevels "AB" angezeigt;

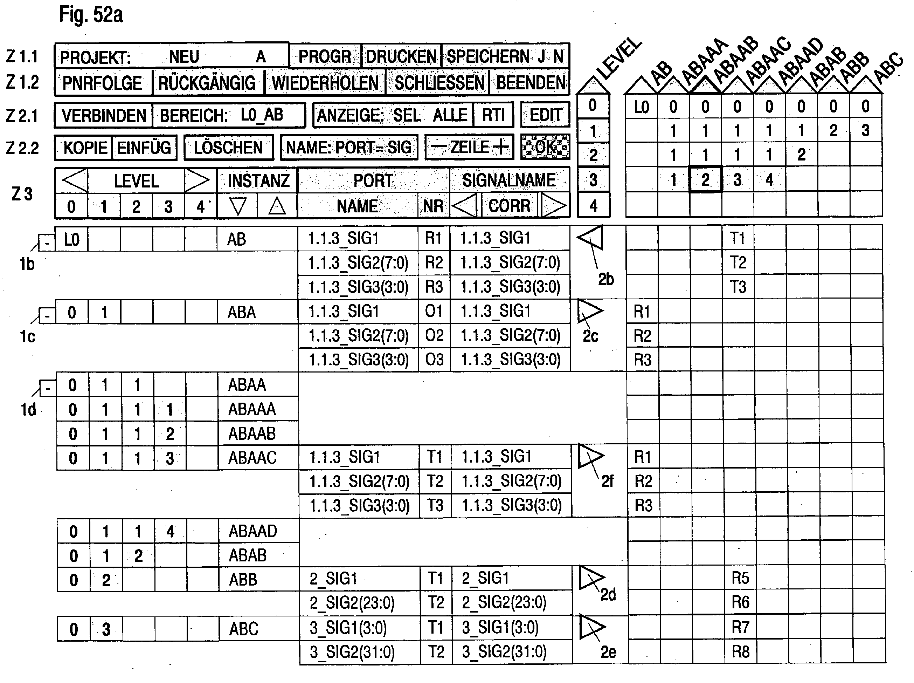

- Fig.52a: im X-Bereich den Toplevel "AB" mit seinen Empfangsports, sowie die Outputports der Instanz "ABA" und die Sendeports der Instanzen "ABAAC", "ABB" und "ABC", dabei sind im Y-Bereich nur die "RTIn" dargestellt;

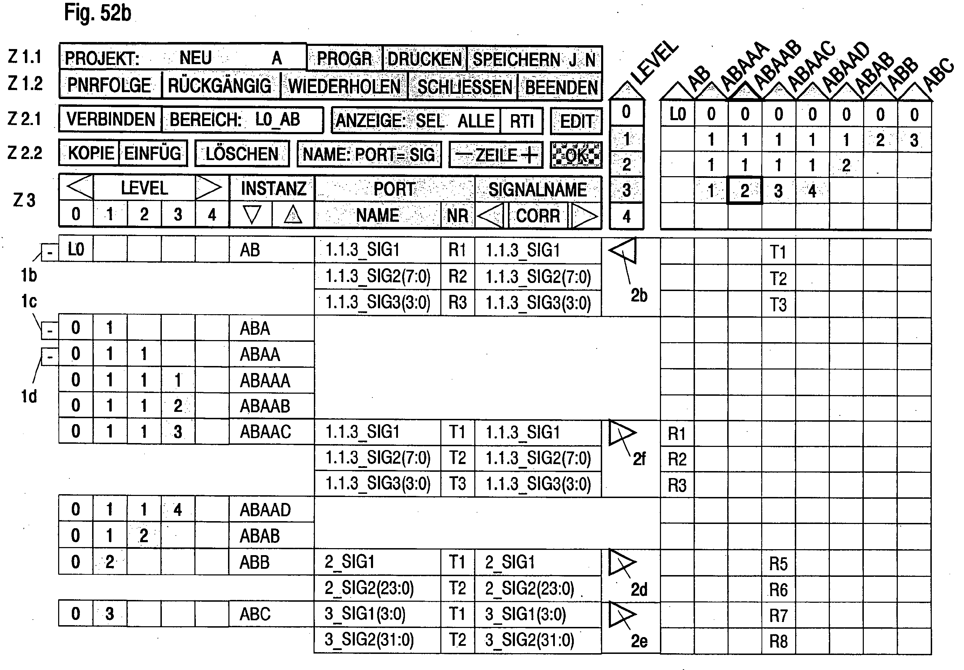

- Fig.52b: den Bildschirm "VERBINDEN" von Fig.52a, jedoch mit weggeschalteten ABA-Outputports;

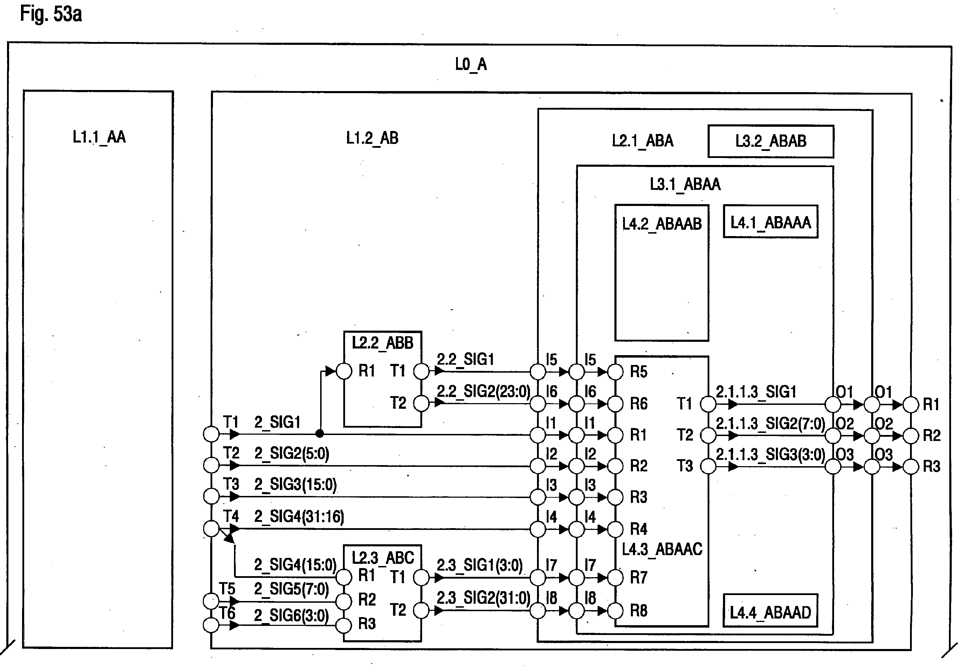

- Fig.53a: die Blockstruktur des Toplevels "A" in dem die Instanz "AA" und der oben genannte Toplevel "AB" instanziiert sind;

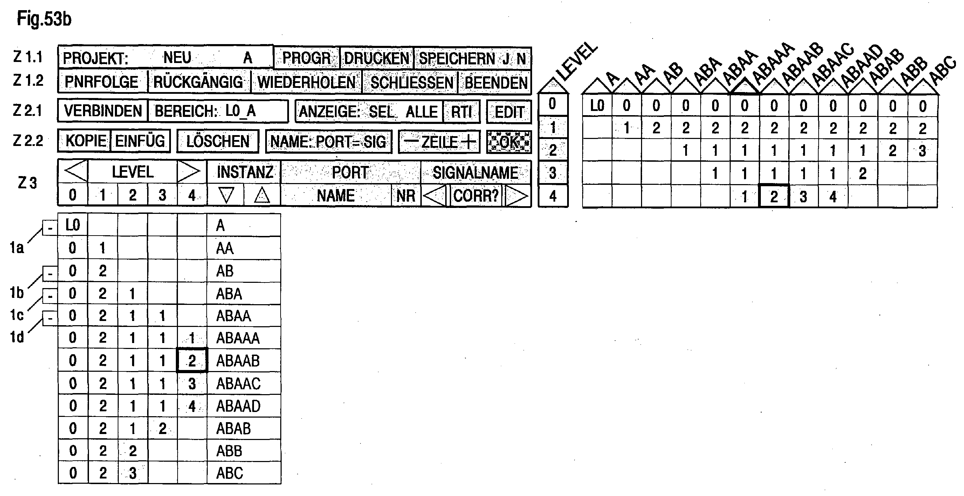

- Fig.53b: den Bildschirm "VERBINDEN" mit dem Toplevel "A" und der in Fig.53a dargestellten Instanziierung und allen Instanzen im Y-Bereich, dabei wird in der Schaltfläche Korrektur "CORR" in "Z3" ein "?" gesetzt, da die Input-/Output-Ports der Instanz "AB" nur Durchgangsports sind;

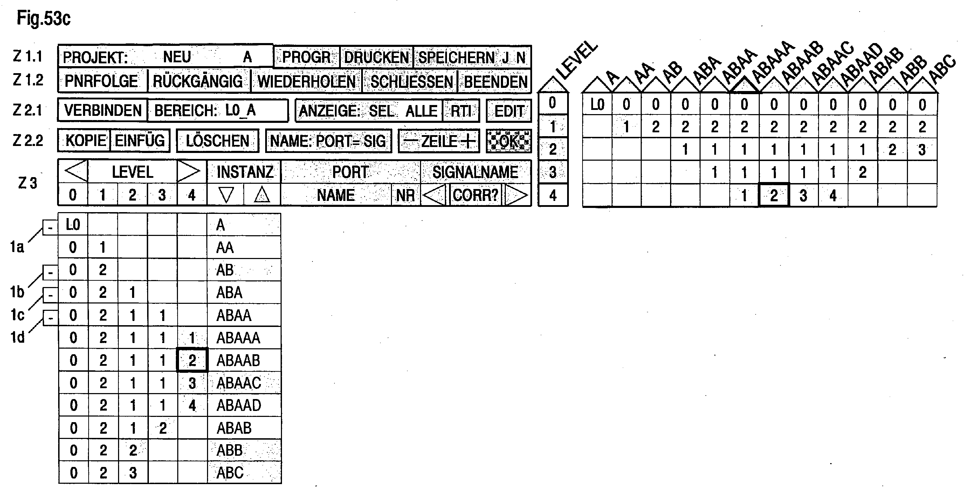

- Fig.53c: die in der Spalte "INSTANZ" für eine selektive Anzeige durch Markierung ausgewählten Schaltflächen des Toplevels "A" und der Instanzen "AB" mit Unterinstanz "ABAAC", "ABB" und "ABC";

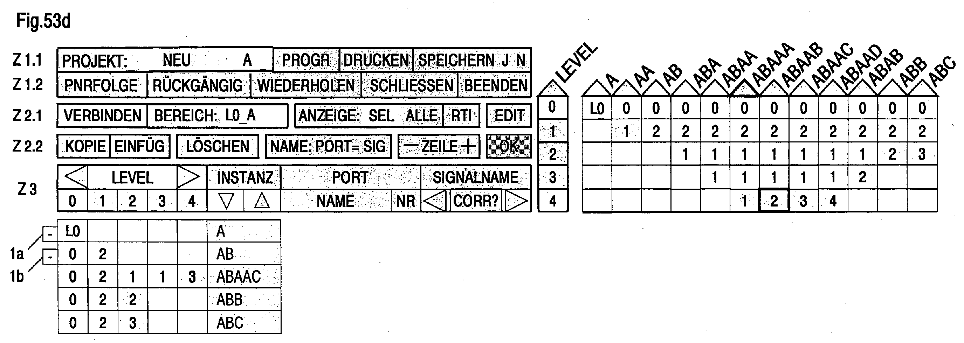

- Fig.53d: die in Fig.53c ausgewählten Instanzen durch Aktivierung der Schaltfläche "SEL" in "Z2.1" für eine selektive Instanz-Anzeige;

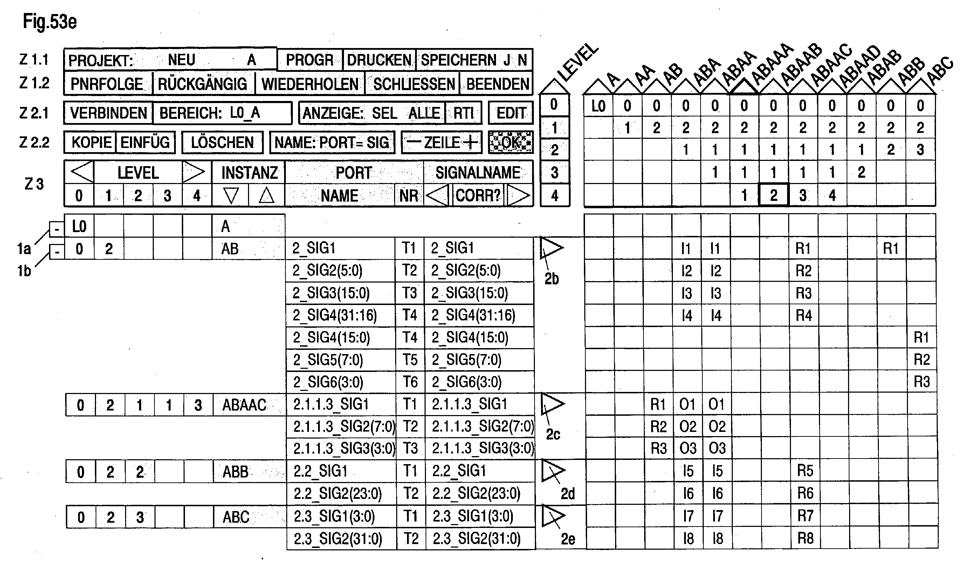

- Fig.53e: die bisher spezifizierten Signalverbindungen der Instanz "AB", wie sie in der Blockstruktur von Fig.53a dargestellt sind;

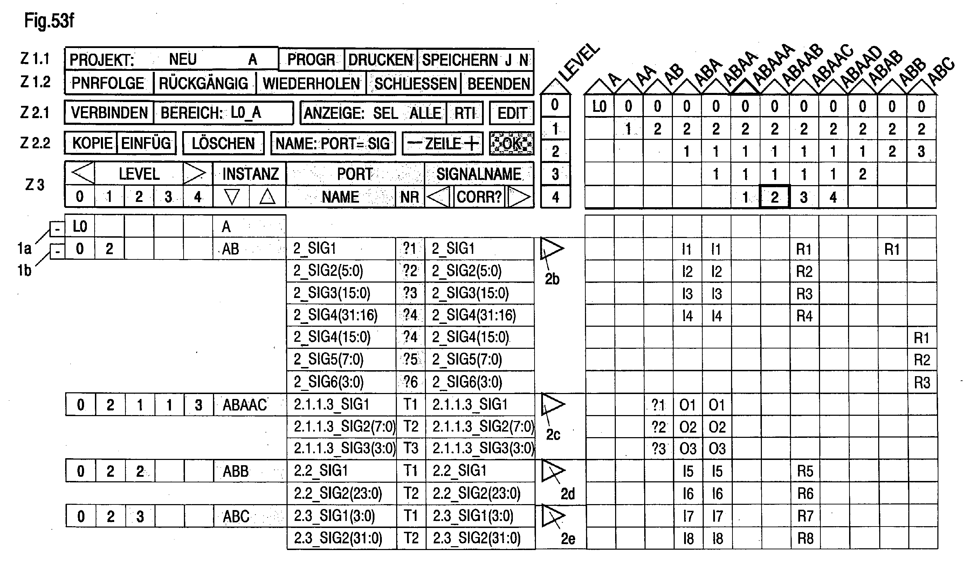

- Fig. 53f: die aktivierte Schaltfläche "CORR?" in "Z3", hierdurch werden die AB-Sende-/Empfangs-Ports zu Durchgangs-Ports, deren Signalverbindungen noch zu spezifizieren und durch Markierung und Fragezeichen "?" gekennzeichnet sind;

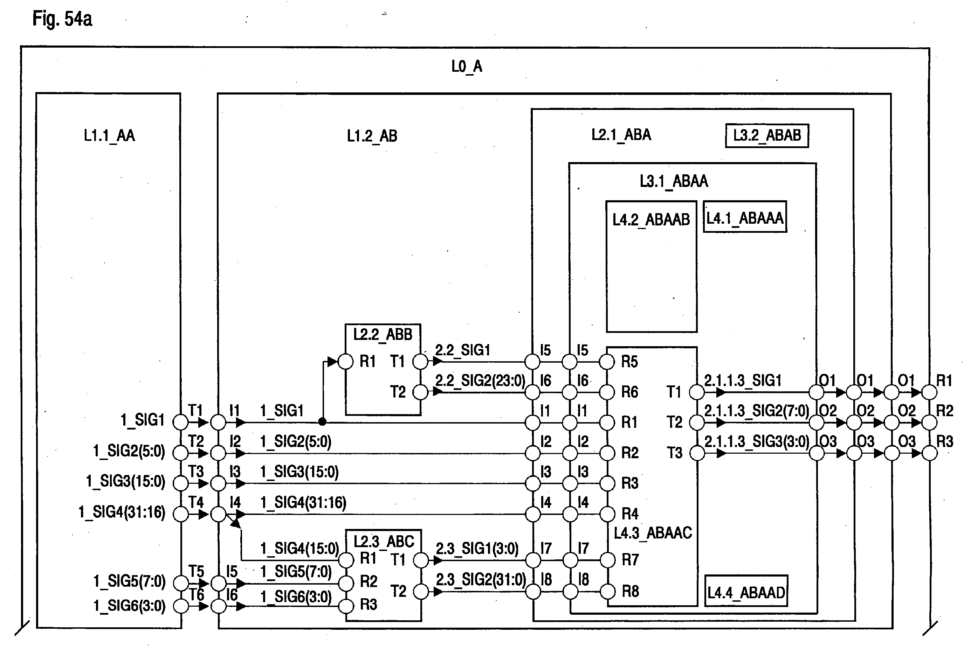

- Fig.54a: die noch zu spezifizierenden Signalverbindungen der AB-Durchgangs-Ports in Blockstruktur-Darstellung;

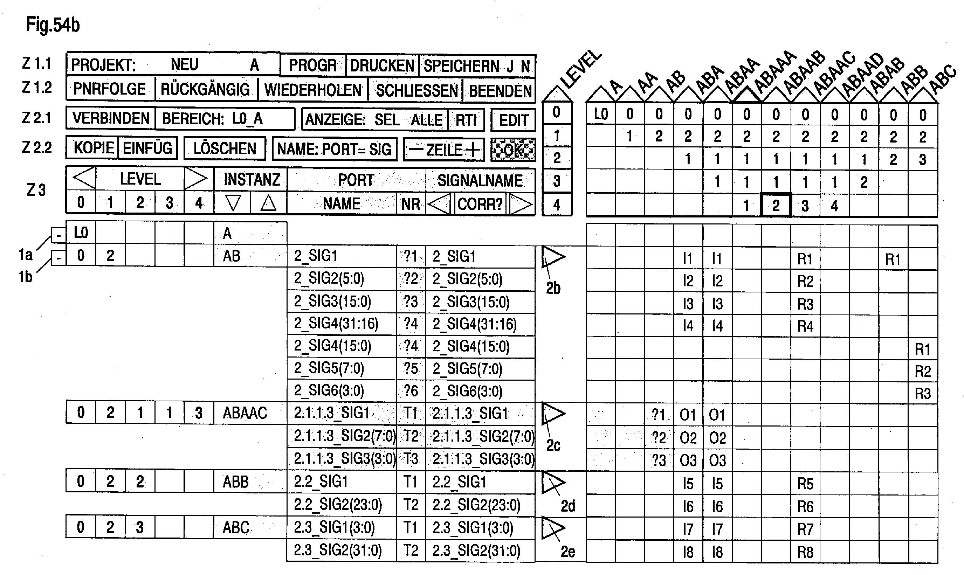

- Fig.54b-54c: die Durchführung der Spezifizierung der Signalverbindungen für die AB-Output-Durchgangsports;

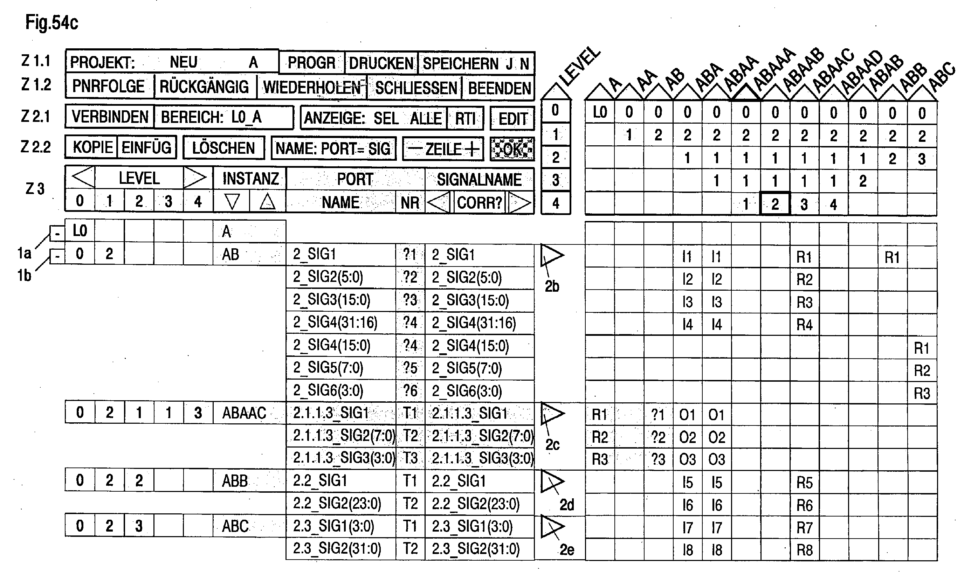

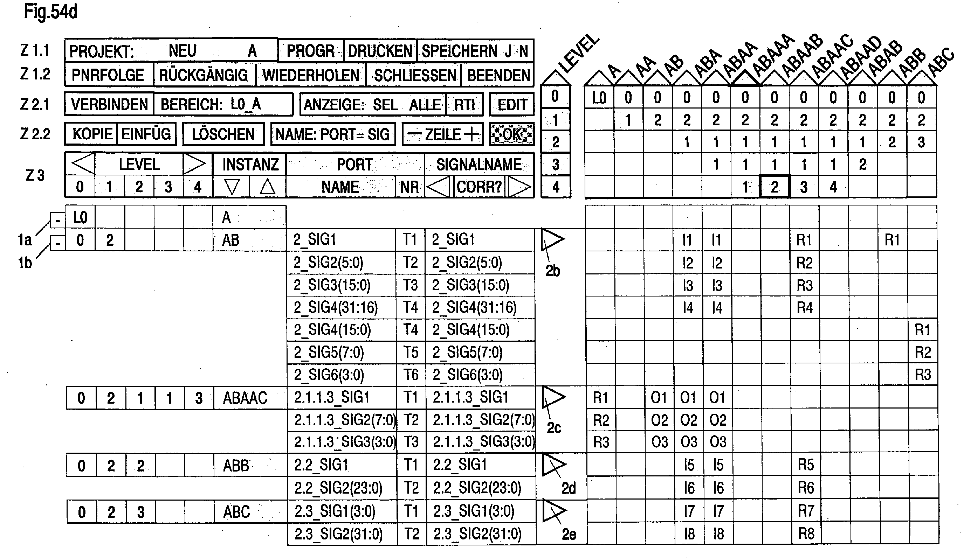

- Fig.54d: nach Bestätigung der Spezifizierung der Signalverbindungen von Fig.54c die neu spezifizierten AB-Outputports "O1-O3" im Y-Bereich;

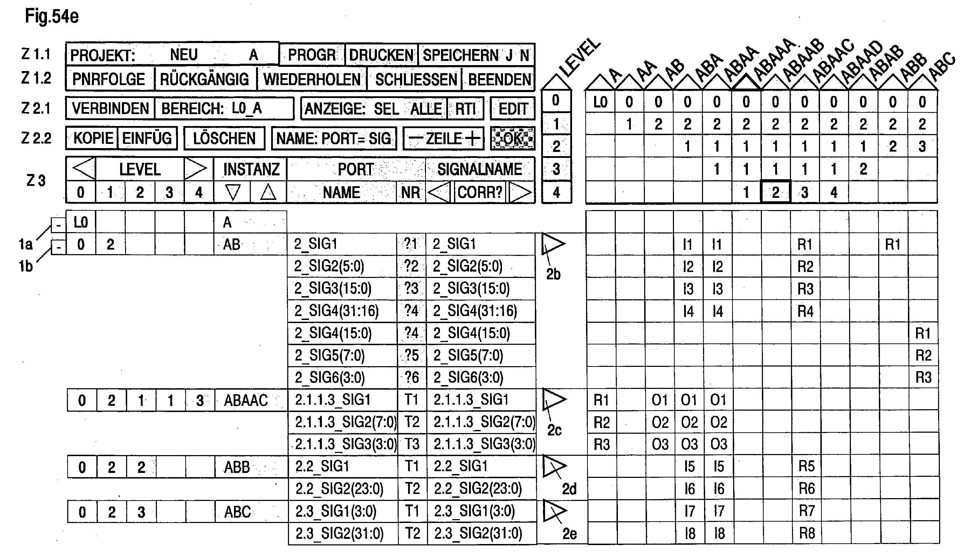

- Fig.54e-54g: die Durchführung der Spezifizierung der Signalverbindungen für die AB-Input-Durchgangsports;

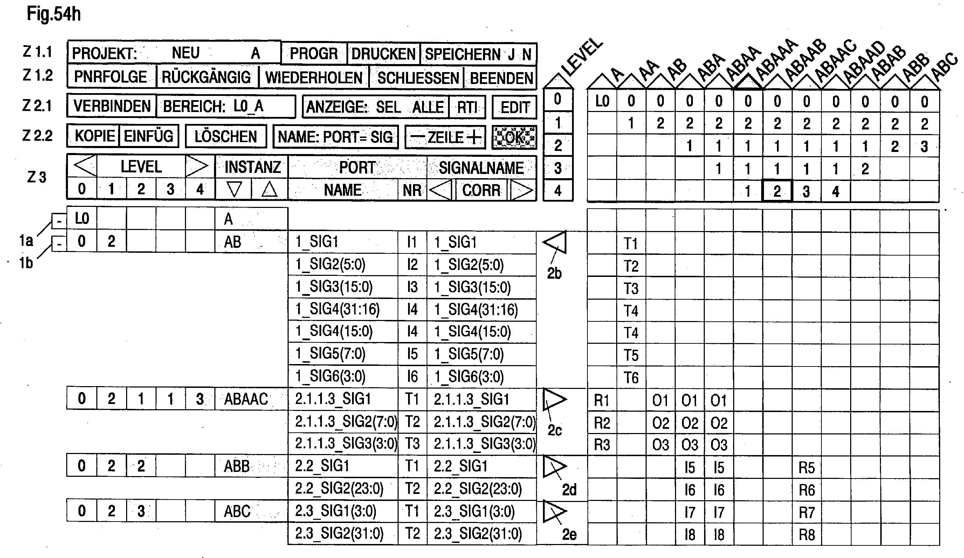

- Fig.54h: die neu spezifizierten AB-Inputports mit "I1-I6" im X-Bereich;

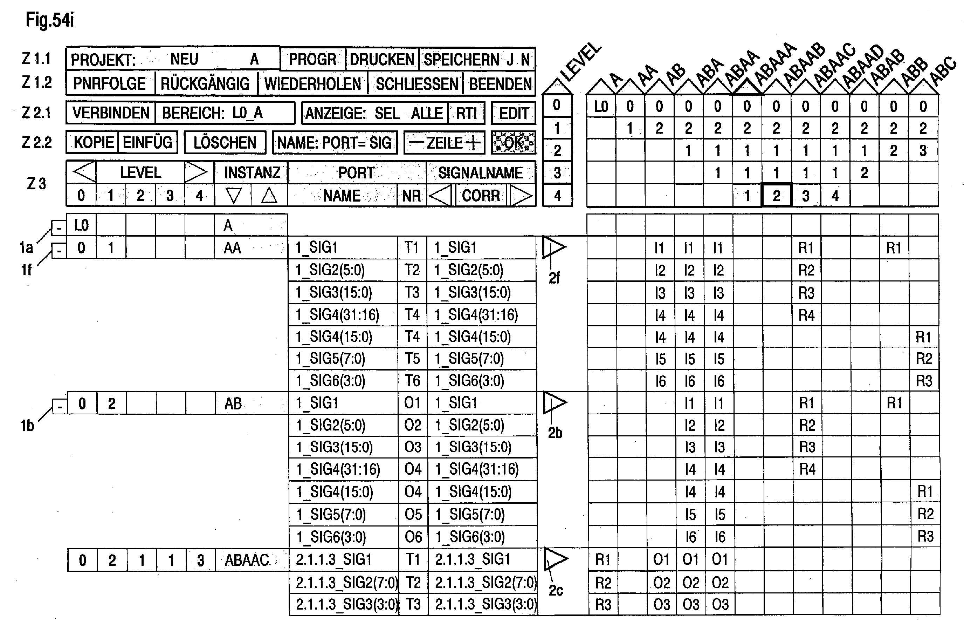

- Fig.54i: die Ansicht der Sendeports im X-Bereich für die Toplevel-Instanzen "AA", "AB" und die Unterinstanz "ABAAC";

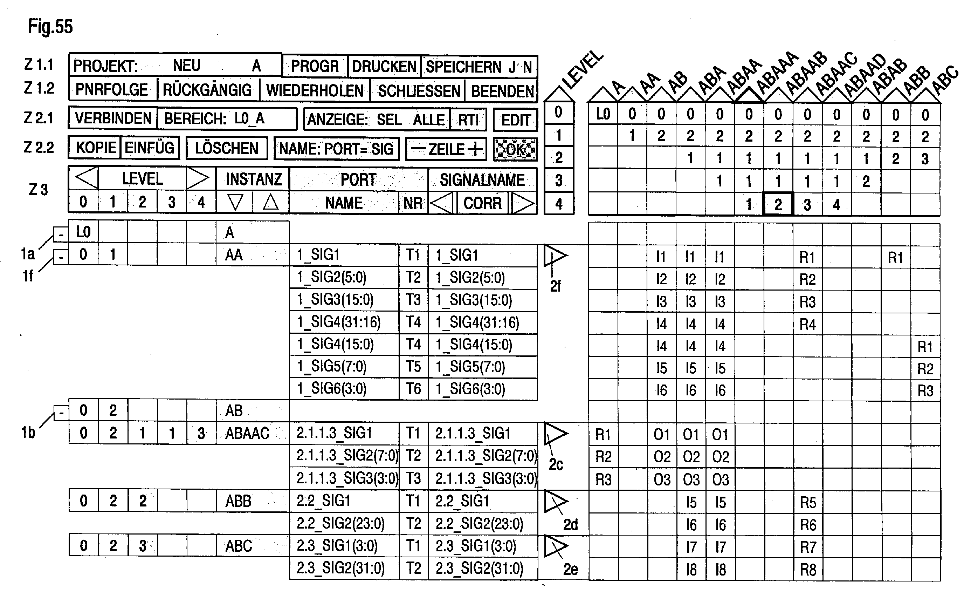

- Fig. 55: gegenüber Fig.54i zusätzlich die Sendeports im X-Bereich für die Unterinstanzen "ABB" und "ABC", die AB-Sendeports sind weggeschaltet;

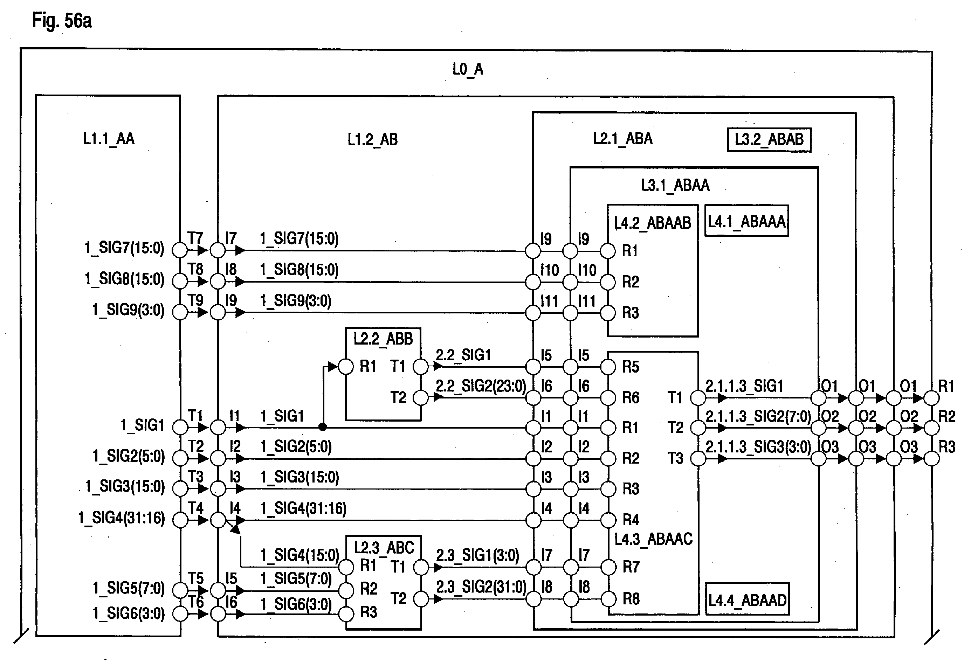

- Fig.56a: gegenüber der Blockstruktur von Fig.54a zusätzlich zu spezifizierende Signalverbindungen von den AA-Sendeports "T7-T9" zu den ABAAB-Empfangsports "R1-R3";

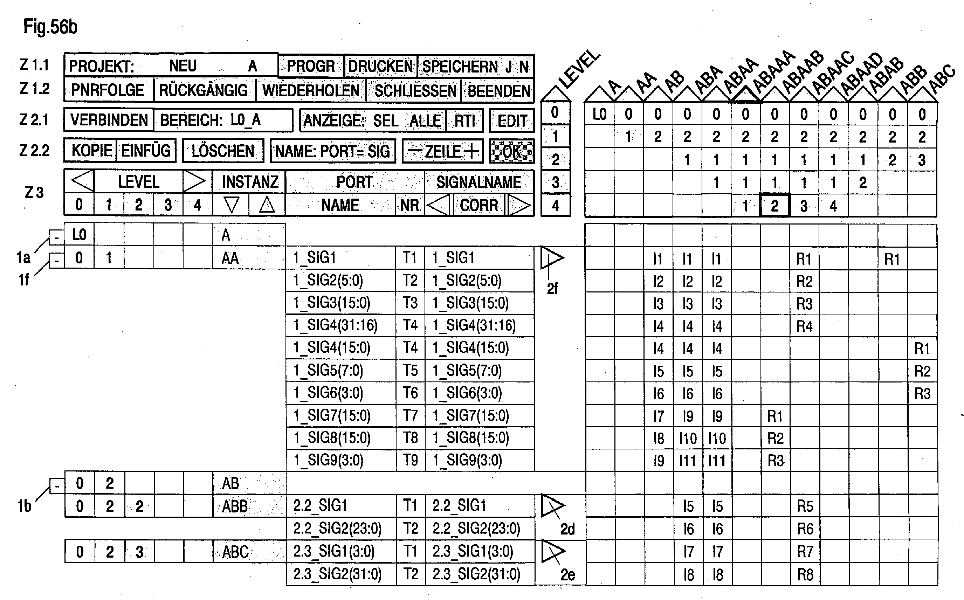

- Fig.56b: die von Fig.56a zusätzlich spezifizierten Signalverbindungen;

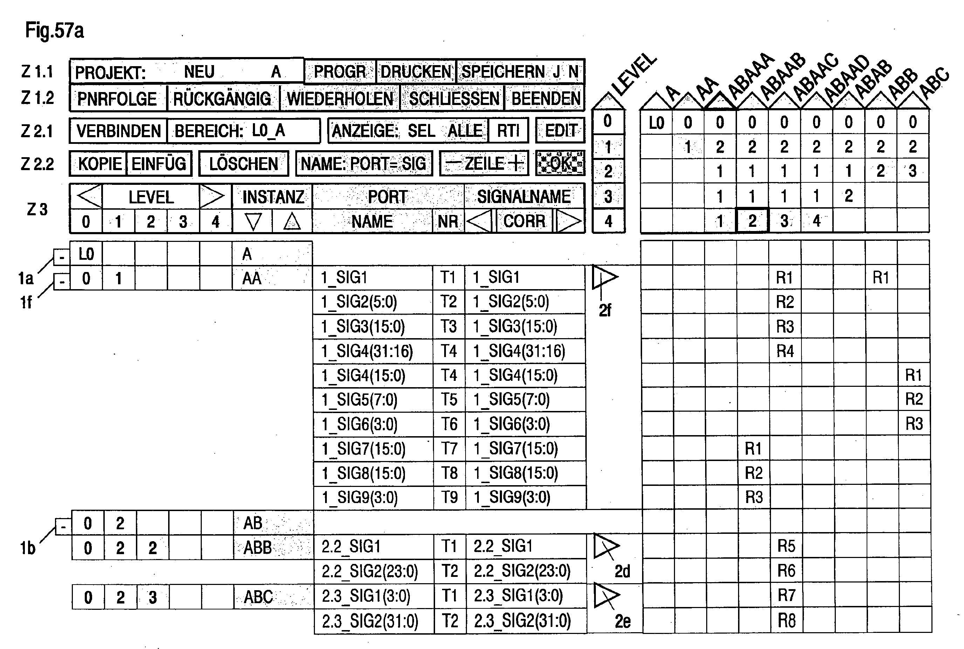

- Fig.57a: die Signalverbindungen von Fig.56b mit RTI-Darstellung im Y-Bereich;

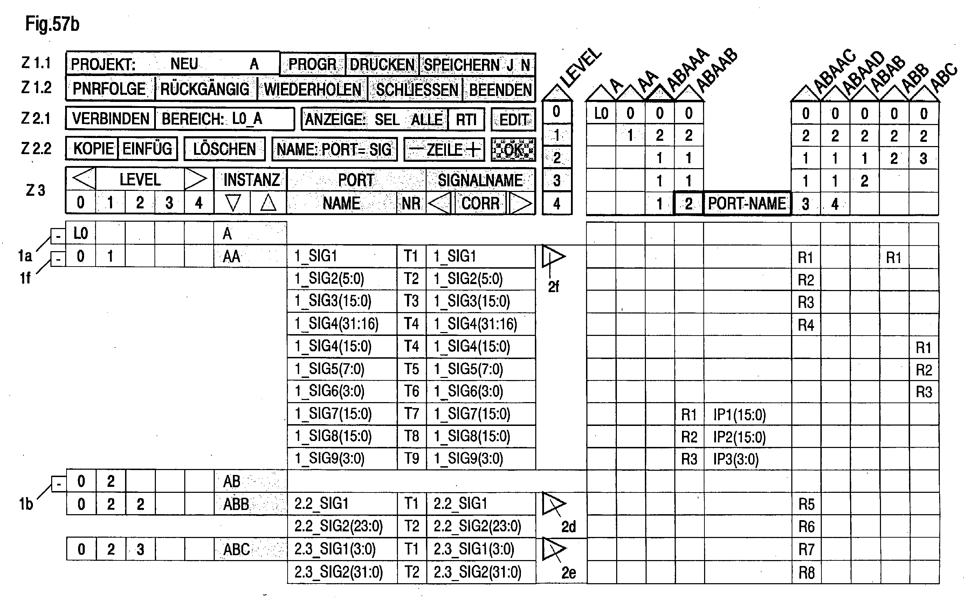

- Fig.57b: im Y-Bereich die Darstellung von Portnamen für die Bibliotheks-Komponente "ABAAB";

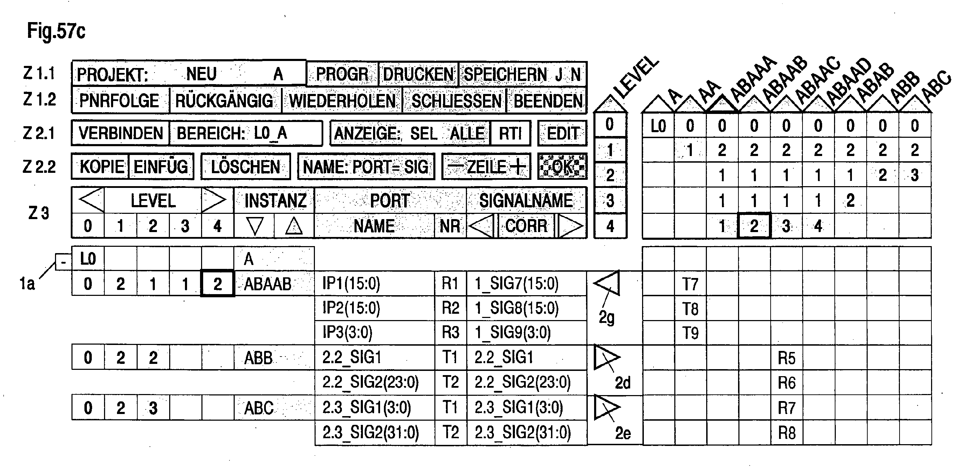

- Fig.57c: den Bildschirm "VERBINDEN" mit im X-Bereich dargestellten Sendeports der Unterinstanzen "ABB" und "ABC" und den Empfangsports der Unterinstanz "ABAAB", die als Bibliotheks-Komponente zum Signalnamen unterschiedliche Portnamen besitzt;

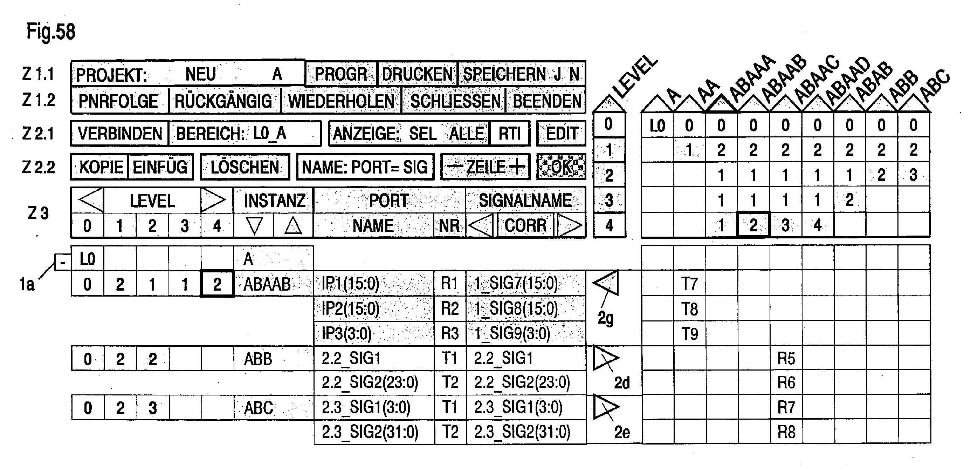

- Fig.58: die Vorbereitung der Anpassung der Portnamen an die Signalnamen für die instanziierte Bibliotheks-Komponente "ABAAB", dabei wird die Schaltfläche "NAME:PORT=SIG" in "Z2.2" aktiviert;

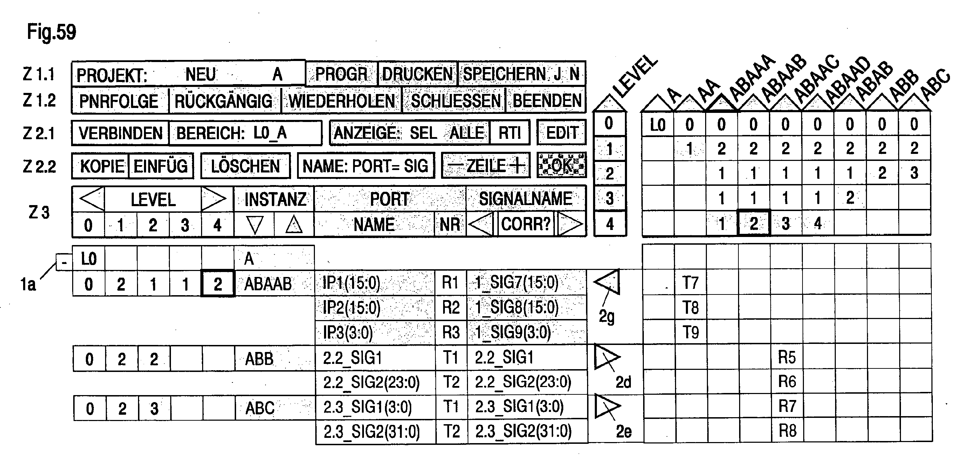

- Fig.59: den Start der Anpassung der Portnamen an die Signalnamen für dieinstanziierte Bibliotheks-Komponente "ABAAB" durch Aktivierung der Schaltfläche "CORR" in "Z3", dabei wird hinter "CORR" ein "?" gesetzt, das über die Laufzeit des Anpassungs-Prozesses angezeigt wird;

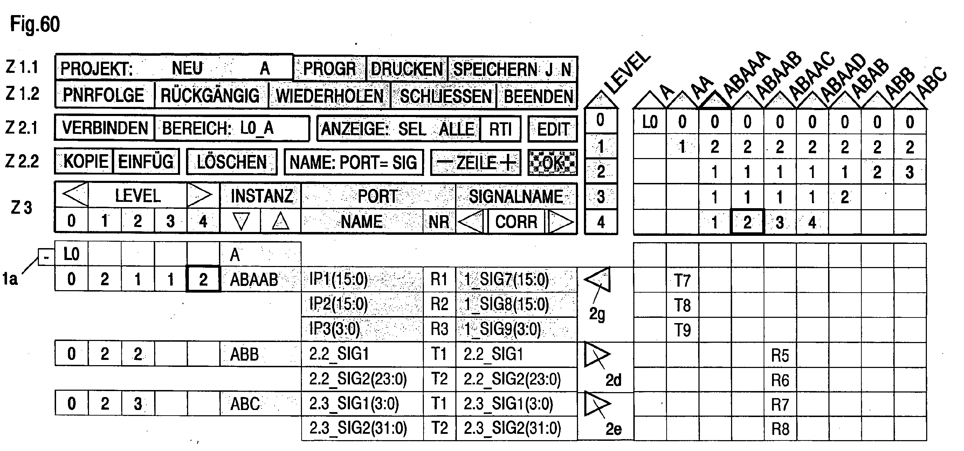

- Fig.60: den Abschluß des Anpassungs-Prozesses von Fig.59 durch automatische Wegnahme des "?" hinter "CORR";

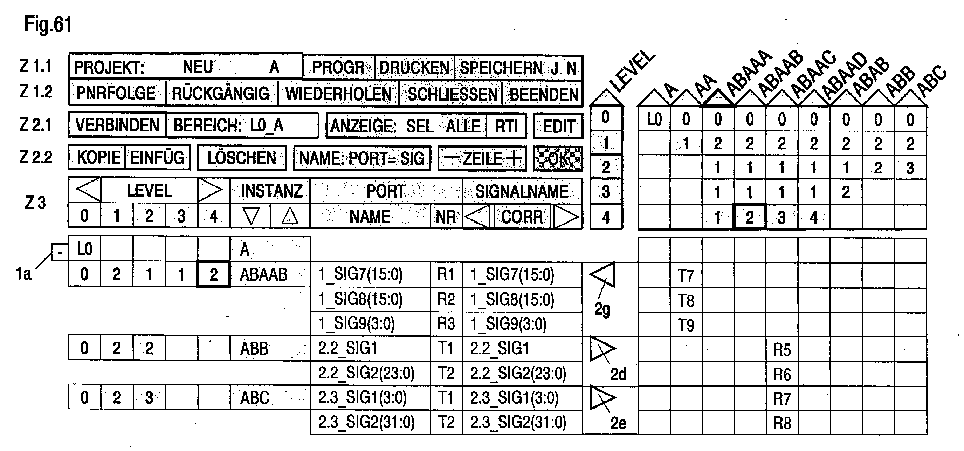

- Fig.61: nach Bestätigung des Anpassungs-Prozesses der Portnamen an die Signalnamen für die Bibliotheks-Komponente "ABAAB" werden automatisch die Schaltflächen "CORR" und "NAME:PORT=SIG" deaktiviert;

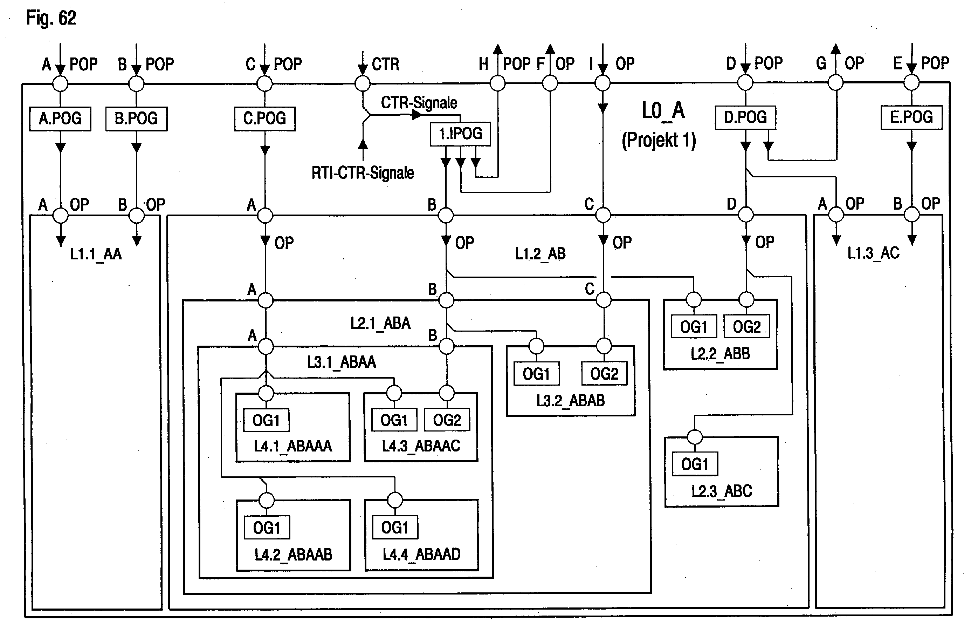

- Fig.62: eine Projekt-Übersicht in Blockstruktur-Darstellung mit Schnittstellen und angeschlossenen "POGn" und einer "IPOG", den Toplevel "A" und seine nstanzen und Unterinstanzen;

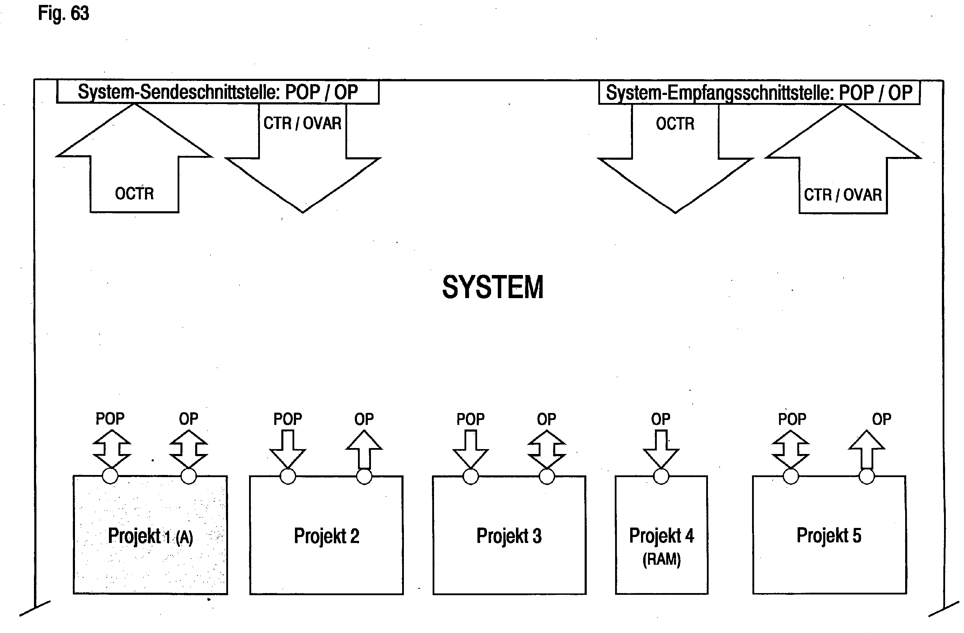

- Fig.63: eine System-Übersicht in Blockstruktur-Darstellung mit Schnittstellen und angeschlossenen Projekten 1-5;

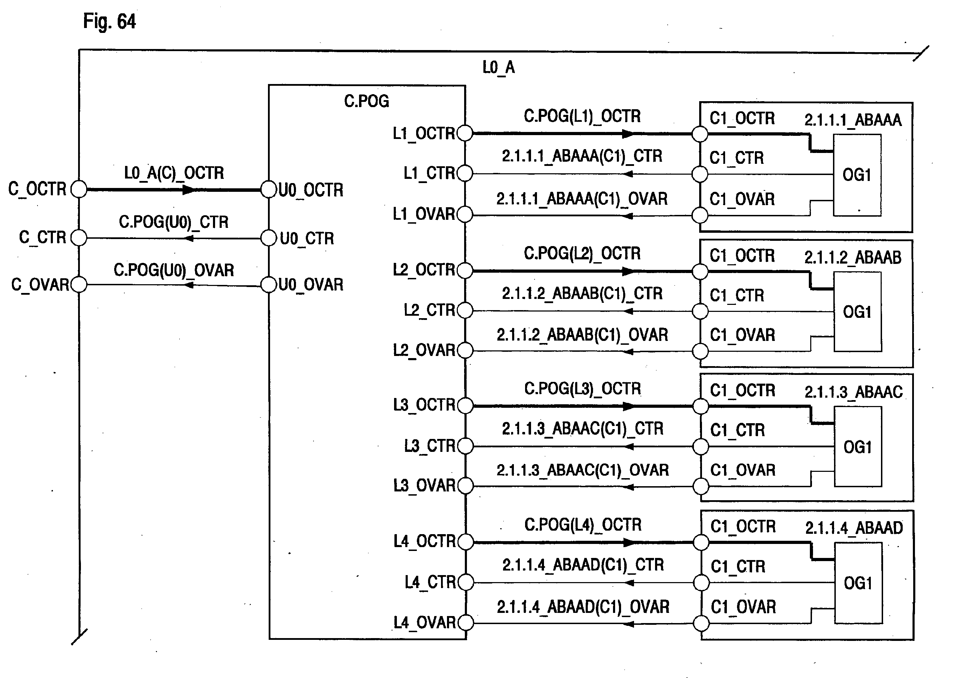

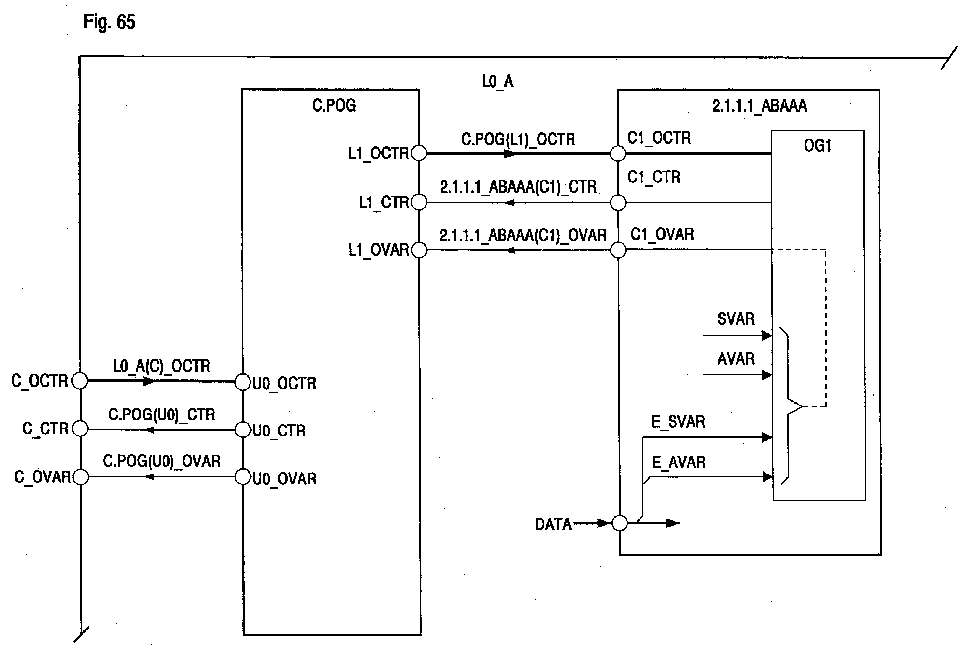

- Fig.64-66: in Blockstruktur-Darstellung die Controlsignal-Strukturen für die "C.POG" in Verbindung mit ihrer Projekt-Schnittstelle und ihren angeschlossenen "RTIn" und in Fig.65 zusätzlich die interne und externe Einkopplung der Signale "SVAR" und "AVAR" für die RTI "ABAAA" zur Bildung von "OVAR";

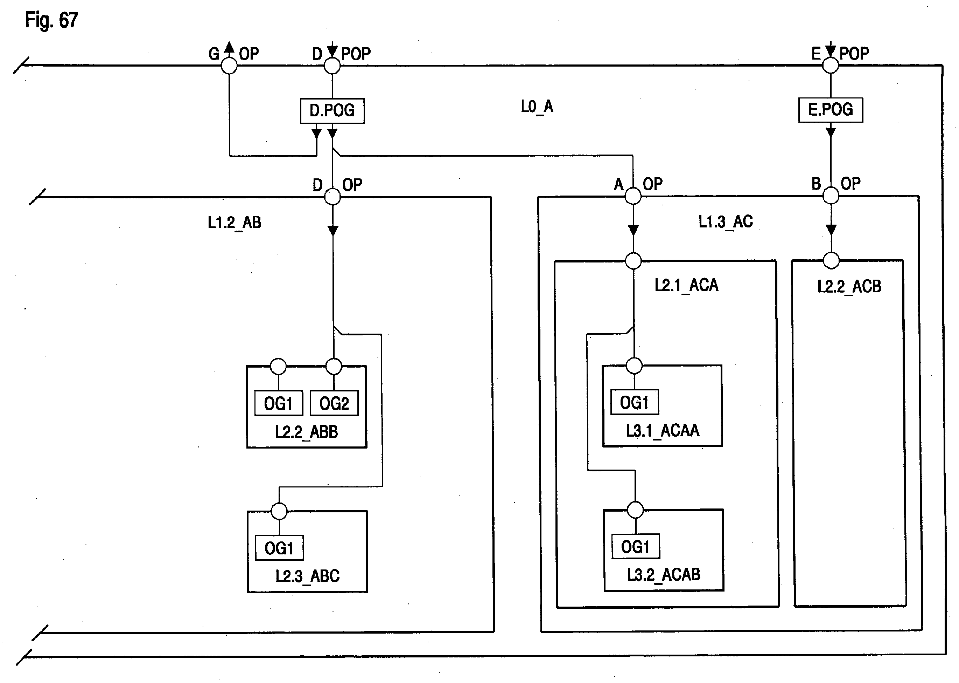

- Fig.67-71: in Blockstruktur-Darstellung die Controlsignal-Strukturen für die "D.POG" in Verbindung mit ihrer Projekt-Schnittstelle und ihren angeschlossenen "RTIn" und die Aufspaltung der "D.POG" in zwei RTI-Bereiche über "D.1.POG" und "D.2.POG";

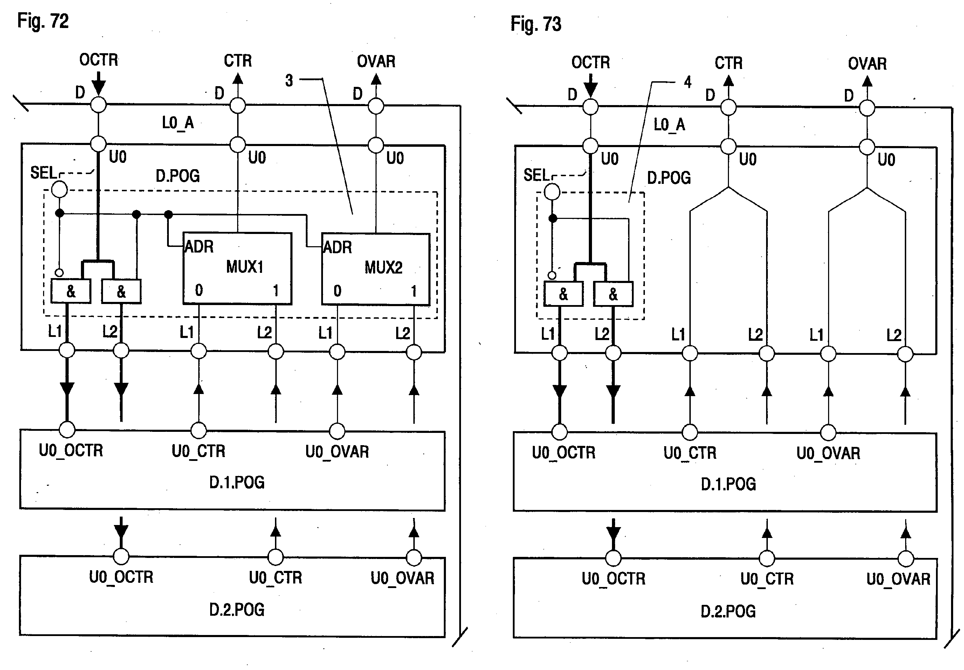

- Fig.72-73: das Multiplexing der "D.POG" zwischen Projekt-Schnittstelle und "D.1.POG" und "D.2.POG";

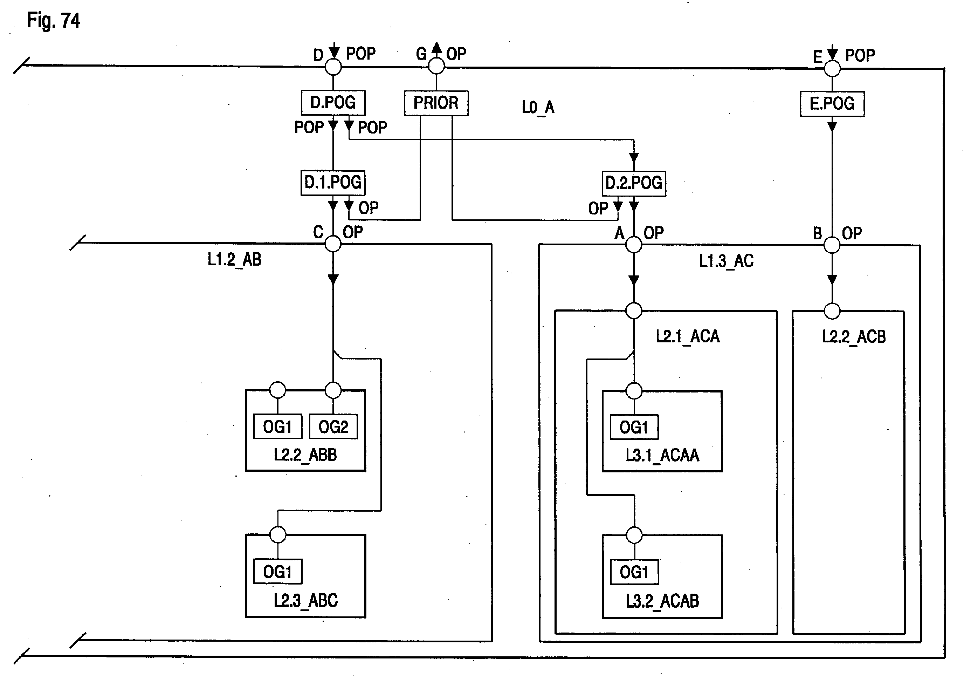

- Fig.74-75: die Priorisierung von "D.1.POG" und "D.2.POG" zur Operations-Projekt-Schnittstelle "G";

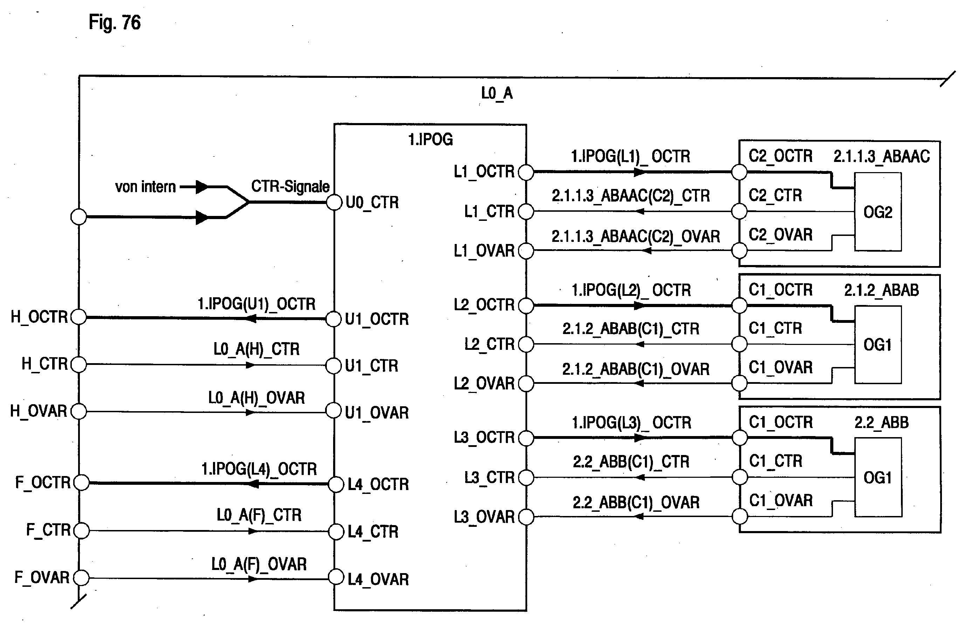

- Fig.76-77: in Blockstruktur-Darstellung die Controlsignal-Strukturen für die "1.IPOG" in Verbindung mit ihrer Projekt-Schnittstelle und ihren angeschlossenen "RTIn" und die Aufspaltung der "1.IPOG" in zwei RTI-Bereiche über "1.1.IPOG" und "1.2.IPOG";

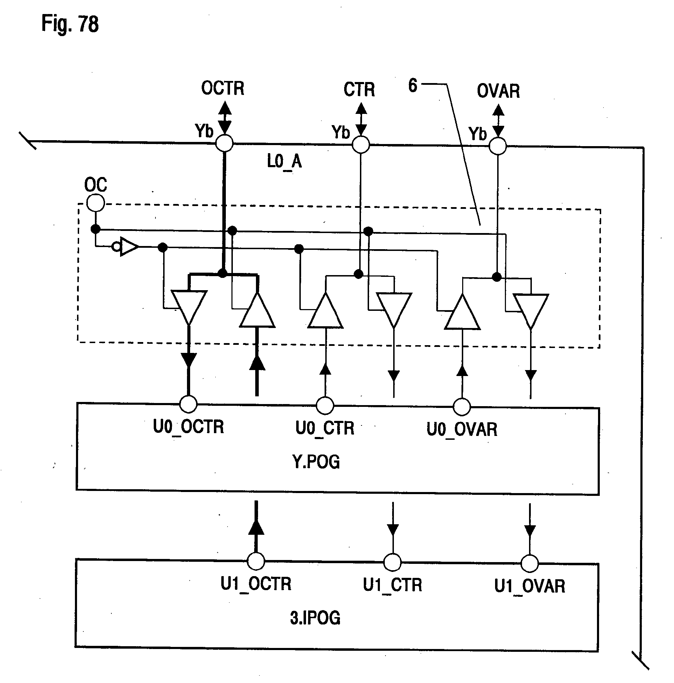

- Fig.78: ein bidirektionales Treiberfeld zwischen Projekt-Schnittstelle und "POGn" oder/und "IPOGn";

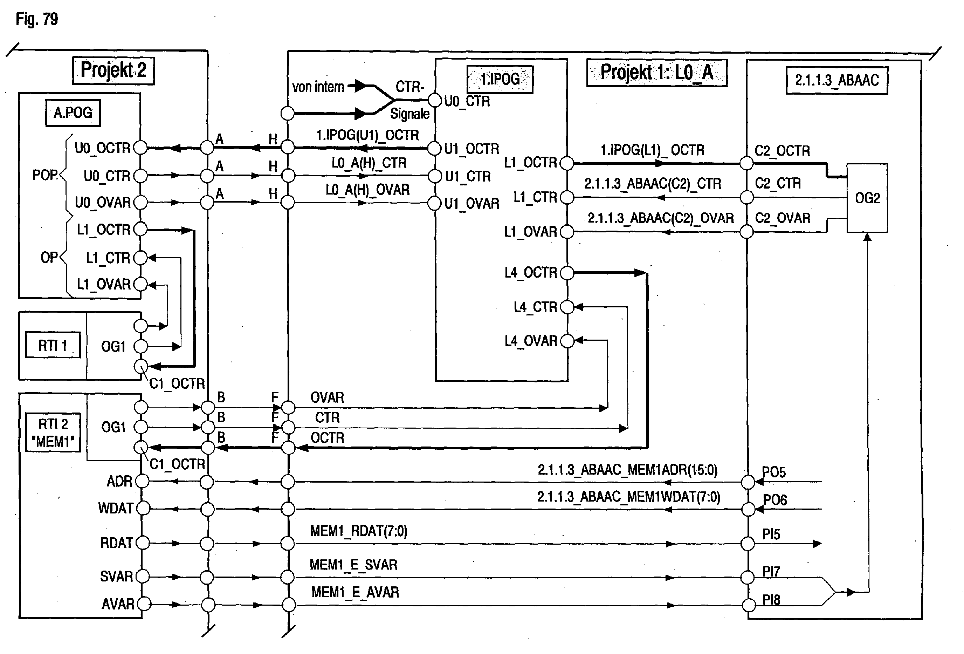

- Fig.79: eine Blockstruktur-Darstellung der Controlsignal-Strukturen für Teilbereiche in einem Projekt1 und Projekt2 und zwischen den Schnittstellen von Projekt1 und Projekt2;

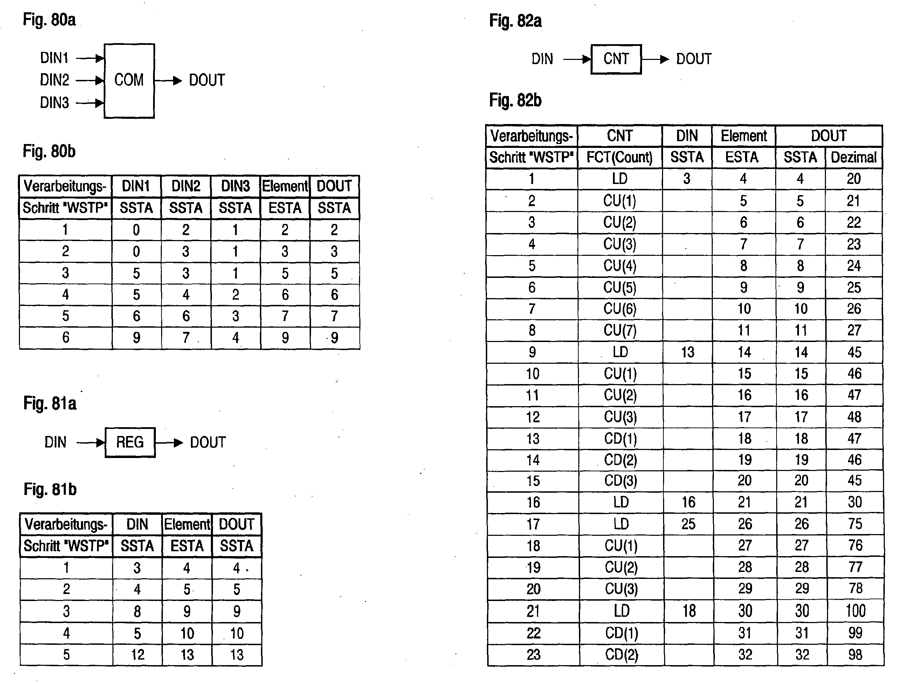

- Fig.80a-86b: die Funktion des Input-/Output-Signalstates (SSTA) und des Elementestates (ESTA) für die Elemente Kombinatorik "COM", Register "REG", Counter "CNT", Shiftregister "SHR", Inputport "PI", Outputport "PO" und Random Access Memory "RAM";

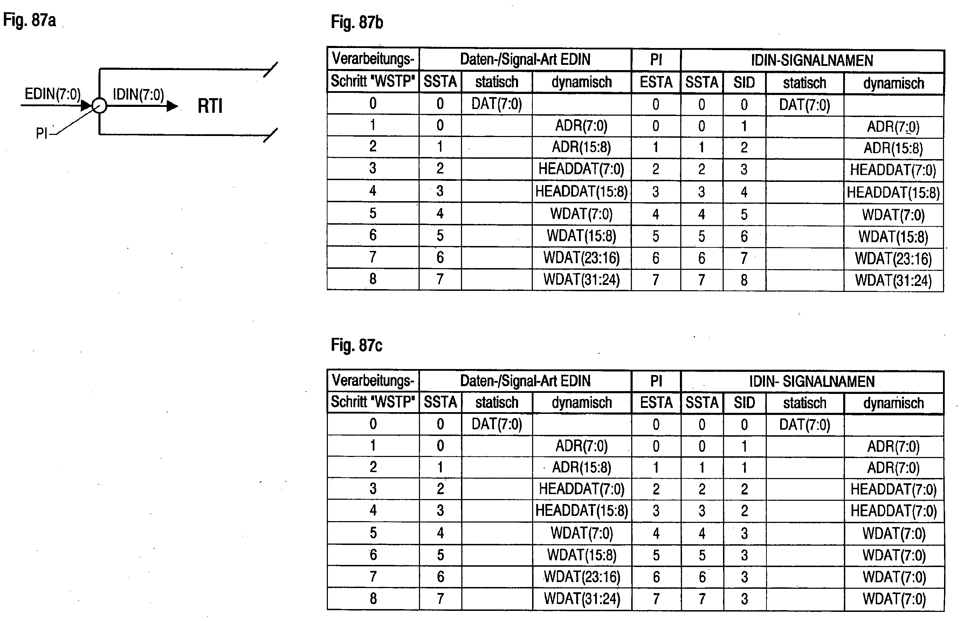

- Fig.87a-94b: die Funktion des Input-/Output-Signalstates (SSTA) und des Elementestates (ESTA) sowie die Zuweisung von statischen und dynamischen Signalnamen für die Elemente Input-/Output-Port "PI/PO", Register "REG", Counter "CNT" und Shiftregister "SHR";

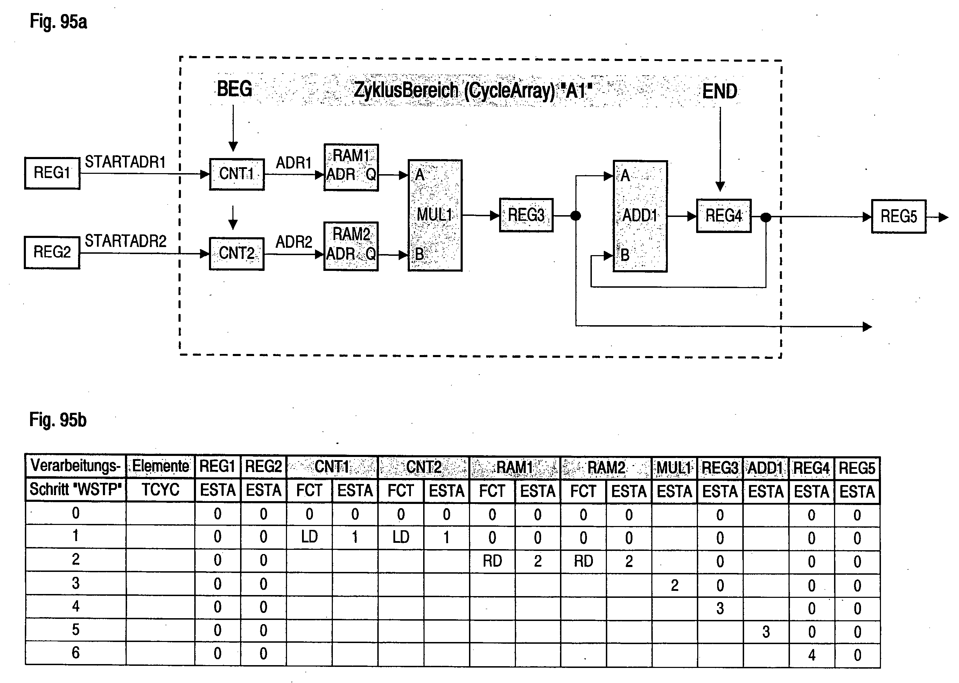

- Fig.95a-95i: die funktionellen Eigenschaften für eine Gruppe von Elementen in einem sogenannten RTI-Zyklus-Bereich "A1" (Cycle-Array) mit zyklisch wiederholenden Transfers;

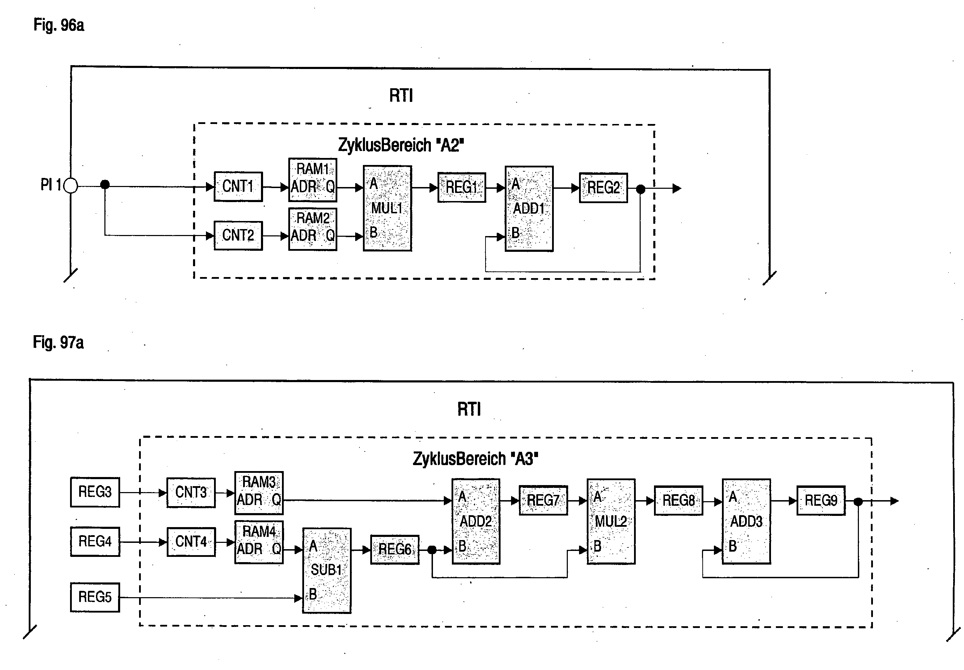

- Fig.96a-97h: für zwei RTI-Zyklus-Bereiche "A2" und "A3" die Zuordnung von Datenverarbeitungs-Steps "DVSTPs", Takt-Sequenzen "CLK1, CLK2, ..." und "ESTAs" für die Inizialisierung und zyklische Transfers der Zyklus-Bereiche "A2" und "A3";

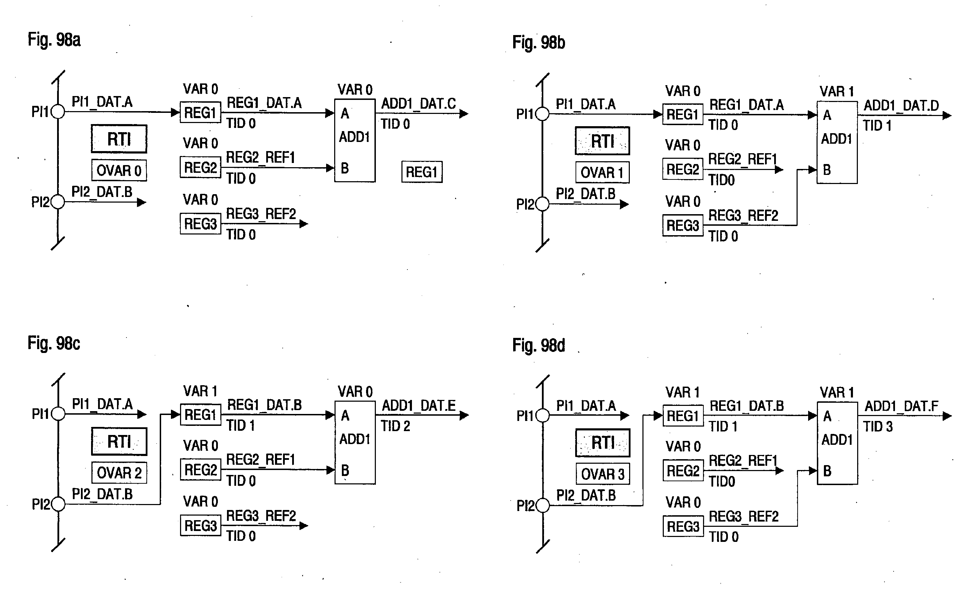

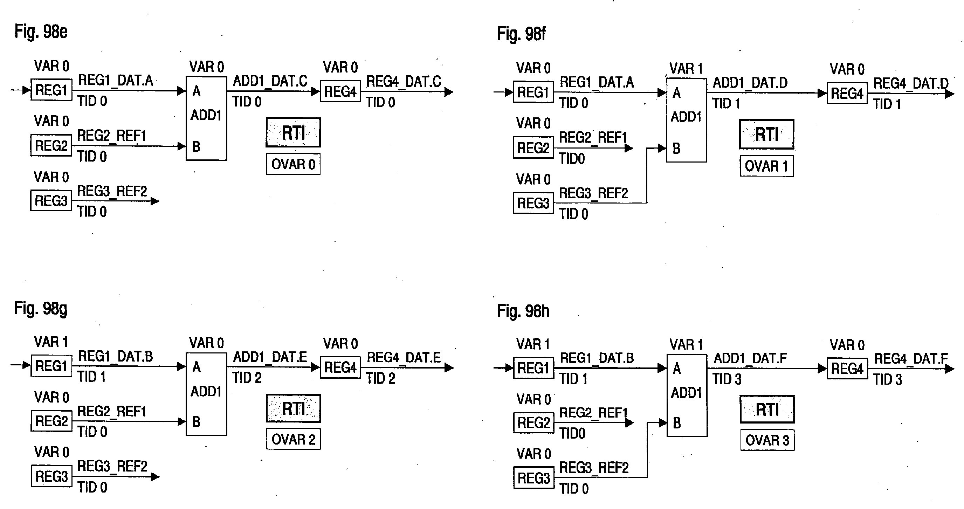

- Fig.98a-98h: für eine RTI-Elemente-Anordnung den Zusammenhang von RTI-Basisoperations-Varianten-Nummer "OVAR0, OVAR1, OVAR2, ..." mit Elemente-Variations-Nummer "VAR0, VAR1, VAR2, ..." und Transferidentifier-Nummer "TID0, TID1, TID2, ...";

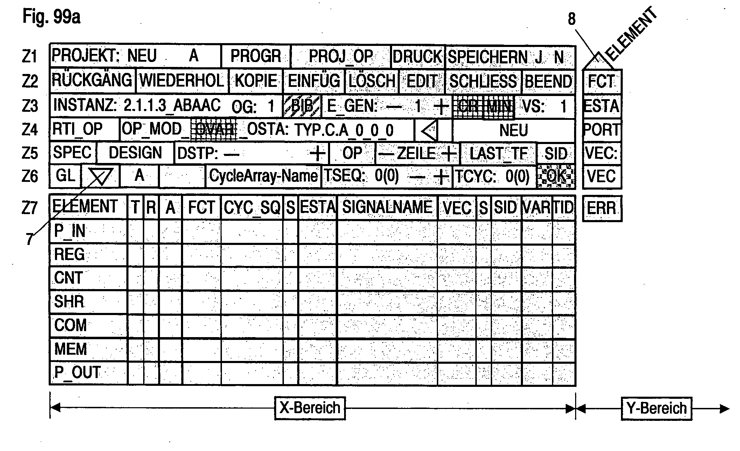

- Fig.99a-99s: den RTI-Operations-Bildschirm "RTI-OP-BS" im Gruppenlevel "GL" mit seinen Elemente-Gruppen Inputport "P_IN", Register "REG", Counter "CNT", Shiftregister "SHR", Kombinatorik "COM", Memory "MEM" und Outputport "P_OUT", sowie die Definition und Eintragung der zu spezifizierenden RTI-Basisoperationen/RTI-Basisoperations-Varianten unter Angabe der Referenz-Operation im RTI-Operations-Fenster;

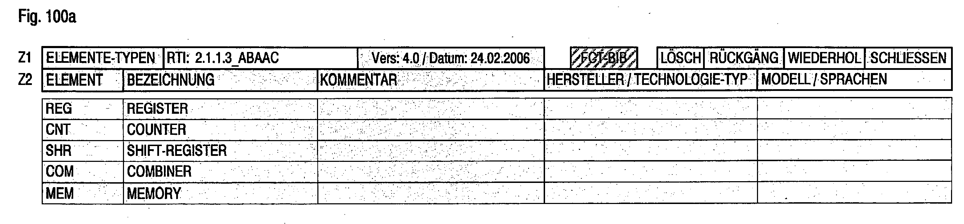

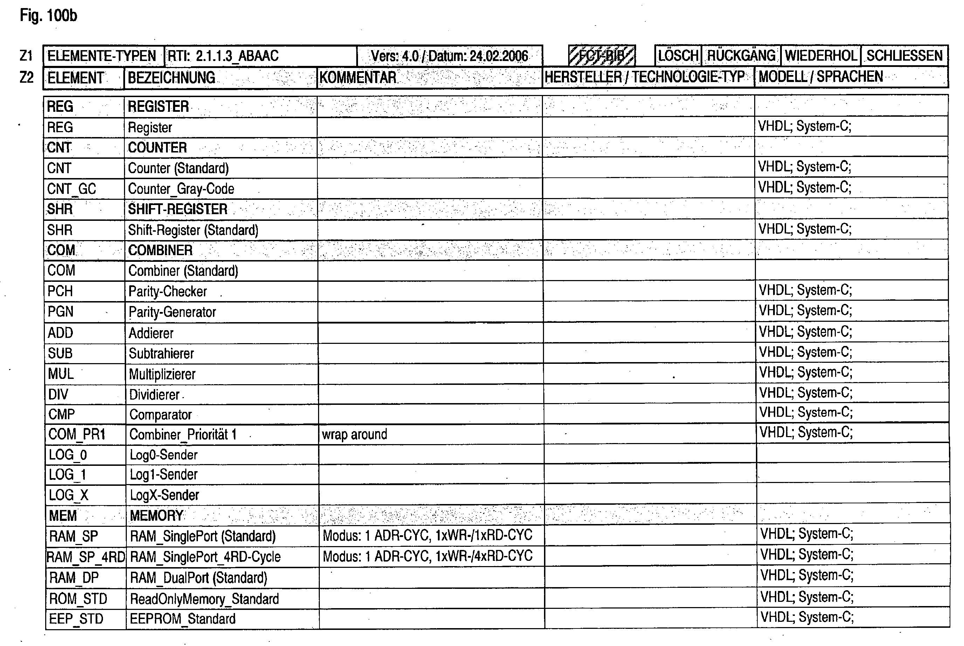

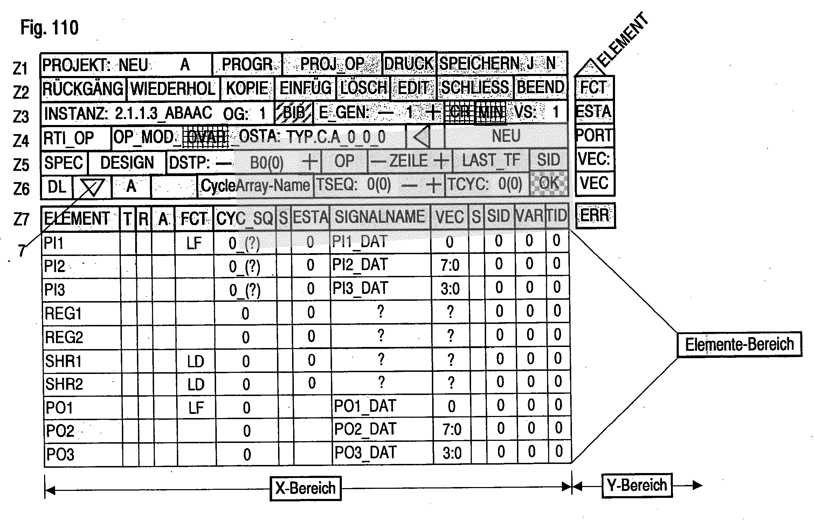

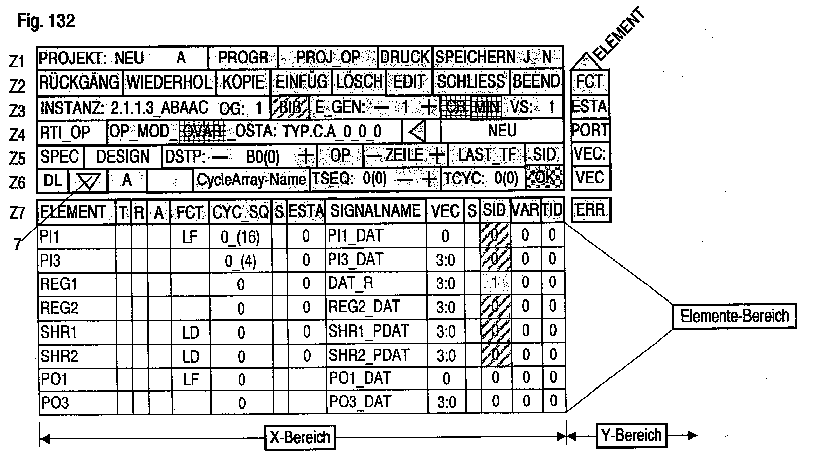

- Fig.100-140: die Elemente-Bereitstellung für eine RTI-Operations-Spezifizierung im Gruppenlevel "GL" und Designlevel "DL", sowie die Konvention der Eintragung und Anzeige im "Elemente-Bereich" des "DL" für Funktion "FCT", Zyklus_Sequenzbereich "CYC_SQ", Signalname, Vector "VEC", Vector-Splitting "S" und Signal-Identifier "SID";

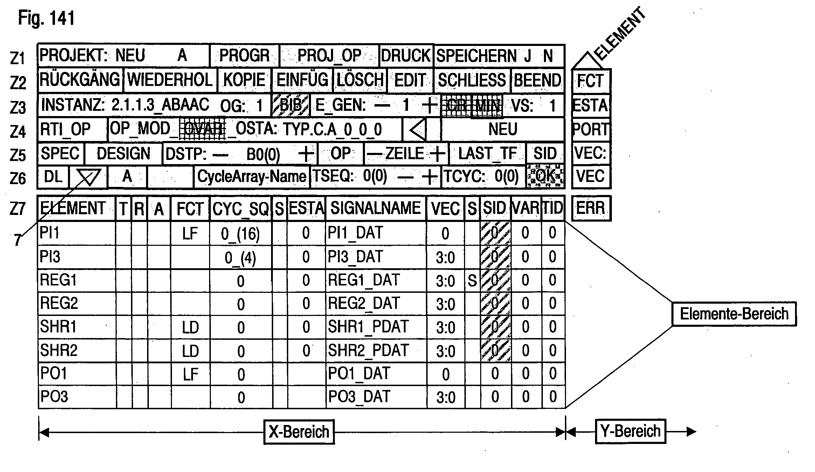

- Fig.141-149: für eine RTI-Operations-Spezifizierung den Eintrag und die Anzeige im "Elemente-Bereich" des Designlevels "DL" für "CYC_SQ" mit Sequenz- Splitting "S";

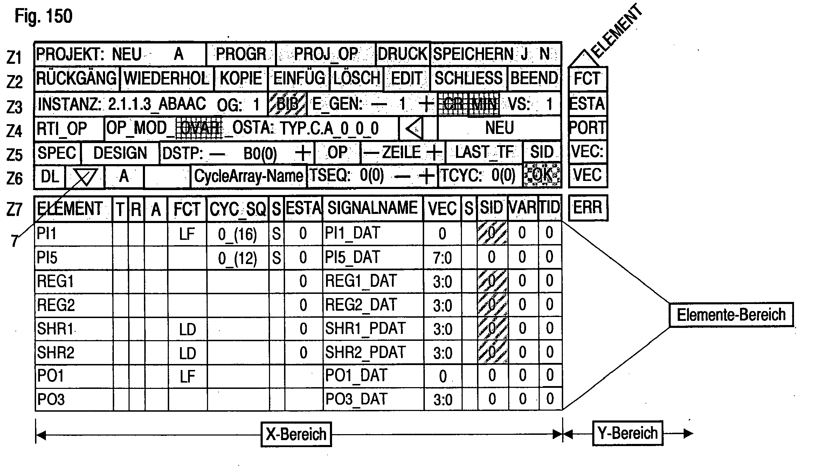

- Fig.150-163: für eine RTI-Operations-Spezifizierung den Eintrag und die Anzeige im "Elemente-Bereich" des Designlevels "DL" für unterschiedliche Zyklen_Sequenzbereiche "CYC"_SQ" mit Sequenz-Splitting "S" in Kombination mit Vector(VEC)-Splitting(S);

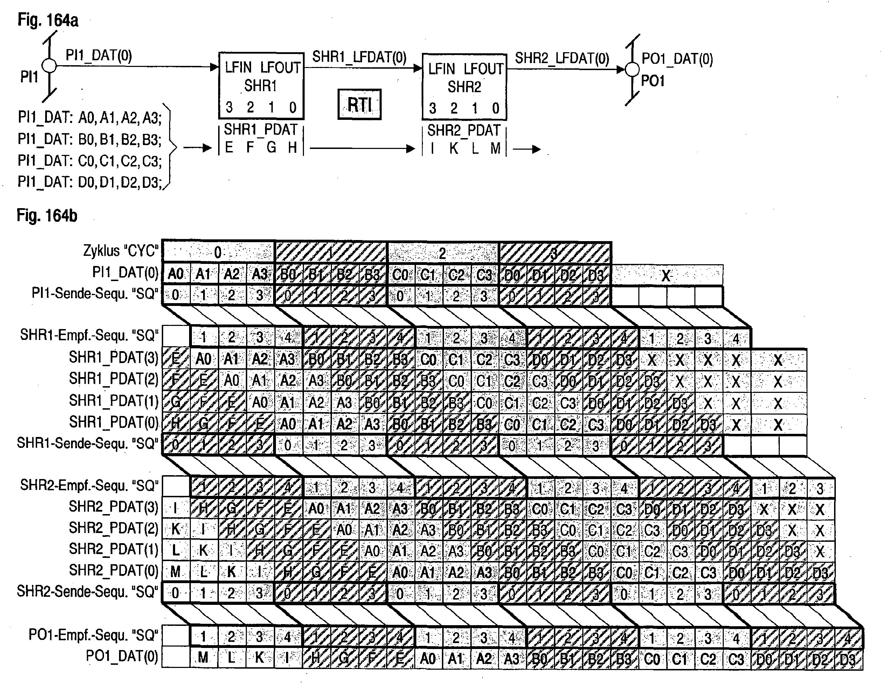

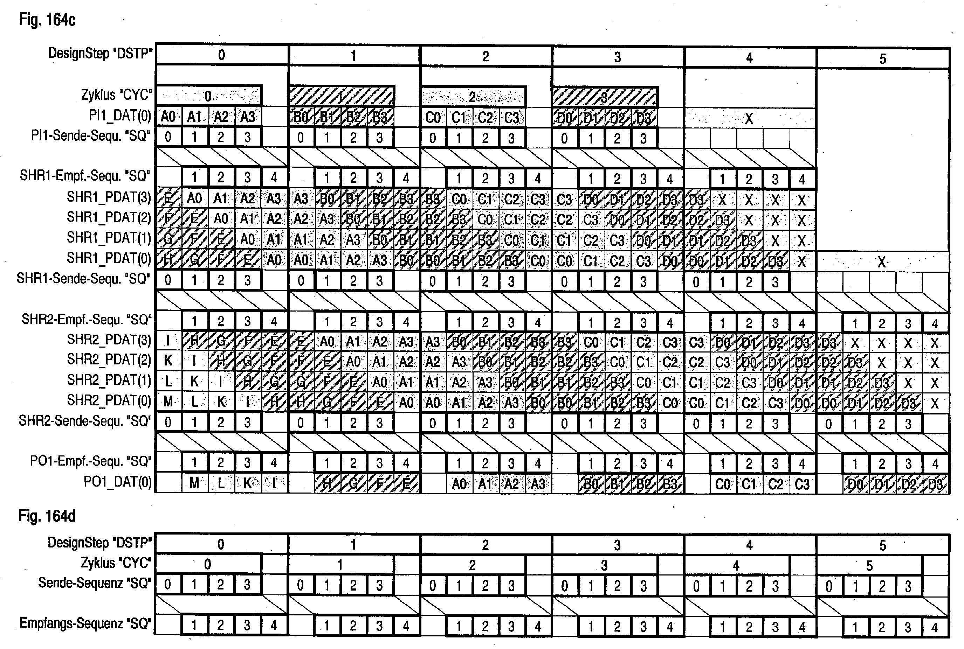

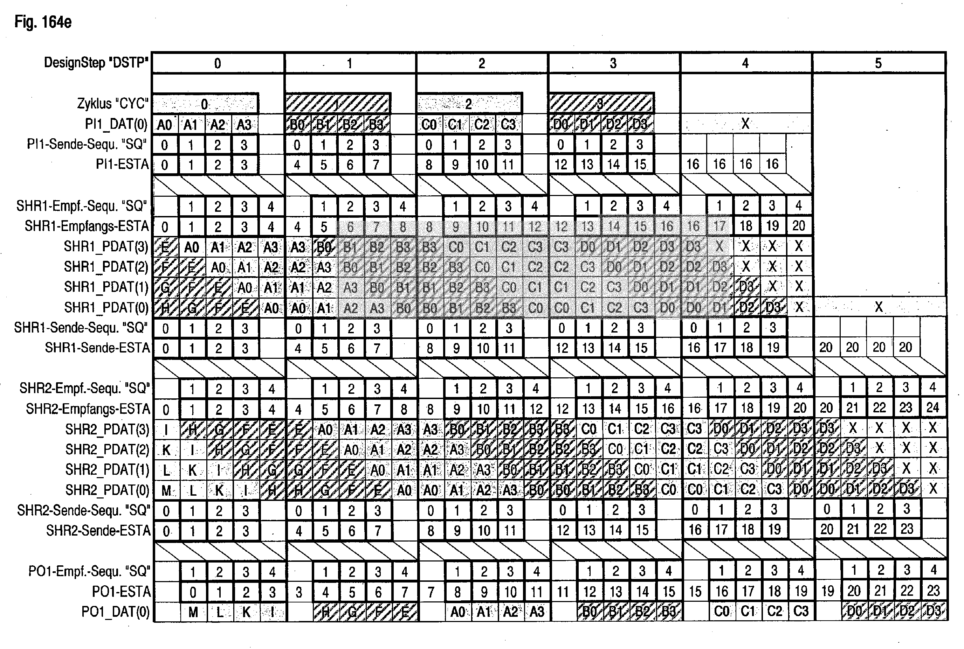

- Fig.164-194: eine RTI-Basisoperations-Spezifizierung für einen RTI-Teilbereich, bestehend aus dem RTI-Inputport "PI1", den Shiftregistern "SHR1", "SHR2" und dem RTI-Outputport "PO1";

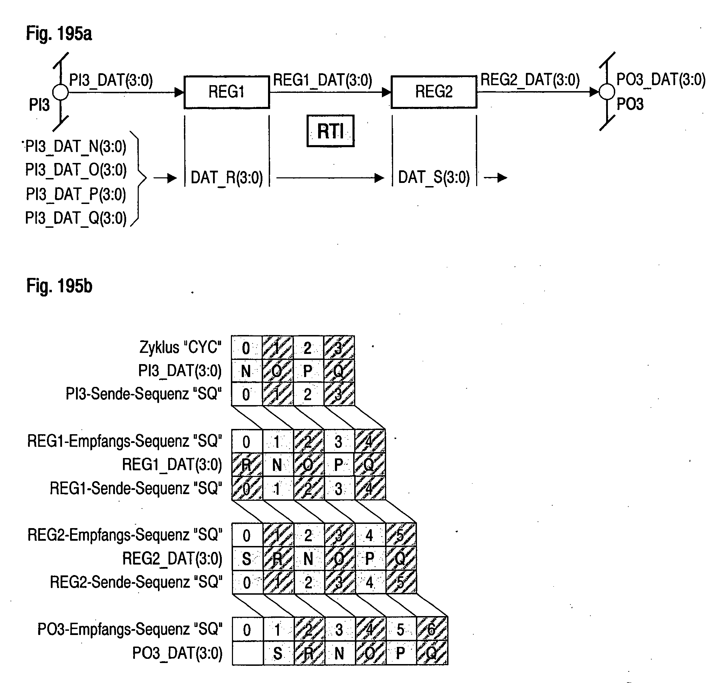

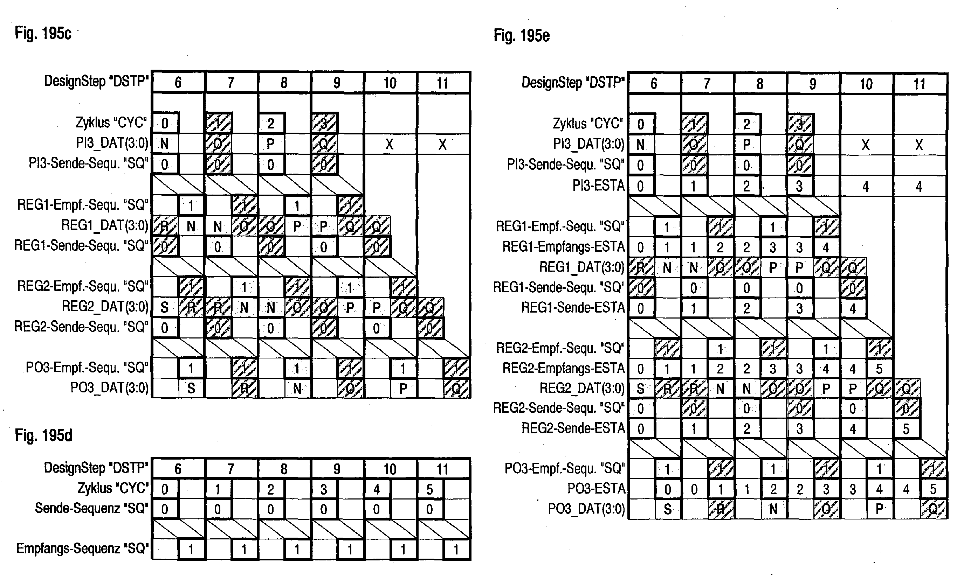

- Fig. 195-215: eine RTI-Basisoperations-Spezifizierung für einen RTI-Teilbereich, bestehend aus dem RTI-Inputport "PI3", den Registern "REG1", "REG2" und dem RTI-Outputport "PO3";

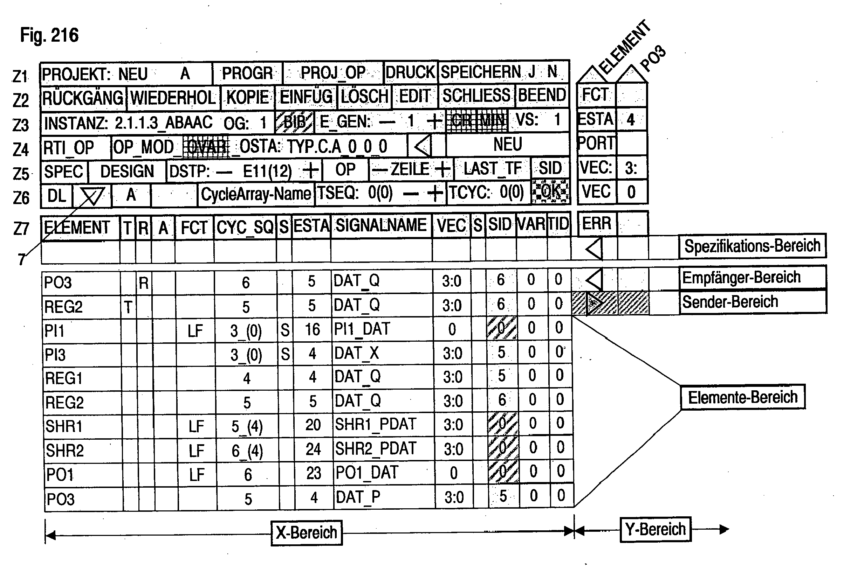

- Fig.216-221: die schrittweise Rückwärts-/Vorwärts-Schaltung der Design-Steps "DSTP" des Anzeige-Modus "SPEC/DESIGN" in "Z5" und die Umschaltung in den Anzeige-Modus "SHOW/DESIGN";

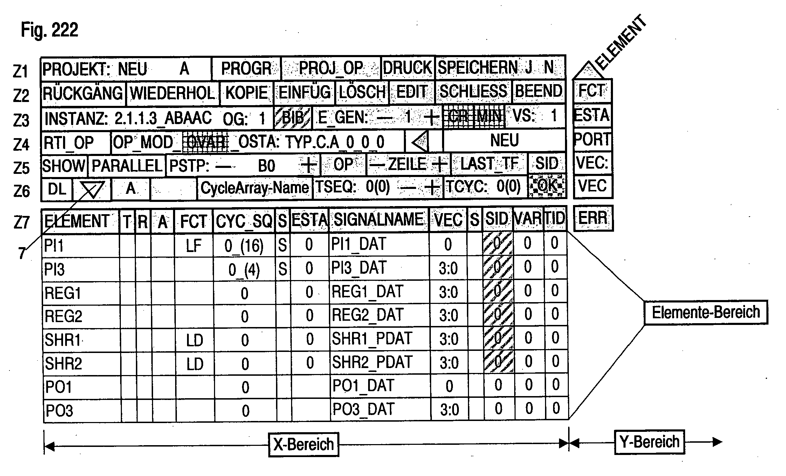

- Fig.222-228: den Anzeige-Modus "SHOW/PARALLEL" in "Z5" mit den Parallel-Steps "PSTP", beginnend mit "PSTP:B0" und den weiteren Parallel-Steps "PSTP:E0", "PSTP:B1", "PSTP:E1", "PSTP:B2", "PSTP:E2" und "PSTP:B3";

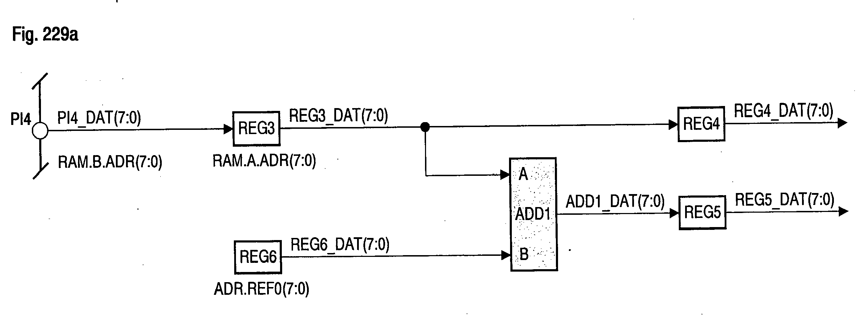

- Fig.229a-229p: eine RTI-Basisoperations-Spezifizierung für einen RTI-Teilbereich, bestehend aus dem RTI-Inputport "PI4", den Registern "REG3" bis "REG6" und dem Addierer "ADD1";

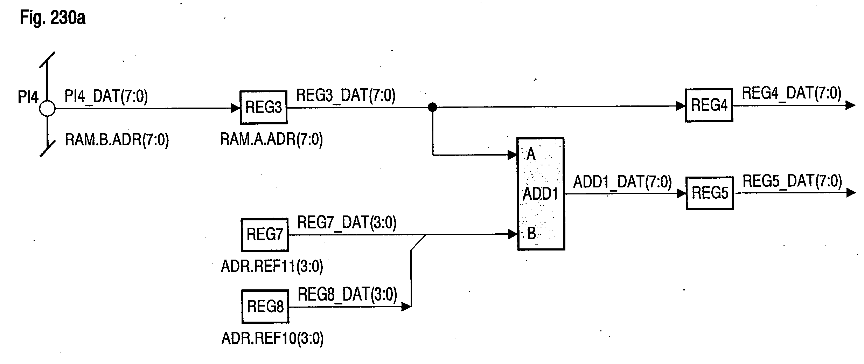

- Fig.230a-230e: die RTI-Basisoperations-Spezifizierung von Fig.229a-229p, mit der Ausnahme, daß am ADD1-Dateninput "B" an Stelle des 8-Bit-Registers "REG6" zwei 4-Bit-Register "REG7" und "REG8" plaziert sind;

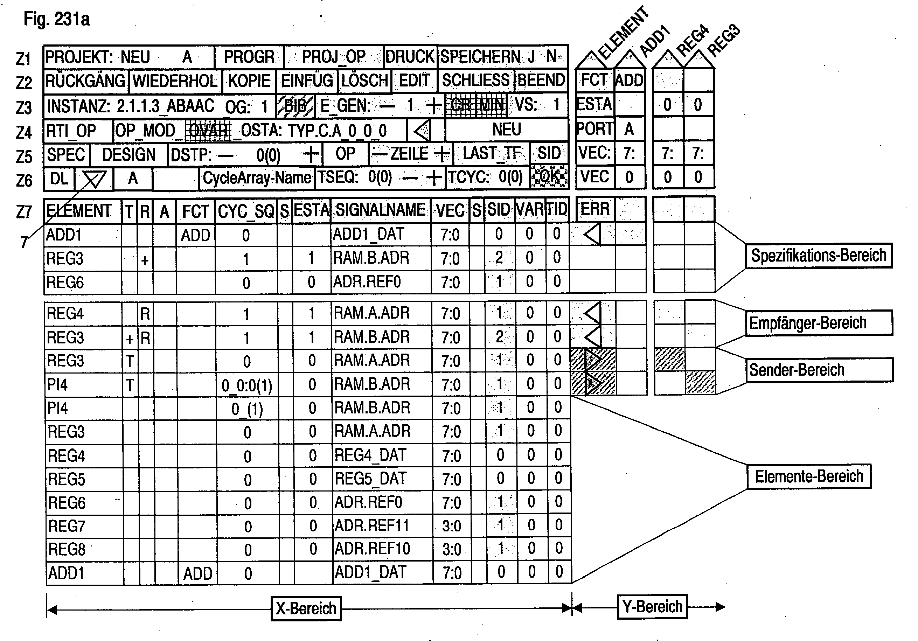

- Fig.231a-231i: die RTI-Basisoperations-Spezifizierung von Fig.229a-229p oder Fig.230a-230e, mit der Ausnahme, daß für den Dateninput des Addierers ADD1 im Y-Bereich nur noch eine Spalte erforderlich ist;

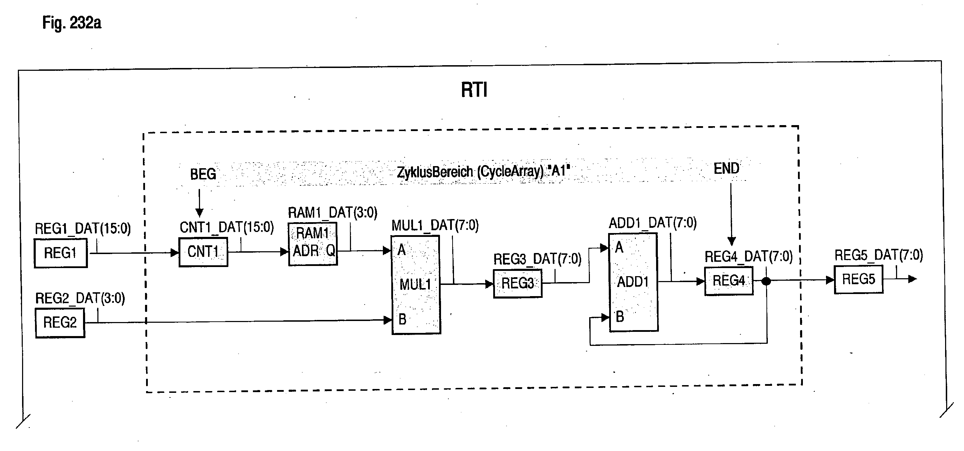

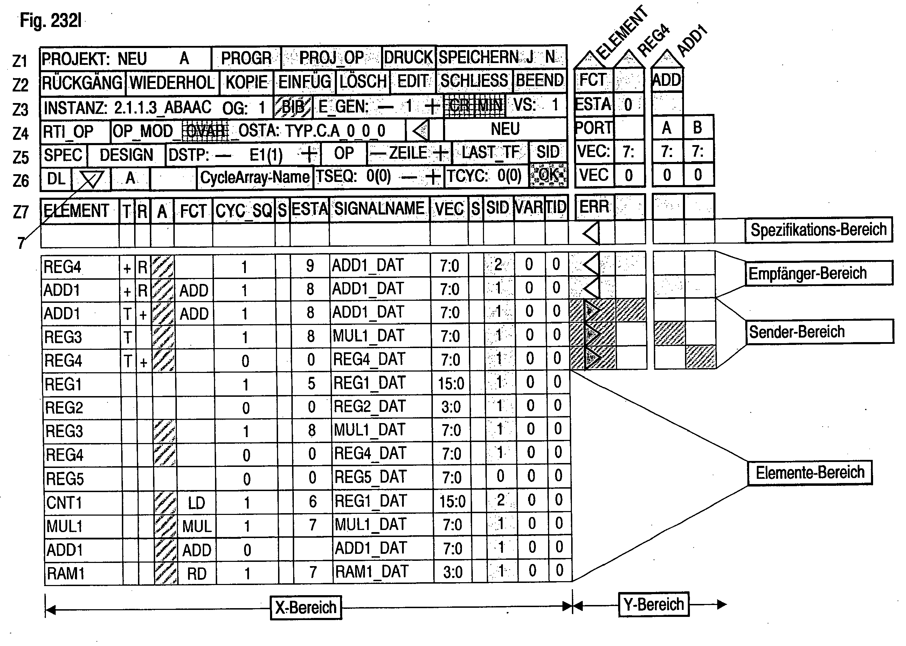

- Fig.232a-232t: die Inizialisierung eines Zyklus-Bereichs (Cycle Array) "A1" und die Einträge in eine "CYCLE-ARRAY-ÜBERSICHT" mit Zyklus-Bereichs-Name "CYCLE-ARRAY-NAME" und Kommentar "COMMENT";

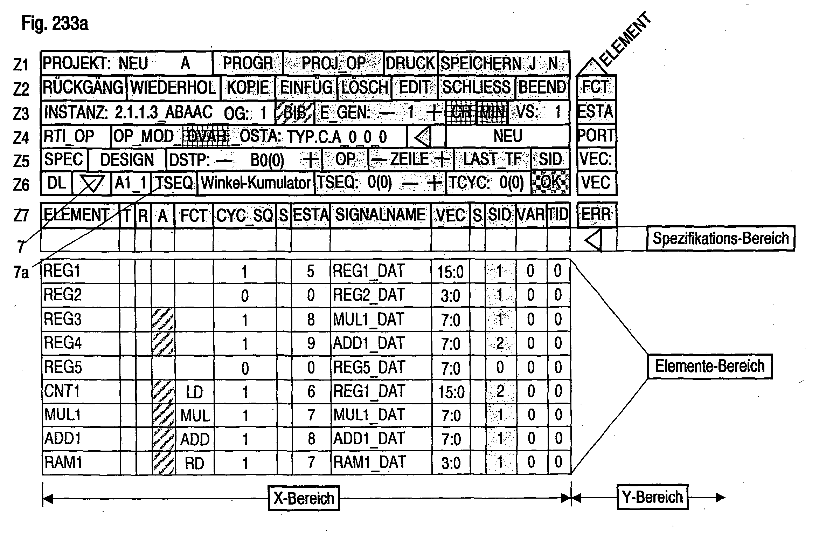

- Fig. 233a-233u: nach Inizialisierung des Zyklus-Bereichs (Cycle Array) "A1" (Fig.232a- 232t) die Spezifizierung des ersten A1-Transfer-Zyklus;

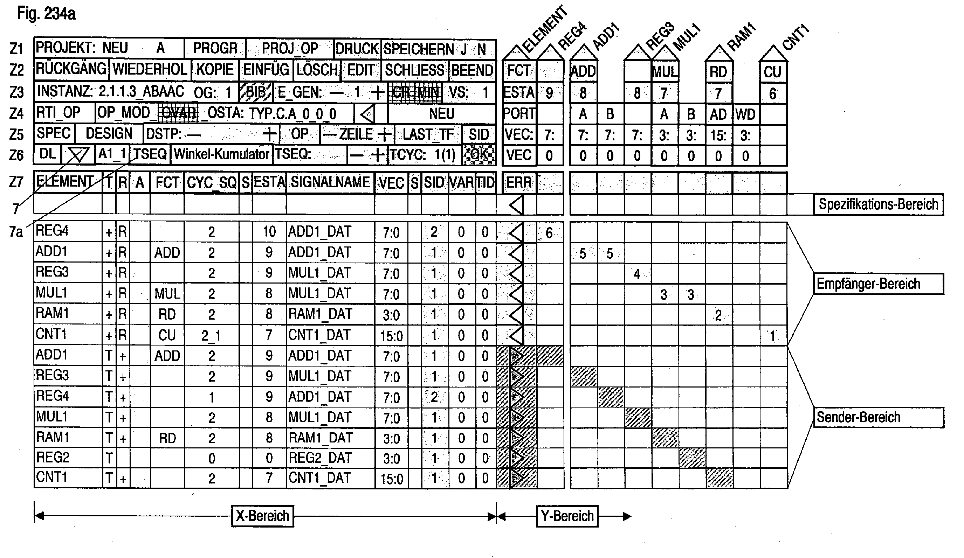

- Fig.234a: die Darstellung des ersten, kompletten A1-Transfer-Zyklus im Empfänger-/Sender-Bereich;

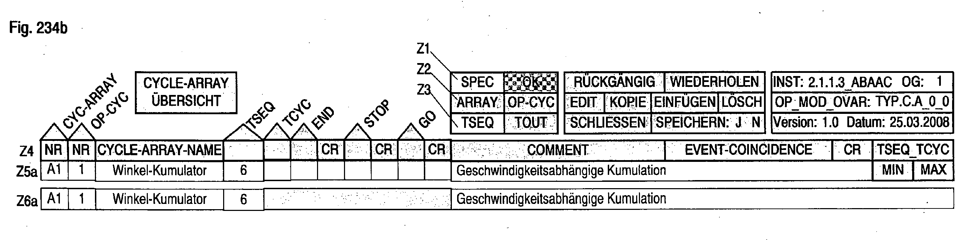

- Fig.234b-234n: für den Zyklus-Bereich "A1" die Zuordnung fester TSEQ-/TCYC-Werte für Zyklus-Ende "END" und -Stop1 "ST1", sowie einen festen TSEQ-Wert für die Fortsetzung des Zyklus "GO1";

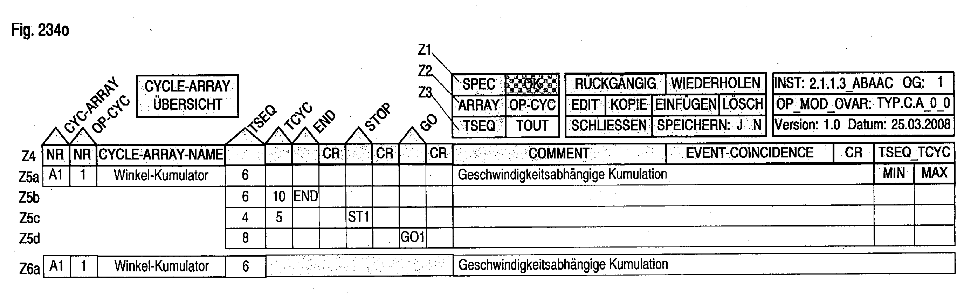

- Fig.234o-234y: für den Zyklus-Bereich "A1" das schrittweise Einstellen der TSEQ-/TCYC-Werte und die zu jedem Schritt zugehörigen Zyklus-Elemente im Spezifikations-Bereich, sowie das Zyklus-Element "R4" als Sender für den Daten-Transfer ausserhalb des Zyklus-Bereichs "A1" zum Register "REG5";

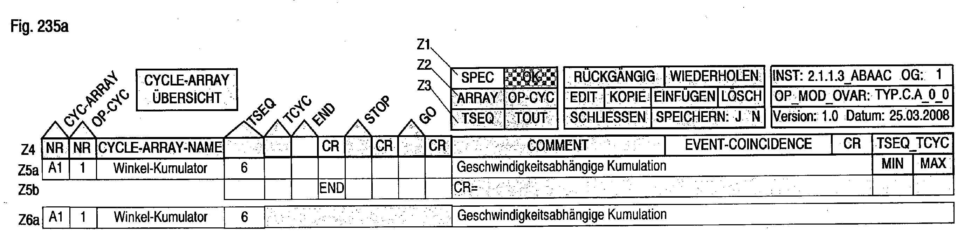

- Fig.235a-235k: für den Zyklus-Bereich "A1" die Spezifizierung von Zyklus-END/-ST1/-GO1, auf der Basis von Kriterien und zusätzlich die Zuordnung von minimalen und maximalen absoluten Werten;

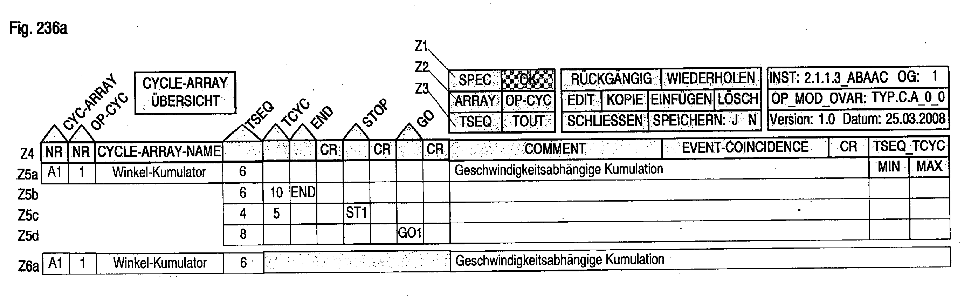

- Fig.236a-236k: die Erweiterung der "CYCLE-ARRAY-ÜBERSICHT" mit Zyklus-Bereich "A1" und Operations-Zyklus "OP-CYC=1" um "OP-CYC=2" und zusätzlich um einen weiteren Zyklus-Bereich "A2", sowie nach Spezifizierung der Zyklen des A1-Zyklus-Bereichs den Wechsel von "CYCLE-ARRAY-ÜBERSICHT" zum "RTI-OP-BS" mit der Anzeige der minimalen und maximalen absoluten Werte für das von Kriterien abhängige Zyklus-Ende;

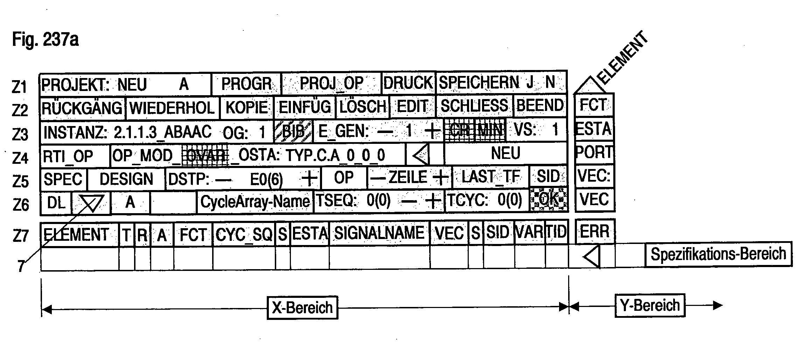

- Fig.237a-237d: die Durchführung von Änderungen und/oder Ergänzungen an spezifizierten RTI-Operationen und die Spezifizierung von RTI-Basisoperations-Varianten;

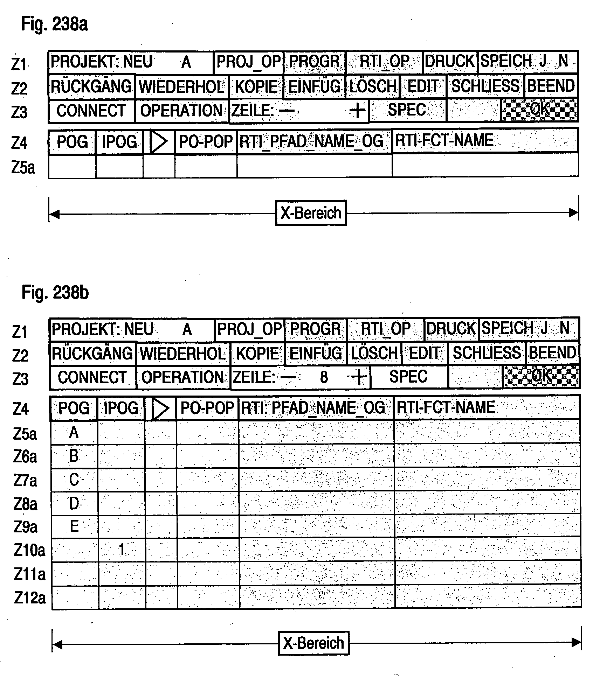

- Fig.238a-238k: den Projekt-Operations-Bildschirm "PROJ-OP-BS" für die Zuweisung der RTI-Operationsgruppen "RTI-OGn" zu den Intern-Primär-Operationsgruppen "IPOGn" oder Primär-Operationsgruppen "POGn" oder den "IPOGn" zu Projekt-Schnittstellen-Ports zur Vorbereitung für eine Spezifizierung von Intern-Primär-Operationen "IPOPn" oder Primär-Operationen "POPn";

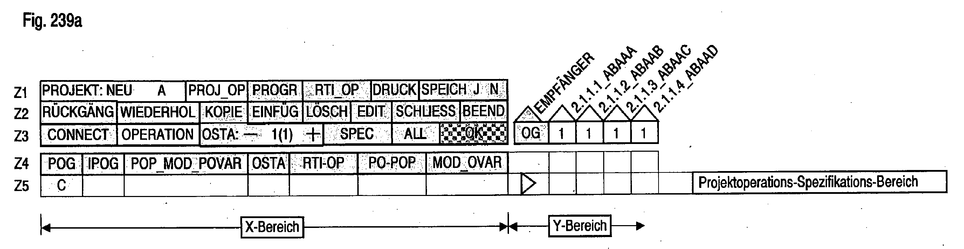

- Fig.239a-239z: den Projekt-Operations-Bildschirm "PROJ-OP-BS" für die Zuweisung von Operationen "OPn" von Intern-Primär-Operationsgruppen "IPOGn" oder Primär-Operationsgruppen "POGn" zu RTI-Operationsgruppen "RTI-OGn" oder von Primär-Operationen "POPn" von "IPOGn" zu Projekt-Schnittstellen-Ports, für eine Spezifizierung von Projekt-Operationen;

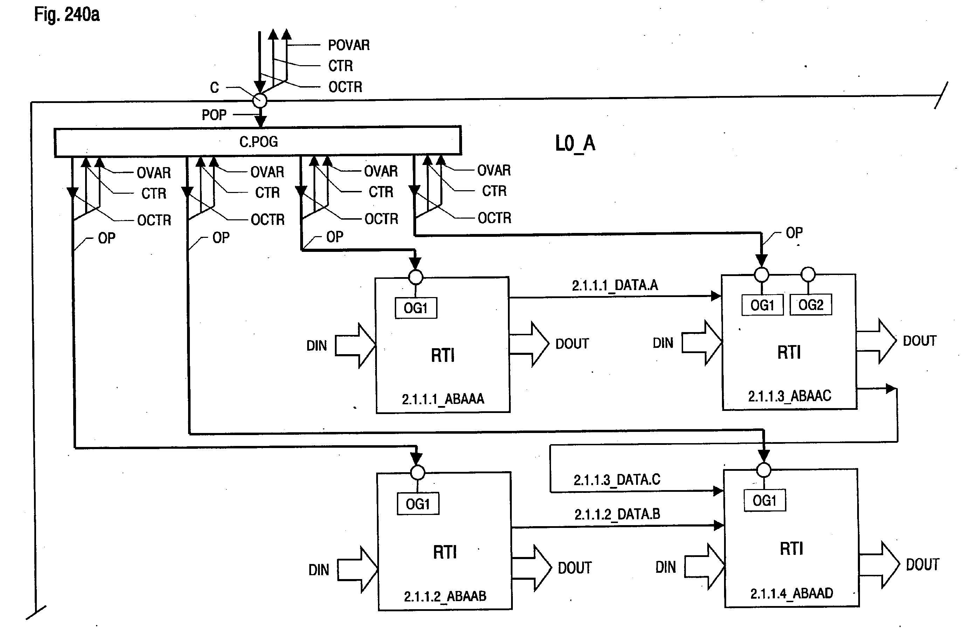

- Fig.240a: den Primär-Operations-Anforderungsweg vom Projekt-Inputport "C" zur Primär-Operationsgruppe "C.POG" und den Operations-Anforderungsweg von der "C.POG" zu den "RTIn", "ABAAA", "ABAAB", "ABAAC" und "ABAAD";

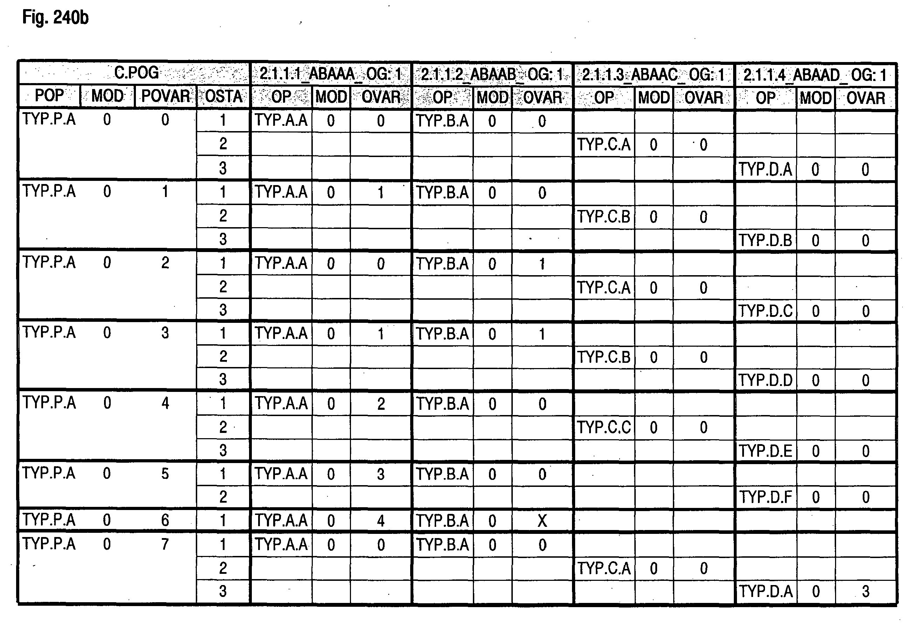

- Fig.240b: Primär-Operations-Varianten "POVAR" von "C.POG" aufgrund von Basisoperations-Varianten in den "RTIn", "ABAAA", "ABAAB", "ABAAC" und "ABAAD";

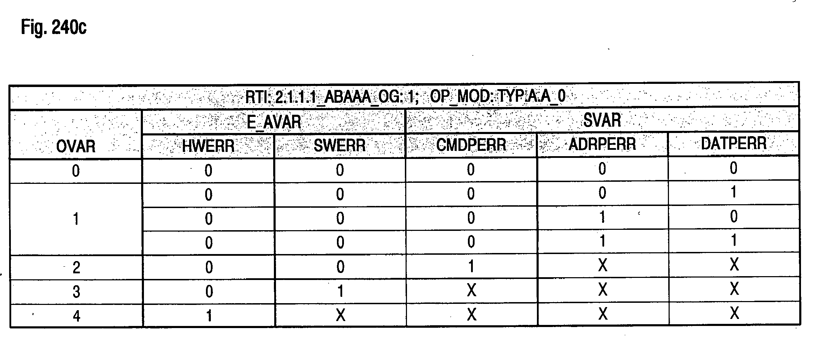

- Fig.240c: die Abhängigkeit der Basisoperations-Varianten "OVAR" der RTI "ABAAA" von den Koinzidenzen der Signale Externe-Asynchron-Variation "E_AVAR" und Intern-Synchron-Variation "SVAR";

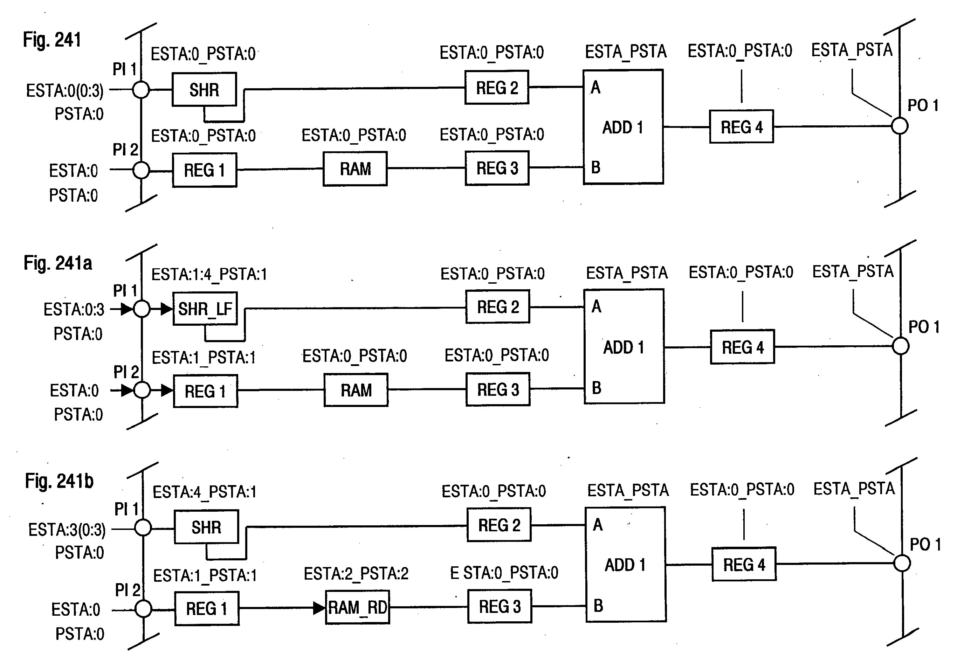

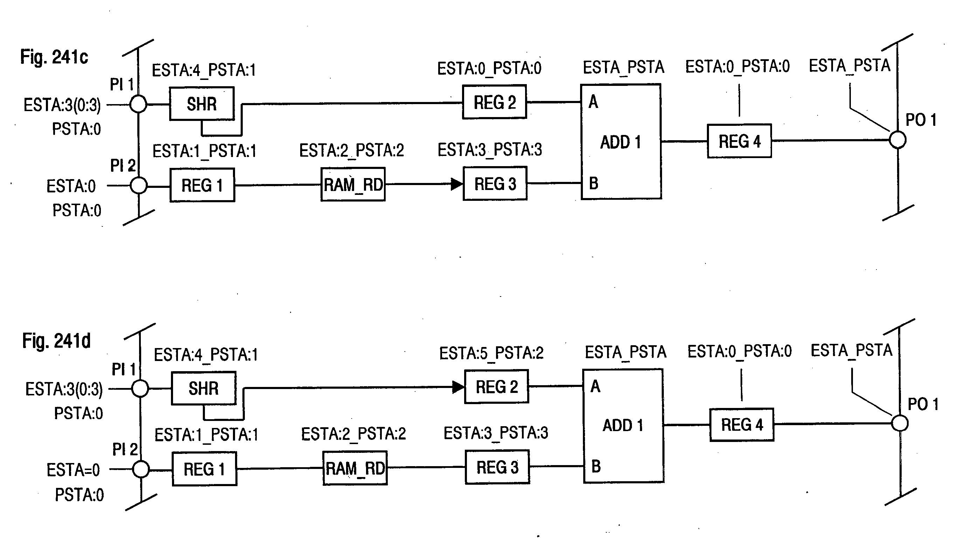

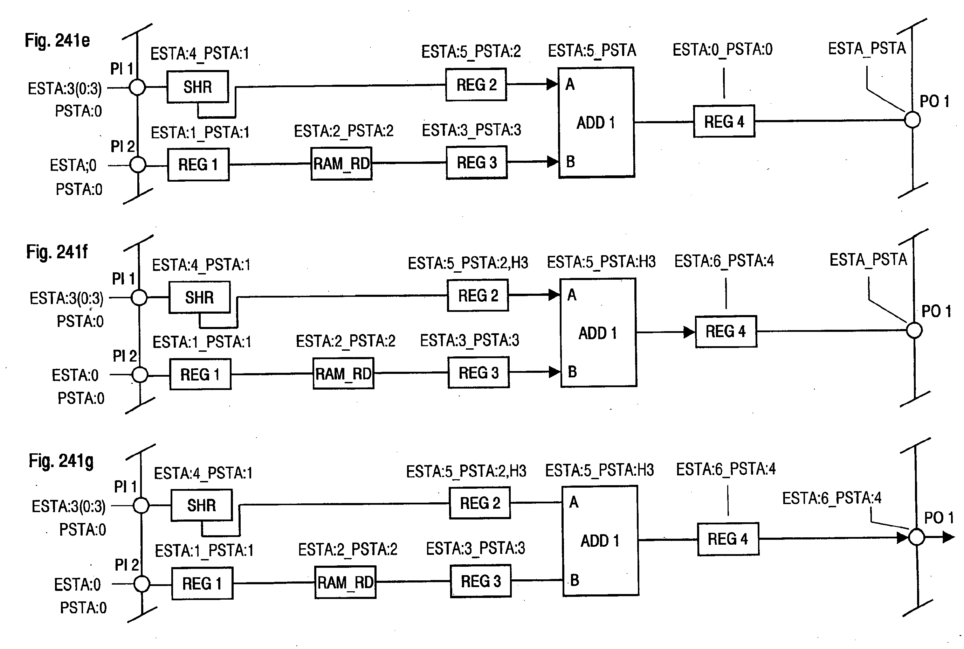

- Fig.241-248b: Beispiele zur Erläuterung der Bildung von ESTA, PSTA und PSTA:H;

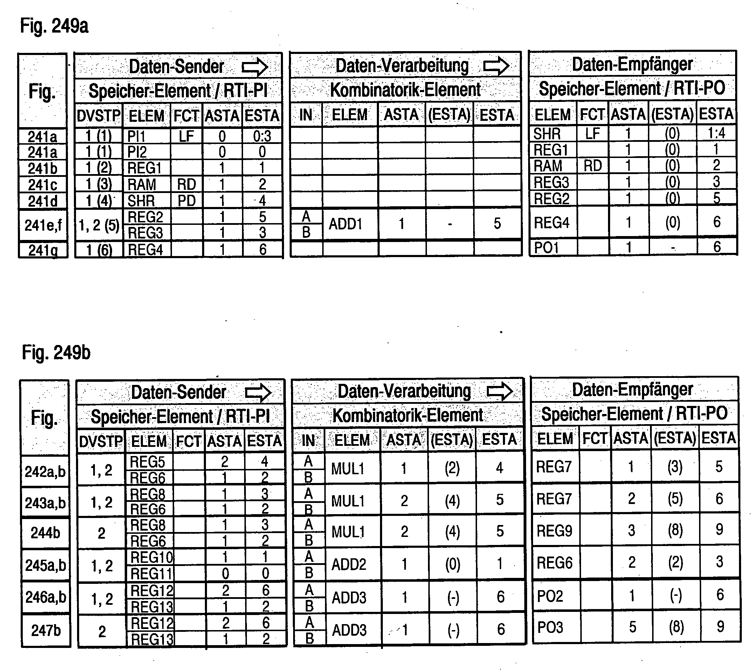

- Fig.249a-250b: zusammenfassende Übersichten zu den Beispielen der Bildung von ESTA, PSTA und PSTA:H nach Fig.241a-247b;

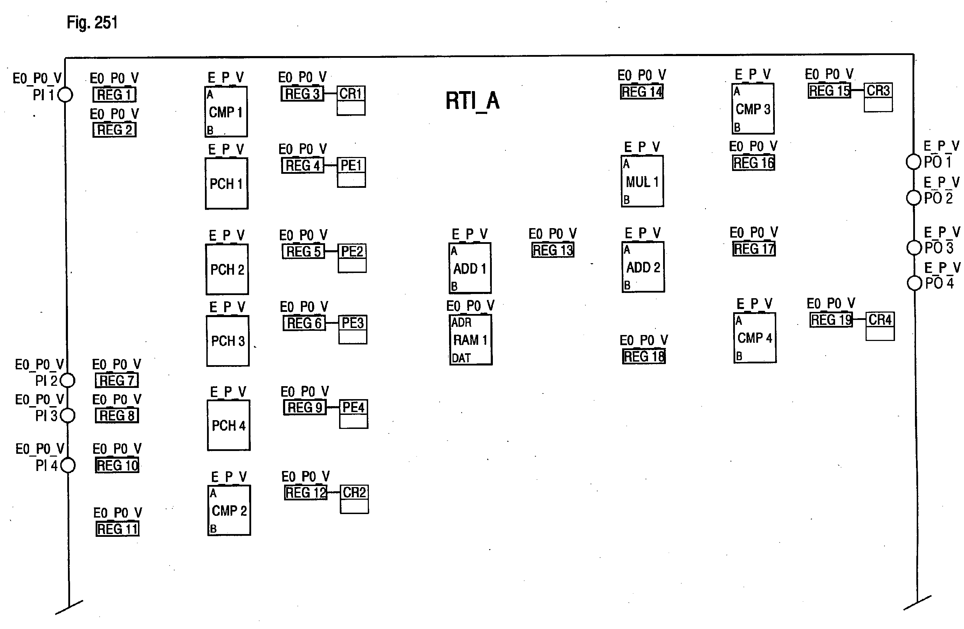

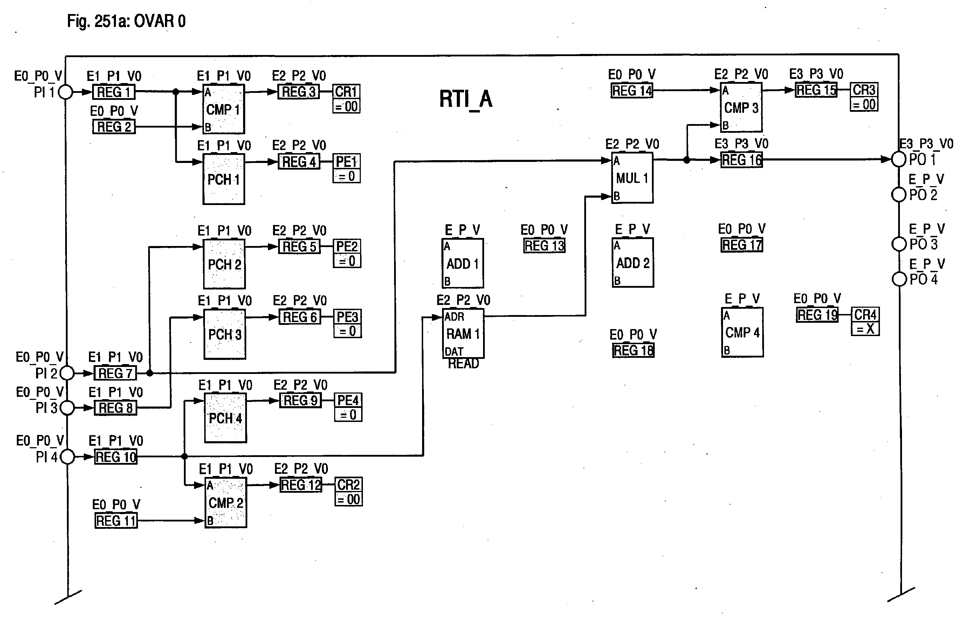

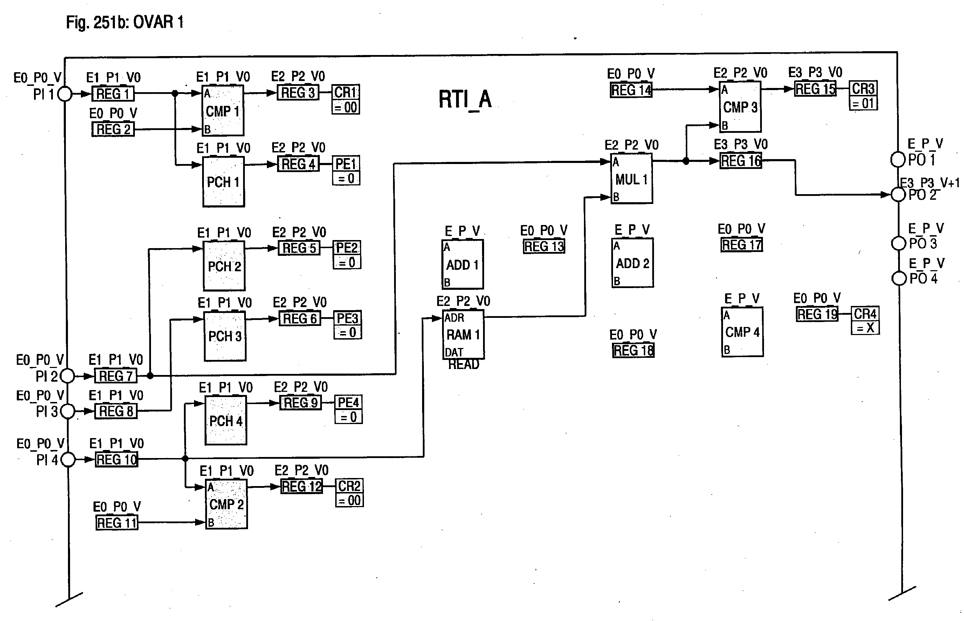

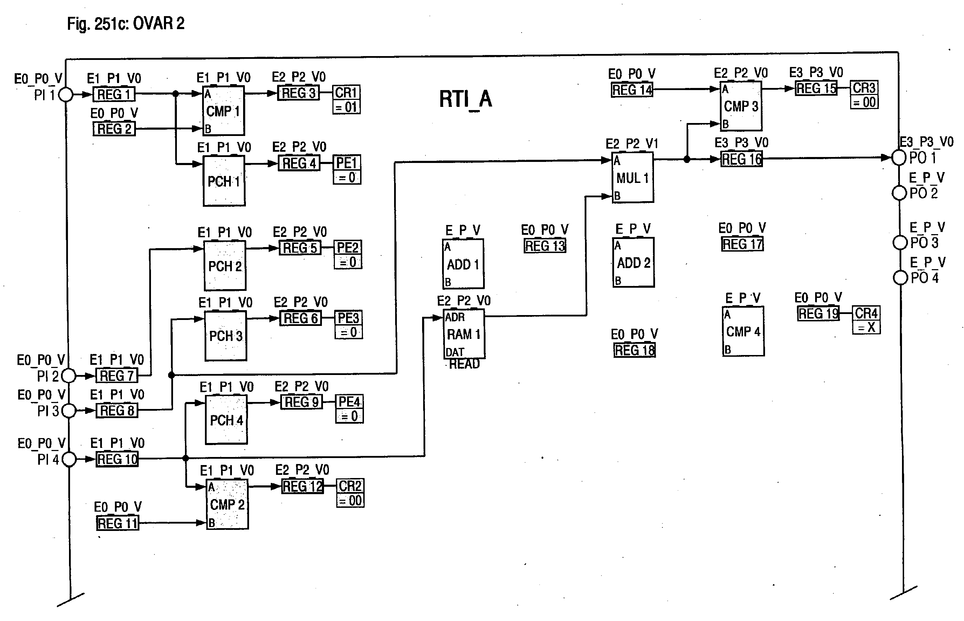

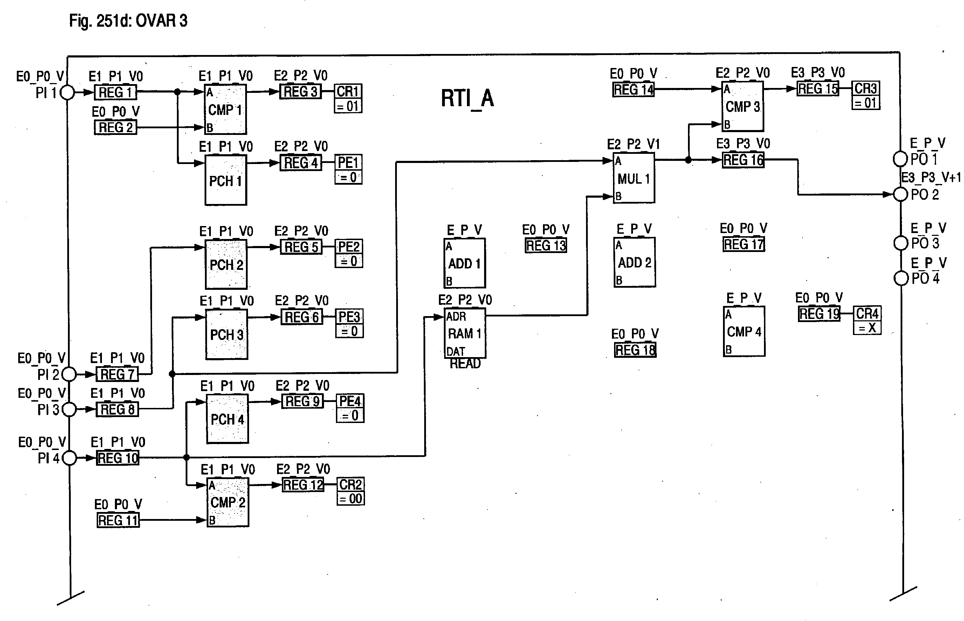

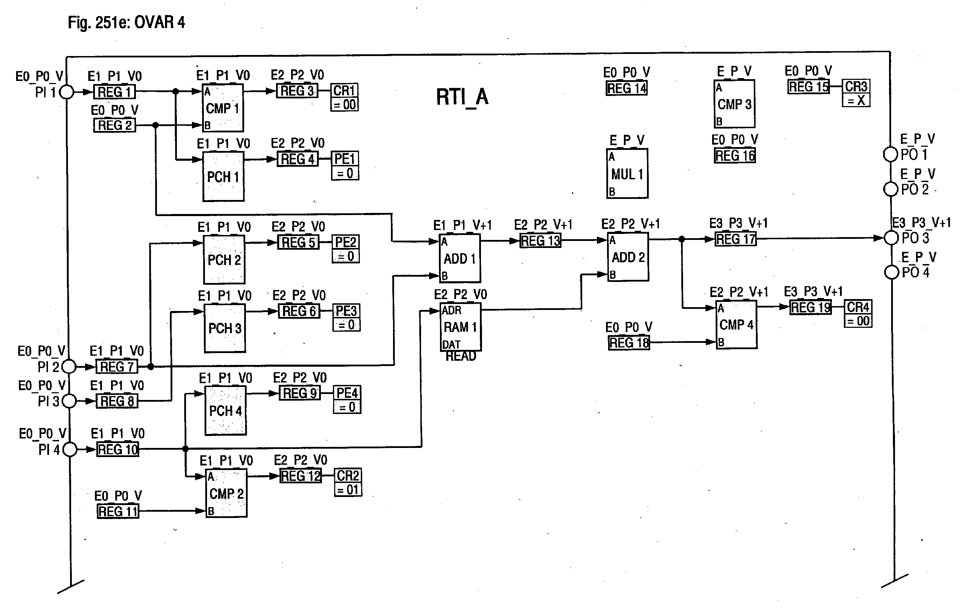

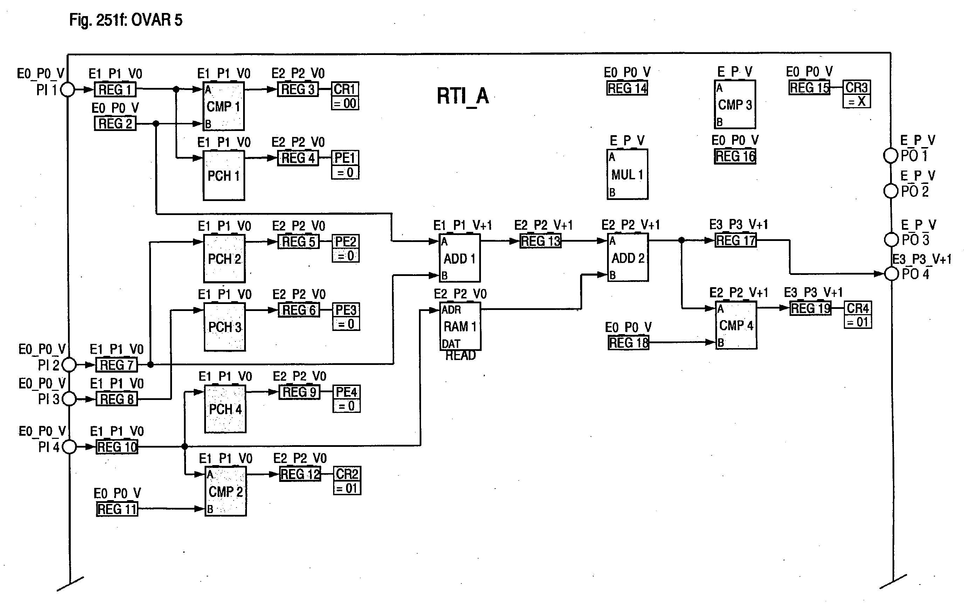

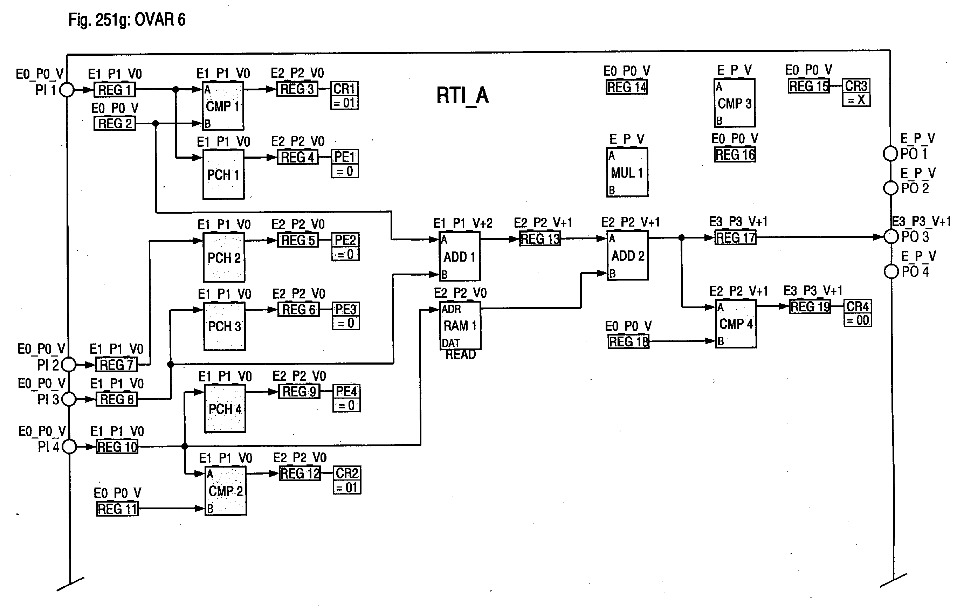

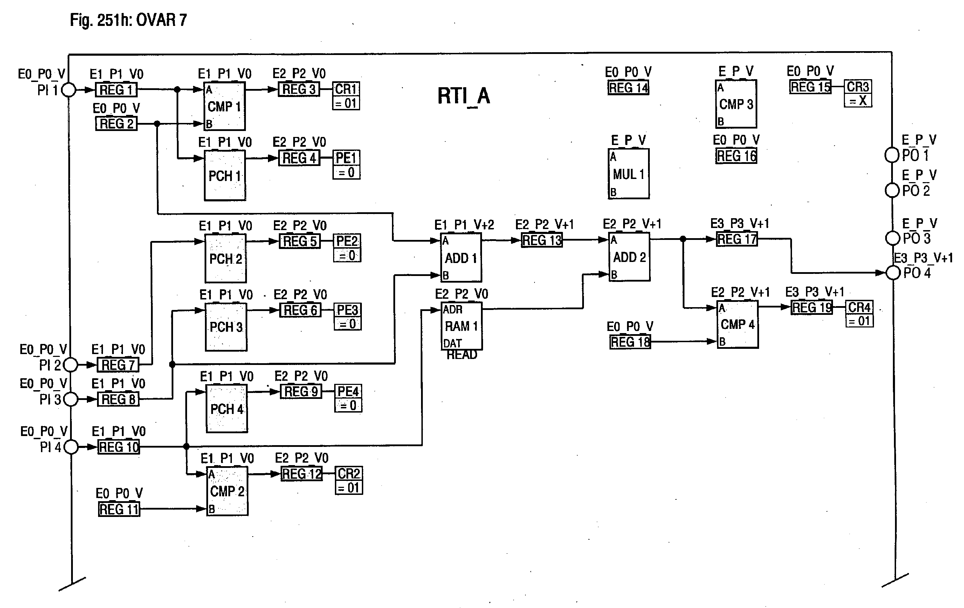

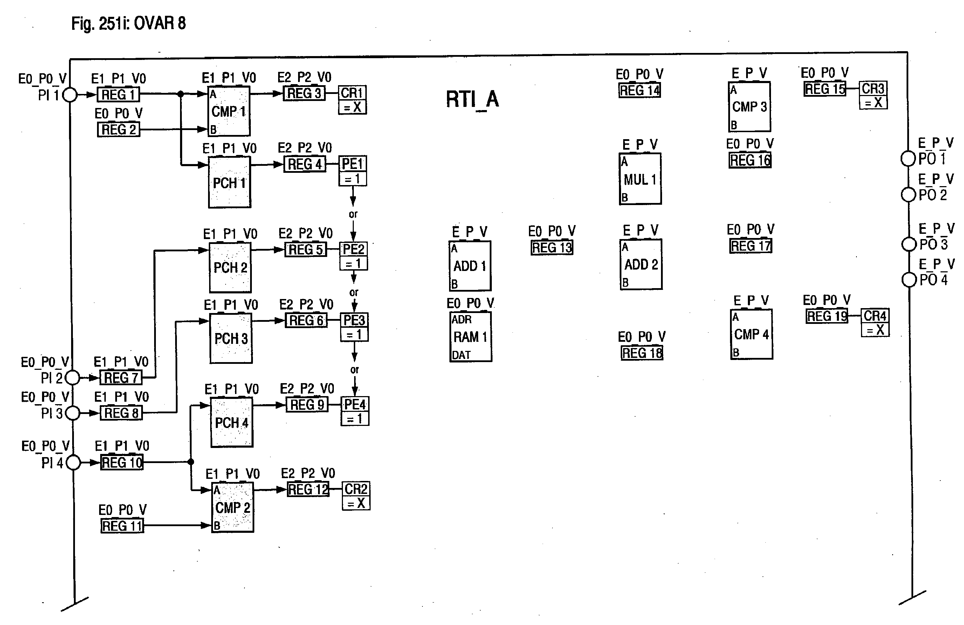

- Fig.251-251i: ein Beispiel eines Basis-Operationsablaufs "OP.1" in einer RTI_A, mit acht Operations-Varianten OVAR1 bis OVAR8;

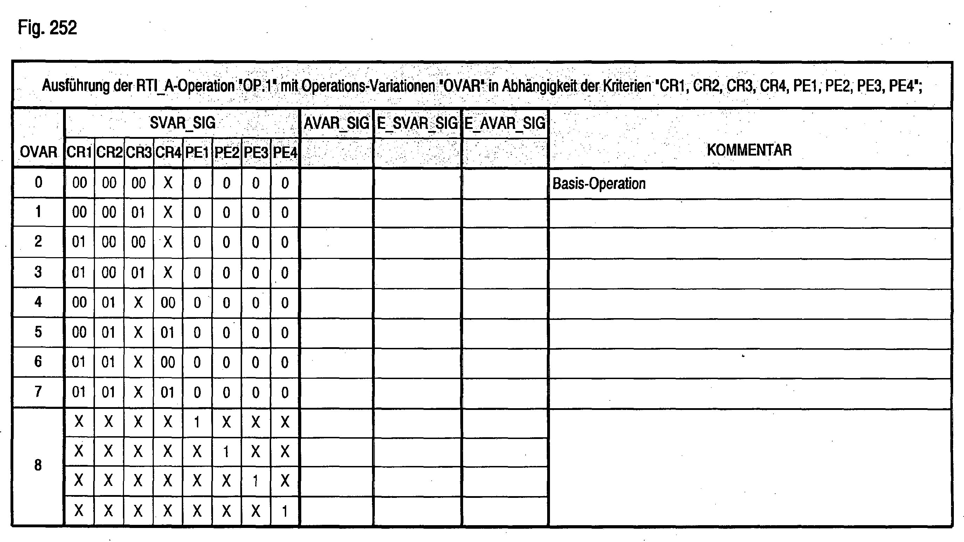

- Fig.252: eine Übersicht über die Abhängigkeit von OVAR von den Kriterien beim Ablauf der Operation OP.1 in der RTI_A (Fig.251-251 i);

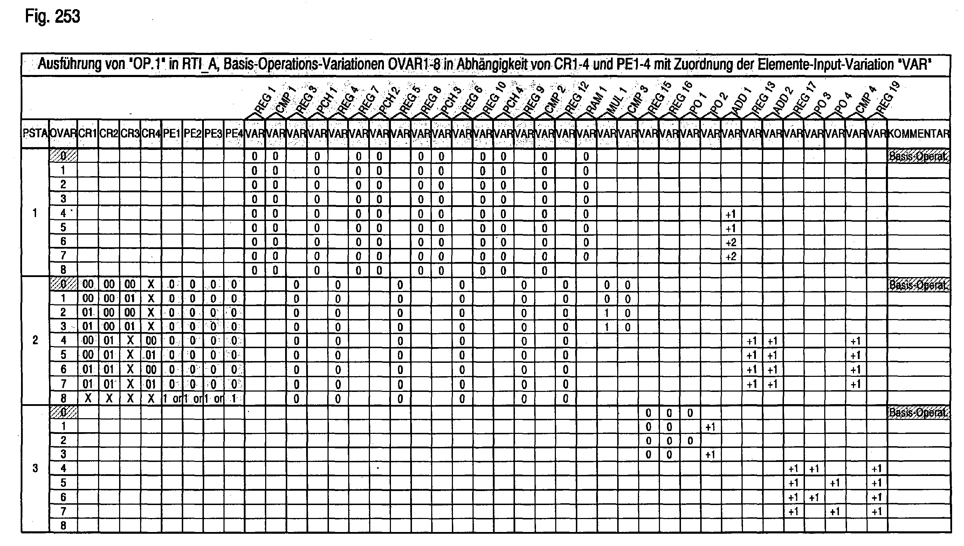

- Fig.253: für die Operation OP.1 in der RTI_A (Fig.251-251i, Fig.252) die Zuordnung der Datenverarbeitungs-Aktivität jedes Elements mit seiner Elemente-Input-Variation "VAR" zum Parallel-State "PSTA" für OVAR0 bis OVAR8; und

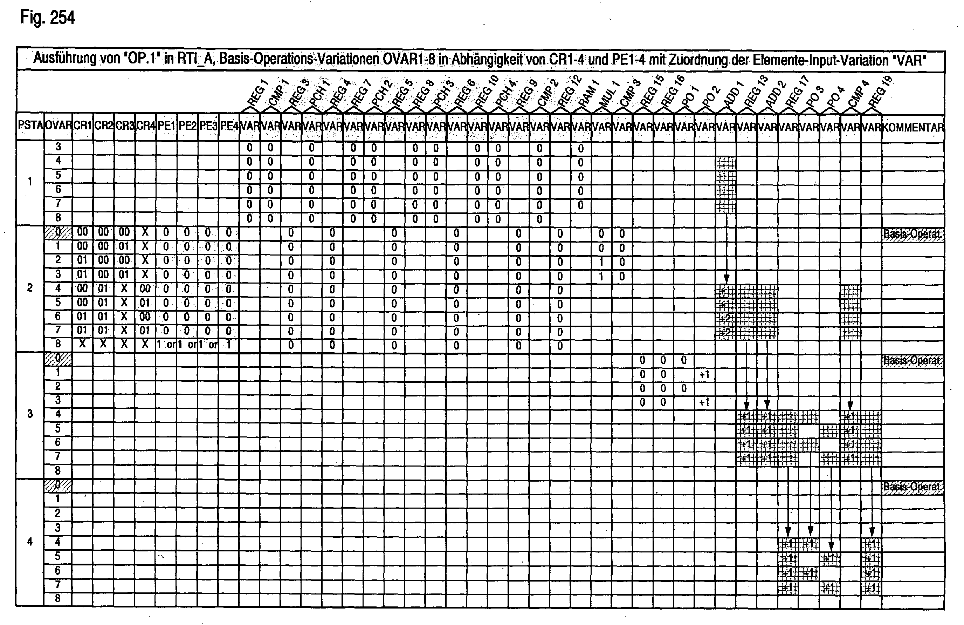

- fig.254: die Anpassung der Elemente-DVSTPs an die SVAR-Signal-Gültigkeit.

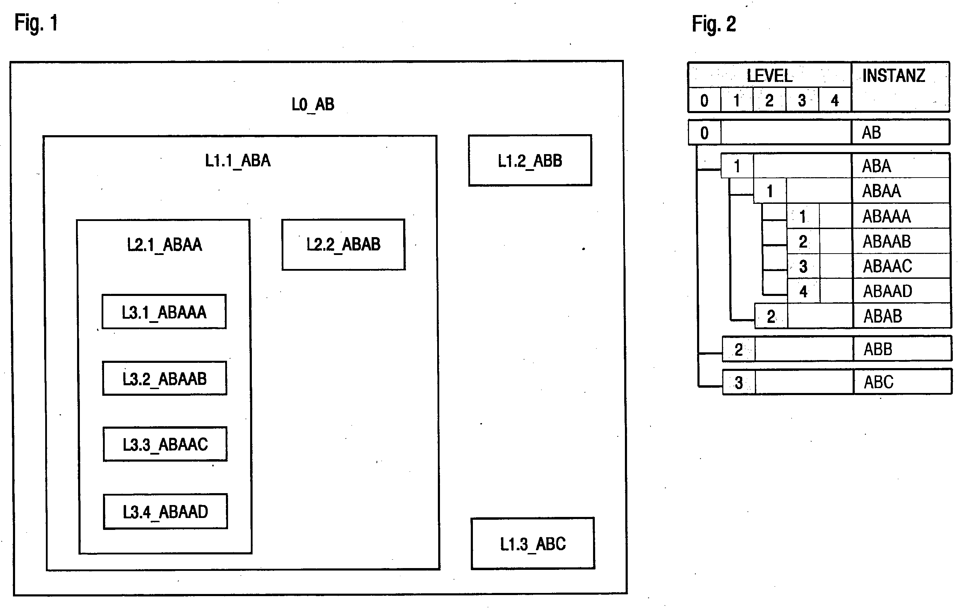

### Beschreibung zu Fig.1-22:

Wie bekannt, ist der Bereich einer Daten-/Informations-Verarbeitung, nachfolgend Datenverarbeitung genannt, durch den Toplevel mit seinen Instanzen und Unterinstanzen repräsentiert bzw. begrenzt. **Fig.1** zeigt einen beispielsweisen Toplevel mit seinen Instanzen und Unterinstanzen in Blockstruktur. Für den Toplevel und seine Instanzen und Unterinstanzen wurden Pseudonamen vergeben. Die Höhe einer Instanz in der Hierarchie wird durch den Level "Lx" (Ebene) festgelegt. Der Toplevel besitzt den höchsten Level "L0", die auf seiner Ebene instanziierten Komponenten besitzen den Level "L1" und die L1-Instanzen beinhalten L2-Instanzen, usw.. Die Unterscheidung der Instanzen auf dem Toplevel bzw. innerhalb einer beliebigen Instanz erfolgt durch eine Instanznummer. Damit ergibt sich in Fig.1 die Bezeichnung einer Instanz in der Hierarchie mit "Level.Instanznummer_Instanzname". Beim Toplevel entfällt die Instanznummer, da er nur einmal vorhanden ist.

In Fig.1 sind auf dem Toplevel "L0_AB" die Komponenten "L1.1_ABA", "L1.2_ABB" und "L1.3_ABC" instanziiert. In der Instanz "L1.1_ABA" sind die Komponenten "L2.1_ABAA" und "L2.2_ABAB" instanziiert. Die Instanz "L2.1_ABAA" besitzt die Komponenten "L3.1_ABAAA", "L3.2_ABAAB", "L3.3_ ABAAC" und "L3.4_ABAAD".

Beim erfindungsgemäßen Spezifikationsverfahren "SPV" wird anstelle einer Blockstruktur, Fig.1, die hierarchische Gliederung der Instanzen durch eine "Verzeichnisbaumstruktur" (Directory) dargestellt, wie **Fig.2** zeigt. Hierbei sind die Levels waagrecht, beispielsweise von Level 0 bis Level 4, die Instanznummern senkrecht angeordnet. Jede Instanz in der Hierarchie ist über ihren sog. "Pfad" definiert. Für die Pfadbezeichnung der Instanzen besitzen die Levels feste Stellen, die durch je einen Punkt voneinander getrennt sind, beginnend von links mit Level 0, nach rechts aufsteigend mit Level 1, Level 2, Level 3, usw.. An den Level-Stellen werden die entsprechenden Instanznummern eingetragen. So ist beispielsweise die Instanz "ABAAC" in Fig.2 über ihren Instanznummern-Pfad "0.1.1.3" definiert. Eine Instanz, beispielsweise "ABAAC", kann auch durch den Instanznamen-Pfad "AB.ABA.ABAA.ABAAC" definiert werden. Nachdem der Toplevel "L0" bzw. sein Name "AB" allen Instanzen gemeinsam ist, wird "L0" bzw. "AB" bei der Pfadbezeichnung weggelassen. Damit ergibt sich die Pfadbezeichnung für die Instanz ABAAC über den Instanznummern-Pfad mit "1.1.3" und über den Instanznamen-Pfad mit "ABA.ABAA.ABAAC".

Eine weitere Variante der Instanz-Pfadbezeichnung ergibt sich, wenn hinter dem Instanznummern-Pfad der Instanzname der letzten Instanznummer angehängt wird, wie im Beispiel "ABAAC" mit "1.1.3.ABAAC". Damit wird gegenüber dem reinen Instanznummern-Pfad eine verbesserte Instanzerkennung und gegenüber dem reinen Instanznamen-Pfad eine Verkürzung der Pfadbezeichnungslänge erreicht. Die in der Hierarchie jeweils niedrigsten Instanzen, die sog. Register-Transfer-Instanzen "RTIn", werden in ihren Instanznummern-Feldern und in ihren korrespondierenden LEVEL-Feldern beispielsweise farblich gekennzeichnet, wie Fig.2 zeigt.

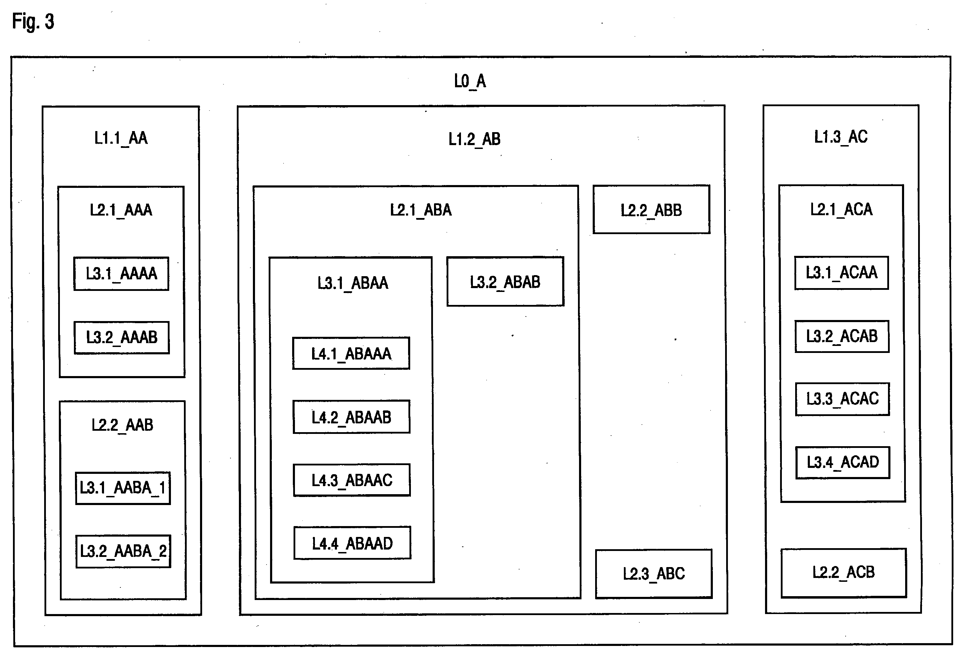

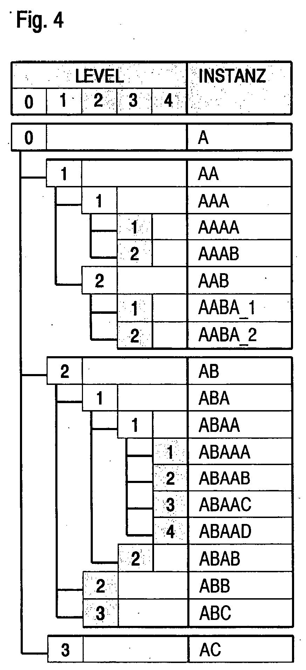

Wird ein Toplevel mit seinen Instanzen und Unterinstanzen in eine größere Hierarchie instanziiert, so wird dem zu instanziierenden Toplevel ein neuer, entsprechender Level sowie eine entsprechende Instanznummer in dieser größeren Hierarchie zugeordnet und die Pfade seiner Instanzen und Unterinstanzen entsprechend angepaßt. Ein Beispiel hierfür ist die Instanziierung des Toplevels "L0_AB" von Fig.1, bzw. Fig.2, in den Toplevel "L0_A" von **Fig.3** (Blockstruktur) bzw. **Fig.4** (Verzeichnisbaumstruktur).

In Fig.4 ist die Instanz "AC" ohne Unterinstanzen dargestellt. In Fig.1 und Fig.2 war für die Instanz "ABAAC" die Pfadbezeichnung mit "1.1.3" gegeben. Durch die Instanziierung der Komponente "AB", die in Fig.1 und Fig.2 der Toplevel "L0_AB" war, in den Toplevel "L0_A", Fig.3 bzw. Fig.4, ergibt sich für die Instanz "ABAAC" die Pfadbezeichnung "2.1.1.3".

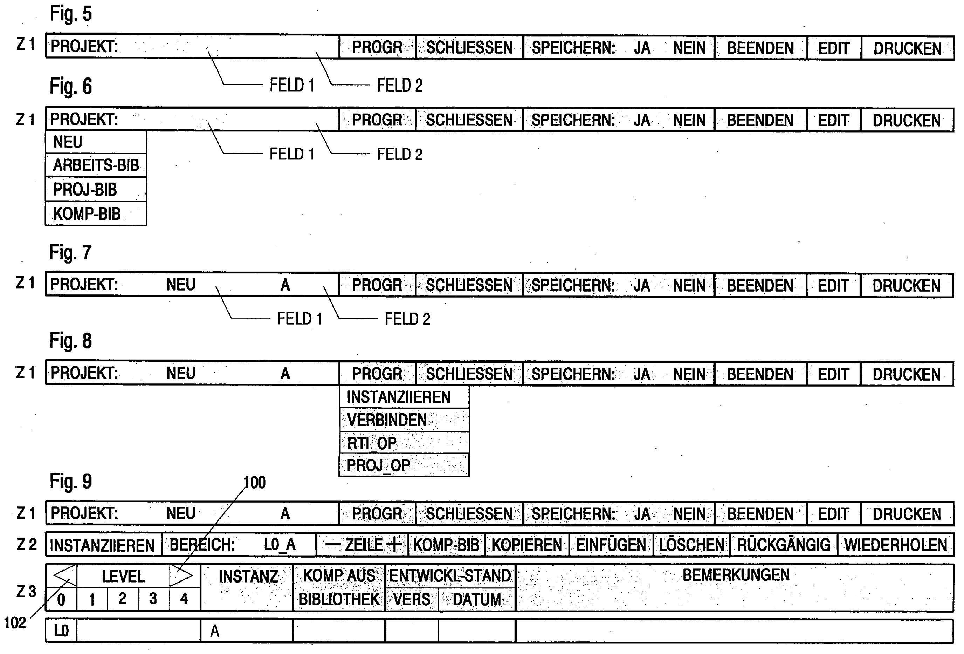

Mit dem Aufruf des erfindungsgemäßen SPV erscheint am Bildschirm die Menüzeile "Z1", wie **Fig.5** zeigt. Feld1 und Feld2 sind ohne Eintrag. Durch Klick in die Schaltfläche "PROJEKT" in "Z1" wird ein Projekt-Fenster mit den Schaltflächen "NEU", "ARBEITS-BIB", "PROJ-BIB" und "KOMP-BIB" geöffnet, wie **Fig.6** zeigt. Soll ein neues Projekt begonnen werden, wird die Schaltfläche "NEU" durch Klick aktiviert, wie in Fig.6 dargestellt. Mit Klick in die Schaltfläche "PROJEKT" in "Z1" wird das Projekt-Fenster geschlossen und in Feld1 Projekt "NEU" übernommen, wie in **Fig.7** dargestellt. Ausserdem wurde der Projektname, im Beispiel mit "A", manuell eingetragen. Nach einer ersten Projekt-Bearbeitung und dem Schließen des SPV, wird die erzeugte Datenbasis in die Arbeits-Bibliothek "ARBEITS-BIB" abgespeichert. Beim erneuten Öffnen des SPV stehen Daten aus der Arbeits-Bibliothek zur Verfügung, deshalb ist das Feld1 ohne Eintrag, im Feld2 wird der Projekt-Name "A" angezeigt. Soll ein Projekt nach Fertigstellung in eine Projekt-Bibliothek übernommen werden, dann wird im Projekt-Fenster, Fig.6, die Schaltfläche "ARBEITS-BIB" durch Klick aktiviert und durch Doppelklick in die Schaltfläche "PROJ-BIB" eine Projekt-Bibliothek geöffnet, nicht dargestellt, in die das fertiggestellte Projekt abgespeichert wird. Soll ein Projekt nach Fertigstellung in eine Komponenten-Bibliothek übernommen werden, dann wird im Projekt-Fenster, Fig.6, die Schaltfläche "ARBEITS-BIB" durch Klick aktiviert und durch Doppelklick in die Schaltfläche "KOMP-BIB" eine Komponenten-Bibliothek geöffnet, nicht dargestellt, in die die fertiggestellte Komponente abgespeichert wird. Für einen Transfer von einer Projekt- oder Komponenten-Bibliothek in die Arbeits-Bibliothek wird im Projekt-Fenster, Fig.6, durch Doppelklick in die Schaltfläche "PROJ-BIB" oder "KOMP-BIB" die gewünschte Bibliothek geöffnet, nicht dargestellt, und es wird ein Projekt bzw. eine Komponente ausgewählt und in die Arbeits-Bibliothek transferiert.

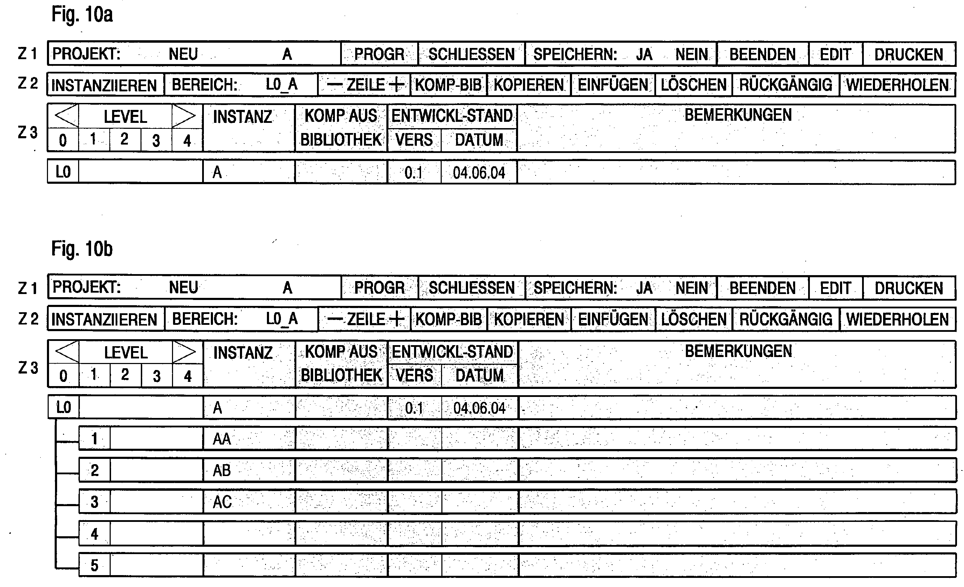

Nachfolgend sollen die funktionellen Eigenschaften des SPV-Bildschirm "IN-STANZIIEREN" am Beispiel des Projekts "A", Fig.3 bzw. Fig.4, erläutert werden. Hierzu wird nach Aufruf des SPV und Projekt-Eintrag, Fig.7, durch Klick in die Schaltfläche Programm "PROGR" in Zeile "Z1" ein Programm-Fenster, mit den Programmen Instanzieren "INSTANZIIEREN", Verbinden "VERBINDEN", Register-Transfer-Instanz-Operation "RTI_OP" und Projekt-Operation "PROJ_OP" geöffnet, wie **Fig.8** zeigt. Dabei erfolgte die Programm-Auswahl durch Klick in die Schaltfläche "INSTANZIIEREN", die hierdurch aktiviert wurde. Durch Klick in die Schaltfläche "PROGR" in "Z1 ", wird das Programm-Fenster geschlossen und der Bildschirm "INSTANZIIEREN" geöffnet, wie in **Fig.9** dargestellt. In Zeile "Z1" wird der Projekt-Eintrag mit Projekt "NEU" und Projektname "A" übernommen. In Zeile "Z2" wird der Bildschirmtyp "INSTANZIIEREN" und der Projekt-Toplevel mit "BEREICH:L0_A" angezeigt. Die Funktionen der Schaltflächen in "Z1" und "Z2" werden im Laufe der Beschreibung erläutert. Die Zeile "Z3" besitzt folgende Spalten-Einteilung bzw. -Inhalte. "LEVEL": Beispielsweiser Minimalbereich ist Level0 bis Level4, durch Klicks in den rechten Pfeil 100 erweiterbar größer Level4, durch Klicks in den linken Pfeil 102 reduzierbar bis Level4; "INSTANZ": Toplevel-/Komponenten-Name; "KOMP AUS BIBLIOTHEK": Name von Komponenten die aus einer Bibliothek instanziiert wurden; "ENTWICKL-STAND": Manueller Eintrag von Version "VERS" und "DATUM"; "BEMERKUNGEN": Beliebige Kommentare. Beim Öffnen des Bildschirm "INSTANZIIEREN", Fig.9, wird automatisch, unterhalb der Zeile "Z3", eine Instanzzeile für den Toplevel "L0" mit der unter "BEREICH", "Z2", eingetragenen Komponente generiert. Vor einem Text-Eintrag bzw. einer Text-Änderung in einer Instanzzeile, wird die Instanzzeile durch Klick in ihre Schaltfläche in der Spalte "INSTANZ" durch Markierung aktiviert, wie **Fig.10a** zeigt. Hierbei wurde der Entwicklungsstand zu Beginn der Spezifizierung beispielsweise mit Version "0.1" und Datum "04.06.04" eingetragen. Während der Spezifizierung können die Versionen beispielsweise mit "0.2", "0.3", usw. hochgezählt werden. Die Freigabe der Spezifikation erfolgt beispielsweise mit Version "1.0" und kann bei Änderungen mit "2.0", "3.0", usw., hochgezählt werden.

In **Fig.10b** ist eine beispielsweise Instanziierung auf dem Toplevel "L0_A", mit den Instanzen "AA", "AB" und "AC", dargestellt. Für eine Instanziierung wird die Instanzzeile aktiviert bzw. markiert, in die eine oder mehrere Komponenten instanziiert werden sollen, im Beispiel ist das die Instanzzeile "A" in Fig.10a. Anschließend werden die für die Instanziierung erforderlichen Instanzzeilen durch Klicks in die Schaltfläche ZEILE"+" generiert, im Beispiel sind das fünf Instanzzeilen, wie Fig.10b zeigt. Die generierten Instanzzeilen werden automatisch aktiviert bzw. markiert und sind damit für Einträge vorbereitet.

Für die Instanznummern "1", "2" und "3" unter Level"1" wurden die Instanznamen "AA", "AB" und "AC" eingetragen. Die Texteinträge bzw. Textänderungen werden mit den bekannten Mitteln der Textverarbeitung durchgeführt. Bei aktivierter Instanzzeile können durch Klick in die Schaltfläche "LÖSCHEN" in "Z2" alle Texteinträge, durch Klick in die Schaltfläche ZEILE"-" in "Z2" die Instanzzeile gelöscht werden. Beim Löschen einer oder mehrerer Instanzzeilen werden automatisch die dabei entstehenden Lücken geschlossen sowie die Instanznummern-Kontinuität von oben nach unten wieder hergestellt. Bei gedrückter Shifttaste können mehrere zusammenhängende Instanzzeilen, bei gedrückter Controltaste beliebige, nicht zusammenhängende Instanzzeilen durch Klick in Spalte "INSTANZ" aktiviert bzw. markiert werden. Durch Klick in einzelne Schaltflächen innerhalb einer oder mehrerer Instanzzeilen können über die Shift- bzw. Control-Taste beliebige Schaltflächen aktiviert bzw. markiert werden. Der Text dieser aktivierten Schaltflächen kann durch Klick in die Schaltfläche "LÖSCHEN" in "Z2" gelöscht werden. Bei Klick in die Schaltfläche ZEILE"-" erfolgt keine Reaktion. Mit einem nachfolgenden Klick in ein neutrales Bildschirmfeld werden aktivierte bzw. markierte Schaltflächen deaktiviert bzw. demarkiert.

Sollen eine oder mehrere Befehlsausführungen rückgängig gemacht werden, so erfolgt dies durch Kicks in die Schaltfläche "RÜCKGÄNGIG" in "Z2". Sollen die ursprünglichen Befehlsausführungen wieder hergestellt werden, so erfolgt dies durch Kicks in die Schaltfläche "WIEDERHOLEN" in "Z2". Durch Klick in die Schaltfläche "KOPIEREN" in "Z2" wird der Text einer aktivierten Schaltfläche abgespeichert und kann durch Klick in die Schaltfläche "EINFÜGEN" in "Z2" in einer beliebigen, aktivierten Schaltfläche eingefügt werden.

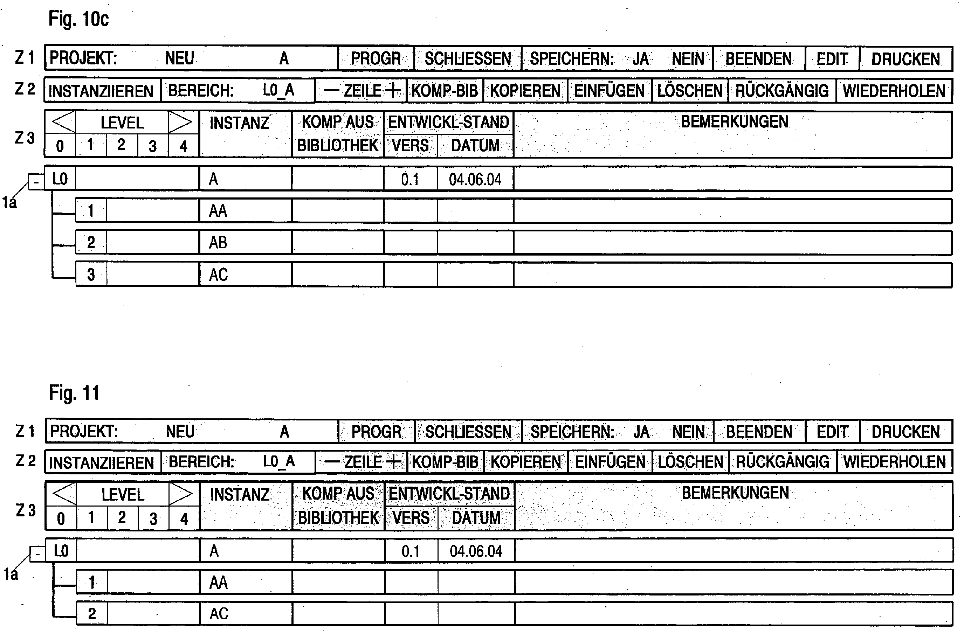

**Fig.10c** zeigt die instanziierten Komponenten "AA", "AB" und "AC" auf dem Toplevel "A", die zuviel generierten Instanzzeilen "4" und "5", Fig.10b, wurden gelöscht. Die dem Toplevel "A" vorgeschaltete Schaltfläche 1 a zeigt, wie bei Verzeichnisbaum-Strukturen bekannt, daß unter "A" noch weitere Komponenten instanziiert sind. Die Schaltfläche 1a wird mit der Deaktivierung der Instanzzeilen "AA", "AB", "AC", automatisch generiert. Die Schaltfläche 1a beinhaltet ein Minus (-), wenn die instanziierten Komponenten sichtbar und ein Plus (+), wenn sie nicht sichtbar sind. Mit jedem Klick in die Schaltfläche 1a wechselt sie ihr Vorzeichen und damit ihre Instanzanzeige.

In **Fig.11** fehlt die Instanz "AB", ihre Instanzzeile wurde gelöscht. Die Zeilen der auf dem Toplevel instanziierten Komponenten besitzen beispielsweise untereinander und zur Toplevelzeile ein Abstandsraster, wie die Figuren 10b, 10c und 11 zeigen. Unter der Voraussetzung, daß die auf dem Toplevel instanziierten Komponenten ebenfalls Instanzen und Unterinstanzen besitzen, wird durch dieses Abstandsraster die Übersicht in der Instanzhierarchie verbessert.

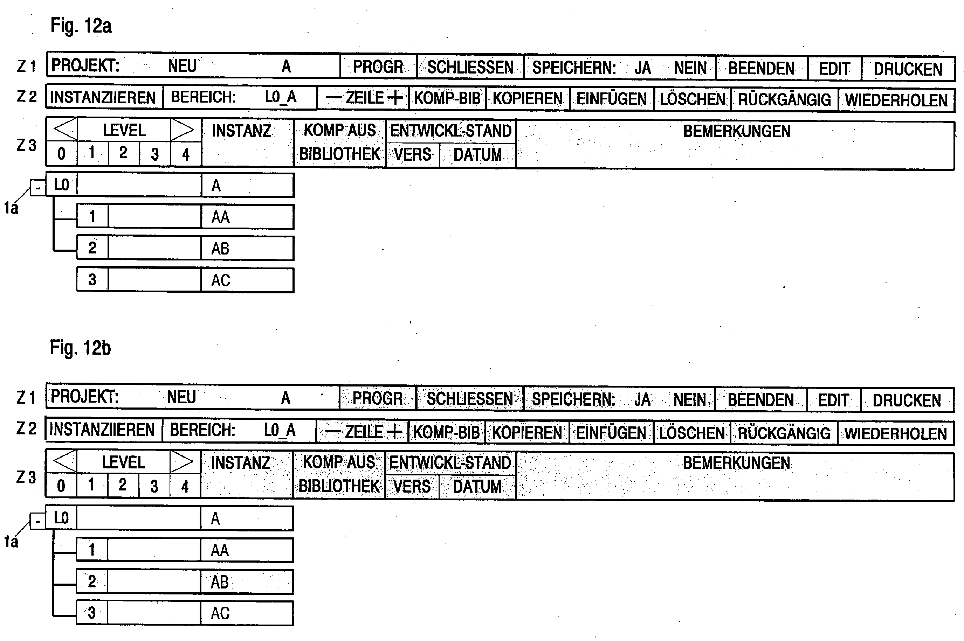

In **Fig.12a** wurde die Schaltfläche "BEREICH" durch Klick aktiviert. Hierdurch werden der Projekt-Toplevel und seine Instanzen bzw. Unterinstanzen nur noch in den Spalten "LEVEL" und "INSTANZ" dargestellt und der unter "BEREICH" eingetragene Toplevel "L0_A" in "Z2", in der Toplevelzeile, in Spalte "INSTANZ", aktiviert bzw. markiert angezeigt.

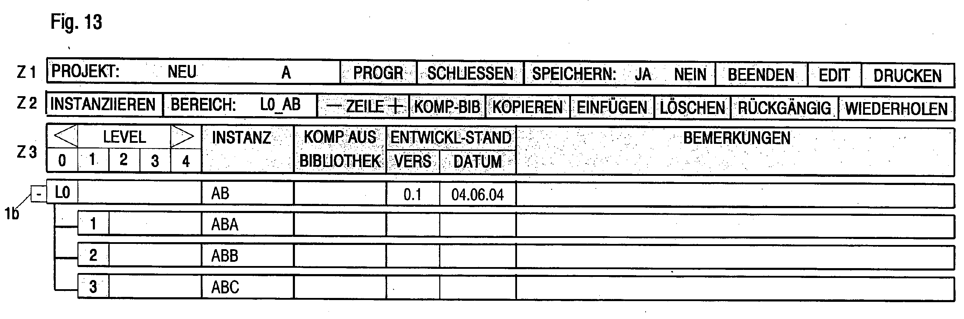

Durch Klick in die Schaltfläche "AB" in Spalte "INSTANZ" wird diese aktiviert bzw. markiert und der Toplevel in Spalte "INSTANZ" deaktiviert bzw. demarkiert, wie **Fig.12b** zeigt. Durch Klick in die Schaltfläche "BEREICH" in "Z2" wird diese deaktiviert und der Projekt-Toplevel "A" in Toplevel "AB" geändert, wie in Fig.13 dargestellt. Zusätzlich wurden in Fig.13 die Komponenten "ABA", "ABB" und "ABC" in den Toplevel "AB" instanziiert, die Schaltfläche 1b mit "-" auf Anzeige geschaltet und der Entwicklungsstand für den Toplevel eingetragen. Die Durchführung der Instanziierung ist identisch mit der unter **Fig.10a** und Fig.10b beschriebenen Instanziierung, mit der Ausnahme, daß die Toplevel-Instanzzeile "AB" zu aktivieren ist und anschließend drei Instanzzeilen generiert werden, in die der Eintrag der Komponenten "ABA", "ABB" und "ABC" erfolgt.

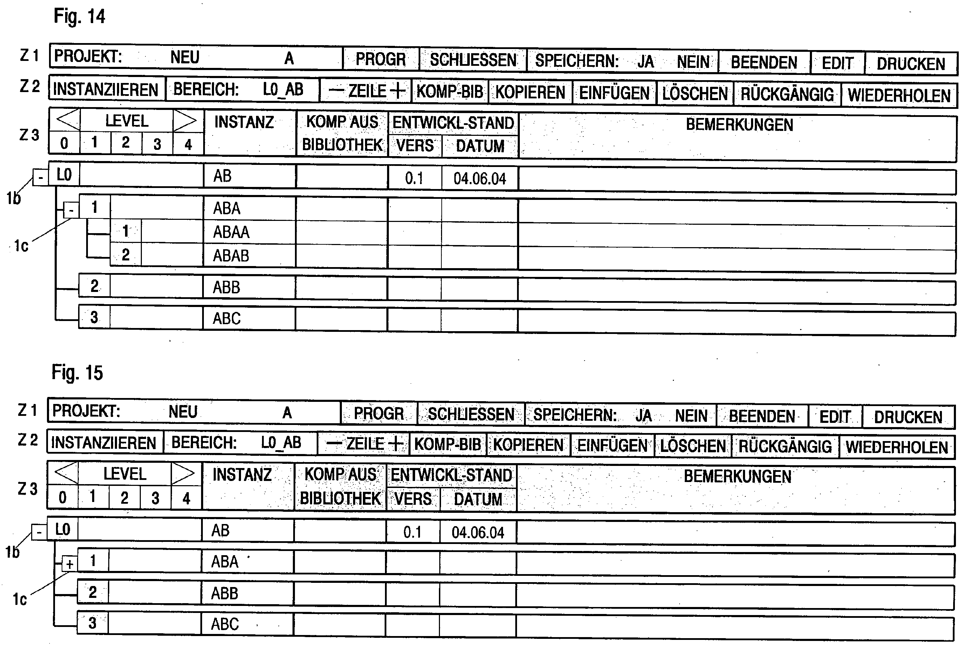

In **Fig.14** wurden in die Instanz "ABA" die Komponenten "ABAA" und "ABAB" instanziiert und über die Schaltfläche 1 c mit "-" auf Anzeige geschaltet. Die Durchführung der Instanziierung ist identisch mit der unter **Fig.10a** und Fig.10b beschriebenen Instanziierung, mit der Ausnahme, daß die Instanzzeile "ABA" zu aktivieren ist und anschließend zwei Instanzzeilen generiert werden, in die der Eintrag der Komponenten "ABAA" und "ABAB" erfolgt.

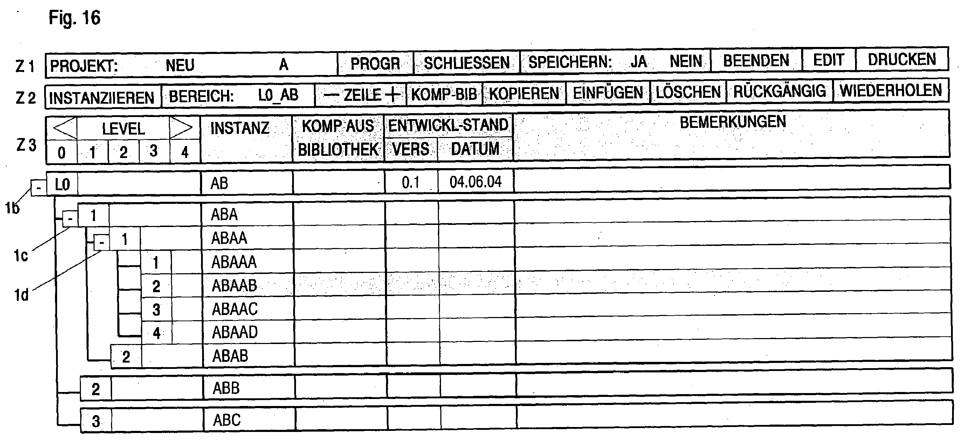

In **Fig.15** wurde durch Klick in die Schaltfläche 1c die Anzeige der Instanzen "ABAA" und "ABAB" weggeschaltet. **Fig.16** zeigt die volle Instanziierung auf dem Toplevel "AB" entsprechend Fig.1 und Fig.2. Hierbei sind zusätzlich zu Fig.14 bzw. Fig.15 unter "ABAA" die Komponenten "ABAAA", "ABAAB", "ABAAC", "ABAAD" instanziiert und über die Schaltfläche 1d angezeigt. Für die Instanz "ABAAB" soll eine fertig spezifizierte Komponente aus der Komponenten-Bibliothek verwendet werden. Hierzu wird die ABAAB-Instanzzeile aktiviert bzw. markiert und durch Klick in die Schaltfläche "KOMP-BIB" in "Z2" eine Komponenten-Bibliothek, nicht dargestellt, geöffnet. In der Komponenten-Bibliothek wurde die Komponenten "CCAJ" mit Version "3" und Datum "27.02.04" ausgewählt.

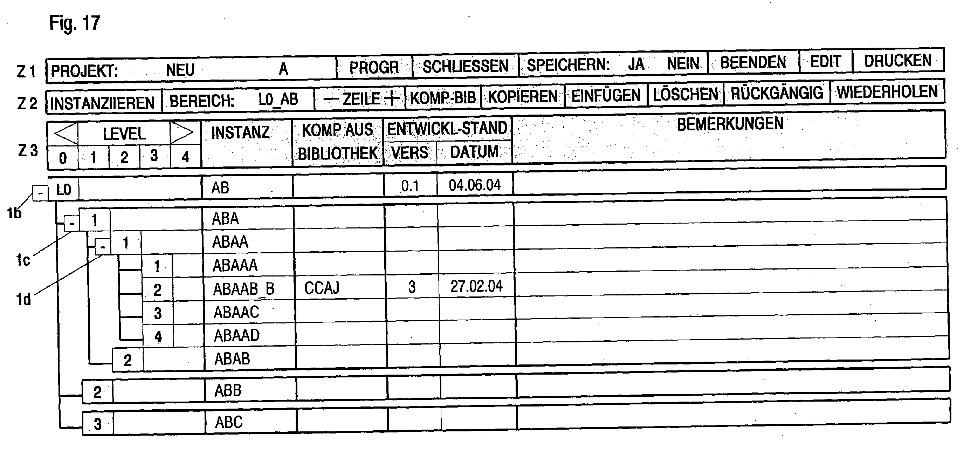

**Fig.17** zeigt den Eintrag der transferierten Komponente "CCAJ" aus der Komponenten-Bibliothek. Dabei wird in Spalte "INSTANZ" automatisch die Instanzbezeichnung von "ABAAB" in "ABAAB_B" geändert und die Instanzzeile deaktiviert bzw. demarkiert. Das "B" steht für Bibliotheks-Komponente. Zur Löschung einer Bibliothekskomponente wird in der Spalte "KOMP AUS BIBLIOTHEK" der Name der zu löschenden Bibliothekskomponente durch Klick markiert und durch einen nachfolgenden Klick in die Schaltfläche "LÖSCHEN", mit Entwicklungsstand, Sprache und Bemerkungen, gelöscht. Dabei wird der Instanzname automatisch wieder von "ABAAB_B" nach "ABAAB" zurückgeführt. Eine Umbenennung einer Bibliotheks-Komponente, bzw. eine Änderung des Entwicklungsstandes oder des Eintrags in Spalte "SPRACHE" oder Bemerkungen, ist im Bildschirm "INSTANZIIEREN" nicht möglich. Änderungen der Anordnung einer Instanziierung erfolgen über die Funktion "EDIT" und sollen durch Variationen auf der Basis der Instanziierung nach Fig.17 dargestellt werden.

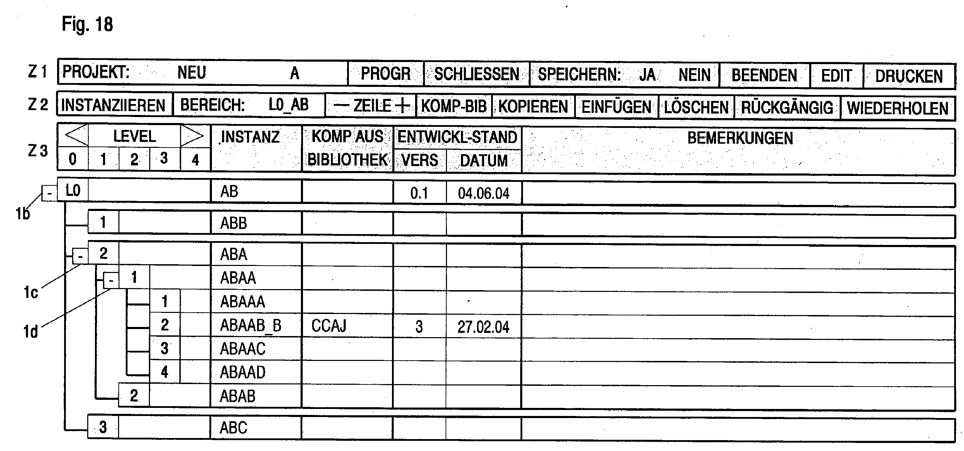

In **Fig.18** wurde in Levelspalte L1 die Reihenfolge der Instanzen von ABA-ABB-ABC in ABB-ABA-ABC geändert. Hierzu wurde die Schaltfläche "EDIT" durch Klick aktiviert bzw. hell-getastet, der Cursor in der Levelspalte "L1" auf das Feld der Instanznummer "2", Fig.17, plaziert und dieses mit gedrückter linker Maustaste über das Feld der Instanznummer "1", Fig.17, in der Levelspalte "L1" geschoben und die linke Maustaste wieder losgelassen, wodurch die Schaltfläche "EDIT" wieder deaktiviert wird. Hierdurch nimmt die Instanz "ABB", die Position der Instanz "ABA" ein, "ABA" übernimmt die Position unterhalb von "ABB", die restlichen Instanzen, im Beispiel nur die Instanz "ABC", positionieren sich unterhalb in bisheriger Reihenfolge. Beim einem Editiervorgang werden entstehende Instanzzeilen-Lücken automatisch geschlossen und die Instanznummern-Kontinuität von oben nach unten hergestellt.

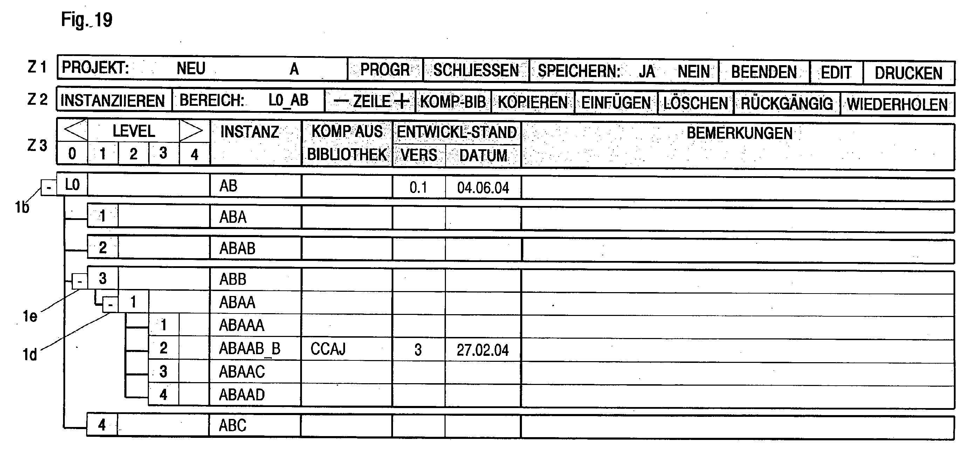

In **Fig.19** wurde gegenüber Fig.17 die Instanz "ABAB" von Level L2 nach Level L1 verschoben und die Instanz "ABAA" mit ihren Unterinstanzen in der Instanz "ABB" instanziiert. Hierzu wird im ersten Editiervorgang die Instanznummer 2 in Levelspalte 2 der Instanz "ABAB" auf der Höhe ihrer Instanzzeile von Levelspalte 2 nach Levelspalte 1 geschoben und in einem zweiten Editiervorgang die Instanz-nummer 1 in Levelspalte 2 der Instanz "ABAA" auf die Instanzzeilenhöhe der Instanz "ABB" geschoben. Für die Instanzzeile "ABA" entfällt dabei die Schaltfläche 1c. Die Neuplazierung der Instanzen "ABAB" und "ABAA" kann auch in einem Editiervorgang erfolgen. Hierzu wird nach dem Aktivieren von "EDIT" die Shifttaste gedrückt. Es können dann durch das Drücken und Loslassen der linken Maustaste beliebig viele Verschiebevorgänge ausgeführt werden. Mit dem Loslassen der Shifttaste wird "EDIT" deaktiviert.

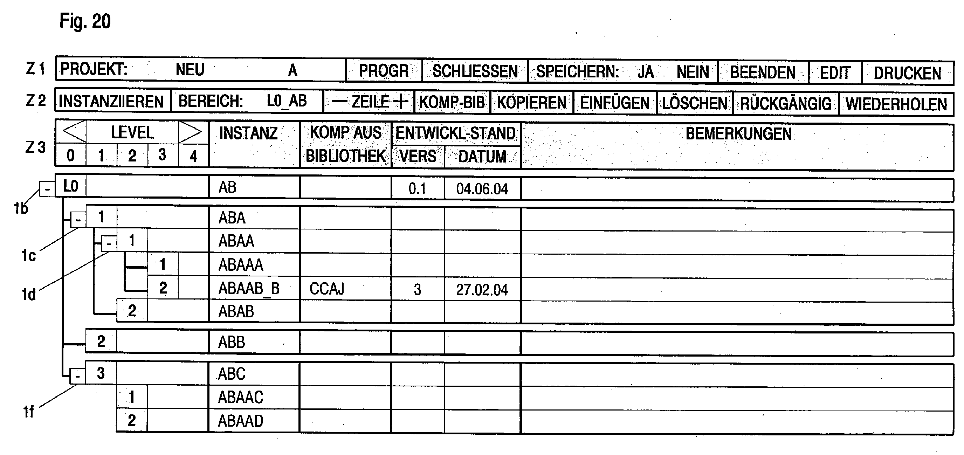

In **Fig.20** wurden die Instanzen "ABAAC" und "ABAAD", die in Fig.17 in der Instanz "ABAA" instanziiert waren, in die Instanz "ABC" instanziiert. Zur Plazierung können beide Instanzen in Levelspalte 3 auf der Höhe der Instanzzeile "ABC" abgelegt werden. Die Instanzzeile "ABC" erhält dabei die Schaltfläche 1f.

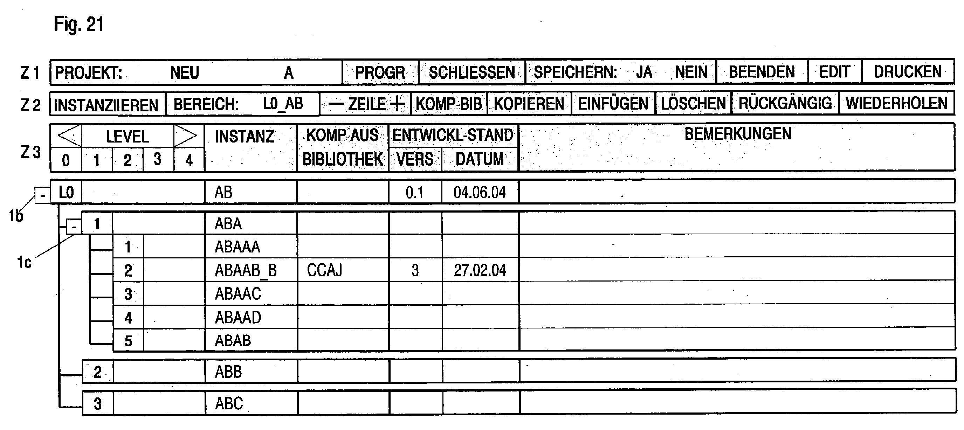

In **Fig.21** wurde gegenüber Fig.17 die Instanzzeile "ABAA" gelöscht, damit wurden automatisch die Instanzen "ABAAA", "ABAAB", "ABAAC" und "ABAAD" in der Instanz "ABA" instanziiert, die entstandene Instanzzeilen-Lücke geschlossen und die Instanznummern-Kontinuität von oben nach unten in der Levelspalte 2 hergestellt. Generell gilt, wird eine Instanzzeile, die Unterinstanzen hat, gelöscht, dann werden diese Unterinstanzen in der Instanzhierarchie automatisch um einen Level höher plaziert.

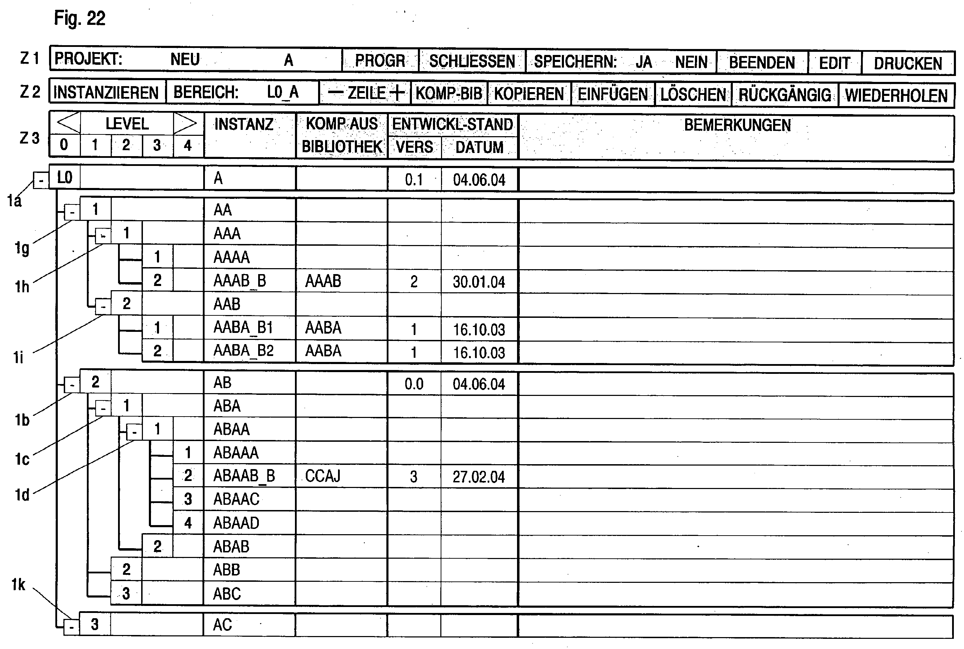

In **Fig.22** ist der Toplevel von Projekt "A" dargestellt, der durch die Umschaltung im Feld "BEREICH", von "L0_AB" in "L0_A", mit seinen Instanzen und Unterinstanzen angezeigt wird. Die Instanz "AA" besitzt in Unterinstanz die Bibliothekskomponenten "AAAB" und "AABA". Die Bibliothekskomponente "AAAB" ist nur einfach instanziiert und erhält in der Spalte "INSTANZ" den Anhang "_B". Die Bibliothekskomponente "AABA" wurde zweifach eingesetzt und erhält zur Unterscheidung der Instanznamen in Spalte "INSTANZ" zusätzlich zum Anhang "_B" beispielsweise die Indexe "1" und "2". Die Instanzen "AA", "AAA", "AAB" und "AC" wurden mit den Schaltflächen 1 g, 1 h, 1i und 1k ergänzt.

Nachfolgend werden in Ergänzung noch nicht beschriebene Funktionen des SPV-Bildschirms "INSTANZIIEREN" erläutert. Mit Klick in die Schaltfläche "SCHLIES-SEN" wird der SPV-Bildschirm "INSTANZIIEREN" geschlossen und es verbleibt die SPV-Menüzeile "Z1", Fig.7. Vor dem Schließen des SPV-Bildschirms "INSTANZIIEREN" wird geprüft, ob alle Programmeingaben mit "SPEICHERN" abgeschlossen wurden, wenn nicht, wird die Schaltfläche "SPEICHERN: JA/NEIN" hellgetastet und der SPV-Bildschirm "INSTANZIIEREN" durch Klick in die Schaltfläche SPEICHERN "JA" oder "NEIN" geschlossen. Durch Klick in die Schaltfläche "BEENDEN" wird die Arbeitssitzung beendet und das SPV geschlossen. Vor dem Schließen des SPV wird geprüft, ob alle Programmeingaben mit "SPEICHERN" abgeschlossen wurden, wenn nicht, wird die Schaltfläche "SPEICHERN: JA/NEIN" hellgetastet und das SPV durch Klick in die Schaltfläche SPEICHERN "JA" oder "NEIN" geschlossen. Durch Klick in die Schaltfläche "DRUCKEN" kann beispielsweise der Ausdruck einer aktuellen Bildschirm-Darstellung erfolgen.

Die Funktionen "KOPIEREN" und "EINFÜGEN" werden beispielsweise benutzt, wenn eine Komponente aus der Bibliothek mehrfach eingesetzt wird und die Komponente nur einmal aus der Bibliothek geholt wurde. Hierzu wird die entsprechende Komponente in der Spalte "KOMP AUS BIBLIOTHEK" durch Klick markiert und nachfolgend durch Klick in die Schaltfläche "KOPIEREN" kopiert. Anschließend werden ein oder mehrere Felder, in das bzw. in die die Komponente eingefügt werden soll, in der Spalte "KOMP AUS BIBLIOTHEK" durch Klick markiert und die vorher kopierte Komponente durch Klick in die Schaltfläche "EINFÜGEN" eingefügt. Beim Einfügen einer Komponente in Spalte "KOMP AUS BIBLIOTHEK" erfolgt automatisch der Eintrag in die Spalten "ENTWICKL-STAND" und "BEMERKUNGEN".

"KOPIEREN" und "EINFÜGEN" kann auch in den Spalten "INSTANZ", "VERS", "DATUM" und "BEMERKUNGEN" benutzt werden. Soll nach einer oder mehreren Eingaben beliebiger Art der Stand vor einer oder mehreren Eingaben wieder hergestellt werden, so wird dies durch einen oder mehrere Klicks in die Schaltfläche "RÜCKGÄNGIG" erreicht. In umgekehrter Richtung wird durch einen oder mehrere Klicks in die Schaltfläche "WIEDERHOLEN" der Eingabestand vor "RÜCK-GÄNGIG" wieder hergestellt. Mit der Pfeilanordnung in Spalte "LEVEL" der Doppelzeile "Z3" kann mit je einem Klick auf den rechten Pfeil 100 die Spalte "LEVEL" um je einen Level erweitert, mit je einem Klick auf den linken Pfeil 102 um je einen Level, bis beispielsweise minimal vier Levels, reduziert werden.

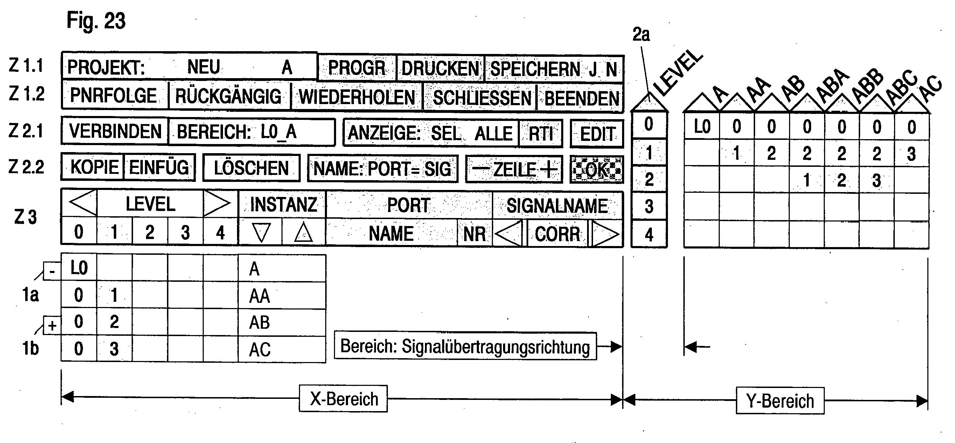

### Beschreibung zu Fig.23-61:

Nachdem die Instanziierung anhand des SPV-Bildschirms "INSTANZIIEREN" erläutert wurde, soll nachfolgend die Erstellung von Signalverbindungen zwischen den Instanzen und zwischen den Instanzen und dem Toplevel mit dem SPV-Bildschirm "VERBINDEN" beschrieben werden. Für eine SPV-Bildschirm-Umschaltung von "INSTANZIIEREN" auf "VERBINDEN" wird mit "Klick der linken Maustaste", nachfolgend nur "Klick" genannt, in die Schaltfläche "PROGR" der Menüzeile "Z1", Fig.8, ein Programmfenster geöffnet, in dem durch Klick in die Schaltfläche "VERBINDEN" die Programmauswahl getroffen wird. Mit erneutem Klick in die Schaltfläche "PROGR" wird das Programmfenster geschlossen und der SPV-Bildschirm "VERBINDEN" für das Projekt "A" geöffnet, wie Fig.23 zeigt. Hierbei besitzen die Instanzen "AA" und "AC" noch keine Unterinstanzen, die Instanz "AB" gliedert sich in die Unterinstanzen "ABA", "ABB" und "ABC".

Gegenüber dem Bildschirm "INSTANZIIEREN" wurden die Menüzeile "Z1" und die Befehlszeile "Z2" in je zwei Teilzeilen "Z1.1/Z1.2" und "Z2.1/Z2.2" aufgeteilt. Die Doppelzeile "Z3" wurde den Erfordernissen des SPV-Bildschirms "VERBINDEN" angepaßt. Im geöffneten Bildschirm "VERBINDEN" sind folgende Einträge aktiviert, in Zeile Z1.1: die PROJEKT-Bezeichnung mit beispielsweise Projekt "NEU" bzw. Projektname "A", in Zeile Z2.1: das Programm bzw. der Bildschirmtyp "VERBINDEN", im Anzeigefeld BEREICH der Projekt-Toplevel "L0_A" und im Feld ANZEIGE alle Instanzen "ALLE". Der Bildschirmtyp "VERBINDEN" ist in einer X/Y-Matrix-Struktur angeordnet. Unterhalb der Doppelzeile "Z3", im X-Bereich, zeigt Fig.23 die Zeilen für den Projekt-Toplevel "L0_A" und seine Instanzen "AA", "AB" und "AC", die vorher mit dem SPV-Bildschirm "INSTANZIIEREN" instanziiert wurden.

In Spalte "LEVEL" wird der Instanznummernpfad und in Spalte "INSTANZ" der Instanzname angezeigt. Wie beim SPV-Bildschirm "INSTANZIIEREN" wird die Instanzanzeige über eine Verzeichnisbaumstruktur gesteuert. Im Beispiel von Fig.23 werden die Instanzen des Toplevels "A" angezeigt, deshalb besitzt seine Schaltfläche 1a ein "-". Die Unterinstanzen der Instanz "AB" werden nicht angezeigt, entsprechend besitzt ihre Schaltfläche 1b ein "+". Im Y-Bereich wird der Toplevel "A" mit seinen Instanzen und Unterinstanzen komplett angezeigt, im Beispiel sind das "AA", "AB", "ABA", "ABB", "ABC" und "AC". Durch die Levelspalte 2a werden die "LEVEL" waagrecht und die Instanznummernpfade senkrecht angeordnet. Die Instanznamen sind durch Schrägstellung, beispielsweise um 45 Grad, platzsparend über Dreiecke mit den senkrechten Instanznummernpfad-Spalten gekoppelt.

Wie vorstehend beim Bildschirm "INSTANZIIEREN" werden Register-Transfer-Instanzen "RTIn" in "LEVEL" und "INSTANZ-NUMMER" durch Markierung gekennzeichnet. Dabei werden für eine verbesserte Übersicht auch die zugehörigen Dreiecke im Y-Bereich mit markiert. Im Y-Bereich wird, wenn die Schaltfläche "RTI" in Zeile "Z2.1" deaktiviert ist, immer der Toplevel mit seinen gesamten Instanzen und Unterinstanzen angezeigt. Bei aktivierter Schaltfläche "RTI" in Zeile "Z2.1" wird im Y-Bereich nur der Toplevel mit seinen gesamten "RTIn", ohne Zwischeninstanzen, angezeigt.

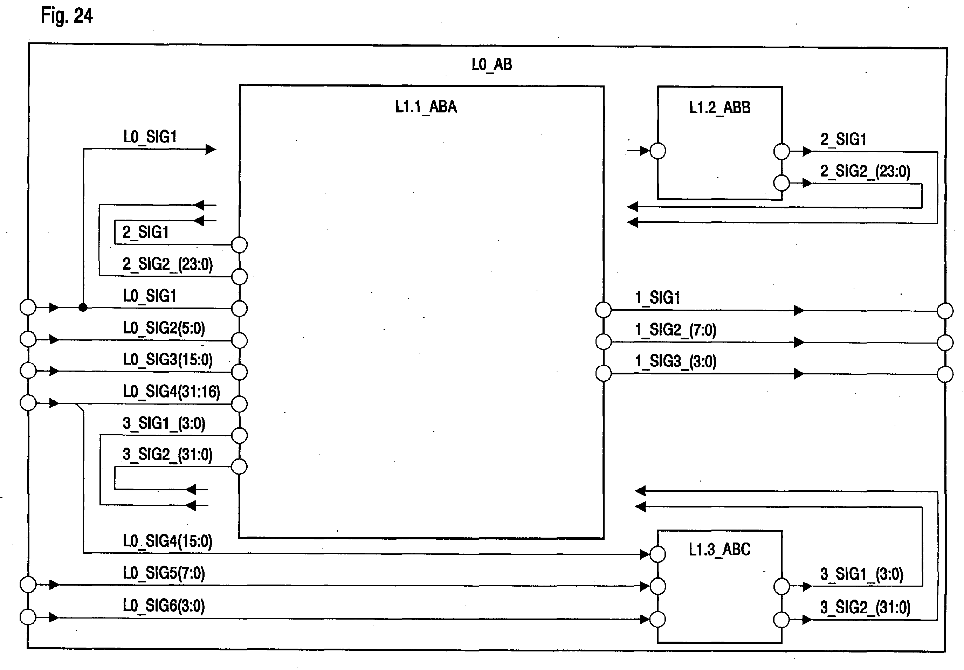

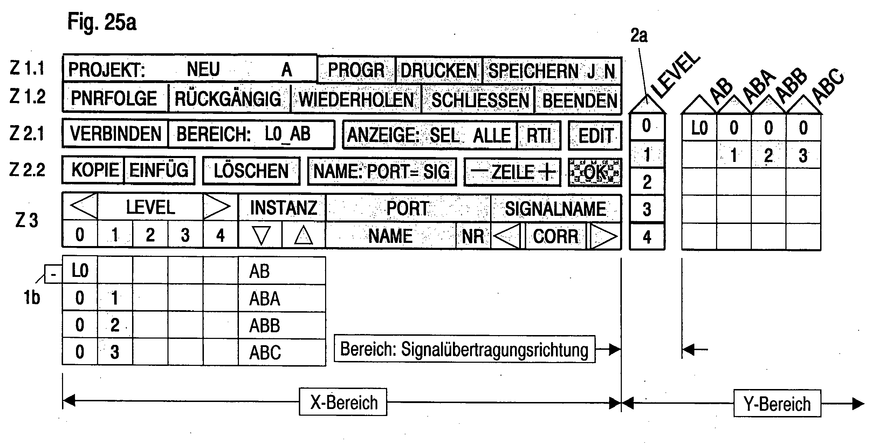

Für die Erstellung von Signalverbindungen im Bildschirm "VERBINDEN" wird die Instanz "AB", mit ihren beispielsweisen Unterinstanzen "ABA", "ABB", "ABC" und ihren Port zu Port Signalverbindungen nach Blockstruktur von **Fig.24** ausgewählt. Diese Blockstruktur dient nur der Erläuterung und ist nicht Gegenstand des erfindungsgemäßen Spezifikationsverfahrens "SPV". Der Toplevel "AB" ist integraler Bestandteil des Projekts "A", wie Fig.23 zeigt, und wurde vorher unter dem SPV-Bildschirm " INSTANZIIEREN" mit seinen Instanzen "ABA", "ABB" und "ABC", die noch keine Unterinstanzen besitzen, instanziiert. Zur Erstellung der Signalverbindungen in der Instanz "AB" wird im Feld "BEREICH" der Eintrag von "L0_A" in "L0_AB" umgeschaltet, wie vorstehend unter dem Bildschirm "INSTANZIIEREN" erläutert. Hierdurch wird in der L0-Zeile die Instanz "AB" als Toplevel und darunter die Instanzen "ABA", "ABB" und "ABC" angezeigt, wie in **Fig.25a** dargestellt.

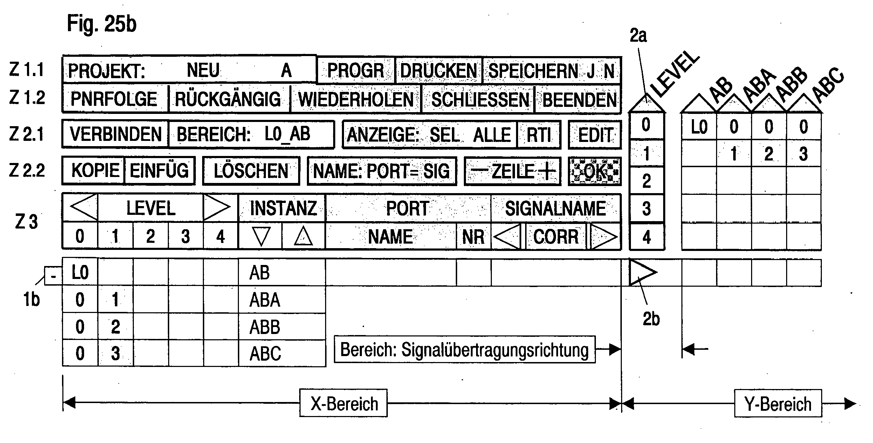

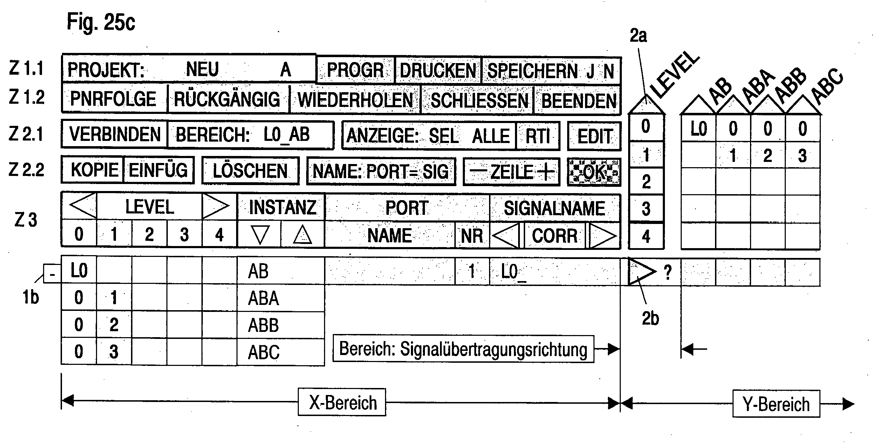

Die Erzeugung von Signalverbindungen gemäß der Blockstruktur von Fig.24 soll beispielsweise mit den Sendesignalen der Toplevel-Inputports begonnen werden. Durch einen Doppelklick in die Schaltfläche "AB" in Spalte "INSTANZ" wird die Toplevelzeile "AB" komplett über den X- und Y-Bereich angezeigt und die Signalübertragungsrichtung vom X-Bereich zum Y-Bereich durch einen Pfeil 2b gekennzeichnet, wie **Fig.25b** zeigt. Durch einen Klick in den Pfeil 2b wird dieser und die gesamte Toplevelzeile "AB" aktiviert bzw. markiert, in Spalte "INSTANZ" wird "AB" nicht markiert, wie **Fig.25c** zeigt. Ausserdem wird in der Toplevelzeile im X-Bereich in der Spalte "SIGNALNAME" die Senderbezeichnung mit Abstands-Unterstrich "L0_", die Portnummer mit "1" und ein Fragezeichen "?" im "Bereich:Signalübertragungsrichtung" automatisch eingetragen. Das "?" bedeutet, daß noch keine Signalverbindung hergestellt wurde.

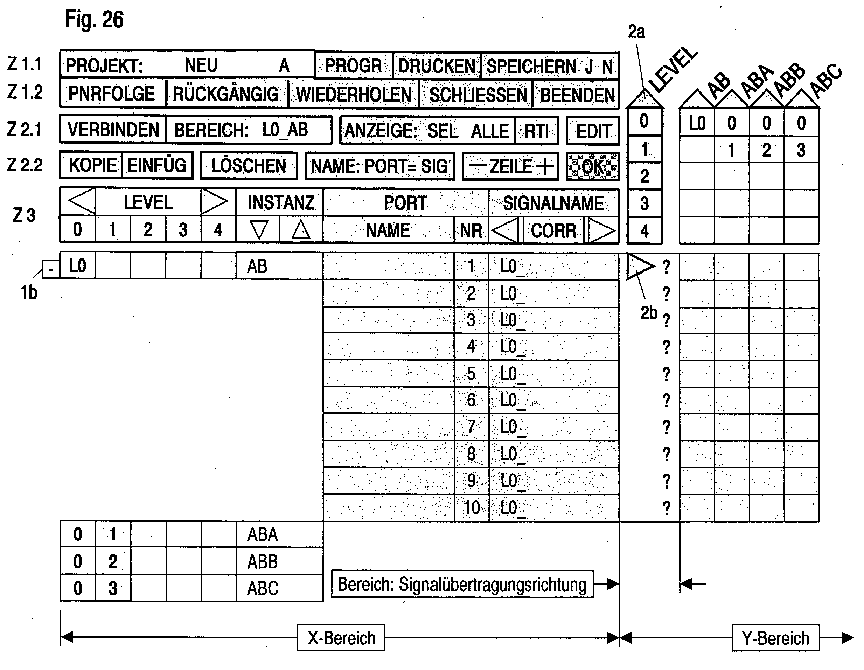

In **Fig.26** wurden durch neun Klicks in die Schaltfläche ZEILE"+" in "Z2.2" neun weitere Signalübertragungszeilen für den Toplevel "AB" generiert. Dabei werden unten angrenzende Instanzen automatisch um die erforderliche Zeilenanzahl nach unten verschoben. Die Sender-Portnummern im X-Bereich werden von oben nach unten, beginnend mit "1", automatisch, aufsteigend erzeugt.

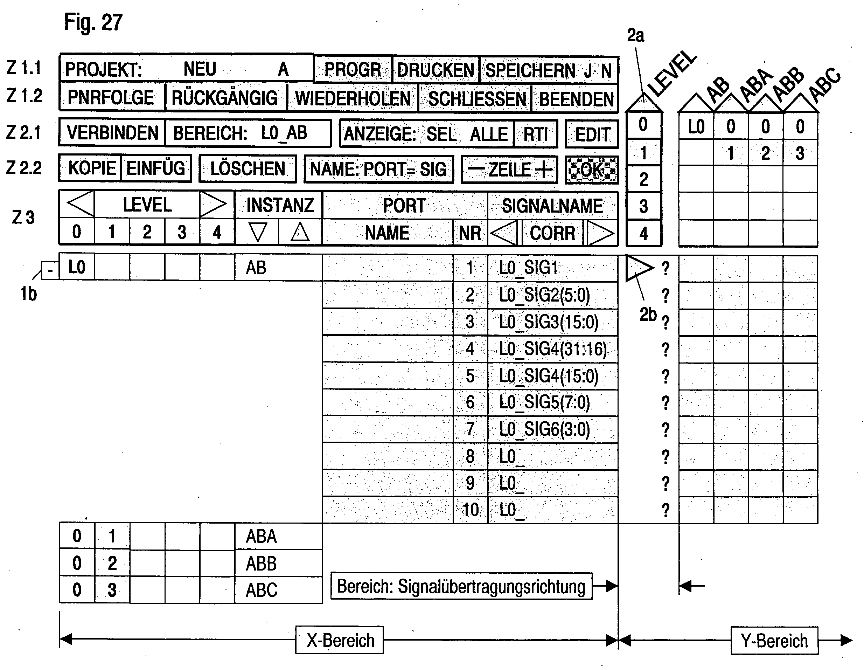

**Fig.27** zeigt für die Sender-Portnummern "1" bis "7" die manuell eingetragenen Signalnamen in Spalte "SIGNALNAME". Manuelle Einträge, Änderungen und Löschungen von Einträgen können nur in aktivierten Verbindungszeilen erfolgen und werden mit den bekannten Mitteln der Textverarbeitung durchgeführt.

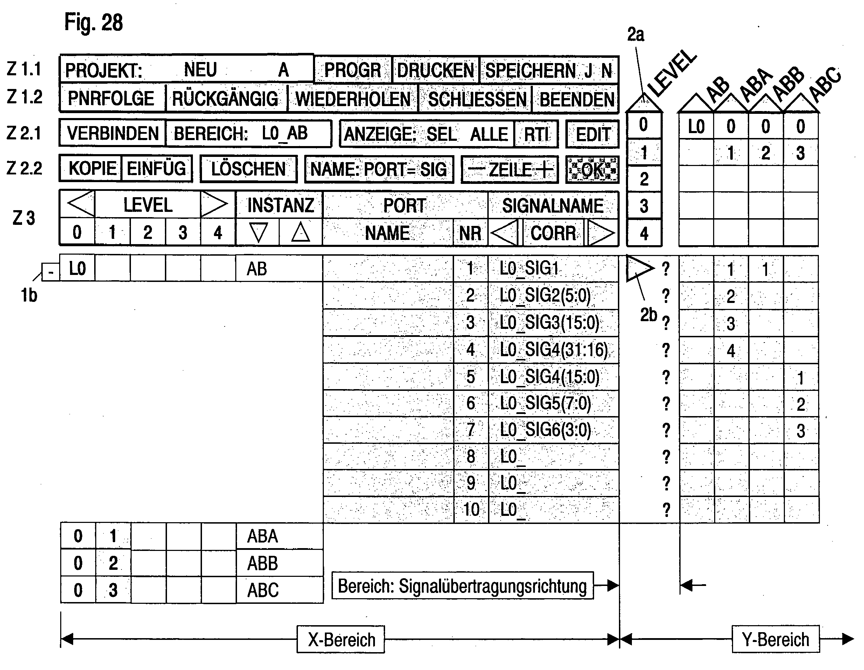

**Fig.28** zeigt die zu den Sender-Portnummern im X-Bereich korrespondierenden Empfänger-Portnummern im Y-Bereich. Die Signalverbindungen entsprechen denen der Blockstruktur von Fig.24. Eine Empfänger-Portnummer im Y-Bereich wird in einer Signalverbindungszeile durch Klick in die Schaltfläche einer Instanzspalte generiert. In einer Instanzspalte wird mit dem ersten Klick die Portnummer "1", mit weiteren Klicks die Portnummern "2", "3", usw., generiert, unabhängig von der Reihenfolge der Signalverbindungszeilen. Ein Klick auf eine bestehende Portnummer im Y-Bereich, bei aktiver Signalverbindungszeile, löscht diese Portnummer ,d. h., der entsprechende Sender im X-Bereich ist wieder ohne Empfänger. Die beim Löschen von Portnummern entstandenen Lücken in der Portnummern-Kontinuität werden automatisch mit Klick in die Schaltfläche "OK" in "Z2.2" geschlossen.

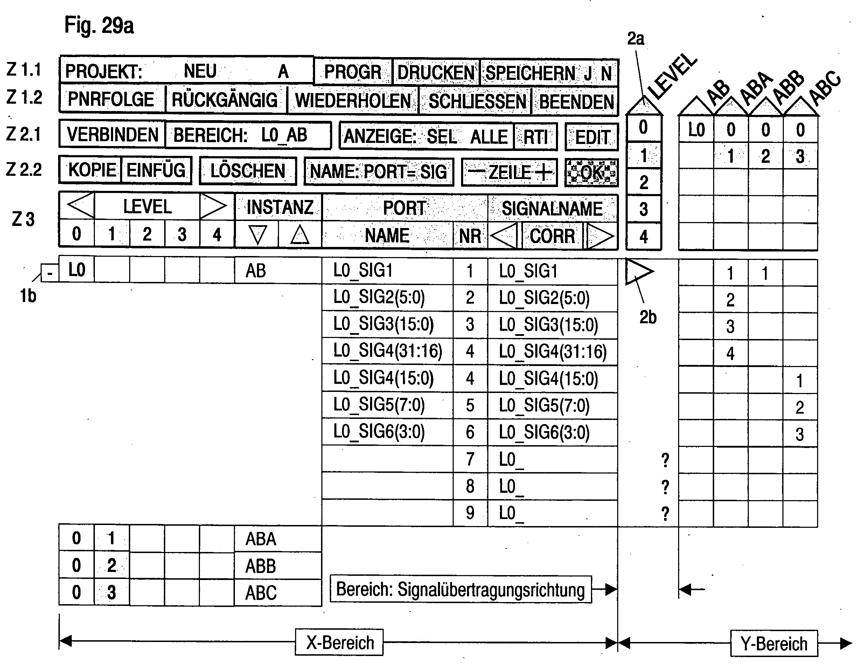

Bei einem Klick in eine Schaltfläche einer vorher gelöschten Portnummer einer Empfangsinstanz, wird gegenüber der höchsten bestehenden Portnummer dieser Empfangsinstanz, eine um Eins erhöhte Portnummer vergeben. Durch Klick in die Schaltfläche "OK" in "Z2.2", werden die Signalverbindungen für die AB-Portnummern "1" bis "6" gültig, der Pfeil 2b und die Signalverbindungszeilen deaktiviert, sowie automatisch für die AB-Portnummern "1" bis "6" in Spalte "PORT-NAME" die Signalnamen eingetragen und die Fragezeichen "?" gelöscht, wie **Fig.29a** zeigt. Ausserdem wird vom Programm automatisch erkannt, daß der Signalvector "L0_SIG4(15:0)" von Portnummer "5", Fig.28, zu Portnummer "4", Fig.29a, gehört und wird mit Bestätigung durch "OK" entsprechend korrigiert. Während die Portnummern-Reihenfolge im X-Bereich von oben nach unten mit "1", "2", "3", usw., automatisch gewährleistet ist, kann sie im Y-Bereich nach Bedarf manuell geändert werden. Hierzu wird die Schaltfläche Portnummernfolge "PNRFOLGE" in "Z1.2" mit einem Klick aktiviert und nachfolgend im Y-Bereich in einer Instanzspalte die gewünschte Zuordnung der Portnummern, durch Klicks in die Schaltflächen der Signalverbindungszeilen in einer entsprechenden Reihenfolge, hergestellt. Für die Herstellung einer Portnummernfolge müssen die beteiligten Signalverbindungszeilen aktiviert sein. Mit Klick in die Schaltfläche "OK" in "Z2.2" wird die Portnummernfolge gültig, die beteiligten Signalverbindungszeilen und die Schaltfläche "PNRFOLGE" in "Z1.2" werden deaktiviert.

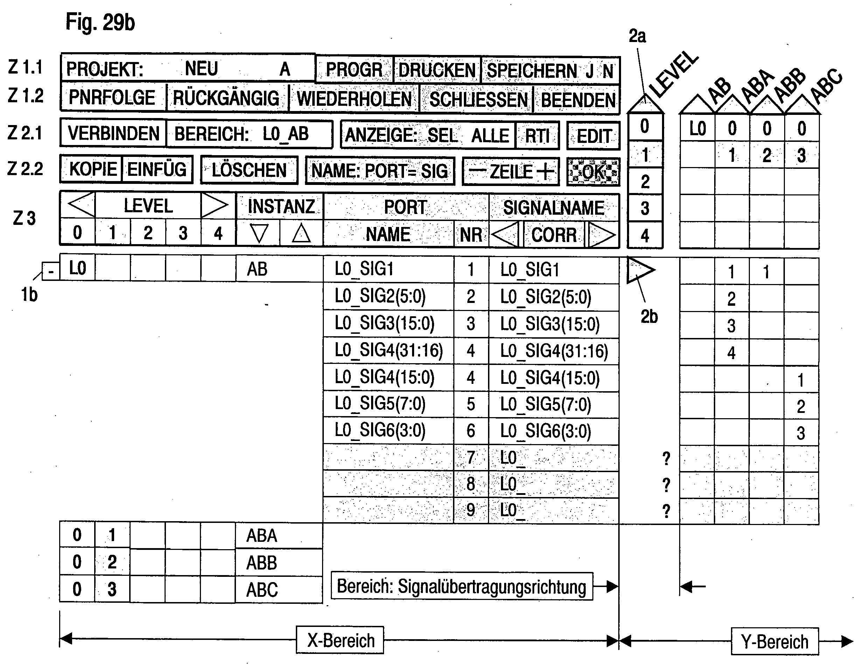

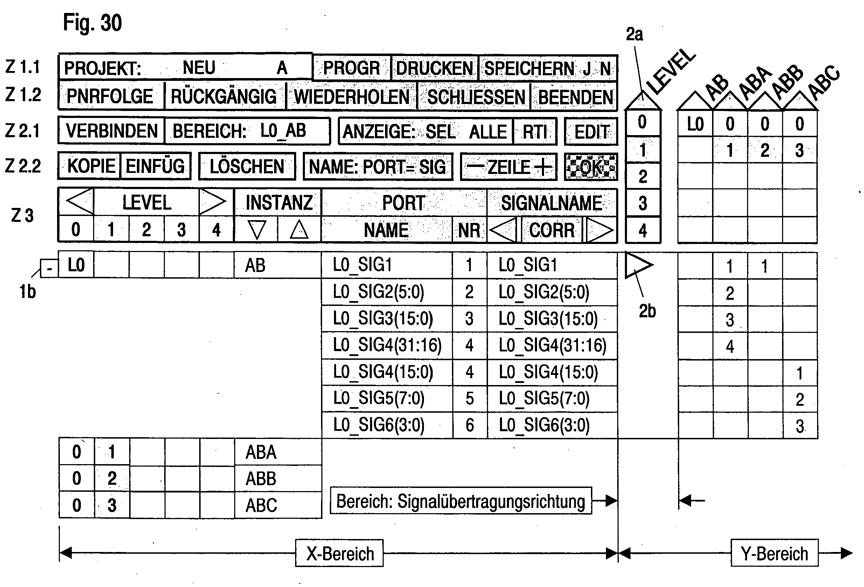

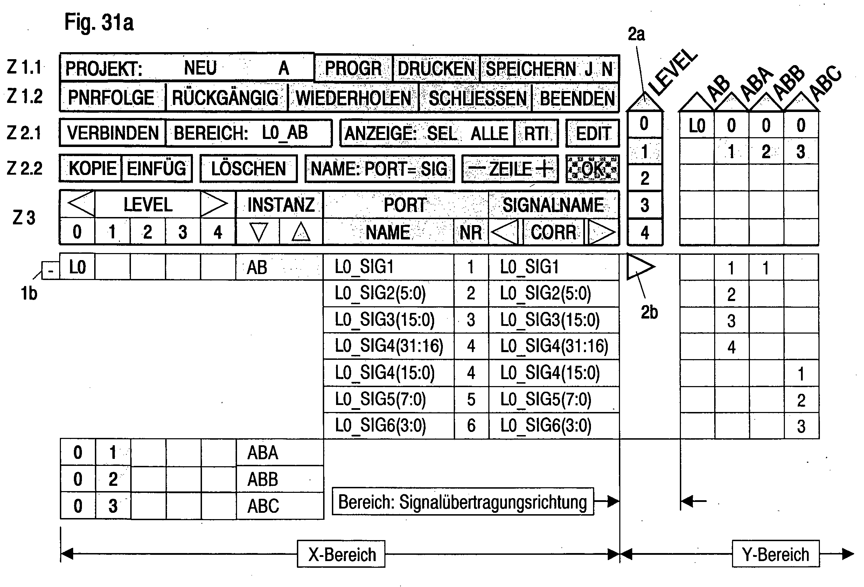

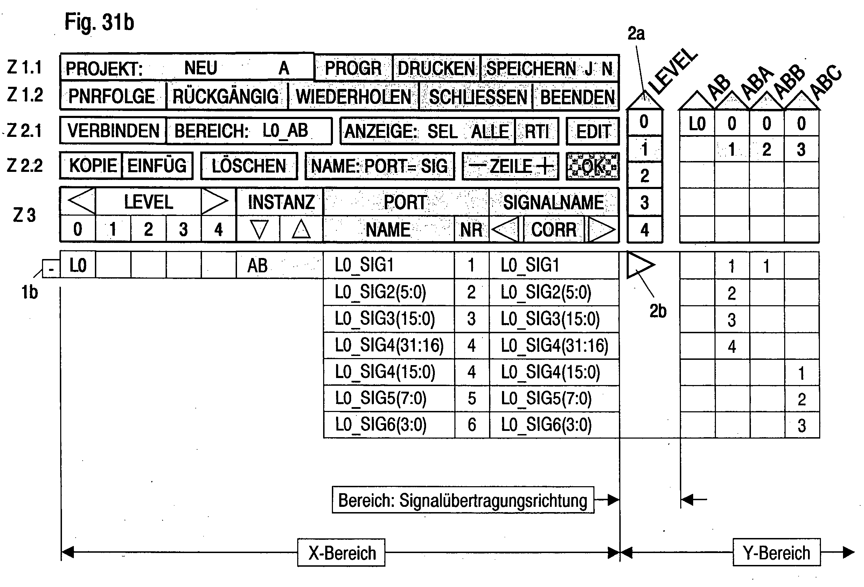

In **Fig.29b** wurden die Signalverbindungszeilen der Sendeports "7", "8" und "9" durch Klicks in ihre Sendeport-Schaltflächen aktiviert. Dabei wird automatisch der Pfeil 2b mit aktiviert. Bei einem Klick in den Pfeil 2b würden alle Signalverbindungszeilen des Toplevels "AB" aktiviert werden. Durch Klick in die Schaltfläche ZEILE"-" in "Z2.2" werden die Signalverbindungszeilen der Portnummern "7", "8", und "9" gelöscht, wie **Fig.30** zeigt. Vorbereitend für eine selektive Darstellung des Toplevels, wurde in Spalte "INSTANZ" seine Schaltfläche "AB" durch Klick aktiviert bzw. markiert, wie **Fig.31a** zeigt. In **Fig.31b** wurde die ANZEIGE:"ALLE" von Fig.31a in "Z2.1" durch einen Klick in die Schaltfläche ANZEIGE:"SEL" umgeschaltet. Hierdurch wurden die nicht aktivierten Instanzen "ABA", "ABB" und "ABC" im X-Bereich von Fig.31a weggeschaltet.

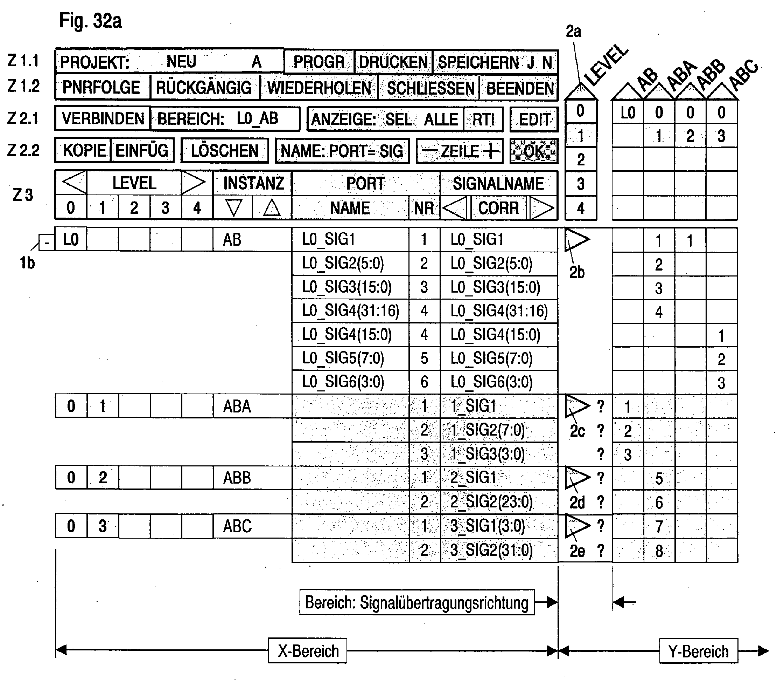

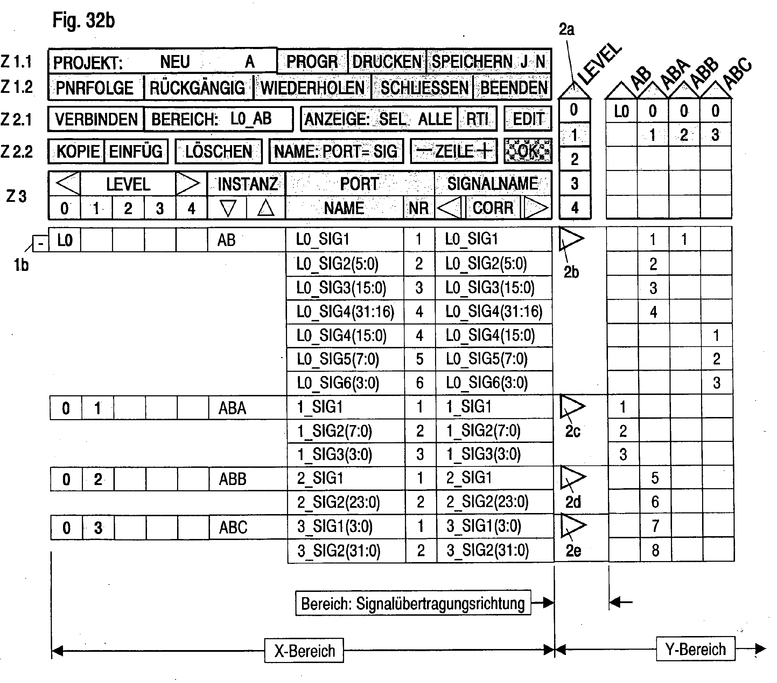

In **Fig.32a** wurde die ANZEIGE:"SEL" wieder auf ANZEIGE:"ALLE" geschaltet und für die Instanzen "ABA", "ABB" und "ABC" im X-Bereich die Sendesignale nach Fig.24 generiert, sowie die Signalverbindungen im Y-Bereich zum Abschluß gebracht. Die Generierung dieser Signalverbindungen ist in der Vorgehensweise identisch zu der unter Fig.25a bis Fig.28 beschriebenen Vorgehensweise. In **Fig.32b** wurden mit Klick in die Schaltfläche "OK" in "Z2.2" die Portnamen identisch zu den Signalnamen automatisch eingetragen, die Signalverbindungszeilen und die Pfeile 2c, 2d, 2e deaktiviert, sowie die "?" weggeschaltet.

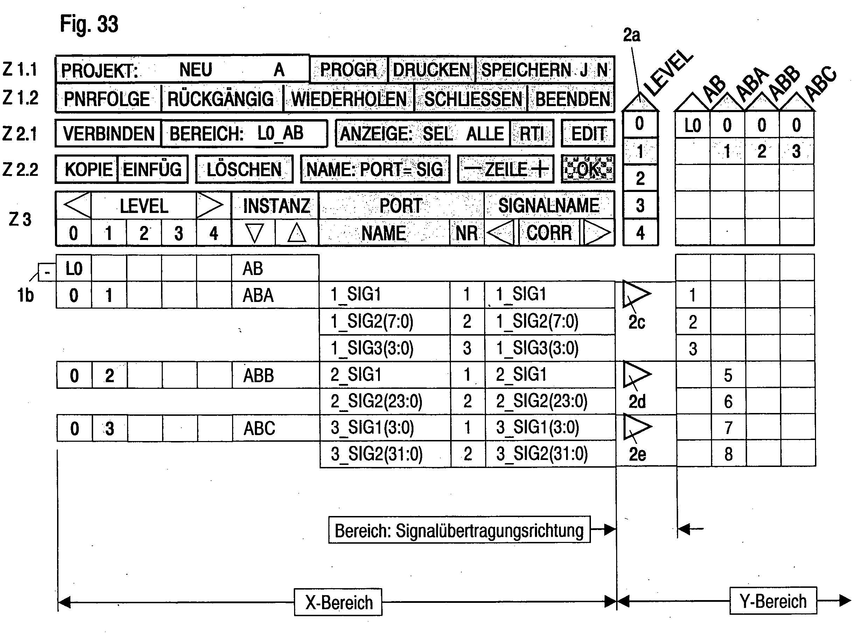

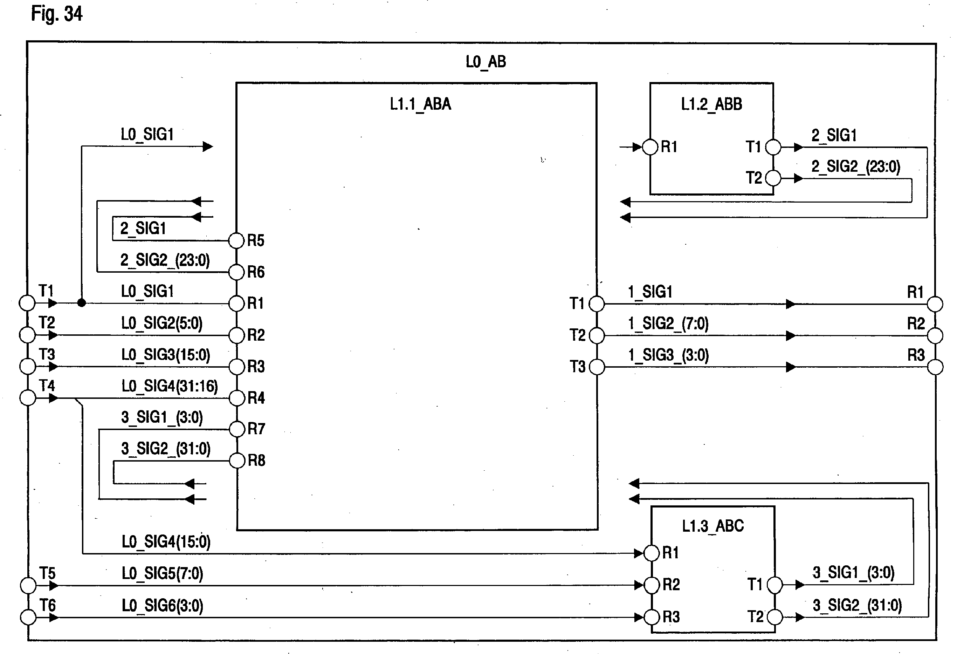

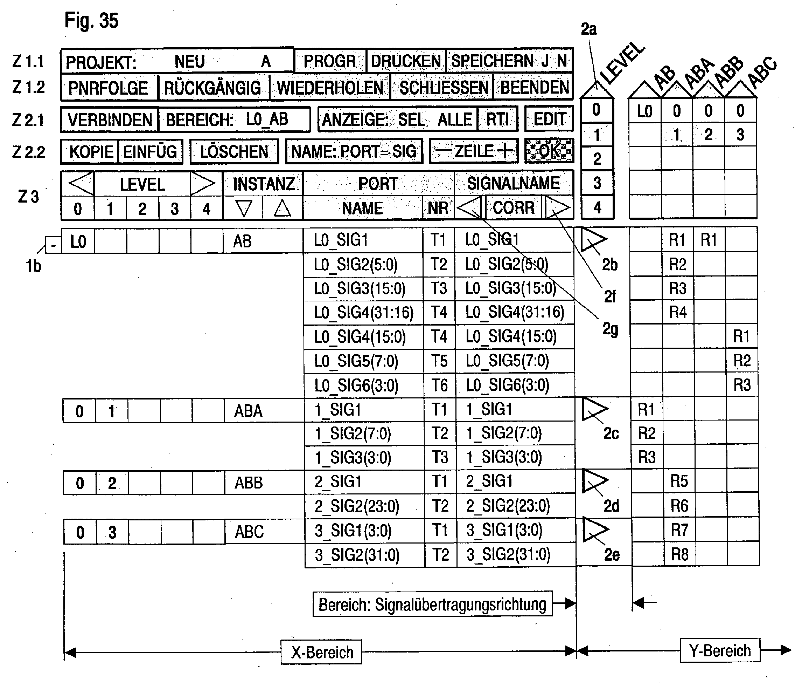

In **Fig.33** wurden durch einen Doppelklick in die Schaltfläche "AB", in Spalte "INSTANZ", die Signalverbindungszeilen für den Toplevel "AB" weggeschaltet. Nachdem die Sendeports und die Empfangsports mit der Portnummer "1" beginnen, ergibt sich bei einer Instanz immer eine Überdeckung der Portnummern. In Fig.32b sind dies beim Toplevel "AB" die Ports 1, 2, 3, bei der Instanz "ABA" die Ports 1, 2, 3, bei der Instanz "ABB" der Port 1 und bei der Instanz "ABC" die Ports 1, 2. Für eine übersichtliche Darstellung und sichere Unterscheidung von Sende- und Empfangs-Ports des Toplevels und seinen Instanzen, werden einem Sendeport ein "T" (Transmit) und einem Empfangsport ein "R" (Receive) vorangestellt, wie in der Blockstruktur, **Fig.34****,** und in der SPV-Bildschirmdarstellung, **Fig.35****,** dargestellt. Dabei ist die Signalübertragungsrichtung für den Toplevel "AB" und seine Instanzen "ABA", "ABB" und "ABC" vom "X-Bereich" zum "Y-Bereich" ausgerichtet, wie die Pfeile 2b, 2c, 2d und 2e zeigen.

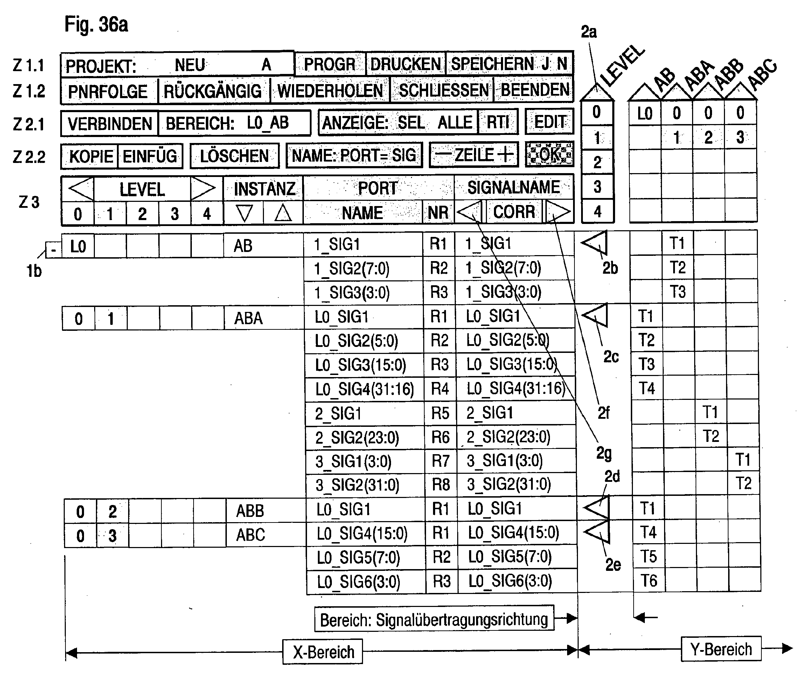

In **Fig.36a** wurde durch Klick in den Pfeil 2g die Signalübertragungsrichtung vom Y-Bereich zum X-Bereich umgeschaltet. In dieser Signalübertragungsrichtung werden aus Gründen der Vereinfachung und Übersichtlichkeit, die Signalverbindungen nur inaktiv angezeigt, d. h., es ist keine Spezifikation von Signalverbindungen möglich. Ausnahme ist, wie später gezeigt wird, die Spezifizierung von Korrekturen für bestehende Signalverbindungen. Mit Klick in den Pfeil 2f kann die Signalübertragungsrichtung wieder vom "X-Bereich" zum "Y-Bereich", Fig.35, umgeschaltet werden.

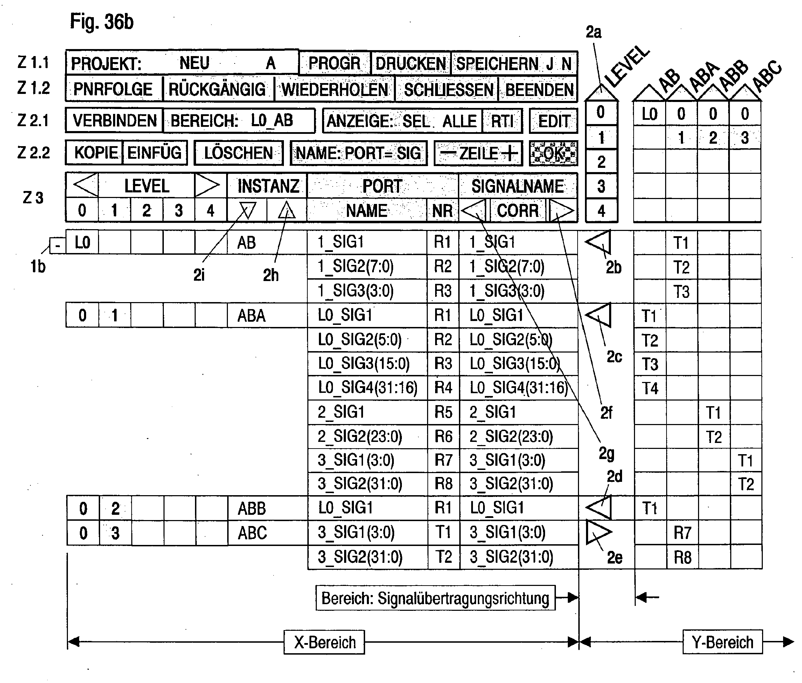

In **Fig.36b** wurde durch Doppelklick in den Pfeil 2e die Signalübertragungsrichtung für die Instanz "ABC" selektiv vom "X-Bereich" zum "Y-Bereich" umgeschaltet. In gleicher Weise kann die Signalübertragungsrichtung durch Doppelklicks in die Pfeile 2b, 2c, 2d, für den Toplevel "AB" bzw. seine Instanzen "ABA" und "ABB" selektiv umgeschaltet werden.

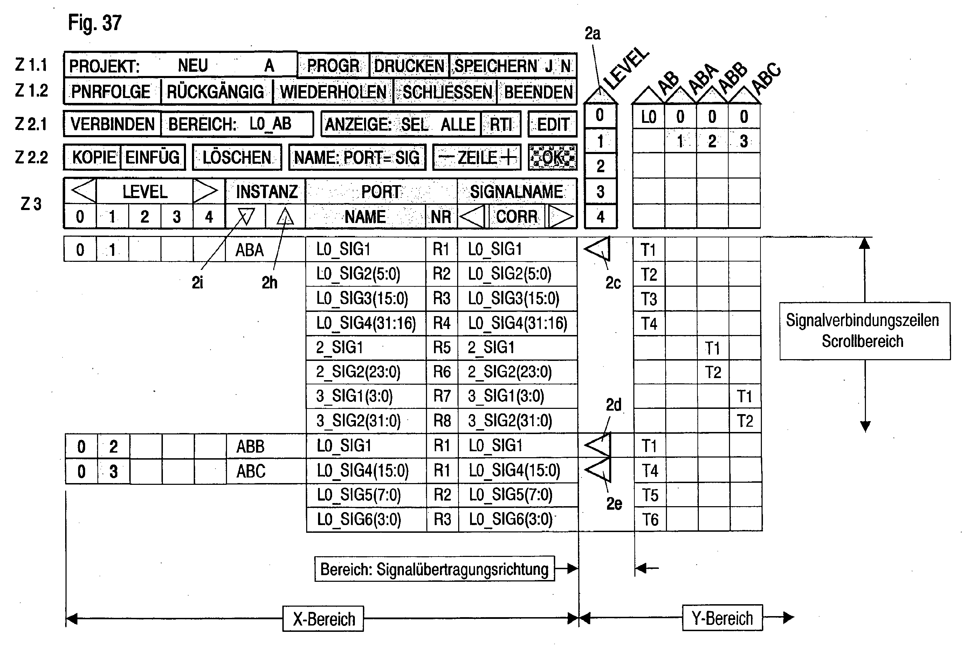

In **Fig.37** wurde durch Klick in den Pfeil 2h der Toplevel "AB" mit seinen Verbindungszeilen von Fig.36b nach oben weggeschaltet, die Instanz "ABA" mit ihren Verbindungszeilen rückt an die Stelle der ersten Verbindungszeile unterhalb von "Z3" nach und die nachfolgenden Instanzen, "ABB", "ABC", behalten lückenlos ihren Abstand zur Instanz "ABA". Durch einen weiteren Klick in den Pfeil 2h kann die Instanz "ABA" mit ihren Verbindungszeilen nach oben weggeschaltet werden und "ABB" nimmt den Platz von "ABA" ein, usw.. Bei einem Klick in den Pfeil 2i wird die letzte, weggeschaltete Instanz an die Stelle der ersten Verbindungszeile unterhalb von "Z3" zurückgeholt. Die Instanzen unterhalb der zurückgeholten Instanz rücken nach unten nach und behalten ihren jeweils ursprünglichen Abstand zur obersten Instanz.

Für den Toplevel oder eine Instanz, der/die an der Stelle der ersten Signalverbindungszeile unterhalb von "Z3" plaziert ist, Fig.37, können mit einem an der rechten Bildschirmseite üblichen, senkrecht wirkenden Scrollbalken (nicht dargestellt), ein beliebig großer Signalverbindungszeilen-Bereich bewegt bzw. sichtbar gemacht werden. Dabei stehen die Felder im X-Bereich in der Spalte "LEVEL" und "INSTANZ" sowie der Pfeil für die Signalübertragungsrichtung an der Stelle der ersten Signalverbindungszeile unterhalb von "Z3" fest. Die darunter liegenden Instanzen "ABB" und "ABC" mit ihren Signalverbindungszeilen werden dabei synchron bewegt.

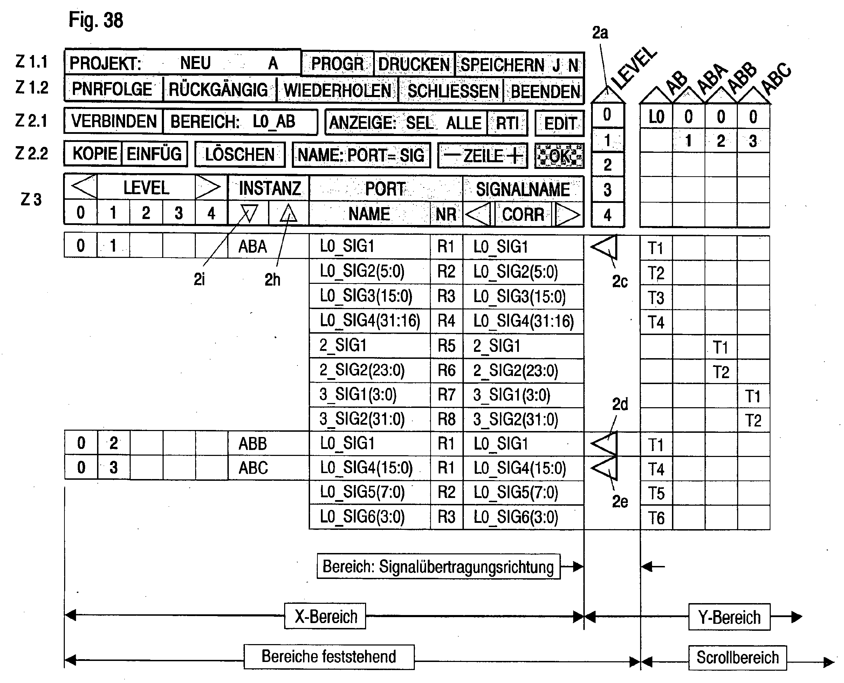

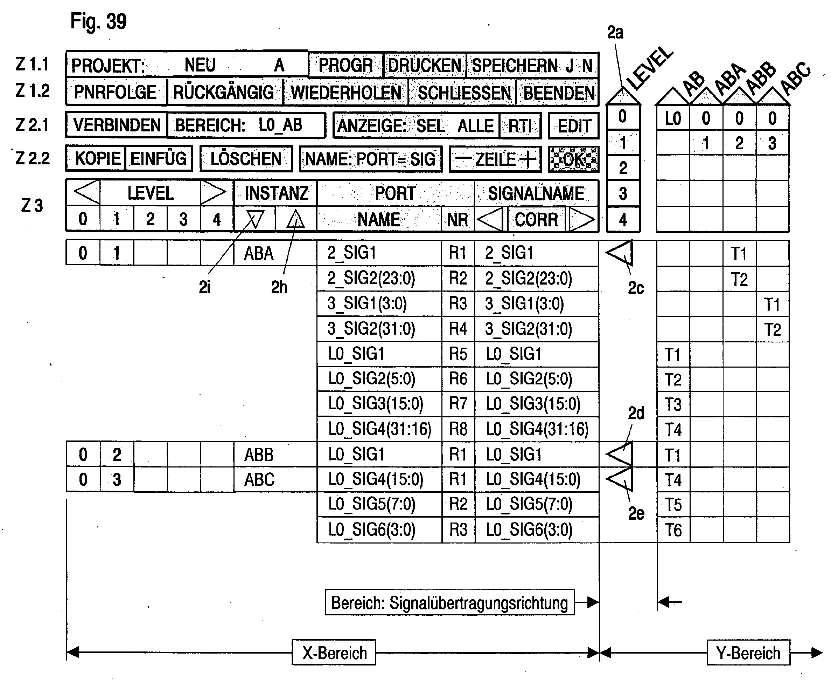

Analog hierzu kann durch einen waagrechten Scrollbalken (nicht dargestellt) ein beliebig breiter Y-Bereich mit seinen Instanzen sichtbar gemacht werden, wie in **Fig.38** dargestellt. Der "X-Bereich" und der "Bereich:Signalübertragungsrichtung" wird dabei nicht bewegt. Mit der Funktion "EDIT", die Handhabung wurde unter dem Bildschirm "INSTANZIIEREN" beschrieben, kann die Signalnamen-Reihenfolge geändert werden. Beispielsweise werden die Signalverbindungszeilen der Portnummern R5 bis R8 im X-Bereich der Instanz "ABA" von Fig.37 bzw. Fig.38 nach oben an die Stelle der Portnummern R1 bis R4 geschoben, wie **Fig.39** zeigt. Die bisher mit dem SPV-Bildschirm "VERBINDEN" behandelte Instanziierung nach Blockstruktur von Fig.24 bzw. Fig.34 wurde für die Instanz "A-BA" um die Unterinstanzen "ABAA", "ABAAA", "ABAAB", "ABAAC", "ABAAD" und "ABAB" erweitert.

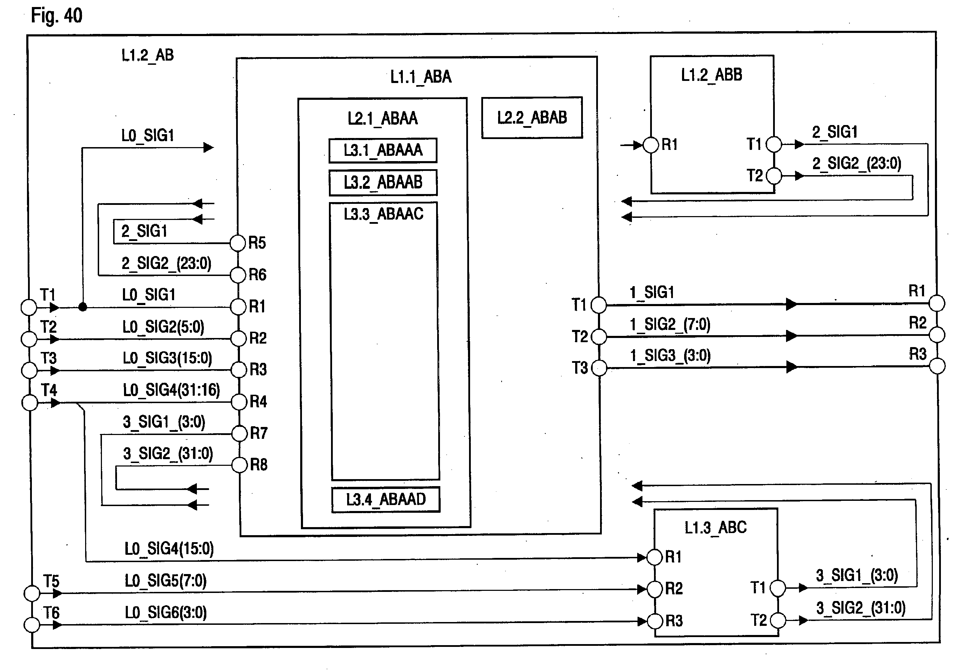

Hierzu zeigt die Blockstruktur von **Fig.40** die Erweiterung der Instanziierung und die bisherigen Signalverbindungen. Die erweiterte Instanziierung wurde vorher mit dem SPV-Bildschirm "INSTANZIIEREN" erzeugt. Nach Umschaltung vom SPV-Bildschirm "INSTANZIIEREN" auf den SPV-Bildschirm "VERBINDEN", zeigt **Fig.41a** die erweiterte Instanziierung mit den Schaltflächen 1b"-", 1c"-", 1d"-" und damit die Darstellung aller Instanzen. Dabei ist die Bibliotheksinstanz "ABAAB" im X- und Y-Bereich durch eine verstärkte Umrandung gekennzeichnet. Für die nächsten Spezifikationsschritte wurde der Toplevel "AB" und die Instanzen "ABA", "ABB", "ABC" ausgewählt und durch Klick aktiviert bzw. markiert, wie **Fig.41b** zeigt.

In **Fig.42** wurde in "Z2.1" die "ANZEIGE:ALLE" von Fig.41b durch Klick in die Schaltfläche "SEL" umgeschaltet. Hierdurch wurden die nicht ausgewählten Instanzen weggeschaltet. Ausserdem wurden durch je einen Doppelklick in die Schaltflächen "AB", "ABA", "ABB" und "ABC", in Spalte "INSTANZ", die Signalverbindungszeilen mit den bestehenden Signalverbindungen eingeschaltet. In der Schaltfläche Korrektur "CORR" in "Z3" wird durch ein Fragezeichen "?" angezeigt, daß Signalverbindungen angepaßt werden müssen.. Im Beispiel wurde die Instanz "ABA" von einer "RTI" durch die Erweiterung um Unterinstanzen zu einer Zwischeninstanz und erfordert deshalb eine Anpassung der Signalverbindungen zu bzw. von Ihren "RTIn", "ABAAA", "ABAAB", "ABAAC", "ABAAD" bzw. "ABAB".

In **Fig.43a** wurde in "Z3" die Schaltfläche "CORR?" durch Klick aktiviert. Hierdurch werden für "ABA" die zu korrigierenden Signalverbindungen im X-Bereich mit einem "?" an Stelle "T" und im Y-Bereich mit einem "?" an Stelle "R" angezeigt. Zunächst erfolgt die Anpassung der ABA-Input-Signalverbindungen, vorbereitend durch Kicks in die Pfeile "2b", "2d" und "2e". Hierdurch werden die Pfeile und die anzupassenden Signalverbindungszeilen aktiviert bzw. markiert, wie **Fig.43b** zeigt. Die Signalverbindungszeilen im Y-Bereich werden dabei nur in den ABA-RTI-Spalten "ABAAA", "ABAAB", "ABAAC", "ABAAD" und "ABAB" aktiviert bzw. markiert.

Die Blockstruktur von **Fig.44** zeigt die anzupassenden Signalverbindungen. Dabei gelten die Portbezeichnungen wie vorangegangen erläutert, "T" für Transmit, "R" für Receive, zusätzlich an den Zwischeninstanzen "I" für Input und "O" für Output. In **Fig.45** wurden im Y-Bereich in Spalte "ABAAC" durch Klicks in die Schaltflächen der aktivierten Signalverbindungszeilen die Empfangsports "R1" bis "R8" eingetragen. Mit Klick in die Schaltfläche "OK" in "Z2.2" werden die angepaßten Signalverbindungszeilen und die zugehörigen Pfeile für die Signalübertragungsrichtung deaktiviert bzw. demarkiert und die angepaßten Signalverbindungen mit Transmit "T", Input "I" und Receive "R" dargestellt, wie **Fig.46** zeigt. Ausserdem wurde die Schaltfläche "CORR?" in "Z3" deaktiviert, das "?" bleibt erhalten, da die Signalverbindungen im ABA-Sendeweg noch anzupassen sind.

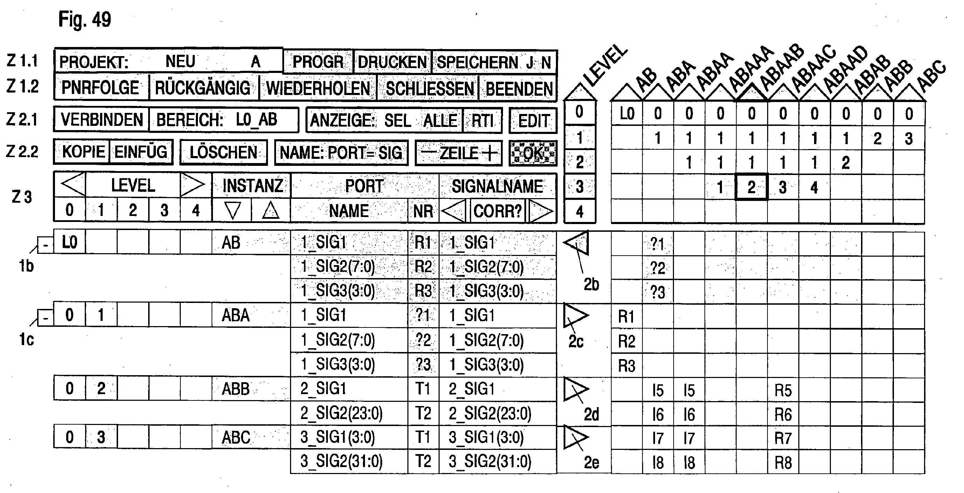

Mit erneutem Klick in die Schaltfläche "CORR?" in "Z3", **Fig.47****,** wird der noch anzupassende ABA-Sendeweg in Spalte "PORT-NR" durch Aktivierung bzw Markierung der Schaltflächen "?1", "?2" und "?3" angezeigt. Durch Klick in den Pfeil 2c werden für die ABA-Portnummern "?1", "?2", "?3", die Signalverbindungszeilen im X-Bereich und die Schaltflächen "R1" bis "R3" in Spalte "AB" im Y-Bereich sowie der Pfeil 2c aktiviert bzw. markiert, wie **Fig.48** zeigt. Für eine vereinfachte Durchführung der Korrektur bzw. Ergänzung der Signalverbindungen nach Blockstruktur von Fig.44 ist es vorteilhaft, die AB-Empfangsports "R1", "R2", "R3", mit ihren Signal-/Port-Namen in den X-Bereich zu transferieren und die neuen Sendeports der RTI "ABAAC" im Y-Bereich zu aktivieren. Dies erfolgt bei aktivierter Schaltfläche "CORR?" in "Z3", durch Doppelklick in den Pfeil 2c, Fig.48, und ist in **Fig.49** dargestellt. Dabei werden für die AB-Portnummern "R1", "R2", "R3", die Signalverbindungszeilen im X-Bereich, der Pfeil 2b und die Portnummern "?1", "?2", "?3" in Spalte "ABA" im Y-Bereich aktiviert bzw. markiert. Ausserdem werden beispielsweise im Y-Bereich in den zugehörigen Signalverbindungszeilen die Schaltflächen der möglichen Sende-RTIn aktiviert bzw. markiert.

In **Fig.50** wurden, entsprechend Blockstruktur Fig.44, im Y-Bereich die ABAAC-Sendeports "T1", "T2" und "T3" durch Klicks eingetragen. Mit Klick in die Schaltfläche "OK" in "Z2.2" werden die aktivierten bzw. markierten Schaltflächen von Fig.50, inklusive "CORR?" in "Z3", deaktiviert bzw. demarkiert und die kompletten Signalverbindungen von den Sendeports "T" der RTI "ABAAC" über die Outputports "O" der Instanzen "ABA" und "ABAA" zu den Empfangsports "R" des Toplevel-Outputs "AB" dargestellt, wie **Fig.51a** zeigt. Nachdem keine Sende-/Empfangs-Signalverbindungen mehr an Zwischeninstanzen enden, wurde das Fragezeichen "?" mit Klick in die Schaltfläche "OK" in "Z2.2" automatisch gelöscht. Generell gilt: Ports für Durchgangsinstanzen werden vom SPV automatisch generiert und Klicks im Y-Bereich werden nur in RTI-Ports vom SPV akzeptiert, Klicks in Ports von Durchgangsinstanzen bleiben ohne Wirkung. Ausserdem gilt: Wird durch Neuinstanziierung eine "RTI", die Sende- oder/und Empfangs-Signalverbindungen besitzt, zu einer Zwischeninstanz umgewandelt, oder wird ein Toplevel, der an den Inputports Sende-Signalverbindungen oder/und an den Outputports Empfangs-Signalverbindungen besitzt, in einen höheren Toplevel instanziiert, dann wird nach der Instanziierung, mit dem Aufruf des Programms "VERBINDEN", automatisch in der Schaltfläche Korrektur "CORR" ein Fragezeichen "?" gesetzt.

In **Fig.51b** wurde durch Klick in die Schaltfläche "RTI" in "Z2.1" der Y-Bereich nur mit dem Toplevel "AB" und seinen RTIn, ohne Zwischeninstanzen, dargestellt.

**In** **Fig.52a** wurde die Anzeige in "Z2.1" von "SEL" auf "ALLE" umgeschaltet und es wurden über die Schaltflächen 1b, 1c, 1 d, alle Instanzen, Unterinstanzen und RTIn des Toplevels "AB" zur Darstellung gebracht. Dabei zeigt die Instanz "ABA" mit "O1 bis "O3" eine Teilsignalverbindung zum Toplevel "AB" mit "R1" bis "R3", die Gesamtsignalverbindung ist von der RTI "ABAAC" mit "T1" bis "T3" zum Toplevel "AB" gegeben, wie auch aus dem Y-Bereich von Fig.51a hervorgeht.

In **Fig.52b** sind die Signalverbindungszeilen von "ABA", durch Doppelklick in die Schaltfläche "ABA" in Spalte "INSTANZ", weggeschaltet.

Nachfolgend wird der Toplevel "AB" mit seinen Instanzen und Unterinstanzen von Fig.44 in einen höheren Toplevel "A" instanziiert, wie die Blockstruktur von **Fig.53a** zeigt. Auf dem Toplevel "A" sind zwei Level1-Instanzen "AA" und "AB" dargestellt. Die Signalverbindungen in der Instanz "AB" sind identisch zu denen des Toplevels "AB" von Fig.44, die den Signalnamen vorgeschalteten Pfadnummern, die jeweils die Sendeinstanz repräsentieren, sind dem L1-Level bzw. der Instanz-Pfadnummer "2" angepaßt. Nach Instanziierung der Komponenten von Fig.53a und Umschaltung in den Bildschirm des Programms "VERBINDEN" zeigt **Fig.53b** den Toplevel "A" mit den Instanzen "AA" und "AB" sowie allen Unterinstanzen von "AB". Die Instanz "AA" ist eine "RTI", da sie keine Unterinstanzen besitzt. Auf Grund der fehlenden, externen Signalverbindungen an den Ports der Zwischeninstanz "AB", wird beim Einschalten des Programms bzw. des Bildschirms "VERBINDEN" automatisch in die Schaltfläche Korrektur "CORR" ein Fragezeichen "CORR?" gesetzt. Für die Bearbeitung wurden durch Klicks in die Schaltflächen "A", "AB", "ABAAC", "ABB und "ABC" in Spalte "INSTANZ" diese ausgewählt bzw. aktiviert, wie **Fig.53c** zeigt. Durch Klick in die Schaltfläche "ANZEIGE:SEL" in "Z2.1" wurden die nicht aktivierten Instanzen weggeschaltet, die Schaltflächen 1 a und 1b sind dabei für die Anzeige von Instanzen wirkungslos, wie **Fig.53d** zeigt. Durch je einen Doppelklick in die Schaltflächen der Instanzen "AB", "ABAAC", "ABB" und "ABC" werden ihre Signalverbindungen mit den angepaßten Pfadnummern angezeigt, die bisher entsprechend der Blockstruktur von Fig.44 realisiert wurden, wie in **Fig.53e** dargestellt.

In **Fig.53f** wurde durch Klick in die Schaltfläche Korrektur "CORR?" diese aktiviert. Hierdurch werden die Ports der AB-Zwischeninstanz, die keine externe Signalverbindung besitzen, mit Markierung und an den Stellen von "T" bzw. "R" mit einem "?" angezeigt. Das betrifft in Fig.53f die sechs AB-Inputports, die nach innen senden und die drei AB-Outputports, die von innen angesteuert werden. Der AB-Inputport "4" benötigt zwei Signalverbindungszeilen, da er ein Vector-Splitting "(31:16)/(15:0)" besitzt.

In der Blockstruktur von **Fig.54a** sind die Signalverbindungen von der Instanz "AA" zur Instanz "AB" und von der Instanz "AB" zu den Outputports des Toplevels "A" dargestellt, die nachfolgend im Bildschirm "VERBINDEN" realisiert werden. Blockstrukturen, im Beispiel die von Fig.54a, dienen nur der Erläuterung und sind nicht Gegenstand des SPV. Zunächst werden die drei Signalverbindungen des Senders "ABAAC" korrigiert bzw. ergänzt. Hierzu wurden, wie **Fig.54b** zeigt, die drei Signalverbindungszeilen durch Klick in den Pfeil 2c aktiviert bzw. markiert. Dabei wurden im Y-Bereich beispielsweise die Schaltflächen der möglichen Empfänger "A" und "AA" automatisch mit aktiviert bzw. markiert und in Spalte "AB" die Empfangsports mit einem "?" gekennzeichnet. Die Kennzeichnung bzw. Aktivierung möglicher Empfänger im Y-Bereich ist, wie aus der vorstehenden Beschreibung ersichtlich, für die Korrektur von Signalverbindungen nicht erforderlich.

In **Fig.54c** wurde im Y-Bereich der Toplevel "A" als Empfänger ausgewählt und in der Klick-Reihenfolge der Eintrag in den Schaltflächen mit "R1", "R2", "R3" durchgeführt. Mit Bestätigung der Korrektur durch Klick in die Schaltfläche "OK" in "Z2.2" werden die ABAAC-Signalverbindungszeilen, der Pfeil 2c und die Schaltfläche "CORR?" in "Z3" deaktiviert, wie **Fig.54d** zeigt.

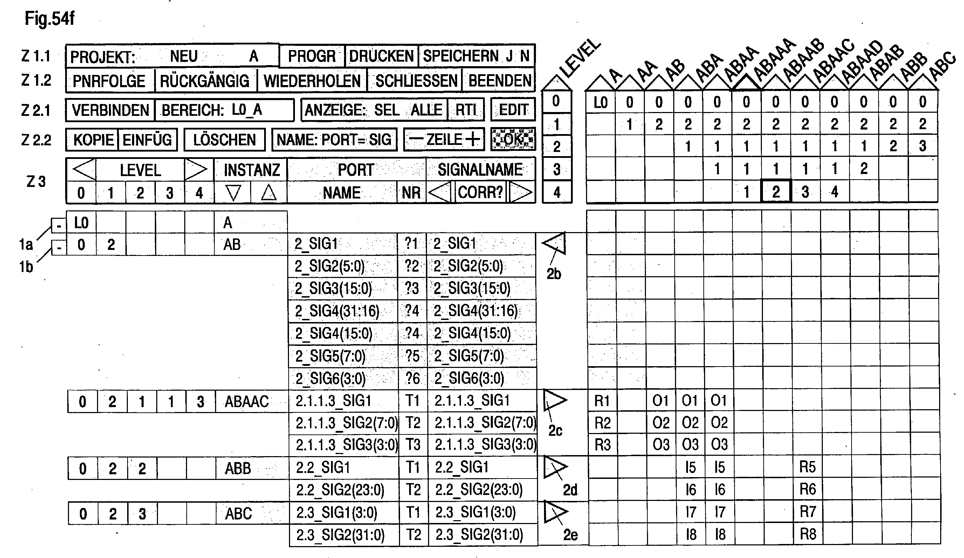

In **Fig.54e** wurde die Schaltfläche "CORR?" in "Z3" durch Klick aktiviert. Hierdurch werden die restlichen zu korrigierenden Signalverbindungen angezeigt, im Beispiel sind das die Signalverbindungen der Instanz "AB" mit den Sendeports "T1" bis "T6". Die Schaltflächen dieser Sendeports sind aktiviert bzw. markiert und das "T" ist durch ein Fragezeichen "?" ersetzt. Entsprechend der Vorgabe nach Fig.54a wird der Sendeort der mit "?" gekennzeichneten AB-Portsignale zur Instanz "AA" hin verlagert. Für die Durchführung der Korrektur werden beispielsweise mit Klick in den Pfeil 2b, bei aktivierter Schaltfläche "CORR?", die AB-Ports im X-Bereich zu Empfangsports, wie **Fig.54f** zeigt. Ausserdem werden die AB-Signalverbindungszeilen und der Pfeil 2b aktiviert bzw. markiert und es werden beispielsweise im Y-Bereich die Schaltflächen möglicher Sendeports, im Beispiel betrifft das die Instanzen "A" und "AA", aktiviert bzw. markiert.

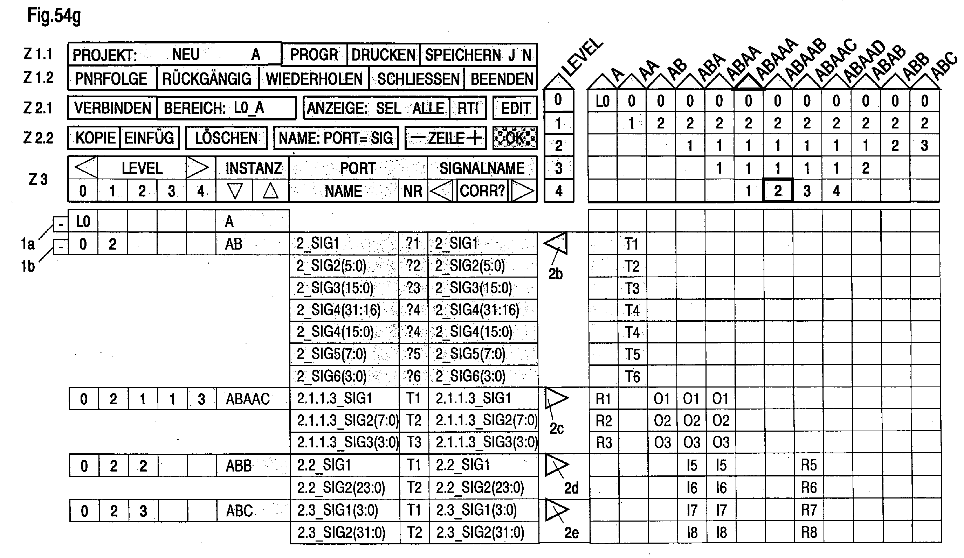

In **Fig.54g** wurden im Y-Bereich in Spalte ''AA" durch Klicks die Sendeports "T1" bis "T6" eingetragen. Mit Klick in die Schaltfläche "OK" in "Z2.2" wird die Korrektur bestätigt, die Signalverbindungszeilen und der Pfeil 2b deaktiviert bzw. demarkiert sowie die Schaltfläche "CORR?" deaktiviert und das "?" gelöscht, wie **Fig.54h** zeigt. Ausserdem wird automatisch bei den AB-Empfangsports im Signalnamen der Sendepfad von "2" nach "1" geändert und der Porttyp "I" eingesetzt.

Alternativ, jedoch aufwändiger, kann diese Korrektur wie folgt durchgeführt werden: Es wird die Instanz "AA" im X-Bereich plaziert und hierfür die entsprechenden Signalverbindungszeilen und Signalnamen-Einträge generiert. Anschließend erfolgt die Zuweisung der AA-Sendeports zu den AB-Empfangsports im Y-Bereich und mit Bestätigung durch "OK" ist die Korrektur mit allen Einträgen abgeschlossen. Ist dabei "AB" im X-Bereich noch als Sender angezeigt, dann werden seine Ports mit dem Porttyp "O" dargestellt, der Signalnamen-Sendepfad ist "1", wie **Fig.54i** zeigt.

In **Fig.55** wurden durch Doppelklick in die Schaltfläche "AB" in Spalte "INSTANZ" die Signalverbindungszeilen weggeschaltet und zusätzlich die Signalverbindungen der Sender "ABB" und "ABC" dargestellt.

Die Blockstruktur von **Fig.56a** zeigt neue Signalverbindungen, keine Korrekturen, von der RTI "AA", Outputport "T7", "T8", "T9", zur RTI "ABAAB", die im Ergebnis in **Fig.56b** dargestellt sind. In **Fig.57a** wurden im Y-Bereich die Zwischeninstanzen durch Aktivierung der Schaltfläche "RTI" in "Z2.1" weggeschaltet.

In **Fig.57b** wurde im Y-Bereich, LEVEL"4" für die RTI-Bibliothekskomponente "ABAAB" durch Doppelklick in die dick umrahmte Schaltfläche "2" eine Spalte "PORT-NAME" geöffnet und die Portnamen angezeigt. Durch erneuten Doppelklick in diese Schaltfläche wird die Spalte "PORT-NAME" wieder geschlossen, wie **Fig.57c** zeigt. Ausserdem wurde die RTI-Bibliothekskomponente "ABAAB" im X-Bereich als Empfänger, entsprechend Pfeil 2g, dargestellt.

In **Fig.58** wurden durch Klicks die Schaltflächen "NAME:PORT=SIG" und Pfeil 2g aktiviert. Hierdurch werden im X-Bereich für die RTI-Bibliothekskomponente "ABAAB" die Port- und Signal-Namen aktiviert bzw. markiert und die Portnamen für eine Wandlung in Signalnamen vorbereitet. Mit Klick in die Schaltfläche "CORR" in "Z3" wird diese aktiviert und ein "?" gesetzt, das kennzeichnet, daß der Prozeß der Wandlung von Port- in Signal-Namen gestartet wurde, wie **Fig.59** zeigt. Bei diesem Prozeß werden auch intern in der ABAAB-Bibliothekskomponente die verwendeten Portnamen in Signalnamen gewandelt. Nachdem der Prozeß für die Anpassung der Portnamen an die Signalnamen beendet ist, wird das "?" in der Schaltfläche "CORR" in "Z3" automatisch weggeschaltet, wie **Fig.60** zeigt.

In **Fig.61** wurde die Wandlung der Portnamen in Signalnamen für die RTI-Bibliothekskomponente "ABAAB" durch Klick in die Schaltfläche "OK" in "Z2.2" bestätigt. Dabei werden die Schaltflächen "NAME:PORT=SIG", "CORR", Pfeil 2g und die der Port-/Signal-Namen deaktiviert und in Spalte "PORT-NAME" die Portnamen identisch zu den Signalnamen eingetragen.

Nachfolgend werden in Ergänzung noch nicht beschriebene Funktionen des SPV-Bildschirms "VERBINDEN" erläutert und wichtige funktionelle Eigenschaften zusammengefaßt. Mit einem Klick in die Schaltfläche "SCHLIESSEN" in "Z1.2" wird der SPV-Bildschirm "VERBINDEN" geschlossen und es verbleibt die SPV-Menüzeile "Z1" in Fig.7. Mit einem Klick in die Schaltfläche "BEENDEN" in "Z1.2" wird die Arbeitssitzung beendet und das SPV geschlossen. Mit einem Klick in die Schaltfläche "PROGR" in "Z1.1" wird ein Programm-Fenster geöffnet, mit den Programmen Instanzieren "INSTANZIIEREN", Verbinden "VERBINDEN", Register-Transfer-Instanz-Operation "RTI_OP" und Projekt-Operation "PROJ_OP", wie in Fig.8 dargestellt.

Bei einem Klick in die Schaltfläche "SCHLJESSEN" in "Z1.2", oder "BEENDEN" in "Z1.2", oder "PROGR" in "Z1.1", wird vor Ausführung eines Programmschrittes geprüft, ob alle Programmeingaben des SPV-Bildschirms "VERBINDEN" mit "SPEICHERN" abgeschlossen wurden, wenn nicht, wird automatisch die Schaltfläche "SPEICHERN: JA/NEIN" hellgetastet und durch Klick in die Schaltfläche SPEICHERN "JA" oder "NEIN" der gewünschte Programmschritt "SCHLIESSEN", oder "BEENDEN", oder "PROGR", ausgeführt.

Durch Klick in die Schaltfläche "DRUCKEN" kann beispielsweise der Ausdruck einer aktuellen Bildschirm-Darstellung erfolgen. Mit den Funktionen Kopieren "KOPIE" in "Z2.2", Einfügen "EINFÜG" in "Z2.2" und "LÖSCHEN" in "Z2.2" können Texte in bekannter Weise in den Spalten "PORT-NAME" und "SIGNALNA-ME" bearbeitet werden. Soll nach einer oder mehreren Eingaben beliebiger Art der Stand vor einer oder mehreren Eingaben wieder hergestellt werden, so wird dies durch einen oder mehrere Klicks in die Schaltfläche "RÜCKGÄNGIG" erreicht. In umgekehrter Richtung wird durch einen oder mehrere Klicks in die Schaltfläche "WIEDERHOLEN" der Eingabestand vor "RÜCKGÄNGIG" wieder hergestellt.

Jeder Signalname beginnt mit der Sendeinstanz, die durch ihre Pfadbezeichnung gekennzeichnet ist und für den Sendeort im X-Bereich automatisch generiert wird. Sind die Toplevel-Inputports der Sendeort, dann wird für die Pfadbezeichnung die Toplevelbezeichnung "L0" eingesetzt. Zusätzliche zur Pfadbezeichnung der Sendeinstanz werden im X-Bereich auch die Portnummern von oben nach unten, beginnend mit "1", aufsteigend, automatisch generiert. Eine Signalverbindung besitzt über alle Hierarchien hinweg den gleichen Signalnamen. Auch die Portnamen sind identisch zum Signalnamen in einer Signalverbindung, mit der Ausnahme, wenn eine Komponente aus der Bibliothek instanziiert wurde, bringt sie ihre Portnamen und Portnummern mit. Wird ein Toplevel im Programm "INSTANZIIEREN" mit seinen Instanzen und Unterinstanzen in einen größeren/höheren Bereich instanziiert, oder die Instanz-Hierarchie geändert, erfolgt automatisch im Programm "VERBINDEN" die Anpassung der Pfadbezeichnungen in allen Signalnamen. Im SPV-Bildschirm "VERBINDEN" erfolgt die Erstellung einer Signalverbindung durch die Wahl der Sendeinstanz, des Signalnamens und der am Ende einer Signalverbindung stehenden Empfangsinstanz. Die innerhalb einer Signalverbindung liegenden sog. Durchgangsinstanzen werden im SPV erkannt und ihre Verbindungsports automatisch erzeugt. Eine Sendeinstanz ist repräsentiert durch die Inputports des Toplevels oder den Outputports einer RTI bzw. einer Bibliothekskomponente. Die am Ende einer Signalverbindung stehende Empfangsinstanz ist repräsentiert durch die Outputports des Toplevels oder die Inputports einer RTI bzw. einer Bibliothekskomponente.

### Beschreibung zu Fig.62-79:

Vorstehend wurde das Instanziieren von Komponenten und das Erstellen von Signalverbindungen zwischen den Komponenten für ein Projekt mit den SPV-Bildschirmen "INSTANZIIEREN" und "VERBINDEN" beschrieben. Nachfolgend werden für eine Operationsspezifizierung erforderliche Strukturen und Bezeichnungen anhand von **Fig.62** bis **Fig.79** dargestellt und erläutert. Die Darstellungen dieser Figuren dienen nur der Erläuterung und sind nicht Gegenstand von SPV-Bildschirmdarstellungen. Im SPV ist definitionsgemäß das Projekt, unabhängig von Größe bzw. Umfang, die oberste Spezifikationseinheit, wie auch vorstehend aus den Beschreibungen der SPV-Bildschirme "INSTANZIIEREN" und "VERBINDEN" hervorgeht.

**Fig.62** zeigt für ein Projekt "A" den Projekt-Toplevel "L0_A" mit seinen Instanzen und Unterinstanzen. Operationsanforderungen an ein Projekt können von aussen über die Projekt-Schnittstellen "Projekt-SST" zugeführt und auch intern im Projekt generiert werden. Die Projekt-SSTn sind alphabetisch mit A, B, C, usw., bezeichnet. Eine Operation, die von aussen über eine Projekt-SST kommt, wird mit Primär-Operation "POP", eine im Projekt intern generierte Operation mit Intern-Primär-Operation "IPOP" bezeichnet. In Fig.62 werden über die Projekt-SSTn "A", "B", "C", "D" und "E" die "POPn" in Pfeilrichtung empfangen und je einer sog. Primär-Operationsgruppe "POG" zugeleitet, die entsprechend ihrer Verbindung zur Projekt-SST mit "A.POG", "B.POG", "C.POG", "D.POG" und "E.POG", bezeichnet wird. Eine Operation wird, wie bekannt, durch Controlsignal-Koinzidenzen gebildet. Zur Bildung von "IPOPn", die die Quelle für Operationen in einem System, bestehend aus mehreren Projekten, repräsentieren, werden einer Intern-Primär-Operationsgruppe "IPOG" entsprechende Controlsignale von einer oder mehreren internen RTIn und/oder von der Projekt-SST zugeführt. Die "IPOGn" werden durch eine vorangestellte, laufende Nummer im Projekt, mit "1.IPOG", "2.IPOG", usw., unterschieden. In Fig.62 ist nur eine "IPOG" dargestellt und entsprechend mit "1.IPOG" bezeichnet. Mehrere POP-Anforderungen werden einer "POG" seriell, nacheinander zugeführt. Auch die Erzeugung von mehreren "IPOPn" in einer "IPOG" erfolgt seriell. Eine "POP" an einer "POG" bzw. eine "IPOP" in einer "IPOG" hat in der Regel zu einer "POP" an einer anderen "POG" bzw. zu einer "IPOP" in einer anderen "IPOG" keinen Zeitbezug. In einer "POG" wird eine ankommende "POP" und in einer "IPOG" eine erzeugte "IPOP" in entsprechende Operationen "OPn" umgesetzt und diese innerhalb eines Projekts an die beteiligten "RTIn" gesendet. Entsprechend der Anzahl und Art der möglichen "POPn" an einer "POG" bzw. "IPOPn" in einer "IPOG" und dem Datenverarbeitungsumfang, sind an eine "POG" bzw. "IPOG" eine oder mehrere "RTIn" in einem Projekt angeschlossen. Die RTIn empfangen OPn von POGn bzw. IPOGn über sog. Operations-Gruppen "OGn", wie in Fig.62 dargestellt. Die "OG" repräsentiert die Operationssteuerung in der RTI. Eine RTI kann mit einer oder mehreren POGn oder/und IPOGn verbunden sein und besitzt hierzu eine entsprechende Anzahl von OGn, die durchnumeriert werden mit OG1, OG2, usw.. Wie Fig.62 zeigt, sind beispielsweise die RTIn ABAAA, ABAAB, ABAAC und ABAAD über je eine OG1 mit C.POG verbunden. Die 1.IPOG besitzt beispielsweise Verbindungen zu den RTIn/OGn, ABB/OG1, ABAB/OG1 und ABAAC/OG2. Wie später mit Fig.79 gezeigt wird, kann eine POG bzw. IPOG auf Anforderung einer RTI auch Operationen "OPn" nach aussen über eine Projekt-SST senden.

Im Beispiel nach Fig.62 werden von der 1.IPOG über die Projekt-SST "F" und von der D.POG über die Projekt-SST "G" Operationen "OPn" nach aussen zu anderen Projekten gesendet. Ein Operations-Empfang erfolgt beispielsweise über die Projekt-SST "I", die mit der RTI "ABAB" über "OG2" verbunden ist. Eine IPOG bzw. POG kann Operationen auch an mehrere Projekt-SSTn senden. Eine RTI kann Operationen von mehreren Projekt-SSTn empfangen. In einer IPOG werden IPOPn auch in POPn umgesetzt. Eine IPOG sendet eine POP ausschließlich zur Projekt-SST und damit zu einer POG in einem anderen Projekt. Fig.62 zeigt einen POP-Sendeweg von 1.IPOG zur Projekt-SST "H". Eine IPOG kann POPn auch über mehrere Projekt-SST senden.

In **Fig.63** ist eine beispielsweise System-Konfiguration, ohne Datenpfade, in Blockstruktur mit den Projekten 1 bis 5 und den Systemschnittstellen für das Senden und den Empfang von "POPn" bzw. "OPn" dargestellt. Wie nachfolgend erläutert, erfolgt die Übertragung von "POPn" bzw. "OPn" in den Projekten, im System und an den Schnittstellen durch Controlsignalgruppen mit einer einheitlichen Controlsignalstruktur, in Operations-Übertragungsrichtung durch den Operations-Controlsignaltyp "OCTR" und korrespondierend in Operations-Übertragungsgegenrichtung durch den Controlsignaltyp "CTR" und den Operations-Variationssignaltyp "OVAR". Das Projekt1 in Fig.63 ist grau markiert und in Fig.62 mit Toplevel und Hierarchien detailliert dargestellt. Die Projekt1-SSTn sind für Senden und Empfangen von POPn und OPn ausgelegt. Bei den Projekten "2 bis 5" wurden für die Projekt-SSTn die folgenden beispielsweisen Operationen und Übertragungsrichtungen dargestellt. Für Projekt2: POP-Empfang und OP-Senden, Projekt3: POP-Empfang und OP-Senden/-Empfang, Projekt4 (RAM): OP-Empfang, Projekt5: POP-Senden/-Empfang und OP-Senden. Die Operations-Kommunikation im System kann intern zwischen den Projekten und nach extern zwischen Projekt und System-SSTn erfolgen. Werden zwei oder mehrere Projekte zu einem Projekt zusammengefaßt, so entsteht ein neues Projekt, auf dessen Toplevel die zwei oder mehrere Projekte als Instanzen plaziert sind.

**Fig.64** zeigt Controlsignalgruppen für die Übertragung von POPn von der Projekt-SST "C" zu "C.POG" und von OPn von "CPOG" zu den RTIn ABAAA, ABAAB, ABAAC und ABAAD, mit einer einheitlichen Controlsignalstruktur. Eine Controlsignalgruppe besteht aus dem Operations-Controlsignaltyp "OCTR" in Operations-Anforderungsrichtung und dem Controlsignaltyp "CTR" sowie dem Operations-Variationssignaltyp "OVAR" in Operations-Anforderungsgegenrichtung. Mit "OCTR" wird eine POP- bzw. OP-Anforderung definiert und übertragen. Hierbei können über den Controlsignaltyp "CTR" Korrespondenzsignale übertragen werden. Ausserdem können über "CTR" auch Operationsanforderungen von einer RTI an eine POG oder IPOG übertragen werden. Solche Operationsanforderungen beschränken sich auf Operationen, die im Rahmen einer RTI-Operation zum Lesen oder Schreiben von Daten von oder zu einer anderen RTI erforderlich sind, wie unter Fig.79 beschrieben wird. Mit "OVAR" werden Abweichungen einer RTI-Operation vom RTI-Basisoperationsablauf an die Operations-anfordernde POG bzw. IPOG gemeldet. Durch die Übertragung von OVAR kann die Datenverarbeitung, innerhalb einer aktuellen IPOP bzw. POP oder/und für nachfolgende IPOPn bzw. POPn, Ergebnis-abhängig spezifiziert werden.

Bei der Darstellung der Verbindungen der Controlsignalgruppen in Fig.64 wurden und werden auch für nachfolgende Darstellungen die Durchgangsinstanzen nach Fig.62 weggelassen, da sie ohne Funktion sind und nur Signale über ihre Ports galvanisch durchschalten. Die Portnamen und Signalnamen für die Controlsignalgruppen wurden beispielsweise nach Fig.64 wie folgt gewählt: die Projekt-SST-Ports werden mit "Projekt-SST_Controlsignaltyp", im Beispiel des Projekt-SST-Ports "C" mit C_OCTR, C_CTR und C_OVAR bezeichnet. Die Ports der RTI-Controlsignalgruppen werden einheitlich mit "Cx_Controlsignaltyp" bezeichnet, wie in Fig.64 dargestellt. "x" ist dabei die Nummer der Operationsgruppe "OGx". Im Beispiel nach Fig.64 besitzen alle vier RTIn die Operationsgruppe "OG1"; entsprechend ihre Port-Bezeichnungen für die Controlsignalgruppen mit "C1_OCTR", "C1_CTR" und "C1_OVAR".

Eine POG, beispielsweise die C.POG in Fig.64, besitzt zwei Arten von Portgruppen, eine Portgruppe für den Empfang von POPn, die sog. Upper-Portgruppe "U0" und weitere Portgruppen für das Senden von OPn, die sog. Lower-Portgruppen, im Beispiel nach Fig.64 sind das "L1", "L2", "L3" und "L4". Jede Portgruppe besteht aus einer einheitlichen Controlsignalgruppe mit den Controlsignaltypen "OCTR", "CTR" und "OVAR". Die Signalnamen im Übertragungsweg zwischen der Projekt-SST "C" und C.POG bzw. zwischen C.POG und den RTIn, werden mit "Sender(Senderport)_Controlsignaltyp" bezeichnet. Die Sender-Bezeichnung für die Projekt-SST ergibt sich durch "Projekttoplevel"L0"_Projektkurzbezeichnung"A"". Bei den RTI-Sendesignalen für "CTR" und "OVAR" ist der Instanzname nur Information und kann auch weggelassen werden, da eine RTI durch ihren Pfad eindeutig definiert ist.

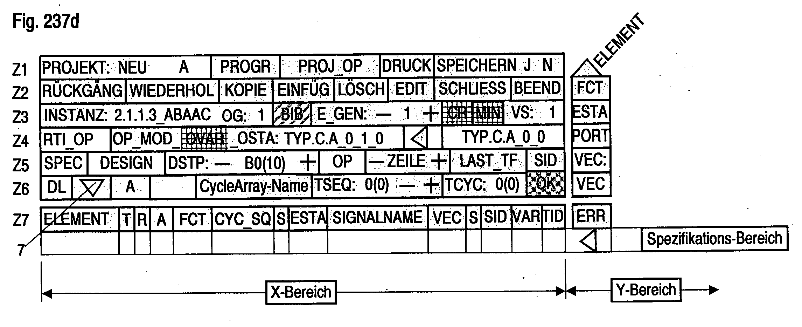

In **Fig.65** sind am Beispiel der RTI "ABAAA" die Signaltypen Synchron-Variation "SVAR" und Asynchron-Variation "AVAR", dargestellt, die in der "OG1" zur Bildung von "OVAR" bewertet werden. Die Signaltypen "SVAR" bzw "AVAR" können innerhalb der RTI gebildet und/oder von aussen empfangen werden. Zur Unterscheidung der internen von den externen Signaltypen wird bei den von extern empfangenen Signaltypen ein "E_" vorangestellt. Die Kombinationen der Signale der Signaltypen "SVAR" und "AVAR" repräsentieren Entscheidungskriterien oder/und Fehlerereignisse bei RTI-Operationsabläufen und definieren damit den Ablauf von RTI-Operationen. Innerhalb eines Signaltyps erfolgt die Unterscheidung der Signale durch Signalnamen mit "SVAR_SIGNALNAME", "E_SVAR_SIGNALNAME", "AVAR_SIGNALNAME" und "E_AVAR_SIGNALNAME". An spezifizierten Sequenzen in einem RTI-Operationsablauf ist für den Signaltyp "SVAR" oder "E_SVAR" die Signal-Gültigkeit erforderlich, während der Signaltyp "AVAR" oder "E_AVAR" an spezifizierten Sequenzen nur abgefragt wird. Eine detaillierte Beschreibung zur Bildung von RTI-Operations-Variationen "OVAR" erfolgt unter Fig.98a bis Fig.98h und Fig.237d.

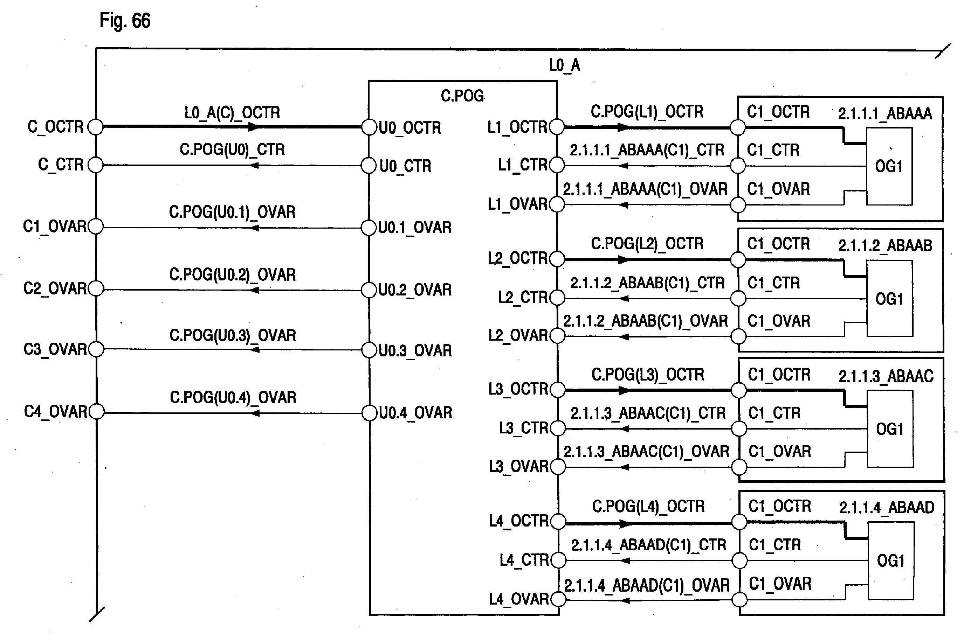

**Fig.66** zeigt eine nach RTIn detaillierte OVAR-Übertragung von C.POG zur Projekt-SST "C" für die RTIn "ABAAA", "ABAAB", "ABAAC" und "ABAAD". Die Zuordnung der OVAR-Signale erfolgt in der C.POG von der Lower- zur Upper-Seite mit L1 nach U0.1, L2 nach U0.2, L3 nach U0.3 und L4 nach U0.4 und von der C.POG-Upperseite "U0" zur Projekt-SST "C" mit U0.1 nach C1, U0.2 nach C2, U0.3 nach C3 und U0.4 nach C4.

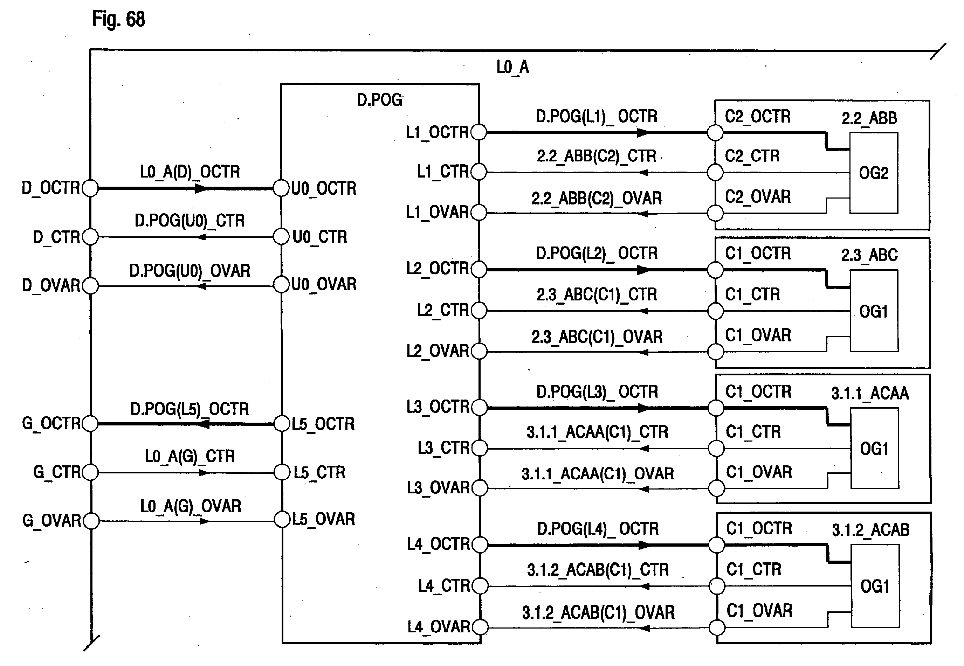

**Fig.67** zeigt den Anschluß der D.POG an die Projekt-SST "D" und die operative Verbindung zu den RTIn ABB, ABC, ACAA, ACAB und zur Projekt-SST "G". Die zugehörigen Controlsignalgruppen sind in **Fig.68** dargestellt. Die Bildung der Portnamen und Signalnamen für die Controlsignalgruppen wurde unter Fig.64 beschrieben.

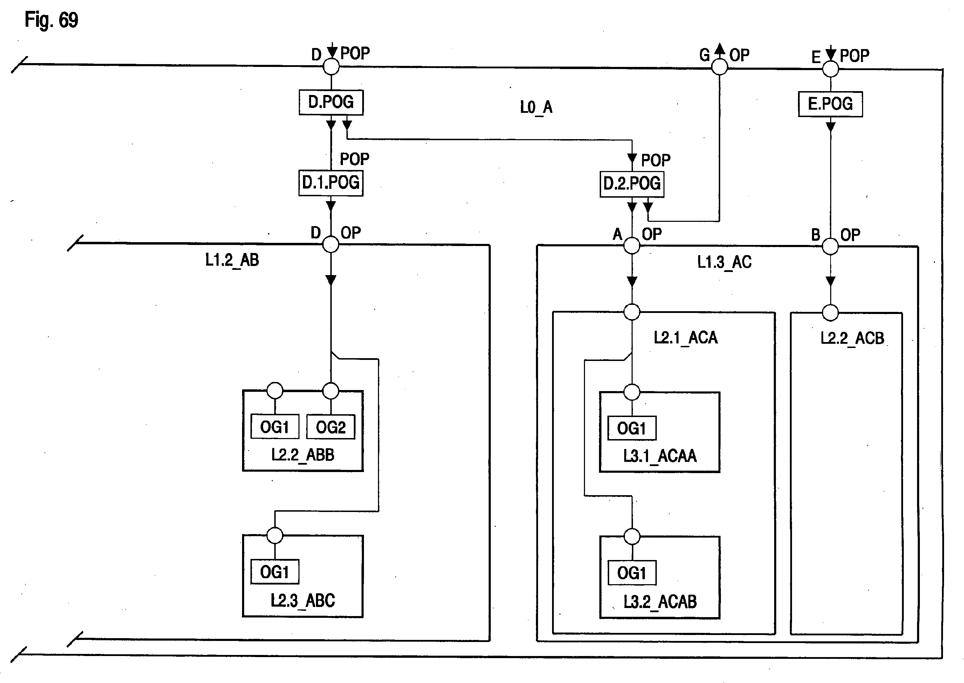

In **Fig.69** ist eine beispielsweise Konfiguration für eine Verteilung von POPn der Projekt-SST "D" über D.POG zur Bearbeitung in zwei RTI-Gruppen dargestellt, in "ABB", "ABC" und in "ACAA", "ACAB" mit Projekt-SST "G". Hierbei werden bestimmte POPn von D.POG beispielsweise zu D.1.POG und andere zu D.2.POG verteilt. Für eine übersichtliche Spezifikation wird im SPV vorausgesetzt, daß eine POP komplett in einer D.x.POG spezifiziert wird, im Beispiel in D.1.POG oder in D.2.POG.

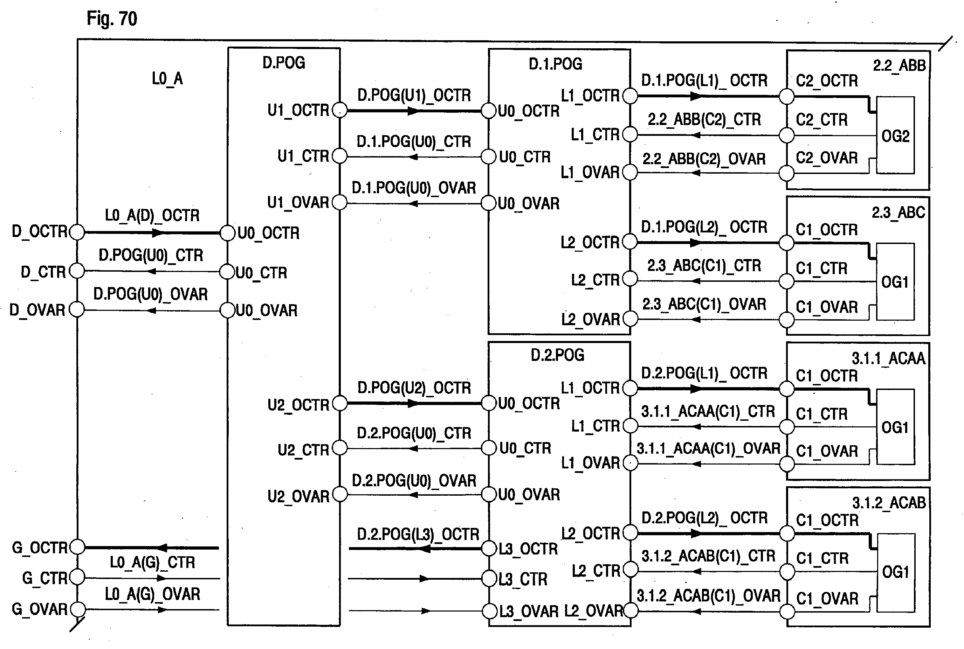

In **Fig.70** sind Controlsignalgruppen-Verbindungen für eine Konfiguration nach Fig.69 dargestellt.

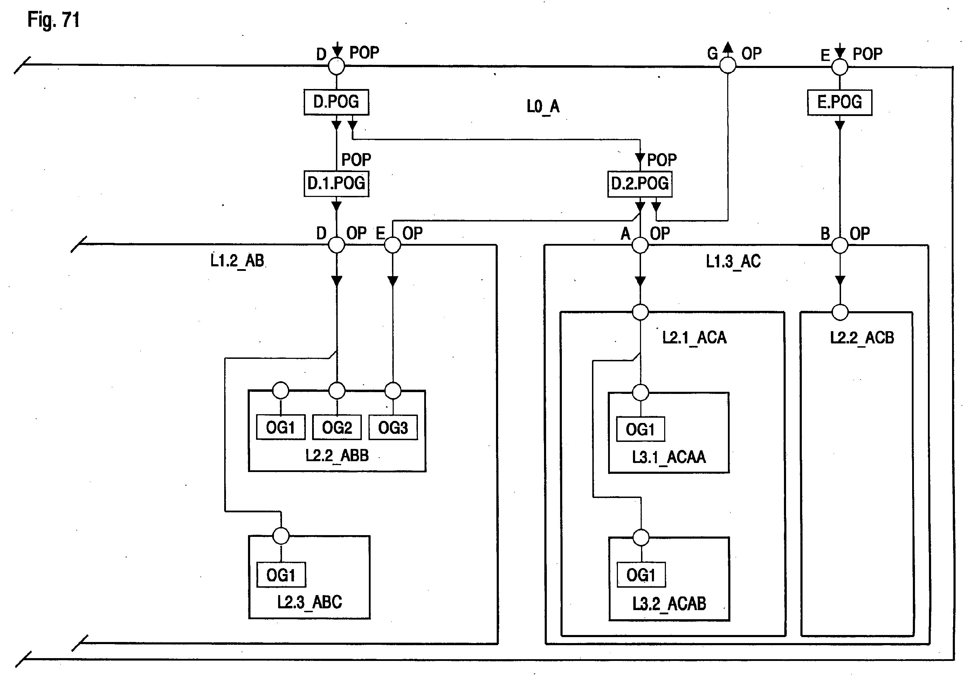

**Fig.71** zeigt einen gegenüber Fig.69 erweiterten Anschluß der RTI "ABB" über OG3, der mit D.2.POG verbunden ist. Damit können OPn von der D.1.POG und von der D.2.POG zur RTI "ABB" übertragen werden. Die Verteilung der POPn von D.POG zu D.1.POG und D.2.POG erfolgt beispielsweise über eine Demultiplex/Multiplex-Anordnung 3, die abhängig vom POP-Typ, über einen Selekt "SEL" die POP-Durchschaltung zu D.1.POG oder D.2.POG herstellt, wie **Fig.72** zeigt. Für "SEL=0" erfolgt die Übertragung der Controlsignale "OCTR" von D.POG nach D.1.POG bzw. "CTR" und "OVAR" von D.1.POG nach D.POG, für "SEL=1" wird "OCTR" von D.POG nach D.2.POG bzw. "CTR" und "OVAR" von D.2.POG nach D.POG durchgeschaltet.

In **Fig.73** wird "OCTR" über eine Demultiplex-Anordnung 4, wie in Fig.72 durchgeschaltet, die Controlsignale "CTR" und "OVAR" werden direkt, parallel ohne Multiplexing übertragen. Hierdurch wird eine Verkürzung des Operationsablaufes erreicht. Eine beispielsweise Verteilung von POPn von D.POG an D.1.POG oder D.2.POG, wie in Fig.69 bzw. Fig.71 dargestellt, wird im SPV in der Projekt-Operationsspezifizierung definiert. Die Generierung einer beispielsweisen Demultiplex/Multiplex-Anordnung 3 erfolgt im SPV automatisch.

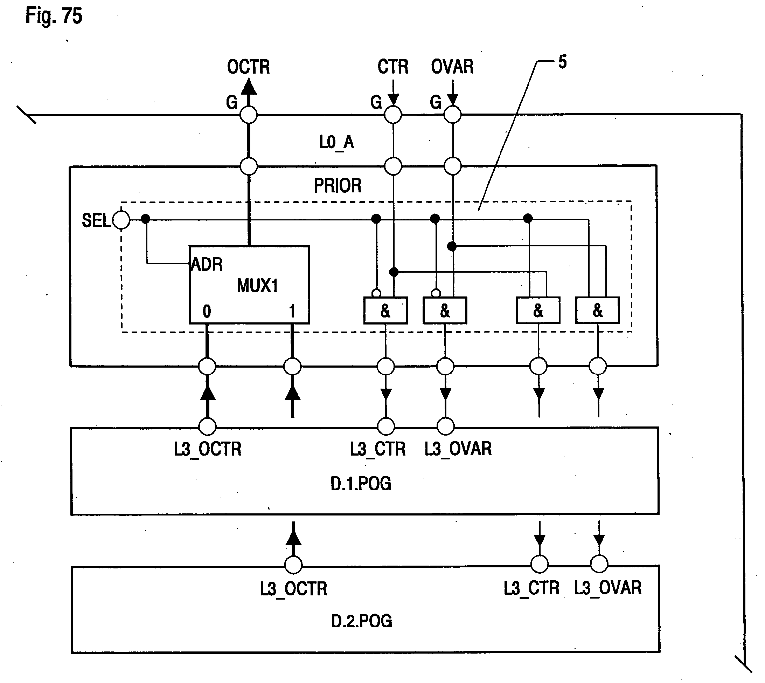

In **Fig.74** werden beispielsweise OPn von D.1.POG und von D.2.POG an eine Projekt-SST "G" über eine Komponente "PRIOR" gesendet, die hierfür erforderliche Multiplex/Demultiplex-Anordnung "5" ist in **Fig.75** dargestellt. Für eine solche Anordnung, in der mehrere POGn bzw. IPOGn zu einer Projekt-SST senden, im Beispiel ist das die Projekt-SST "G", ist die OP-Zugriffs-Priorität im SPV zu definieren. Die für die Realisierung erforderliche Komponente "PRIOR", mit der entsprechenden Multiplex/Demultiplex-Anordnung, wird im SPV automatisch generiert.

Zu der 1.IPOG von Fig.62 zeigt **Fig.76** die Controlsignalgruppen-Verbindungen. Zur Bildung von IPOPn in einer IPOG werden dem 1.IPOG-Port "UO_CTR" Controlsignale von innerhalb des Projekts "A" oder/und von ausserhalb des Projekts "A" zugeführt. Für die Übertragung von POPn zu einem anderen Projekt, ist der 1.IPOG-Port "U1" über eine Controlsignalgruppe mit dem Projekt-Port "H" verbunden. Für die Übertragung von OPn zu einer RTI in einem anderen Projekt, ist der 1.IPOG-Port "L4" über eine Controlsignalgruppe mit dem Projekt-Port "F" verbunden.

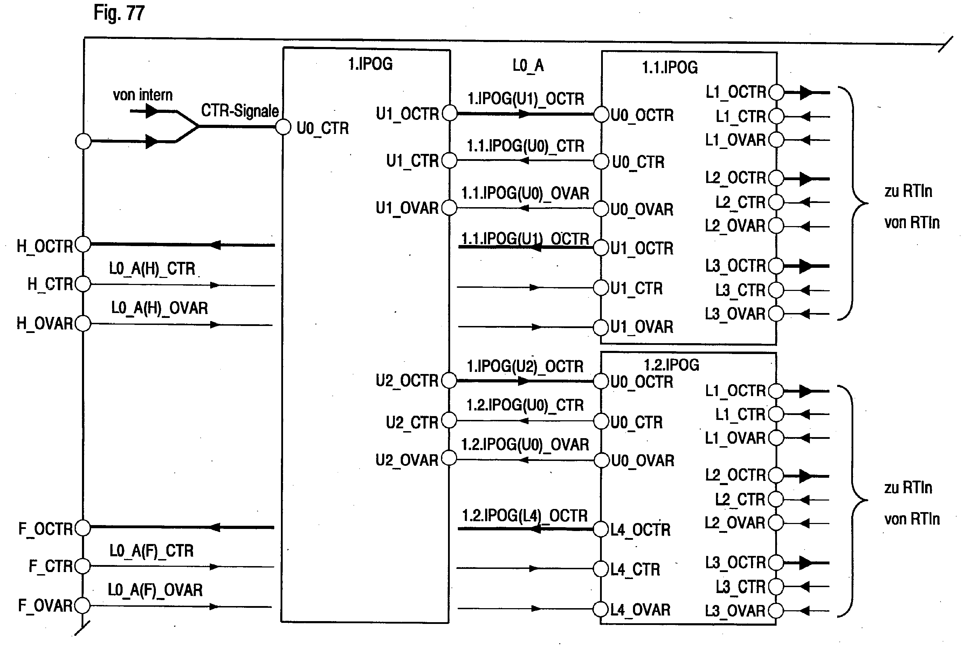

**Fig.77** zeigt IPOG-Unterkomponenten 1.1.IPOG und 1.2.IPOG, die an die Hauptkomponente 1.IPOG angeschlossen sind. Damit können bestimmte IPOPn der 1.IPOG mit bestimmten RTI-Gruppen operativ kommunizieren, wie dies unter Fig.69 bzw. Fig.70 für "D.POG" erläutert wurde. Die Projekt-SST "H" für POPn ist an 1.1.IPOG, die Projekt-SST "F" für OPn ist an 1.2.IPOG angeschlossen.

Fig.78 zeigt eine Projekt-SST "Yb" - "b" steht für bidirektional - die für beide POP-Anforderungs-Richtungen, für einen sog. Master/Slave-Betrieb, ausgelegt ist. Dies wird erreicht, indem zwischen der Projekt-SST "Yb" und Y.POG bzw. einer beispielsweisen 3.IPOG ein bidirektionales Treiberfeld 6 eingebracht wird. Die Auswahl der Übertragungsrichtung erfolgt über einen Port Output Control "OC" der, wie im Stand der Technik bekannt, in der Regel über einen sog. Arbiter angesteuert wird. Für OC=0 ist die Projekt-SST "Yb" im Slave-Betrieb, d. h., die Übertragung der POP-Anforderung erfolgt von der Toplevel-SST "Yb" zur Y.POG, für OC=1 wird die Projekt-SST "Yb" zum Master und die Übertragung der POP-Anforderung, erfolgt von der beispielsweisen 3.IPOG zur Projekt-SST "Yb". Wie bekannt, kann ein bidirektionales Treiberfeld 6 auch für mehrere POG-Slave-Komponenten und/oder mehrere beispielsweise IPOG-Master-Komponenten ausgelegt werden. Für die SPV-Operationsspezifizierung sind die Projekt-SSTn als bidirektional und die zugehörigen Slave- und Master-Komponenten zu definieren, das erforderliche bidirektionale Treiberfeld 6 wird vom SPV automatisch erzeugt.

Nachfolgend werden an Hand der Blockstruktur von **Fig.79** die Prinzipien des Operatings innerhalb eines Projekts und im System, über Projektgrenzen hinaus zusammenfassend erläutert. Hierbei sind Projekt1 (A) und Projekt2 in Teilbereichen in der Systemebene dargestellt. Projekt1 (A) ist auf dem Toplevel "L0_A", mit der Intern-Primär-Operationsgruppe "1.IPOG", der RTI "ABAAC" und den Projekt-Ports "H" für Primär-Operationen "POPn" und "F" für Operationen "OPn", dargestellt. Eine komplette Übersicht über das Projekt1 (A) ist in Fig.62 bis Fig.78 gegeben. Der Teilbereich von Projekt2 umfaßt die Primär-Operationsgruppe "A.POG", "RTI1", "RTI2" und die Projekt-Ports "A" für Primär-Operationen "POPn" und "B" für Operationen "OPn".

Im Projekt1 werden in der "1.IPOG" vom Port "U0_CTR" Controlsignal-Koinzidenzen empfangen und Intern-Primär-Operationen "IPOP" generiert. Eine IPOP wird in einer IPOG in Primär-Operationen "POPn" oder/und in Operationen "OPn" umgesetzt. POPn werden von einer IPOG in einem Projekt ausschließlich nach extern zu einer POG in einem anderen Projekt übertragen. Im Beispiel der Fig.79 ist der Übertragungsweg für eine POP vom 1.IPOG-Port "U1_OCTR" im Projekt1 über den Projekt1-Port "H" nach Projekt2-Port "A" bzw. A.POG-Port "U0_OCTR". Aus einer IPOP umgesetzte OPn werden ausschließlich von einer IPOG zu RTIn innerhalb eines Projekts übertragen. Im Beispiel der Fig.79 ist der Übertragungsweg in Projekt1 für eine OP vom 1.IPOG-Port "L1_OCTR" nach RTI-Port "C2_OCTR" der RTI "ABAAC". Eine von der 1.IPOG im Projekt1 zur A.POG im Projekt2 übertragene POP wird in der A.POG im Projekt2 in "OPn" umgesetzt und ausschließlich zu RTIn im Projekt2 übertragen. Im Beispiel der Fig.79 erfolgt die OP-Übertragung im Projekt2 vom A.POG-Port "L1_OCTR" zum RTI1-Port "C1_0CTR".

Bei einem RTI-Operationsablauf kann es erforderlich sein, Daten von einer externen Komponente zu lesen oder/und in eine externen Komponente zu schreiben. Eine externe Komponente kann eine andere RTI im gleichen Projekt oder in einem anderen Projekt sein. Im Beispiel gemäß Fig.79 soll für einen Operationsablauf in der RTI "ABAAC" in Projekt1 eine Lesedaten- bzw. Schreibdaten-Korrespondenz mit der RT12 im Projekt2 erfolgen. Hierzu sendet im Projekt1 die RTI "ABAAC" über ihren Controlsignalport "C2_CTR" eine entsprechende Operationsanforderung an den 1.IPOG-Port "L1_CTR". Der 1.IPOG überträgt dann über seinen Controlsignalport "L4_OCTR" die von der RTI "ABAAC" empfangene Operationsanforderung weiter an den RT12-Controlsignalport "C1_OCTR" im Projekt2.

Die für eine Leseoperation bzw. Schreiboperation der RTI "ABAAC" erforderlichen Daten sind mit der Speicheradresse "ABAAC_MEM1ADR(15:0)", den Schreibdaten "ABAAC_MEM1WDAT(7:0)" und den Lesedaten "MEM1_RDAT(7:0)" in Fig.79 dargestellt. Wie auch prinzipiell unter Fig.65 beschrieben, übertragen die RTI2-Signale "MEM1_E_SVAR" und "MEM1_E_AVAR" nach Abschluß der RTI2-Operation den RTI2-OVAR-Status an die RTI "ABAAC" im Projekt1. Dort wird der RT12-OVAR-Status zusammen mit dem OVAR-Status der RTI "ABAAC" im Projekt1 ausgewertet und nach Operationsabschluß vom Port "C2_OVAR" der RTI "ABAAC" zum Port "L1_OVAR" der "1.IPOG" übertragen. In dieser Operations-Betriebsart erfolgt im "1.IPOG" keine Informations-Auswertung vom Inputport "L4_OVAR".

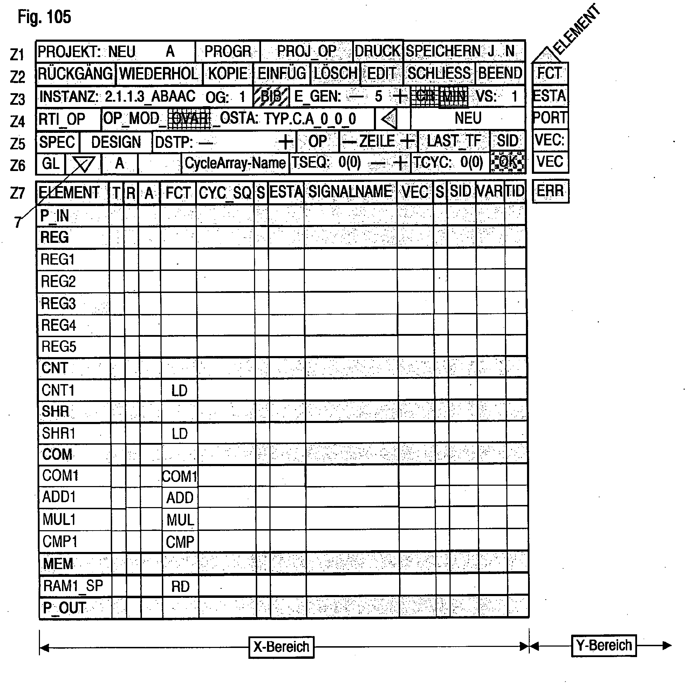

Für den Fall, daß eine RTI für ihren Operationsablauf Daten aus einer externen Komponente lesen oder/und in eine externen Komponente schreiben muß, kann diese RTI auch über eine Controlsignalgruppe, bestehend aus "OCTR", "CTR" und "OVAR", direkt mit einer externen Komponente verbunden sein. Im Beispiel der Fig.79 würde dann eine direkte Verbindung über eine Controisignalgruppe zwischen "OG2" der RTI "ABAAC" im Projekt1 und "OG1" der RTI2 "MEM1" im Projekt2 bestehen. Wie unter Fig.105 beschrieben, werden bei einer RTI-Operations-Spezifizierung benötigte Elemente, die ausserhalb der zu spezifizierenden RTI liegen, in der Spezifikations-Matrix der zu spezifizierenden RTI mit dem Zusatz extern "ex" gekennzeichnet.

### Beschreibung zu Fig.80a-94b:

Für eine RTI-OP-Spezifizierung werden Elemente-Typen, Register "REG", Counter "CNT", Schieberegister "SHR", Kombinatorik "COM" (Combiner) und Speicher "MEM" (Memory), festgelegt. Die Elemente RTI-Inputport "PI" und RTI-Outputport "PO" wurden im SPV-Bildschirm "VERBINDEN" bereits festgelegt und stehen für die RTI-OP-Spezifizierung zur Verfügung.

COM enthält nur kombinatorische Verknüpfungen, keine Speicherung. Unter COM können beispielsweise Paritychecker "PCH", Paritygenerator "PGN", Addierer "ADD", Subtrahierer "SUB", Multiplizierer "MUL", Dividierer "DIV", Comparator "CMP", usw., geführt werden. Unter MEM können beispielsweise Random-Access-Memory "RAM", Read-Only-Memory "ROM", EEPROM "EEP", First-In/First-Out-RAM "FIFO", usw., geführt werden. In der Regel werden MEMs aber als eigene RTI konfiguriert. Die MEM-Grundfunktionen sind Write "WR" und Read "RD".

Das REG hat nur die Funktion Load "LD".

Die Funktionen für CNT sind Load "LD", Count Up "CU" und Count Down "CD", die für SHR sind Load "LD" und Shift mit Least Significant Bit First In, "LF", bzw. Most Significant Bit First In, "MF".

Das Rücksetzen von REG, CNT und SHR erfolgt generell synchron über die Funktion LD mit einem entsprechenden Dateninhalt. Im SPV sind die Funktionen der Elemente-Typen, REG, CNT, SHR, COM und MEM in einer Art Bibliothek verfügbar hinterlegt bzw. werden bei Bedarf ergänzt.

Eine einfache und eindeutige Zuordnung von Daten/Signalen in einer seriellen und parallelen Daten-Verarbeitung wird durch die Einführung des Elemente-State "ESTA" und Signal-State "SSTA" erreicht.

In **Fig.80** bis **Fig.86** wird die State-Funktionalität der Elemente COM, REG, CNT, SHR, RTI-Inputport/-Outputport und MEM erläutert.

In **Fig.80a** besitzt ein Element COM beispielsweise drei Eingänge, dessen Daten "DIN1", "DIN2" und "DIN3" durch Verknüpfung die Ausgangsdaten "DOUT" erzeugen. COM ist ein rein kombinatorisches Element, ohne Speicherung. Für das Element COM ist in **Fig.80b** die State-Funktionalität von ESTA bzw. DOUT-SSTA in Abhängigkeit von beispielsweisen DIN-SSTA für Verarbeitungsschritte WSTP1 bis WSTP6 dargestellt. Die State-Werte von ESTA und DOUT-SSTA sind identisch. Ist bei einem WSTP ein SSTA von DIN1 oder/und DIN2 oder/und DIN3 größer als der ESTA bzw. DOUT-SSTA des vorhergehenden WSTP, dann wird der maximale DIN-SSTA von ESTA bzw. DOUT-SSTA übernommen. Ist bei einem WSTP der maximale DIN-SSTA gleich oder kleiner als der ESTA bzw. DOUT-SSTA des vorhergehenden WSTP, dann wird ESTA bzw. DOUT-SSTA des vorhergehenden WSTP um Eins erhöht. Am Beginn einer RTI-Operation besitzen die nicht-speichernden Elemente, im Beispiel "COM", keinen ESTA bzw. DOUT-SSTA, sie übernehmen erstmals den maximalen ESTA bzw. DOUT-SSTA der sendenden Elemente, auch ESTA=0.

Das Element REG, **Fig.81a****,** besitzt einen Eingang "DIN" und einen Ausgang "DOUT". Die State-Werte von ESTA und DOUT-SSTA sind identisch. Für DIN-SSTA wurden in **Fig.81b** beispielsweise Werte angenommen. Ist in einem WSTP der DIN-SSTA gleich oder kleiner als der ESTA bzw. DOUT-SSTA des vorhergehenden WSTP, dann wird der ESTA bzw. DOUT-SSTA des vorhergehenden WSTP um Eins erhöht. Ist in einem WSTP der DIN-SSTA größer als der ESTA bzw. DOUT-SSTA des vorhergehenden WSTP, dann wird der ESTA bzw. DOUT-SSTA gegenüber dem DIN-SSTA um Eins erhöht. Am Beginn einer RTI-Operation besitzen die speichernden Elemente, im Beispiel "REG", den ESTA=0 bzw. DOUT-SSTA=0.

Das Element CNT ist in **Fig.82a****,** seine State-Funktionalität in **Fig.82b** dargestellt. Bei der Function "FCT" Load "LD" ist die State-Funktionalität identisch zum Element REG. Bei "LD" wurden beispielsweise Werte für DIN-SSTA und DOUT-Dezimalwerte angenommen. Bei den FCTn Count Up "CU" bzw. Count Down "CD" werden die Zählsequenzen "Count" hinter FCT in Klammer notiert. Mit Beginn einer neuen Zählrichtung ist "Count=1" und wird kontinuierlich hochgezählt. Ausserdem wird mit jeder Zählsequenz der State-Wert von ESTA bzw. DOUT-SSTA um Eins erhöht. Die State-Werte von ESTA und DOUT-SSTA sind identisch. Am Beginn einer RTI-Operation besitzt ein "CNT" den ESTA=0 bzw. DOUT-SSTA=0.

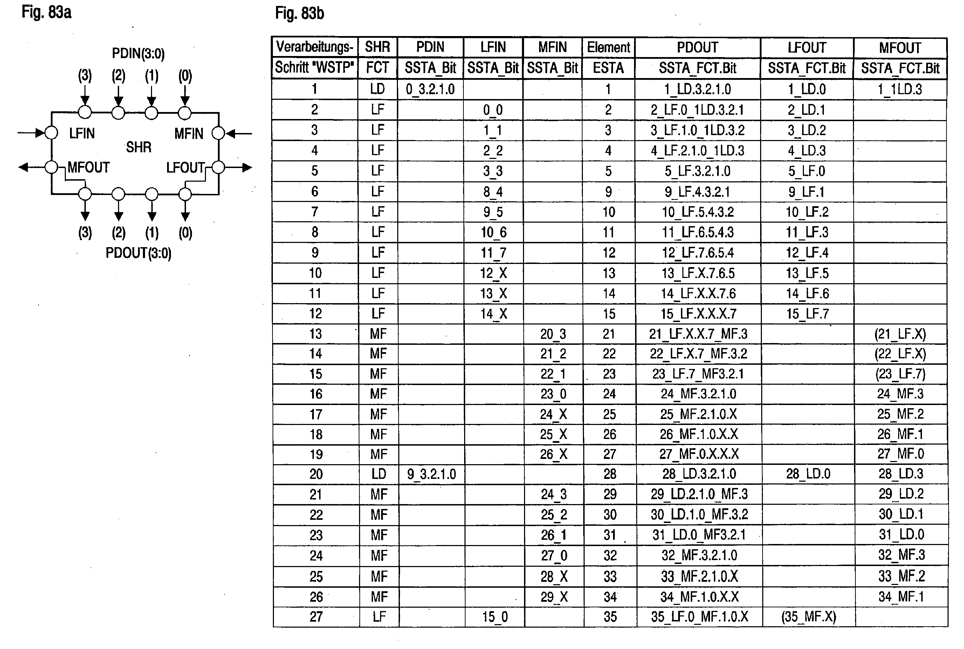

In **Fig.83a** ist das Element SHR mit einer beispielsweisen Breite von 4 Bit dargestellt, seine State-Funktionalität wird anhand von **Fig.83b** erläutert. Die Eingangsdaten in Fig.83a sind mit PDIN(3:0), die Ausgangsdaten mit PDOUT(3:0) bezeichnet. Die State-Funktionalität für FCT "LD" ist identisch zu der des Elements REG. Für FCT "LF" ist der ESTA bzw. der Datenoutput-Signalstate "PDOUT-SSTA" bzw. "LFOUT-SSTA" vom Dateninput-Signalstate "LFIN-SSTA" und für FCT "MF" ist der ESTA bzw. der Datenoutput-Signalstate "PDOUT-SSTA" bzw. "MFOUT-SSTA" vom Dateninput-Signalstate "MFIN-SSTA" abhängig. Ist in einem WSTP der Dateninput-SSTA gleich oder kleiner als der ESTA bzw. Datenoutput-SSTA des vorhergehenden WSTP, dann wird der ESTA bzw. Datenoutput-SSTA des vorhergehenden WSTP um Eins erhöht. Ist in einem WSTP der Dateninput-SSTA größer als der ESTA bzw. Datenoutput-SSTA des vorhergehenden WSTP, dann wird der ESTA bzw. Datenoutput-SSTA gegenüber dem Dateninput-SSTA um Eins erhöht. Am Beginn einer RTI-Operation besitzt ein "SHR" den ESTA=0 und an allen Datenoutputs den SSTA=0. Die State-Werte von ESTA und SSTA der Datenoutputs sind identisch. Bei der FCT "LF" erfolgt der Schiebevorgang vom Dateneingang "LFIN", SHR-Bit3, zum Datenausgang "LFOUT", SHR-Bit0. Bei der FCT "MF" erfolgt der Schiebevorgang vom Dateneingang "MFIN", SHR-Bit0, zum Datenausgang "MFOUT", SHR-Bit3. Bei PDIN, LFIN und MFIN wurden zusätzlich zum Sigrialstate "SSTA" beispielsweise Bitnummern vergeben, die zusammen mit dem SSTA und der FCT an den SHR-Ausgängen PDOUT, LFOUT und MFOUT die SHR-Funktionsergebnisse überschaubar darstellen lassen. Bei PDOUT ergibt sich hierbei hinter dem SSTA teilweise ein mehrfacher Ausdruck von FCT.Bit, der je durch einen Unterstrich getrennt ist. Der SSTA von PDOUT, LFOUT und MFOUT ist identisch zum ESTA, sodaß ESTA für das SHR repräsentativ ist. In Fig.83b wurden beispielsweise Verarbeitungsschritte WSTP1 bis WSTP27 mit verschiedenen FCTn und beispielsweise gewählten PDIN-SSTA, LFIN-SSTA bzw. MFIN-SSTA dargestellt. Die in Klammern gesetzten Ausdrücke "(SSTA_FCT.Bit)" für LFOUT bzw. MFOUT entsprechen nicht dem LFIN bzw. MFIN der jeweils aktuellen, zugehörigen FCT, sondern einem LFIN bzw. MFIN der jeweils vorhergehenden FCT. Mit Beginn einer RTI-Operation wurde beispielsweise festgelegt, daß der Dateninput einer RTI mit SSTA=0 beginnt und kontinuierlich um jeweils Eins erhöht wird.

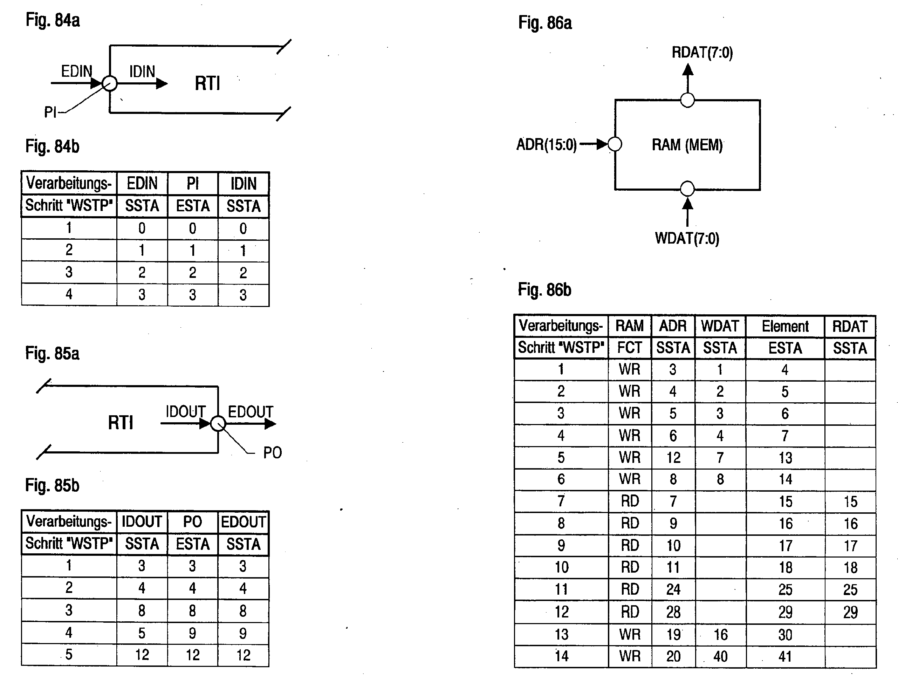

**Fig.84a** zeigt einen RTI-Inputport "PI" mit seiner Externseite "EDIN" und Internseite "IDIN". **Fig.84b** zeigt die State-Funktionalität für EDIN-SSTA, IDIN-SSTA und PI-ESTA.

**Fig.85a** zeigt einen RTI-Outputport "PO" mit seiner Internseite "IDOUT" und Externseite "EDOUT". **Fig.85b** zeigt die State-Funktionalität vom OPORT-ESTA und EDOUT-SSTA in Abhängigkeit vom IDOUT-SSTA. Der PO-ESTA ist identisch zum EDOUT-SSTA. Ist bei einem WSTP der IDOUT-SSTA größer als der PO-ESTA bzw. EDOUT-SSTA des vorhergehenden WSTP, dann wird der IDOUT-SSTA vom PO-ESTA bzw. vom EDOUT-SSTA übernommen. Ist bei einem WSTP der IDOUT-SSTA gleich oder kleiner als der PO-ESTA bzw. EDOUT-SSTA des vorhergehenden WSTP, dann wird der PO-ESTA bzw. der EDOUT-SSTA des vorhergehenden WSTP um Eins erhöht. Am Beginn einer RTI-Operation besitzt der PO-ESTA bzw. der EDOUT-SSTA keinen Wert. Mit der ersten Datenübertragung von "IDOUT" wird der Wert des IDOUT-SSTA vom PO-ESTA und EDOUT-SSTA übernommen. Es wird auch der Wert "0" übernommen.

In **Fig.86a** ist aus der Gruppe der Speicherelemente "MEM" (Memory) beispielsweise ein RAM mit für Schreiben "WR" (Write) und Lesen "RD" (Read) gemeinsamer Adresse "ADR" dargestellt. Die RAM-Eingangsdaten sind "ADR(15:0)" und Schreibdaten "WDAT(7:0)", die RAM-Ausgangsdaten sind Lesedaten "RDAT(7:0)". Die State-Funktionalität für ein RAM nach Fig.86a zeigt Fig.86b. Ist bei der FCT "WR" in einem WSTP der ADR-SSTA oder/und der WDAT-SSTA größer als der ESTA des vorhergehenden WSTP, so wird der ESTA gegenüber dem maximalen Wert des ADR-SSTAs oder/und WDAT-SSTAs um Eins erhöht. Ist bei der FCT "WR" in einem WSTP der ADR-SSTA oder/und der WDAT-SSTA gleich oder kleiner als der ESTA des vorhergehenden WSTP, so wird der ESTA des vorhergehenden WSTP um Eins erhöht. Bei der FCT "RD" ist der RDAT-SSTA identisch zum ESTA. Ist bei der FCT "RD" in einem WSTP der ADR-SSTA größer als der ESTA des vorhergehenden WSTP, so wird ESTA bzw. RDAT-SSTA gegenüber dem ADR-SSTA um Eins erhöht. Ist bei der FCT "RD" in einem WSTP der ADR-SSTA gleich oder kleiner als der ESTA des vorhergehenden WSTP, so wird der ESTA des vorhergehenden WSTP um Eins erhöht und RDAT-SSTA nimmt den Wert von ESTA an.

Für eine optimale Darstellung bzw. Erkennung der transferierten Daten-/Signal-Art wird der Signal-Identifier "SID" eingeführt. Für "SID=0" wird der Verbindungsname zwischen Sender und Empfänger, der sog. "statische Signalname" definiert. Für SID1, SID2, SID3, usw., können in einer Daten-/Signal-Verbindung unterschiedlich übertragene Daten-/Signal-Arten, sog. "dynamische Signalnamen", definiert werden. Es ist dabei auch möglich, den "statischen Signalnamen" zusätzlich als "dynamischen Signalnamen" zu führen.

Nachfolgend werden in **Fig.87** bis **Fig.94** beispielsweise "dynamische Signalnamen" für RTI-Inputport, RTI-Outputport, Register, Counter und Shiftregister dargestellt und erläutert. Die dabei dargestellte State-Funktionalität für "ESTA" bzw. "SSTA" wurde unter Fig.80 bis Fig.86 detailliert erläutert.

In **Fig.87a** ist ein RTI-Inputport "PI" dargestellt, der auf der Externseite "EDIN(7:0)" Daten empfängt und auf der Internseite "IDIN(7:0)" Daten zu den Datenverarbeitungselementen der RTI sendet. **Fig.87b** zeigt für SID0 an "EDIN(7:0)" und "IDIN(7:0)" einen beispielsweisen, gleichen statischen Signalnamen "DAT(7:0)". Für SID1 bis SID8 wird für "IDIN" definiert, daß von "EDIN" alle beispielsweisen dynamischen Signalnamen und Bitvektoren übernommen werden. In **Fig.87c** werden von IDIN mit SID1 bis SID3 nur die beispielsweisen dynamischen Signalnamen mit ihrer Vektör-Bitbreite "(7:0)" von "EDIN" übernommen.

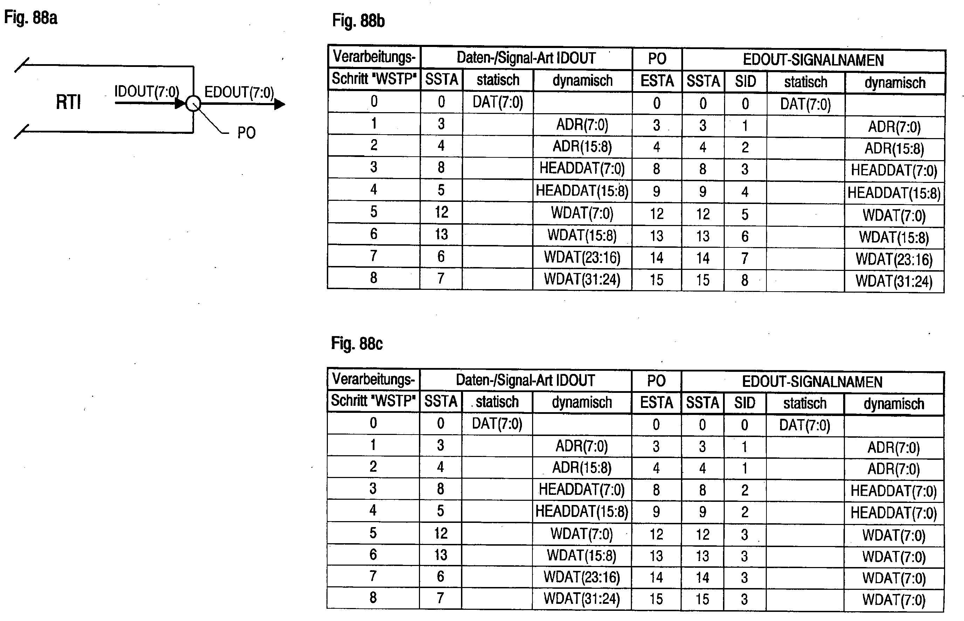

In **Fig.88a** ist ein RTI-Outputport "PO" dargestellt, der auf der Internseite "IDOUT(7:0)" Daten von den Datenverarbeitungselementen der RTI empfängt und auf der Externseite "EDOUT(7:0)" Daten von der RTI nach aussen sendet. **Fig.88b** zeigt für SID0 an "IDOUT(7:0)" und "EDOUT(7:0)" einen beispielsweisen, gleichen statischen Signalnamen "DAT(7:0)". Für SID1 bis SID8 wird für "EDOUT" definiert, daß von "IDOUT" alle beispielsweisen dynamischen Signalnamen und Bitvektoren übernommen werden. In **Fig.88c** werden von "EDOUT" mit SID1 bis SID3 nur die beispielsweisen dynamischen Signalnamen mit ihrer Vektor-Bitbreite "(7:0)" von "IDOUT" übernommen. Für den IDOUT-Signalstate "SSTA" wurden in Fig.88b und Fg.88c beispielsweise Werte angenommen.

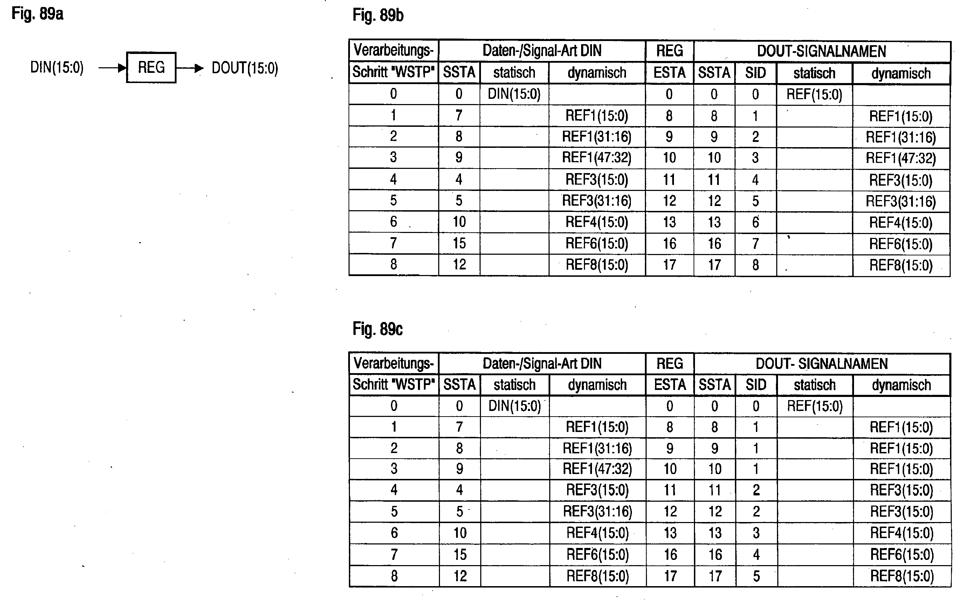

**Fig.89a** zeigt ein Register "REG" mit Dateninput "DIN(15:0)" und Datenoutput "DOUT(15:0)". In **Fig.89b** wurde ein beispielsweiser statischer Signalname für den REG-Datenoutput "DOUT(15:0)" mit "REF(15:0)" angenommen. Der statische Signalname vom REG-Inputport "DIN(15:0)" ist von seiner Sender-Verbindung abhängig. Für SID1 bis SID8 wird für "DOUT(15:0)" definiert, daß von "DIN(15:0)" alle beispielsweisen dynamischen Signalnamen und Bitvektoren übernommen werden. In **Fig.89c** werden von "DOUT" mit SID1 bis SID5 nur die beispielsweisen dynamischen Signalnamen mit ihrer Vektor-Bitbreite "(15:0)" von "DIN" übernommen. Für den DIN-Signalstate "SSTA" wurden beispielsweise Werte angenommen.

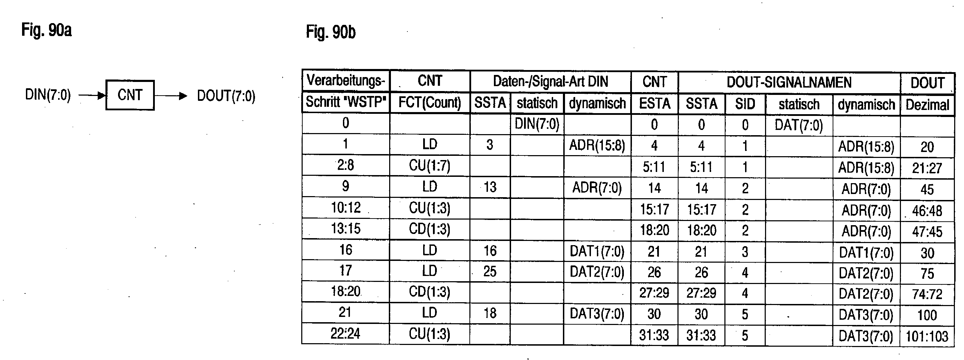

In **Fig.90a** ist ein Element "CNT" mit einem Dateninput "DIN(7:0)" und einem Datenoutput "DOUT(7:0)" dargestellt. In **Fig.90b** wurde ein beispielsweiser statischer Signalname für den CNT-Datenoutput "DOUT(7:0)" mit "DAT(7:0)" angenommen. Der statische Signalname vom CNT-Input "DIN(7:0)" ist von seiner Sender-Verbindung abhängig. Bei "FCT=LD" in den Verarbeitungsschritten "WSTP: 1, 9, 16, 17 und 21" wird für SID1 bis SID5 für "DOUT(7:0)" definiert, daß von "DIN(7:0)" alle beispielsweisen dynamischen Signalnamen und Bitvektoren übernommen werden. Bei einem nach "LD" folgenden Zählvorgang mit "CU" bzw. "CD" bleiben im Beispiel nach Fig.90b die dynamischen Signalnamen und Bitvektoren an "DOUT" unverändert. Für den DIN-Signalstate "SSTA" wurden beispielsweise Werte angenommen. In der Spalte "DOUT-Dezimal" wurden für "LD" beispielsweise Dezimalwerte angenommen.

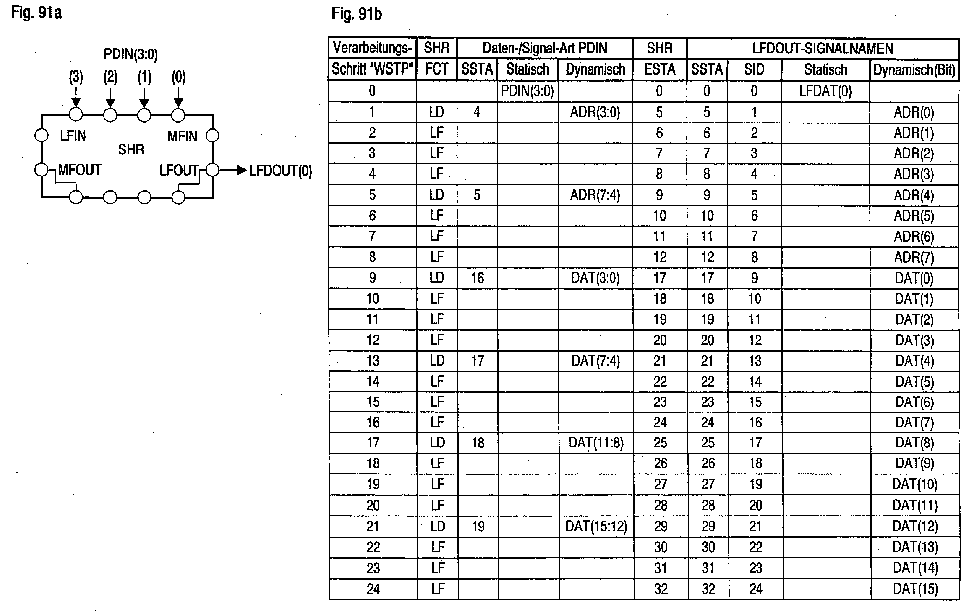

**Fig.91a** zeigt ein 4-Bit Shiftregister "SHR" für Parallel/Serial-Datenwandlung mit dem Parallelinput "PDIN(3:0)" und dem Serialoutput "LFDOUT(0)". In **Fig.91b** wurde ein beispielsweiser statischer Signalname für den SHR-Serialoutput "LFDOUT(0)" mit "LFDAT(0)" angenommen. Der statische Signalname vom SHR-Parallelinput "PDIN(3:0)" ist von seiner Sender-Verbindung abhängig. Wie Fig.91 b zeigt, wurde das "SHR" über die Funktion "LD", in "WSTP1" mit "ADR(3:0)", in "WSTP5" mit "ADR(7:4), in "WSTP9" mit "DAT(3:0)", in "WSTP13" mit "DAT(7:4), in "WSTP17" mit "DAT(11:8)" und in "WSTP21" mit "DAT(15:12), geladen. Nach jedem SHR-Ladevorgang steht am Serialoutput "LFDOUT(0)" das SHR-Bit "0" zur Verfügung, nach anschließendem LF-Shift in drei Schritten sind nacheinander die SHR-Bits "1", "2" und "3" verfügbar. Die PDIN-SSTAs wurden für SHR-Laden "LD" beispielsweise gewählt. Für die Anzeige aller dynamischen Signalnamen mit Bitvector an LFDOUT wurden SID1 bis SID24 definiert, wie Fig.91b zeigt.

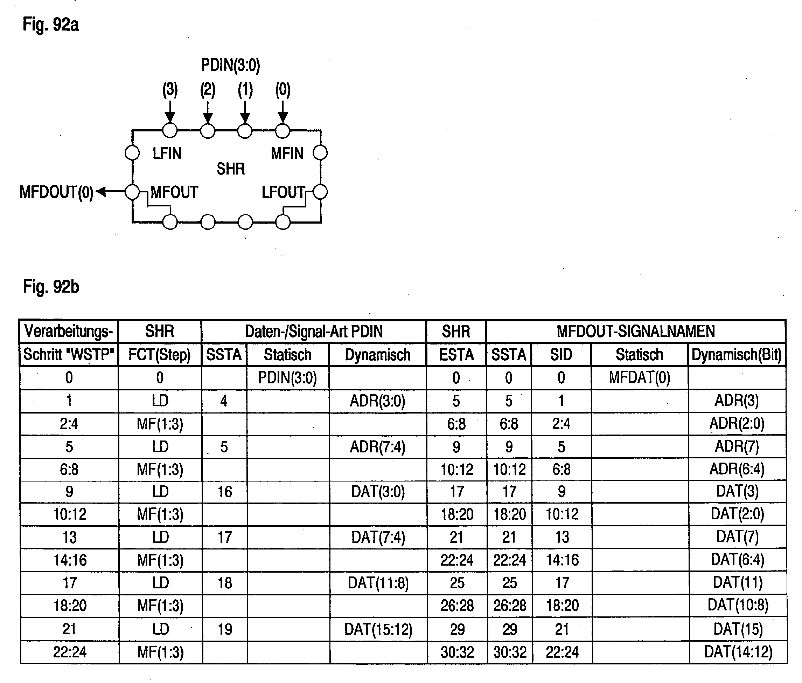

**Fig.92a** zeigt ein 4-Bit Shiftregister "SHR" für Parallel/Serial-Datenwandlung mit dem Parallelinput "PDIN(3:0)" und dem Serialoutput "MFDOUT(0)". In **Fig.92b** wurde ein beispielsweiser statischer Signalname für den SHR-Serialoutput "MFDOUT(0)" mit "MFDAT(0)" angenommen. Der statische Signalname vom SHR-Parallelinput "PDIN(3:0)" ist von seiner Sender-Verbindung abhängig. In Fig.92b ist die SHR-Funktion "LD" identisch zu der in Fig.91b. Die Bit-Reihenfolge an "LFDOUT", Fig.91b, war Bit0-1-2-3, an "MFDOUT" ist die Bit-Reihenfolge Bit3-2-1-0, wie Fig.92b zeigt. Im Unterschied zum LF-Shift in Fig.91b wurde der MF-Shift in Fig.92b in einer Zeile zusammengefaßt. Die Definition "SID" ist zu Fig.91b identisch.

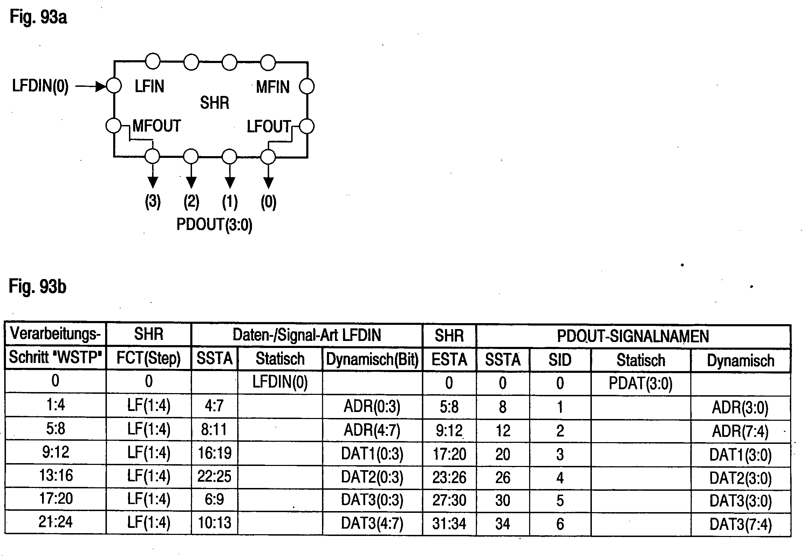

**Fig.93a** zeigt ein 4-Bit Shiftregister "SHR" für Serial/Parallel-Datenwandlung mit dem Serialinput "LFDIN(0) und dem Paralleloutput "PDOUT(3:0)". In **Fig.93b** wurde ein beispielsweiser statischer Signalname für den SHR-Paralleloutput "PDOUT(3:0)" mit "PDAT(3:0)" angenommen. Der statische Signalname vom SHR-Serialinput "LFDIN(0)" ist von seiner Sender-Verbindung abhängig. In Fig.93b ist in jeder Zeile ein serieller Dateninput mit vier Steps "LF(1:4)" dargestellt, entsprechend die Bit-Reihenfolge in Klammern in der Spalte "LFDIN-Dynamisch(Bit)" mit "ADR(0:3)", "ADR(4:7)", usw.. Dabei bedeuten die Klammerwerte die Bit-Reihenfolge (Bit0 bis Bit3), (Bit4 bis Bit7), usw.. Mit SID1 bis SID6 können für PDOUT alle dynamischen Signalnamen mit ihren Bitvektoren von LFDIN abgebildet werden. Die LFDIN-SSTAs wurden beispielsweise gewählt.

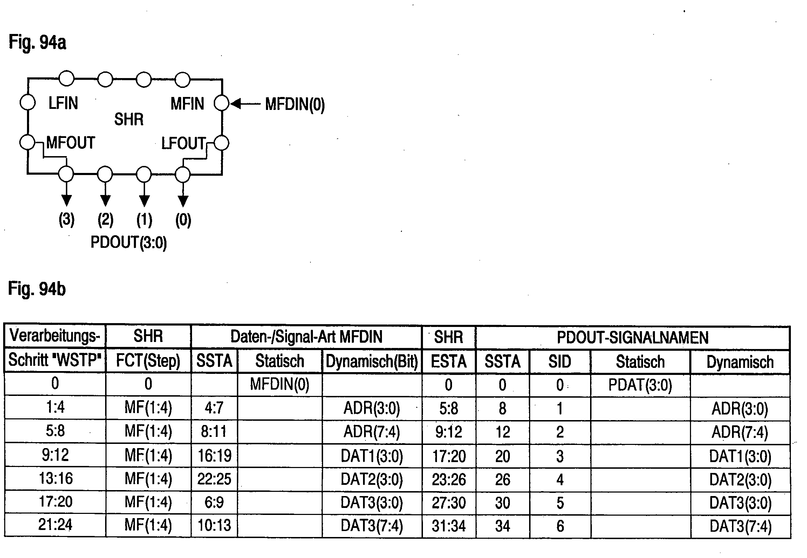

**Fig.94a** zeigt ein 4-Bit Shiftregister "SHR" für Serial/Parallel-Datenwandlung mit dem Serialinput "MFDIN(0)" und dem Paralleloutput "PDOUT(3:0)". In **Fig.94b** wurde ein beispielsweiser statischer Signalname für den SHR-Paralleloutput "PDOUT(3:0)" mit "PDAT(3:0)" angenommen. Der statische Signalname vom SHR-Serialinput "MFDIN(0)" ist von seiner Sender-Verbindung abhängig. Die in Fig.94b dargestellten Inhalte und funktionellen Eigenschaften sind identisch zu Fig.93b, mit der Ausnahme, daß an "MFDIN(0)" die umgekehrte Bit-Reihenfolge mit Bit3 bis Bit0 transferiert wird.

Wie aus der Beschreibung von Fig.80 bis Fig.94 hervorgeht, ist der Elemente-State ESTA eines Elements immer identisch mit dem Signal-State "SSTA" des Elemente-Outputsignals. Nachdem es Elemente-Funktionen gibt, bei denen kein Elemente-Outputsignal bzw. kein Output-SSTA, jedoch immer ein ESTA erzeugt wird, wie beispielsweise bei einem RAM-Schreibvorgang, werden ausschließlich über den Elemente-State "ESTA" die Datenverarbeitungsschritte in einem RTI-Operationsablauf koordiniert bzw. definiert. Der SSTA wird deshalb im SPV nicht verwendet. ESTA wird für alle an einer RTI-Operation beteiligten Elemente gebildet. Für die Bildung von ESTA werden vier Elementegruppen unterschieden, es sind dies RTI-Input-Ports "PI", RTI-Output-Ports "PO", kombinatorische Elemente "COM" und speichernde Elemente "REG", "CNT", "SHR" und "MEM".

Am Beginn einer RTI-Operation besitzen die speichernden Elemente den "ESTA=0". Für "PI" ist mit dem ersten Signalinput einer RTI-Operation der Elemente-State "ESTA=0", mit nachfolgenden Signalinputs wird ESTA kontinuierlich hochgezählt, mit ESTA=1, ESTA=2, ESTA=3, usw..

COM-Elemente und RTI-Outputports "PO" besitzen bei RTI-Operationsbeginn keinen ESTA, sie übernehmen mit dem ersten Signalempfang den ESTA der sendenden Elemente, das kann auch der "ESTA=0" sein.

Wird in einem speichernden Element ein Funktionsschritt ohne einen Signalinput ausgeführt, wie beispielsweise bei einem Counter mit der Funktion "CU" bzw. "CD", dann wird sein ESTA mit jedem Funktionsschritt um Eins erhöht.

Eine denkbare Alternative zu der vorstehend beschriebenen ESTA-Bildung besteht darin, den ESTA eines Elements bei jedem Daten-Empfang bzw. jeder Daten-Verarbeitung bzw. jedem Funktionsschritt um "Eins" zu erhöhen, unabhängig vom ESTA der sendenden Elemente, die einen Dateninput für die Datenverarbeitung eines Elements liefern. Der Nachteil dieser Alternative für die ESTA-Bildung ist, daß bei einer RTI-Operation aus dem ESTA-Wert eines Elements die seriell vorangegangenen Datenverarbeitungs- bzw. Funktions-Schritte und damit die logische Tiefe nicht erkennbar ist. Das Erkennen der logischen Tiefe aus dem ESTA-Wert wird benötigt, wenn bei zeitkritischen Systemen größere logische Tiefen durch parallele Datenverarbeitung verkürzt werden müssen.

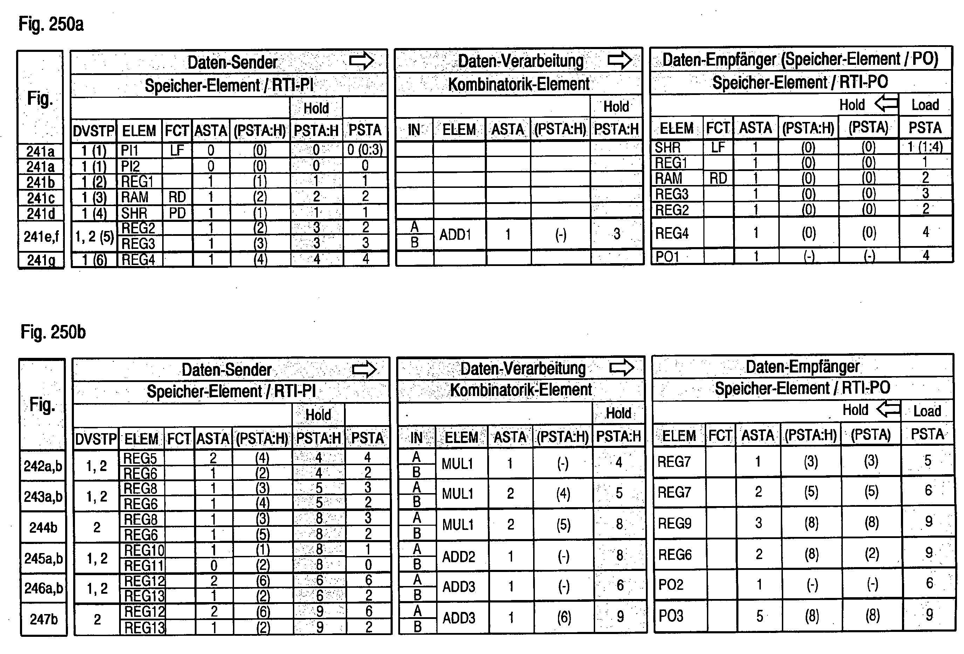

Unter **Fig.241 bis Fig.248** wird in Beispielen die Erzeugung des Parallel-States "PSTA" definiert und dargestellt. Im SPV wird für jede RTI-Operation, Basisoperation oder Basisoperations-Variante, mit PSTA im Datenverarbeitungsablauf festgelegt, welche Elemente quasi gleichzeitig eine Datenverarbeitung ausführen. Eine Übersicht der Datenverarbeitungs-Schritte aus den Beispielen von Fig.241 bis Fig.248 ist für die ESTA-Bildung mit **Fig.249a, Fig.249b** und für die PSTA-Bildung mit **Fig.250a, 250b****,** dargestellt.

In **Fig.251****,** **Fig.251a bis Fig.251i** werden beispielsweise RTI-Datenverarbeitungsabläufe für eine Basis-Operation "OP.1" (OVAR0) mit acht Basis-Operations-Varianten (OVAR1 bis OVAR8) gezeigt, für die in **Fig.252** die Kriterien bzw. Fehler-Ereignisse definiert sind. **Fig.253** zeigt hierzu die Datenverarbeitungs-Schritte aller beteiligten Elemente mit Zuordnung zur Elemente-Input-Variation "VAR" und zu PSTA, noch ohne Berücksichtigung des Bewertungs-PSTA der Kriterien bzw. Fehler-Ereignisse. In **Fig.254** sind die Datenverarbeitungs-Schritte aller beteiligten Elemente mit Zuordnung zur Elemente-Input-Variation "VAR" und zu PSTA, mit Berücksichtigung des Bewertungs-PSTA der Kriterien bzw. Fehler-Ereignisse dargestellt.

### Beschreibung zu Fig.95a-97h:

Die nachfolgende Beschreibung betrifft die spezifischen Eigenschaften und Merkmale eines sich zyklisch wiederholenden Transfers in einer Gruppe von Elementen mit fester Verbindung, die mit "Zyklus-Bereich" (Cycle-Array) bezeichnet wird. Der Beschreibung liegen die Figuren **Fig.95a** bis **Fig.95k****,** **Fig.96a** bis **Fig.96f** und **Fig.97a** bis **Fig.97h** zu Grunde. Die Strukturen dieser Figuren dienen ausschließlich der Erläuterung spezifischer Eigenschaften und Merkmale und sind nicht Gegenstand von SPV-Bildschirm-Darstellungen.

**Fig.95a** zeigt eine Blockstruktur, deren markierte Elemente einen "Zyklusbereich" bilden. Die markierten Elemente werden in eine Anzahl von Transferzyklen "TCYC" (Transfercycle) eingebunden. Der Zyklusbereich wird mit "A" (Array) bezeichnet und erhält eine Zyklusbereichs-Nummer, im Beispiel "A1". Weitere Zyklusbereiche in einer RTI werden mit "A2", "A3", usw. bezeichnet. Wie in Fig.95a dargestellt, besitzt der Zyklusbereich Elemente mit denen ein Transferzyklus beginnt "BEG", im Beispiel sind das CNT1 und CNT2, bzw. endet "END", im Beispiel ist das REG4. Ein Zyklusbereich kann beliebig viele Elemente für "BEG" bzw. "END" haben. Während eines Ablaufs von Transferzyklen können Ergebnisdaten des Zyklusbereichs auch nach aussen transferiert bzw. dort weiterverarbeitet werden. In Fig.95a sind beispielsweise die Datenoutputs von "REG3" und "REG4" nach aussen geführt.

Bevor ein Zyklus in einem Zyklusbereich beginnt, erfolgt in der Regel von extern oder/und intern eine Inizialisierung, wie beispielsweise in **Fig.95b** dargestellt. Beispielsweise werden mit "WSTP1" von "REG1" bzw. "REG2" die Startadressen "STARTADR1" bzw. "STARTADR2" mit der Funktion "LD" in "CNT1" bzw. "CNT2" geladen und mit "WSTP2" die Adreßdaten "ADR1" bzw. "ADR2" mit der Funktion "RD" an "RAM1" bzw. "RAM2" übertragen. Die RAM1-/RAM2-Lesedaten werden in "WSTP3" durch MUL1 multipliziert und mit "WSTP4" in REG3 abgespeichert. In "WSTP5" werden die REG3-Daten mit den REG4-Daten durch ADD1 addiert und mit "WSTP6" in REG4 abgespeichert. Bei Beginn der Inizialisierung wurde beispielsweise "ESTA=0" für alle Elemente angenommen.

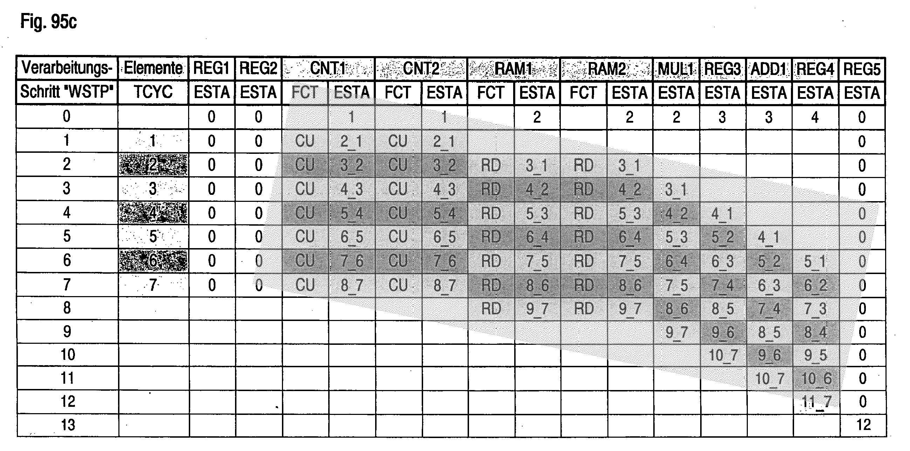

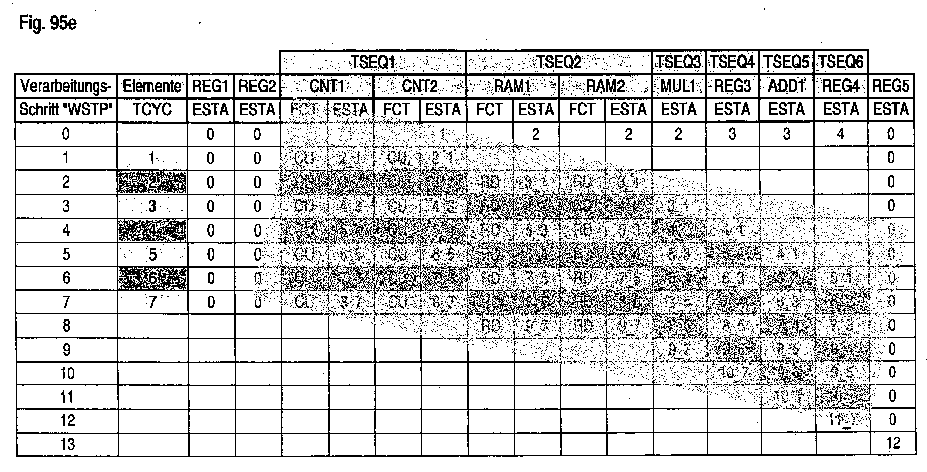

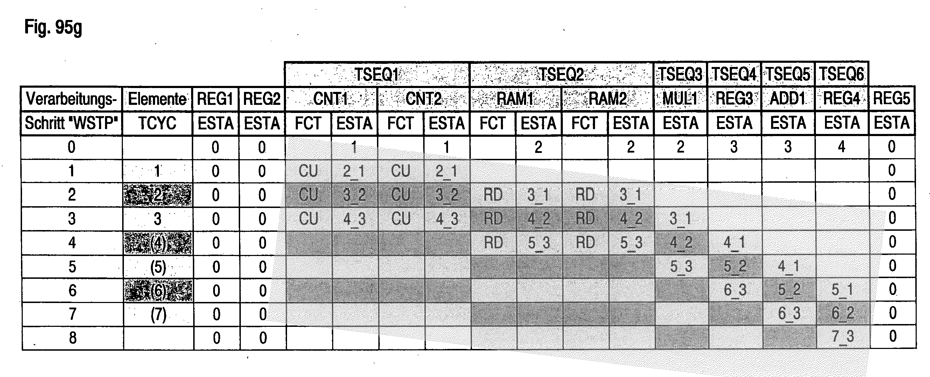

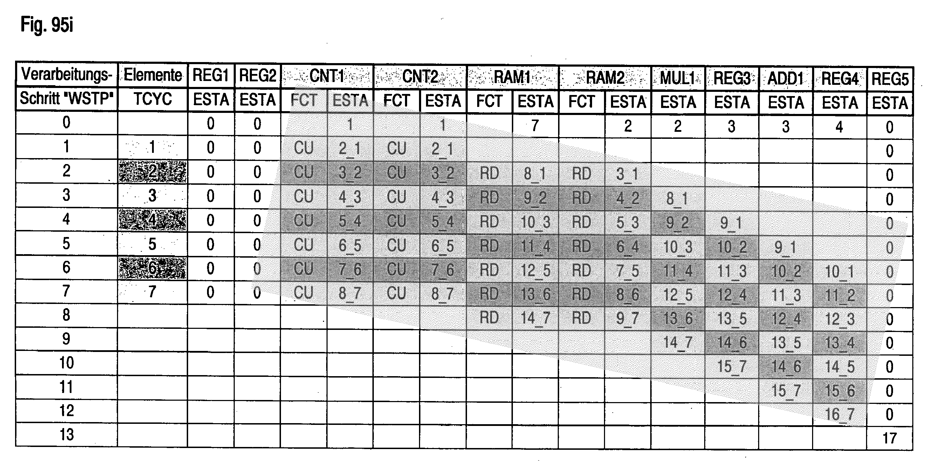

**Fig.95c** zeigt einen Zyklusablauf von beispielsweise sieben Transferzyklen, "TCYC1" bis "TCYC7", in einem Zyklusbereich "A1" nach Fig.95a. Der TCYC ist für alle beteiligten Elemente in der Spalte ESTA mit "ESTA_TCYC" eingetragen. Die Basis für die ESTA-Bildung ist der ESTA der vorangegangenen Inizialisierung unter Fig.95b, und ist in Fig.95c,e,g,i, der Zeile "WSTP=0" dargestellt. Der erste Transferzyklus "TCYC1" beginnt bei CNT1 bzw. CNT2 mit "CU" (Count Up) für eine um Eins erhöhte ADR1 bzw. ADR2 und setzt sich sequentiell fort mit RAM1-bzw. RAM2-Lesen "RD", Multiplikation der RAM1/RAM2-Daten durch MUL1, Datenübernahme in REG3, Addition der REG3/REG4-Daten durch ADD1 und abschließender Datenübernahme in REG4. Der erste Transferzyklus TCYC1 ist im SPV generell schrittweise zu spezifizieren, die folgenden Transferzyklen TCYC2, TCYC3, usw., werden vom SPV automatisch generiert, wie später bei der RTI-Operations-Spezifizierung gezeigt wird.

Für den Daten-Transfer vom Zyklusbereich nach aussen, ist in Fig.95a beispielsweise eine Verbindung von REG4 nach REG5 dargestellt. Der Transfer von REG4 nach REG5 erfolgt in Fig.95c beispielsweise mit "WSTP13".

Wie vorstehend gezeigt, besteht ein TCYC aus mehreren Schritten, sog. Transfersequenzen "TSEQ", innerhalb eines Zyklusbereichs. Die Transfersequenzen werden in der Reihenfolge der parallelen Datenverarbeitungsschritte durchnumeriert, mit "TSEQ1", "TSEQ2", "TSEQ3", usw.. Im Beispiel nach Fig.95a steht "TSEQ1" für CNT1 und CNT2, "TSEQ2" für RAM1 und RAM2, "TSEQ3" für MUL1, "TSEQ4" für REG3, "TSEQ5" für ADD1 und "TSEQ6" für REG4.

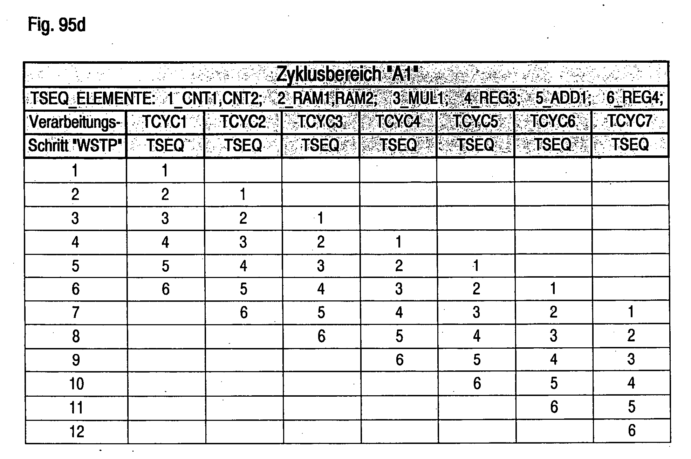

**Fig.95d** zeigt für den Zyklusbereich "A1" aus Fig.95a den Zusammenhang der Verarbeitungsschritte "WSTP" für TCYC1 bis TCYC7 unter Zuordnung von TSEQ1 bis TSEQ6.

In **Fig.95e** ist der Ablauf von Fig.95d im Bereich von TCYC1 bis TCYC7 unter direkter Zuordnung der TSEQn zu den Elementen dargestellt. Mit den Zyklus-Kriterien "TCYC" und "TSEQ" kann das Stoppen "STOP" bzw. Beenden "END" eines Zyklus übersichtlich dargestellt werden.

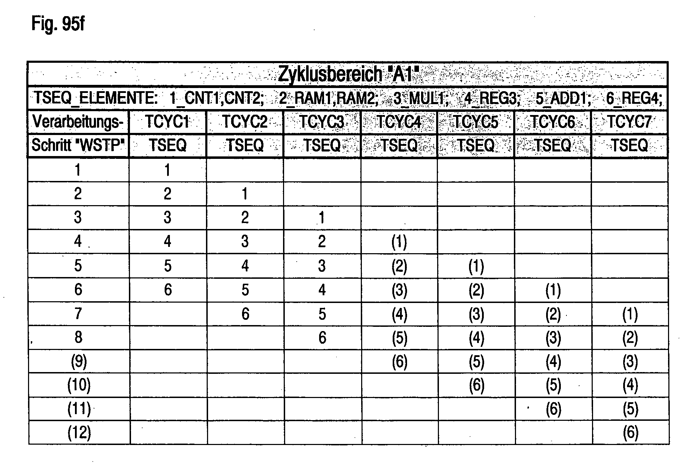

In **Fig.95f** ist beispielsweise ein "STOP" bzw. "END" im TCYC3 bei TSEQ6 dargestellt. Die in TCYC4 bis TCYC7 in Klammer befindlichen TSEQn kommen nicht mehr zur Ausführung.

In **Fig.95g** ist der Ablauf von Fig.95f im Bereich von TCYC1 bis TCYC3 unter direkter Zuordnung der TSEQn zu den Elementen dargestellt. Die in Klammer befindlichen TCYCn, TCYC4 bis TCYC7 kommen nicht mehr zur Ausführung.

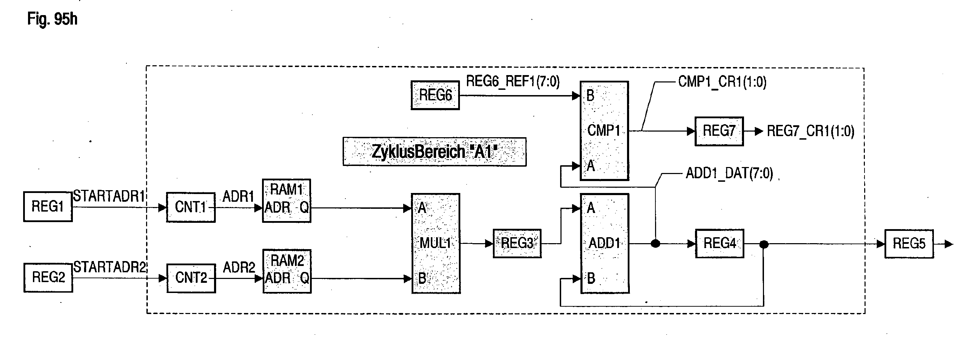

**Fig.95h** zeigt einen zu Fig.95a identischen Zyklusbereich, der eine Zykluskontrolle durch Vergleich der Werte von ADD1_DAT(7:0) mit REG6_REF1(7:0) durchführt. Das Kriterium für Zyklus-STOP bzw. Zyklus-END ist beispielsweise "REG7_CR1(1:0):ADD1_DAT(7:0)>REG6_REF1(7:0)". Die Elemente "REG6", "CMP1" und "REG7" zur Generierung eines Kriteriums "CR" durch Datenvergleich, im Beispiel "CR1", werden im SPV nicht dargestellt, sondern durch Text, beispielsweise mit "R_CR1:ADD1_DAT(7:0)>REF1(7:0)", definiert. Dabei steht das "R" für die Abspeicherung von CR1 in ein Register "REG". Für CR und REG wird in der Reihenfolge der Bearbeitung bzw. Definition von Kriterien eine laufende Nummer vom SPV automatisch zugeteilt.

Eine Zykluskontrolle durch Vergleich von Daten kann in einem Zyklusbereich an beliebigen Stellen erfolgen. Ausserdem können Kriterien für eine Zykluskontrolle durch Verknüpfung beliebiger Daten/Signale von innerhalb oder/und ausserhalb des Zyklusbereichs spezifiziert werden. Bei Spezifizierung eines STOP-Kriteriums ist immer ein zugehörige GO-Kriterium zu spezifizieren. Eine detaillierte Beschreibung der Spezifizierung von Zyklus-Bereichen erfolgt später im Rahmen der RTI-Operations-Spezifizierung.

**Fig.95i** zeigt einen ESTA-Verlauf über TCYC1 bis TCYC7 des Zyklusbereichs "A1" von Fig.95a für einen "RAM1-ESTA=7", zu Beginn des Transferzyklus, in Zeile "WSTP=0".

In **Fig.96a** ist ein Zyklusbereich "A2" dargestellt.

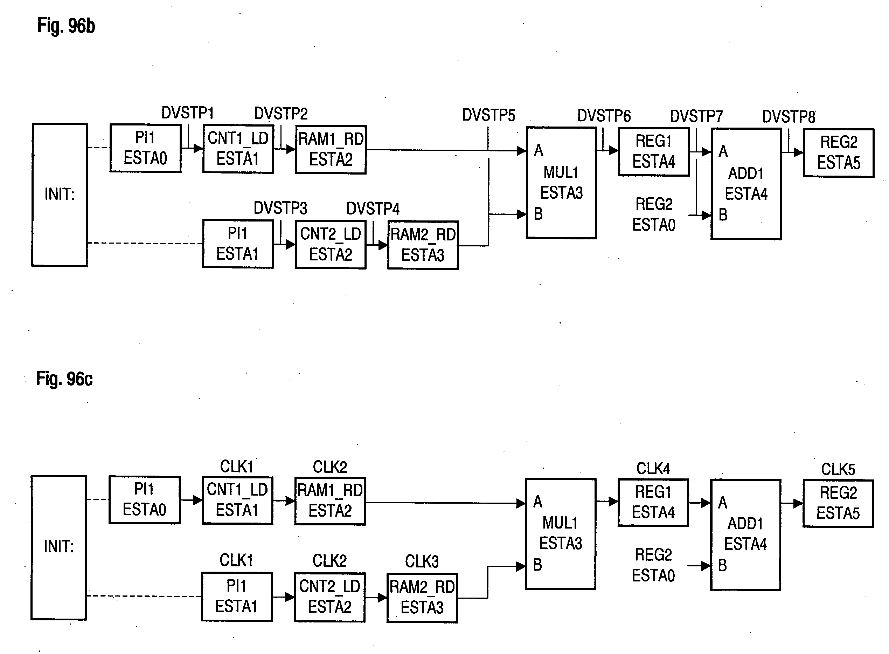

**Fig.96b** zeigt die Inizialisierung des Zyklusbereichs "A2" in spezifizierten Datenverarbeitungs-Steps "DVSTP1" bis "DVSTP8". Wie später bei der RTI-Operations-Spezifizierung gezeigt wird, ist die Reihenfolge der "DVSTPs", im Rahmen der Folge der Ergebnisbildung, vom Entwickler frei wählbar. Fig.96b zeigt beispielsweise folgende DVSTP-Reihenfolge: DVSTP1: RAM1-Anfangsadresse von PI1 nach CNT1(Funktion "LD"), DVSTP2: RAM1-Anfangsadresse von CNT1 nach RAM1 (Funktion "RD"), DVSTP3: RAM2-Anfangsadresse von PI1 nach CNT2 (Funktion "LD"), DVSTP4: RAM2-Anfangsadresse von CNT2 nach RAM2 (Funktion "RD"), DVSTP5: MUL1-Multiplikation der RAM1-Daten mit RAM2-Daten, DVSTP6: MUL1-Ergebnis-Transfer nach REG1, DVSTP7: ADD1-Addition der REG1-Daten mit REG2-Daten, DVSTP8: ADD1-Ergebnis-Transfer nach REG2. Zu Beginn der Inizialisierung ist für alle Elemente im Beispiel von Fig.96b der ESTA=0.

**Fig.96c** zeigt die Inizialisierung des Zyklusbereichs "A2" mit realen Takten (Clocks), "CLK1" bis "CLK5". Die Umsetzung der spezifizierten Datenverarbeitungs-Steps in reale Takte erfolgt im SPV automatisch durch einen Compiler.

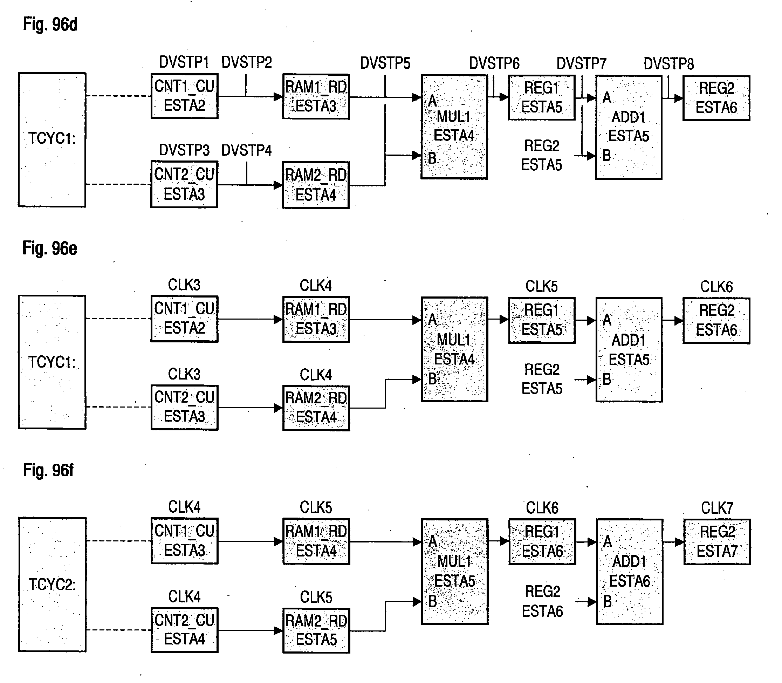

Für den Zyklusbereich "A2", Fig.96a, ist in **Fig.96d** der erste Transfer-Zyklus "TCYC1" mit den spezifizierten Datenverarbeitungs-Steps "DVSTP1" bis "DVSTP8" in beispielsweiser Reihenfolge dargestellt. Dabei werden von CNT1 mit DVSTP1 und CNT2 mit DVSTP3 die RAM-Adressen um Eins hochgezählt (Funktion "CU"), der weiterführende Transfer ist identisch zum Transfer bei der Inizialisierung, wie unter Fig.96b beschrieben. Die ESTA-Bildung ergibt sich auf der Basis der vorangegangenen Inizialisierung. Die nachfolgenden Transfer-Zyklen, "TCYC2", "TCYC3", usw., werden vom SPV automatisch generiert.

**Fig.96e** zeigt die realen Takte für "TCYC1" des Zyklusbereichs "A2". Dabei kann "TCYC1", unter Berücksichtigung der Inizialisierung, frühestens mit "CLK3" beginnen. "TCYC2", **Fig.96f****,** "TCYC3", usw., beginnen je mit einem um Eins "1" erhöhten Takt. Zur Unterscheidung von den Elementen bei der Inizialisierung wurden die Elemente beim Transfer-Zyklus markiert.

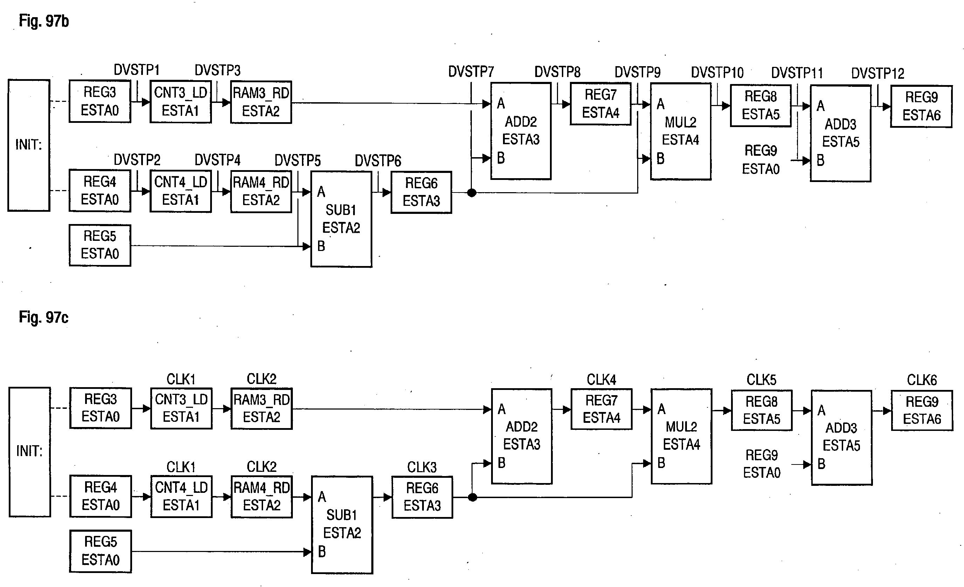

In **Fig.97a** ist ein beispielsweiser Zyklusbereich "A3" dargestellt. **Fig.97b** zeigt die Inizialisierung des Zyklus-Bereichs "A3" mit den spezifizierten Datenverarbeitungs-Steps "DVSTP1" bis "DVSTP12" in beispielsweiser Reihenfolge. **Fig.97c** zeigt die Inizialisierung des Zyklusbereichs "A3" mit realen Takten (Clocks), "CLK1" bis "CLK6".

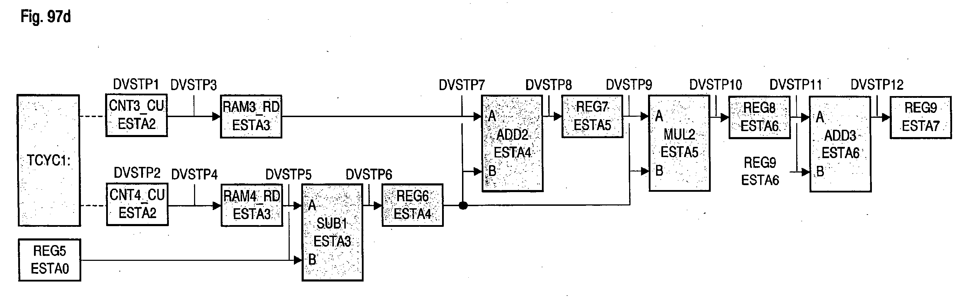

Für den Zyklusbereich "A3", Fig.97a, ist in **Fig.97d** der erste Transfer-Zyklus "TCYC1" mit den spezifizierten Datenverarbeitungs-Steps "DVSTP1" bis "DVSTP12" in beispielsweiser Reihenfolge dargestellt. Dabei werden von CNT3 mit DVSTP1 und CNT4 mit DVSTP2 die RAM-Adressen um Eins hochgezählt (Funktion "CU"), der weiterführende Transfer ist identisch zum Transfer bei der Inizialisierung, Fig.97b. Im Anschluß an die Inizialisierung ergibt sich für CNT3 und CNT4 der ESTA=2.

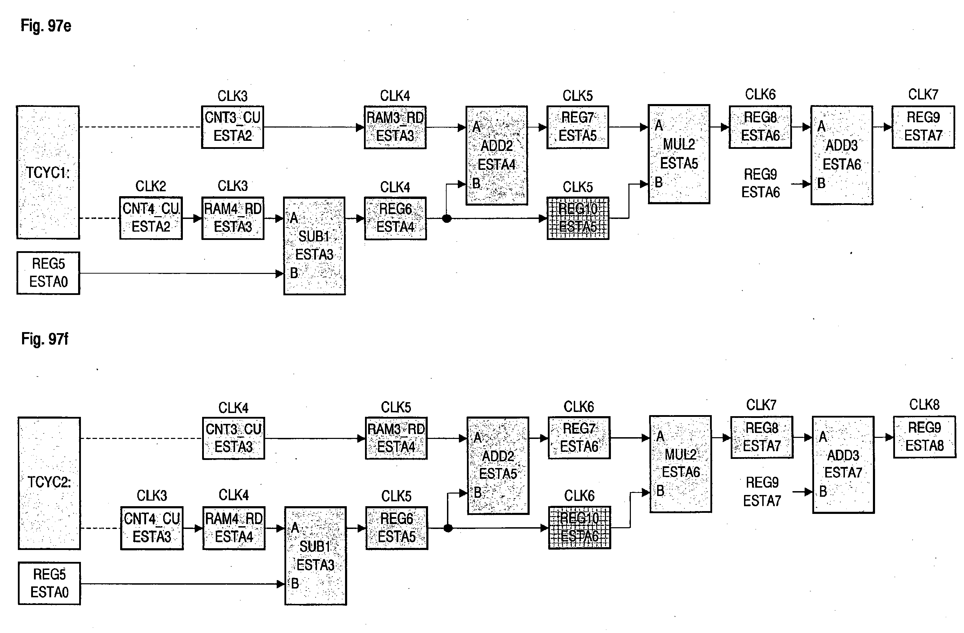

**Fig.97e** zeigt die realen Takte "CLK2" bis "CLK7" für "TCYC1" des Zyklusbereichs "A3". Dabei kann "TCYC1", unter Berücksichtigung der Inizialisierung, frühestens mit "CLK2" beginnen. Für einen "TCYC" in einem Zyklusbereich gilt generell, daß alle Daten/Signale die in Koinzidenz durch ein Element verarbeitet werden, durch die vorgeschalteten speichernden Elemente taktgleich gesendet werden. Im Beispiel der Datenverarbeitung durch "MUL2", Fig.97e, werden die Daten durch "REG7" und "REG6" nicht mit dem gleichen Takt zur Verarbeitung gebracht. Zur Herstellung der Taktgleichheit für die zu MUL2 zu sendenden Daten, wird beispielsweise vom SPV automatisch ein Register "REG10" eingebracht.

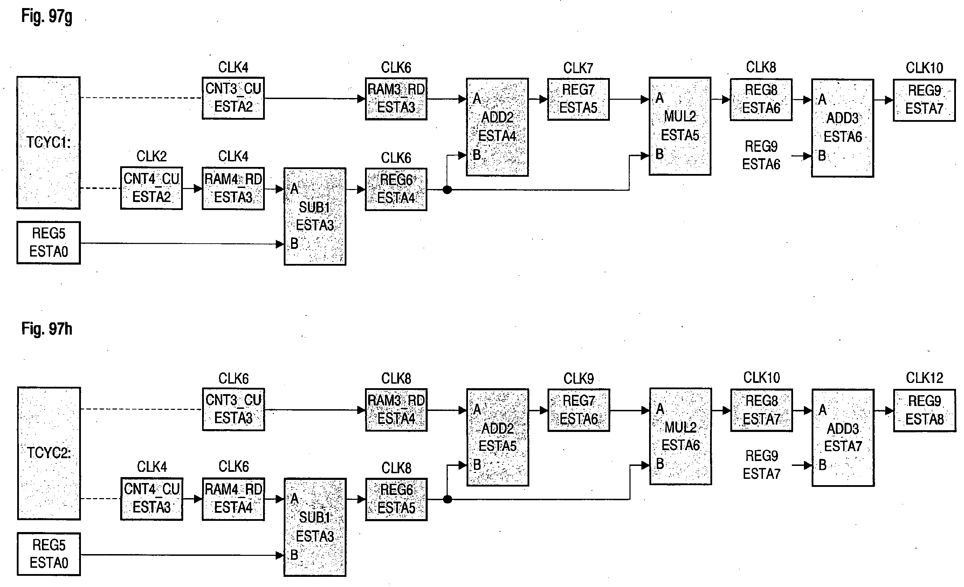

In **Fig.97f** beginnt "TCYC2" mit einem gegenüber "TCYC1" um Eins "1" erhöhten Takt, mit "CLK3". Eine Alternative zur Einbringung eines Registers "REG10", Fig.97e bzw. Fig.97f, ist, die aufeinander folgenden Sequenzen mit einem Abstand von zwei Takten und die Ansteuerung von MUL2 mit einem Takt Unterschied auszuführen, wie in **Fig.97g** bzw. **Fig.97h** dargestellt.

### Beschreibung zu Fig.98a-98h:

Eine RTI-Basisoperation kann in ihrem Ablauf durch Fehlerereignisse oder/und Entscheidungskriterien beeinflußt bzw. variiert werden, wie unter Fig.65 beschrieben wurde. Eine RTI-Basisoperation repräsentiert den RTI-Standard-Operationsablauf. Dieser ist ohne Einfluß von Fehlerereignissen und läuft quasi mit Standard-Entscheidungskriterien ab. Einer RTI-Basisoperation wird die RTI-Operations-Variations-Nummer Null "OVAR0" zugeordnet. Dabei sind alle Signale vom Typ "SVAR" und "AVAR", die die RTI-Operations-Variationen bilden, nicht wahr. Die RTI-Basisoperation wird immer zuerst spezifiziert. Danach können einzelne RTI-Operations-Variationen, die die OVAR-Typ-Bezeichnung "OVAR1 ", "OVAR2", usw., besitzen, spezifiziert werden. Dabei besitzt jeder einzelne OVAR-Typ eine eigene, unverwechselbare Kombination aus einer oder mehreren Koinzidenzen von SVAR- bzw. AVAR-Signalen, durch die Fehlerereignisse oder/und Entscheidungskriterien definiert werden, die einen zur RTI-Basisoperation geänderten RTI-Operationsablauf zur Folge haben.

Im Folgenden werden gegenüber einer RTI-Basisoperation mit OVAR0, verschiedene RTI-Basisoperations-Varianten mit "OVAR1", "OVAR2" und "OVAR3" dargestellt und definiert. **Fig.98a, Fig.98b, Fig.98c** und **Fig.98d** zeigen eine Teilkonfiguration einer RTI, mit den Elementen PI1, PI2, REG1, REG2, REG3 und ADD1, an der die Bildung von "OVAR1", "OVAR2" und "OVAR3" nachfolgend erläutert wird.

**Fig.98a** zeigt den Ablauf einer RTI-Basisoperation mit "OVAR0", darin besitzen alle Elemente die Variations-Nummer Null "VAR0". Im Gegensatz zu RTI-Outputports besitzen RTI-Inputports, im Beispiel PI1, PI2, keine VAR-Zuordnung, da ihre Daten den RTI-Basisoperations-Typ mit definieren und von der Datenverarbeitung nicht variiert werden können.

In **Fig.98b** wird eine erste beispielsweise RTI-Operations-Variation "OVAR1" gezeigt. Dabei wurde an ADD1, Input "B", durch Zuweisung des Senders "REG3" anstelle von "REG2" eine erste ADD1-Variation "VAR1" für einen bestimmten "ESTA" generiert. Würde in der RTI-Operations-Variation "OVAR1" für einen nachfolgenden höheren "ESTA" gegenüber "OVAR0" eine weitere ADD1-Variation erfolgen, dann besitzt diese ADD1-Variation, bezogen auf den höheren "ESTA", ebenfalls die Variations-Nummer "VAR1". Nachdem am ADD1-Output ein neuer Ergebnistyp steht, wurde ein neuer dynamischer Signalnamenstamm "DAT.D" gewählt.

### Generell gilt:

Für eine RTI-Basisoperation besitzen alle beteiligten Elemente und jedes Element für alle ESTA-Werte die VAR-Nummer Null "VAR0".

Die VAR-Nummer eines Elements repräsentiert den Dateninput eines Elements, der aus der Kombination bzw. Zuordnung der den Dateninput sendenden Elemente besteht.

Die VAR-Nummer eines Elements innerhalb einer RTI-Operations-Variation kann für einen "ESTA" Werte zwischen "0" und der OVAR-Nummer der RTI-Operations-Variation annehmen.

In **Fig.98c** ist eine zweite beispielsweise RTI-Operations-Variation "OVAR2" dargestellt. Dabei besitzt ADD1 mit "VAR0" wieder die Kombination bzw. Zuordnung der den Dateninput sendenden Elemente von "OVAR0". Bei REG1 ergibt sich "VAR1" durch den Wechsel der Ansteuerung von Sender "PI1" zu Sender "PI2", entsprechend ergibt sich der Signalnamenstamm am REG1-Output mit "DAT.B". In **Fig.98d** ist eine dritte beispielsweise RTI-Operations-Variation "OVAR3" dargestellt. Hierin besitzen "REG1" und "ADD1", entsprechend ihrer Ansteuerung, die Variations-Nummer "VAR1".

Eine am Dateninput eines Elements neue Kombination bzw. Zuordnung der den Dateninput sendenden Elemente verändert den Typ der Ergebnisbildung an diesem Elemente-Output und an den beteiligten, folgenden Elemente-Outputs in Transferrichtung und wird durch einen sogenannten Transferidentifier "TID" erfaßt. Fig.98a zeigt den Ablauf einer RTI-Basisoperation mit "OVAR0", darin besitzen alle Elemente-Outputs die TID-Nummer Null "TID0".

In Fig.98b wird eine erste beispielsweise RTI-Operations-Variation "OVAR1" gezeigt. ADD1 besitzt dabei "VAR1" und an beiden ADD1-Inputs liegt "TID0" an, entsprechend ist für einen bestimmten "ESTA" am ADD1-Output der "TID1" gültig. Würde in der RTI-Operations-Variation "OVAR1" für einen nachfolgenden höheren "ESTA" gegenüber "OVAR0" eine weitere ADD1-Variation erfolgen, dann besitzt der ADD1-Output, bezogen auf den höheren "ESTA", ebenfalls die TID-Nummer "TID1". Der dynamische Signalnamenstamm wurde mit "DAT.D" gewählt. Generell gilt:
Für eine RTI-Basisoperation besitzen alle beteiligten Elemente und jedes Element für alle ESTA-Werte am Elemente-Output die TID-Nummer Null "TID0".

Die TID-Nummer eines Elemente-Outputs repräsentiert den Dateninput dieses Elements, der aus der Kombination bzw. Zuordnung der den Dateninput sendenden Elemente und dessen TID besteht.

Die TID-Nummer eines Elemente-Outputs innerhalb einer RTI-Operations-Variation kann für einen "ESTA" Werte zwischen "0" und der OVAR-Nummer der RTI-Operations-Variation annehmen.

Für eine übersichtliche Darstellung des Ergebnistyps eines Elements, kann am Elemente-Output für jede TID-Nummer ein entsprechender dynamischer Signalnamenstamm gewählt werden.

In Fig.98c ist eine zweite beispielsweise RTI-Operations-Variation "OVAR2" dargestellt. Dabei besitzt ADD1 die Variations-Nummer "VAR0", der Input an "A" ist mit "TID1" beaufschlagt, sodaß gegenüber Fig.98b eine neue TID-Zuordnung am ADD1-Input "A" entsteht und dadurch der TID am ADD1-Output um Eins auf TID2 erhöht wird. Der dynamische Signalnamenstamm wurde am ADD1-Output mit "DAT.E" gewählt.

In Fig.98d ist eine dritte beispielsweise RTI-Operations-Variation "OVAR3" dargestellt. Hierin wurde auf Grund einer neuen Kombination bzw. Zuordnung am ADD1-Input der TID am ADD1-Output auf "TID3" erhöht und der dynamische Signalnamenstamm mit "DAT.F" gewählt.

Die Inhalte von **Fig.98e** bis **Fig.98h** entsprechen den Inhalten der Reihenfolge von Fig.98a bis Fig.98d, mit der Ausnahme, daß in Fig.98e bis Fig.98h dem ADD1 das REG4 nachgeschaltet ist und die Inputports "PI1", "PI2" mit ihren Signalnämen nicht dargestellt sind. Aus Fig.98e bis Fig.98h ist ersichtlich, daß der von . ADD1 gesendete dynamische Signalnamenstamm zum REG4-Output transferiert wird.

### Generell gilt:

Bei Übernahme der Daten von Elementen mit nur einem Daten-Input in den Elemente-Output wird immer der dynamische Signalnamenstamm vom Elemente-Input in den Elemente-Output übernommen.

"VAR" und "TID" werden bei der RTI-Operations-Spezifizierung vom SPV automatisch generiert.

Der Signalname in einer "RTI" besteht generell aus "Sender-Element-Name_Signalnamenstamm (Vector)". In Fig.98a bis Fig.98h wurde der Vector nicht dargestellt.

Die Bildung von RTI-Basisoperations-Varianten wird unter Fig.237d beschrieben.

### Beschreibung zu Fig.99a-99s:

Nachfolgend wird eine RTI-Operations-Spezifizierung "RTI-OP-SP" im erfindungsgemäßen Spezifikationsverfahren "SPV" beschrieben. Hierzu wird mit Klick in die Schaltfläche "PROGR", Fig.8, das SPV-Programmfenster geöffnet und mit Klick in die Schaltfläche RTI-Operation "RTI_OP" der RTI-Operations-Bildschirm "RTI-OP-BS" im sog. Gruppenlevel geöffnet, wie in **Fig.99a** dargestellt. Der Gruppenlevel wird mit der Schaltfläche "GL" in Zeile "Z6" angezeigt. Der Gruppenlevel belegt im "RTI-OP-BS" den sog. "X-Bereich". Der Gruppenlevel besitzt die für eine Spezifizierung von RTI-Operationen erforderlichen Elemente-Gruppen, mit Input-Port "P_IN", Register "REG", Counter "CNT", Schieberegister "SHR", Kombinatorik "COM" (Combiner), Speicher "MEM" (Memory) und Output-Port "P_OUT". Die Elemente-Typen der Elemente-Gruppen "REG", "CNT", "SHR", "COM" und "MEM" werden aus einer Bibliothek ausgewählt und zu den Elemente-Gruppen des Gruppenlevels übertragen, wie später gezeigt wird. P_IN und P_OUT wurden vorher im SPV-Programm "VERBINDEN" generiert und stehen mit Port-Namen/-Vector für jede RTI zur Verfügung. Im Y-Bereich besitzt der RTI-OP-BS eine senkrechte ELEMENT-Spalte 8, deren Zeilen-Einteilung im Rahmen der RTI-Operations-Spezifizierung erläutert wird. Die Funktionen der Anzeige- und Schalt-Flächen der Zeilen "Z1" und "Z2" wurden unter dem Bildschirm "VERBINDEN" erläutert, mit Ausnahme der Schaltfläche "PROJ_OP". Durch Klick in die Schaltfläche "PROJ_OP" kann direkt in den Projekt-Operations-Bildschirm "PROJ-OP-BS" gewechselt werden, wie später im Zusammenhang erläutert wird. In "Z3" wird in der Schaltfläche "INSTANZ" die aktuelle RTI angezeigt, beispielsweise ist dies die RTI "ABAAC" mit Pfad "2.1.1.3" und Operationsgruppe "OG1".

Soll eine beliebige, andere RTI in den "RTI-OP-BS" gebracht werden, dann wird mit Klick in die Schaltfläche "INSTANZ" eine RTI-Übersicht für das Projekt "A" geöffnet, aus der die entsprechende RTI ausgewählt und mit dem Schließen der RTI-Übersicht in den RTI-OP-BS übertragen wird. Die RTI-Übersicht wurde nicht dargestellt. In "Z4" wird mit "RTI_OP" das Programm für die Spezifizierung von RTI-Operationen angezeigt. Ausserdem wird in "Z4" für "OP_MOD_OVAR_OSTA:", links vom Pfeil, der aktuelle Eintrag des RTI-OP-BS, beispielsweise mit "TYP.C.A_0_0_0", angezeigt. Dabei steht beispielsweise für "OP" die RTI-Operation mit "TYP.C.A", für "MOD" der RTI-Operations-Modus mit "MOD=0" und für "OVAR" die RTI-Operations-Variation mit "OVAR=0". Der Operationsstate "OSTA" ist immer "0", wenn im "PROJ-OP-BS" keine Projekt-Operation, POP bzw. IPOP, spezifiziert wird, wie später noch erläutert wird. Rechts vom Pfeil in "Z4" bedeutet der Eintrag "NEU", daß die aktuelle RTI-Operation links vom Pfeil neu erstellt wird bzw. wurde und nicht von einer Referenz-Operation abgeleitet wurde. Die weiteren Anzeige- und Schalt-Flächen werden im Rahmen der RTI-Operationsspezifizierung erläutert.

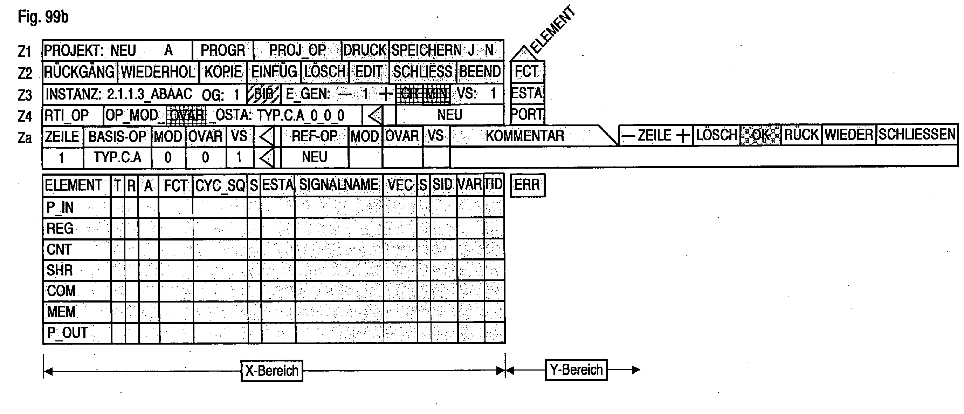

Mit Klick in die Schaltfläche "OP_MOD" in "Z4" wird das "RTI-Operationsfenster" geöffnet, wie **Fig.99b** zeigt. Das RTI-Operationsfenster besitzt in Zeile "Za" die Spalten "ZEILE", RTI-Basisoperation "BASIS-OP" mit Modus "MOD", RTI-Basisoperations-Variante "OVAR", Version "VS" des RTI-Operations-Spezifikations-Status, "PFEIL", Referenzoperation "REF-OP" mit Modus "MOD", Referenz-RTI-Basisoperations-Variante "OVAR", Version "VS" des Referenz-Operations-Spezifikations-Status und "KOMMENTAR", sowie die Schaltflächen, Zeilen-Generierung "-ZEILE+", Löschen "LÖSCH", Bestätigung "OK", Vorgang Rückgängig "RÜCK", Vorgang Wiederholen "WIEDER" und RTI-Operationsfenster Schliessen "SCHLIESSEN".

In der Spalte "ZEILE" wird automatisch eine laufende Zeilen-Nummer vergeben, beginnend in der ersten Zeile mit "1", wie Fig.99b zeigt. Die Einträge in Zeile1 des RTI-Operationsfensters entsprechen im Beispiel den Einträgen der Zeile "Z4" des Gruppenlevels von Fig.99a, VS=1 in Zeile1 des Operationsfensters entspricht der Anzeige "VS:1" in "Z3" des Gruppenlevels von Fig.99b, wenn die RTI-Operations-Spezifikation bereits in Arbeit war und mindestens einmal durch Klick in die Schaltfläche "SPEICHERN" in "Z1" abgespeichert wurde, vorher steht im RTI-Operationsfenster VS=0. Der markierte Pfeil in Zeile1 des Operationsfensters in Fig.99b zeigt auf die aktuelle, zu spezifizierende RTI-Operation. Rechts vom markierten Pfeil in Zeile1, in Spalte "REF-OP" bedeutet "NEU", daß die RTI-Basisoperation "TYP.C.A" neu erstellt und nicht von einer Referenz-Operation abgeleitet wird. In der Spalte "KOMMENTAR" können beliebige Einträge bzw. Notizen zur "BASIS-OP" oder/und "REF-OP" gemacht werden.

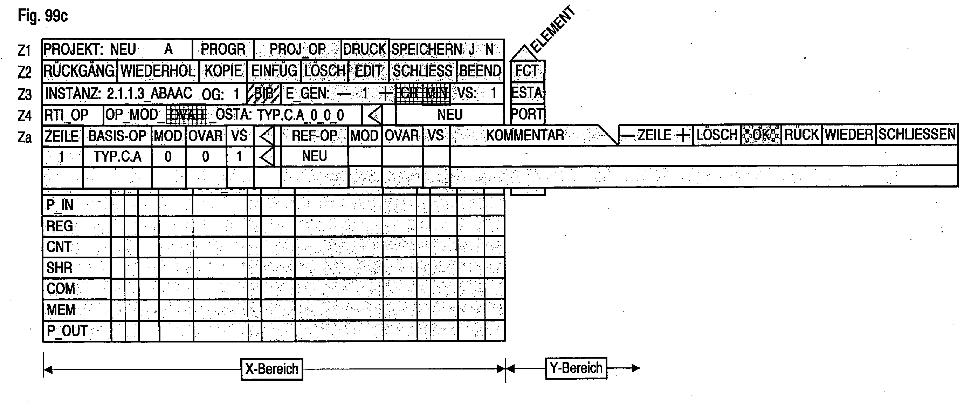

Für einen weiteren Eintrag im RTI-Operationsfenster wurde eine neue Zeile erzeugt, wie **Fig.99c** zeigt. Hierzu wird in der Spalte "ZEILE" durch Klick die Schaltfläche in Zeile "1" aktiviert bzw. markiert und durch einen weiteren Kick in die Schaltfläche "ZEILE" in "Za" diese aktiviert bzw. für eine Zeilen-Generierung vorbereitet. Durch nachfolgenden Klick in die Schaltfläche ZEILE"+" in "Za" wird eine Zeile unterhalb der Zeile "1" generiert. Ist die Schaltfläche "ZEILE" in "Za" deaktiviert und erfolgt ein Klick in der Spalte "ZEILE" in die Schaltfläche der Zeile1, dann wird keine Zeile darunter generiert, sondern die Zeile1 markiert, und es können in Zeile1 beliebige Änderungen an den Einträgen durchgeführt werden.

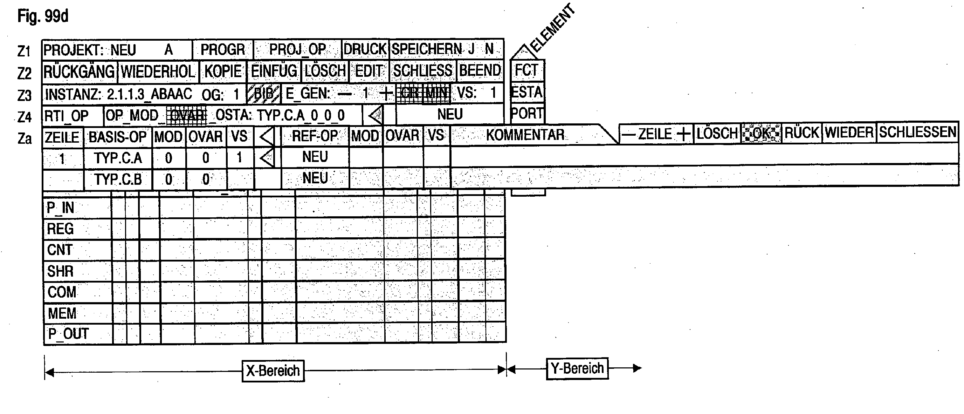

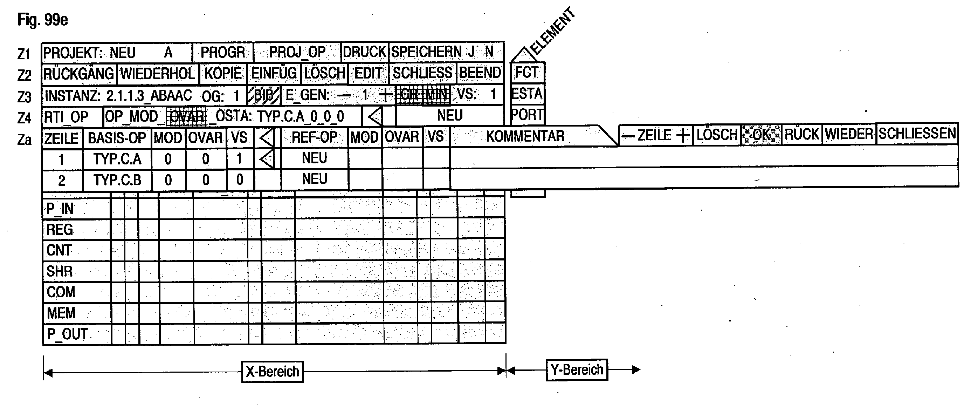

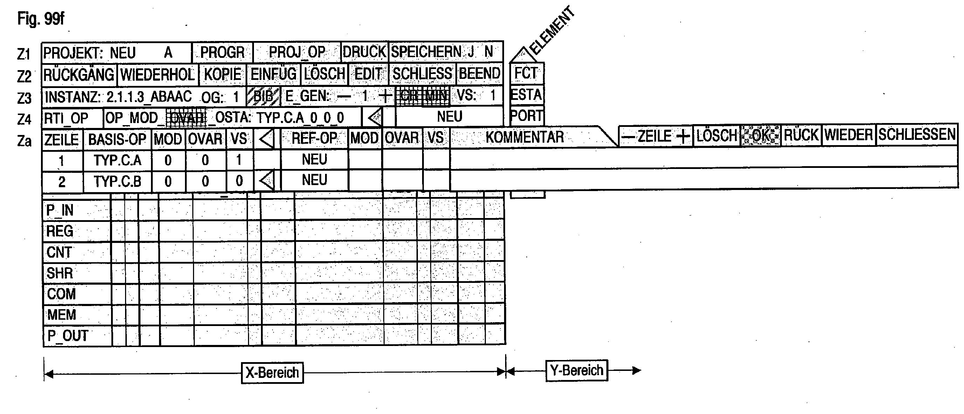

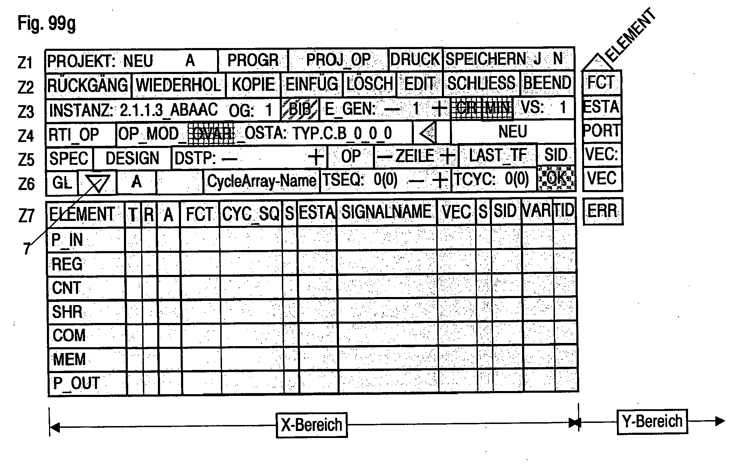

In der neuen, markierten Zeile, unter der Zeile1, wurden beispielsweise die in **Fig.99d** gezeigten Einträge gemacht. Mit Klick in die Schaltfläche "OK" in "Za" werden die Einträge bestätigt, in Spalte "ZEILE" wird für die Zeile mit den neuen Einträgen die Zeilen-Nummer mit "2" und VS mit "0" generiert, die Markierungen in den Zeilen gelöscht, sowie die Schaltfläche "ZEILE" in "Za" deaktiviert, wie **Fig.99e** zeigt. VS=0 bedeutet, daß die Spezifikation dieser RTI-Operation noch nicht begonnen bzw. abgespeichert wurde. Sollen die Operations-Einträge der Zeile2 für eine Spezifikation bereit gestellt werden, so erfolgt in Spalte "PFEIL" in Zeile2 ein Klick, der den markierten Pfeil an diese Stelle setzt, wie in **Fig.99f** dargestellt. Mit Klick in die Schaltfläche "SCHLIESSEN" in "Za" wird das RTI-Operationsfenster geschlossen und die Einträge aus dem RTI-Operationsfenster von Zeile2 in den Gruppenlevel, Zeile4, übernommen, wie **Fig.99g** zeigt.

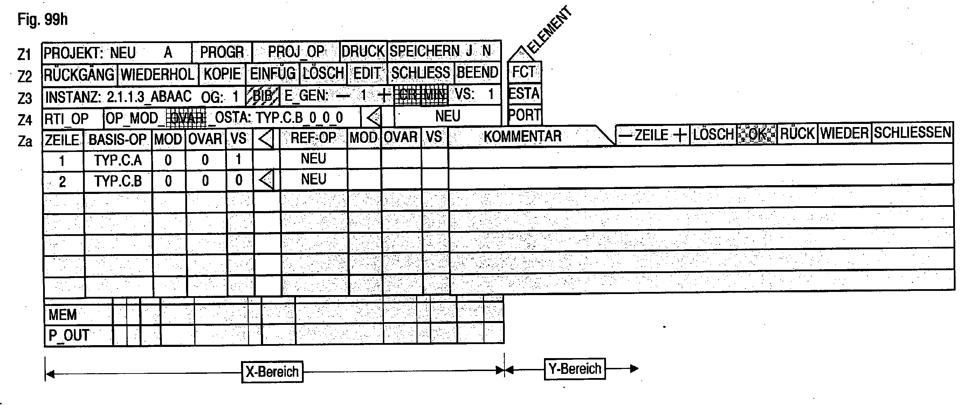

Für den Eintrag weiterer zu spezifizierender Operationen wird erneut das RTI-Operationsfenster durch Klick in die Schaltfläche "OP_MOD" (Z4) geöffnet, wie in **Fig.99h** dargestellt. Durch Aktivierung der Schaltflächen Zeile2 in Spalte "ZEILE" und "ZEILE" in "Za" mit nachfolgenden fünf Klicks in die Schaltfläche ZEILE"+" in "Za" wurden fünf neue Zeilen generiert bzw. für einen Eintrag durch Markierung vorbereitet. Bei einem oder mehreren Klicks in die Schaltfläche ZEILE"-" in "Za" können von unten nach oben eine oder mehrere Zeilen gelöscht werden.

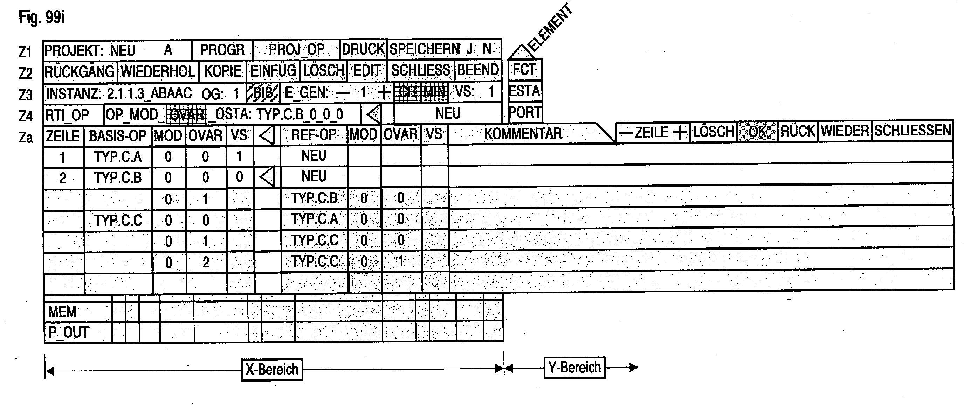

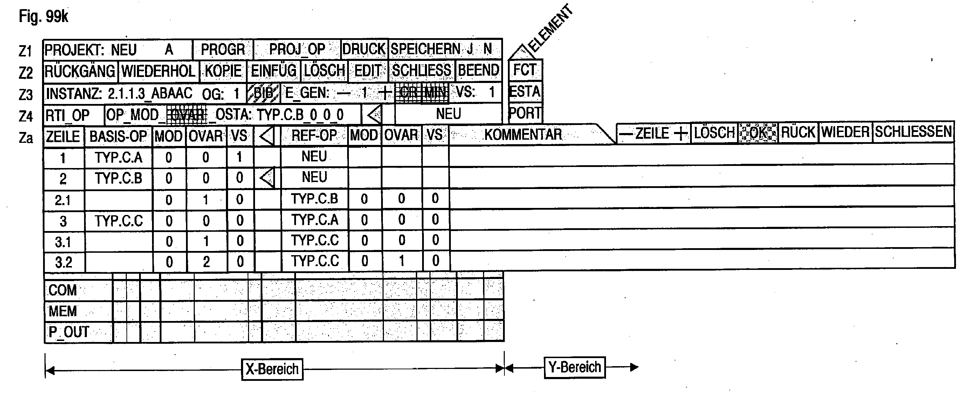

In **Fig.99i** sind beispielsweise Einträge in den auf Zeile2 folgenden 4 Zeilen dargestellt. Mit Klick in die Schaltfläche "OK" in "Za" werden die Einträge bestätigt, die Zeilen-Nummern in Spalte "ZEILE" generiert, die Markierungen in den Zeilen und die Zeile ohne Eintrag gelöscht sowie die Schaltfläche "ZEILE" in "Za" deaktiviert, wie **Fig.99k** zeigt. Die Zeiten-Numerierung in Spalte "ZEILE" erfolgt hierbei strukturiert. Die RTI-Basisoperationen mit "MOD=0" und "OVAR=0" werden mit 1, 2, 3, kontinuierlich durchnumeriert. Für Nicht-RTI-Basisoperationen, d. h., "MOD" oder/und "OVAR" verschieden von "0", wird hinter die Zeilen-Nummer der RTI-Basisoperationen der Index "1", "2", usw., gesetzt, in Spalte "BASIS-OP" erfolgt kein Eintrag. Sollen eine oder mehrere Zeilen gelöscht werden, so werden die zu löschenden Zeilen in der Spalte "ZEILE" durch Klick markiert, dabei muß die Schaltfläche "ZEILE" in "Za" deaktiviert sein, und mit Klick in die Schaltfläche "LÖSCH" in "Za" gelöscht. Dabei entstehende Zeilenlücken werden automatisch geschlossen und eine dabei entstandene Diskontinuität der Zeilen-Numerierung wird automatisch korrigiert. Sollen ein oder mehrere Bedienungsvorgänge rückgängig gemacht werden, so erfolgt dies durch einen oder mehrere Klicks in die Schaltfläche "RÜCK" in "Za". Für den Fall, daß die rückgängig gemachten Bedienungsvorgänge wieder hergestellt werden sollen, erfolgt dies durch Klick in die Schaltfläche "WIEDER" in "Za".

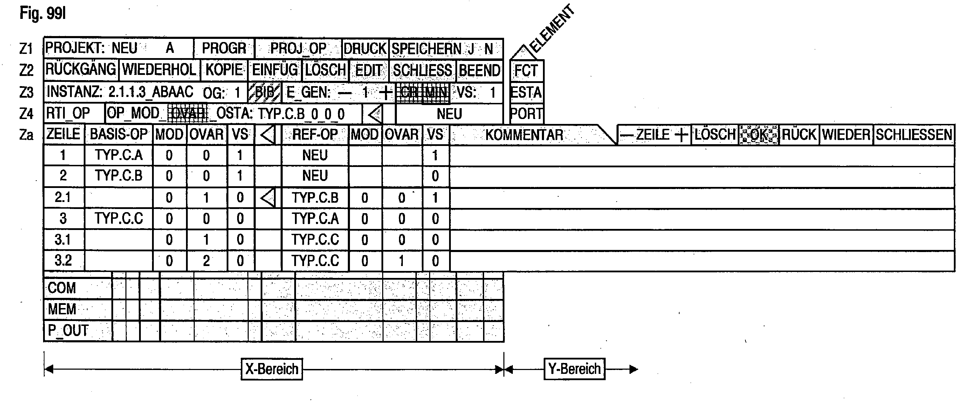

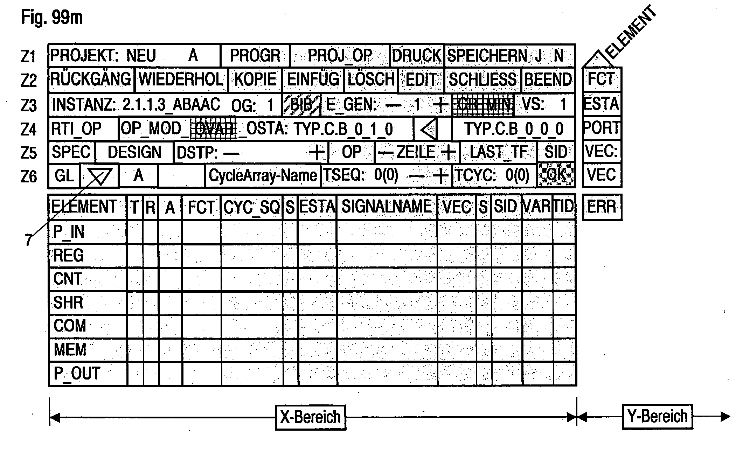

Vorbereitend für eine Übernahme der Operation "TYP.CB" mit "MOD=0" und "OVAR=1" bzw. der zugehörigen Referenz-Operation "TYP.CB" mit "MOD=0" und "OVAR=0" in den Gruppenlevel in Z4 wird der Pfeil durch Klick in die Schaltfläche in Spalte "PFEIL" der Zeile "2.1" in diese plaziert, wie **Fig.99l** zeigt. Voraussetzung für eine Plazierung des Pfeils ist, daß die Version "VS" der Referenz-Operation gleich oder größer "1" ist, d. h., die Referenz-Operation muß spezifiziert sein. Durch Klick in die Schaltfläche "SCHLIESSEN" in "Za" wird das RTI= Operationsfenster geschlossen und die durch den Pfeil in Spalte "PFEIL" ausgewählte Operation bzw. Referenz-Operation in den Gruppenlevel (Z4) übernommen, wie in Fig.99m dargestellt.

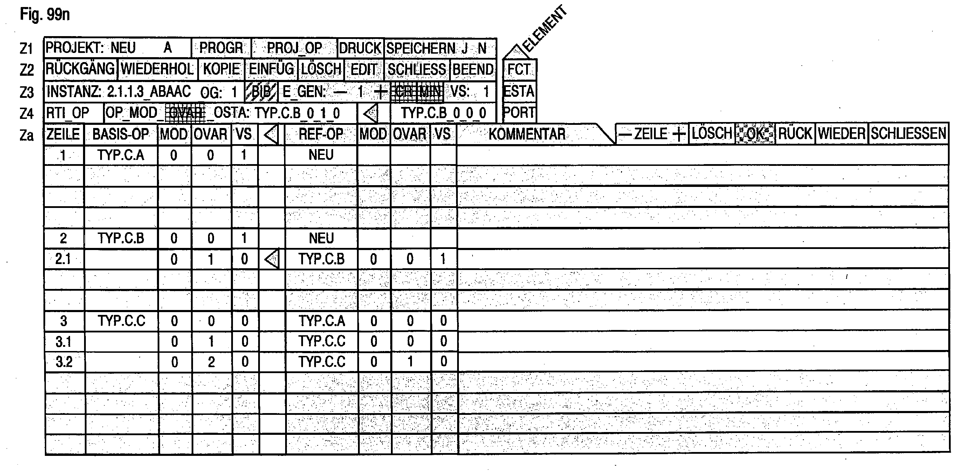

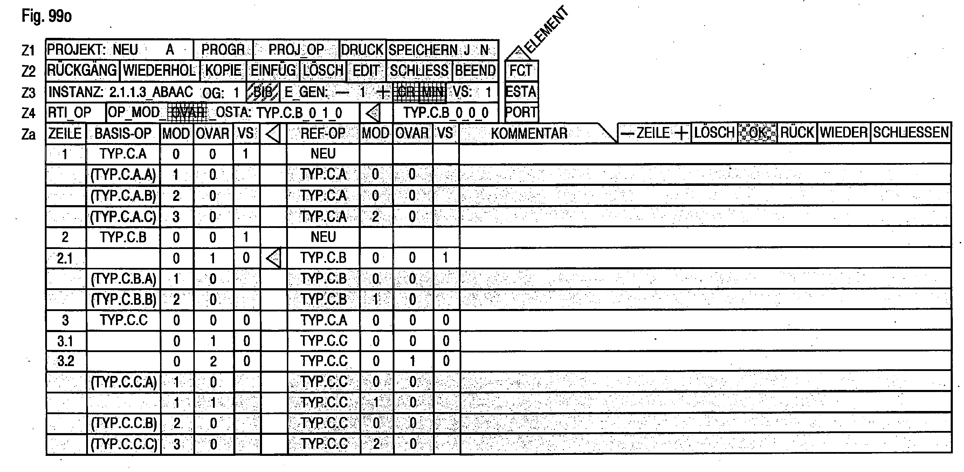

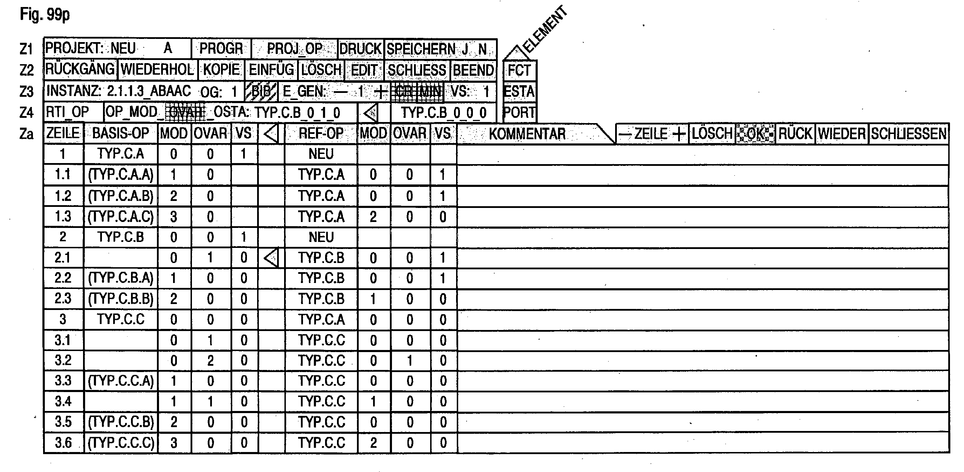

Für eine "POP" bzw. "IPOP" können gegenüber dem Operationsablauf im sog. Basis-Modus mit "MOD=0", durch Modus-Einstellungen verschieden von "MOD=0", unterschiedliche Operationsabläufe festgelegt werden. Für POP- bzw. IPOP-Operationen mit Basis-Modus, "MOD=0", besitzen alle an der Operation beteiligten RTIn den Basis-Modus "MOD=0". Für eine vom Basis-Modus "MOD=0" abweichende POP- bzw. IPOP-Operation, besitzt mindestens eine an der POP- bzw. IPOP-Operation beteiligte RTI, eine vom Basis-Modus "MOD=0" abweichende Modus-Einstellung. Die Speicherung von Operations-Modus-Einstellungen kann vollständig in einer POG bzw. IPOG erfolgen. Erfolgt die Speicherung von Operations-Modus-Einstellungen ganz oder teilweise in den RTIn, dann werden die in den RTIn gespeicherten Operations-Modus-Einstellungen in einer Verbindung von den OGn der RTIn zur zugehörigen POG bzw. IPOG in geeigneter Weise, beispielsweise codiert, übertragen. Nachfolgend werden im RTI-Operationsfenster beispielsweise Operationen mit einem von "0" verschiedenen Modus eingetragen. Hierzu wird aus dem Gruppenlevel, Fig.99m, das RTI-Operationsfenster geöffnet, wie **Fig.99n** zeigt, und die für einen Eintrag erforderlichen Zeilen generiert. **Fig.99o** zeigt die beispielsweisen Einträge. In **Fig.99p** sind die Einträge nach Bestätigung durch Klick in die Schaltfläche "OK" in "Za" dargestellt. Der Pfeil in Spalte "PFEIL" kennzeichnet die Zeile, deren Einträge identisch mit denen des Gruppenlevels in Zeile "Z4" sind. Eine Operation deren Modus verschieden von "0" ist, wird in der Spalte "BASIS-OP" automatisch in eine Klammer gesetzt, da dieser Name kein Operationsname ist, sondern ausschließlich der Erläuterung dient. Beispielsweise in Zeile1.2 ist die Operation durch "TYP.C.A" und "MOD=2" definiert und durch "TYP.C.A.B" zusätzlich erläutert. Soll diese Operation als RTI-Basisoperation geführt werden, dann ist sie in Spalte "BASIS-OP" mit "TYP.C.A.B" und in Spalte "MOD" mit "0" einzutragen.

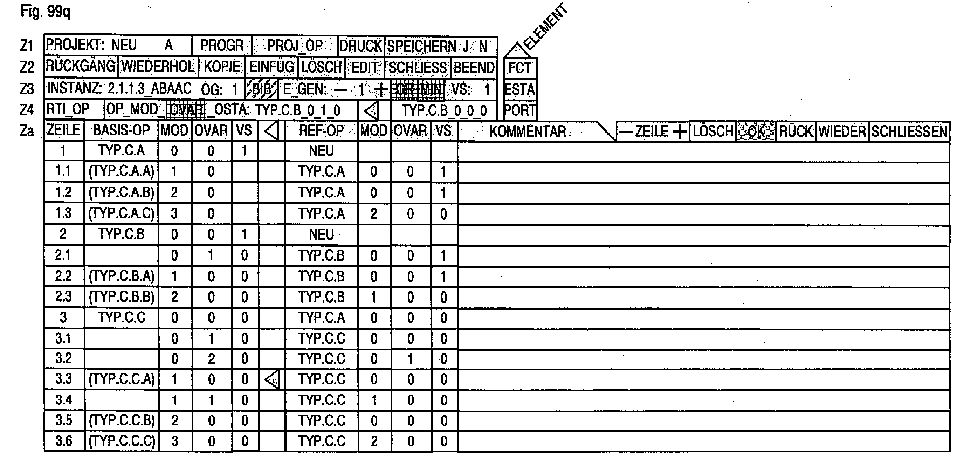

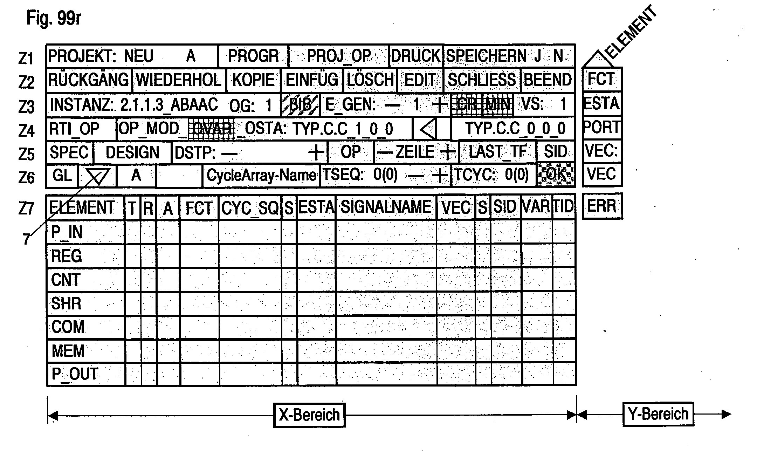

In Spalte "PFEIL" wurde durch Klick in die Schaltfläche der Zeile"3.3" eine neue Operation für die Spezifizierung bereitgestellt, wie **Fig.99q** zeigt, die mit Klick in die Schaltfläche "SCHLIESSEN" in "Za" in den Gruppenlevel, **Fig.99r****,** übernommen wurde. Ist für eine "BASIS-OP-Modifikation", wie in Fig.99q, Zeile3.3, "TYP.C.C" mit "MOD=1", ein Modifikationsname, im Beispiel "TYP.C.C.A", festgelegt, so kann beispielsweise dieser Modifikationsname im Gruppenlevel, Fig.99r, durch Kontakt des Cursors mit der Anzeige "TYP.C.C_1_0_0" in "Z4", an Stelle dieser Anzeige mit "TYP.C.C.A_0_0_0" eingeblendet werden.

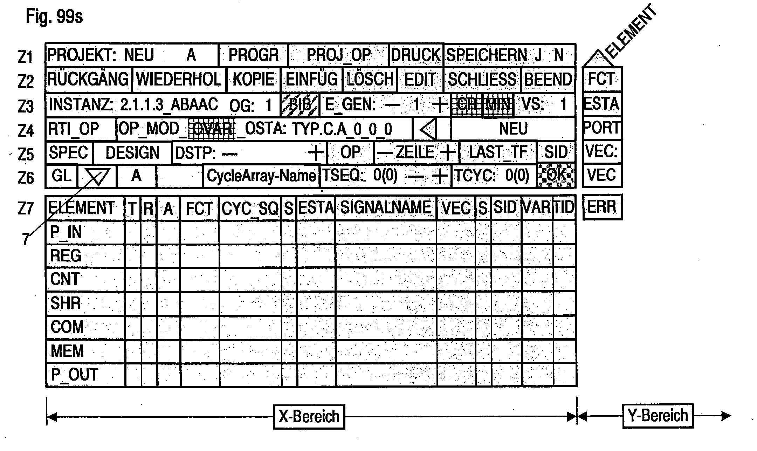

Nachfolgend wird der Transfer der Elemente-Typen aus einer Bibliothek zu den Elemente-Gruppen erläutert. **Fig.99s** zeigt den RTI-OP-BS im Gruppenlevel mit einer zu spezifizierenden RTI-Operation "OP_MOD_OVAR_OSTA: TYP.C.A_0_0_0<NEU".

### Beschreibung zu Fig. 100a-140:

Mit einem Klick in die Schaltfläche "BIB" in Z3, Fig.99s, wird ein Bibliotheksfenster "ELEMENTE-TYPEN" geöffnet, **Fig.100a****,** das die Elemente-Gruppen "REG", "CNT", "SHR", "COM" und "MEM" besitzt. Die Elemente-Gruppen sind noch ohne Elemente-Typen. In Zeile "Z1" stehen von links nach rechts, der Bibliotheksfenster-Titel "ELEMENTE-TYPEN", der automatische Eintrag der RTI von der der Aufruf kam, im Beispiel ist das die RTI "2.1.1.3 _ABAAC", Ersteller-Version und - Datum des Bibliotheksfensters "Vers:/Datum:" wird manuell eingetragen, die Schaltfläche Funktions-Bibliothek "FCT-BIB", die Schaltfläche Löschen "LÖSCH", Eingaben rückgängig machen "RÜCKGÄNG" bzw. wiederholen "WIEDERHOL" und Bibliotheksfenster schließen "SCHLIESSEN". Zeile "Z2" besitzt die Spalten, "ELEMENT", "BEZEICHNUNG" des Elements, "KOMMENTAR", "HERSTELLER/TECHNOLOGIE-TYP" und "MODELL/SPRACHEN".

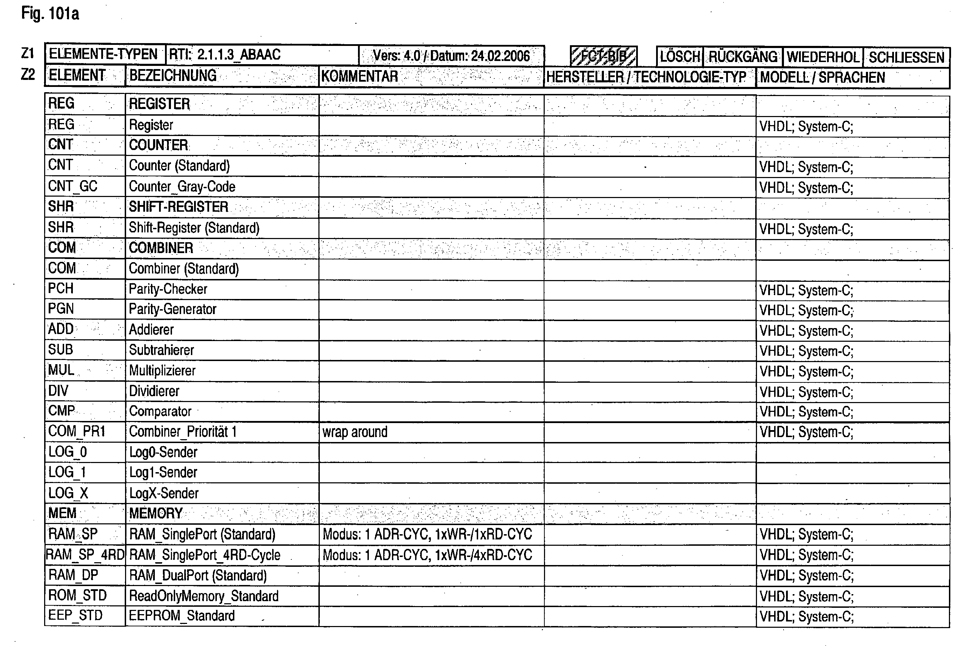

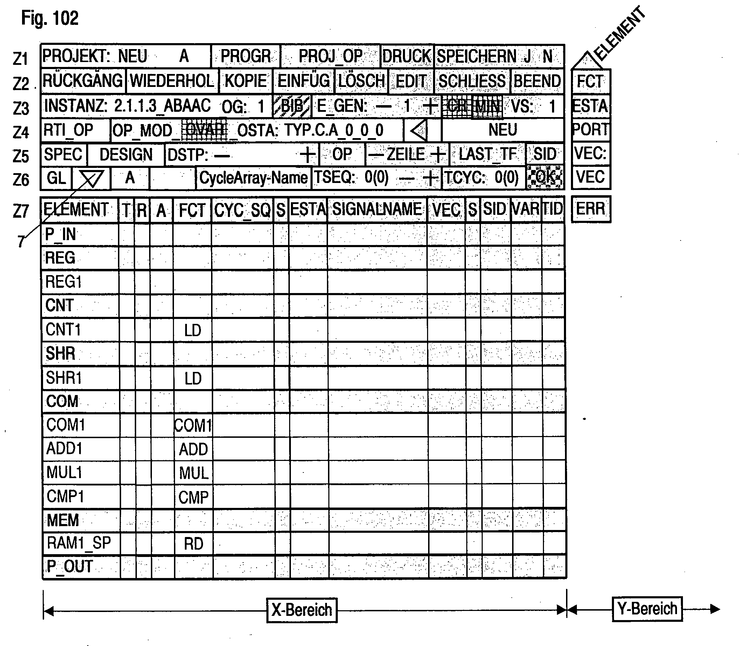

Mit Klick in die Schaltfläche "FCT-BIB", wird eine Funktions-Bibliothek geöffnet, nicht dargestellt, in der die für RTI-OP-Spezifikationen erforderlichen Elemente-Typen verfügbar sind. Nach Auswahl der Elemente-Typen für die Instanz "ABAAC" und Schließen der Funktions-Bibliothek erfolgt automatisch der Wechsel in das Bibliotheksfenster mit den in **Fig.100b** beispielsweisen, gezeigten Elemente-Typen. Die Elemente-Typen sind als Modelle mit einer bestimmten Funktionssprache, beispielsweise "VHDL", "System-C", etc., hinterlegt. Der Elemente-Typ "COM" (Standard) ist in der RTI-OP-Spezifizierung funktionell frei verwendbar und besitzt deshalb noch keine Funktionsbeschreibung. Der Elemente-Typ "COM" (Standard) kann bei oder nach der RTI-OP-Spezifizierung, nach Umschaltung in die Funktions-Bibliothek, funktionell beschrieben werden. Die Elemente-Typen "LOG_0", "LOG_1" und "LOG_X" repräsentieren Sender mit statischen, logischen Signalen, die Elemente-Eingängen zugewiesen werden können. Für eine Minimierung der Elemente-Typen in der Funktions-Bibliothek wird die Anzahl der Eingänge und Ausgänge eines Elemente-Typs erst bei der RTI-Operations-Spezifizierung festgelegt. Die Auswahl der Elemente im Bibliotheksfenster für den RTI-OP-BS erfolgt durch Klick in Spalte "ELEMENT" der ausgewählten Elemente-Zeile. Hierdurch werden die ausgewählten Elemente durch eine Markierung gekennzeichnet, wie **Fig.101a** zeigt. Die ausgewählten Elemente-Typen sind, "REG", "CNT" (Standard), "SHR" (Standard), "COM" (Standard), "ADD", "MUL", "CMP" und "RAM_SP" (Standard). Durch Klick in eine markierte Schaltfläche in Spalte "ELEMENT" wird die Markierung gelöscht und die Elemente-Auswahl deaktiviert. Durch Doppelklick in Spalte "ELEMENT" wird eine Elemente-Zeile komplett markiert und kann durch Klick in die Schaltfläche "LÖSCH" in "Z1" gelöscht werden. Mit Klick in die Schaltfläche "SCHLIESSEN" in "Z1" wird das Bibliotheksfenster geschlossen und die ausgewählten Elementetypen in den Gruppenlevel des RTI-OP-BS transferiert, wie in **Fig.102** dargestellt.

Soll beispielsweise die Funktions-Beschreibung für ein COM-Standard-Element erstellt werden, im Beispiel für "COM1", so erfolgt dies in der Funktions-Bibliothek. Der Wechsel vom RTI-OP-BS in die Funktions-Bibliothek erfolgt im Beispiel durch Doppelklick in der COM1-Zeile in Spalte "FCT". Nach der Funktions-Beschreibung von "COM1" erhält das Element einen modifizierten Namen, beispielsweise "COM1_F", "F" steht für Funktion, und wird mit dem Schließen der Funktions-Bibliothek in den RTI-OP-BS transferiert. Dort ersetzt "COM1_F" den COM-Standard-Namen "COM1". Die Elemente jedes Typs im RTI-OP-BS, Fig.102, werden durchnumeriert, deshalb steht hinter jedem Element, das vom Bibliotheksfenster, Fig.101a, in den Gruppenlevel des RTI-OP-BS transferiert wurde, eine "1". Ausserdem wurden in den Gruppenlevel automatisch beispielsweise Funktions-Standardvorgaben in Spalte Funktion "FCT" eingetragen, für: "CNT1" Load "LD", Schieberegister "SHR1" Load "LD", "ADD1" Addition "ADD", "MUL1" Multiplikation "MUL", "CMP1" Komparation "CMP" und "RAM1_SP" Read "RD".

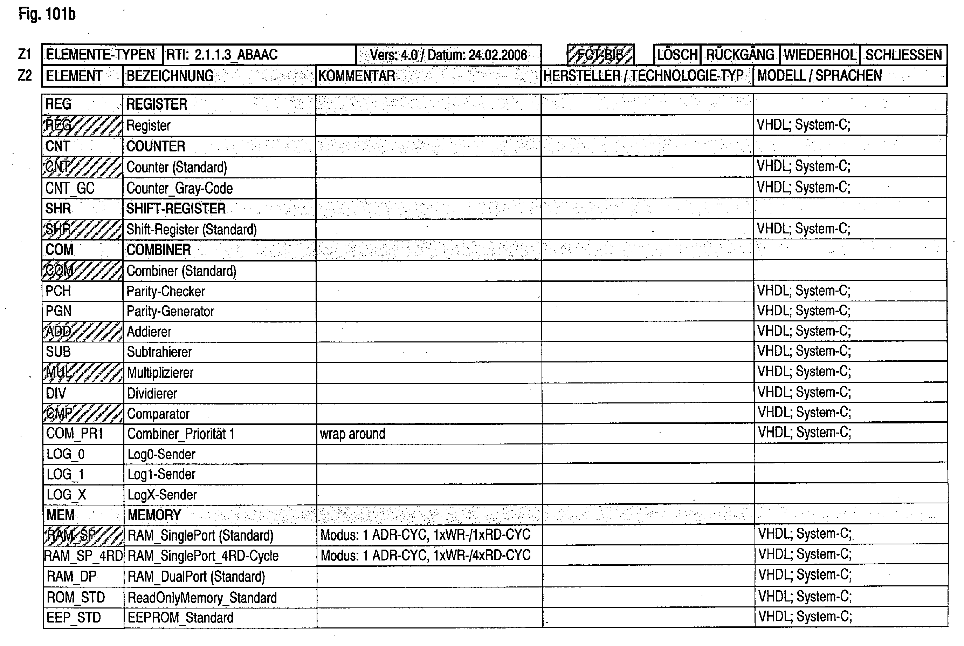

Bei Rückkehr in das Bibliotheksfenster durch Klick in die Schaltfläche "BIB" in "Z3", **Fig.101b****,** werden die vorher ausgewählten und in den Gruppenlevel transferierten Elemente-Typen beispielsweise schraffiert, aktiviert dargestellt und es können Elemente-Typen für den Gruppenlevel zusätzlich ausgewählt oder/und deaktiviert werden. Elemente-Typen die in der RTI-Operationsspezifizierung bereits verwendet werden, können im Bibliotheksfenster nicht deaktiviert werden.

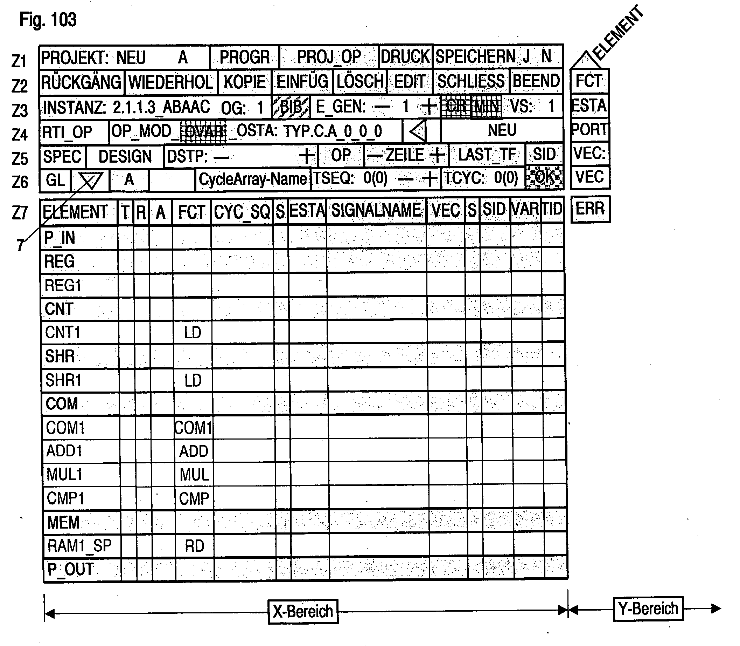

Im Gruppenlevel kann für jeden Elemente-Typ eine beliebige Anzahl von Elementen generiert werden. Hierzu wird die Schaltfläche des gewünschten Elementetyps, beispielsweise "REG1" durch Klick aktiviert bzw. markiert und zusätzlich die Schaltfläche "E_GEN:" in Z3 durch Klick aktiviert, wie **Fig.103** zeigt.

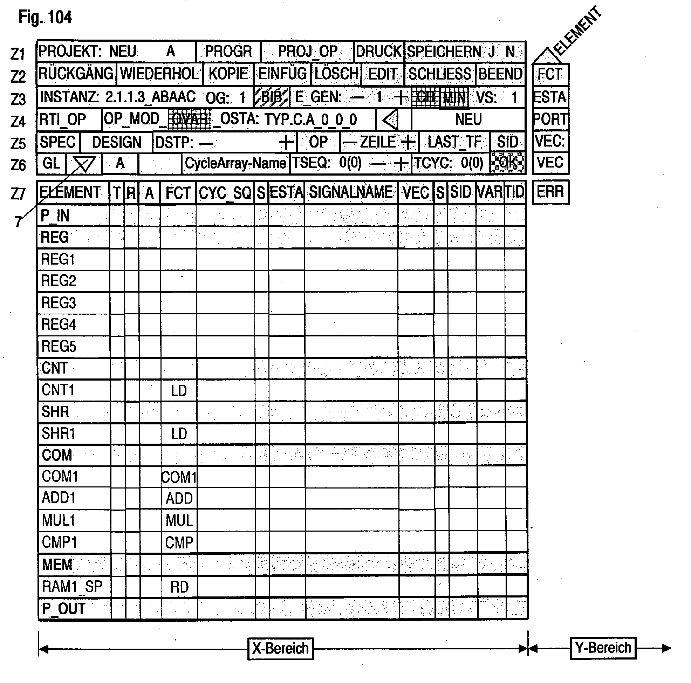

Die Zahl "1" nach der Schaltfläche "E_GEN:" zeigt an, daß vom Elementetyp "REG" ein Element vorhanden ist. Wird anstelle der "1" eine "5" eingetragen, oder durch 4 Klicks in die Schaltfläche "+" die REG-Anzahl von "1" auf "5" erhöht und mit Klick in die Schaltfläche "OK" in Z6 bestätigt, dann werden in der Elementegruppe "REG" vier zusätzliche Register, REG2 bis REG5 eingetragen, wie in **Fig.104** dargestellt. Dabei wird die Schaltfläche "E_GEN" in "Z3" deaktiviert.

Wird erneut die Schaltfläche "E_GEN:" und eine beliebige REG-Elemente-Schaltfläche durch Klick aktiviert, wie in **Fig.105** dargestellt, so wird für die Schaltfläche "E_GEN:" die REG-Elemente-Anzahl mit "5" angezeigt, und es kann die REG-Elemente-Anzahl durch Eintrag oder durch Klicks in die Schaltflächen "+" oder "-" erhöht oder erniedrigt werden. Die Verringerung der Elemente-Anzahl erfolgt kontinuierlich von der höchsten Ziffer zu niedrigen Ziffern hin. Die Verwendung von Elementen für die Spezifikation im Designlevel "DL", wie nachfolgend gezeigt wird, beginnt immer mit der Elemente-Ziffer "1" und setzt sich kontinuierlich, aufsteigend fort. Elemente die in der Spezifikation verwendet wurden, können im Gruppenlevel nicht gelöscht werden. Die Elemente-Generierung "E_GEN" für beliebige Elementegruppen bzw. Elementetypen ist identisch zu der von "REG", wie vorstehend beschrieben.

Werden ein oder mehrere RTI-externe Komponenten für eine RTI-Operations-Spezifizierung benötigt, wie unter Fig.79 beschrieben, so werden diese von der Funktions-Bibliothek in den Gruppenlevel "GL" des RTI-OP-BS übertragen. Beispielsweise könnte an Stelle oder zusätzlich zu "RAM1_SP", Fig.105, der Memory "MEM1", Fig.79, als "MEM1_ex" in den Gruppenlevel "GL" des RTI-OP-BS, übertragen werden. Voraussetzung für die Verwendung einer RTI-externen Komponente ist, daß die Funktions-Beschreibung und die Verbindungs-Parameter in der Funktions-Bibliothek bzw. im SPV hinterlegt sind.

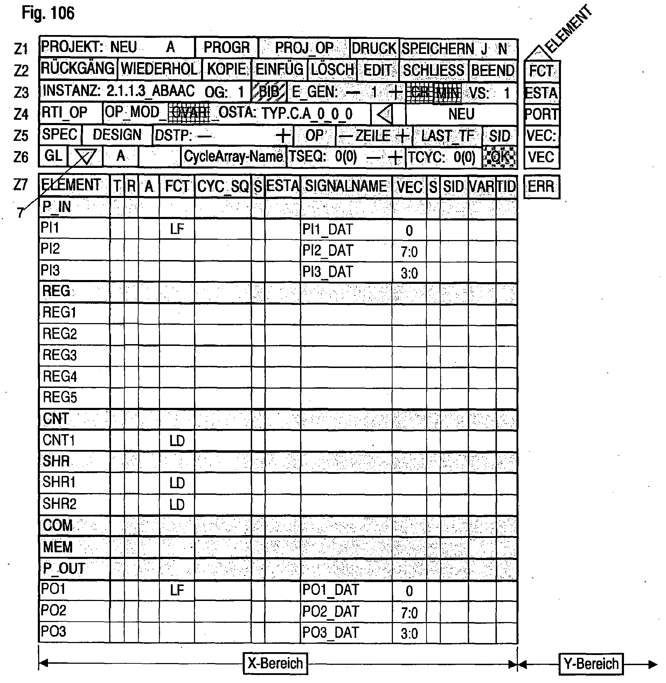

Durch je einen Klick in die markierten Zeilen der Elementegruppen "COM" und "MEM" wurden diese Elementegruppen geschlossen, und durch je einen Klick in die markierten Zeilen der Elementegruppen "P_IN" und "P_OUT" wurden diese Elementegruppen geöffnet, wie in **Fig.106** dargestellt. Generell gilt für das Öffnen und Schliessen von Elementegruppen, eine geschlossene Elementegruppe wird durch einen Klick an beliebiger Stelle ihrer markierte Zeile geöffnet und mit einem nachfolgenden Klick wieder geschlossen. Für die Ein-Bit-Vector-Signale "PI1" und "PO1" wurde beispielsweise die Funktions-Standardvorgabe Bit Least First "LF" gewählt, wie später im Zusammenhang noch näher erläutert wird.

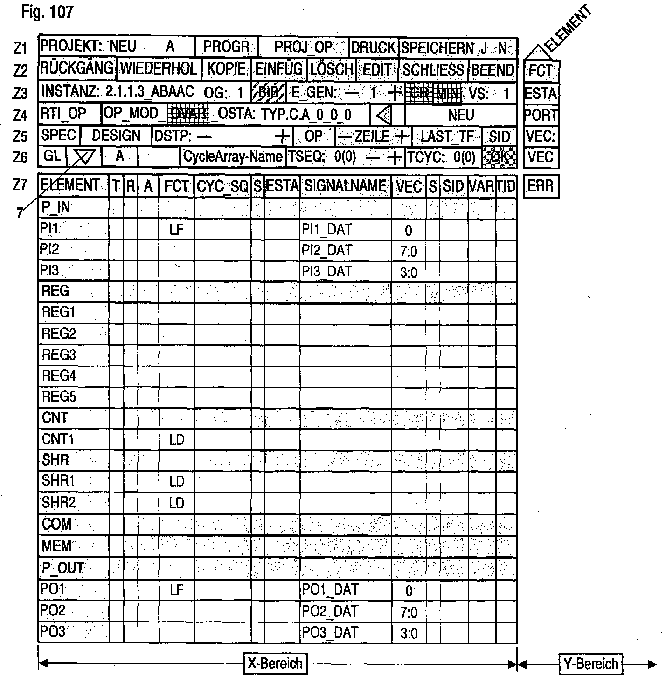

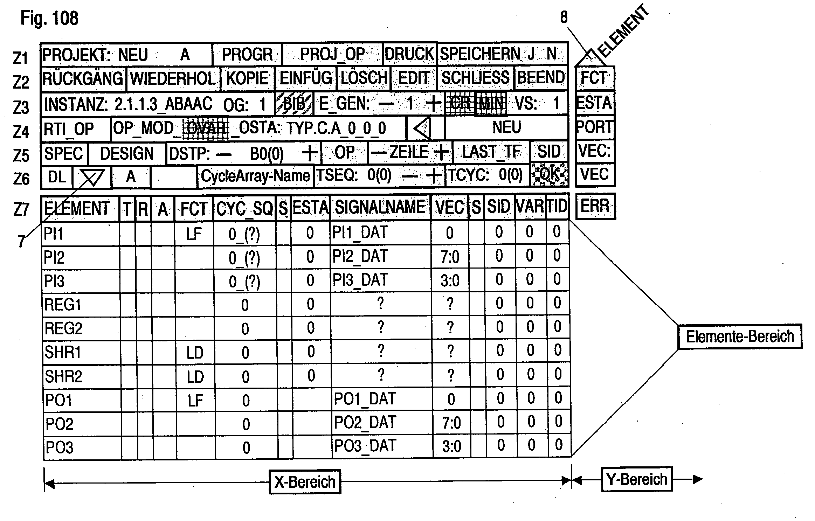

In **Fig.107** wurden in der Spalte "ELEMENT" die durch Klick markierten Elemente für den Designlevel ausgewählt, Durch Klick in die Schaltfläche "GL" in Z6 erfolgt die Umschaltung in den Designlevel mit der Anzeige "DL" und es werden die im Gruppenlevel "GL" ausgewählten Elemente in den Designlevel "DL" transferiert und im "Elemente-Bereich" angezeigt, wie **Fig.108** zeigt.

Im "DL" erfolgt die RTI-Operations-Spezifikation. Es wurde noch kein Designstep ausgeführt, deshalb steht in Zeile "Z5" die Designstep-Anzeige am Anfang mit "DSTP:B0(0)". "B" steht für Beginn. Beim Öffnen des Designlevels werden noch fehlende Einträge durch Fragezeichen "?" angezeigt. Die RTI-Inputports "PI1", "PI2", "PI3" und RTI-Outputports "PO1", "PO2", "PO3" besitzen bereits durch den vorangegangenen SPV-Prozeß "VERBINDEN" ihre statischen Signalnamen und Vectoren. Vor Beginn der RTI-Operations-Spezifizierung besitzen alle Elemente den Zyklus "CYC=0" in Spalte "CYC_SQ", sowie den Elemente-State "ESTA=0" in Spalte "ESTA". Die Outputports "PO1", "PO2", "PO3" besitzen noch keinen "ESTA", wie vorangegangen erläutert, da dieser erst mit dem ersten Datenempfang definiert wird und dabei auch "ESTA=0" sein kann. In Spalte Funktion "FCT" erfolgt der Eintrag für die Elemente automatisch durch Standardvorgaben und wird vom "GL" übernommen.

Wie Fig. 108 zeigt, sind die FCT-Standardvorgaben für die 1 Bit-Ports "PI1" und "PO1" für einen Streaming-Beginn mit dem niederwertigsten Bit, Least First "LF", eingetragen. Ports, die mehr als 1 Bit besitzen, erhalten die FCT-Standardvorgabe "Kein Eintrag". FCT-Standardvorgaben werden beispielsweise für Shiftregister "SHR" und Counter "CNT" mit Load "LD", für Speicher "MEM" (Memories), zum Beispiel für ein "RAM", mit Read "RD" festgelegt. Register "REG" haben nur die Funktion Load "LD", deshalb erfolgt hierfür in Spalte "FCT" kein Eintrag. Die manuelle Umschaltung von Funktionen der Elemente in Spalte "FCT" erfolgt generell umlaufend durch Klicks in die entsprechenden Schaltflächen, für Input- bzw. Output-Ports mit "LF", "MF", "Kein Eintrag", "LF", usw., für Schieberegister mit "LD", "LF", "MF", "LD", usw., für Counter mit "LD", "CU", "CD", "LD", usw., für RAMs mit "RD", "WR", "RD", usw.. Beinhalten ein oder mehrere Elemente in einer Elemente-Gruppe, beispielsweise in der Elemente-Gruppe "MEM", andere oder/und ergänzende Funktionen, dann sind die entsprechenden FCT-Standardvorgaben in der Funktions-Bibliothek festzulegen. Die in Fig.108 im "X-Bereich" des Designlevels "DL" dargestellten Elementezeilen, repräsentieren ausschließlich Elemente-Outputsignale. Im Y-Bereich besitzt der RTI-OP-BS eine senkrechte ELEMENT-Spalte 8, deren Zeilen-Einteilung im Rahmen der RTI-Operations-Spezifizierung erläutert wird.

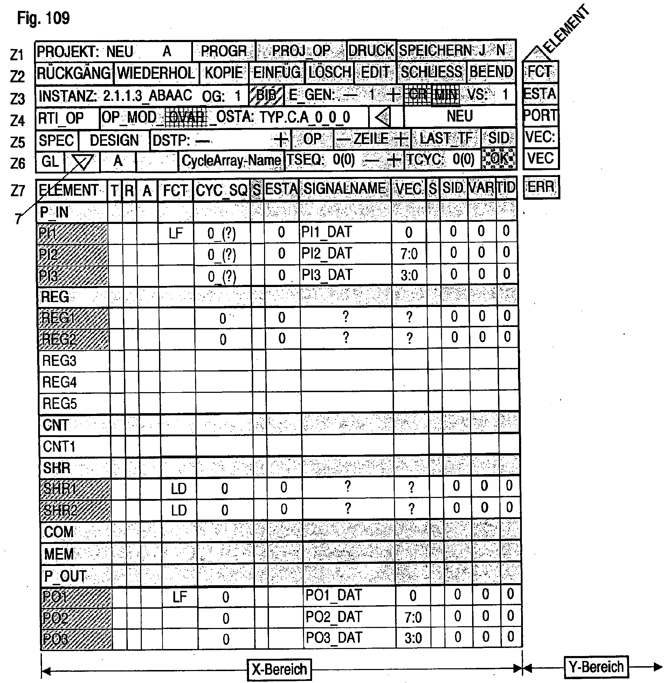

In Fig.108 erfolgt durch Klick in die Schaltfläche "DL" in "Z6" die Umschaltung in den Gruppenlevel "GL", wie **Fig.109** zeigt. Im "GL" werden alle Elemente, beispielsweise durch eine schraffierte Markierung, angezeigt, die im Designlevel "DL" konfiguriert sind. Im "GL" zusätzliche, neu ausgewählte Elemente werden, zum Unterschied der bereits im "DL" bestehenden schraffiert markierten Elemente, ganzflächig markiert. Ausserdem werden die Einträge der Elemente-Zeilen im "DL" identisch im "GL" abgebildet.

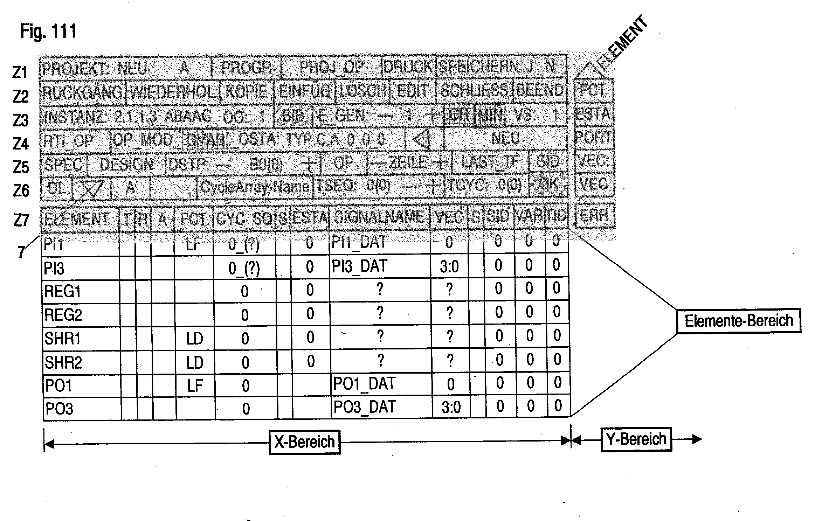

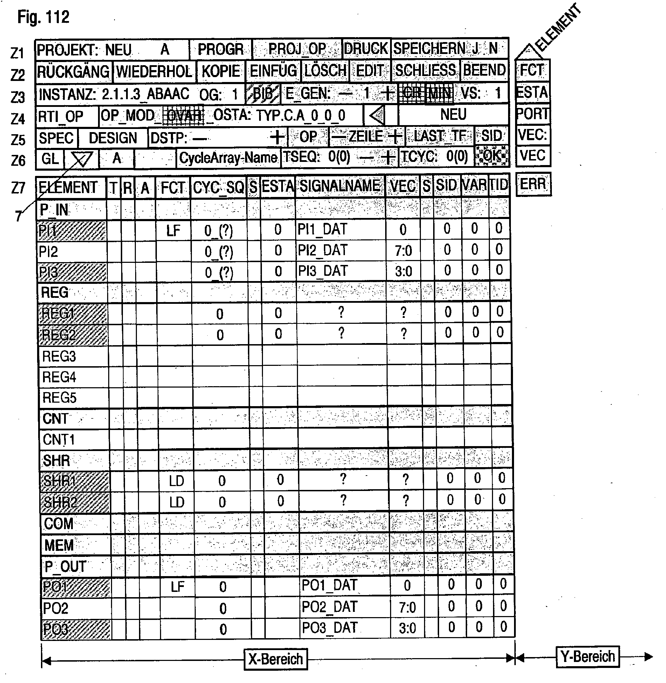

Nach Umschaltung in den "DL", **Fig.11****.0,** wurden in der Spalte "ELEMENT" die Elemente "PI2" und "P02" durch Klick markiert. Durch Klick in die Schaltfläche des Pfeil "7" werden die markierten Elemente "PI2" und "P02" aus dem Designlevel "DL" entfernt, wie **Fig.111** zeigt. Nach erneuter Umschaltung in den Gruppenlevel "GL", **Fig.112****,** sind "PI2" und "PO2" ohne schraffierte Markierung und zeigen damit an, daß sie sich nicht mehr im Designlevel "DL" befinden.

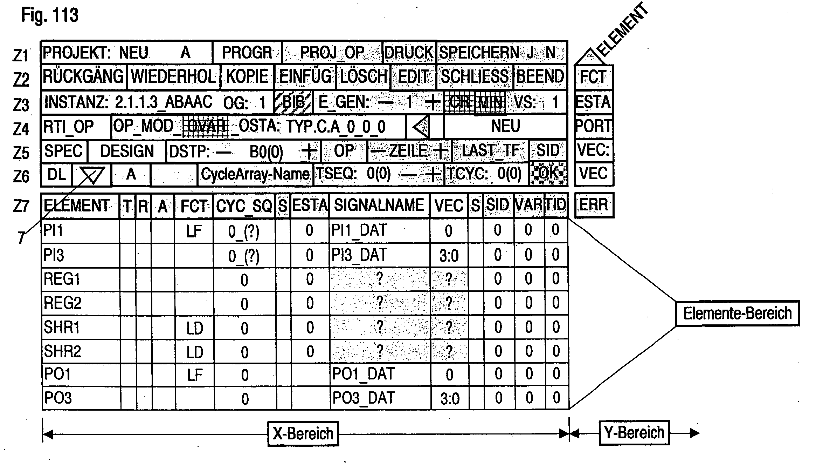

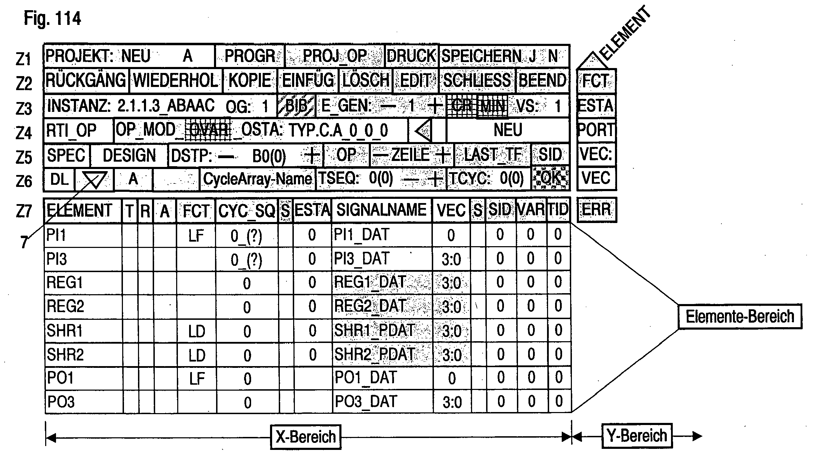

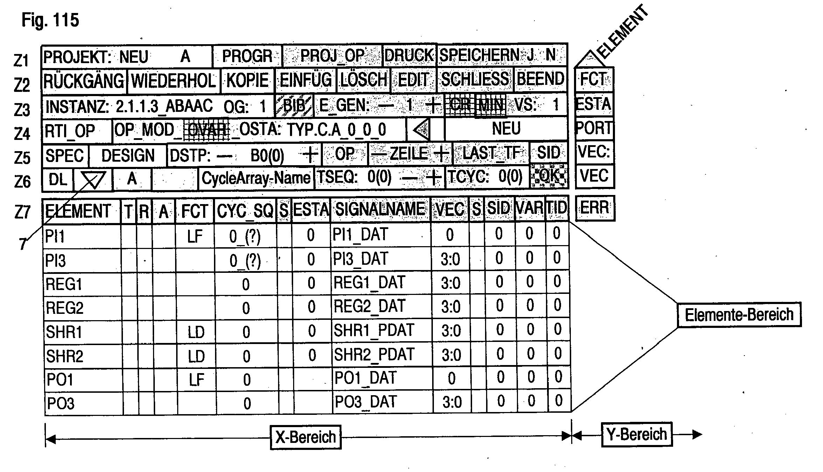

Für einen Eintrag von statischen Output-Signalnamen mit Vector an Stelle der "?" in Fig.111, werden durch Klick in die Schaltfläche "SIGNALNAME" oder "VEC" die beiden Schaltflächen in Zeile "Z7" aktiviert und die Elemente-Zeilen mit "?" in den Spalten "SIGNALNAME" und "VEC" durch Markierung für Schreiben vorbereitet, wie **Fig.113** zeigt. **Fig.114** zeigt beispielsweise Einträge in Spalte "SIGNALNAME" und "VEC". Mit Klick in die Schaltfläche "OK", "Z6", werden in "Z7" die Schaltflächen "SIGNALNAME" und "VEC" deaktiviert und die Markierungen in den Spalten "SIGNALNAME" und "VEC" gelöscht, wie **Fig.115** zeigt.

Sollen nachträglich Signalnamen oder/und Vectoren geändert werden, so erfolgt dies mit erneuter Aktivierung der Schaltfläche "SIGNALNAME" oder/und "VEC" in "Z7", und Aktivierung der Schaltfläche in der entsprechenden Elemente-Zeile in Spalte "SIGNALNAME" oder/und "VEC", in der die Änderung durchgeführt werden soll. Bisher wurden für den "DL" nur statische Signalnamen, gekennzeichnet durch "SID=0", eingetragen. Die statischen Signalnamen werden ausschließlich für Tools bzw. Compiler benötigt, die die Spezifikation in reale Elemente bzw. Componenten umsetzen. Für die RTI-Operations-Spezifizierung werden ausschließlich dynamische Signalnamen verwendet.

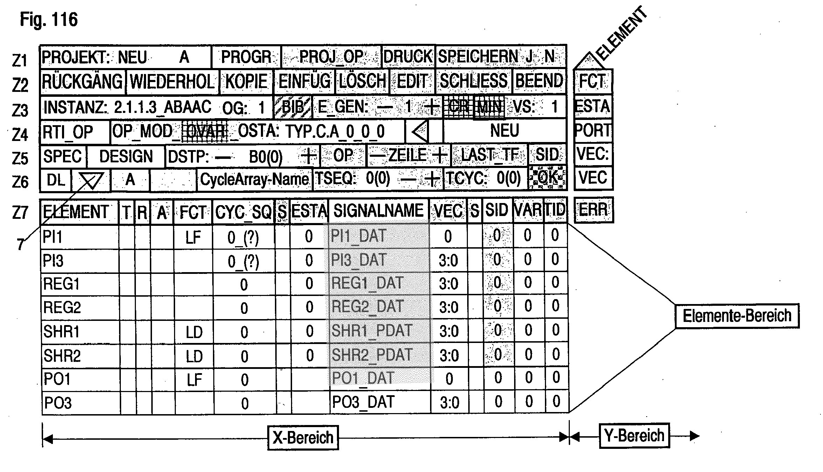

Für die Festlegung von dynamischen Output-Signalnamen von Elementen wird die Schaltfläche Signal-Identifier "SID" in der Zeile "Z7" durch Klick aktiviert. Dabei wird automatisch die Schaltfläche "SIGNALNAME" in "Z7" mit aktiviert. Anschließend erfolgt die Auswahl der Elemente, in die dynamische Output-Signalnamen eingetragen werden sollen, durch Klick in die Schaltflächen in Spalte "SID" der entsprechenden Elemente-Zeilen. Dabei werden die ausgewählten Elemente-Zeilen in Spalte "SID" und zusätzlich in Spalte "SIGNALNAME" aktiviert bzw. markiert, wie in **Fig.116** dargestellt.

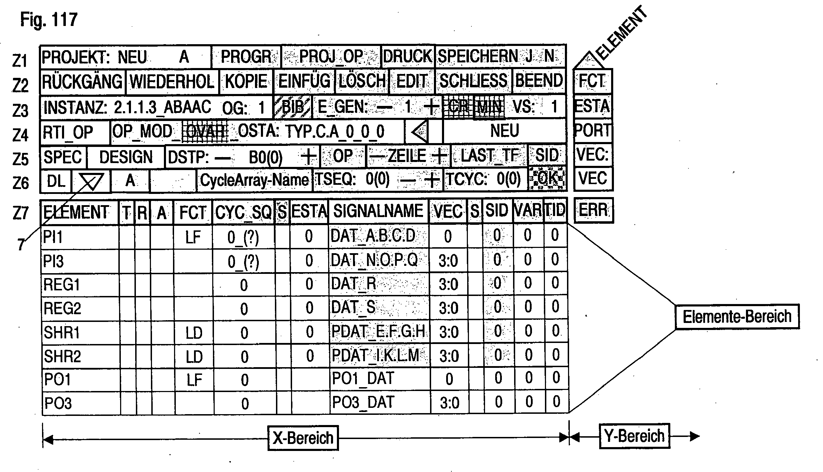

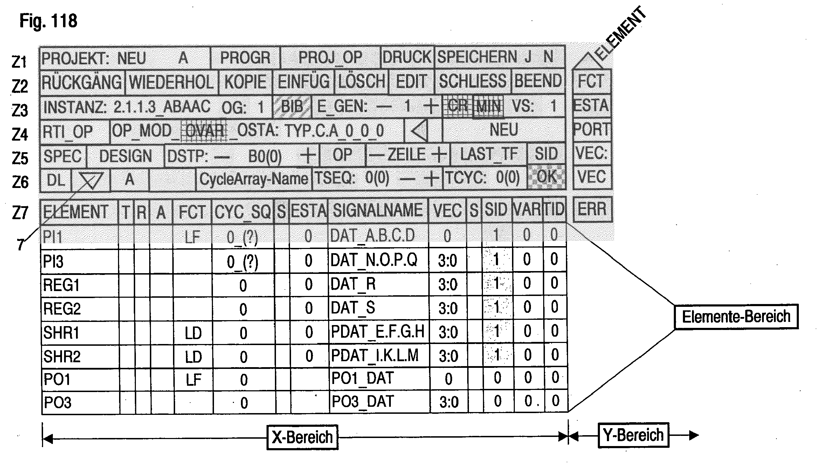

In **Fig.117** wurden in Spalte "SIGNALNAME" in den markierten Schaltflächen beispielsweise dynamische Output-Signalnamen eingetragen. Mit Klick in die Schaltfläche "OK", "Z6", wurden die Einträge bestätigt und die Schaltflächen "SIGNAL-NAME" und "SID" in Zeile "Z7" sowie in Spalte "SIGNALNAME" deaktiviert, wie **Fig.118** zeigt. Ausserdem wurde in den aktivierten Schaltflächen in Spalte "SID" vom SPV die erste SID-Nummer, "SID=1", automatisch zugeteilt. Wird dabei ein statischer Output-Signalname mit "OK" bestätigt, so wird dieser auch als dynamischer Output-Signalname mit "SID=1" geführt. Durch Wiederholung des Vorgangs können auch mehrere, unterschiedliche dynamische Output-Signalnamen für ein Element festgelegt werden, für die dann das SPV die SID-Nummern 2, 3, usw., zuteilt. Wird versehentlich ein bereits bestehender dynamischer Output-Signalname eingetragen und mit "OK" bestätigt, dann erfolgt automatisch die Zuweisung der SID-Nummer des bereits bestehenden dynamischen Output-Signalnamens. Elemente-Outputs mit mehr als einem dynamischen Signalnamen sind in der Regel Elemente-Streaming-Outputs mit einem Sequenzbereich von mindestens zwei Streams.

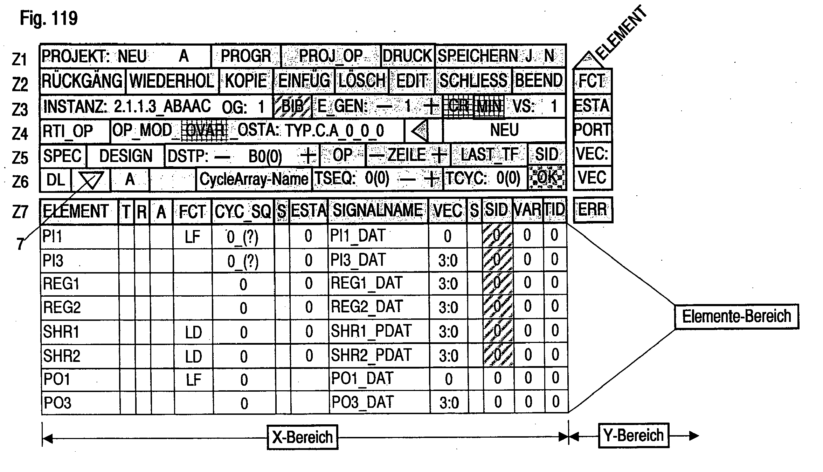

Wie später bei der RTI-Operations-Spezifizierung gezeigt wird, ist der Eintrag von dynamischen Signalnamen nur bei sendenden Elementen mit "ESTA=0" erforderlich. Bei sendenden Elementen mit Daten-Streaming werden dynamische Signalnamen beginnend bei "ESTA=0" für die entsprechenden Sequenzbereiche und Sequenzen eingetragen. Empfangende Elemente übernehmen den dynamischen Signalnamen des Senders. Empfängt ein Element Daten von mehr als einem Sender, dann kann ein dynamischer Signalname für den Empfänger-Outputport manuell gebildet werden. Sollen an Stelle der dynamischen Output-Signalnamen von Fig.118 wieder die statischen Output-Signalnamen angezeigt werden, so kann das in Spalte "SID" durch je einen Klick in die markierten Schaltflächen oder durch zwei aufeinander folgende Klicks in die Schaltfläche "SID" der Zeile "Z5" erfolgen, wie in **Fig.119** dargestellt. Bei Klicks in die Schaltfläche "SID" in "Z5" wird diese mit dem ersten Klick aktiviert und mit dem zweiten Klick wieder deaktiviert. Die in Fig.119 in der Spalte "SID" schraffierten Schaltflächen mit SID=0 zeigen, daß die Elemente mindestens einen dynamischen Output-Signalnamen besitzen.

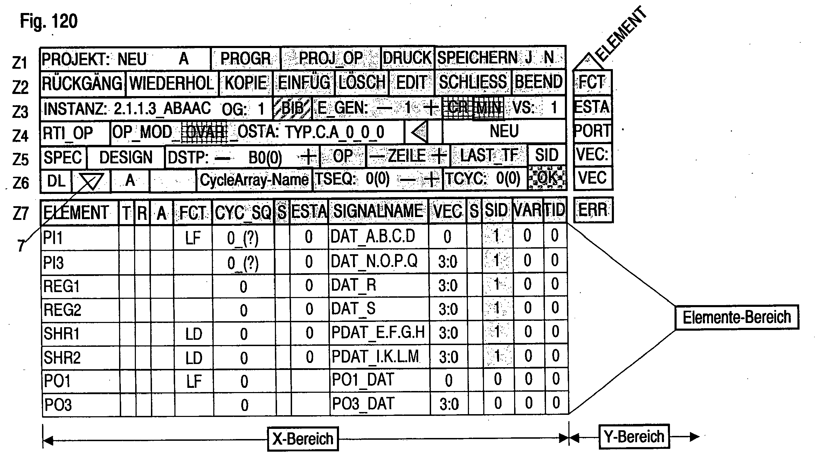

Mit Klick in die Schaltfläche "SID" in "Z5" wird diese aktiviert und es werden für alle Elemente die dynamischen Output-Signalnamen angezeigt, wie in **Fig.120** dargestellt. Dabei wird generell für jedes Element der dynamische Output-Signalname mit der höchsten SID-Nummer angezeigt. Sollen für ein Element alle dynamischen Output-Signalnamen angezeigt werden, so kann dies nacheinander durch Klicks in einer Elemente-Zeile in Spalte "SID" erfolgen. Dabei werden die Output-Signalnamen in umlaufender SID-Nummern-Reihenfolge, beispielsweise SID=1, 2, 3, 0, 1, usw., angezeigt. Als Alternative hierzu können alle Output-Signalnamen eines Elements durch einen Klick in der Elemente-Zeile in Spalte "SID" in einem sog. "SID-Fenster" (nicht dargestellt) angezeigt und ausgewählt werden.

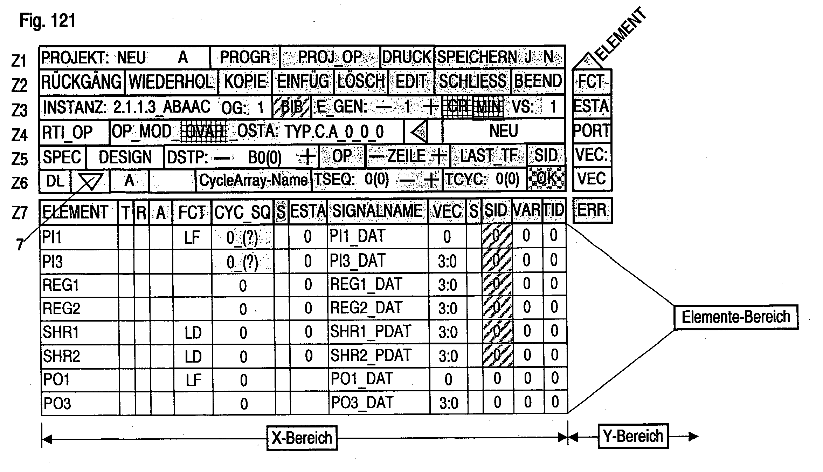

In der Spalte "CYC_SQ" zeigt das in Klammer befindliche Fragezeichen "(?)" an, daß für PI1 und PI3 die maximale Daten-Streaming-Sequenz noch nicht festgelegt wurde. Vorbereitend für einen Eintrag der maximalen Daten-Streaming-Sequenzen an Stelle der "?" in Fig.120, wird durch Klick in die Schaltfläche "CYC_SQ" in Zeile "Z7" diese Schaltfläche aktiviert und damit in Spalte "CYC_SQ" die Schaltflächen für "PI1" und "PI3" durch automatische Markierung für Schreiben vorbereitet, wie **Fig.121** zeigt. Ausserdem wurde in Fig.121 die Schaltfläche "SID" in Zeile "Z5" durch Klick deaktiviert und damit die Anzeige in Spalte "SID" umgeschaltet.

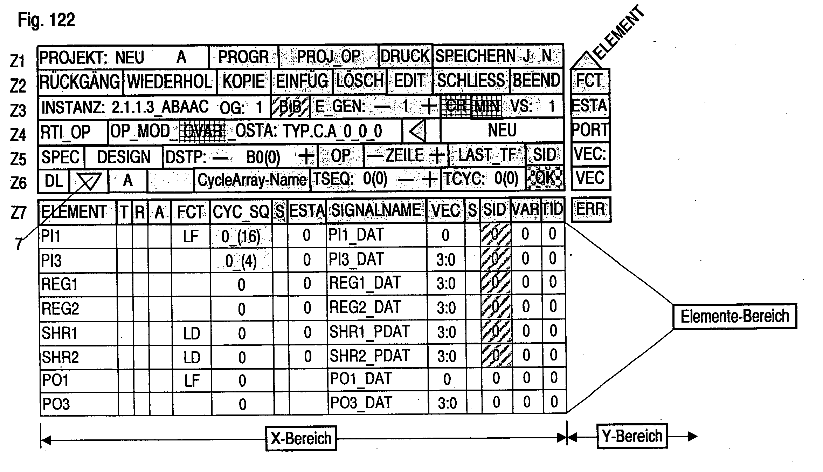

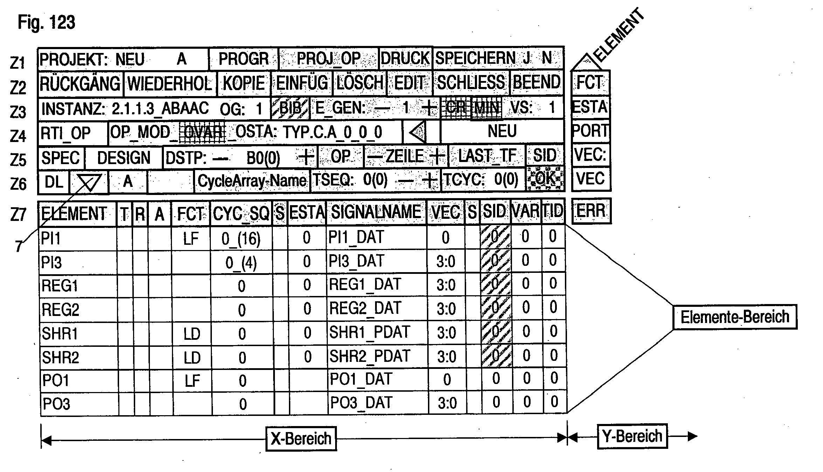

**Fig.122** zeigt die Einträge der maximalen Daten-Streaming-Sequenzen für "PI1 und "PI3". Mit Bestätigung dieser Einträge durch Klick in die Schaltfläche "OK" in "Z6" werden die Schaltflächen "CYC_SQ" in "Z7" und die von "PI1", "PI3" in Spalte "CYC_SQ" deaktiviert, wie **Fig.123** zeigt.

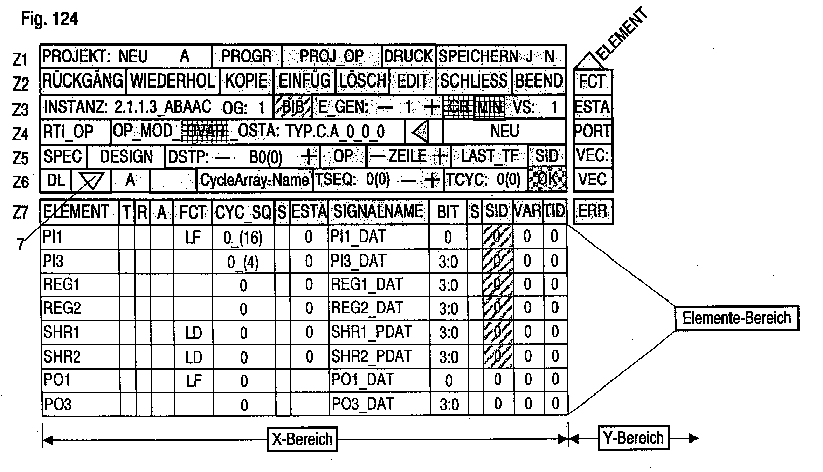

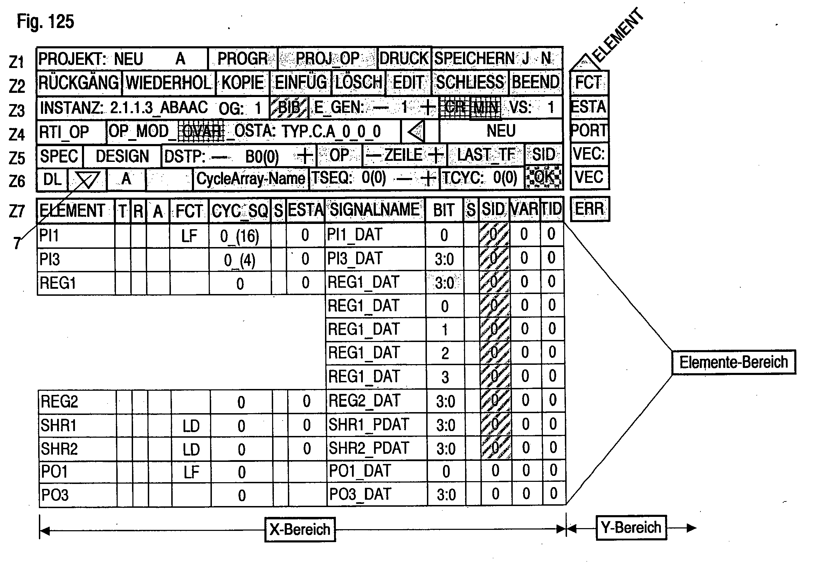

Nachfolgend soll für "REG1" die Bit-Darstellung mit Eintrag von dynamischen Signalnamen und das "Vector-Splitting" dargestellt werden. Hierzu wird durch Klick in die Schaltfläche "VEC" in "Z7" von "VEC" auf "BIT" umgeschaltet, wie **Fig.124** zeigt. Anschließend wird durch Klick in die Schaltfläche der REG1-Zeile in Spalte "BIT", diese Schaltfläche aktiviert bzw. markiert und die REG1-Bits "0 bis 3" angezeigt, wie in **Fig.125** dargestellt. Dabei wird in der Spalte "SIGNALNAME" für die Bits "0 bis 3" der Signalname der REG1-Zeile angezeigt.

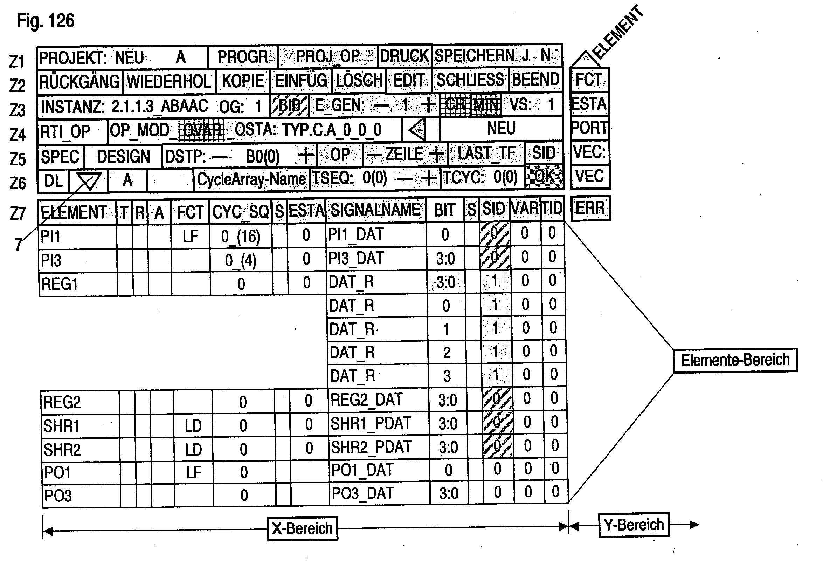

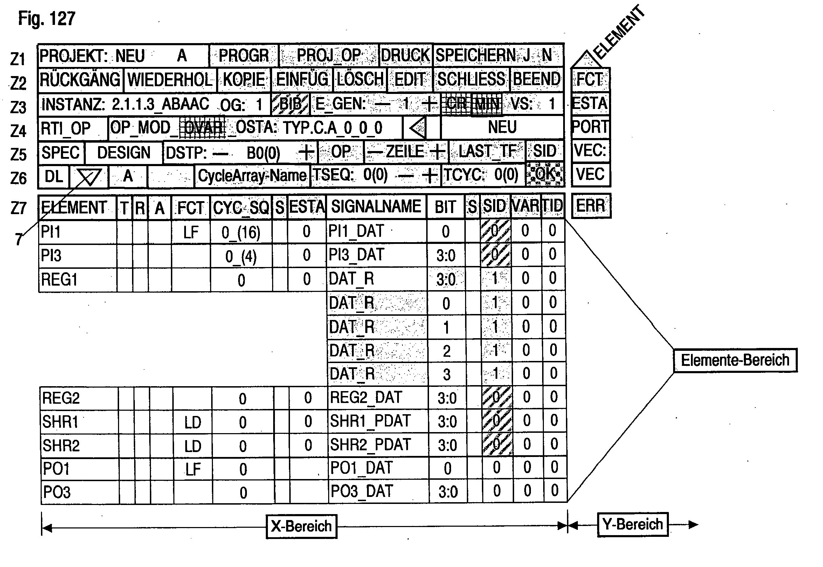

In **Fig.126** wurde für "REG1" auf den dynamischen Signalnamen, durch Klick in die Schaltfläche der REG1-Zeile, Spalte "SID", umgeschaltet. Dabei übernehmen die REG1-Bits "0 bis 3" diesen dynamischen Signalnamen. Sollen einzelne oder alle REG1-Bits eigene dynamische Signalnamen erhalten, wie dies beispielsweise bei Signalbündeln, sog. "RECORDs", erforderlich ist, dann wird vorbereitend für eine Signalnamen-Änderung die Schaltfläche "SIGNALNAME" in "Z7" und die Schaltflächen der in Spalte "SIGNALNAME" entsprechenden Bits durch Klick aktiviert, wie in **Fig.127** dargestellt.

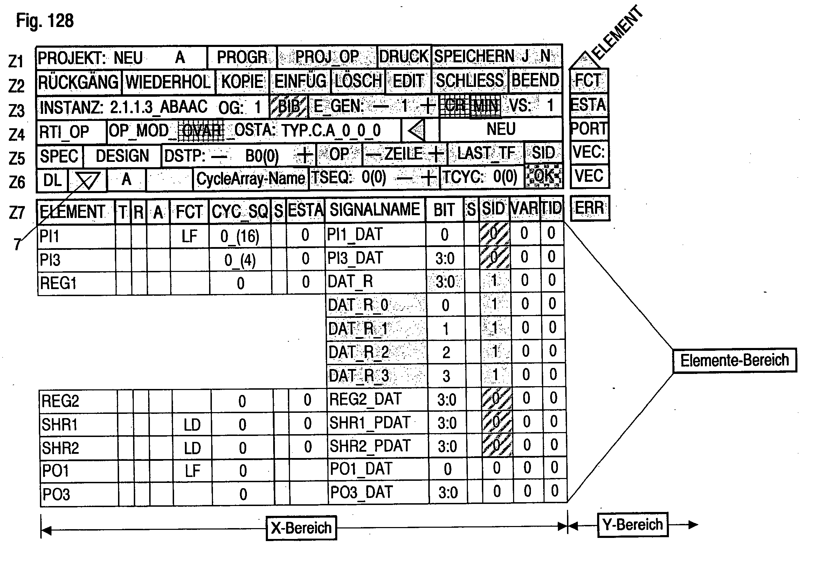

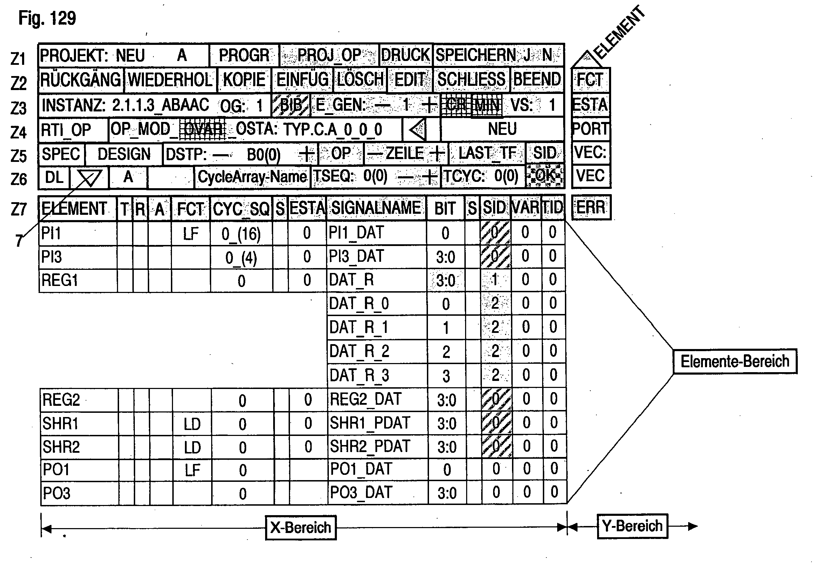

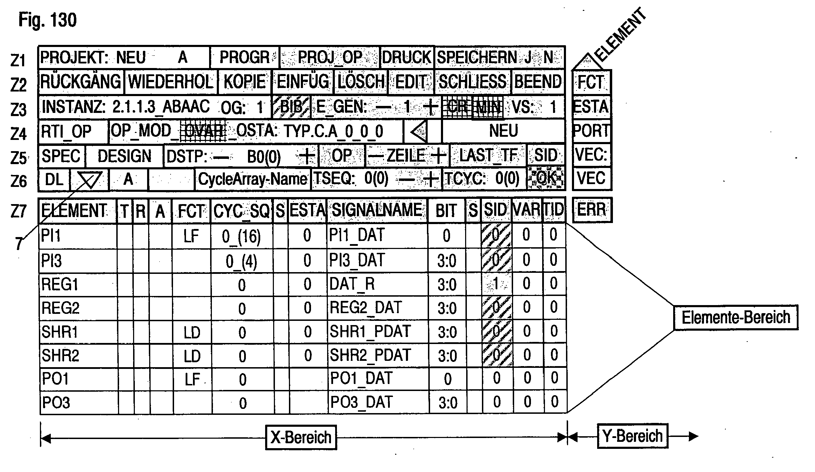

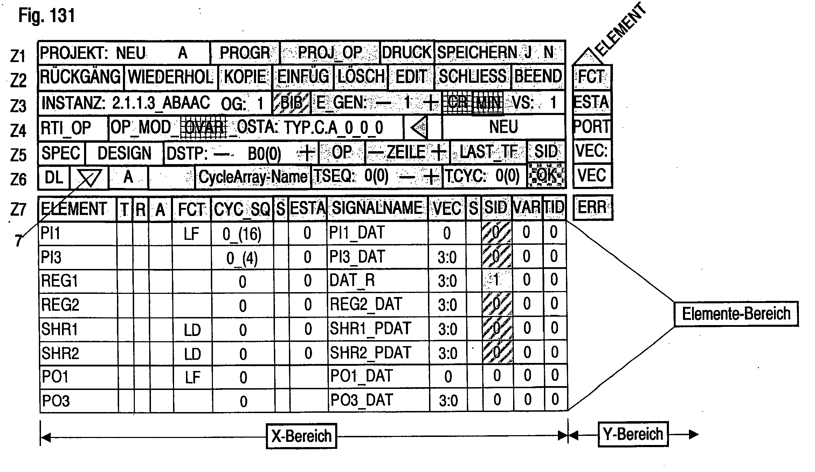

In **Fig.128** wurden für die REG1-Bits "0 bis 3" beispielsweise dynamische Signalnamen eingetragen. Mit Klick in die Schaltfläche "OK" in "Z6" wird dieser Schreibvorgang bestätigt und die Schaltflächen "SIGNALNAME" in "Z7" sowie in Spalte "SIGNALNAME" deaktiviert, wie **Fig.129** zeigt. Nachdem der dynamische Signalname "DAT_R" für die Vector-Bits 0 bis 3 mit SID=1 definiert war, wird durch die Bestätigung der Änderung der dynamischen Signalnamen für die Vector-Bits 0 bis 3 der SID automatisch um Eins, in SID=2 erhöht. Durch Klick in die Schaltfläche der REG1-Zeile in Spalte "BIT" wird diese Schaltfläche deaktiviert und die REG1-Bits "0 bis 3" weggeschaltet, wie **Fig.130** zeigt. Mit Klick in die Schaltfläche "BIT" in "Z7" erfolgt die Zurückschaltung auf "VEC", wie in **Fig.131** dargestellt.

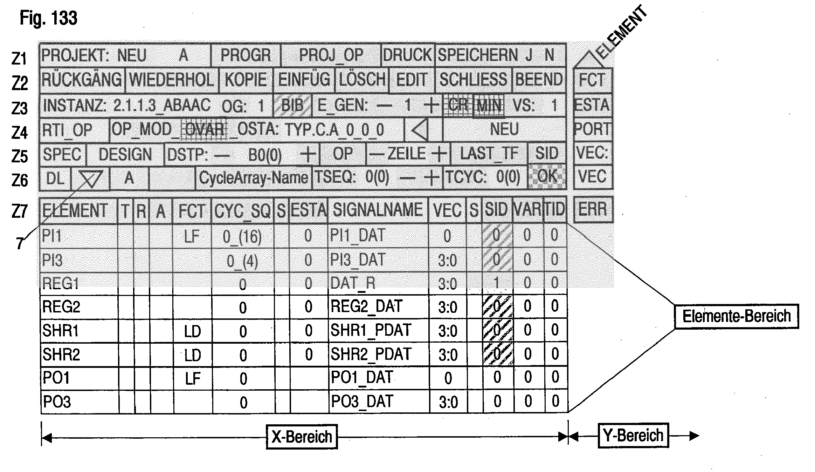

Bei der RTI-Operationsspezifizierung ist es möglich, daß von einem Elemente-Signaloutput nur ein Teil-Vector benutzt wird. Nachfolgend wird am Element "REG1" gezeigt, wie ein Signaloutput-Teil-Vector aus einem Gesamt-Vector durch ein sog. "Vector-Splitting" gebildet wird. Hierzu wurde in **Fig:132** in Zeile "Z7" durch Klick in die Schaltfläche "Vector-Splitting" "S", neben "VEC", diese aktiviert, die Schaltflächen "VEC" und "SIGNALNAME" in "Z7" werden dabei automatisch mit aktiviert. Anschließend wird die Schaltfläche der REG1-Zeile in der Spalte Vector-Splitting "S" durch Klick aktiviert bzw. markiert. Dadurch wird in Zeile "Z5" die Schaltfläche "ZEILE" aktiviert, wie **Fig.133** zeigt.

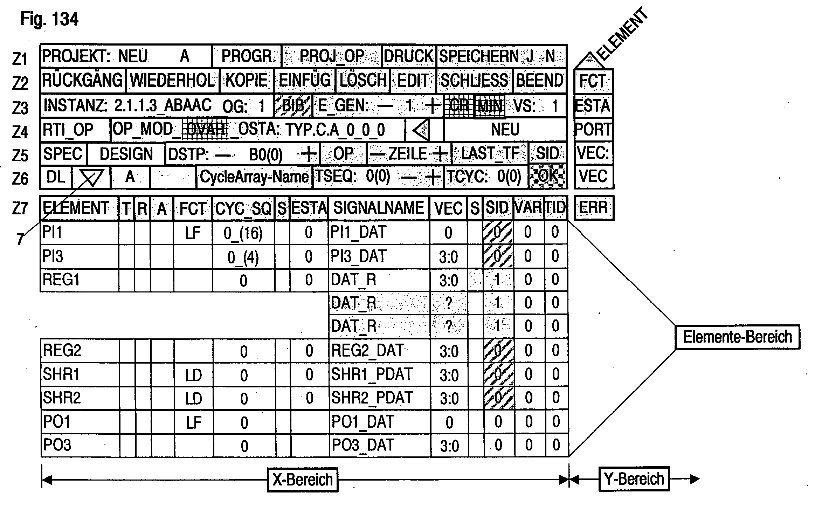

In **Fig.134** wurden in "Z5" durch zwei Klicks in ZEILE"+" für "REG1" zwei Vector-Splitting-Zeilen erzeugt, die in der Spalte "VEC" je ein Fragezeichen "?" besitzen und den dynamischen Signalnamen der REG1-Zeile übernommen haben.

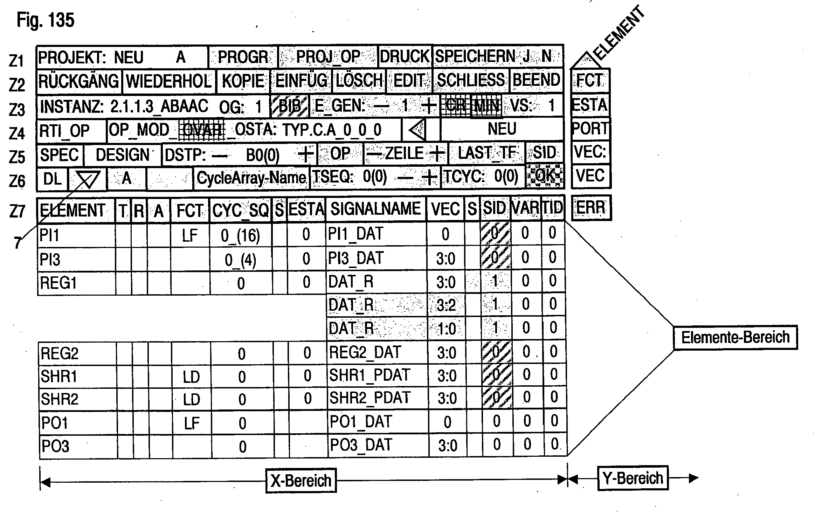

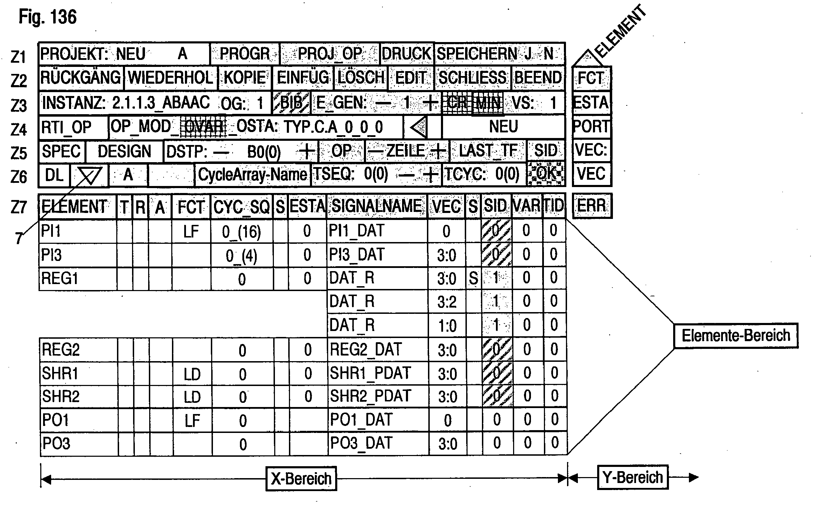

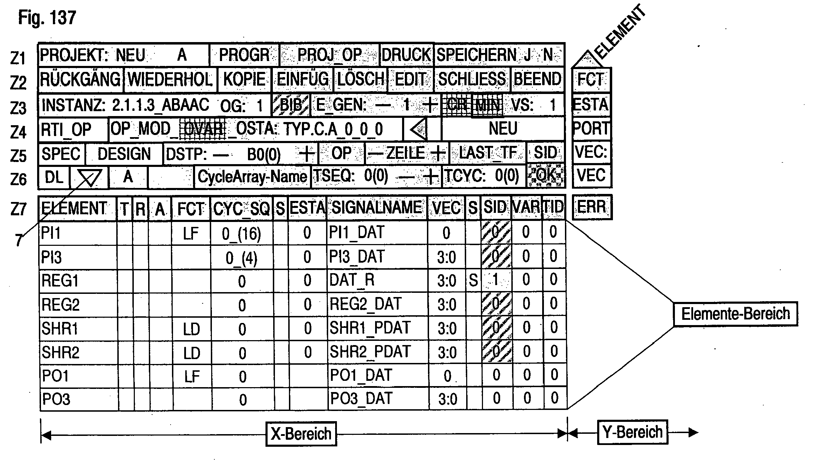

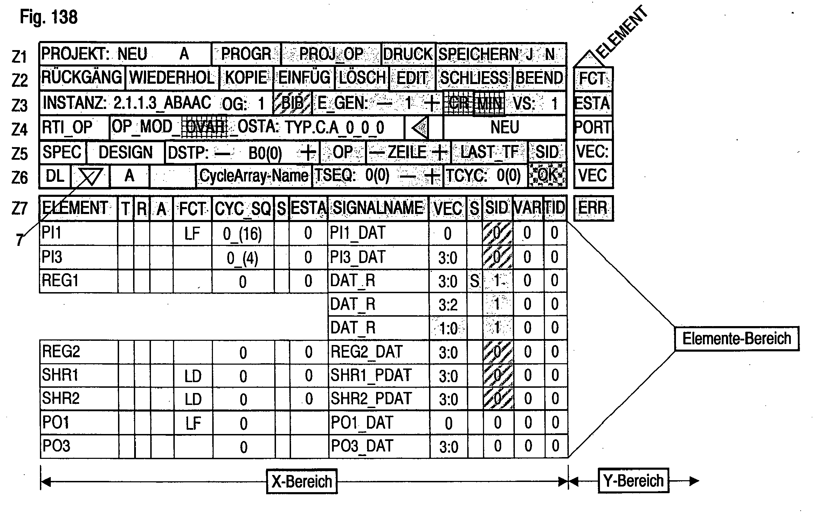

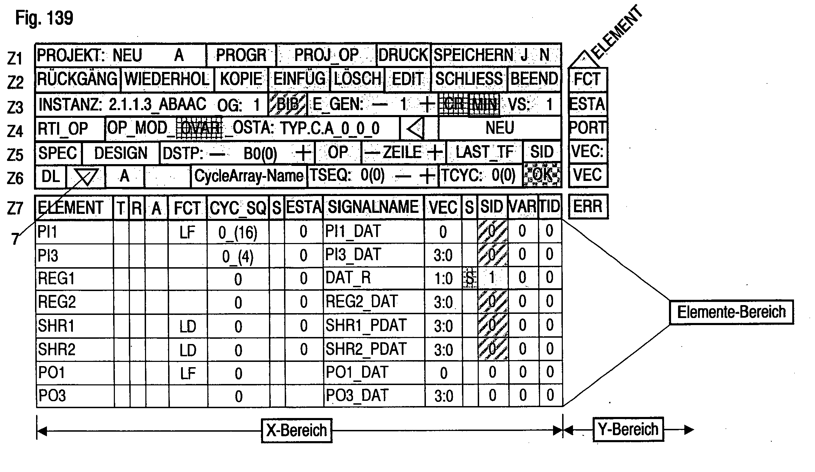

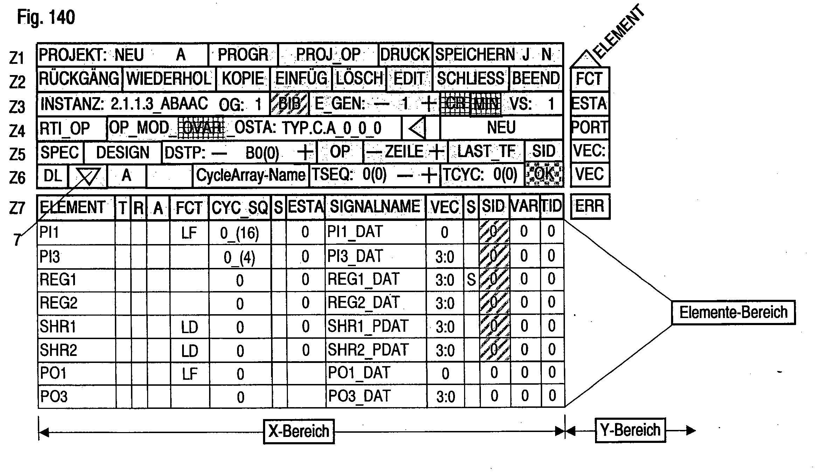

**Fig.135** zeigt die Einträge für das REG1-Vector-Splitting mit den Teilvectoren "3:2" und "1:0". Mit Bestätigung durch Klick in die Schaltfläche "OK" in "Z6", werden in "Z5" die Schaltfläche "ZEILE" und in "Z7" die Schaltflächen "SGNALNA-ME", "VEC" und Vector-Splitting "S", sowie die REG1-Vector-Splittingzeilen deaktiviert und in der REG1-Zeile in Spalte "S" ein "S" für Vector-Splitting eingetragen, wie **Fig.136** zeigt. Durch Klick in die Schaltfläche der REG1-Zeile in Spalte Vector-Splitting "S" ist "REG1" wieder ohne Vector-Splitting-Anzeige wie in **Fig.137** dargestellt. Dabei wird die Schaltfläche "S" demarkiert und zeigt an, daß ein Vector-Splitting existiert, aber nicht angezeigt wird. Bei wiederholtem Klick in die Schaltfläche Vector-Splitting "S" der REG1-Zeile wird das "S" wieder durch Markierung hinterlegt und das REG1-Vector-Splitting angezeigt, wie in Fig.136 dargestellt. Soll nur ein Teil-Vector-Splitting angezeigt werden, so wird durch Klick in die Schaltfläche einer Vector-Splitting-Zeile in Spalte "VEC" ein Teil-Vector ausgewählt bzw. markiert, im Beispiel von **Fig.138** ist das der Teil-Vector "1:0". Durch Klick in die Schaltfläche der REG1-Zeile in Spalte Vector-Splitting "S" in der REG1-Zeile wird der Teil-Vector "1:0" angezeigt, wie **Fig.139** zeigt. Dabei wird in der REG1-Zeile in Spalte "S" das "S" mit beispielsweise kariertem Hintergrund hinterlegt und damit gekennzeichnet, daß nur ein Teil-Vector angezeigt wird. Mit nachfolgendem Klick in die Schaltfläche der REG1-Zeile, Spalte Vector-Splitting "S" wird wieder das komplette REG1-Vector-Splitting entsprechend Fig.136 angezeigt und mit nochmaligem Klick in diese Schaltfläche erfolgt die Anzeige nach **Fig.140****.** Ausserdem wurde dabei für "REG1" vom dynamischen auf den statischen Signalnamen umgeschaltet, durch Klick in die Schaltfläche der REG1-Zeile in Spalte "SID".

### Beschreibung zu Fig.141-149:

Nachfolgend soll für den Inputport "PI1", vorbereitend für eine folgende RTI-Operations-Spezifizierung, ein Sequenz-Splitting eingetragen werden. Durch einen Klick in die Schaltfläche Sequenz-Splitting "S" in Zeile "Z7", neben "CYC_SQ", werden die Schaltflächen "CYC_SQ", "S" und "SIGNALNAME" in "Z7" aktiviert, wie **Fig.141** zeigt. Mit einem zusätzlichen Klick in die Schaltfläche der Zeile "PI1" in Spalte "S" wird diese aktiviert bzw. markiert sowie die Schaltfläche "ZEILE" in "Z5" mit aktiviert. Anschließend sind die Zeilen für ein Sequenz-Splitting zu generieren.

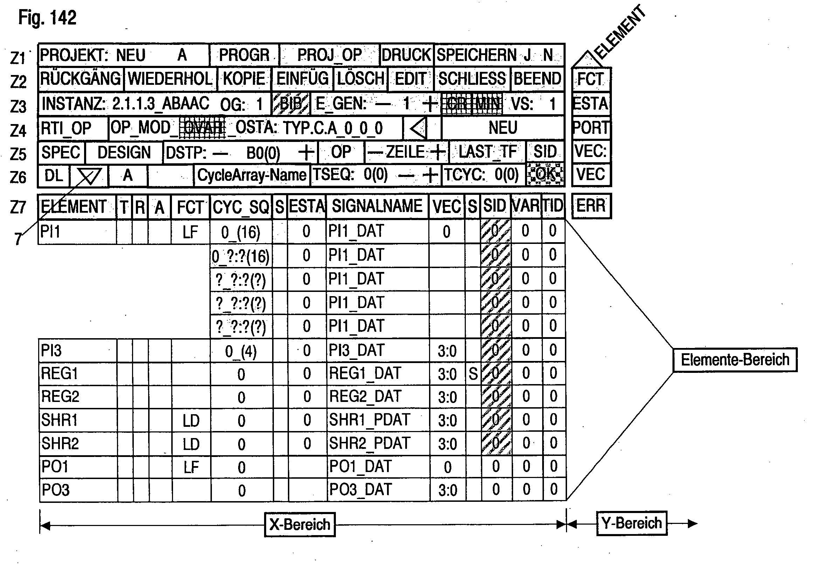

In **Fig.142** wurden durch vier (4) Klicks in die Schaltfläche ZEILE"+" vier (4) Sequenz-Splitting-Zeilen erzeugt. Dabei wurden in der ersten Sequenz-Splitting-Zeile die bereits bekannten Parameter "CYC=0" und "maximale Streaming-Sequenzen (16)" automatisch eingetragen, die mit "?" besetzten Stellen sind noch manuell einzutragen. Der Ein-Bit-Vector "0" von PI1 wird in der Spalte "VEC" beispielsweise nur in der PI1-Zeile, nicht in den Sequenzsplitting-Zeilen angezeigt. Durch ein oder mehrere Klicks in die Schaltfläche ZEILE"-" können von unten nach oben entsprechende Sequenz-Splitting-Zeilen wieder entfernt werden.

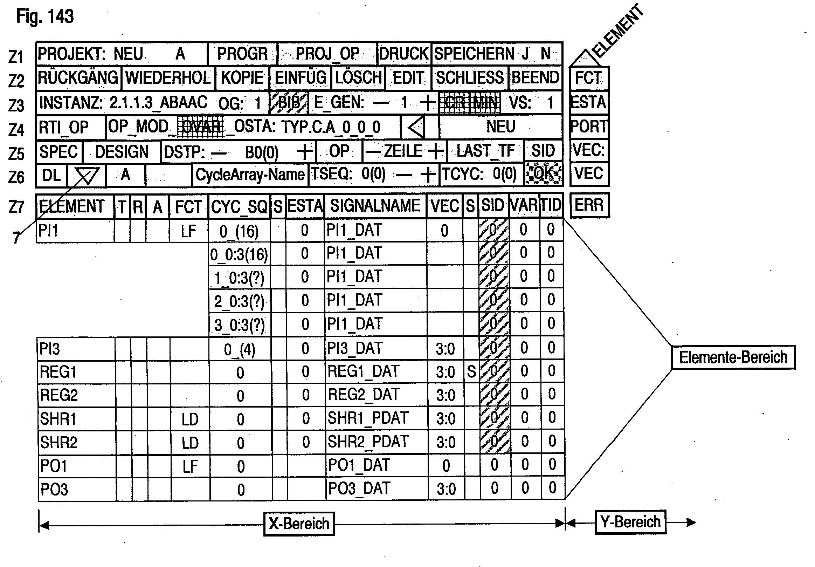

In **Fig.143** wurden in den Sequenz-Splitting-Zeilen in Spalte "CYC_SQ" beispielsweise Zyklen "CYC" und Sequenzbereiche "SQ" eingetragen, die maximalen Sequenzen in Klammer werden automatisch erst mit der Bestätigung durch "OK" eingetragen. Bei einer RTI-Operationsspezifizierung beginnt für einen Inputport das Sequenz-Splitting immer mit der CYC-Nummer "0". Die nachfolgenden CYC-Nummern werden kontinuierlich, aufsteigend mit "1", "2", "3", usw., vergeben. Unabhängig von dem Beispiel in Fig.143 kann den einzelnen CYC-Nummern ein beliebiger Sequenzbereich "X:Y" und einer CYC-Nummer auch mehrere Sequenzbereiche zugeordnet werden. Wie später bei der RTI-Operationsspezifizierung gezeigt wird, erhöht sich die CYC-Nummer eines Senders, im Beispiel ist das "PI1", automatisch um Eins nach Abschluß des Designsteps "DSTP" in dem der Sender benutzt wurde. Besitzt ein Sender, beispielsweise "PI1", für eine CYC-Nummer mehrere Sequenzbereiche, dann ist für jeden Daten-Verarbeitungs-Step "DVSTP", an dem der Sender innerhalb eines "DSTP" beteiligt ist, ein entsprechender Sequenzbereich auszuwählen.

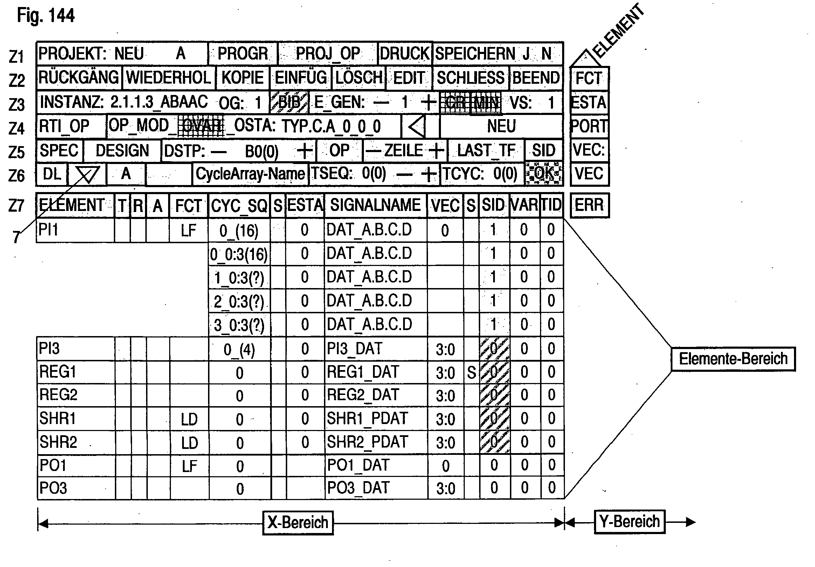

In **Fig.144** wurde für "PI1" durch Klick in die Schaltfläche der PI1-Zeile in Spalte "SID" auf den dynamischen Signalnamen umgeschaltet, der automatisch auch in den PI1-Sequenz-Splitting-Zeilen übernommen wird.

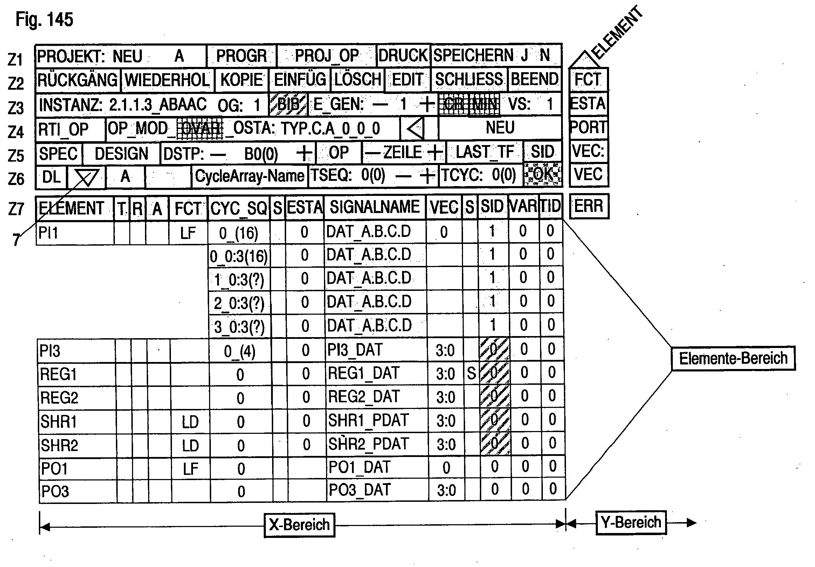

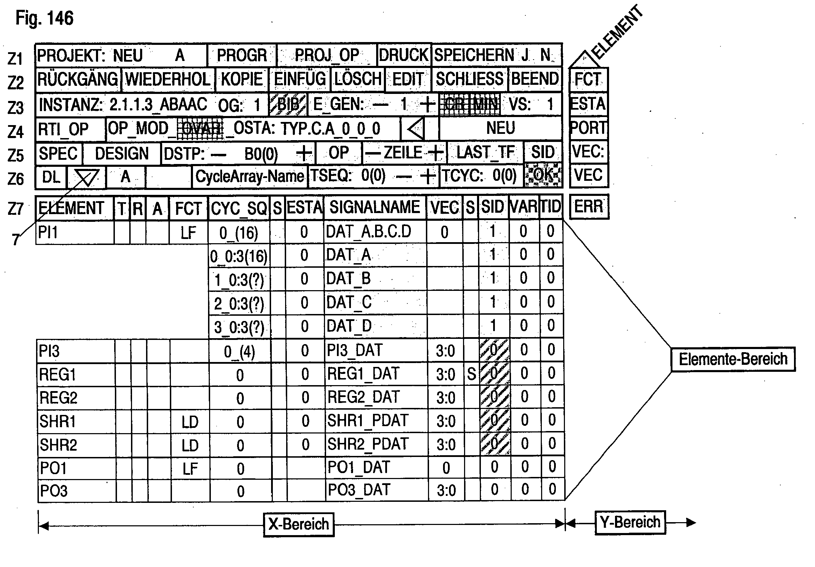

In **Fig.145** wurden die Schaltflächen des PI1-Sequenz-Splittings in der Spalte "SIGNALNAME" durch Klicks aktiviert bzw. markiert, in denen eine Änderung des dynamischen Signalnamens durchgeführt werden soll. **Fig.146** zeigt die neu eingetragenen dynamischen Signalnamen.

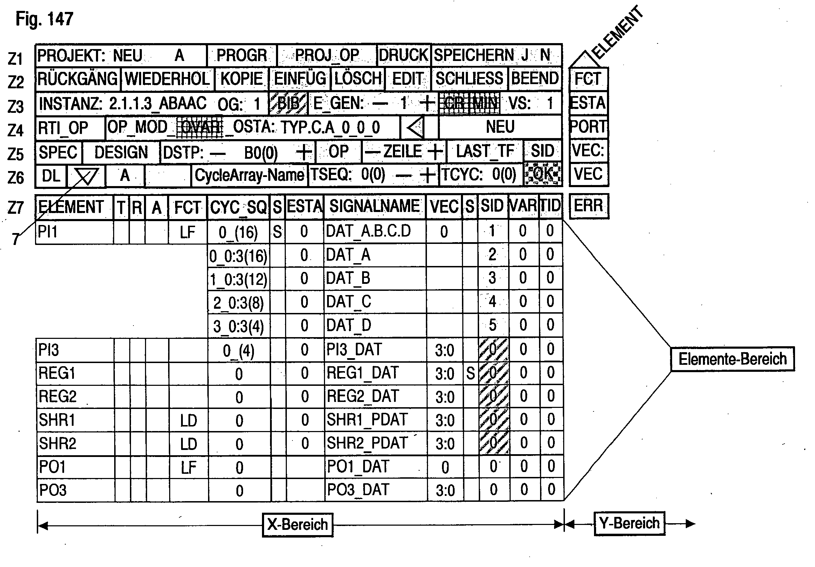

In **Fig.147** ist der RTI-OP-BS nach Klick in die Schaltfläche "OK" in "Z6" dargestellt. Gegenüber Fig.146 wurden die Schaltflächen "ZEILE" in "Z5", "CYC_SQ", "S" und "SIGNALNAME" in "Z7" sowie die PI1-Sequenz-Splitting-Zeilen in den Spalten "CYC_SQ" und "SIGNALNAME" deaktiviert bzw. demarkiert und in Spalte "CYC_SQ" die maximalen Sequenzen "SQ" in Klammer "( )" eingetragen. Ausserdem wurden in der PI1-Zeile in Spalte Sequenz-Splitting "S" automatisch ein "S" und in den Sequenz-Splitting-Zeilen in Spalte "SID", für die neuen dynamischen Signalnamen, automatisch die SID-Nummern "2", "3", "4" und "5" eingetragen.

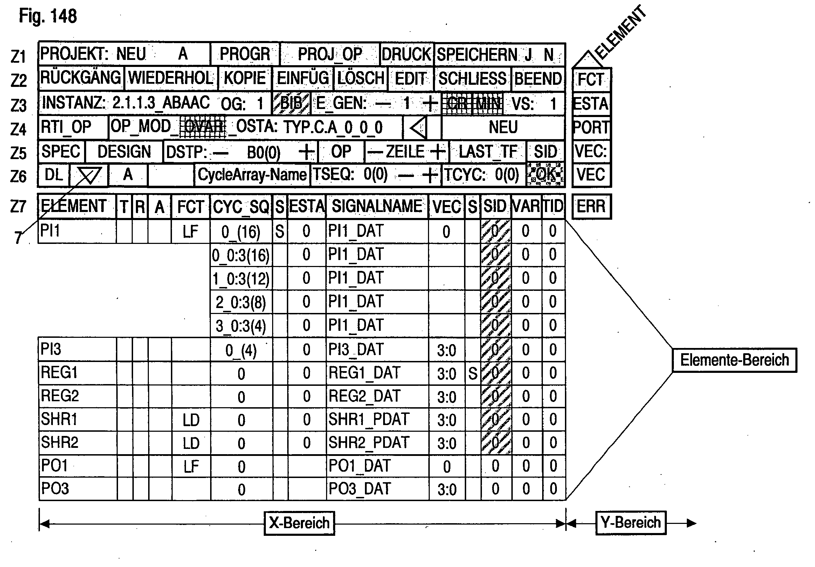

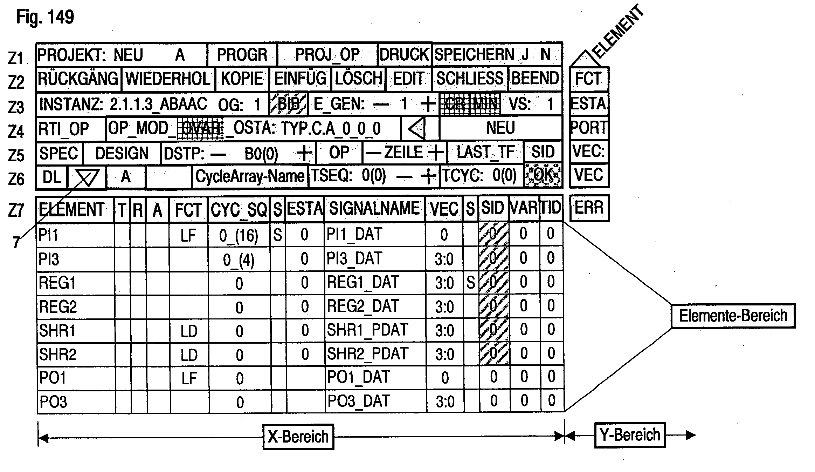

Durch einen Klick in die Schaltfläche der PI1-Zeile in Spalte "SID" wird wieder der statische Signalname in der PI1-Zeile und in den PI1-Sequenzsplitting-Zeilen angezeigt, wie in **Fig.148** dargestellt. Bei nochmaligem Klick in die Schaltfläche der PI1-Zeile in Spalte "SID" werden wieder die dynamischen Signalnamen angezeigt. Durch Klicks in die Schaltfläche einer PI1-Sequenzsplitting-Zeile in Spalte "SID", können abwechselnd statische und dynamische Signalnamen eingeschaltet und ausgeschaltet werden. Mit Klick in die Schaltfläche "SID" in "Z5" wird diese von deaktiv auf aktiv umgeschaltet und es werden die dynamischen Signalnamen von allen Elementen, mit ihrer jeweils höchsten SID-Nummer, in Spalte "SID" angezeigt. Mit nochmaligem Klick in die Schaltfläche "SID" in "Z5" wird diese von aktiv auf deaktiv umgeschaltet und es werden wieder die statischen Signalnamen von allen Elementen in Spalte "SID" angezeigt. Durch Klick in die Schaltfläche der PI1-Zeile in Spalte Sequenz-Splitting "S" werden die PI1-Sequenzsplitting-Zeilen weggeschaltet und die Schaltfläche demarkiert, wie **Fig.149** zeigt.

### Beschreibung zu Fig.150-163:

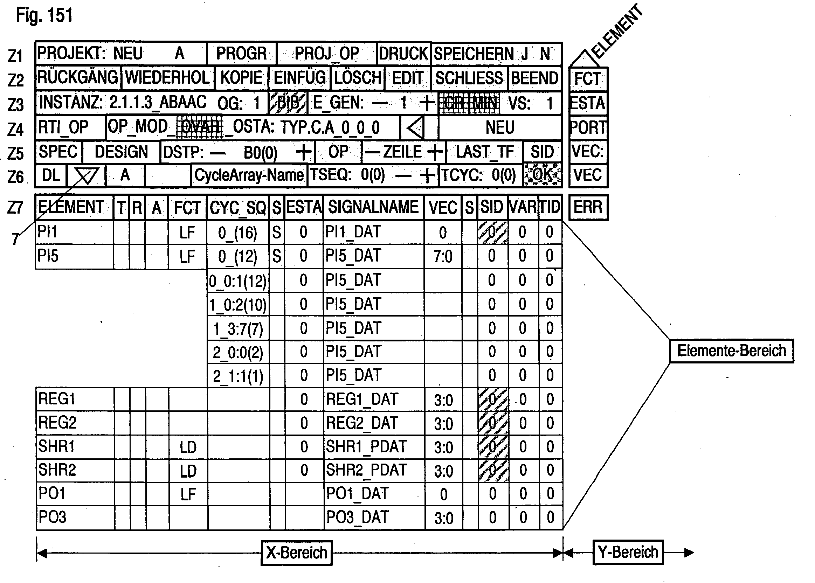

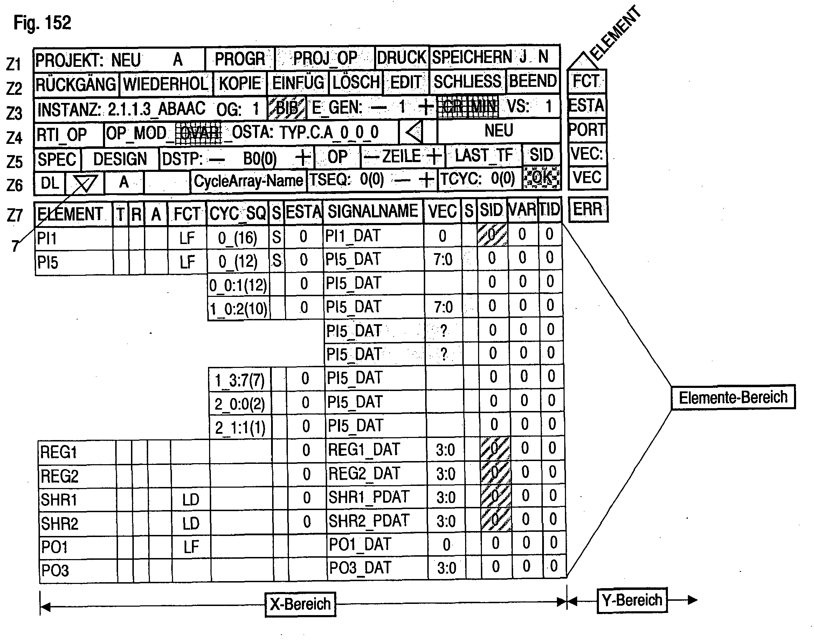

Nachfolgend soll an einem Inputport "PI5" mit 8-Bit-Vector und Sequenz-Splitting, **Fig.150****,** ein Vector-Splitting erläutert werden. Vorbereitend für ein Vector-Splitting wird in Zeile "Z7" die Schaltfläche Vector-Splitting "S", neben "VEC", durch Klick aktiviert, dabei werden die Schaltflächen "VEC" und "SIGNALNAME" in "Z7" aktiviert, wie Fig.150 zeigt. Zusätzlich wurde in **Fig.151** durch Klick die Schaltfläche der PI5-Zeile in Spalte Vector-Splitting "S" diese Schaltfläche aktiviert bzw. markiert und damit das Element "PI5" für ein Vector-Splitting ausgewählt. Dabei wird automatisch das beispielsweise PI5-Sequenz-Splitting geöffnet. Durch Klick in die Schaltfläche der PI5-Sequenz-Splitting-Zeile "1_0:2(10)" in Spalte Vector-Splitting "S" wird diese Schaltfläche und die Schaltfläche "ZEILE" in "Z5" automatisch aktiviert, wie **Fig.152** zeigt. Ausserdem wurden in Fig. 152 zusätzlich durch zwei Klicks in die Schaltfläche ZEILE"+" für die PI5-Sequenz-Splitting-Zeile "1_0:2(10)" zwei Vector-Splitting-Zeilen generiert, die in den Spalten "SIGNALNAME" und "VEC" markiert sind und in Spalte "VEC" je ein "?" besitzen. Dabei wird der Signalname der PI5-Sequenz-Splitting-Zeile "1_0:2(10)" in die generierten Vector-Splitting-Zeilen übernommen.

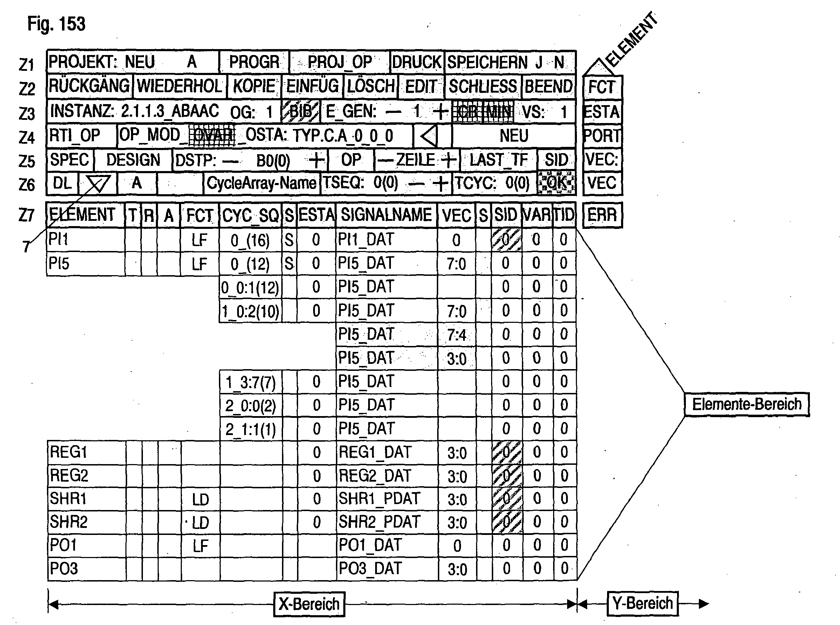

**Fig.153** zeigt hierfür die Vector-Splitting-Einträge "7:4" und "3:0", die für den Zyklus "CYC=1" im gesamten Sequenzbereich "0:2" gelten.

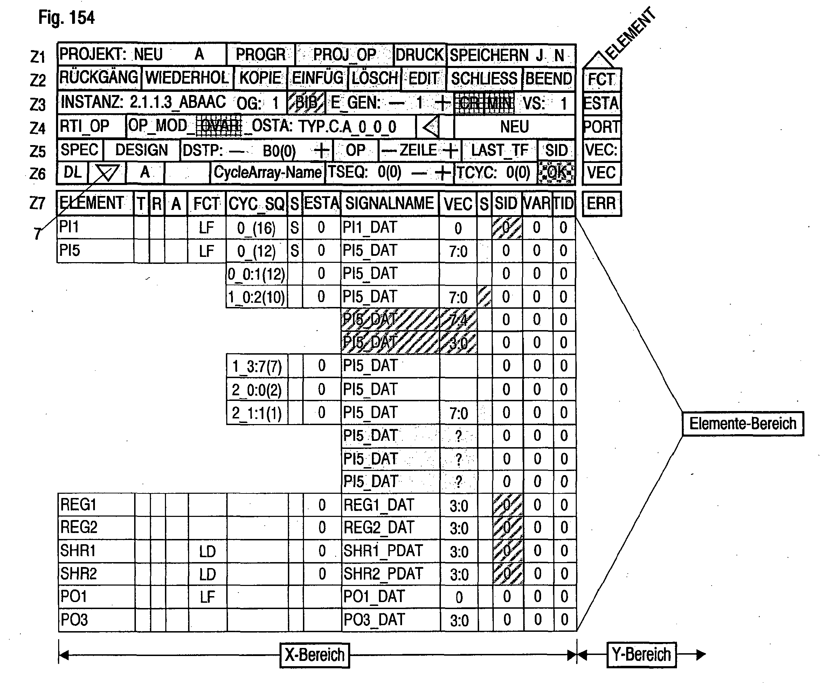

In **Fig.154** wurden für die Sequenz-Splitting-Zeile "2_1:1(1)" drei Vector-Splitting-Zeilen generiert. Dabei erfolgt automatisch mit Klick in die Schaltfläche der Sequenz-Splitting-Zeile "2_1:1(1)" in Spalte Vector-Splitting "S", für die Schaltfläche in der Sequenz-Splitting-Zeile "1_0:2(10)" in Spalte Vector-Splitting "S" und für die Schaltflächen der zugehörigen Vector-Splitting-Zeilen in den Spalten "SIGNALNAME" und "VEC", ein Wechsel des Zustands von "aktiv" nach "passiv" bzw. von "ganzflächiger" nach "schraffierter" Markierung.

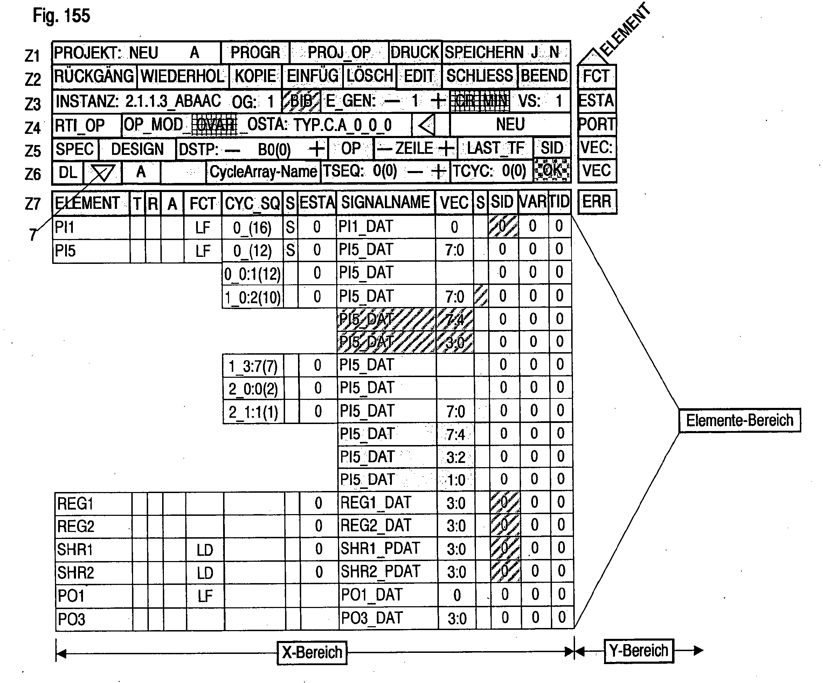

**Fig.155** zeigt für die Sequenz-Splitting-Zeile "2_1:1(1)" die Vector-Splitting-Einträge "7:4", "3:2" und "1:0".

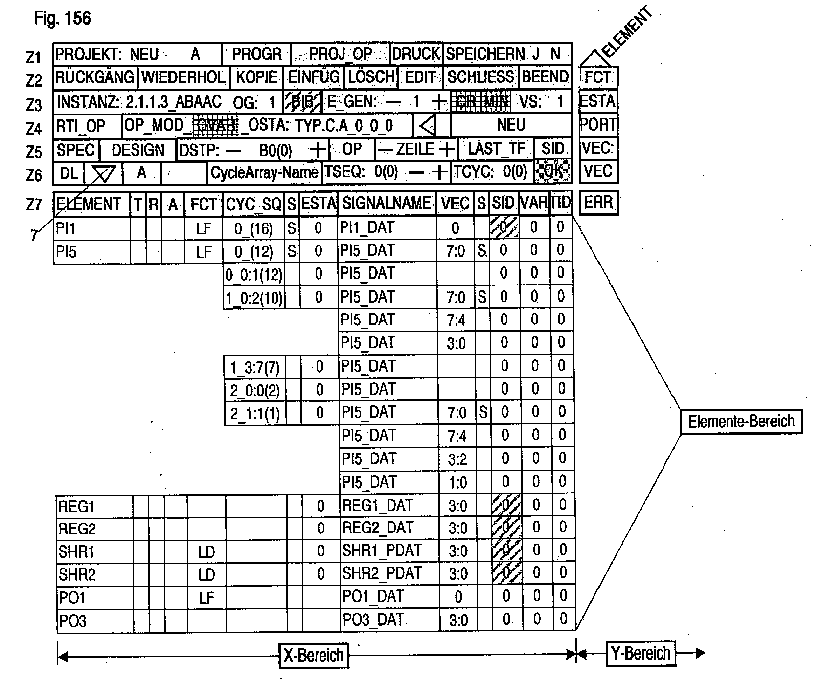

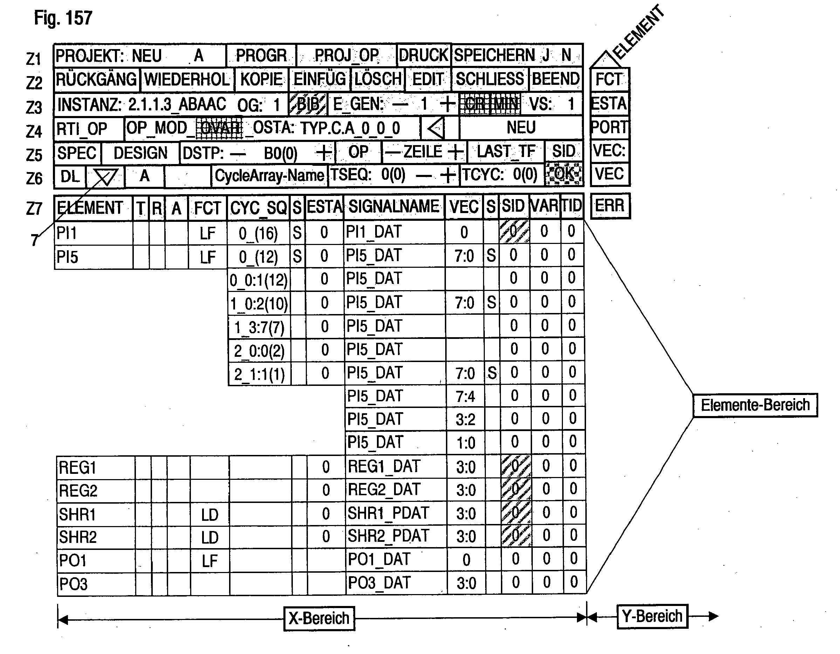

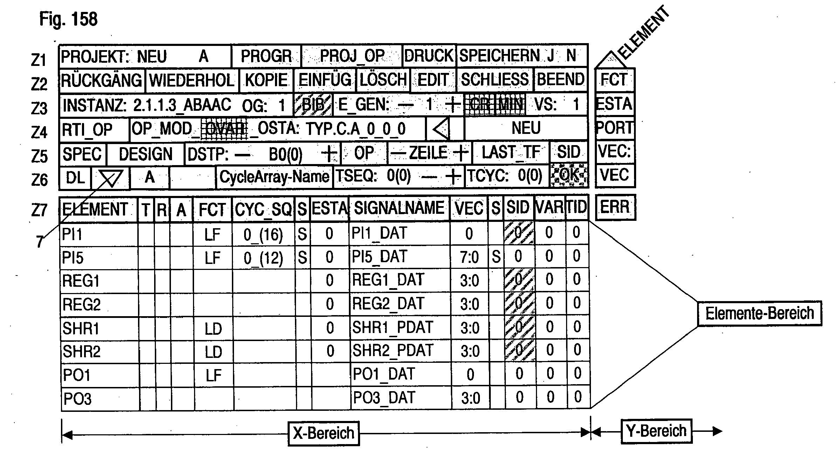

In **Fig.156** wurden durch Klick in die Schaltfläche "OK" in "Z6" die Schaltflächen "ZEILE" in "Z5" und "SIGNALNAME", "VEC" und "S" in "Z7" deaktiviert, sowie in den Spalten "SIGNALNAME" und "VEC" alle aktivierten Schaltflächen deaktiviert bzw. demarkiert. Ausserdem wurde automatisch in der PI5-Zeile und in den Sequenz-Splitting-Zeilen "1_0:2(10)" und "2_1:1(1)" in Spalte Vector-Splitting "S" je ein "S" eingetragen. Erfolgt in einer Sequenz-Splitting-Zeile in Spalte Vector-Splitting "S" ein Klick in die Schaltfläche "S", dann werden die zugehörigen Vector-Splitting-Zeilen weggeschaltet und die Schaltfläche "S" demarkiert, wie für die Sequenz-Splitting-Zeile "1_0:2(10)" in **Fig.157** gezeigt. Das "S" ohne markierten Hintergrund bedeutet, daß die Zeile ein Vector-Splitting besitzt, aber nicht anzeigt. Mit einem nachfolgenden Klick in diese Schaltfläche erhält das "S" wieder einen markierten Hintergrund und es wird das Vector-Splitting angezeigt. In Fig.157 wurden durch Klick in die Schaltfläche der P15-Zeile in Spalte Vector-Splitting "S" das P15-Vector-Splitting und P15-Sequenz-Splitting geschlossen und die Schaltflächen "S" in den Spalten Vector-Splitting "S" und Sequenz-Splitting "S" deaktiviert bzw. demarkiert, wie **Fig.158** zeigt.

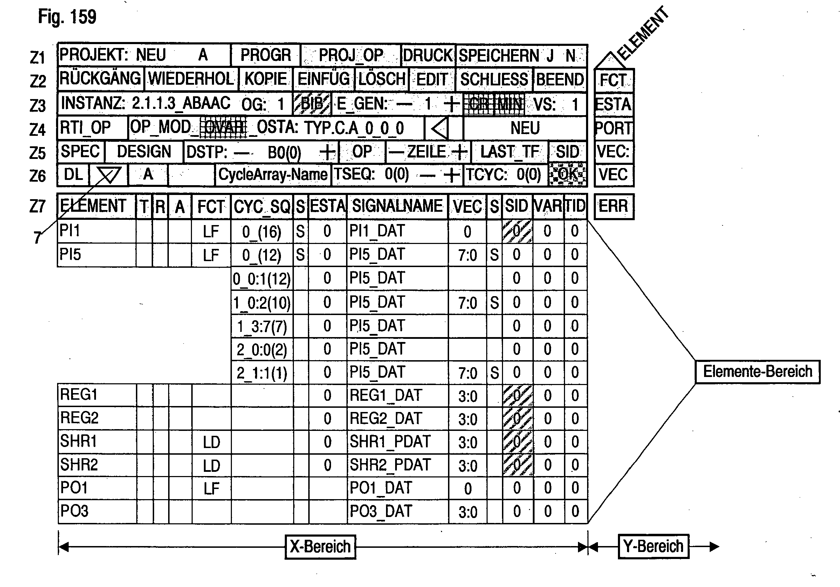

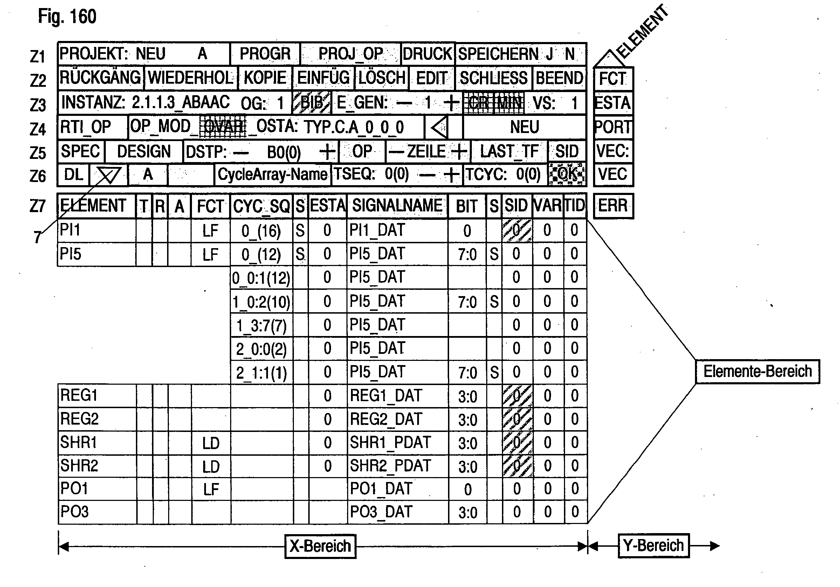

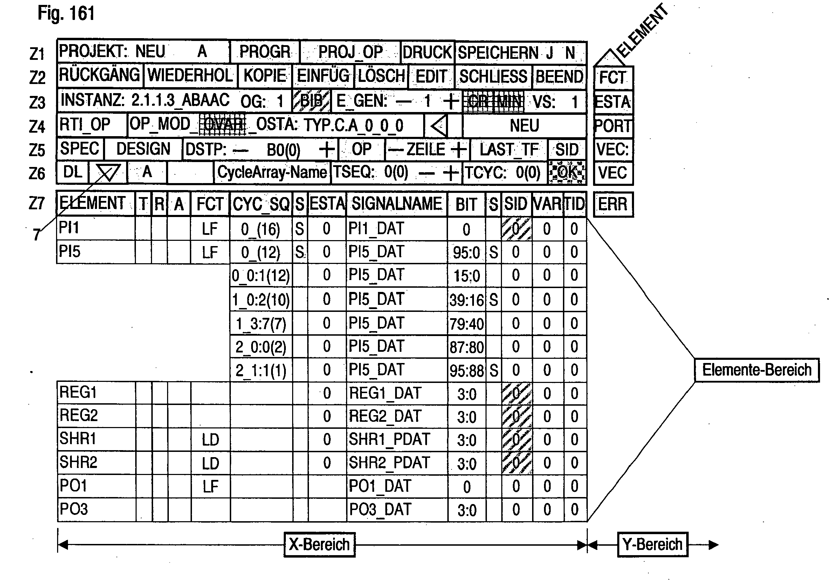

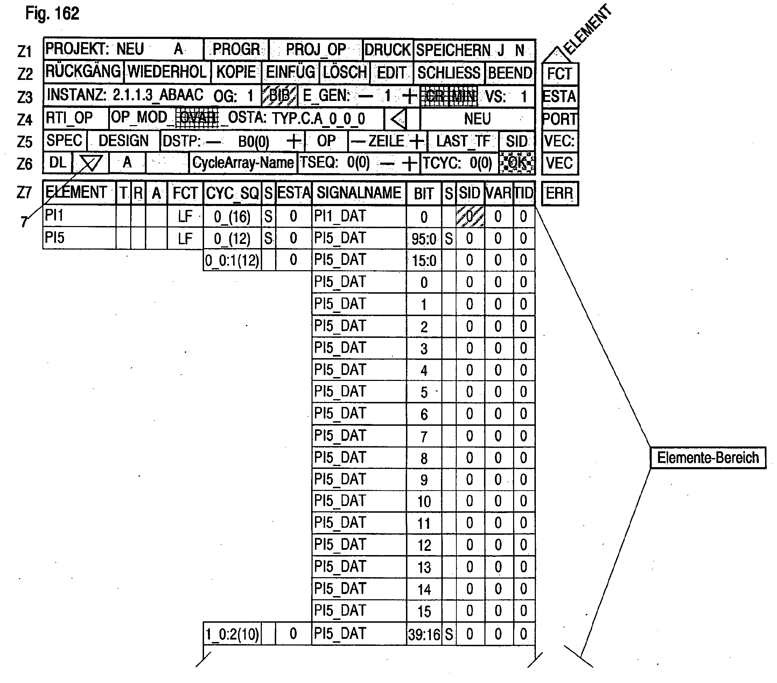

In **Fig.159** wurde durch Klick in die Schaltfläche "S" der P15-Zeile in Spalte Sequenz-Splitting "S" das P15-Sequenz-Splitting geöffnet. Vorbereitend für die Anzeige einzelner Bits in einem Sequenzbereich wurde in Fig.159 die Schaltfläche "VEC" in "Z7" durch Klick in "BIT" umgeschaltet, wie **Fig.160** zeigt. Mit einem nachträglichen Klick in die Schaltfläche der P15-Zeile in Spalte "BIT" werden für das P15-Sequenz-Splitting die Bit-Bereiche, nicht mehr der Vector, in Spalte "BIT" angezeigt, wie in **Fig.161** dargestellt. Durch Klick in die Schaltfläche der SequenzSplitting-Zeile "0_0:1(12)" in Spalte "BIT" werden unterhalb dieser SequenzSplitting-Zeile die Zeilen mit den Bits "0" bis "15" angezeigt, wie **Fig.162** zeigt. Durch erneuten Klick in die Schaltfläche der Sequenz-Splitting-Zeile "0_0:1(12)" in Spalte "BIT" werden unterhalb dieser Sequenz-Splitting-Zeile die Zeilen mit den Bits "0" bis "15" wieder weggeschaltet. In Fig.162 sind die Zeilen unterhalb der Sequenz-Splitting-Zeile "1_0:2(10)" nicht mehr dargestellt.

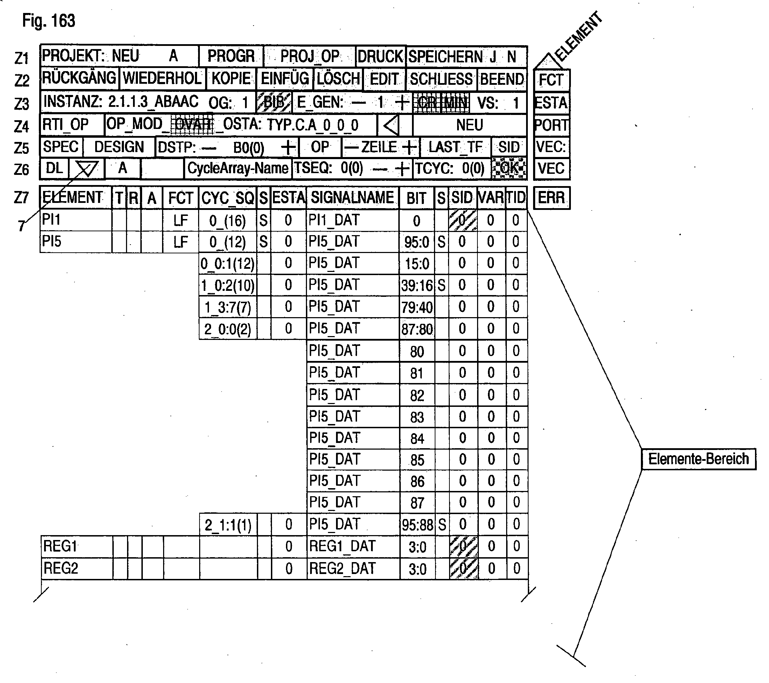

In **Fig.163** werden durch Klick in die Schaltfläche der Sequenz-Splitting-Zeile "2_0:0(2)" in Spalte "BIT", unterhalb dieser Sequenz-Splitting-Zeile, die Zeilen mit den Bits "80" bis "87" angezeigt. In Fig.163 sind die Elemente unterhalb "REG2" nicht mehr dargestellt. In den Darstellungen "Sequenz-Splitting" oder/und Vector-Splitting, ohne und mit "BIT-Darstellung", können entsprechende dynamische Signalnamen vergeben werden, wie vorstehend erläutert.

### Beschreibung zu Fig.164a-194:

Nachfolgend werden für eine RTI-Operations-Spezifikation "RTI-OP-SP" die funktionellen Eigenschaften und Merkmale des RTI-Operations-Bildschirms "RTI-OP-BS" beschrieben.

Ein erstes Beispiel für eine RTI-OP-SP ist in der Blockstruktur von **Fig.164a** dargestellt. Den Datentransfer von Fig.164a zeigen die Ablaufdiagramme **Fig.164b** bis **Fig.164e****.** Die Blockstruktur und Ablaufdiagramme dienen nur der Erläuterung und sind nicht Gegenstand des RTI-OP-BS bzw. des Spezifikationsverfahrens "SPV".

In der Blockstruktur nach **Fig.164a** erfolgt der Transfer mit einer Datenbit-Breite=1, entsprechend einem Vector "(0)", in vier Zyklen mit je vier Sequenzen, vom Inputport "PI1" zum Schieberegister "SHR1", vom "SHR1" zum Schieberegister "SHR2" und vom "SHR2" zum Outputport "PO1". Der reale Datentransfer für die Blockstruktur nach Fig.164a ist im Ablaufdiagramm von **Fig.164b** dargestellt.

In **Fig.164c** wurde der reale Datentransfer von Fig.164b für eine "RTI-OP-SP" strukturiert. Hierzu wurde ein sog. Designstep "DSTP" eingeführt, der nachfolgend bei der Spezifizierung der Transfers nach Fig.164a detailliert erläutert wird. In Fig.164c umfaßt ein "DSTP" beispielsweise drei (3) Datenverarbeitungs-Steps "DVSTPs", "DVSTP1" von PI1 nach SHR1, "DVSTP2" von SHR1 nach SHR2 und "DVSTP3" von SHR2 nach PO1. Der gesamte Transfer wird in den Design-Steps "0" bis "5" abgewickelt, wie Fig.164c zeigt. In jedem Zyklus "CYC" beginnt die Sende-Sequenz mit Null "SQ=0", die Empfangs-Sequenz mit Eins "SQ=1", wie auch **Fig.164d** zeigt. Allgemein gilt, Daten von einem Sender mit der Sequenz "SQ=n" werden von einem Empfänger mit der Sequenz "SQ=n+1" empfangen.

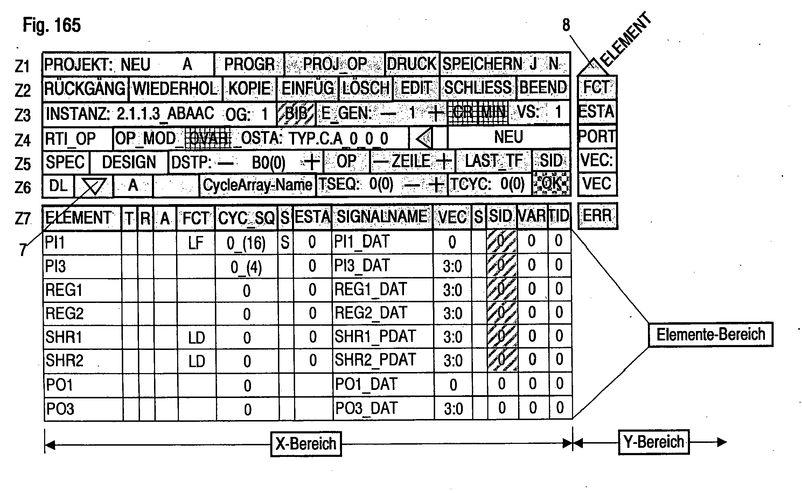

In **Fig.164e** entspricht der Transfer-Ablauf dem von Fig164c, zusätzlich wurde der Elemente-State "ESTA" in die Darstellung mit aufgenommen. Nachfolgend werden die RTI-Transfers für die Blockstruktur von Fig.164a, entsprechend dem Ablaufdiagramm von Fig.164e, anhand der RTI-OP-BS-Darstellungen von **Fig.165** bis **Fig.194** spezifiziert.

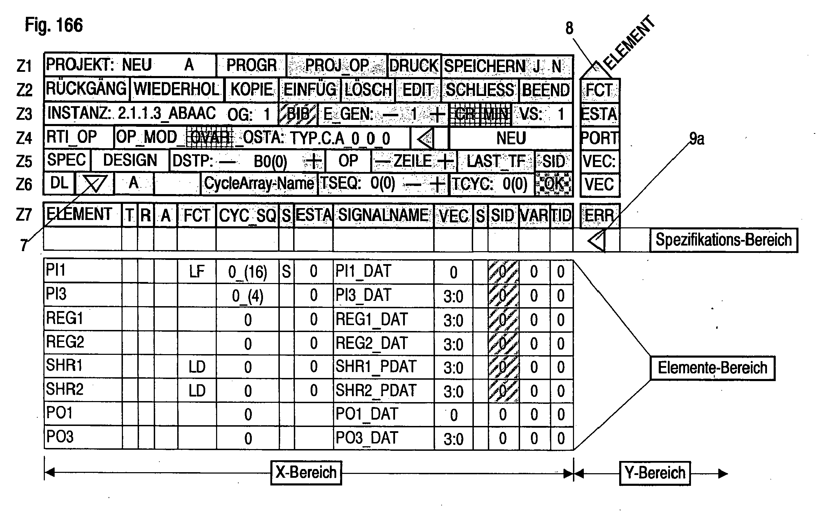

**Fig.165** zeigt unter anderen die Elemente der Blockstruktur von Fig.164a, mit "PI1", "SHR1", "SHR2" und "PO1". Die Schieberegister "SHR1" und "SHR2" sind vor einer Spezifizierung automatisch auf FCT=LD voreingestellt und besitzen deshalb in Spalte "CYC_SQ" keinen Klammerwert der maximalen Sequenz "SQ". Für die zu spezifizierende RTI-Operation ist in Zeile "Z4" beispielsweise die Operation "OP_MOD_OVAR_OSTA: TYP.C.A_0_0_0" eingetragen. Diese Operation hat in Zeile "Z4" den Eintrag "NEU", d. h., sie wird neu erstellt und nicht von einer bestehenden Operation abgeleitet. In Zeile "Z5" ist die Schaltfläche Operation "OP" noch passiv und der Designstep steht noch auf Beginn mit "DSTP:B0(0)". "B0" bedeutet den Beginn "B" des ersten Designstep "0", der Klammerwert "()" steht für die bisher durchgeführten, maximalen Designsteps, im Beispiel ist es der erste Designstep mit dem Klammerwert Null "(0)". Die Schaltflächen in "Z5", Spezifikation "SPEC" und Design "DESIGN" sind mit dem Aufruf des Designlevel "DL" in "Z6" bereits für eine RTI-OP-SP vorbereitet. Der Beginn einer RTI-OP-SP erfolgt durch Klick in die Schaltfläche "OP" in "Z5", die dadurch aktiviert wird, wie **Fig.166** zeigt. Mit der Aktivierung von "OP" wird unterhalb von Zeile "Z7" automatisch die erste Zeile des "Spezifikations-Bereichs" angezeigt, die generell einem Empfänger-Element vorbehalten ist.

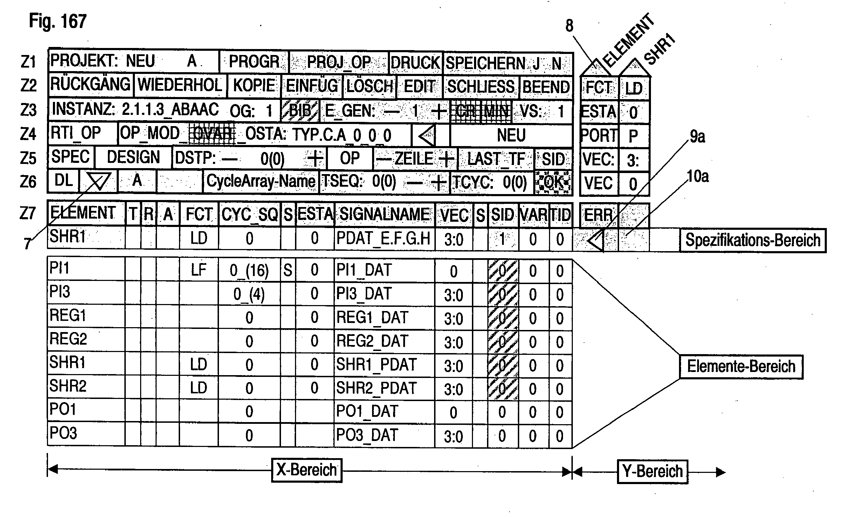

Im Beispiel von **Fig.167** ist "SHR1" das Empfänger-Element für einen ersten Datenverarbeitungs-Step "DVSTP1". Der Transfer eines Empfänger-Elements vom Elemente-Bereich in den Spezifikations-Bereich erfolgt durch Klick im Elemente-Bereich in die Schaltfläche der entsprechenden Elemente-Zeile in Spalte Empfänger "R" (Receiver), im Beispiel von Fig.167 war dies die Elemente-Zeile "SHR1". Das Empfänger-Element im Spezifikations-Bereich wird automatisch in den Schaltflächen der Spalten "ELEMENT" und "R" aktiviert bzw. markiert und es wird generell der dynamische Signalname mit der höchsten SID-Nummer automatisch eingetragen, im Beispiel ist das "PDAT_E.F.G.H" mit "SID=1". Für den Fall, daß es noch keinen dynamischen Signalnamen gibt, wird für einen Empfänger im Spezifikationsbereich automatisch der statische Signalname mit "SID=0" eingetragen. Die Einträge im Spezifikations-Bereich in den Spalten "FCT", "CYC_SQ", "ESTA", "VEC", "VAR" und "TID" werden vom Elemente-Bereich übernommen. Mit dem ersten Empfänger-Transfer im X-Bereich vom Elemente-Bereich in den Spezifikations-Bereich wird in der DSTP-Anzeige das "B" automatisch weggeschaltet, d. h., der "DSTP" ist in Arbeit, im Beispiel von Fig.167 wechselt der "DSTP" in "Z5" von "B0(0)" nach "0(0)". Bei einem Transfer eines Empfänger-Elements im X-Bereich, vom Elemente-Bereich in den Spezifikations-Bereich, erfolgt automatisch die Darstellung des Empfänger-Elements im Y-Bereich, im Beispiel von Fig.167 ist das "SHR1 ". Während im X-Bereich die Elemente-Zeilen ausschließlich Elemente-Outputsignale repräsentieren, besitzen die Empfänger-Elemente im Y-Bereich ausschließlich Elemente-Inputsignale. Die Darstellung eines Empfänger-Elements im Y-Bereich erfolgt Zeilen-strukturiert durch die ELEMENT-Spalte "8". Es bedeuten: Schräg beschriftet an der Dreieckskante der Elemente-Typ, in den Zeilen von oben nach unten, die Elemente-Funktion "FCT", der Elemente-State "ESTA", der Inputport-Typ "PORT", "FCT", der Elemente-State "ESTA", der Inputport-Typ "PORT", die höchstwertigste Inputport-Vector-Ziffer "VEC:", die niederwertigste Inputport-Vector-Ziffer "VEC". Danach ergibt sich der Eintrag in Fig.167 im Y-Bereich für das Empfänger-Element "SHR1": FCT=LD, ESTA=0, PORT=Parallelport "P", VEC:=3, VEC=0. Wie Fig.167 zeigt, wird für ein Element die Datenverarbeitungs-Richtung, "Input-port" im Y-Bereich nach "Outputport" im X-Bereich, durch den Pfeil 9a auf markiertem Untergrund, in Verbindung mit dem markierten "Koordinatenfeld" 10a dargestellt. Hierdurch können die spezifizierten Datenverarbeitungs-Steps "DVSTPs" in der Matrix-Anordnung des X-/Y-Bereichs übersichtlich dargestellt werden, wie nachfolgend gezeigt wird.

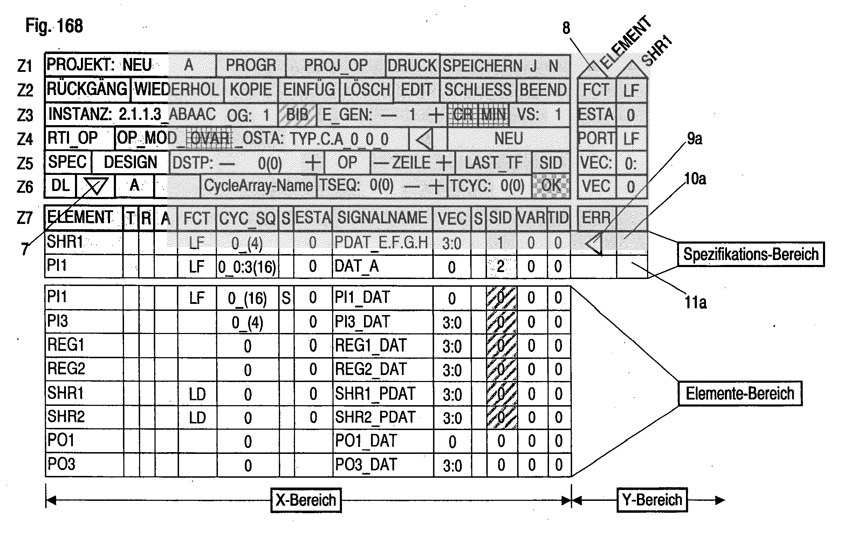

Der Transfer eines Sender-Elements vom Elemente-Bereich in den SpezifikationsBereich erfolgt durch Klick im Elemente-Bereich in die Schaltfläche der entsprechenden Elemente-Zeile in Spalte Sender "T" (Transmitter), im Beispiel von **Fig.168** ist dies die Elemente-Zeile "PI1". Für das transferierte Sender-Element "PI1" wird im Spezifikations-Bereich automatisch die Schaltfläche der Spalte "T" aktiviert bzw. markiert und es wird in Spalte "CYC_SQ" der erste Zyklus "CYC=0" mit seinem Sequenzbereich "SQ=0:3" und seine noch volle, maximale Sequenz- bzw. Streaming-Anzahl "(16)" eingetragen, wie sie vorher manuell definiert und in Fig.147 dargestellt wurde. Ausserdem wird für "CYC_SQ=0_0:3" der vorbereitete, zugehörige dynamischen Signalname mit seiner SID-Nummer automatisch angezeigt, im Beispiel ist das "DAT_A" mit "SID=2".

Die dynamischen Signalnamen für "PI1" können, wie vorstehend gezeigt, bereits im Elemente-Bereich angezeigt bzw. "CYC_SQ" zugeordnet werden. Für den Fall, daß ein Sender, beispielsweise PI1, für CYC=0 zwei oder mehrere Sequenzbereiche besitzt, wird für den ersten DVSTP von PI1 der erste Sequenzbereich im Spezifikations-Bereich automatisch angezeigt. Beim nächst folgenden DVSTP von PI1 im gleichen DSTP kann nochmal der erste Sequenzbereich oder auch der zweite Sequenzbereich erforderlich sein. Deshalb werden dann im Spezifikations-Bereich alle PI1-Sequenzbereiche für "CYC=0" angezeigt und es wird manuell entweder der erste oder der zweite Sequenzbereich ausgewählt. Wurde der zweite PI1-Sequenzbereich ausgewählt, dann ergibt sich die Auswahl für einen folgenden DVSTP im gleichen DSTP zwischen zweiten und dritten PI1-Sequenzbereich, usw.. Die manuelle Auswahl eines Sequenzbereichs im Spezifikations-Bereich erfolgt durch einen Klick in die Schaltfläche des gewünschten Sequenzbereichs in Spalte "CYC_SQ", der dadurch aktiviert bzw. markiert wird. Durch nachfolgenden Klick in die Schaltfläche der ausgewählten Sequenzzeile in Spalte Sequenzsplitting "S" wird der ausgewählte Sequenzbereich der PI1-Zeile zugeordnet, die restlichen PI1-Sequenzbereiche werden im Spezifikations-Bereich weggeschaltet. Das Auswahlverfahren für die Sender-Sequenzbereiche gilt für alle DSTPs und CYC-Werte. Besitzt der Sender im Spezifikations-Bereich noch keinen dynamischen Signalnamen, so kann wie vorstehend beschrieben ein dynamischer Signalname eingetragen werden oder es wird automatisch der statische Signalname als dynamischer Signalname mit "SID=1" eingesetzt.

Ein Empfänger mit nur einem Daten-Inputport übernimmt immer mit einem bestätigten Datenverarbeitungs-Step "DVSTP" den dynamischen Signalnamen des Transfer-Senders, wie nachfolgend gezeigt wird. Erhält bei einem "DVSTP" ein Empfänger den Transfer von mehr als einem Sender, so kann ein dynamischer Empfänger-Output-Signalname generiert werden, wie später gezeigt wird.

Im Spezifikations-Bereich in Spalte "FCT" des X-Bereichs, Fig.168, wurde für das Empfänger-Element "SHR1" die Funktion "LF" ausgewählt bzw. eingestellt. Hierdurch wird für das "SHR1" im X-Bereich in Spalte "CYC_SQ" die maximale Sequenz "(4)" und im Y-Bereich die Anpassung FCT=LF, PORT=LF und VEC=0:0 automatisch angezeigt. Im X-Bereich werden für ein Schieberegister, unabhängig von seiner Funktion in Spalte "FCT", die Daten des Parallel-Outputports in den Spalten "SIGNALNAME" und "VEC" angezeigt, im Beispiel von Fig.168 sind das der dynamische Signalname "PDAT_E.F.G.H" und der Vector "3:0". Hierdurch wird eine vereinfachte bzw. verbesserte Ergebnisdaten-Übersicht erreicht, unabhängig von der Schieberegister-Funktion.

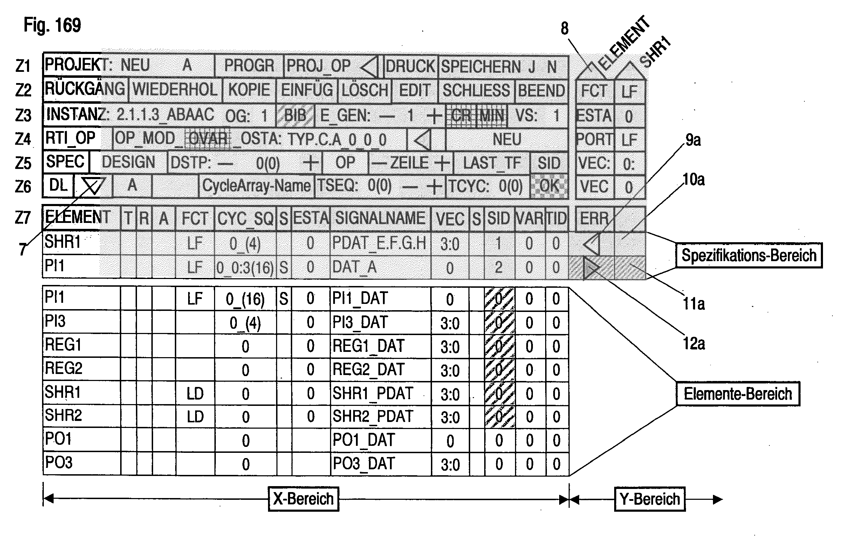

Wie aus Fig.168 ersichtlich, bleibt beim Transfer eines Empfänger- bzw. Sender-Elements vom Elemente-Bereich in den Spezifikations-Bereich der Elemente-Bereich unverändert. Soll ein Empfänger-Element vor Bestätigung eines Datenverarbeitungs-Steps "DVSTP" im Spezifikations-Bereich, beispielsweise "SHR1" in Fig.168, entfernt werden, so erfolgt dies durch Klick in die Schaltfläche der SHR1-Zeile in Spalte "ELEMENT". Dadurch entsteht unter der Zeile "Z7" wieder eine leere Empfänger-Zeile, eine bereits bestehende Senderzeile bleibt dabei unverändert. Soll ein Sender-Element vor Bestätigung eines Datenverarbeitungs-Steps "DVSTP" im Spezifikations-Bereich, beispielsweise "PI1" in Fig.168, entfernt werden, so erfolgt dies durch Klick in die Schaltfläche der PI1-Zeile in Spalte "T". Dabei wird die komplette Sender-Zeile im Spezifikations-Bereich entfernt. Die Zuweisung der PI1-Outputsignale zum SHR1-Inputport erfolgt durch Klick in das "Koordinatenfeld" 11a, das hierdurch beispielsweise schraffiert markiert wird, wie **Fig.169** zeigt. Hierbei wird die Kopplung des Senders "PI1" im X-Bereich zum Empfänger "SHR1" im Y-Bereich durch die automatische Generierung des Pfeils 12a, der auf das Koordinatenfeld 11a zeigt, angezeigt. Die Fläche des Pfeils 12a ist beispielsweise flächig markiert und auf schraffiert markiertem Grund abgebildet.

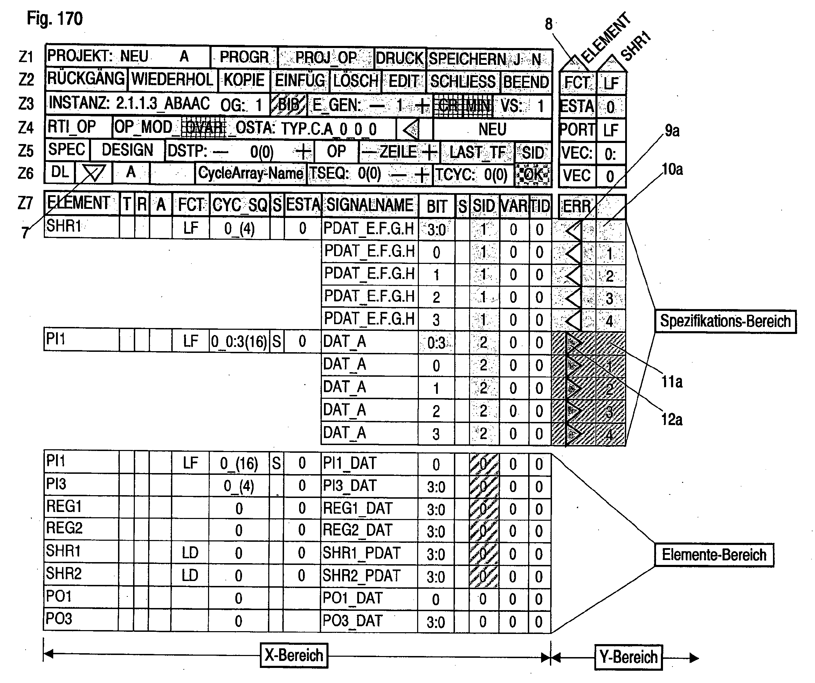

In **Fig.170** wurde für "SHR1" und "PI1" auf Bit-Darstellung umgeschaltet. Dabei erfolgt generell die Bit-Zuordnung zwischen Empfänger und Sender in der Empfänger-Spalte des Y-Bereichs, im Beispiel von Fig.170 durch die Ziffern "1 bis 4". Würde PI1 das Bit-Streaming mit "MF" senden und die SHR1-Funktion "LF" sein, dann wäre die Bit-Zuordnung PI1/SHR1 mit 3/0, 2/1, 1/2, 0/3. Die für die Bit-Darstellung ausgewählten Elemente-Zeilen, "SHR1" und "PI1", besitzen in der Spalte "BIT" ausschließlich Bit-Bereiche, keine Vector-Werte. Bei einem Schieberegister wird, im Beispiel bei "SHR1", wie vorangegangen erläutert, generell der Parallel-Output dargestellt. Die Parallel-Output-Bits besitzen in der VEC- und BIT-Darstellung die gleiche Reihenfolge. Beim Inputport "PI1" werden in der PI1-Zeile in Spalte "BIT", Fig.170, die Bits für "FCT=LF" in der Reihenfolge des BitStreamings mit "0:3", für "FCT=MF" mit "3:0" angeordnet.

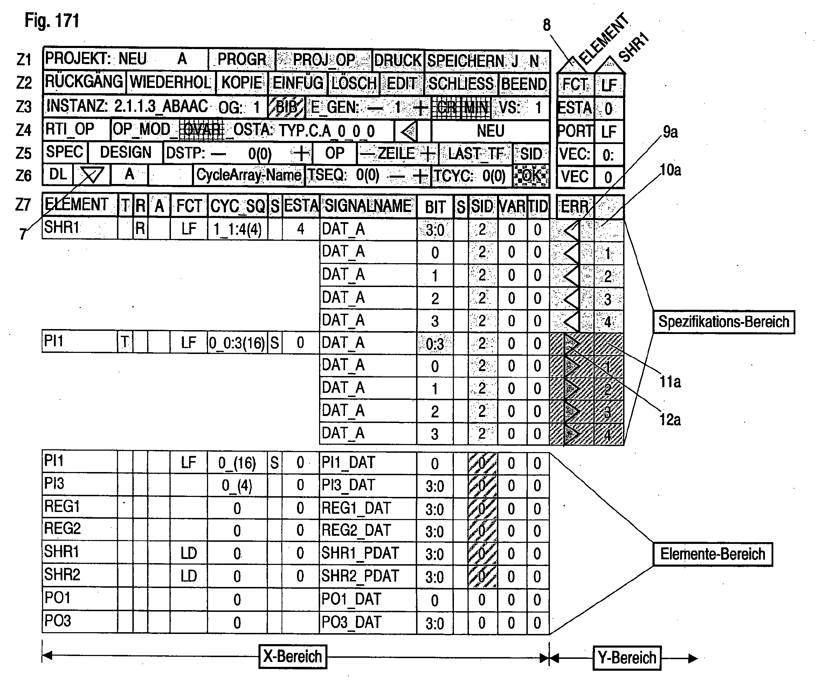

In **Fig.171** wurde der Transfer von "PI1" nach "SHR1" durch Klick in die Schaltfläche der SHR1-Zeile in Spalte "R" bestätigt. Dadurch werden im SpezifikationBereich die PI1-Sende-Daten mit ihren dynamischen Signalnamen vom Empfänger "SHR1" übernommen, der "SID" entsprechend, automatisch um Eins erhöht und für "SHR1" in Spalte "R" der Empfang mit "R" (Receive) und für "PI1" das Senden in Spalte "T" mit "T" (Transmit) automatisch eingetragen. Ausserdem werden im Spezifikations-Bereich am Empfangs-Element "SHR1" automatisch in Spalte "CYC_SQ" der Zyklus von "0" auf "1" erhöht und der Empfangs-Sequenzbereich mit "SQ=1:4" eingetragen, sowie in Spalte "ESTA" der neue Elemente-State mit "ESTA=4" automatisch generiert und angezeigt. Die Eintragungen des Senders im Spezifikations-Bereich, im Beispiel ist das die PI1-Zeile, bleiben unverändert.

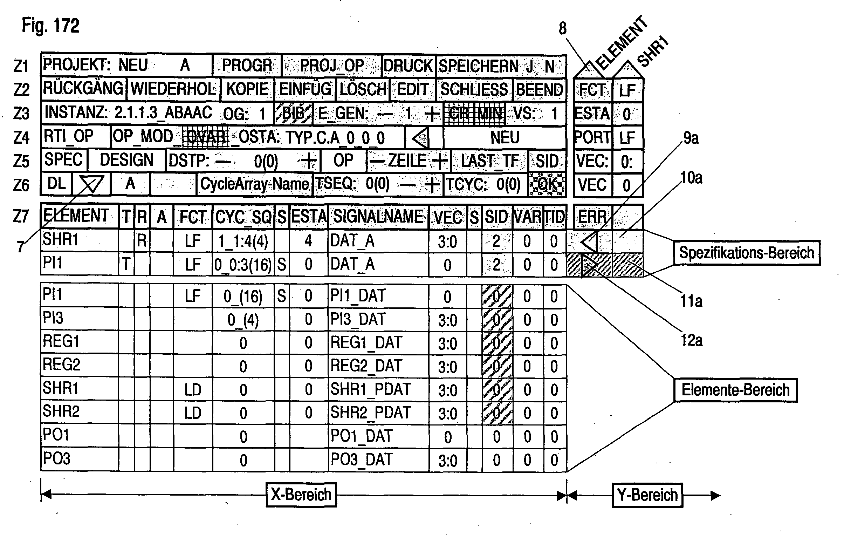

Mit Klick in die Schaltfläche "BIT" in "Z7" wird wieder auf "VEC" umgeschaltet, wie **Fig.172** zeigt. In Fig.171 können durch Klick in die Schaltfläche der SHR1-Zeile oder/und der PI1-Zeite in Spalte "BIT" die Bit-Zeilen "0" bis "3" weggeschaltet werden, die Schaltflächen werden dabei deaktiviert bzw. demarkiert. Soll im Spezifikations-Bereich, Fig.172, ein bereits bestätigter "DVSTP" geändert werden, so wird die Bestätigung, durch Klick in die Schaltfläche der Empfänger-Zeile in Spalte "R", wieder gelöscht. Alternativ kann die Bestätigung eines "DVSTP" auch durch Klick in die Schaltfläche "RÜCKGÄNG" in "Z2" gelöscht werden. Danach können, wie vorstehend beschrieben, beliebige Änderungen im Spezifikations-Bereich durchgeführt werden.

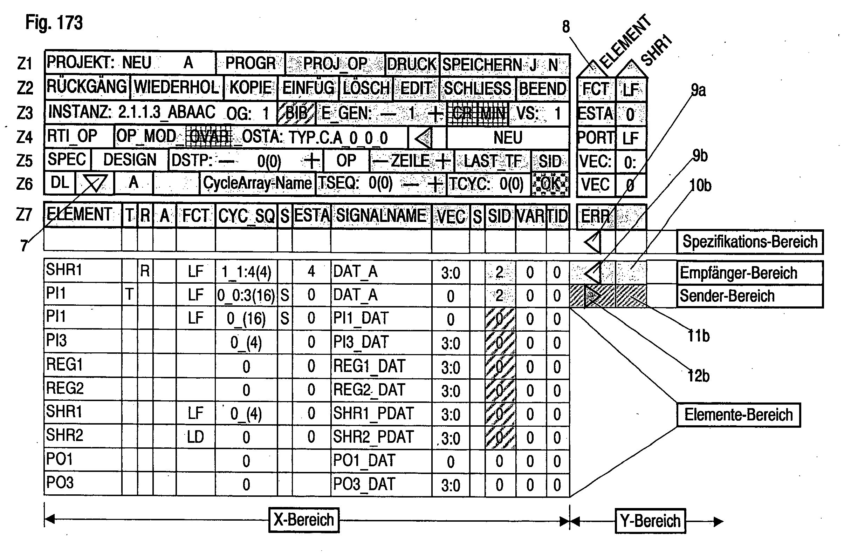

Nachdem im ersten Design-Step "DSTP0", der erste Datenverarbeitungs-Step "DVSTP1" abgeschlossen ist, wird durch Klick in die Schaltfläche der EmpfängerZeile "SHR1" in Spalte "ELEMENT", automatisch die SHR1-Zeile vom "Spezifikations-Bereich" in den "Empfänger-Bereich" und die PI1-Zeile vom "Spezifikations-Bereich" in den "Sender-Bereich" transferiert, wie in **Fig.173** dargestellt. Dabei wird wieder im Spezifikations-Bereich eine Leer-Zeile unterhalb der Zeile "Z7" gebildet. Im Empfänger-Bereich bzw. im Sender-Bereich werden in Spalte "R" bzw. "T" die Einträge beispielsweise ohne Markierung dargestellt. Der Pfeil 9a und das Koordinatenfeld 10a der SHR1-Zeile im Spezifikationsbereich, Fig.172, wird im Empfänger-Bereich, Fig.173, mit Pfeil 9b und Koordinatenfeld 10b, der Pfeil 12a und das Koordinatenfeld 11a der PI1-Zeile im Spezifikationsbereich, Fig.172, wird im Sender-Bereich, Fig.173, mit Pfeil 12b und Koordinatenfeld 11b, bezeichnet. Für die beim Elemente-Transfer vom Spezifikations-Bereich in den Empfänger-/Sender-Bereich beteiligten Elemente, Fig.173, erfolgt im Elemente-Bereich eine automatische Anpassung der Funktion, im Beispiel wird für SHR1 die Funktion von "LD" auf "LF" umgeschaltet. Der Grund für diese Anpassung ist, daß innerhalb eines "DSTP" ein Element nur in einer Funktion verwendet werden kann.

Soll ein DVSTP geändert oder rückgängig gemacht werden, dessen Elemente bereits im Empfänger- bzw. Sender-Bereich plaziert sind, dann müssen die Elemente aus dem Empfänger- bzw. Sender-Bereich wieder in den Spezifikations-Bereich gebracht werden. Dies erfolgt durch einen Klick in die Schaltfläche der ausgewählten Empfängerzeile in Spalte "R" im Empfänger-Bereich. Dabei werden die zum DVSTP gehörenden Sender mit in den Spezifikations-Bereich transferiert.

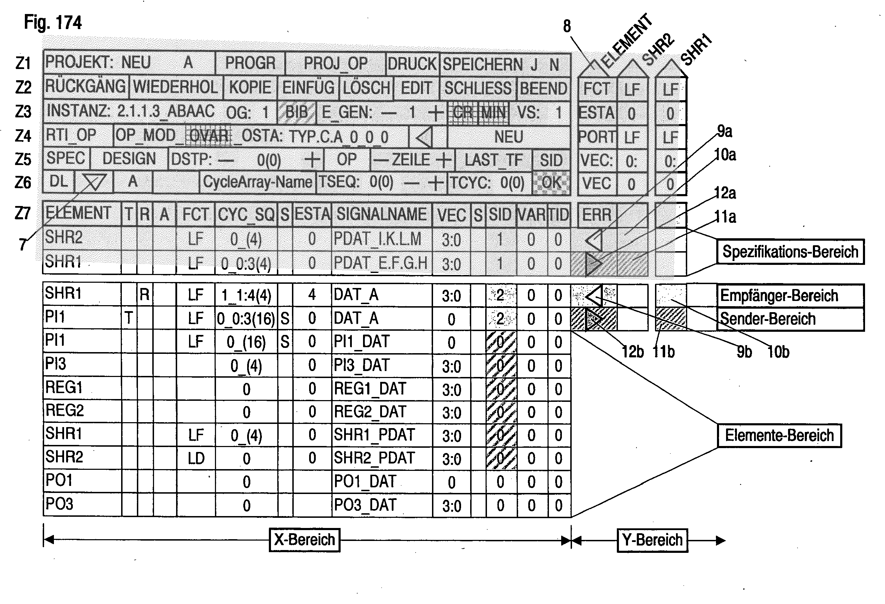

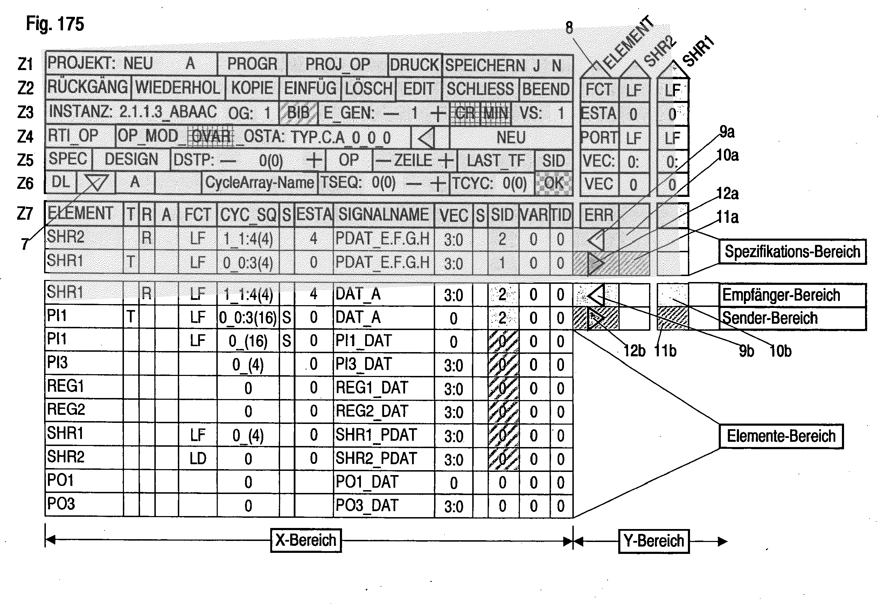

**Fig.174** zeigt innerhalb des ersten Design-Step, "DSTP0", den zweiten Datenverarbeitungs-Step, "DVSTP2", der in **Fig.175** bestätigt und damit abgeschlossen wurde. Im "DVSTP2" wurde beim Transfer des Empfänger-Elements "SHR2" vom Elemente-Bereich in den Spezifikations-Bereich, Fig.174, automatisch im Y-Bereich das "SHR2" direkt neben der Spalte "8" angeordnet, das "SHR1" vom "DVSTP1" wird dabei nach rechts verschoben und, beispielsweise mit einem geringen Spalt, neben "SHR2" plaziert.

Generell wird im Y-Bereich der aktuelle Empfänger des Spezifikations-Bereichs rechts neben Spalte "8" plaziert, eine vorher bestehende Empfänger-Gruppe wird nach rechts verschoben und neben dem aktuellen Empfänger plaziert. Der "DVSTP2" entspricht in der Durchführung dem vorher erläuterten ersten "DVSTP", d. h., "SHR2" und "SHR1" wurden vom Elemente-Bereich in den Spezifikations-Bereich transferiert und es wurde durch Klick in die Schaltfläche der SHR2-Zeile in Spalte "R" der "DVSTP2" bestätigt bzw. abgeschlossen und im Spezifikations-Bereich entsprechend die Einträge in der SHR2-Zeile gebildet, wie in Fig.175 dargestellt. Mit dem Abschluß des "DVSTP2" erfolgt anschließend im Spezifikations-Bereich, durch Klick in die Schaltfläche der SHR2-Zeile in Spalte "ELEMENT", der Transfer der SHR2-Zeile in die oberste Zeile des Empfänger-Bereichs und der SHR1-Zeile in die oberste Zeile des Sender-Bereichs. Bereits bestehende Zeilen im Empfänger-Bereich bzw. im Sender-Bereich werden um eine Zeile nach unten verschoben.

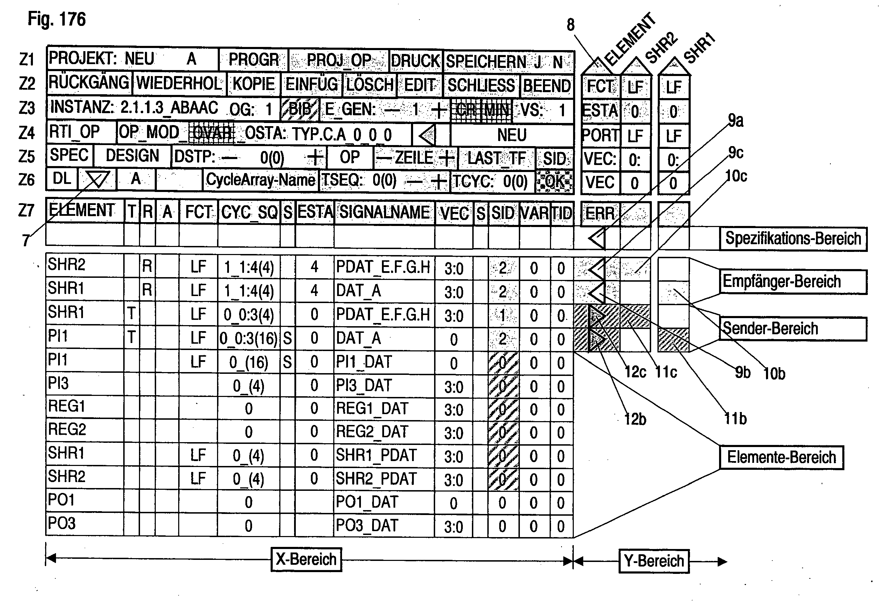

Im Beispiel von **Fig.176** betrifft dies nur die Empfänger-Zeile "SHR1" und die Sender-Zeile "PI1". Mit dem Transfer der Zeilen aus dem Spezifikations-Bereich in den Empfänger- bzw. Sender-Bereich wird unterhalb der Zeile "Z7" im Spezifikations-Bereich automatisch wieder eine Leer-Zeile generiert, die für einen nachfolgenden "DVSTP" einen Empfänger aufnimmt. Der Pfeil 9a und das Koordinatenfeld 10a der SHR2-Zeile im Spezifikationsbereich, Fig.175, wird im Empfänger-Bereich, Fig.176, mit Pfeil 9c und Koordinatenfeld 10c, der Pfeil 12a und das Koordinatenfeld 11a der SHR1-Zeile im Spezifikationsbereich, Fig.175, wird im Sender-Bereich, Fig.176, mit Pfeil 12c und Koordinatenfeld 11 c, bezeichnet.

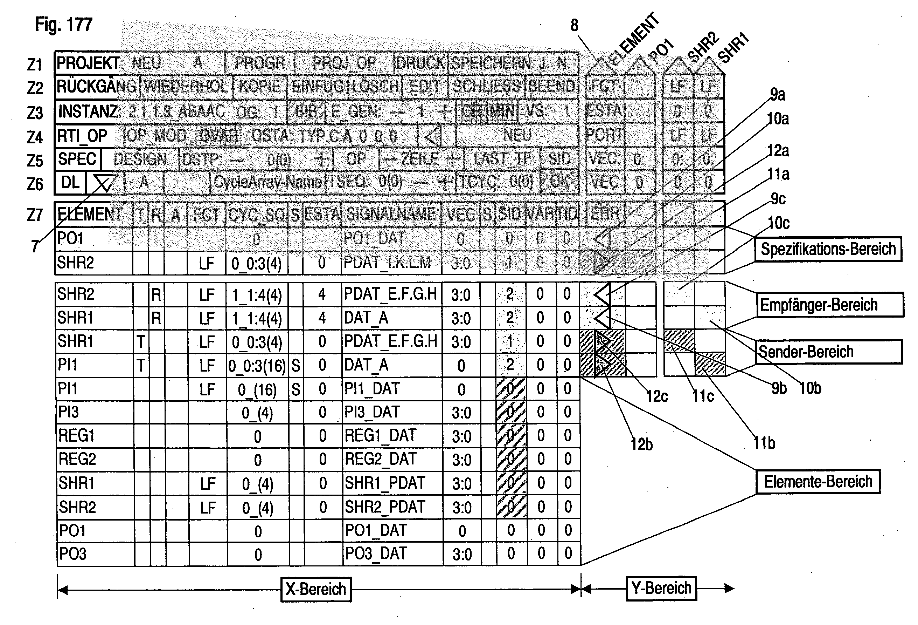

In **Fig.177** ist innerhalb des "DSTP0" der dritte und letzte "DVSTP" mit Empfänger "PO1" und Sender "SHR2" dargestellt. Der empfangende Outputport "PO1" besitzt noch keinen dynamischen Signalnamen, da er im RTI-Bereich am Ende der Transfer-Kette steht und ausschließlich Daten mit dynamischen Signalnamen empfängt.

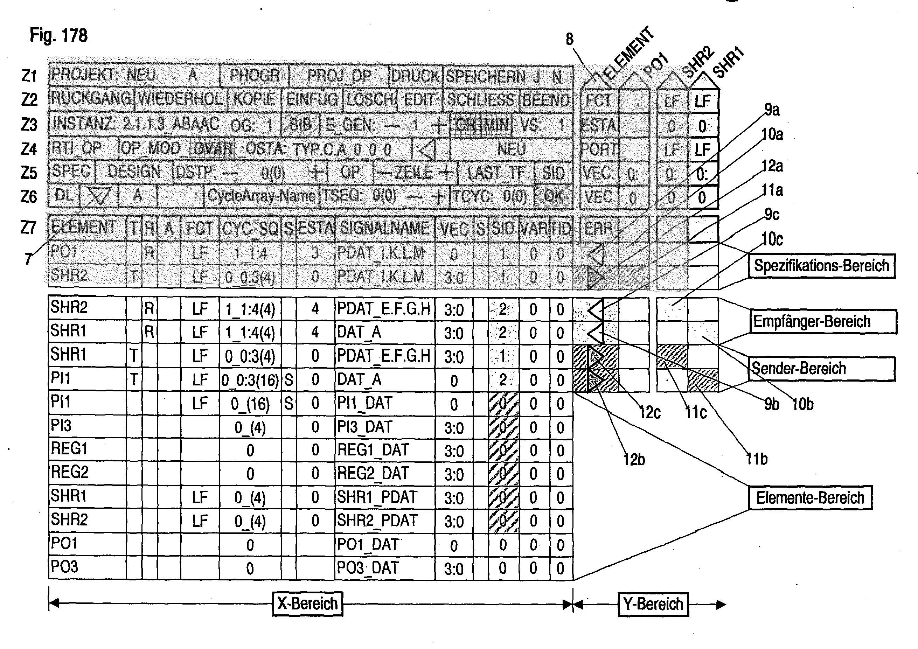

**Fig.178** zeigt den Zustand des Spezifikations-Bereichs nach Bestätigung des "DVSTP3". Dabei wurden vom Empfänger "PO1" die Funktion "LF" und der dynamische Signalname "PDAT_I.K.L.M" des Senders "SHR2" mit "SID=1" übernommen. Ausserdem wird automatisch für "PO1" der erste Empfangszyklus "CYC=1" mit Sequenzbereich "1:4" für ein 4-fach Streaming und "ESTA=3" angezeigt. "ESTA=3" ergibt sich aus der Übernahme der Sender-ESTAs mit der Reihenfolge, "ESTA=0", "ESTA=1", "ESTA=2" und "ESTA=3".

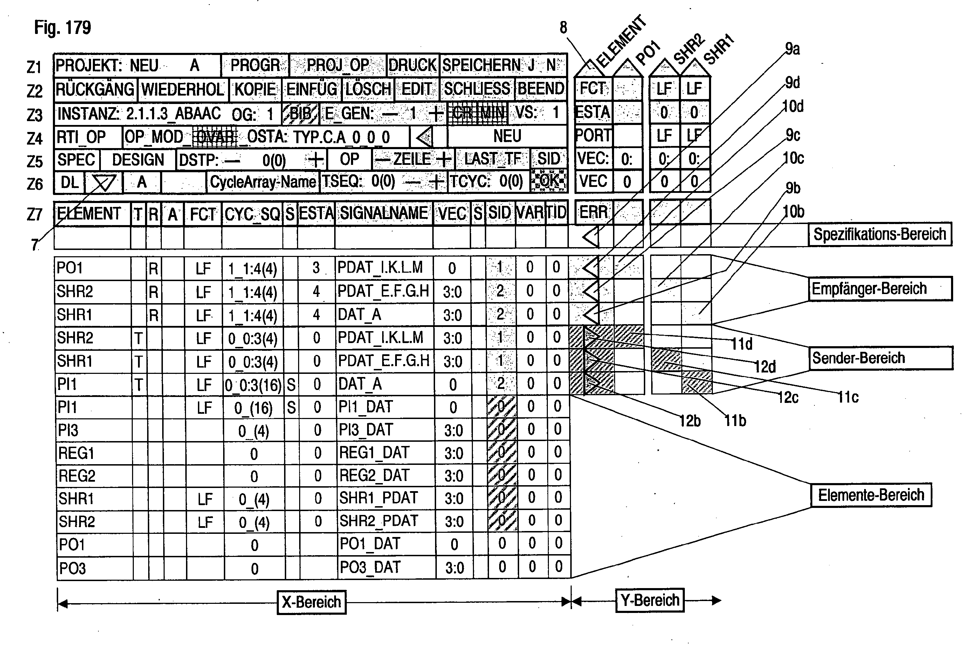

Der Empfänger bzw. Sender des Spezifikations-Bereichs von Fig.178 wurde in **Fig.179** in den Empfänger-Bereich bzw. Sender-Bereich transferiert. Der Pfeil 9a und das Koordinatenfeld 10a der PO1-Zeile im Spezifikationsbereich, Fig.178, wird im Empfänger-Bereich, Fig.179, mit Pfeil 9d und Koordinatenfeld 10d, der Pfeil 12a und das Koordinatenfeld 11a der SHR2-Zeile im Spezifikationsbereich, Fig.178, wird im Sender-Bereich, Fig.179, mit Pfeil 12d und Koordinatenfeld 11 d bezeichnet.

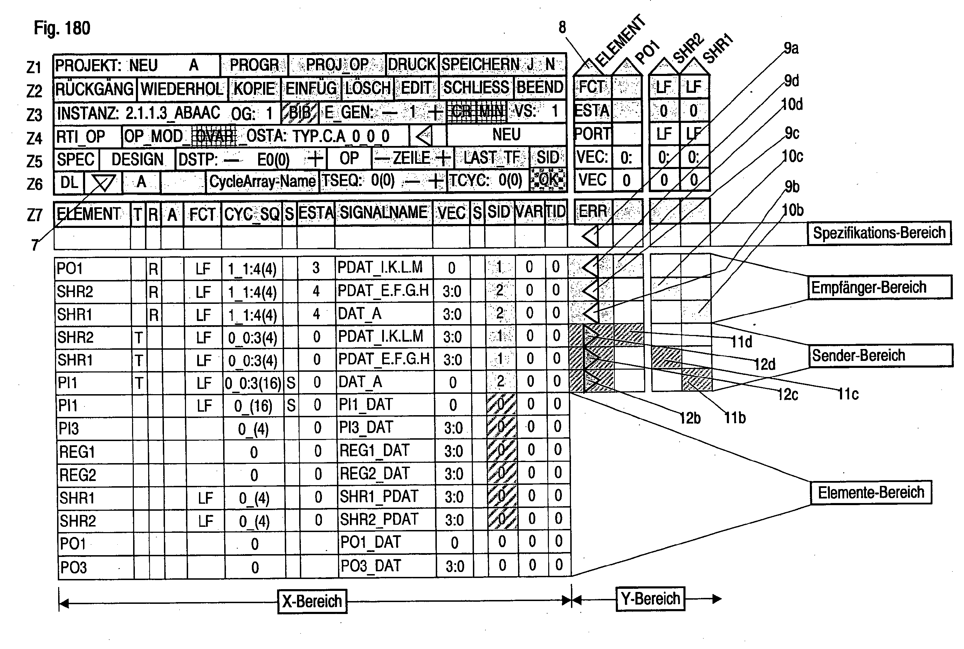

Mit Klick in die Schaltfläche "OK" in "Z6" wird der "DSTP0" bestätigt bzw. beendet und entsprechend in Zeile "Z5" von "DSTP:0(0)" in "DSTP:E0(0)" gewechselt, wie **Fig.180** zeigt. Das "E" in "DSTP:E0(0)" steht für "Ende".

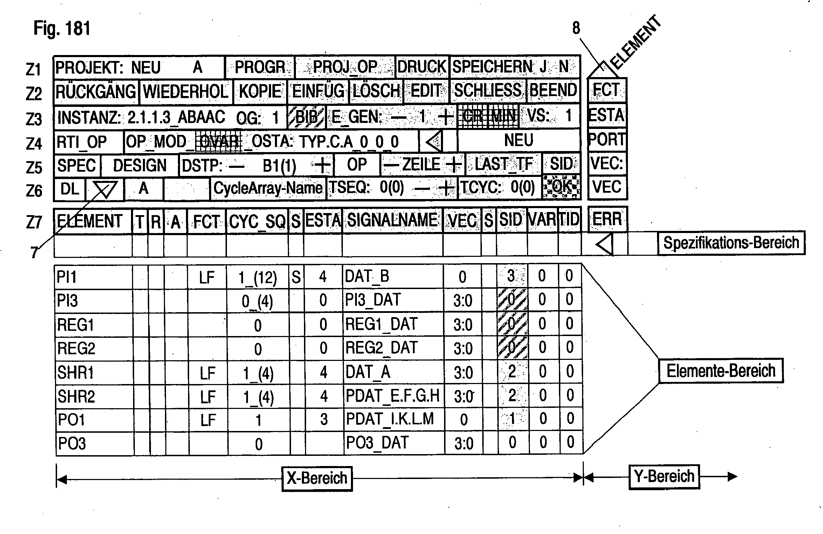

Mit einem nachfolgenden Klick in die Schaltfläche "OK" in "Z6" wird der Beginn des zweiten Design-Step mit "DSTP:B1(1)", **Fig.181****,** angezeigt. Hierbei bringen "SHR1", "SHR2" und "PO1", die im Design-Step "0" Empfänger waren, ihre aktuellen Parameter mit. "PI1" war Sender im Design-Step"0", Fig.180, und aktualisiert deshalb automatisch seine Parameter bei Beginn des Design-Step"1", Fig.181, mit "CYC=1", verbleibendem maximalen Streaming "(12)", "ESTA=4" und das zu Beginn von "CYC=1" zugehörige Datum "DAT_B" mit "SID=3". Die Übernahme der Parameter von Empfänger-Elementen von einem "DSTP" in einen nachfolgenden, neuen "DSTP", bzw. die Aktualisierung der Parameter von SenderElementen bei Beginn eines neuen "DSTP", zeigt Fig.164e.

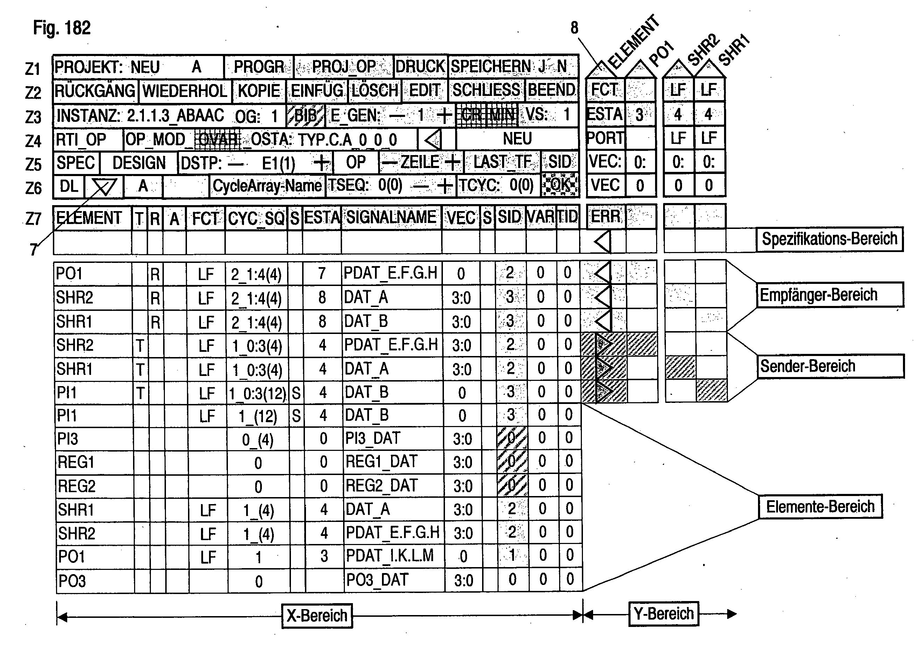

In **Fig.182** sind alle DVSTPs bzw. Transfers des "DSTP1" im Empfänger-/Sender-Bereich dargestellt und mit "OK" in "Z6" bestätigt, sowie in Zeile "Z5" mit "DSTP:E1(1)" angezeigt. Im Design-Step "1" sind die Transfers bzw. DVSTPs in der Reihenfolge von "PI1" nach "SHR1", von "SHR1" nach "SHR2" und von "SHR2" nach "PO1", durch je einen Klick in die Schaltfläche der Empfänger-Zeile im Spezifikations-Bereich in Spalte "R" bestätigt worden.

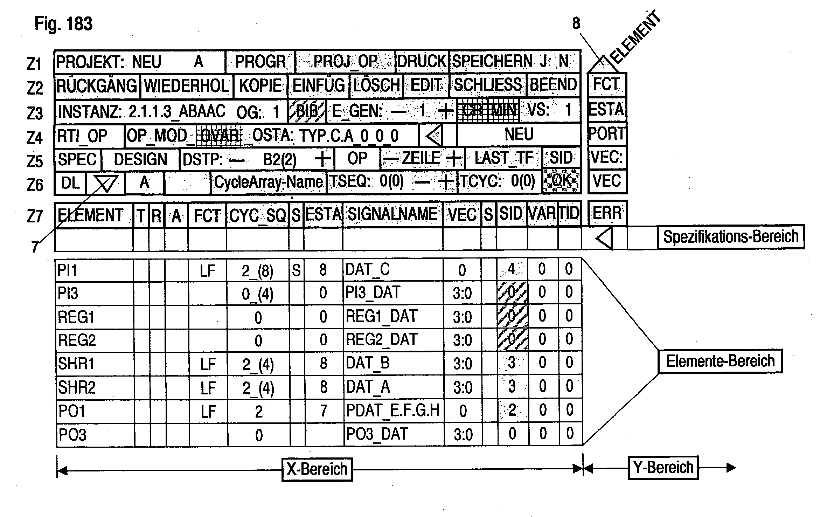

Mit nachfolgendem Klick in die Schaltfläche "OK" in "Z6" wird in Zeile "Z5" von "DSTP:E1(1)" auf den Beginn des neuen Design-Step "DSTP:B2(2)" umgeschaltet, wie **Fig.183** zeigt. Dabei besitzt "PI1" ein noch maximales Daten-Streaming von "(8)".

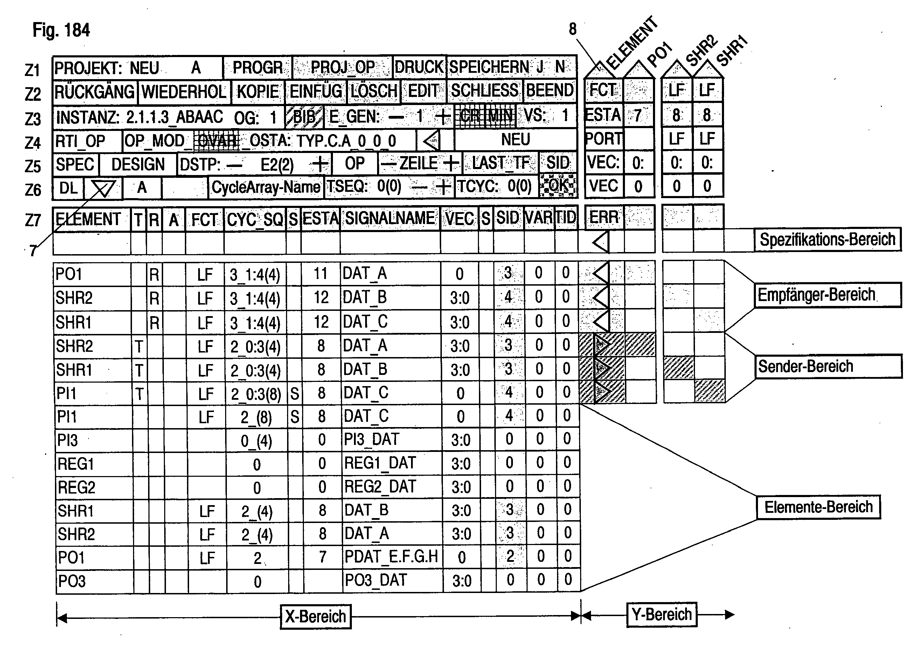

**Fig.184** zeigt mit "DSTP:E2(2)" in "Z5" das Ende des Design-Step"2", mit den entsprechenden Transfers im Empfangs-/Sende-Bereich.

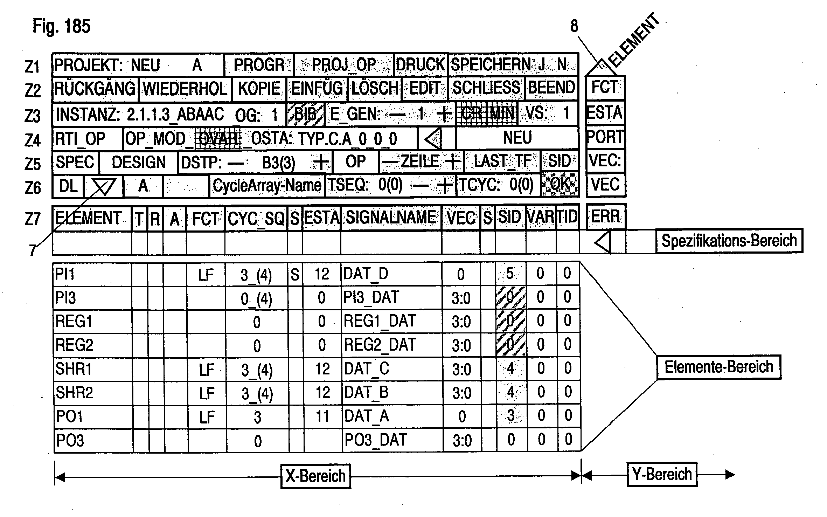

Mit Klick in die Schaltfläche "OK" in "Z6" wird vom Design-Step-Ende "DSTP:E2(2)" auf Design-Step-Anfang "DSTP:B3(3)" umgeschaltet, wie **Fig.185** zeigt.

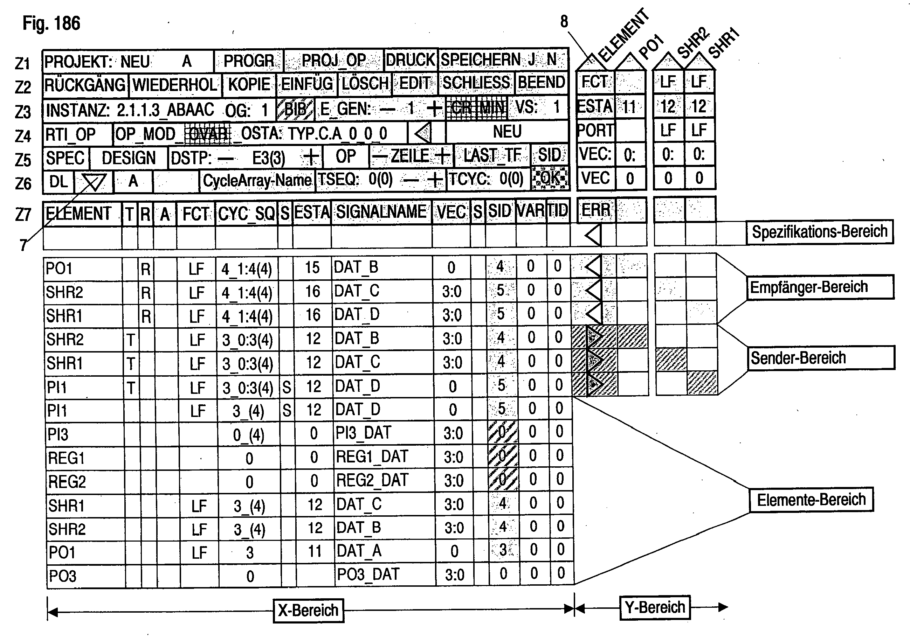

**Fig.186** zeigt das Design-Step-Ende "DSTP:E3(3)". Im Designstep"3" wurde noch der volle Transferumfang von "PI1" nach "SHR1", von "SHR1" nach "SHR2" und von "SHR2" nach "PO1" durchgeführt, wie auch in Fig.164e dargestellt.

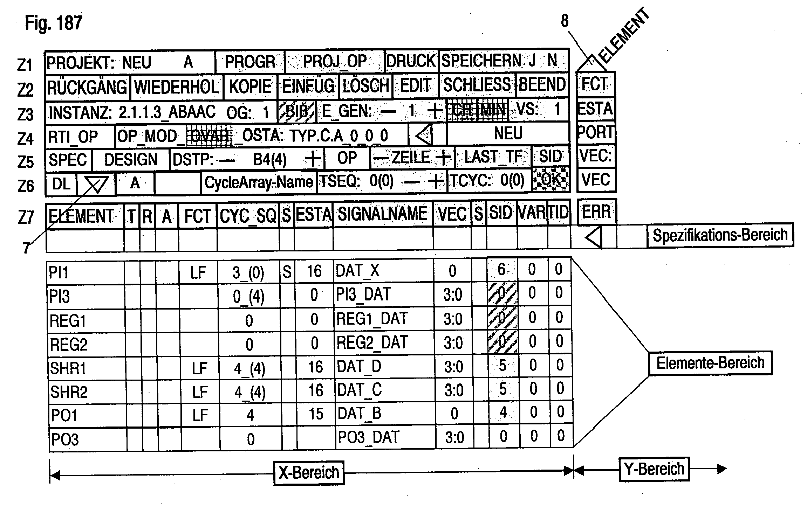

Mit Klick in die Schaltfläche "OK" in "Z6" erfolgt die Umschaltung auf Beginn des neuen Design-Step "DSTP:B4(4)", wie **Fig.187** zeigt. Im Design-Step "0 bis 3" wurden alle PI1-Daten transferiert, so daß im Design-Step "4" in Spalte "CYC_SQ" mit "(0)" kein PI1-Streaming mehr erfolgt. Ausserdem wurde in Fig.187 für PI1 beispielsweise angenommen, daß die Sendedaten unbestimmt, d. h., "DAT_X" werden, und damit sich SID und ESTA um Eins "1" auf "SID=6" und "ESTA=16" erhöhen, wie in Fig.164e (ohne SID) dargestellt.

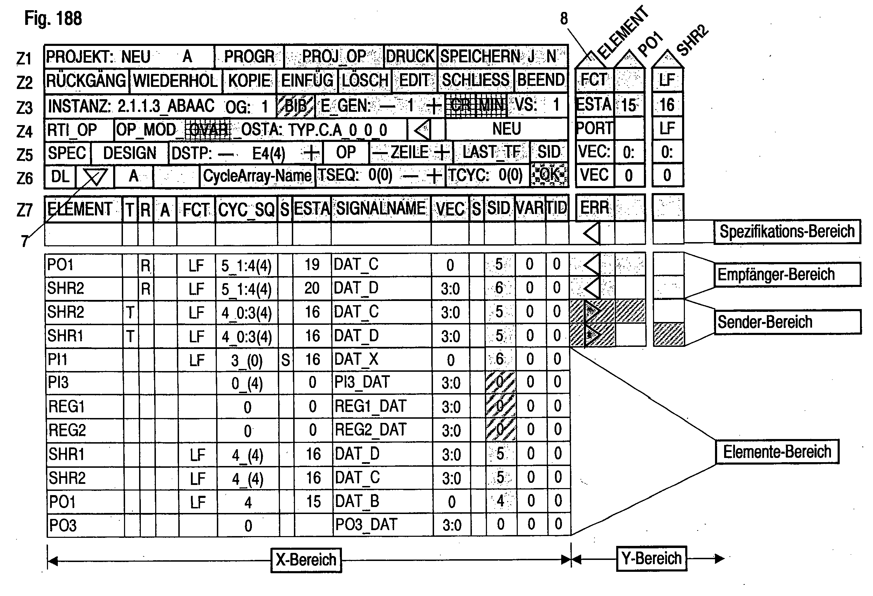

Im Designstep"4" werden nur noch die Transfers von "SHR1" nach "SHR2" und von "SHR2" nach "PO1" durchgeführt, wie mit "DSTP:E4(4)" in **Fig.188** dargestellt.

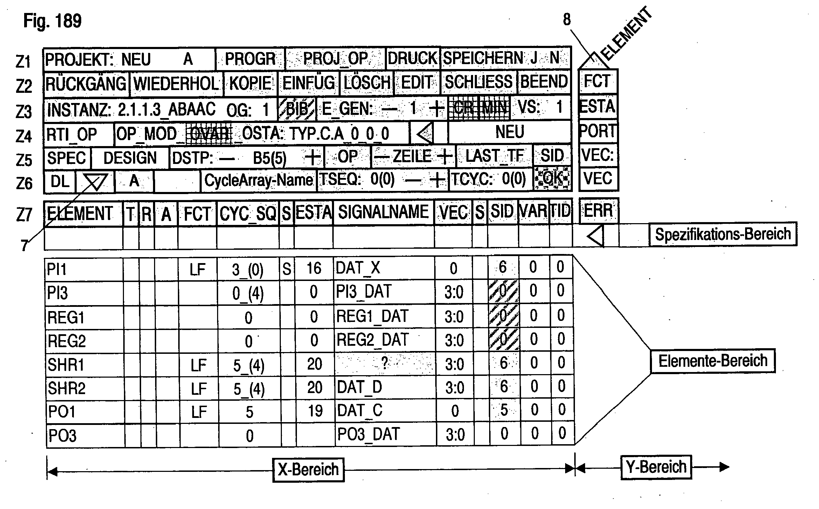

Mit Klick in die Schaltfläche "OK" in "Z6" wird die Anzeigefläche in "Z5" von "DSTP:E4(4)" auf "DSTP:B5(5)" umgeschaltet, wie **Fig.189** zeigt. Nachdem Schieberegister "SHR1" nur Serial-Sender war und keine Daten empfangen hat, wurde beispielsweise, automatisch in Fig.189 in Spalte "SIGNALNAME" die Anzeigefläche markiert und ein "?" gesetzt. Ausserdem wurde in "Z7" automatisch die Schaltfläche "SIGNALNAME" aktiviert, die Schaltfläche "OP" in "Z5" deaktiviert und damit ein Signalnamen-Eintrag für "SHR1" vorbereitet.

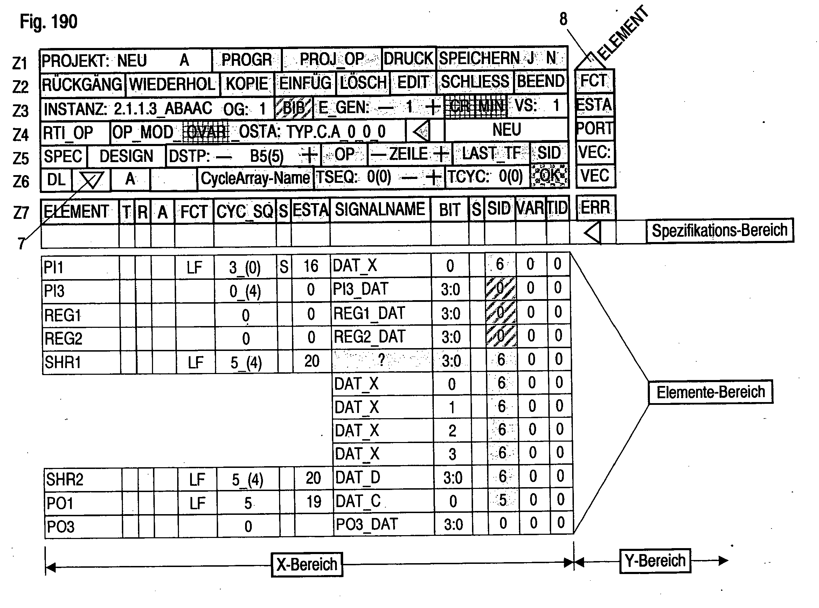

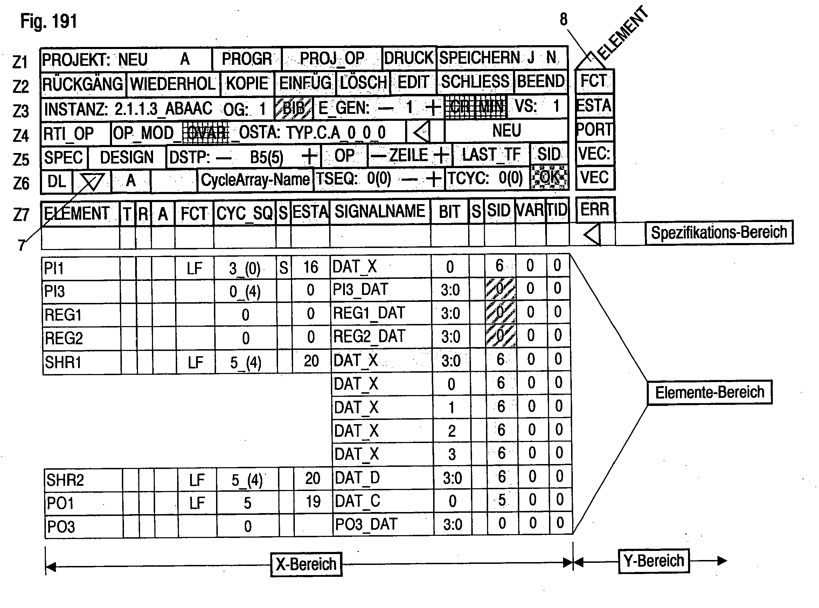

Mit Klick in die Schaltfläche "VEC" in "Z7" wird diese auf "BIT" umgeschaltet, wie **Fig.190** zeigt. Für die Bits "0" bis "3", die unbestimmt sind, wird beispielsweise der dynamische Signalname "DAT_X" festgelegt, der automatisch angezeigt wird. Entsprechend wurde in SHR1-Zeile in Spalte "SIGNALNAME", **Fig.191****,** manuell "DAT_X" eingetragen. Für den Fall, daß alle Schieberegister-Bits "DAT_X" sind, kann der Signalnamen-Eintrag in der Schieberegister-Zeile, im Beispiel der SHR1-Zeile, automatisch mit "DAT_X" eingetragen werden.

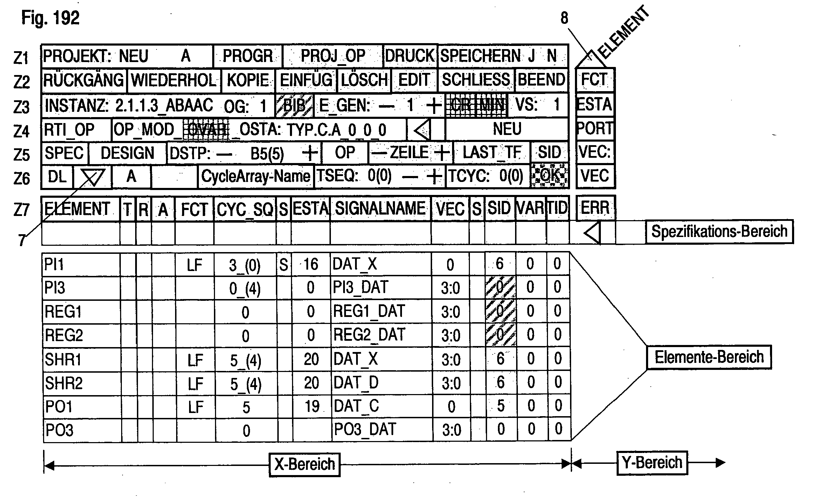

**Fig.192** zeigt den Elemente-Bereich nach Bestätigung durch "OK" und Umschaltung von BIT- auf VEC-Darstellung. Dabei wird automatisch die Schaltfläche "OP" in "Z5" wieder aktiviert und die Schaltfläche "SIGNALNAME" in "Z7" deaktiviert.

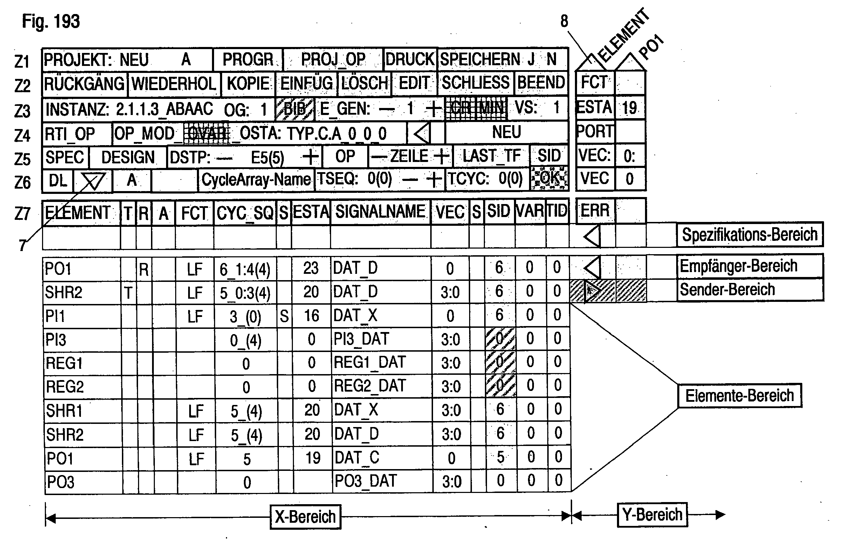

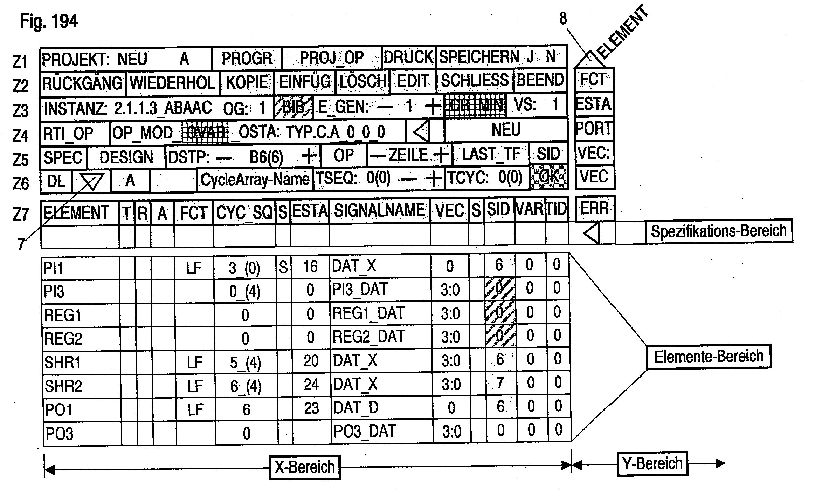

In **Fig.193** ist mit "DSTP:E5(5)" für die Blockstruktur von Fig.164a mit Ablaufdiagramm Fig.164e das Ende des letzten "DVSTP" mit dem Transfer der Daten von "SHR2" nach "PO1" dargestellt. Nach Bestätigung durch "OK" erfolgt in "Z5" die Umschaltung von "DSTP:E5(5)" nach "DSTP:B6(6)" und es werden die Einträge des Empfänger-Bereichs in den Elemente-Bereich übernommen und die Einträge des Sender-Bereichs für den Elemente-Bereich gebildet, wie in **Fig.194** dargestellt. Dabei wurde automatisch der Signalname für "SHR2" mit "DAT_X" eingetragen und der "SID" von "6" auf "7" erhöht.

### Beschreibung zu Fig.195a-215:

Mit der Blockstruktur nach **Fig.195a** wird nachfolgend ein zweites Beispiel einer RTI-Operations-Spezifizierung beschrieben. Der RTI-Daten-Transfer erfolgt mit einer Breite von 4 Bit vom Inputport "PI3" zum Register "REG1", vom "REG1" zum Register "REG2" und vom "REG2" zum Outputport "PO3".

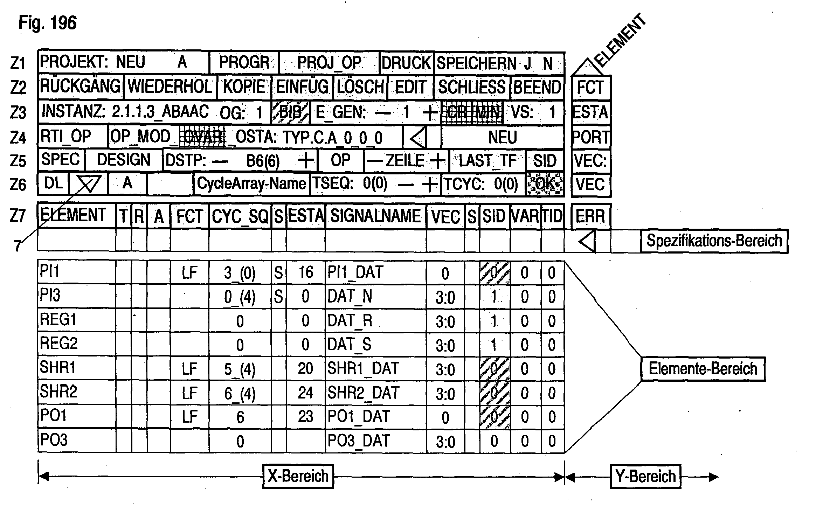

Der reale Datentransfer für die Blockstruktur nach Fig.195a ist im Ablaufdiagramm von **Fig.195b** dargestellt. In Fortsetzung der "RTI-OP-SP" für die Blockstruktur nach Fig.164a mit den Design-Steps "0" bis "5", Fig.164.c, Fig.164d und Fig.164e, erfolgt für die Blockstruktur nach Fig.195a die "RTI-OP-SP" in den Design-Steps "6" bis "11", wie die Ablaufdiagramme **Fig.195c, Fig.195d** und **Fig.195e** zeigen. **Fig.196** zeigt den RTI-OP-BS mit dem Beginn des Designsteps "DSTP:B6(6) in Zeile "Z5". Die am Daten-Transfer beteiligten Elemente sind "PI3", "REG1", "REG2" und "PO3". Mit Ausnahme von "PO3" wurden bereits dynamische Signalnamen vergeben. Für "PI3" wurde vorher das Sequenz-Splitting für "CYC_SQ" mit "0_0:0(4)", "1_0:0(3)", "2_0:0(2) und "3_0:0(1)" sowie die zugehörigen dynamischen Signalnamen festgelegt.

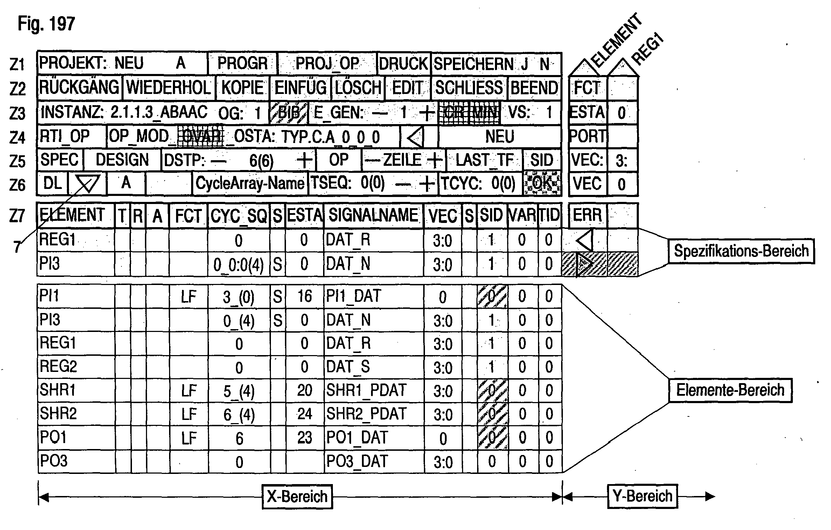

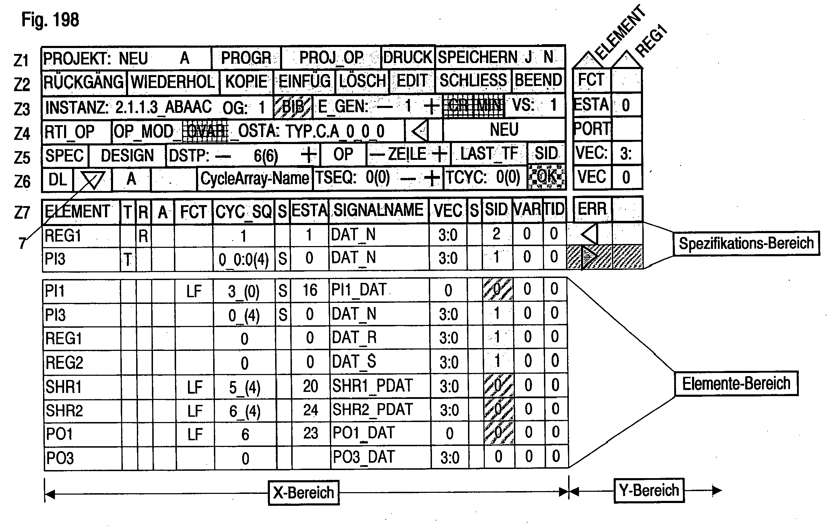

**Fig.197** zeigt den ersten Datenverarbeitungs-Step "DVSTP1" mit dem Transfer von "PI3" nach "REG1", der in **Fig.198** bestätigt wurde.

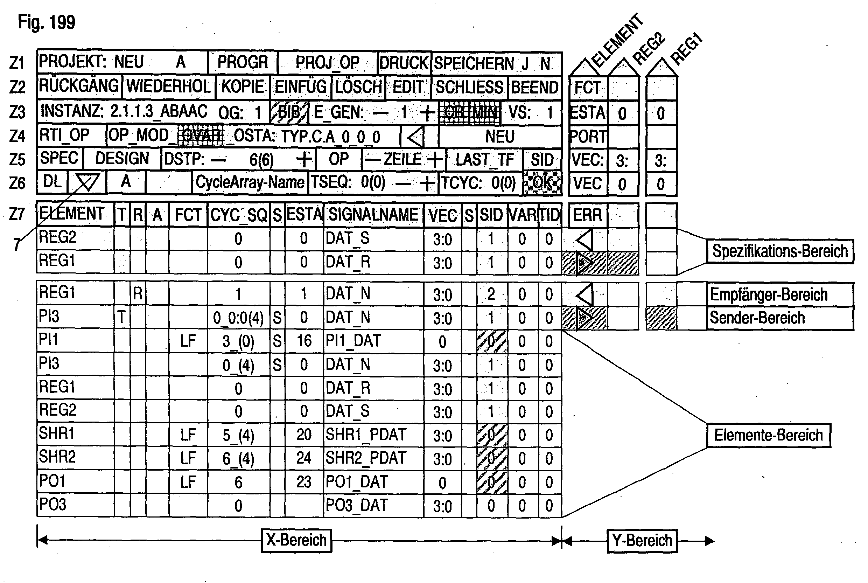

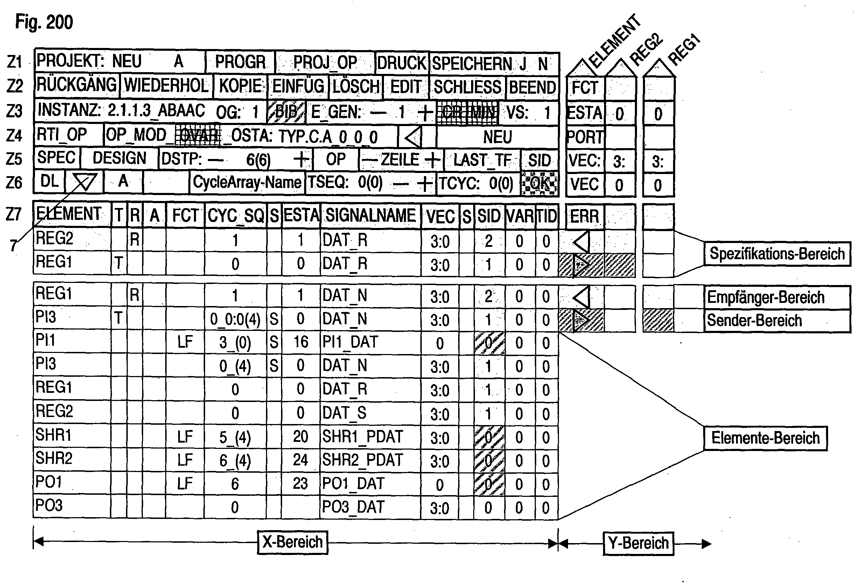

In **Fig.199** wurden die Elemente des Spezifikations-Bereichs von Fig.198 in den Empfänger- bzw. Sender-Bereich transferiert und für den "DVSTP2" das Empfänger-Element "REG2" bzw. das Sender-Element "REG1" im Spezifikations-Bereich plaziert. Die Bestätigung des "DVSTP2 ist in **Fig.200** dargestellt.

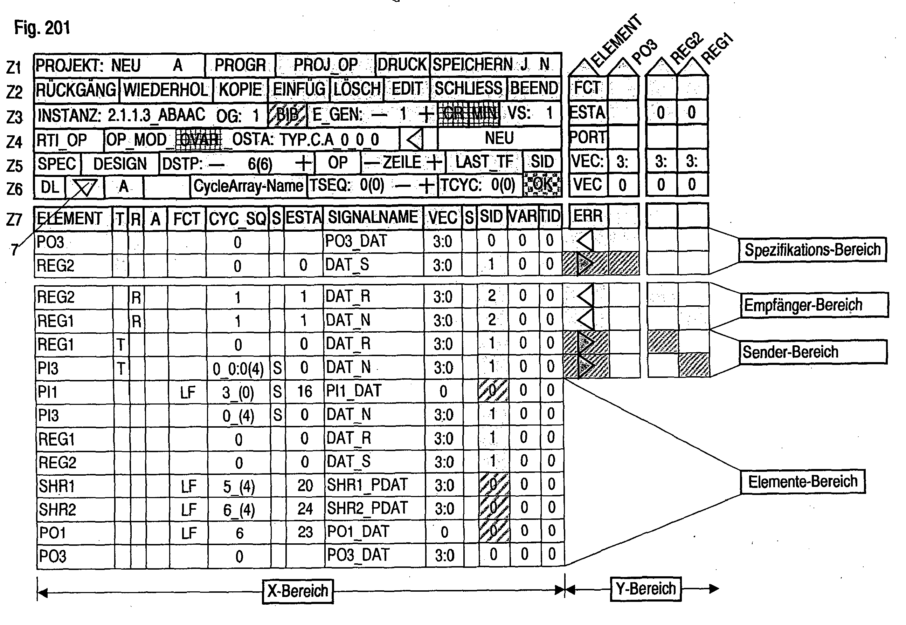

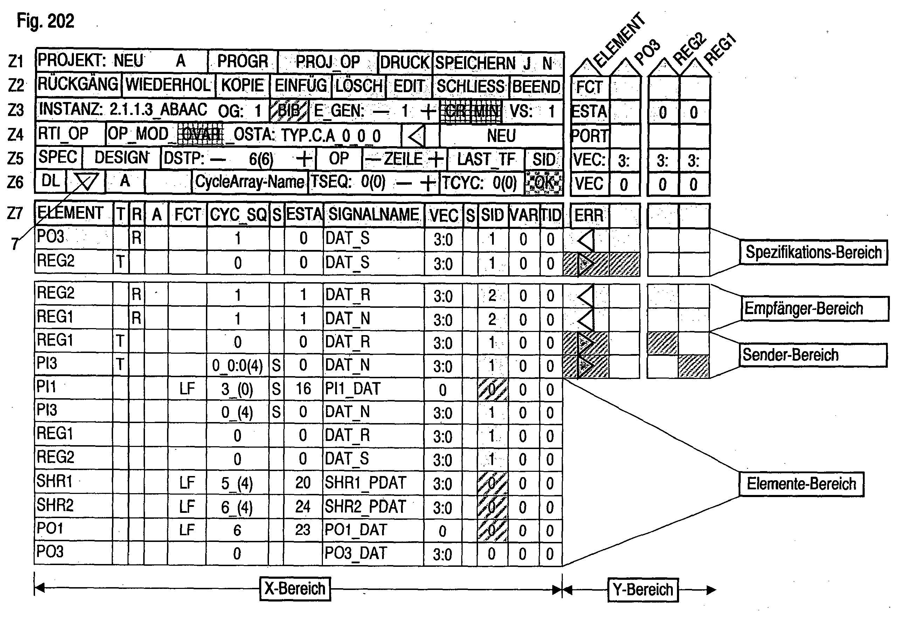

**Fig.201** zeigt den "DVSTP3" mit Empfänger "PO3" und Sender "REG2", die Transfer-Elemente vom "DVSTP2", Fig.200, wurden in den Empfänger- bzw. Sender-Bereich transferiert. In **Fig.202** wurde der "DVSTP3" bestätigt.

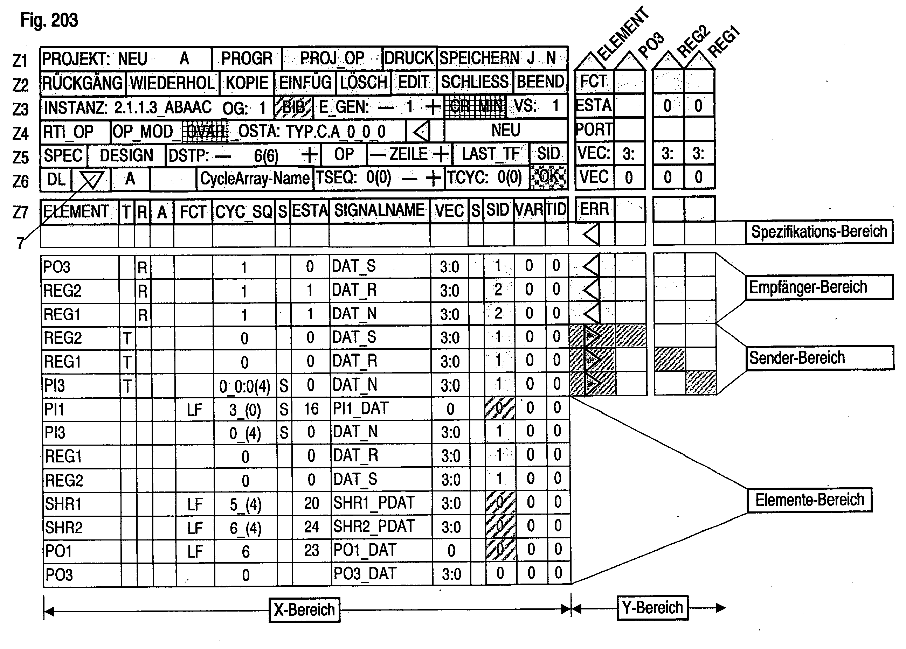

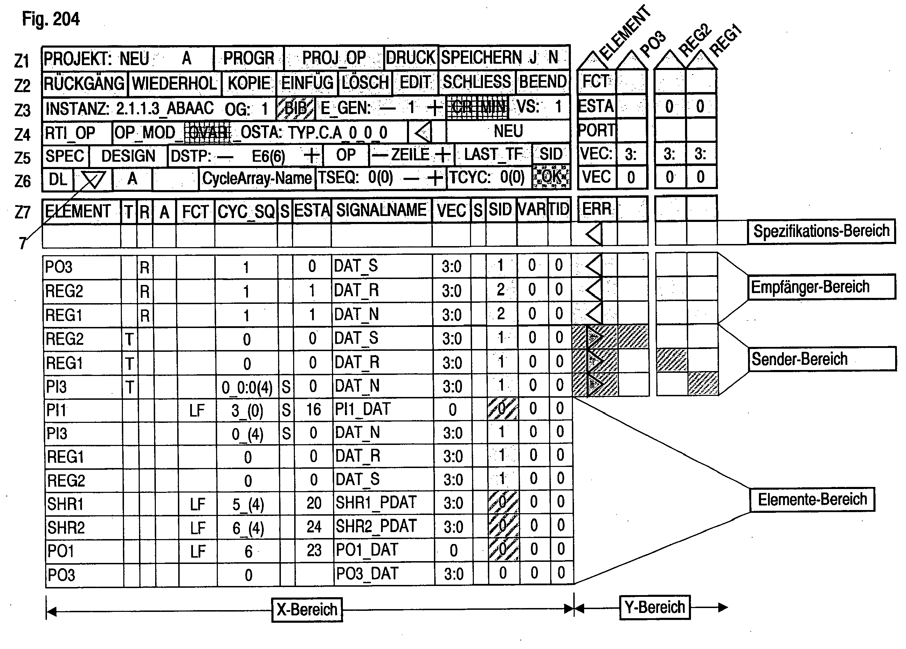

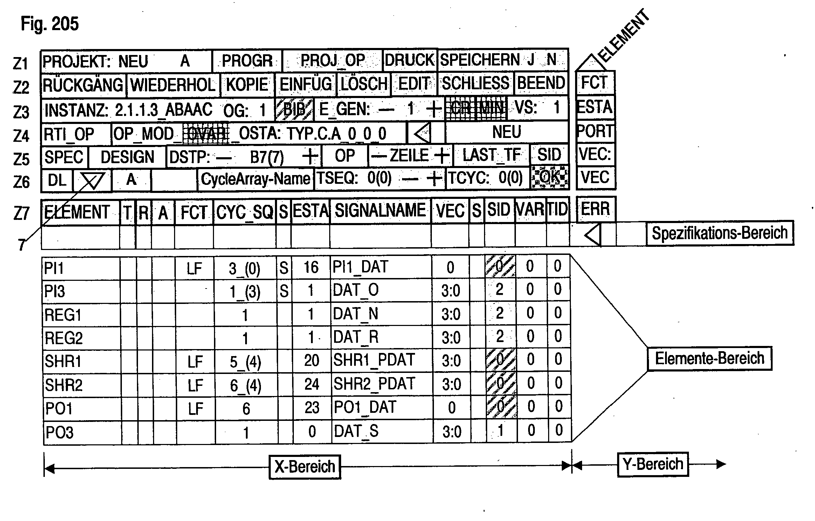

In **Fig.203** sind im Empfänger-/Sender-Bereich die Transfers von "DVSTP1", "DVSTP2" und "DVSTP3" dargestellt. Mit Bestätigung des Design-Step "DSTP6" durch Klick in die Schaltfläche "OK" in "Z6", wird in "Z5" der Design-Step von "DSTP:6(6)" zum Design-Step-Ende "DSTP:E6(6)" umgeschaltet, wie **Fig.204** zeigt. Mit nochmaligem Klick in die Schaltfläche "OK" in "Z6", erfolgt die Umschaltung von "DSTP:E6(6)" in "DSTP:B7(7)" in "Z5", wie in **Fig.205** dargestellt.

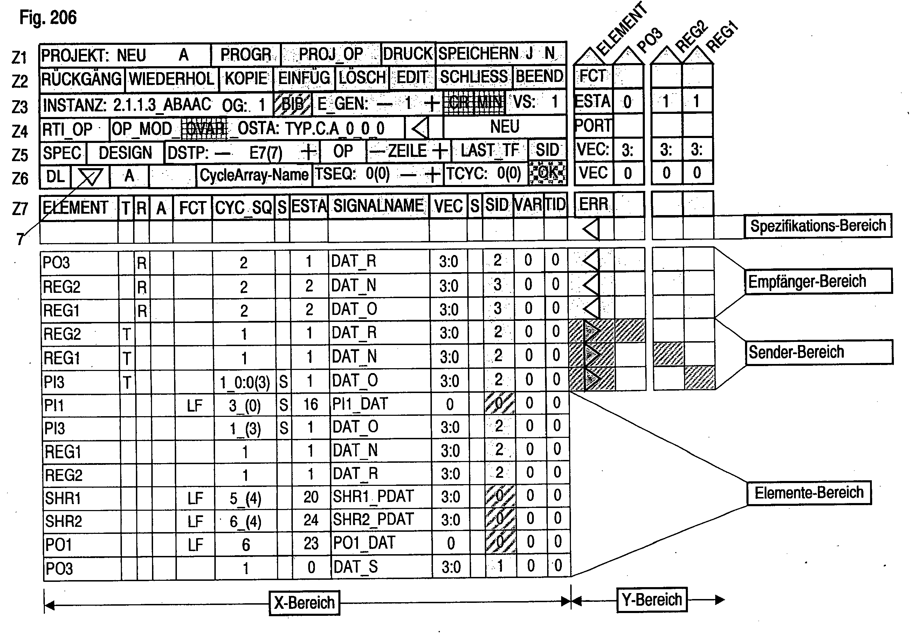

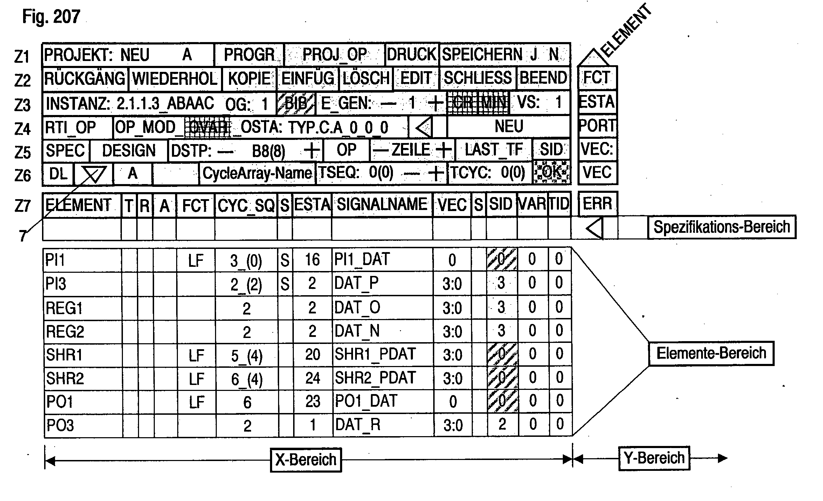

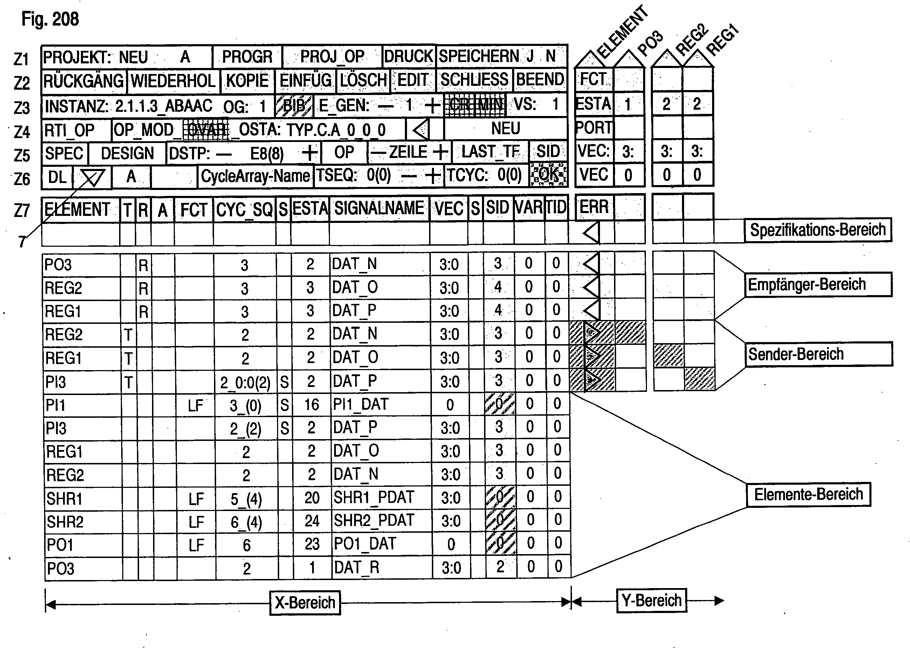

**Fig.206** zeigt zum Ende des "DSTP7" alle in "DSTP7" spezifizierten Transfers. In **Fig.207** ist der Elemente-Bereich nach Umschaltung durch Klick in die Schaltfläche "OK" in "Z6" auf Beginn des "DSTP8" dargestellt. **Fig.208** zeigt alle Transfers des "DSTP8" nach Beendigung.

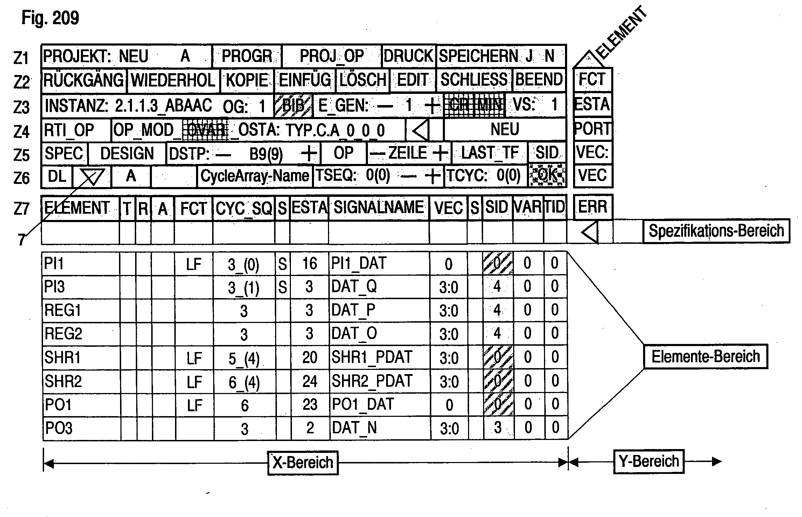

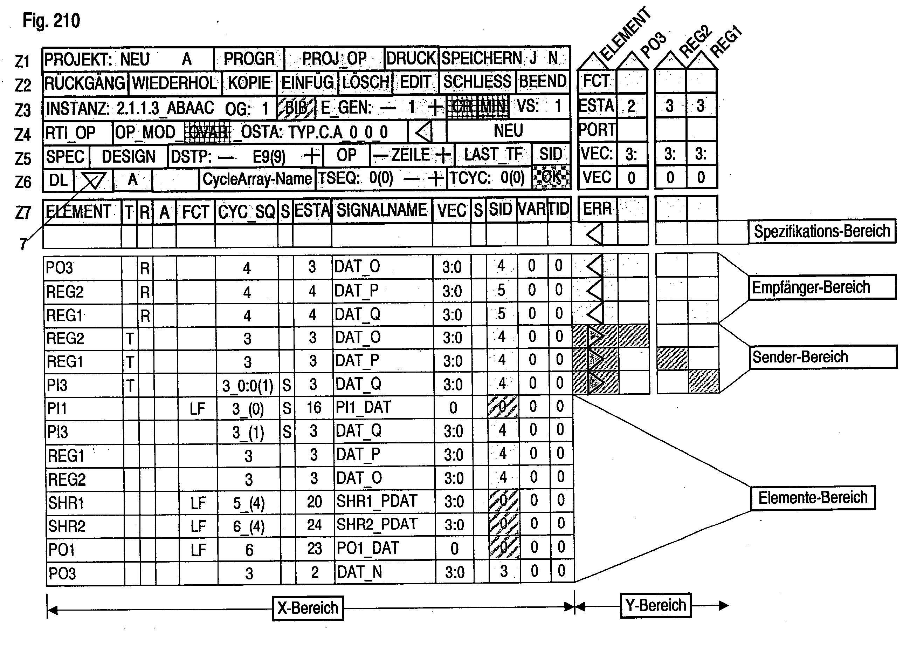

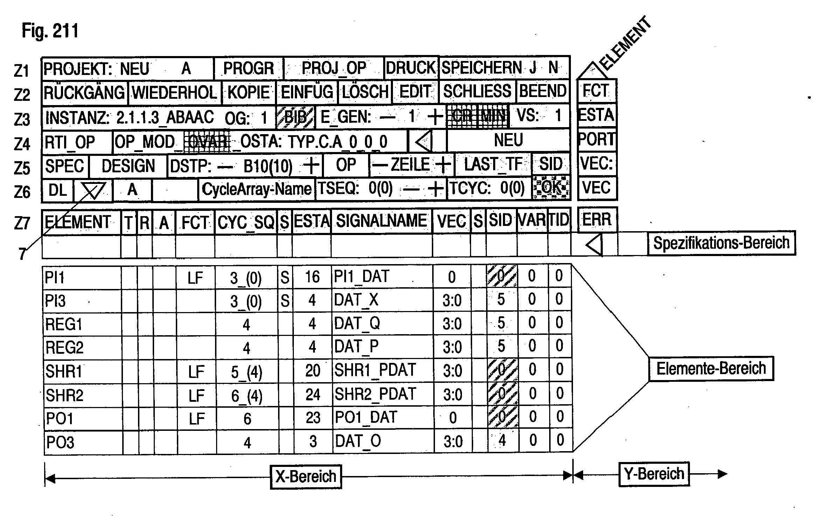

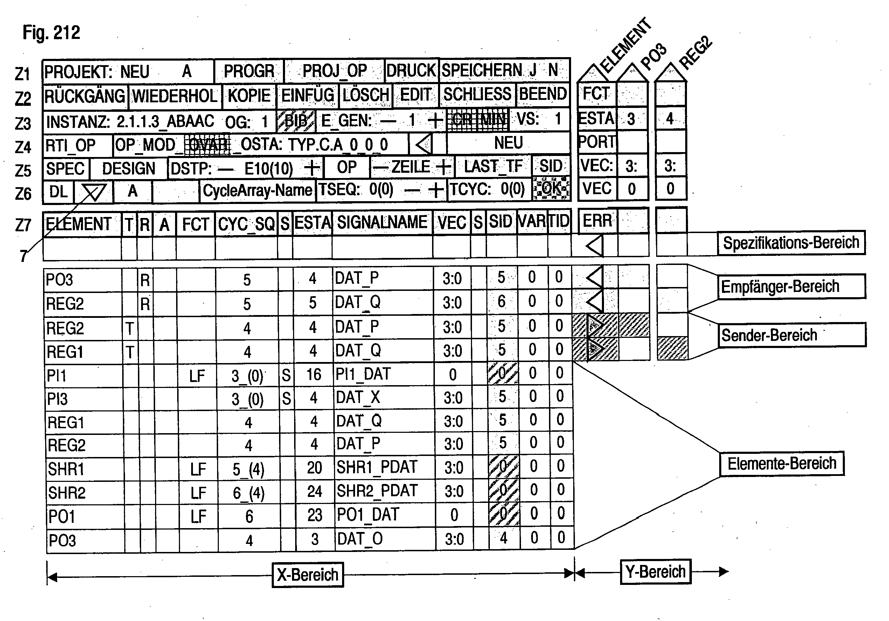

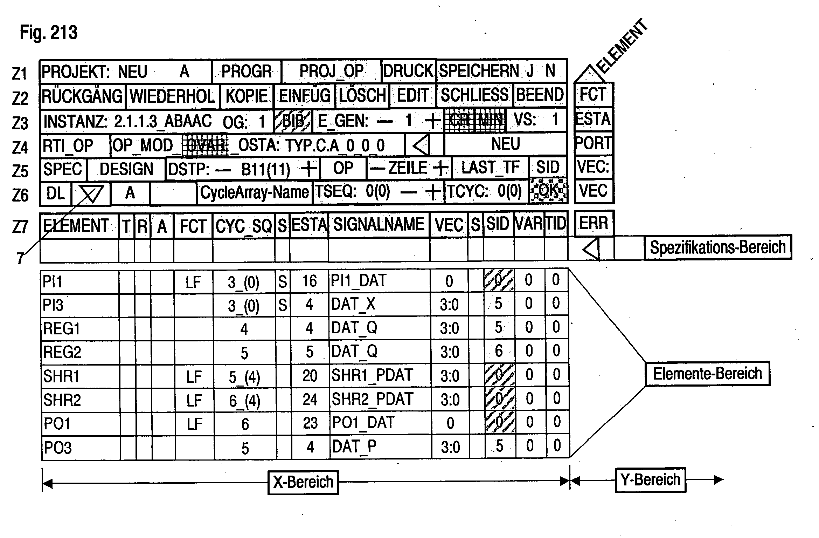

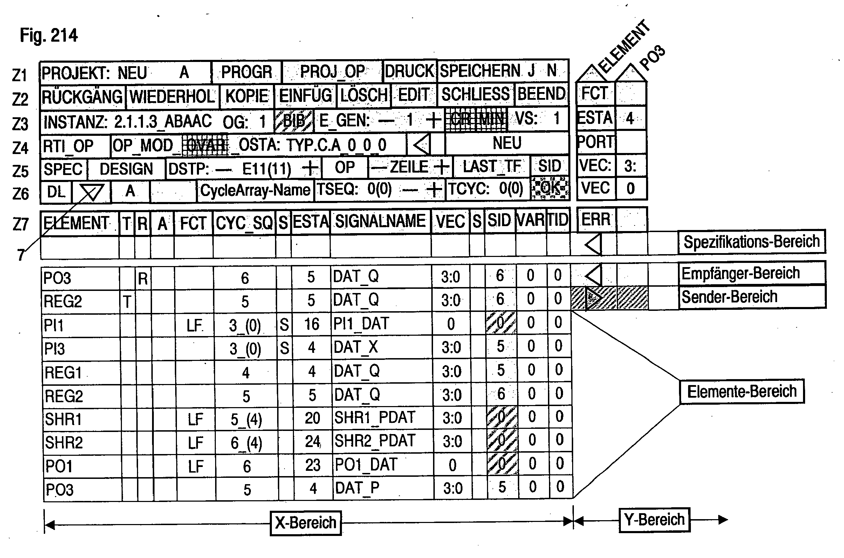

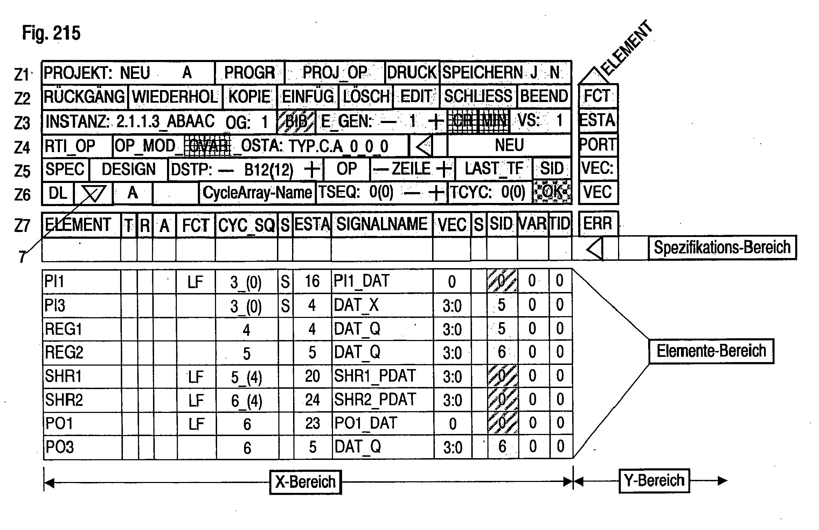

In **Fig.209** ist nach Umschaltung durch "OK" von "DSTP:E8(8)" auf "DSTP:B9(9)" der neu gebildete Elemente-Bereich dargestellt. In den nachfolgenden Figuren werden in der Reihenfolge der Design-Steps die Spezifikations-Inhalte für Designstep-Ende und Designstep-Anfang dargestellt. Es zeigen, **Fig.210** das Designstep-Ende "DSTP:E9(9)" mit allen Transfers, **Fig.211** den Designstep-Beginn "DSTP:B10(10)" mit dem neuen Elemente-Bereich, **Fig.212** das Designstep-Ende "DSTP:E10(10)" mit allen Transfers, **Fig.213** den Designstep-Beginn "DSTP:B11(11)" mit dem neuen Elemente-Bereich, **Fig.214** das Designstep-Ende "DSTP:E11(11)" mit allen Transfers und **Fig.215** den Designstep-Beginn "DSTP:B12(12)" mit dem neuen Elemente-Bereich.

### Beschreibung zu Fig.216-221:

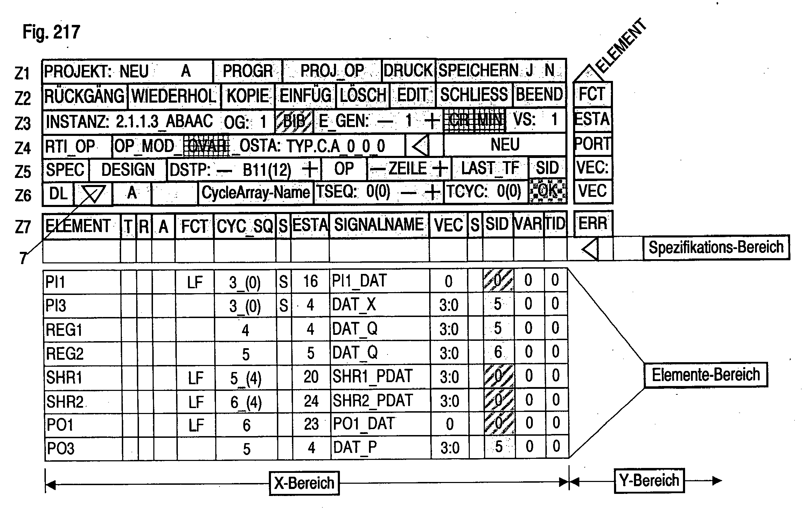

Sollen vorhergehende Designsteps angezeigt werden, so kann dies durch eine entsprechende Anzahl von Klicks in die Schaltfläche DSTP:"-" in "Z5" erfolgen. In **Fig.216** wurde durch einen Klick in die Schaltfläche DSTP:"-" die Anzeige von "DSTP:B12(12)" auf "DSTP:E11(12)" umgeschaltet. Durch einen weiteren Klick in die Schaltfläche DSTP:"-" wird die Anzeige von "DSTP:E11(12)" auf "DSTP:B11(12)" umgeschaltet, wie **Fig.217** zeigt. Mit weiteren Klicks in die Schaltfläche DSTP:"-" wird die Anzeige der Reihe nach auf "DSTP:E10(12)", "DSTP:B10(12)", "DSTP:E9(12)", "DSTP:B9(12)", "DSTP:E8(12)", usw., umgeschaltet. Wird die Schaltfläche DSTP:"-" durch einen Dauerklick beaufschlagt, dann läuft die Anzeige an den Anfang "DSTP:B0(12)" zurück. Die Umschaltung der Anzeige in umgekehrter Richtung erfolgt identisch durch Klicks in die Schaltfläche DSTP:"+" in Zeile "Z5". Ist beim Hochzählen der Designsteps der letzte Designstep noch nicht beendet, so wird der letzte Designstep in seinem Bearbeitungszustand dargestellt.

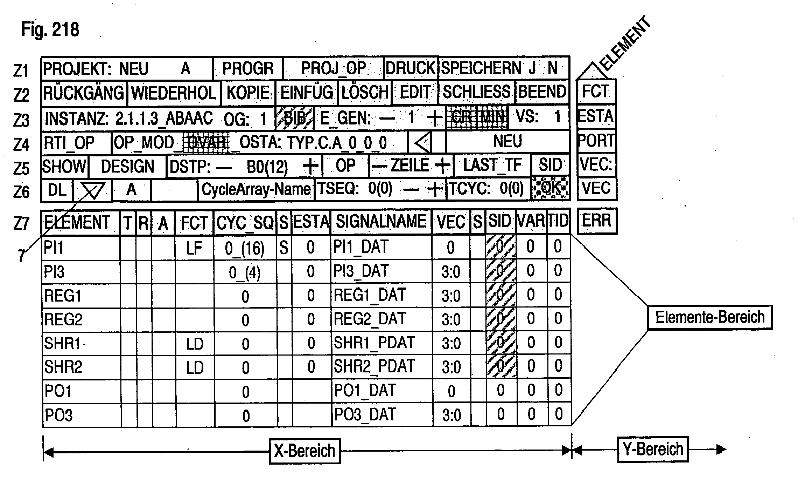

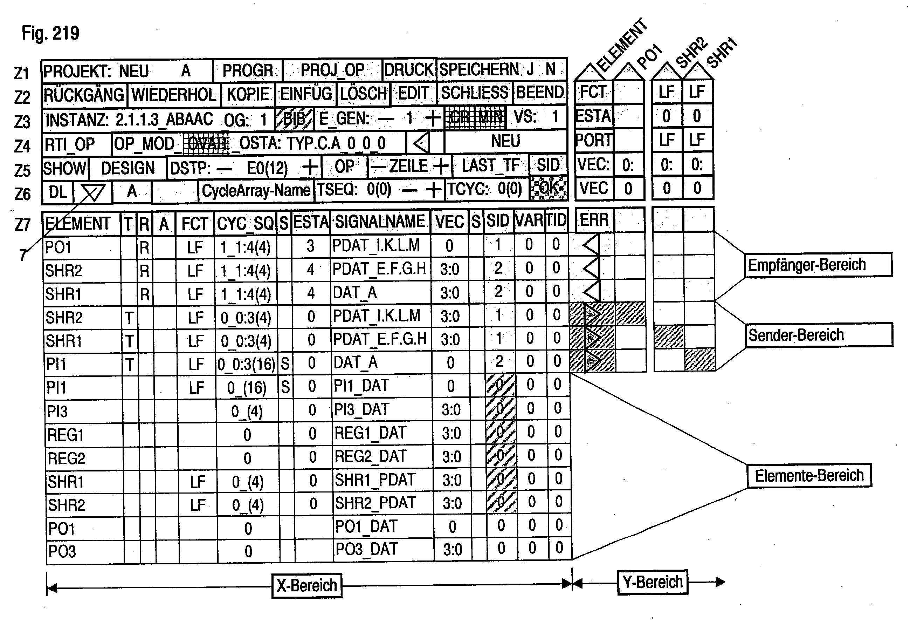

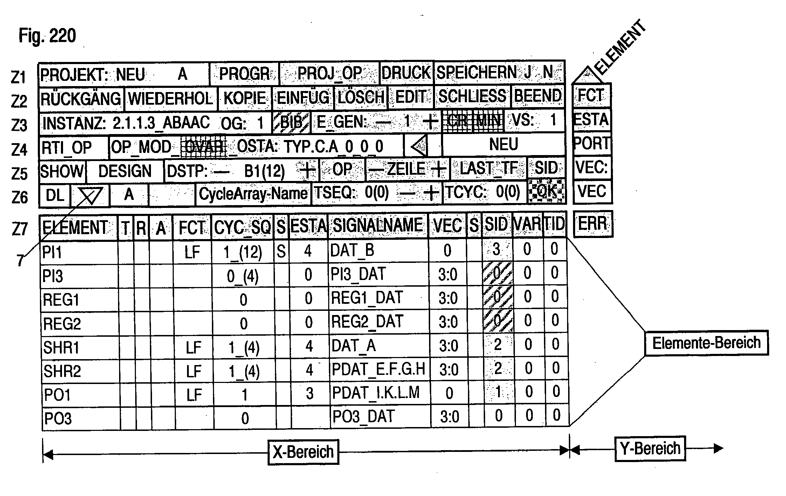

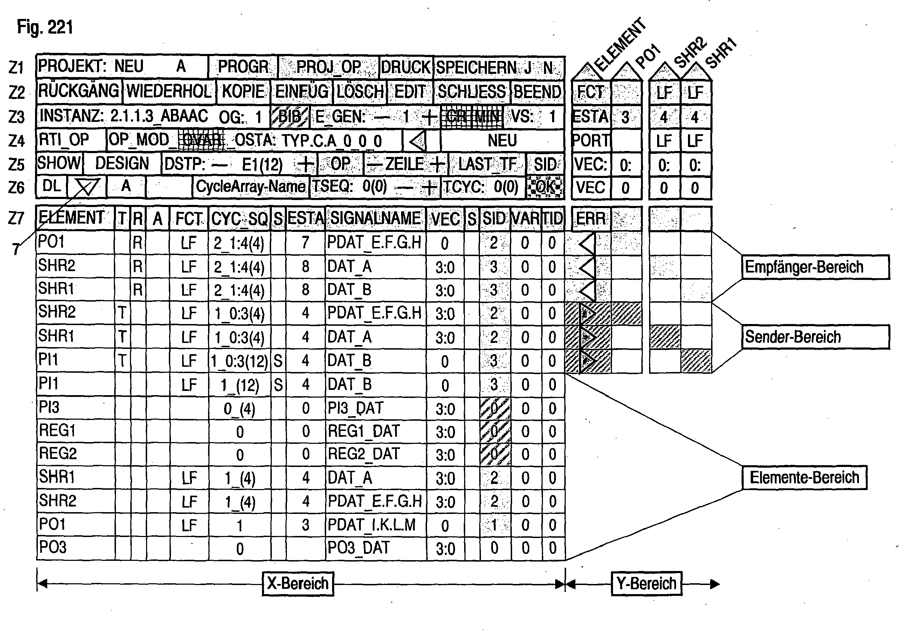

Mit Klick in die Schaltfläche "SPEC" in Zeile "Z5" erfolgt ein Wechsel vom Spezifikations-Modus "SPEC" in den Anzeige-Modus "SHOW", wie **Fig.218** zeigt. Dabei wird der Designstep beispielsweise an den Anfang "DSTP:B0(12)" gesetzt und die Elemente-Bereich-Anzeige des SHOW-Modus von Fig.218 ist damit identisch zu der des SPEC-Modus von Fig.166. Im SHOW-Modus wird die Schaltfläche Operation "OP" in "Z5" automatisch deaktiviert. Damit kann im SHOW-Modus die RTI-Operations-Spezifikation angezeigt, jedoch nicht weitergeführt oder geändert werden. Die DSTP-Aufwärtszählung bzw. DSTP-Abwärtszählung beim SHOW-Modus erfolgt wie beim SPEC-Modus über die Schaltflächen DSTP:"+" bzw: DSTP:"-" in "Z5". Bei gleichem Designstep ist im SHOW-Modus und SPEC-Modus der RTI-Operations-Spezifikationsstand identisch, wie beispielsweise bei "DSTP:E0": SHOW-Modus **Fig.219** identisch zu SPEC-Modus Fig.180, "DSTP:B1": SHOW-Modus **Fig.220** identisch zu SPEC-Modus Fig.181, "DSTP:E1": SHOW-Modus **Fig.221** identisch zu SPEC-Modus Fig.182.

### Beschreibung zu Fig.222-228:

Bei der RTI-Operations-Spezifizierung kann der Entwickler, bezogen auf das entstehende RTI-Gesamtdesign, in der Reihenfolge beliebige Teildesigns spezifizieren. Ein Teildesign kann eine beliebige Anzahl von Design-Steps "DSTPs" besitzen. Ein "DSTP" kann eine beliebige Anzahl von Datenverarbeitungs-Steps "DVSTPs" enthalten. Unabhängig von der Spezifikations-Reihenfolge der Teildesigns und Zuordnung der "DSTPs" bzw. "DVSTPs" können im sog. "SHOW-PARALLEL-Modus" die gleichzeitig wirksamen "DVSTPs" in den bereits spezifizierten RTI-Teildesigns bzw. im RTI-Gesamtdesign schrittweise dargestellt werden. Hierzu wird im SHOW-Modus in "Z5" durch Klick in die Schaltfläche "DESIGN" die Schaltfläche von "DESIGN" auf "PARALLEL" und die Anzeigefläche Designstep "DSTP:" in Parallelstep "PSTP:" umgeschaltet, wie in **Fig.222** dargestellt. Dabei wird in "Z5" der Beginn "B" des ersten Parallelstep "0" mit "PSTP:B0" und der "Elemente-Bereich" mit Stand vor einer RTI-Operations-Spezifizierung angezeigt.

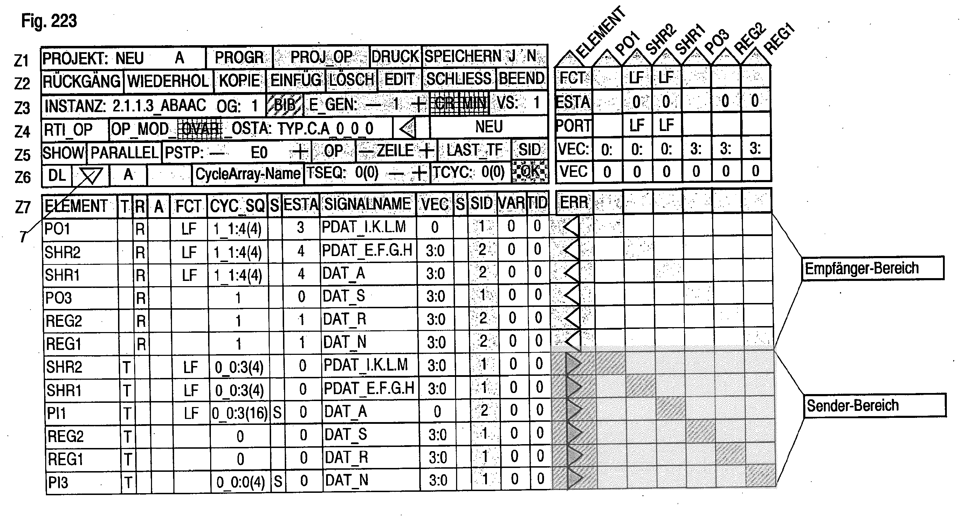

Mit Klick in die Schaltfläche PSTP:B0"+" in "Z5" erfolgt die Weiterschaltung auf das Ende "E" des ersten Parallelstep "0" mit der Anzeige "PSTP:E0", wie **Fig.223** zeigt. Hierin werden für das bisher spezifizierte RTI-Design, entsprechend den Blockstrukturen Fig.164a und Fig.195a, alle gleichzeitig, parallel wirksamen Datenverarbeitungs-Steps "DVSTPs" im ersten Parallelstep "0", durch die TransferAnordnung "Empfänger-/Sender-Bereich" dargestellt. Die dabei beteiligten Teildesign-Spezifikationen mit ihren gleichzeitig, parallel wirksamen "DVSTPs" sind in Fig.180 mit "DSTP:E0(0)" und Fig.204 mit "DSTP:E6(6) dargestellt. In der Blockstruktur von Fig.164a werden die Daten gleichzeitig von "PI1" nach "SHR1", von "SHR1" nach "SHR2" und von "SHR2" nach "PO1" transferiert. Gleichzeitig zum Transfer in der Blockstruktur von Fig.164a erfolgt der Transfer in der Blockstruktur von Fig.195a von "PI3" nach "REG1", von "REG1" nach "REG2" und von "REG2" nach "PO3", wie zum Ende des ersten Parallelsteps "PSTP:E0" in Fig.223 dargestellt. Würde der Datentransfer beispielsweise in der Blockstruktur von Fig.164a nicht durch eine Datenverschiebung, sondern schrittweise, im ersten Schritt von "PI1" nach "SHR1", im zweiten Schritt von "SHR1" nach "SHR2", usw., erfolgen, dann würde in Fig.223, an Stelle der Transfers von "PI1" nach "SHR1", von "SHR1" nach "SHR2" und von "SHR2" nach "PO1", nur der Transfer von "PI1" nach "SHR1" dargestellt.

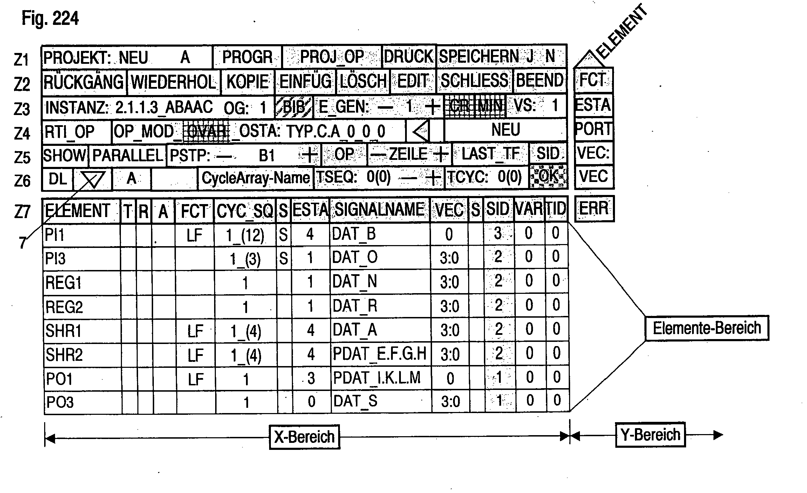

Mit Klick in die Schaltfläche PSTP:E0"+" in "Z5" erfolgt die Weiterschaltung zum Beginn "B" des zweiten Parallel-Steps mit der Anzeige "PSTP:B1", in dem die Parameter von Fig.181 mit "DSTP:B1(1)" bzw. von Fig.205 mit "DSTP:B7(7)" dargestellt sind, wie **Fig.224** zeigt.

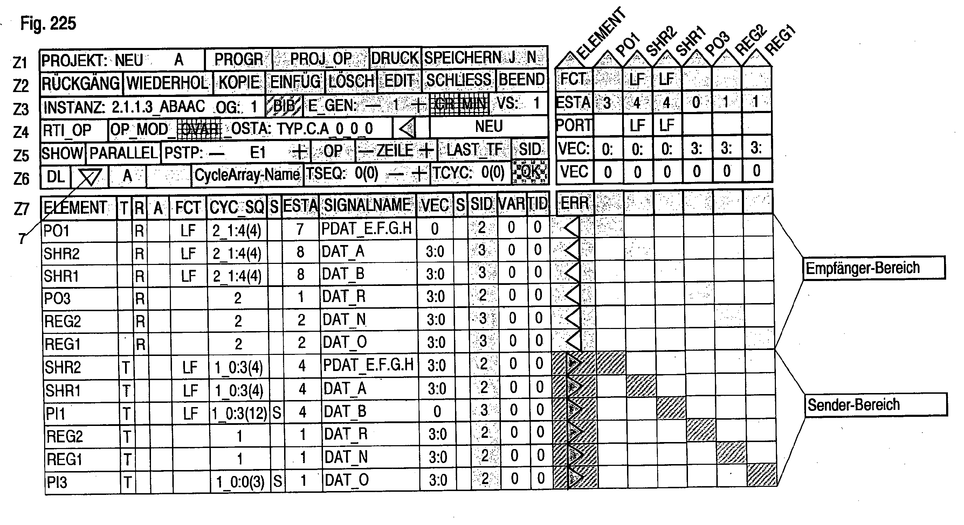

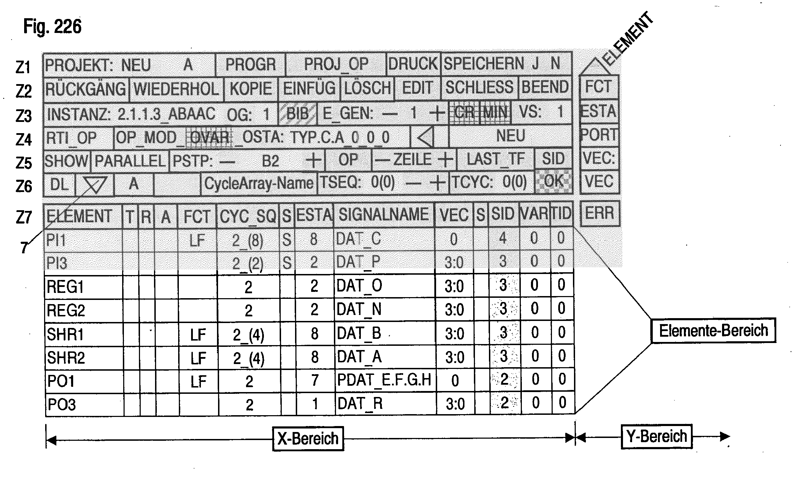

Mit Klick in die Schaltfläche PSTP:B1"+" in "Z5" erfolgt die Weiterschaltung auf das Parallel-Step-Ende "PSTP:E1", in dem die Transfers von Fig.182 mit "DSTP:E1(1)" und Fig.206 mit "DSTP:E7(7)" dargestellt sind, wie **Fig.225** zeigt. Mit Klick in die Schaltfläche PSTP:E1"+" in "Z5" erfolgt die Weiterschaltung zum Beginn "B" des dritten Parallel-Steps mit der Anzeige "PSTP:B2", in dem die Parameter von Fig.183 mit "DSTP:B2(2)" bzw. von Fig.207 mit "DSTP:B8(8)" dargestellt sind, wie **Fig.226** zeigt.

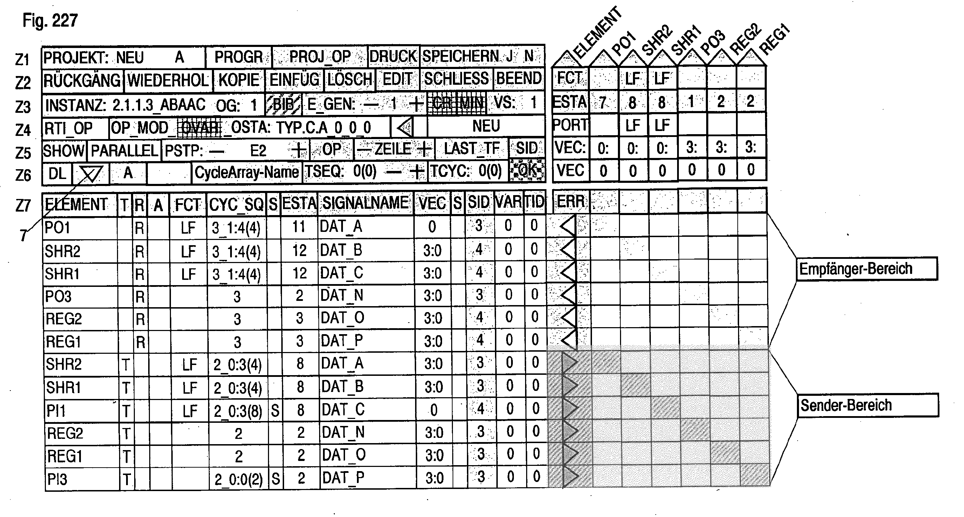

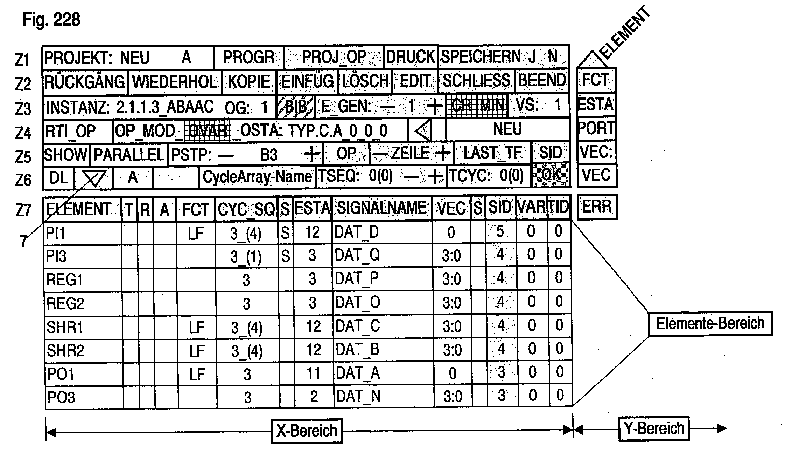

Mit Klick in die Schaltfläche PSTP:B2"+" in "Z5" erfolgt die Weiterschaltung auf das Parallel-Step-Ende "PSTP:E2", in dem die Transfers von Fig.184 mit "DSTP:E2(2)" und Fig.208 mit "DSTP:E8(8)" dargestellt sind, wie **Fig.227** zeigt. Mit Klick in die Schaltfläche PSTP:E2"+" in "Z5" erfolgt die Weiterschaltung zum Beginn "B" des vierten Parallel-Steps mit der Anzeige "PSTP:B3", in dem die Parameter von Fig.185 mit "DSTP:B3(3)" bzw. von Fig.209 mit "DSTP:B9(9)" dargestellt sind, wie **Fig.228** zeigt. Mit Klick in die Schaltfläche PSTP:B3"+" in "Z5" erfolgt die Weiterschaltung auf das Parallel-Step-Ende "PSTP:E3" mit den entsprechenden weiteren parallelen "DVSTPs", usw..

Soll für ein Empfänger-Element die Verwendung im DVSTP vor dem aktuellen DVSTP angezeigt werden, dann wird die Schaltfläche Letzter Transfer "LAST_TF" in Zeile "Z5" des RTI-OP-BS durch Klick aktiviert. Durch Plazierung des Cursors im X-Bereich in Spalte "ELEMENT" auf das Empfänger-Element, für das der "LAST_TF" angezeigt werden soll, erfolgt die Anzeige des "LAST_TF" mit den kompletten Zeilen bzw. Parametern im X-Bereich und den kompletten Spalten bzw. Parametern im Y-Bereich für das ausgewählte Empfänger-Element und den zugehörigen Sender-Elementen, ohne einer optischen Überdeckung der Anzeige des aktuellen Transfers im X- und Y-Bereich. Die Darstellung des "LAST_TF" kann für Empfänger-Elemente im Spezifikations-Bereich oder im Empfänger-Bereich für die Modus-Einstellungen in "Z5" mit "SPEC, DESIGN" oder "SHOW, DESIGN" öder "SHOW, PARALLEL" erfolgen.

### Beschreibung zu Fig.229a-229p:

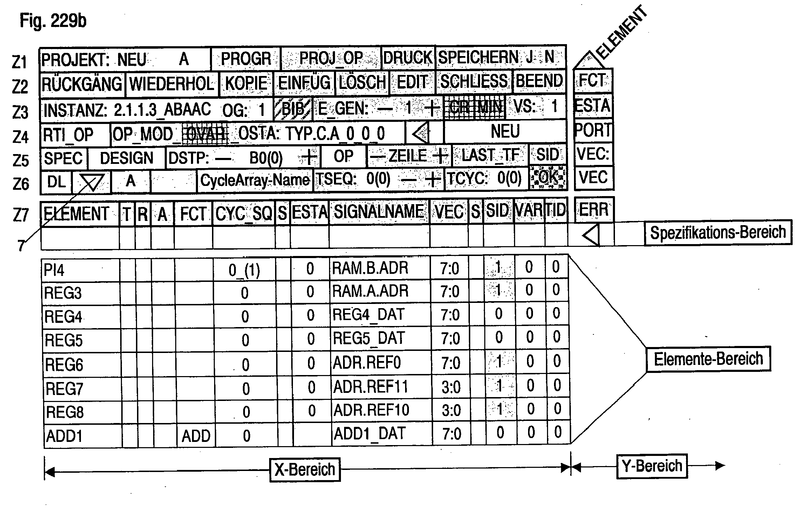

Für die Blockstruktur von **Fig.229a** wird die Spezifizierung der Datenverarbeitungs-Steps in **Fig.229b** bis **Fig.229q** dargestellt. Hierbei erfolgt der Transfer in der DVSTP-Reihenfolge von "PI4" nach "REG3", von "REG3" nach "REG4", von "REG3" und "REG6" nach "ADD1", und von "ADD1" nach "REG5". Alle "DVSTPs" werden in einem Design-Step durchgeführt, im Beispiel ist das "DSTP:0(0)".

**Fig.229b** zeigt den Beginn des Designsteps "DSTP:B0(0)" mit den dynamischen Signalnamen für "PI4", "REG3" und "REG6". Die dynamischen Signalnamen von "REG7" und "REG8" werden im nachfolgenden Spezifikations-Beispiel unter der Blockstruktur von Fig.230a behandelt. "PI4" besitzt in Spalte "CYC_SQ" mit "(1)" die maximale Stream-Anzahl von einem Stream.

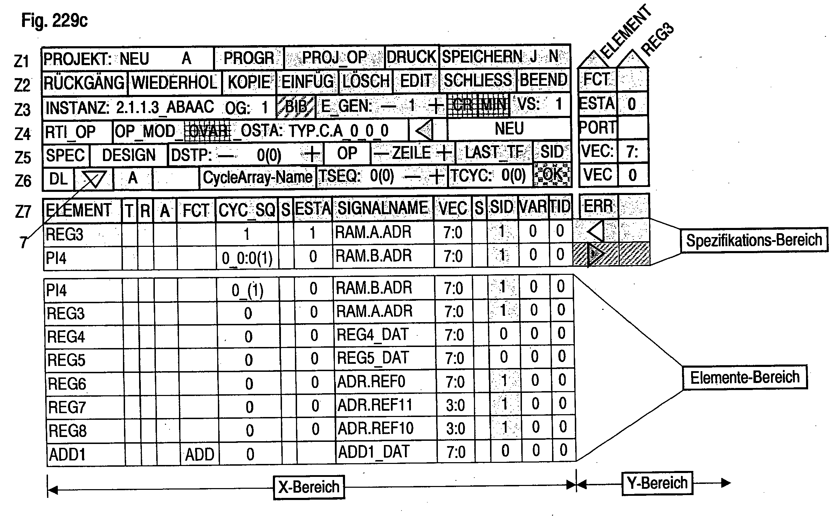

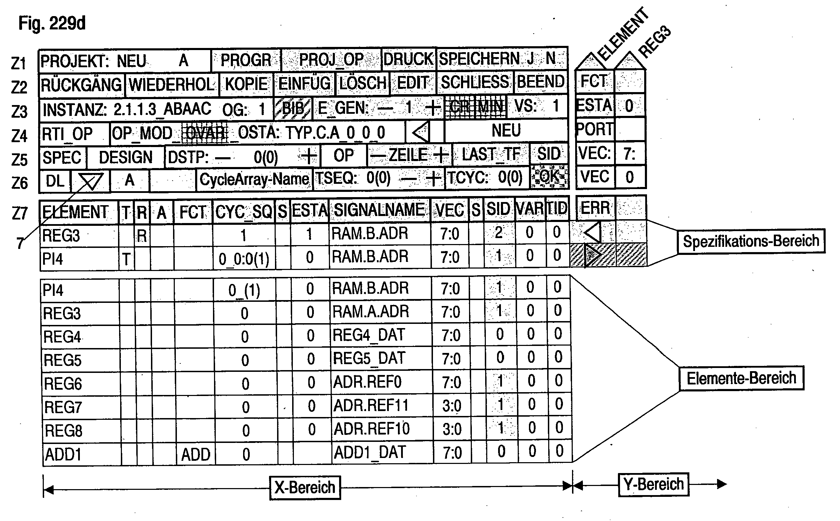

In **Fig.229c** ist mit Empfänger "REG3" und Sender "PI4" im Spezifikations-Bereich, der erste "DVSTP" vorbereitet, in **Fig.229d** wurde er mit Bestätigung durch Klick in die Schaltfläche der REG3-Zeile in Spalte "R" abgeschlossen. Dabei wurde entsprechend dem empfangenen dynamischen Signalnamen "RAM.B.ADR" der "SID" um Eins auf "SID=2" erhöht.

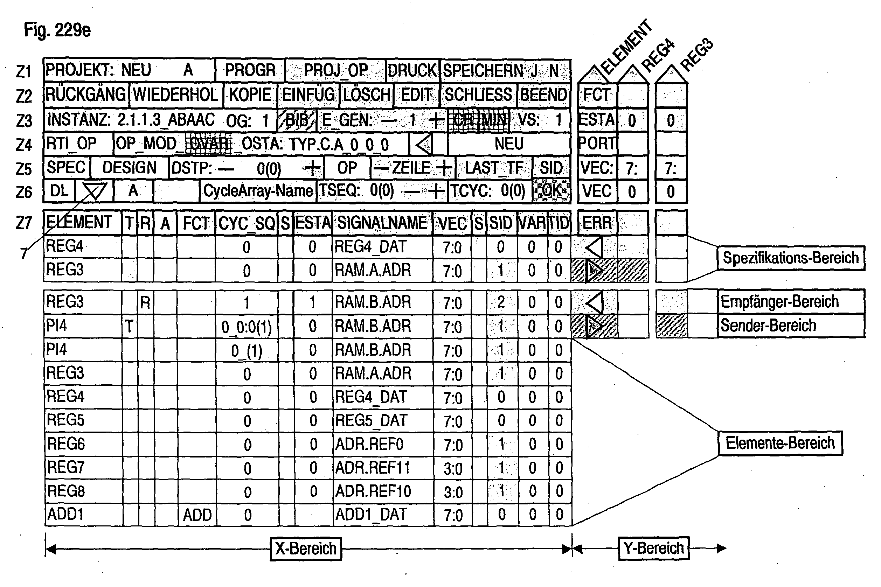

**Fig.229e** zeigt die Vorbereitung des zweiten "DVSTP" mit Empfänger "REG4" und Sender "REG3" im Spezifikations-Bereich, dabei wird der alte Dateninhalt "RAM.A.ADR" von "REG3" zum "REG4" übertragen. Die Elemente "REG3" und "PI4" aus dem ersten "DVSTP", Fig.229d, wurden durch Klick in die Schaltfläche der REG3-Zeile in Spalte "ELEMENT", vom Spezifikations-Bereich in den Empfänger- bzw. Sender-Bereich transferiert.

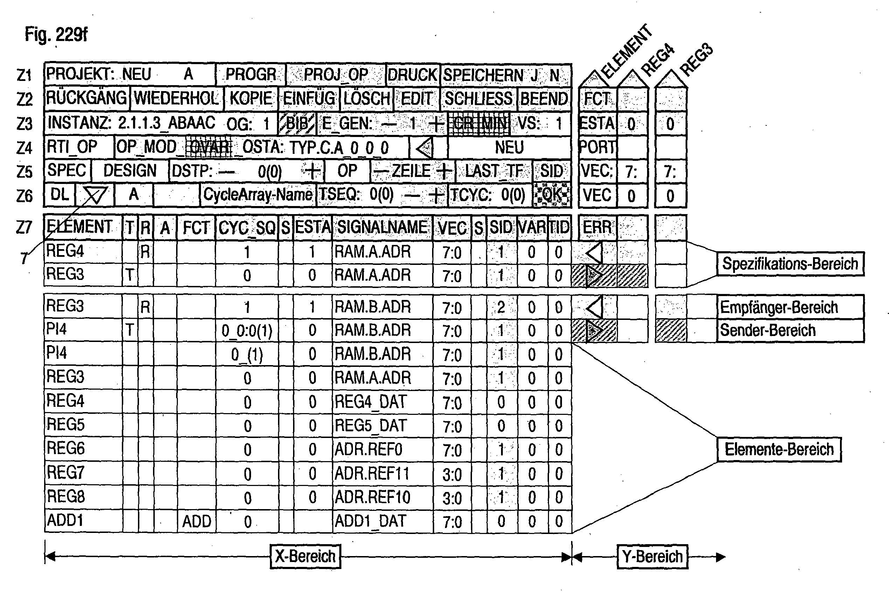

In **Fig.229f** wurde der zweite "DVSTP" durch Klick in die Schaltfläche der REG4-Zeile in Spalte "R" bestätigt.

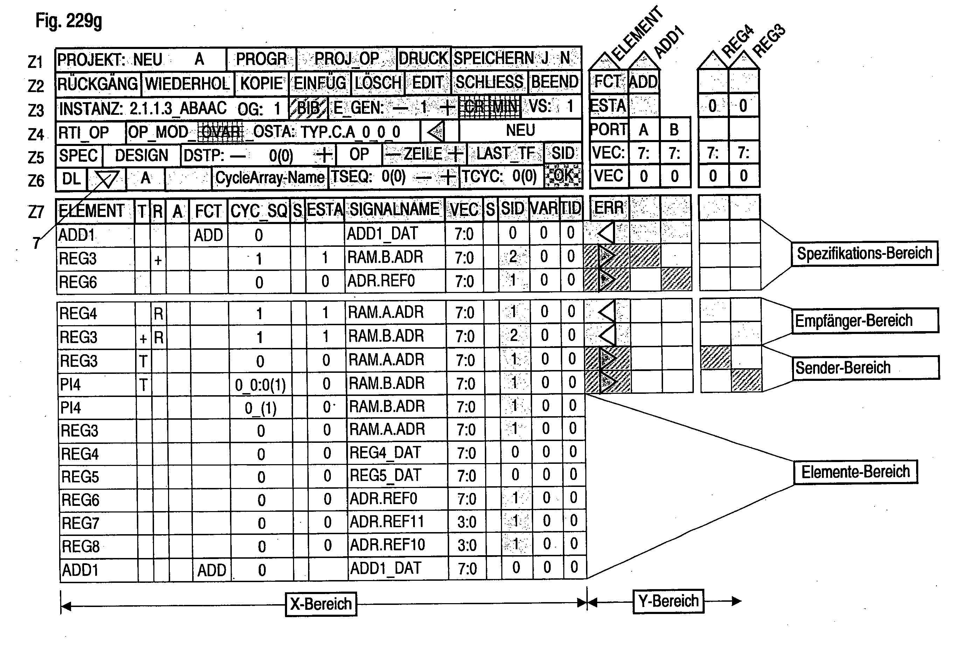

In **Fig.229g** wurden die Elemente "REG4" und "REG3" aus dem zweiten "DVSTP", Fig.229f, vom Spezifikations-Bereich in den Empfänger- bzw. Sender-Bereich transferiert und mit dem Empfänger "ADD1" und den Sendern "REG3", "REG6" im Spezifikations-Bereich, der dritte "DVSTP" vorbereitet. Dabei wurde der Sender "REG3" mit dem neuen Dateninhalt "RAM.B.ADR" aus dem Empfänger-Bereich, durch Klick in die Schaltfläche in Spalte "T", in den Spezifikations-Bereich transferiert. Werden in einem "DSTP" bereits empfangene, neue Daten gesendet, dann wird in der entsprechenden Elemente-Zeile im Empfänger-Bereich in Spalte "T" automatisch die Kennung "+" eingetragen, im Beispiel von Fig.229g ist das die REG3-Zeile im Empfänger-Bereich. Ergänzend wird im Spezifikations-Bereich für den Sender mit den bereits empfangenen, neuen Daten, im Beispiel ist das "REG3", in der Spalte "R" automatisch die Kennung "+" eingetragen. Im Y-Bereich, Fig.229g, ist das Element "ADD1" mit beiden Empfangsports "A" und "B" dargestellt. Wie später gezeigt wird, kann die Port-Darstellung alternativ auch mit einer Spalte realisiert werden. Die Elemente-Gruppe "COM", im Beispiel "ADD1" in Fig.229g, und Outputports, wie vorstehend bereits erläutert, besitzen vor dem ersten Empfang in einer RTI-Operations-Spezifikation noch keinen "ESTA", damit auch von Senderseite ein "ESTA=0" übernommen werden kann.

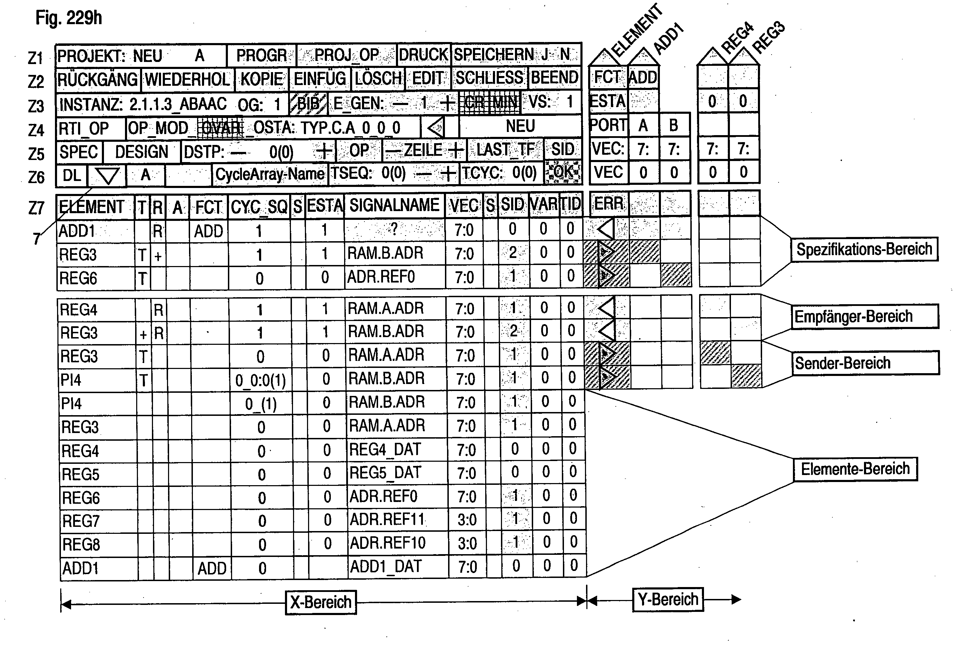

In **Fig.229h** wurde der dritte "DVSTP" bestätigt, der dynamische Output-Signalname in der ADD1-Zeile ist durch die Ansteuerung von zwei Sendern undefiniert, deshalb wird automatisch in der Spalte "SIGNALNAME" ein Fragezeichen "?" auf markiertem Hintergrund gesetzt, die Schaltfläche "SIGNALNAME" in "Z7" aktiviert und die Schaltfläche "OP" in "Z5" deaktiviert.

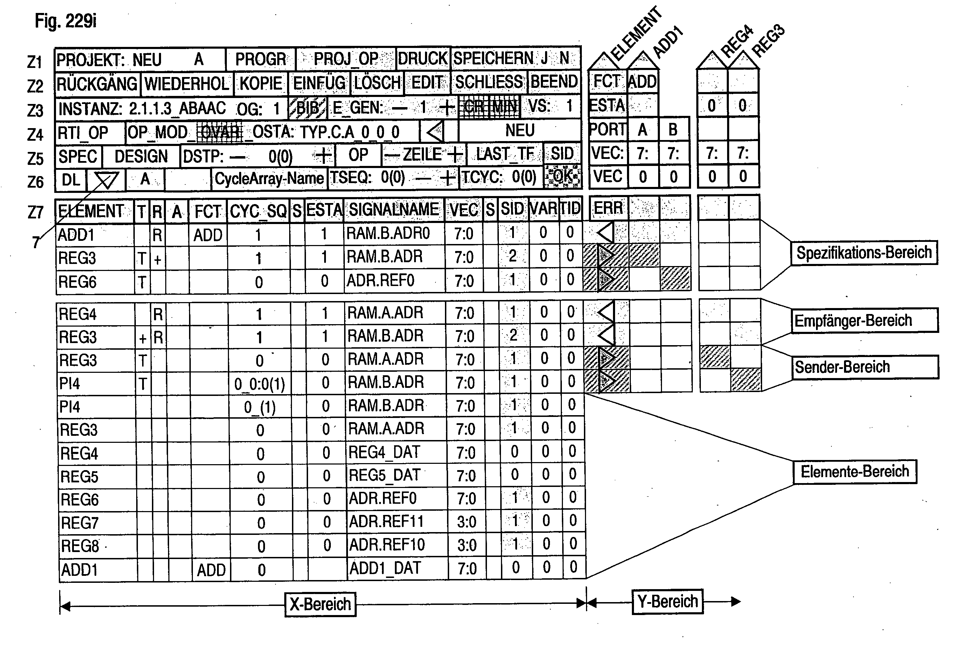

In **Fig.229i** wurde für "ADD1" der dynamische Output-Signalname "RAM.B.ADR0" manuell eingetragen und mit "OK" bestätigt. Hierdurch wird die Schaltfläche "SIGNALNAME" in "Z7" deaktiviert, die Schaltfläche "OP" in "Z5" aktiviert und in der ADD1-Zeile in Spalte "SIGNALNAME" die Anzeigefläche demarkiert.

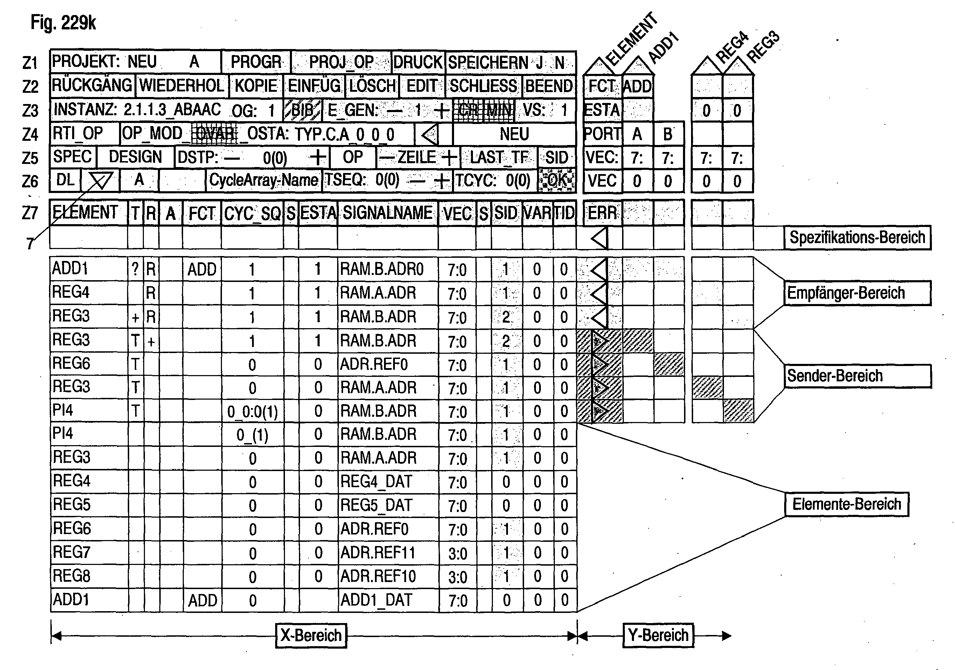

Durch Klick in die Schaltfläche der ADD1-Zeile in Spalte "ELEMENT" werden vom Spezifikations-Bereich der Empfänger "ADD1" in den Empfänger-Bereich und die Sender "REG3" und "REG6" in den Sender-Bereich transferiert, wie **Fig.229k** zeigt. Für eine verbesserte Übersicht beim Spezifizieren, ist der Ergebnis-Output von COM-Elementen, im Beispiel von "ADD1", noch vor Designstep-Ende von einem speichernden Element zu übernehmen, oder zu einem RTI-Outputport zu transferieren. Dies gilt auch für Lesedaten von einem Memory, wie später gezeigt wird. Um einen nachfolgenden Transfer der ADD1-Ergebnisdaten zu gewährleisten, wird eine Kennung durch ein Fragezeichen "?" in der ADD1_Zeile in Spalte "T", Fig.229k, gesetzt. Besitzt die Spalte "T" im Empfänger-Bereich ein oder mehrere "?", ist das "OK" für einen DSTP-Abschluß unwirksam.

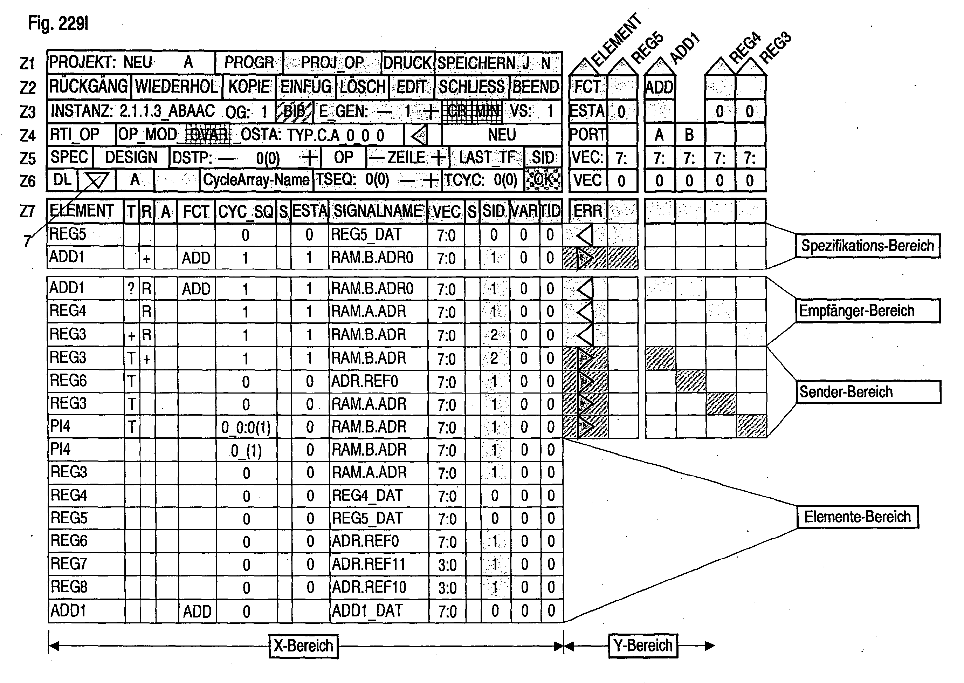

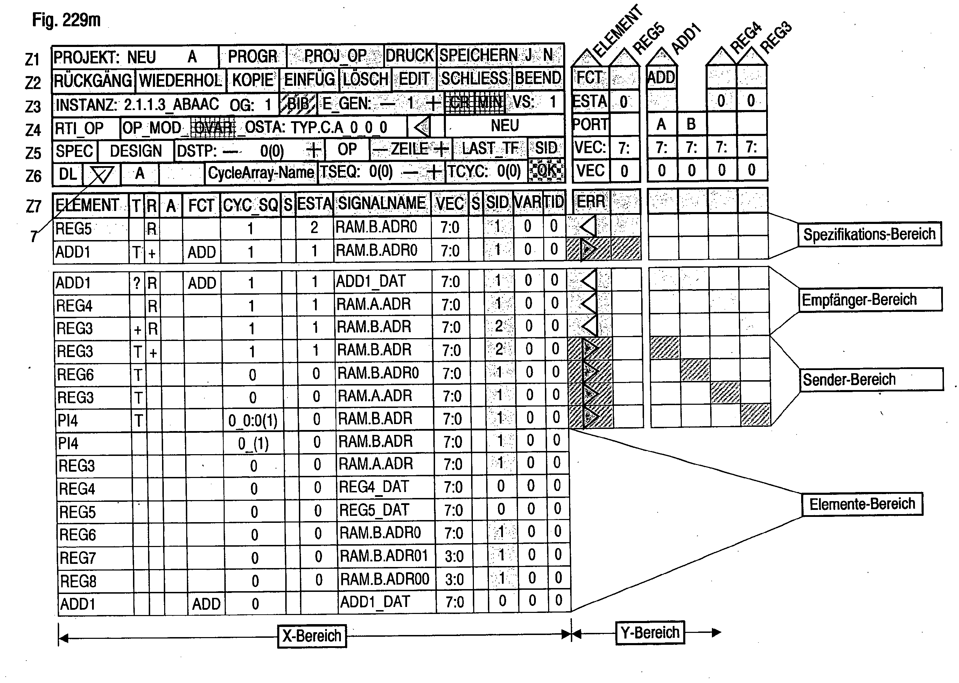

In **Fig.229l** ist im Spezifikations-Bereich der Transfer von "ADD1" nach "REG5" dargestellt und in **Fig.229m** bestätigt.

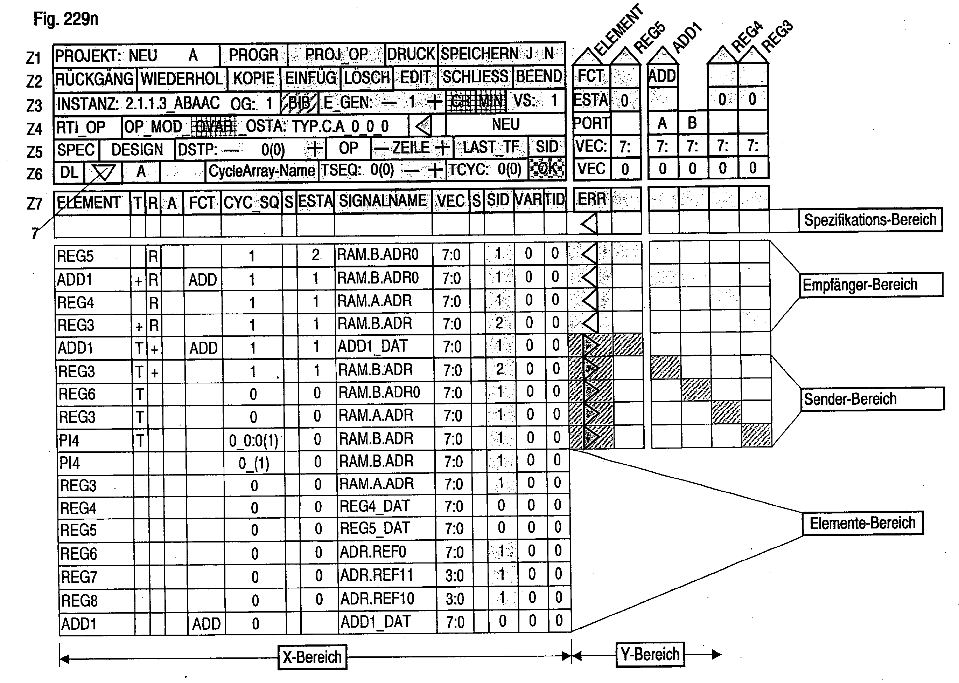

In **Fig.229n** wurde aus dem Spezifikations-Bereich von Fig.229m der Empfänger "REG5" in den Empfänger-Bereich und der Sender "ADD1" in den Sender-Bereich transferiert. Durch den Transfer von "ADD1" vom Spezifikations-Bereich in den Sender-Bereich, wird für "ADD1" im Empfangs-Bereich das Fragezeichen "?" in Spalte "T" automatisch gelöscht und an Stelle dessen ein "+" eingetragen.

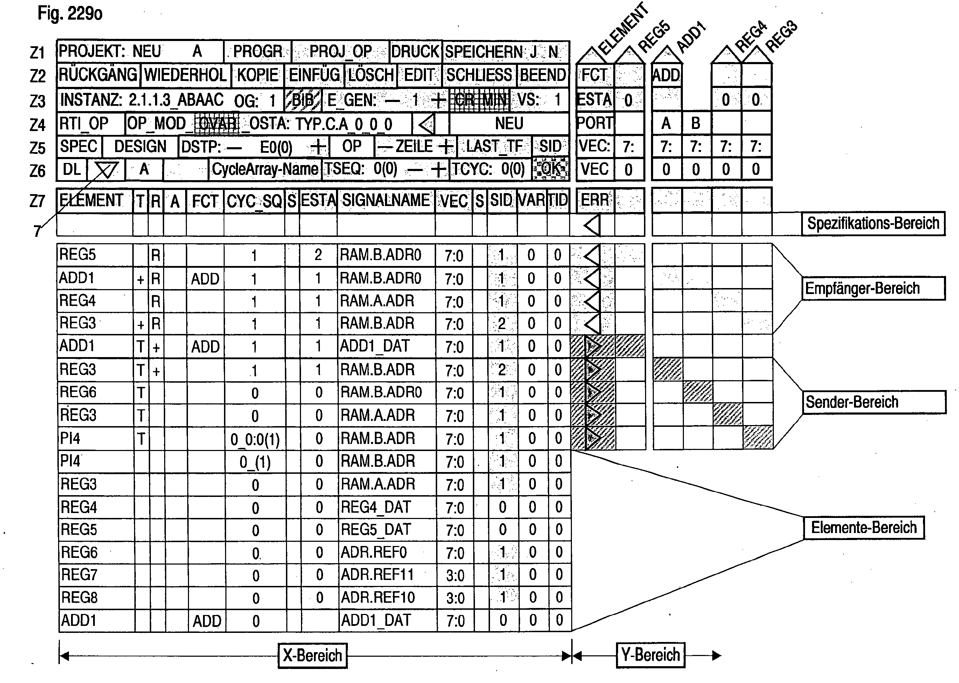

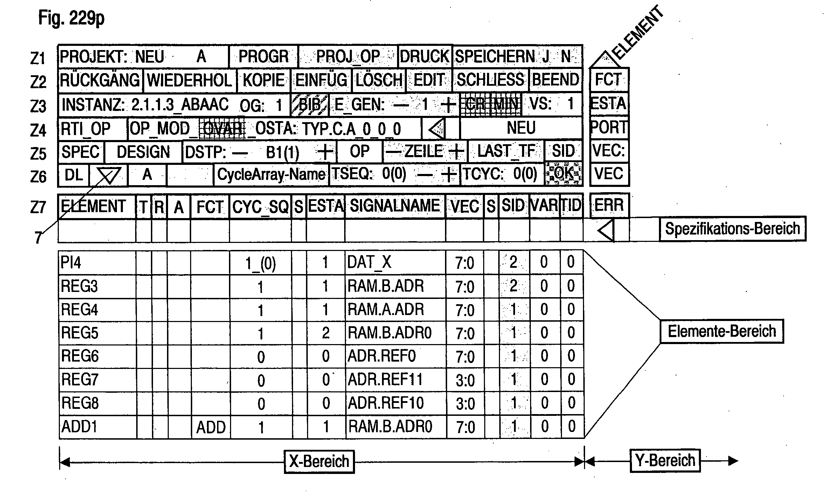

Mit Klick in die Schaltfläche "OK" in "Z6" wird in **Fig.229o** mit "DSTP:E0(0)" in "Z5" das Ende des Designstep"0" angezeigt. Durch nochmaligem Klick in die Schaltfläche "OK" in "Z6" erfolgt der Wechsel zum Beginn des Designstep"1" mit der Anzeige "DSTP:B1(1)" in "Z5", wie **Fig.229p** zeigt. Hierbei werden die Elemente-Bereich-Parameter, wie vorangegangen erläutert, automatisch entsprechend eingetragen. "PI4" besitzt in Spalte "CYC_SQ" mit "(0)" keinen Daten-Stream mehr, deshalb wird beispielsweise automatisch für unbestimmte PI4-Daten der dynamische Signalname "DAT_X" eingetragen und die SID-Nummer auf "SID=2" erhöht.

### Beschreibung zu Fig.230a-230e:

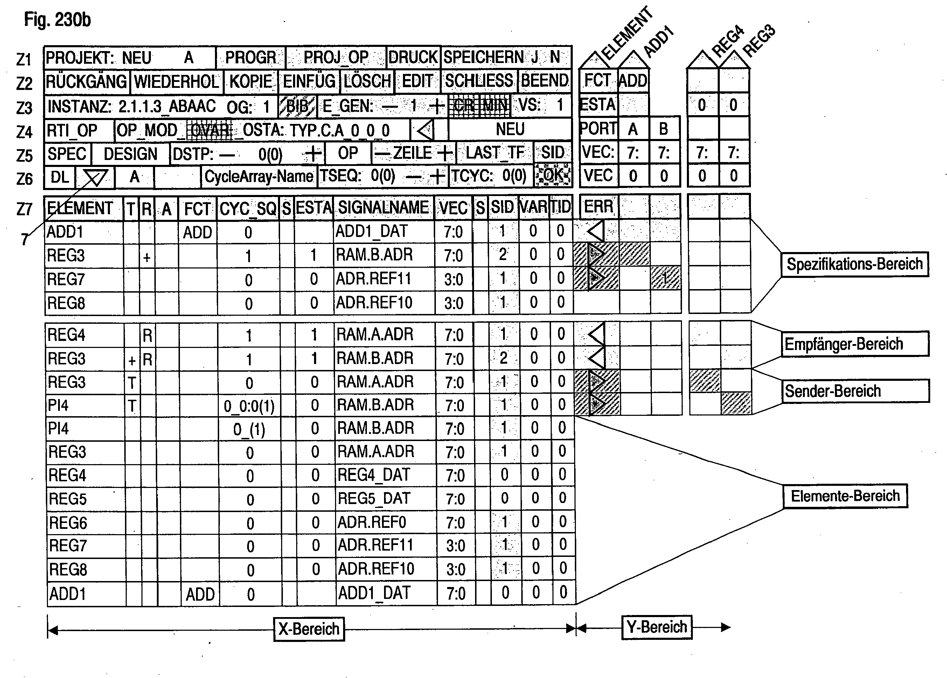

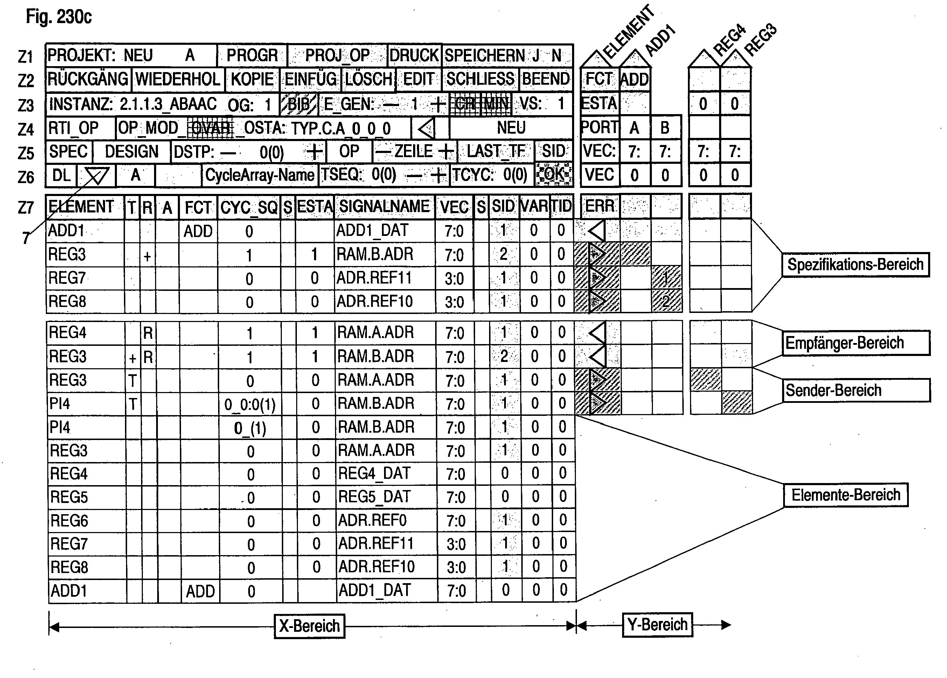

Nachfolgend wird für die Blockstruktur von **Fig.230a** die RTI-Operations-Spezifizierung anhand von **Fig.230b** bis **Fig.230e** beschrieben. Die Spezifizierung der "DVSTPs" nach Blockstruktur von Fig.230a unterscheidet sich gegenüber der nach Fig.229a nur dadurch, daß "REG6" mit 8 Bit, Fig.229a, von "REG7" und "REG8" mit je 4 Bit, Fig.230a, ersetzt wird. In **Fig.230b** ist im Spezifikations-Bereich der Empfänger "ADD1" sowie die Sender "REG3", "REG7" und "REG8" dargestellt. Ausserdem erfolgte die Zuweisung des Senders "REG3" zum Port "A" von "ADD1" und des Senders "REG7" zum Port "B" Teilbitvector "7:4" von "ADD1", automatisch gekennzeichnet durch eine "1" im Zuweisungs-Koordinatenfeld. Eine "1" im Zuweisungs-Koordinatenfeld bedeutet, daß der Sender-Bitvector an die höchstwertigste Stelle des Empfänger-Bitvectors zu liegen kommt, im Beispiel wird der REG7-Bitvector "3:0" dem ADD1-Teilbitvector "7:4" zugeordnet. **Fig.230c** zeigt die Zuweisung des REG8-Bitvectors "3:0" zum ADD1-Teilbitvector "3:0", automatisch gekennzeichnet durch eine "2" im Zuweisungs-Koordinatenfeld. Generell gilt, senden mehrere Sender auf einen Empfänger-Port, dann erfolgt die erste Zuweisung eines Sender-Bitvectors auf den höchstwertigsten Empfänger-Teilbitvector, die zweite Zuweisung eines Sender-Bitvectors auf den nächst höchstwertigen Empfänger-Teilbitvector, usw., und die letzte Zuweisung eines Sender-Bitvectors auf den niederwertigsteri Empfänger-Teilbitvector, automatisch gekennzeichnet im Zuweisungs-Koordinatenfeld mit einer "1" für die erste Sender-Zuweisung, mit einer "2" für die zweite Sender-Zuweisung, mit einer "3" für die dritte Sender-Zuweisung, usw..

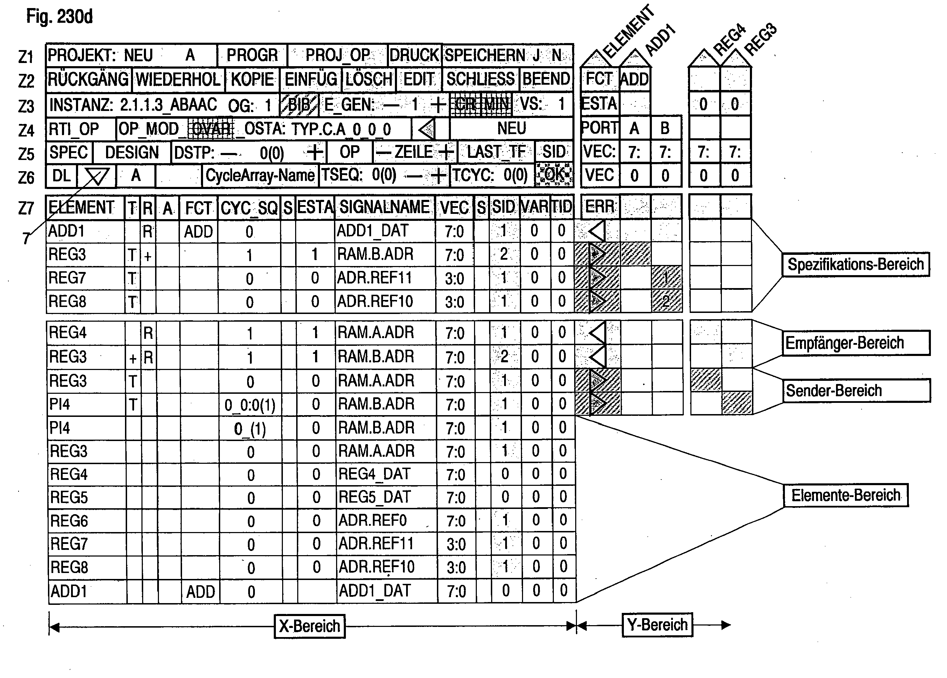

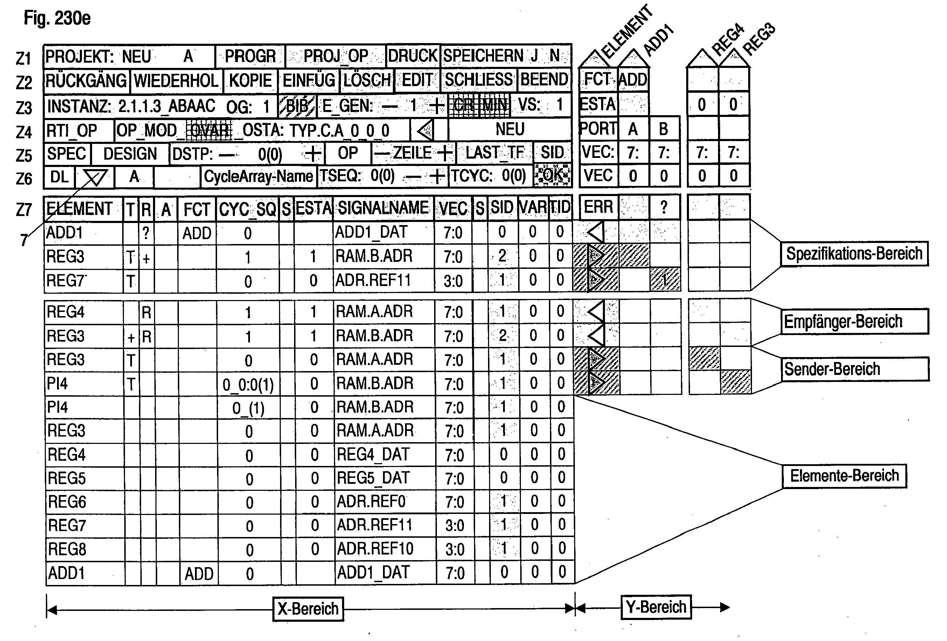

In **Fig.230d** wurde der Transfer durch Klick in die Schaltfläche der ADD1-Zeile in Spalte "R" bestätigt und der ADD1-Output-Signalname "ADD1_DAT" manuell definiert bzw. beibehalten. Erfolgt die Bestätigung des Transfers und fehlt noch ein Sender-Bitvector, im Beispiel von **Fig.230e** fehlt die Zuweisung des REG8-Bitvectors bzw. die REG8-Sender-Zeile im Spezifikations-Bereich, dann werden im Y-Bereich in Zeile "Z7", die Anzeigeflächen mit Error "ERR" in Spalte "ELEMENT" und mit Fragezeichen "?" in Spalte "ADD1-PORT-B" aktiviert. Ausserdem wird im X-Bereich in der ADD1-Zeile in Spalte "R", an Stelle einer Bestätigung mit "R", ein Fragezeichen "?" eingetragen. Der "DVSTP" kann erst abgeschlossen werden, wenn der Fehler beseitigt ist.

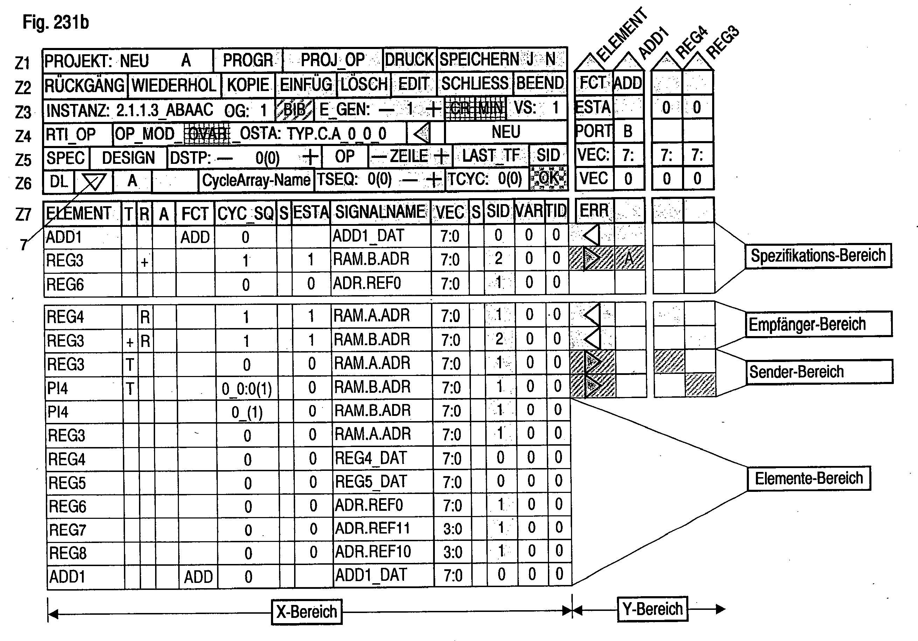

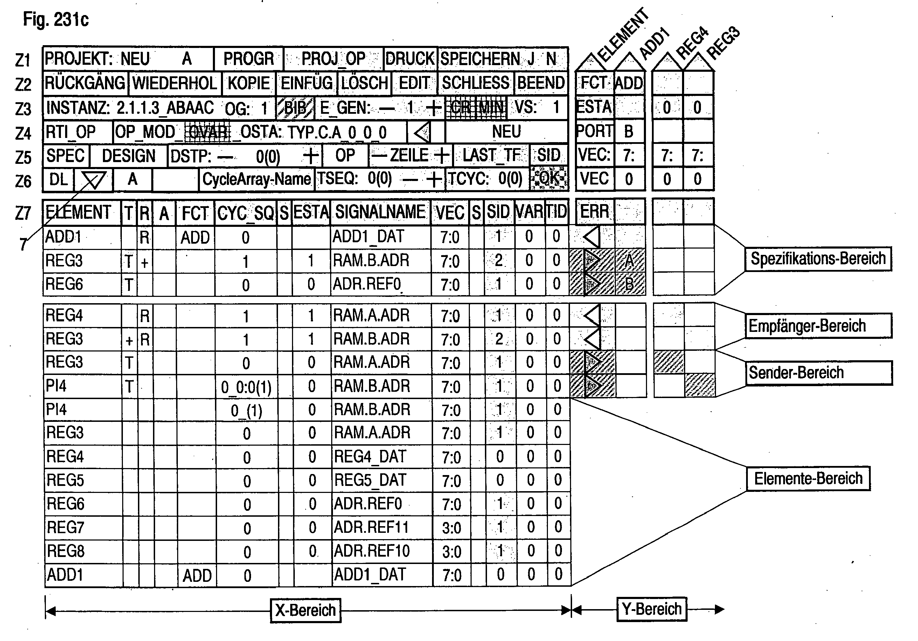

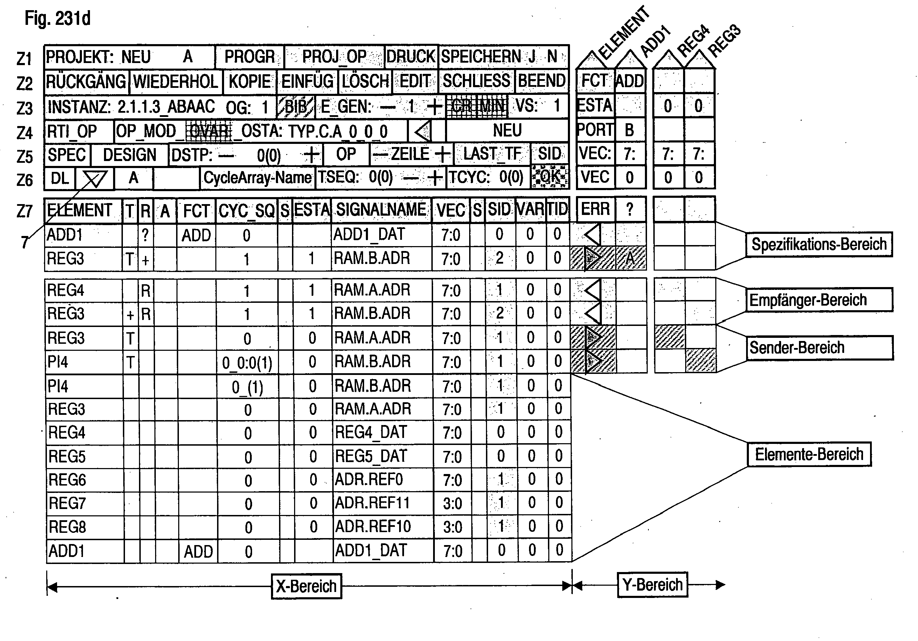

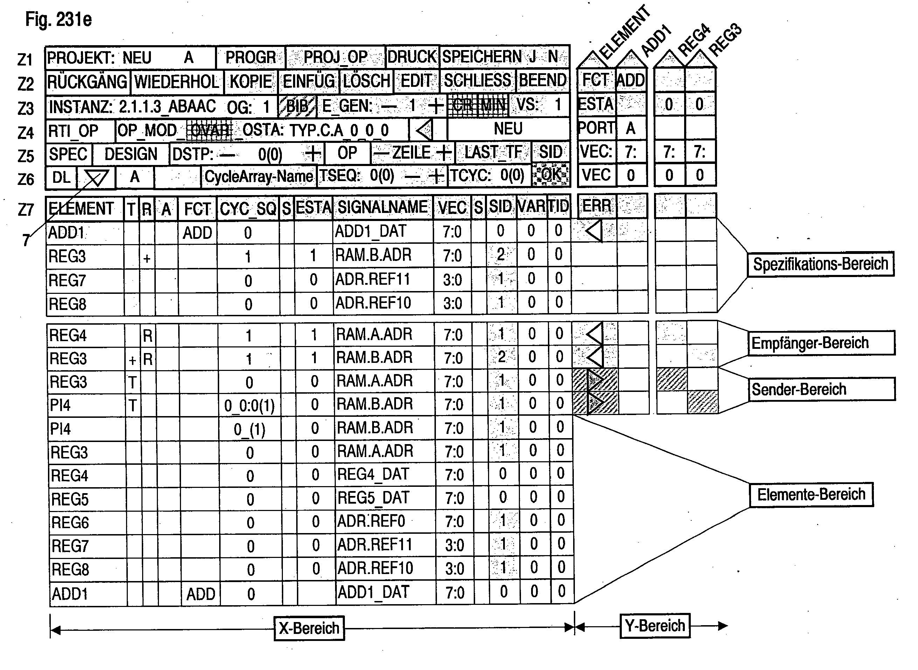

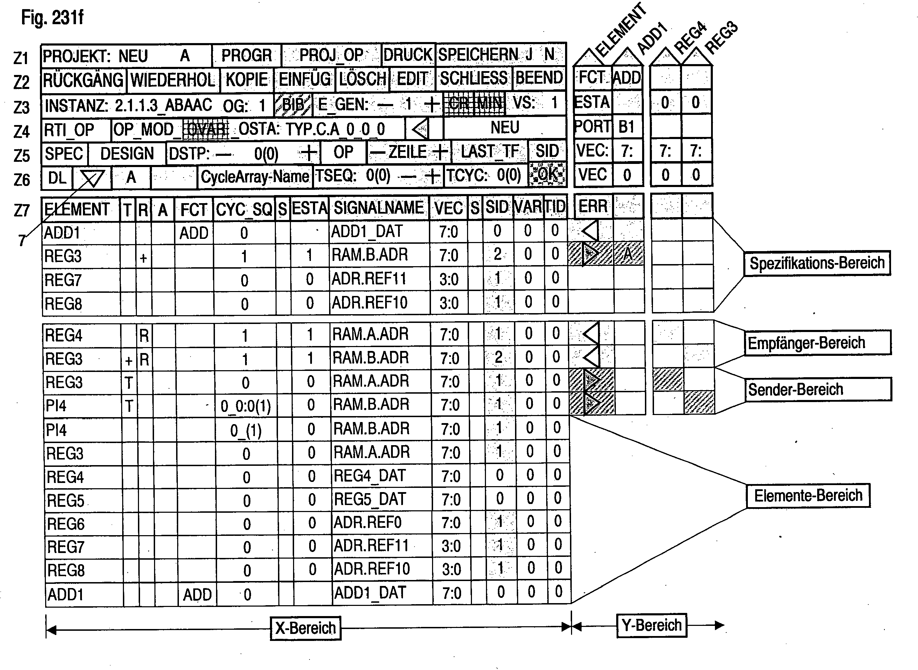

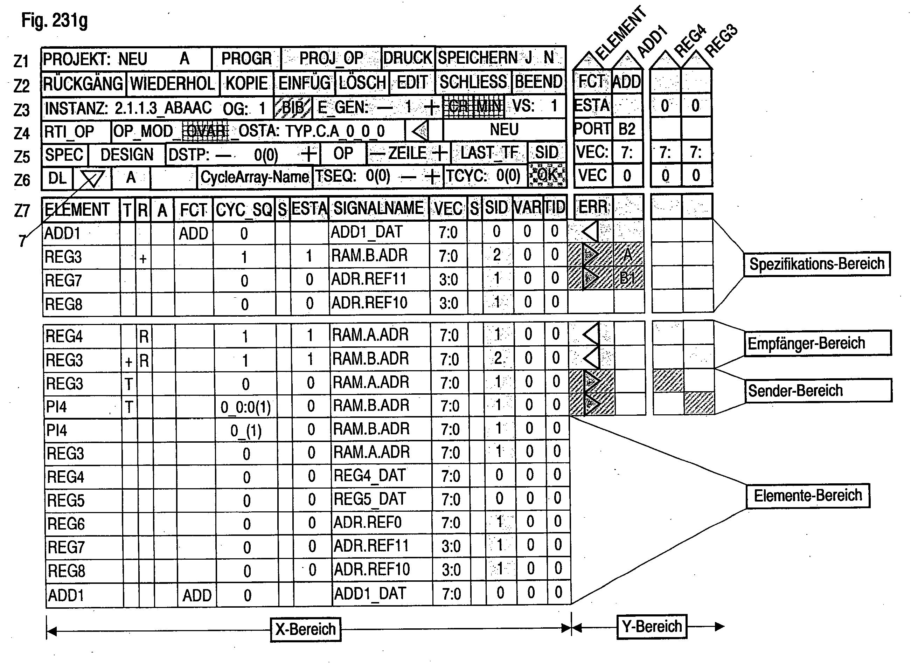

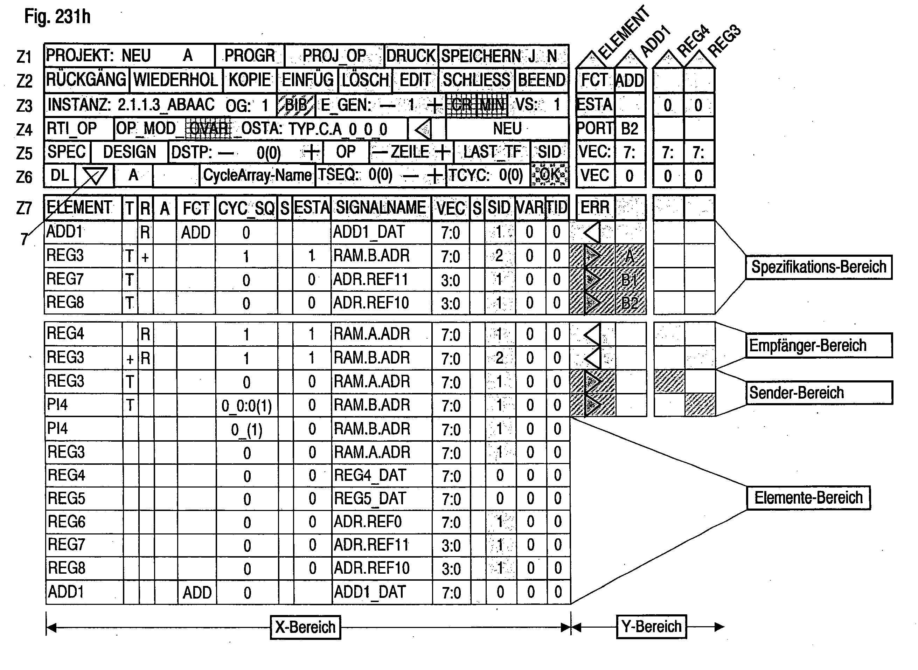

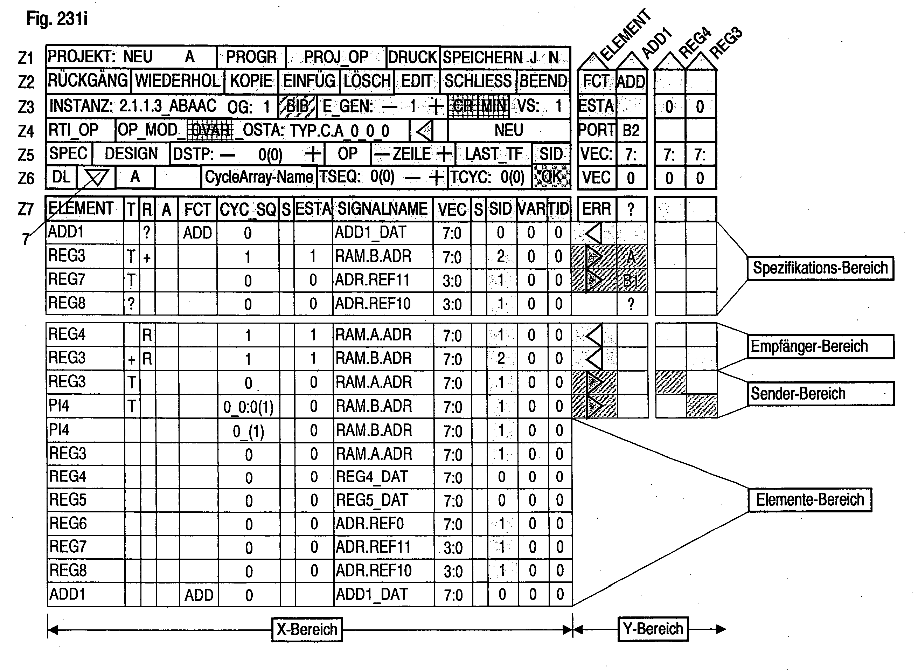

### Beschreibung zu Fig.231 a-231 i:

Vorstehend wurden im RTI-OP-BS die Inputports "A" und "B" des Elements "ADD1" von Fig.229a bzw. Fig.230a mit je einer Spalte im Y-Bereich dargestellt: Im Folgenden wird gezeigt, daß im RTI-OP-BS Elemente mit einer beliebigen Anzahl von Inputports auch mit nur einer Spalte im Y-Bereich dargestellt werden können.

**Fig.231a** zeigt im Y-Bereich eine Anordnung für die ADD1-Inputports "A" bzw. "B" in einer Spalte. Dabei gilt, daß die Spezifikation eines Transfers immer mit dem ersten Port, im Beispiel mit dem ADD1-Inputport "A" beginnt, wie im Y-Bereich in Zeile "PORT", Spalte "ADD1" dargestellt. Auf der Basis der Blockstruktur von Fig.229a erfolgt in **Fig.231b** die erste Zuweisung der Daten vom "REG3" zum ADD1-Port "A", automatisch gekennzeichnet durch die Portbezeichnung "A" im Zuweisungs-Koordinatenfeld. Dabei wechselt automatisch im Y-Bereich in Zeile "PORT", Spalte "ADD1", die Portbezeichnung von "A" nach "B".

**Fig.231c** zeigt die zweite Daten-Zuweisung vom "REG6" zum ADD1-Port "B", mit Bestätigung des Transfers. Erfolgt die Bestätigung des Transfers und fehlt noch die Zuweisung von einem oder mehreren Sendern, im Beispiel von **Fig.231d** fehlt der Sender für eine Zuweisung zu ADD1-Port "B", dann werden im Y-Bereich in Zeile "Z7", die Anzeigeflächen mit Error "ERR" in Spalte "ELEMENT" und mit Fragezeichen "?" in Spalte "ADD1" aktiviert. Ausserdem wird im X-Bereich in der ADD1-Zeile in Spalte "R" ein "?" gesetzt. Der "DVSTP" kann erst abgeschlossen werden, wenn der Fehler beseitigt ist.

Auf der Basis der Blockstruktur von Fig.230a ist in **Fig.231e** im Spezifikations-Bereich der Transfer mit dem Empfänger "ADD1", dem 8-Bit-Sender "REG3" und den 4-Bit-Sendern "REG7", "REG8" vorbereitet. Die erste Daten-Zuweisung von "REG3" zum ADD1-Port "A" ist in **Fig.231f** dargestellt. Dabei wechselt automatisch im Y-Bereich in Zeile "PORT", Spalte "ADD1", die Portbezeichnung von "A" nach "B1". Dabei bedeutet "B1" den B-Teilvector "7:4".

**Fig.231g** zeigt die zweite Daten-Zuweisung von "REG7" zum ADD1-Port "B1". Dabei wird der REG7-Vector "3:0", dem B1-Teilvector "7:4" von "ADD1" zugewiesen und im Zuweisungs-Koordinatenfeld mit "B1" automatisch eingetragen. Ausserdem wechselt im Y-Bereich in Zeile "PORT", Spalte "ADD1", die Portbezeichnung von "B1" nach "B2". Mit der dritten Daten-Zuweisung, **Fig.231h****,** von "REG8" zum ADD1-Port "B2" wurde der Transfer abgeschlossen und bestätigt. Dabei wird der REG8-Vector "3:0", dem B2-Teilvector "3:0" von "ADD1" zugewiesen und im Zuweisungs-Koordinatenfeld mit "B2" automatisch eingetragen.

In **Fig.231i** wurde der Transfer unfertig bestätigt, im Beispiel fehlt die Zuweisung von "REG8" nach ADD1-Port "B2", deshalb werden automatisch im Y-Bereich in Zeile "Z7", die Anzeigeflächen mit Error "ERR" in Spalte "ELEMENT" und mit Fragezeichen "?" in Spalte "ADD1" aktiviert. Zusätzlich wird im Y-Bereich im Zuweisungs-Koordinatenfeld der REG8-Zeile in Spalte ADD1, im X-Bereich in der ADD1-Zeile in Spalte "R" und in der REG8-Zeile in Spalte "T", je ein Fragezeichen "?" gesetzt. Ein "DVSTP" kann erst abgeschlossen werden, wenn alle Fehler beseitigt sind, d. h., im Fehlerfall bleibt eine DVSTP-Bestätigung unwirksam.

### Beschreibung zu Fig.232a-232t:

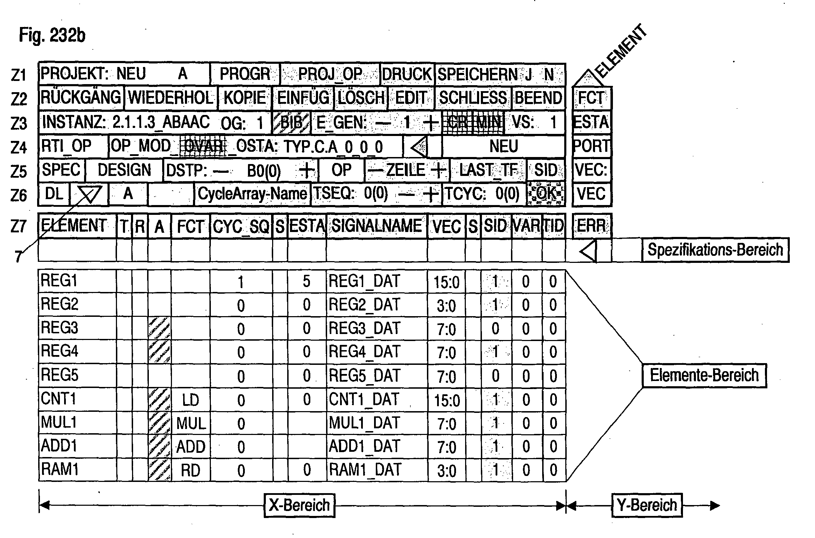

Nachfolgend wird für eine RTI-Operation "OP_MOD_OVAR:TYP.C.A_0_0" die Spezifizierung eines Zyklus-Bereichs "A1" erläutert. Der Zyklus-Bereich "A1" ist in einer Blockstruktur in der **Fig.232a** dargestellt. Die Blockstruktur dient nur der Erläuterung und ist nicht Gegenstand des SPV. Die funktionellen Eigenschaften eines Zyklus-Bereichs wurden bereits unter Fig.95, Fig.96 und Fig.97 beschrieben. Die Numerierung verschiedener Zyklus-Bereiche für einen RTI-Operations-Typ erfolgt mit "A1", "A2", "A3", usw., in der Bearbeitungs-Reihenfolge. Vor Spezifizierung des ersten Transferzyklus "TCYC1" soll beispielsweise der Zyklus-Bereich "A1", Fig.232a, initialisiert werden. Die Spezifizierung zur Inizialisierung eines Zyklus-Bereichs erfolgt ohne Beschränkung auf den Zyklus-Bereich in normaler Transfer-Spezifikation, wie vorangegangen erläutert und wird anhand von **Fig.232b** bis **Fig.232t** beschrieben.

**Fig.232b** zeigt den RTI-OP-BS mit den in Fig.232a dargestellten Elementen und Signalnamen. Die Schaltflächen der Elemente des Zyklus-Bereichs "A1" wurden, für eine verbesserte Übersicht, beispielsweise durch Klicks in den entsprechenden Elemente-Zeilen in Spalte "A" schraffiert markiert. Durch einen erneuten Klick in eine schraffiert markierte Schaltfläche kann diese wieder demarkiert werden. Die Werte in Spalte "CYC_SQ" und "ESTA" sind angenommene, beispielsweise Werte. Für die Inizialisierung des Zyklus-Bereichs "A1" werden beispielsweise im ersten Designstep "DSTP:0(0)" folgende Transfers getätigt:

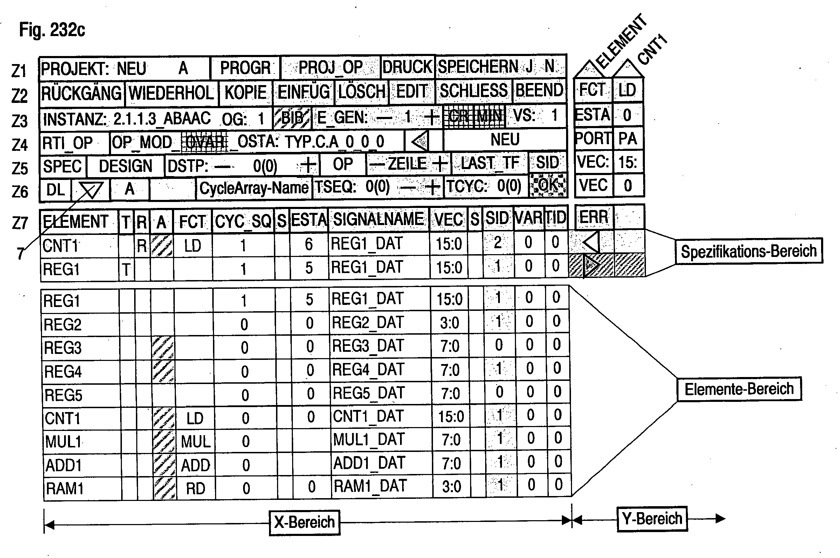

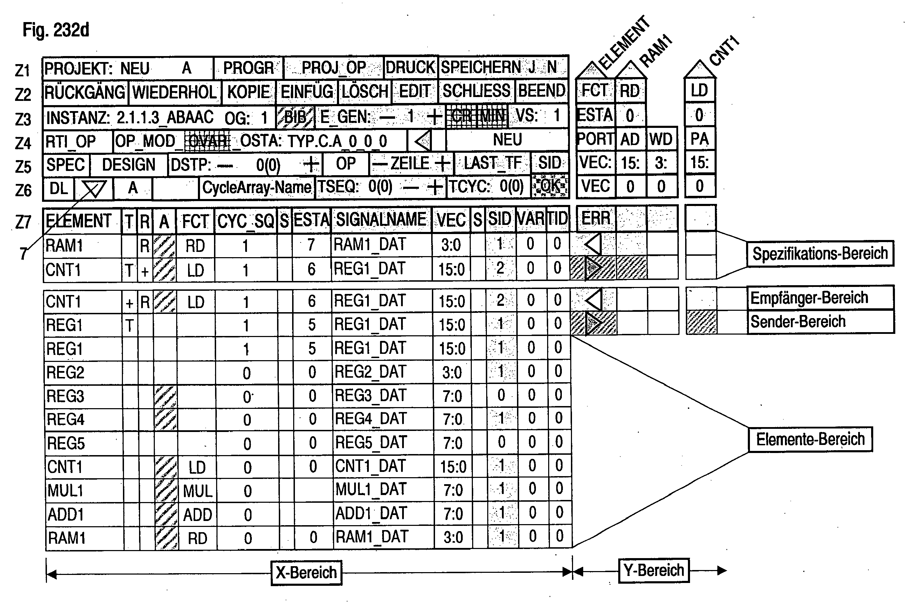

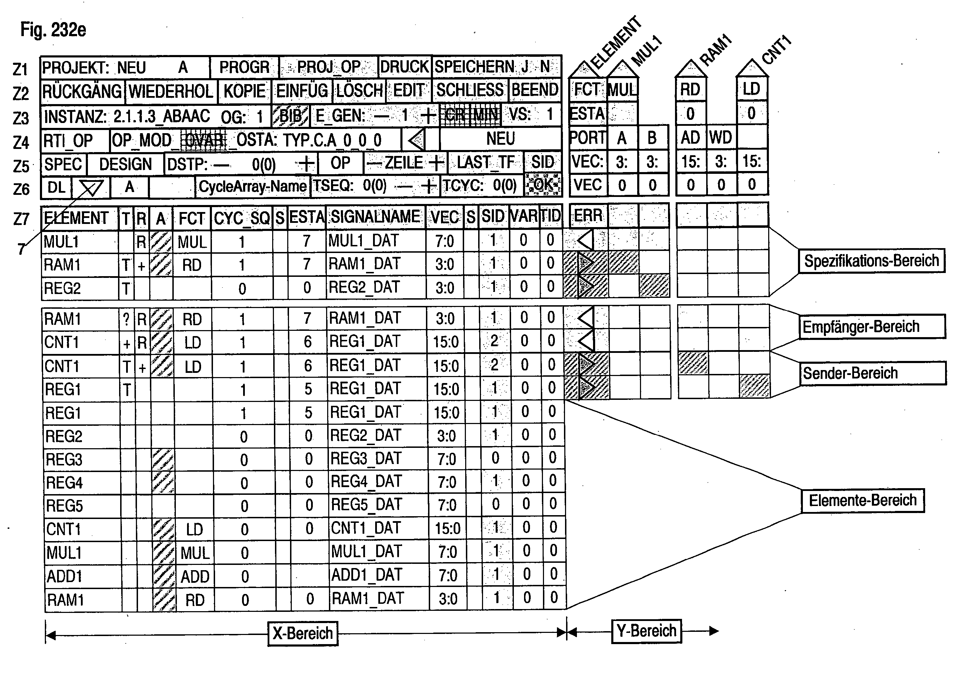

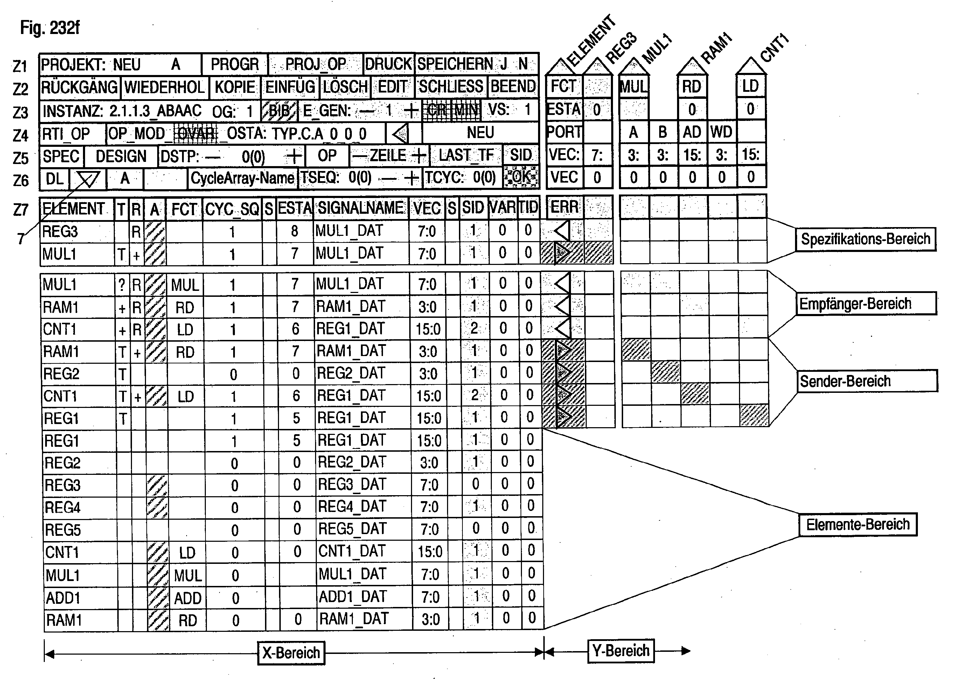

In **Fig.232c** von REG1 nach CNT1, in **Fig.232d** von CNT1 nach RAM1, in **Fig.232e** von RAM1 und REG2 nach MUL1, sowie in **Fig.232f** von MUL1 nach REG3. Wie bereits vorangegangen erläutert, wird für Empfänger MEM bei Funktion "RD" sowie für "COM", im Beispiel sind das RAM1, MUL1 und ADD1, nach Empfangs-Bestätigung und Transfer vom Spezifikations-Bereich in den Empfänger-Bereich, in Spalte "T" im Empfänger-Bereich ein Fragezeichen "?" gesetzt. Dieses Fragezeichen wird automatisch gelöscht, wenn der Empfänger seine aktuellen Daten im Spezifikations-Bereich als Sender weiter transferiert hat und der Sender in den Sender-Bereich wechselt. In Fig.232e wurde nach Bestätigung des Transfers der MUL1-Output-Signalname "MUL1_DAT" manuell definiert bzw. beibehalten.

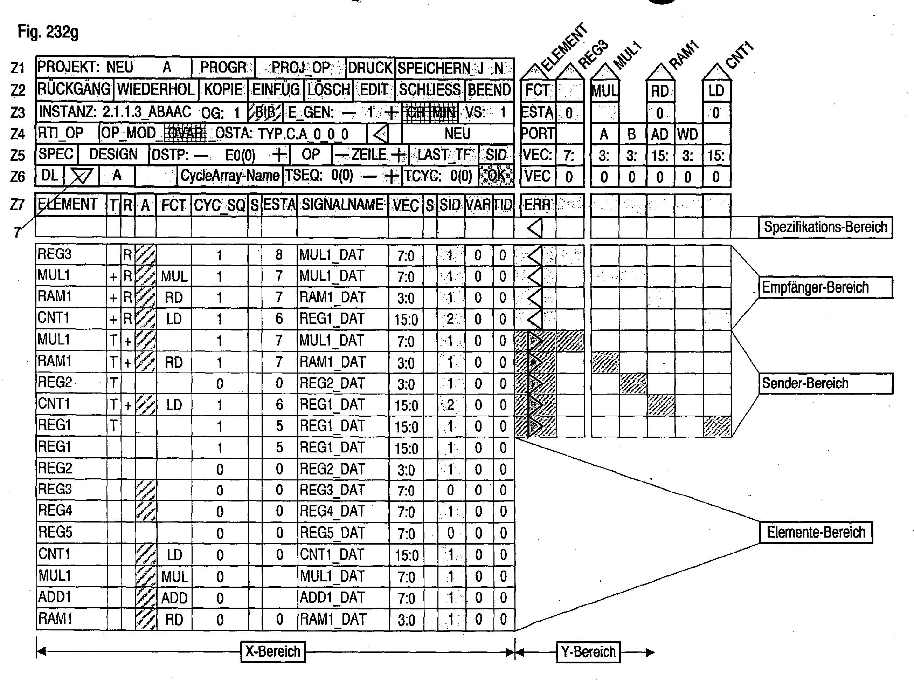

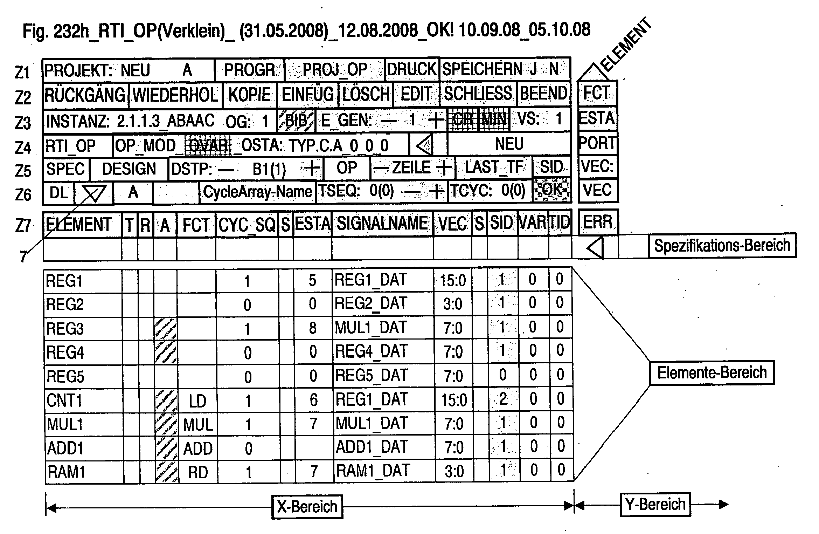

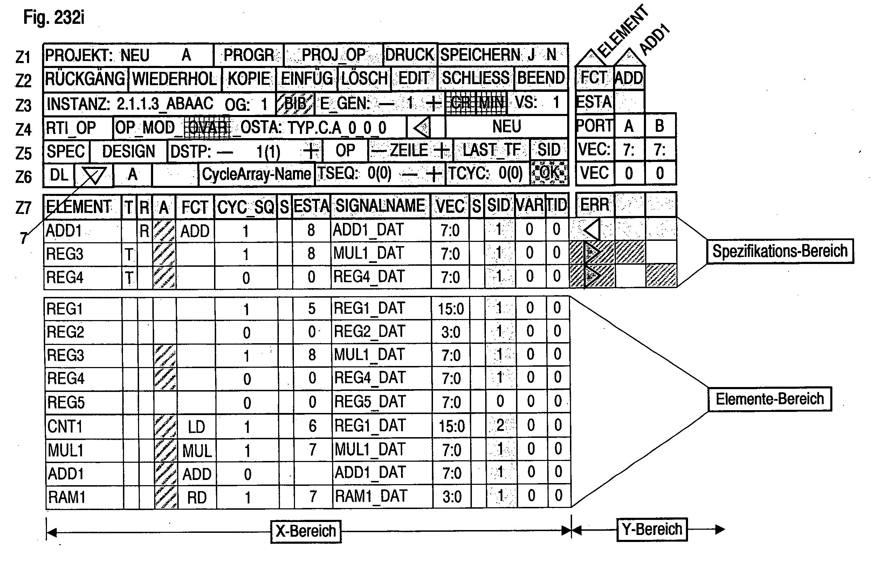

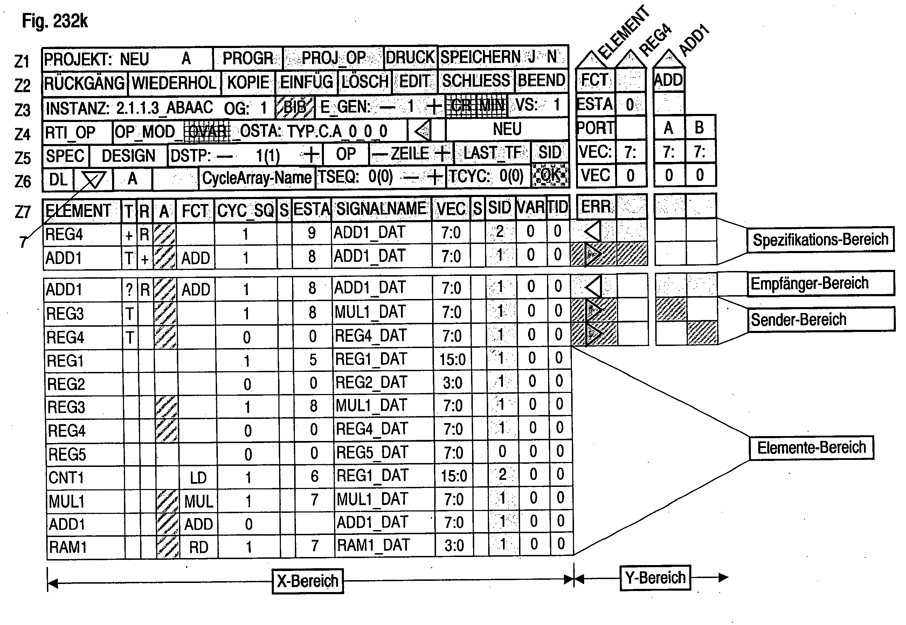

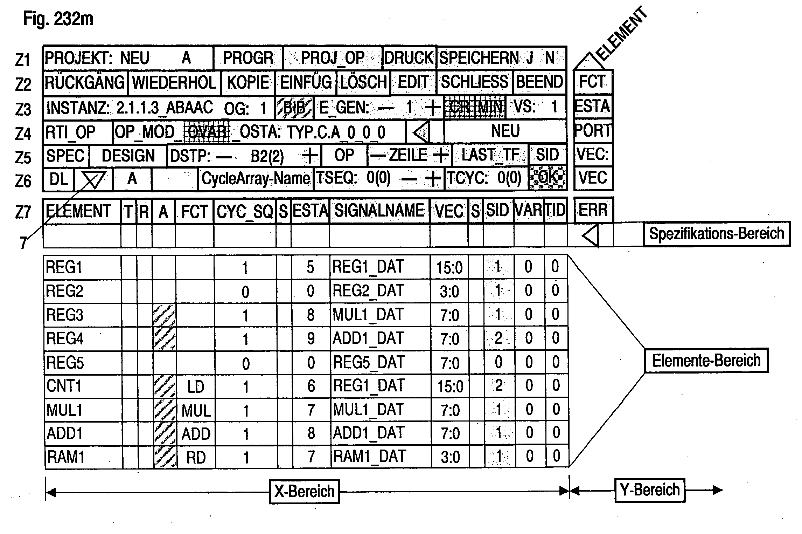

**Fig.232g** zeigt die Beendigung des ersten Designsteps mit "DSTP:E0(0)" in "Z5", nach Klick in die Schaltfläche "OK" in "Z6" an. Für die Weiterführung und den Abschluß der Inizialisierung des Zyklus-Bereichs "A1" wird mit erneutem Klick in die Schaltfläche "OK" in "Z6" der Beginn des zweiten Designsteps "DSTP:B1(1)" in "Z5", **Fig.232h****,** angezeigt. Hierzu werden folgende restliche Transfers getätigt: In **Fig.232i** von REG3 und REG4 nach ADD1, sowie in **Fig.232k** von ADD1 nach REG4. **Fig**.**232l** zeigt die Beendigung des zweiten Designsteps mit "DSTP:E1(1)" in "Z5", nach Klick in die Schaltfläche "OK" in "Z6" an. Durch nochmaligen Klick in die Schaltfläche "OK" in "Z6" wird der Stand des Elemente-Bereichs mit "DSTP:B2(2)", **Fig232m****,** angezeigt. In Fig.232i wurde nach Bestätigung des Transfers der ADD1-Output-Signalname "ADD1_DAT" manuell definiert bzw. beibehalten.

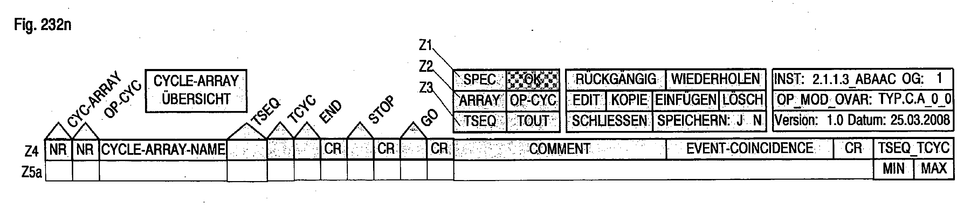

Durch Doppelklick in die Schaltfläche "A" in "Z6" wird ein Bildschirm "CYCLE-ARRAY-ÜBERSICHT" geöffnet, wie **Fig.232n** zeigt, der mit den Zeilen "Z1", "Z2", "Z3" in drei Blöcken, Anzeigeflächen und Schaltflächen für die Spezifizierung besitzt. Im rechten Block befinden sich die Anzeigeflächen in "Z1" für die RTI-Instanz mit Pfad-Nummer_RTI_Name und Operations-Gruppen-Nummer, in "Z2" die aktuelle RTI-Operation mit Operations-Typ_-Modus_-Variation, sowie in "Z3" die Version und das Datum der aktuellen RTI-Operations-Spezifizierung. Der mittlere Block zeigt in "Z1", "Z2" und "Z3" die Standard-Schaltflächen für die Bedienung, wie sie in vorangegangenen SPV-Bildschirmen dargestellt und beschrieben wurden. Der linke Block besitzt in "Z1" die Schaltflächen "SPEC" für den Start einer Spezifikationsausführung und "OK" für die Bestätigung nach der Spezifikationsausführung. In "Z2" wird mit "ARRAY" ein neues Cycle-Array und mit "OP-CYC" eine neue Operations-Zyklus-Nummer für ein bestehendes Cycle-Array erzeugt. Eine neue Operations-Zyklus-Nummer wird erforderlich, wenn ein Cycle-Array in einer RTI-Operation mehr als einmal benutzt wird. Die Zeile "Z3" des linken Blocks besitzt die Schaltflächen "TSEQ" und "TOUT". Mit der Aktivierung der Schaltfläche "TSEQ" werden alle Transfer-Sequenz-Schritte vom Beginn "BEG" bis Ende "END" des Zyklus-Bereichs, Fig.232a, für den ersten Transfer-Zyklus "TCYC1" spezifiziert. Bei aktiver Schaltfläche "TOUT" (Transfer Out) können Signaltransfers von Sendern des Zyklus-Bereichs zu Empfängern ausserhalb des Zyklus-Bereichs spezifiziert werden. Die Zeile "Z4" enthält eine Spalten-Einteilung. Von links nach rechts sind angeordnet bzw. bedeuten, Zyklus-Bereichs-Nummer "CYC-ARRAY", Operations-Zyklus-Nummer "OP-CYC", "CYCLE-ARRAY-NAME", Anzahl der Transfer-Sequenzen "TSEQ", Anzahl der Transfer-Zyklen "TCYC", Spalten "END" mit Kriterium "CR" (Criterion), Spalten "STOP" mit Kriterium "CR" (Criterion), Spalten "GO" mit Kriterium "CR" (Criterion). Die Spalten Kommentar "COMMENT" und Ereignis-Koinzidenz "EVENT-COINCIDENCE" mit der Schaltfläche Kriterien "CR" können alternativ geschaltet werden. Die Spalten in "Z5a", Minimum "MIN" und Maximum "MAX" für "TSEQ_TCYC" in "Z4", ergänzen die Kriterien-Konstrukte unter "EVENT-COINCIDENCE", wie später gezeigt wird. Die Zeilen "Z5a" und folgende, "Z5b", "Z5c", usw., repräsentieren den Spezifikations-Bereich.

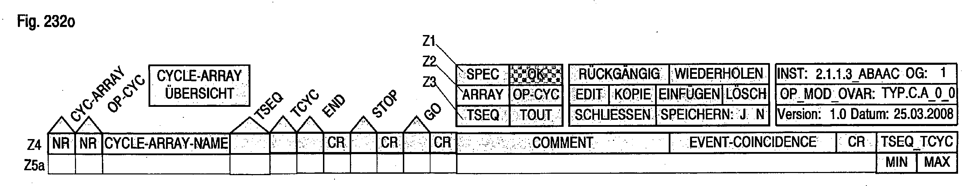

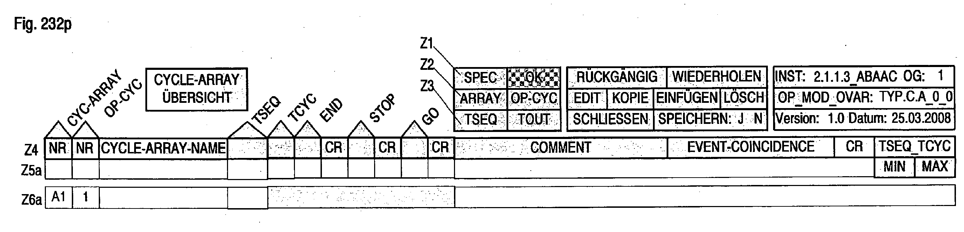

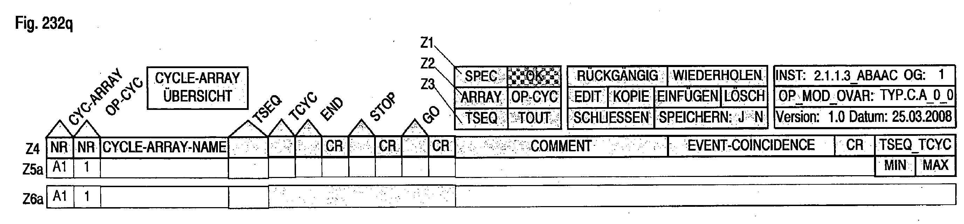

In **Fig.232o** ist noch kein Zyklus-Bereich registriert. Für den Eintrag eines ersten Zyklus-Bereichs, wurde die Schaltfläche "ARRAY" in "Z2" durch Klick aktiviert. Mit Klick in die Schaltfläche "OK" in "Z1" wird eine sog. Register-Zeile "Z6a" generiert und der erste Zyklus-Bereich in Spalte "CYC-ARRAY" mit "A1" und in Spalte "OPCYC" der erste Operations-Zyklus mit Nummer "1" eingetragen, wie **Fig.232p** zeigt. Dabei wird die Schaltfläche "ARRAY" in "Z2" deaktiviert. Durch einen Doppelklick in die markierte Schaltfläche der Zeile "Z6a" werden die Einträge "CYC-ARRAY" und "OP-CYC" von Zeile "Z6a" kopiert und in den Spezifikations-Bereich, Zeile "Z5a", eingefügt, wie **Fig.232q** zeigt.

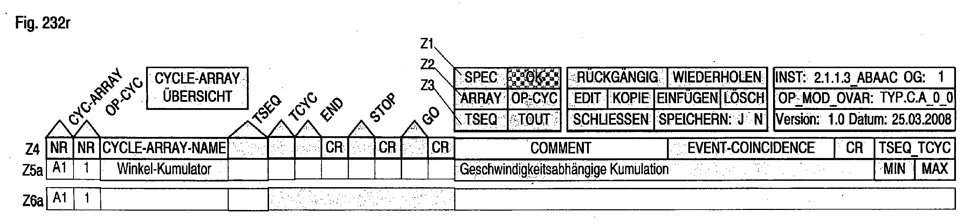

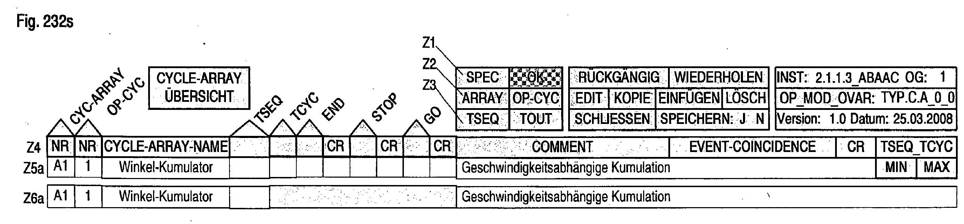

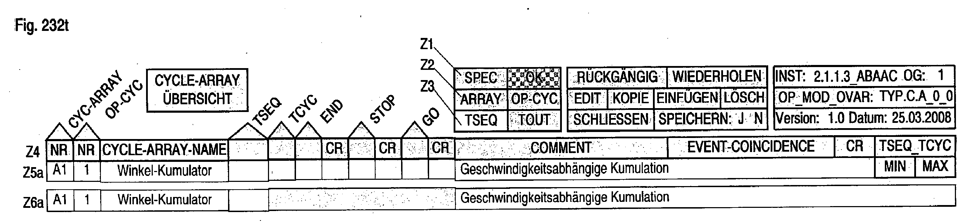

In **Fig.232r** würden in "Z4" durch Klick die Schaltflächen "CYCLE-ARRAY-NAME" und "COMMENT" aktiviert. Hierdurch wurden in "Z5a" in den aktivierten Spalten die Felder markiert und es wurde in Spalte CYCLE-ARRAY-NAME "Winkel-Kumulator" und in Spalte COMMENT "Geschwindigkeitsabhängige Kumulation" manuell eingetragen. Nach Bestätigung durch "OK" in "Z1" werden in den Spalten "CYCLE-ARRAY-NAME" und "COMMENT" die Schaltflächen in "Z4" deaktiviert bzw. in "Z5a" demarkiert und die Texte in die Zeile "Z6a" übernommen, wie **Fig.232s** zeigt. In **Fig.232t** wurde für die Spezifizierung der Transfersequenzen die Schaltfläche "TSEQ" in "Z3" durch Klick aktiviert.

### Beschreibung zu Fig.233a-233u:

Durch zusätzlichen Klick in die Schaltfläche "SPEC" in "Z1", Fig.232t, erfolgt der Wechsel vom Bildschirm "CYCLE-ARRAY-ÜBERSICHT" in den "RTI-OP-BS", wie **Fig.233a** zeigt. Dabei wurde vom Bildschirm "CYCLE-ARRAY-ÜBERSICHT" in den "RTI-OP-BS" in Zeile "Z6" der Zyklus-Bereich und zugehörige Operations-Zyklus mit "A1_1", die Spezifikations-Aufgabe in Feld 7a mit "TSEQ" und der CYCLE-ARRAY-NAME mit "Winkel-Kumulator" übernommen. Ausserdem wird automatisch die Schaltfläche "A1_1" in "Z6" aktiviert, die Schaltfläche "OP" in "Z5" deaktiviert, sodaß die Bereiche ausserhalb des Zyklus-Bereichs "A1" von einer Spezifizierung ausgeschlossen sind. In Fig.233a wurden beispielsweise in Spalte Array "A" die Elemente des Zyklus-Bereichs "A1", für eine verbesserte Übersicht, durch Klick schraffiert markiert. Die Spezifizierung der Transfer-Sequenzen für einen Zyklus-Bereich mit zugehörigem Operations-Zyklus, im Beispiel für "A1_1", ist identisch mit der Spezifizierung eines Nicht-Zyklus-Bereichs, wie vorstehend detailliert erläutert, und beginnt mit "DSTP:B0(0)" in "Z5", wie Fig.233a zeigt. Die Werte in den Spalten "CYC_SQ" und "ESTA" resultieren aus der vorangegangenen Inizialisierung des Zyklus-Bereichs "A1", wie in Fig.232m dargestellt.

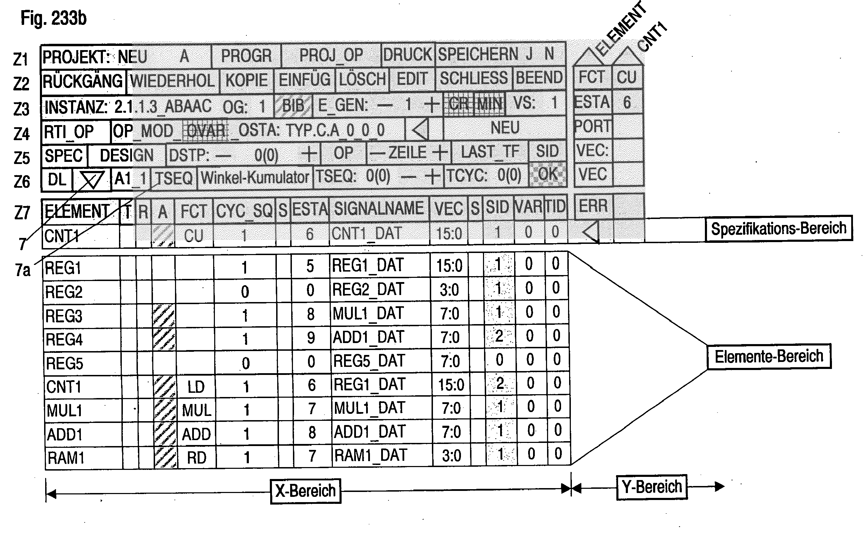

Entsprechend dem Beginn des Zyklus-Bereichs "A1", Fig.232a, wurde das Element "CNT1" für die erste "TSEQ" vom Elemente-Bereich in den Spezifikations-Bereich transferiert und die Funktion "FCT" von "LD" auf "CU" umgeschaltet, wie **Fig.233b** zeigt. Bei der Funktion Count-Up "CU" oder Count-Down "CD" eines Counters entfällt der Sender im Spezifikations-Bereich.

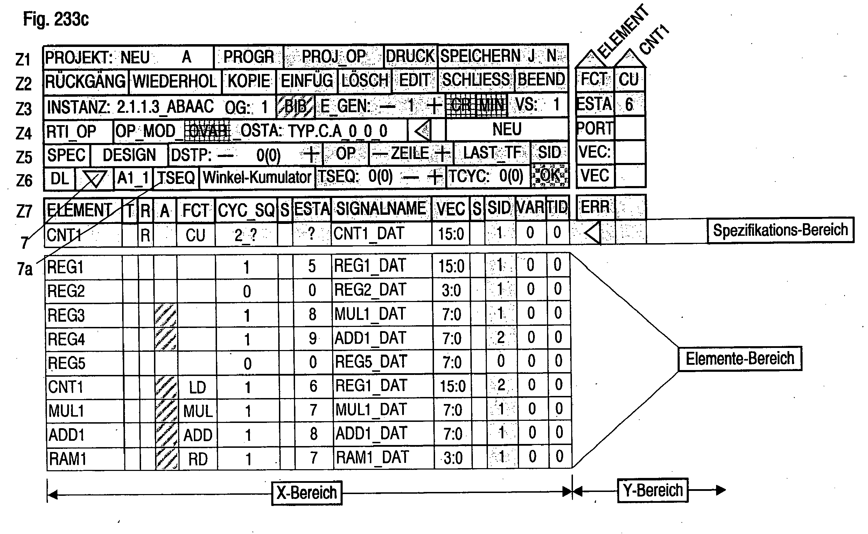

In **Fig.233c** wurde im Spezifikations-Bereich der erste Datenverarbeitungsstep "DVSTP" in Spalte "R" bestätigt und damit die CNT1-Schaltfläche in Spalte "A" ganzflächig markiert, sowie der Zyklus um Eins auf "CYC=2" erhöht. Ausserdem wird automatisch, nachdem die Anzahl der CNT1-Zählschritte noch nicht bekannt ist, in "Z7" die Schaltfläche "CYC_SQ" aktiviert, sowie in der CNT1-Zeile die Anzeigefelder in den Spalten "CYC_SQ" und "ESTA" markiert und an den Stellen "SQ" und "ESTA" ein Fragezeichens "?" gesetzt.

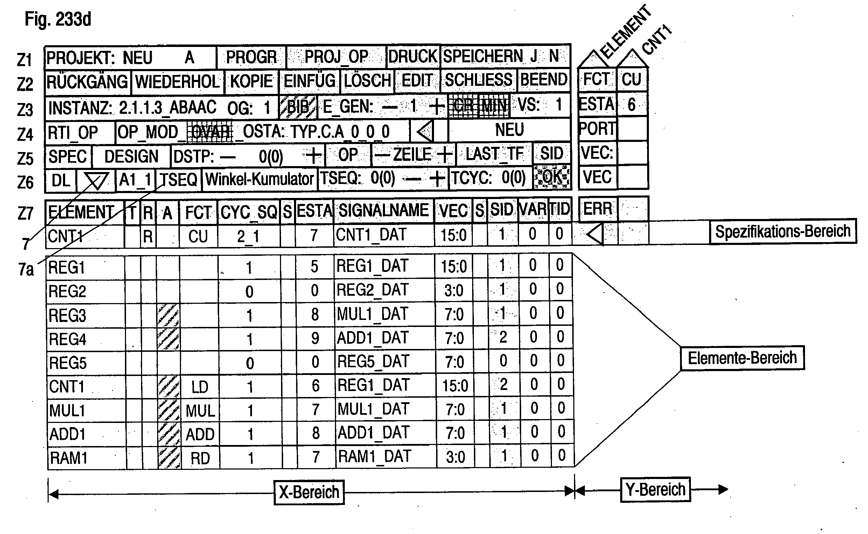

In **Fig.233d** wurde für CNT1 die Sequenz mit "SQ=1" manuell eingetragen und mit "OK" in "Z6" bestätigt. Dabei wird automatisch der zur "SQ" korrespondierende Wert für "ESTA" eingetragen und in "Z7" die Schaltfläche "CYC_SQ" deaktiviert, sowie in der CNT1-Zeile in den Spalten "CYC_SQ" und "ESTA" die Markierungen gelöscht. Allgemein kann an Stelle des "?" für die Sequenz "SQ" eine beliebige Anzahl von CNT-Zählschritten spezifiziert bzw. manuell eingetragen werden. Für den Fall, daß die Anzahl der CNT-Zählschritte keine feste Vorgabe erlauben, sondern von Kriterien "CR" abhängen, erfolgt an Stelle des "?" in der Spalte "CYC_SQ" kein manueller Eintrag, sondern es wird durch Doppelklick in die Schaltfläche "CR" in Zeile "Z3" ein CR-Bildschirm-Fenster geöffnet.

Im CR-Bildschirm-Fenster, nicht dargestellt, wird für die CNT1-Sequenz ein Kriterium "CR" definiert das, wie bekannt, aus entsprechenden Ereignis-Koinzidenzen besteht. Im CR-Bildschirm-Fenster werden alle für eine RTI-Spezifikation erforderlichen Kriterien "CR" definiert und verwaltet. Hierfür gibt es zwei CR-Verwaltungsgruppen. In der CR-Verwaltungsgruppe1 werden Kriterien für Zählsequenzen von Countern im "RTI-Allgemein-Bereich", nicht in RTI-Zyklus-Bereichen, geführt. Die CR-Verwaltungsgruppe1 ist repräsentiert durch den "RTI-Namen", RTI-Operationsgruppe "OG", RTI-Operation "OP_MOD_OVAR", "RTI-Allgemein-Bereich", "Counter-Elemente-Nummer" und Counter-Zyklus "CYC" für den die Sequenz "SQ" durch ein Kriterium "CR" definiert wird bzw. wurde. In der CR-Verwaltungsgruppe2 werden ausschließlich Kriterien für Zählsequenzen von Countern in "RTI-Zyklus-Bereichen", nicht im RTI-Allgemein-Bereich, geführt. Die CR-Verwaltungsgruppe2 ist repräsentiert durch den "RTI-Namen", RTI-Operationsgruppe "OG", RTI-Operation "OP_MOD_OVAR", "RTI-Zyklus-Bereich_Operations-Zyklus", "Counter-Elemente-Nummer" und Counter-Zyklus "CYC" für den die Sequenz "SQ" durch ein Kriterium "CR" definiert wird bzw. wurde.

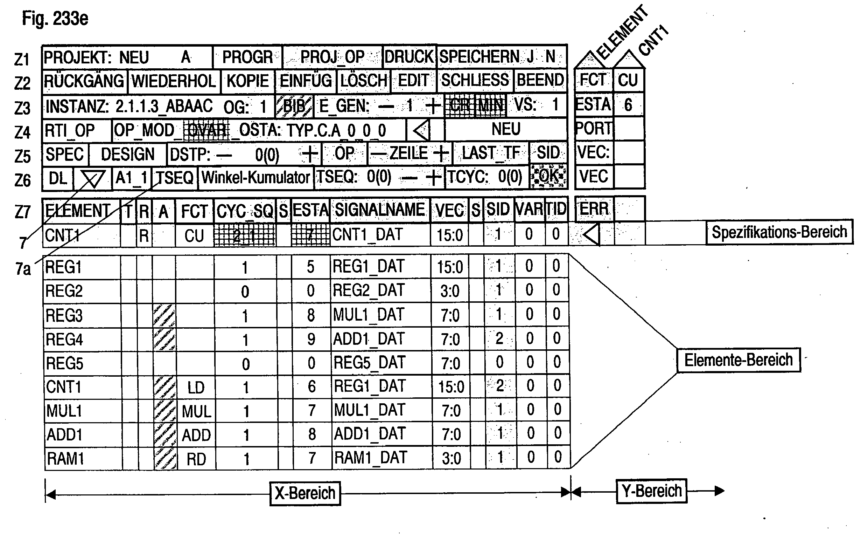

Im Beispiel von Fig.233d ergibt sich für die CR-Verwaltungsgruppe2, RTI-Name: "ABAAC", RTI-Operationsgruppe: "OG1", RTI-Operation OP_MOD_OVAR: "TYP.C.A_0_0", RTI-Zyklus-Bereich_Operations-Zyklus: "A1_1", Counter-Elemente-Nummer: "CNT1", Counter-Zyklus: "CYC2". Wie später gezeigt wird, kann im RTI-Zyklus-Bereich auch je ein Kriterium "CR" für das Zyklus-Ende "END", für den Zyklus-Stop "STOP" und für Zyklus-Go "GO" definiert werden. Im CR-Bildschirm-Fenster werden für jedes "CR", zusätzlich zu den Ereignis-Koinzidenzen, Werte für die Minimal-Sequenz und Maximal-Sequenz festgelegt, die im "RTI-OP-BS" alternativ angezeigt werden und den ESTA-Wert definieren. Nach Bestätigung der CR-Eintragungen und Schliessen des CR-Bildschirm-Fensters erfolgt der Wechsel zum "RTI-OP-BS" mit automatischer Eintragung der Minimalwerte für "SQ" und "ESTA", wie beispielsweise für "CNT1" mit "SQ=1" und "ESTA=7" in **Fig.233e** dargestellt. Dabei werden die Minimalwerte in den Spalten "CYC_SQ" und "ESTA" auf kariertem Hintergrund abgebildet.

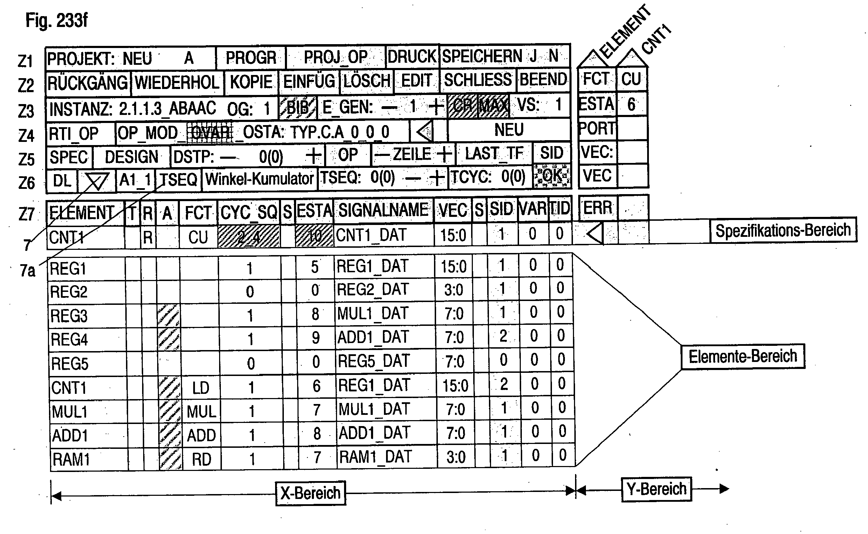

Durch Klick in die Schaltfläche "MIN" auf kariertem Hintergrund in "Z3", wechselt diese Schaltfläche nach "MAX" auf schraffiertem Hintergrund und es wird in der CNT1-Zeile in den Spalten "CYC_SQ" und "ESTA" der Maximal-Wert auf schraffiertem Hintergrund angezeigt, im Beispiel ist das "SQ=4" und "ESTA=10", wie **Fig.233f** zeigt. Einheitlich mit "MAX" besitzt auch die Schaltfläche "CR" in "Z3" einen schraffierten Hintergrund. Mit Klick in die Schaltfläche "MAX" in "Z3" wird auf "MIN", Fig.233e, mit kariertem Hintergrund umgeschaltet. Damit wechselt auch "CR" in "Z3" vom schraffierten zum karierten Hintergrund.

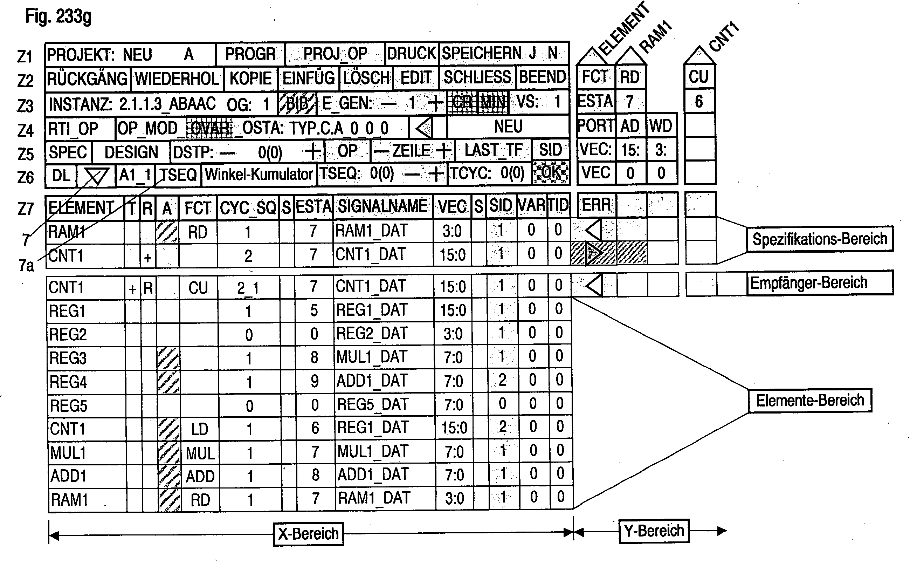

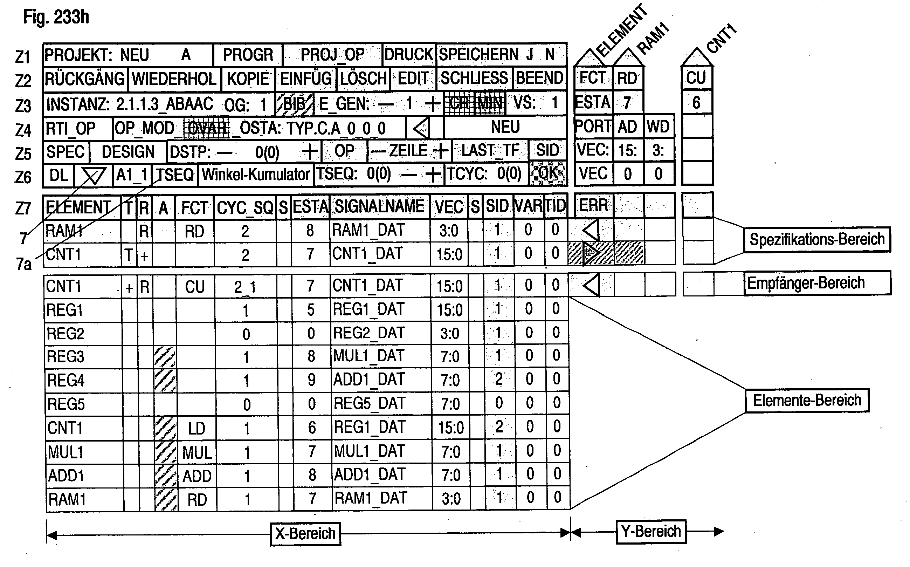

In **Fig.233g** wurde die zweite "TSEQ" mit dem Empfänger "RAM1" in Funktion "RD" und dem Sender "CNT1" mit der RAM1-Adresse spezifiziert und in **Fig.233h** in Spalte "R" bestätigt. Hierbei wurde für "RAM1" ein RAM-Typ verwendet, der nur einen Lesedaten-Stream besitzt und deshalb kein Eintrag für die Sequenz "SQ" in Spalte "CYC_SQ" erforderlich ist. Allgemein gilt, wird ein RAM-Typ verwendet, der mehr als einen Lesedaten-Stream besitzt, wird automatisch in Spalte "CYC_SQ" das Lesedaten-Streaming "SQ=0:n-1(n)" angezeigt. "n" steht für zwei und mehr Lesedaten-Streams.

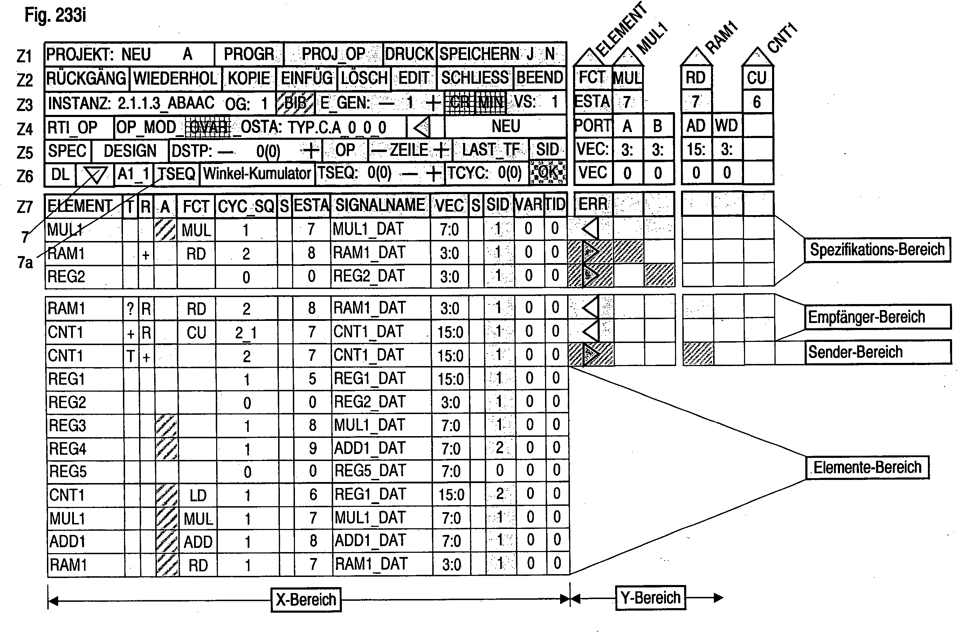

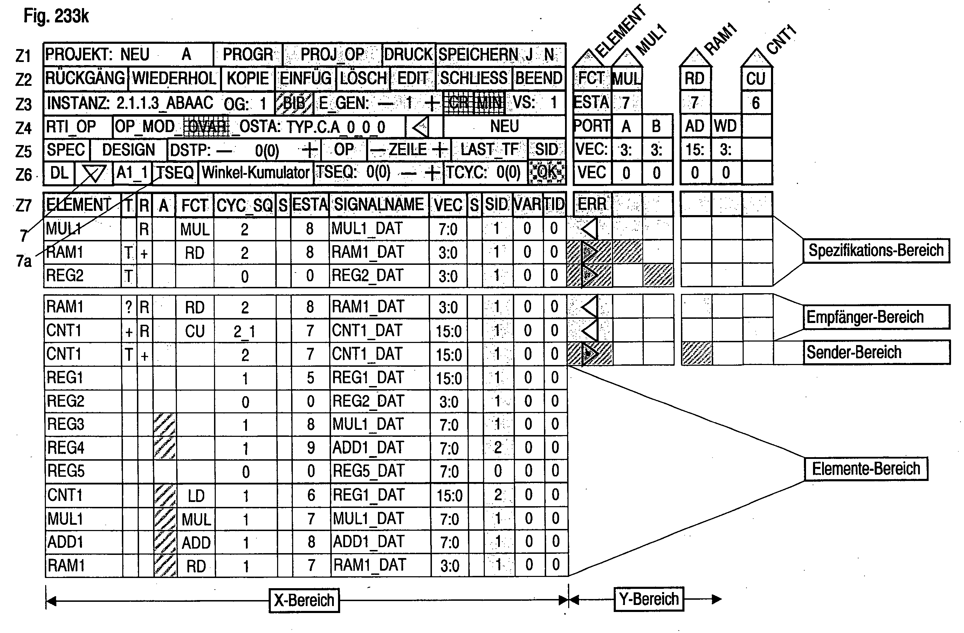

Nach dem Transfer von "RAM1" vom Spezifikations-Bereich in den Empfänger-Bereich, **Fig.233i****,** wird automatisch in Spalte "T" ein "?" gesetzt, das kennzeichnet, daß die Lesedaten von "RAM1" noch im aktuellen Designstep "0" an einen Empfänger transferiert werden müssen. Ausserdem wird in Fig.233i die dritte "TSEQ" mit dem Empfänger "MUL1" und den Sendern "RAM1" und "REG2" spezifiziert und in **Fig.233k** in Spalte "R" bestätigt.

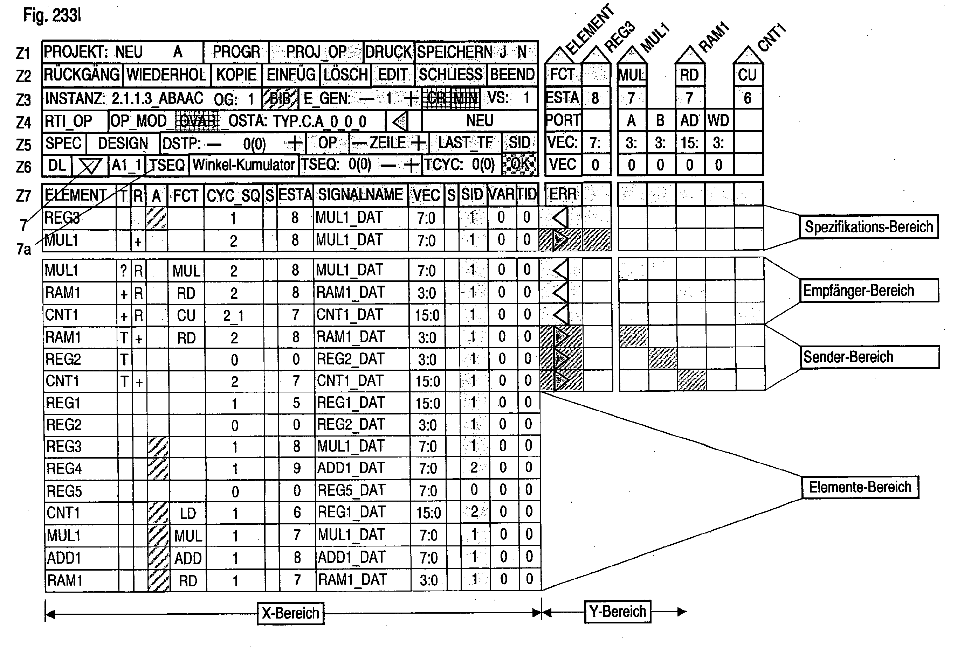

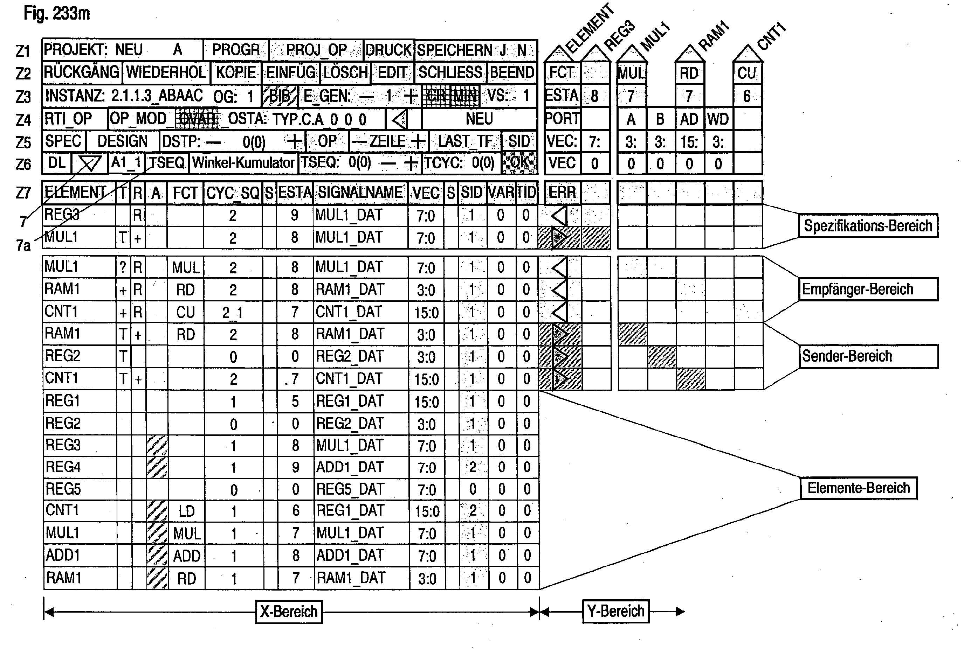

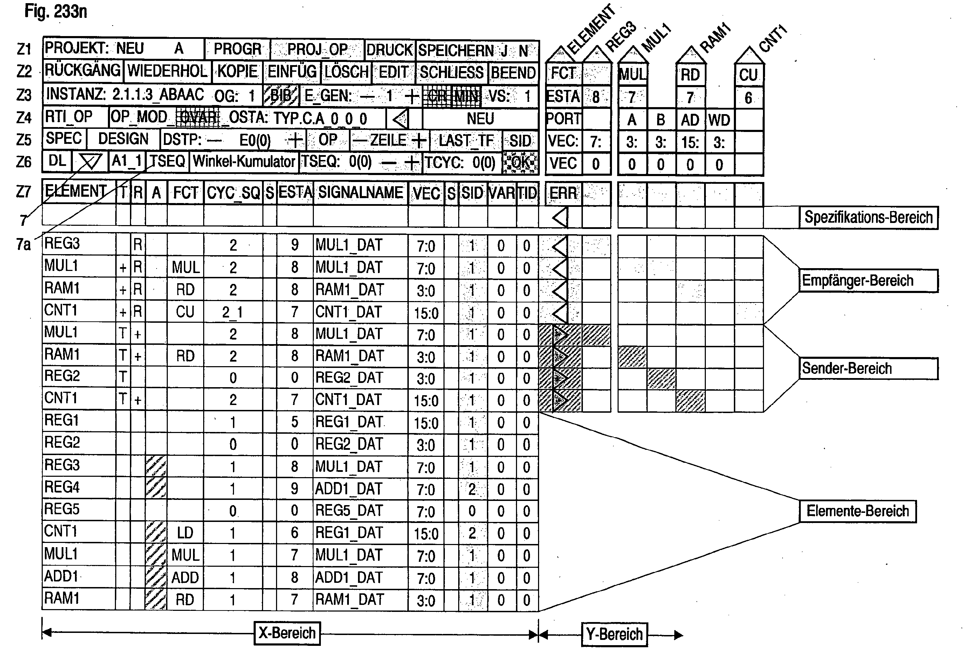

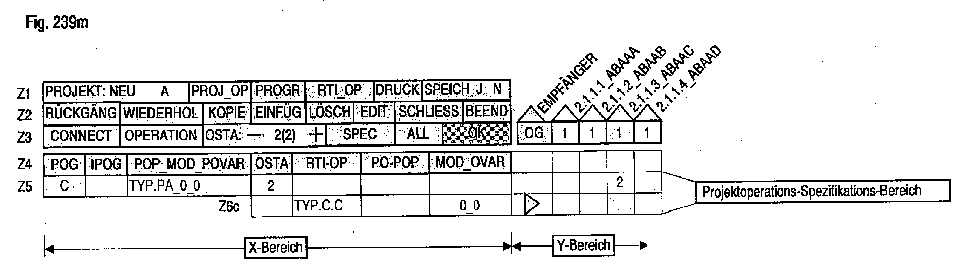

Nach dem Transfer von "MUL1" vom Spezifikations-Bereich in den Empfänger-Bereich, **Fig**.**233l**, wird automatisch in Spalte "T" ein "?" gesetzt, das kennzeichnet, daß die MUL1-Daten noch im aktuellen Designstep "0" an einen Empfänger transferiert werden müssen. Durch den Transfer des Senders "RAM1" vom Spezifikations-Bereich, Fig.233k, in den Sender-Bereich, Fig.233l, wird für "RAM1" im Empfänger-Bereich in Spalte "T" das "?" automatisch gelöscht und durch ein "+" ersetzt, das kennzeichnet, daß "RAM1" seine Lesedaten zu einem Empfänger, im Beispiel zum "MUL1", transferiert hat. Ausserdem wird in Fig.233l die vierte "TSEQ" mit dem Empfänger "REG3" und dem Sender "MUL1" spezifiziert und in **Fig.233m** in Spalte "R" bestätigt. Nach dem Transfer von "REG3" vom Spezifikations-Bereich in den Empfänger-Bereich bzw. "MUL1" vom Spezifikations-Bereich in den Sender-Bereich, **Fig.233n****,** wird für "MUL1" automatisch im Empfänger-Bereich in Spalte "T" das "?", Fig239m, durch ein "+" ersetzt, das kennzeichnet, daß "MUL1" seine Daten zu einem Empfänger, im Beispiel zum "REG3", transferiert hat. Ausserdem wurde durch Klick in die Schaltfläche "OK" in Zeile "Z6" der Designstep "0", mit "DSTP:E0(0)" in Zeile "Z5", beendet.

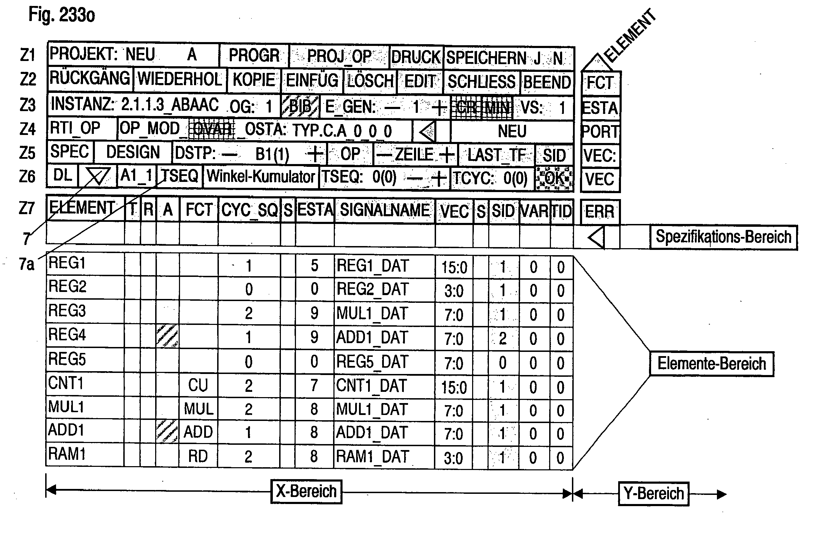

Mit nochmaligem Klick in die Schaltfläche "OK" in "Z6" wird der Designstep-Beginn "DSTP:B1(1)" mit den Werten der Spalten "CYC_SQ" und "ESTA" des Elemente-Bereichs dargestellt, wie **Fig.233o** zeigt. Ausserdem sind die Elemente "REG3", "CNT1", "MUL1" und "RAM1" durch die Markierung in Spalte "A" gekennzeichnet, daß die TSEQ-Spezifizierung im vorangegangenen Designstep "0" durchgeführt wurde.

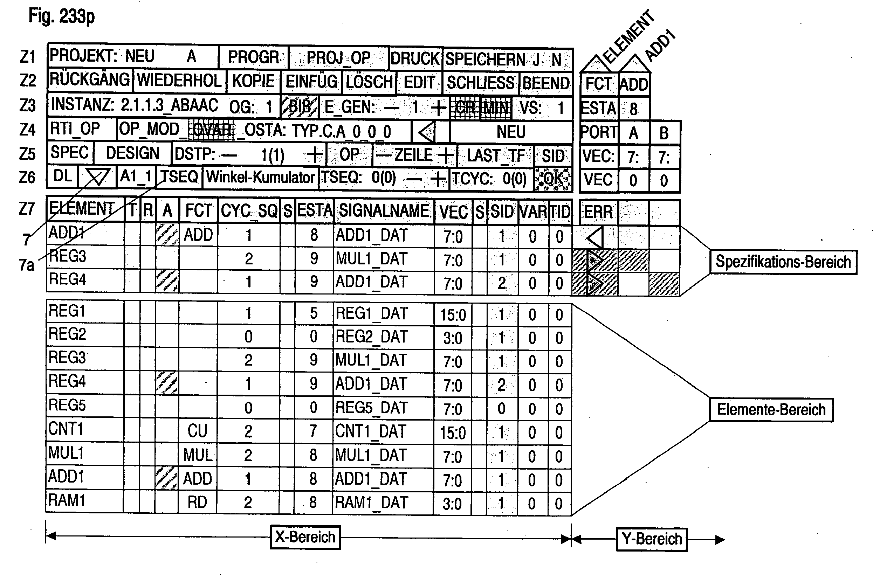

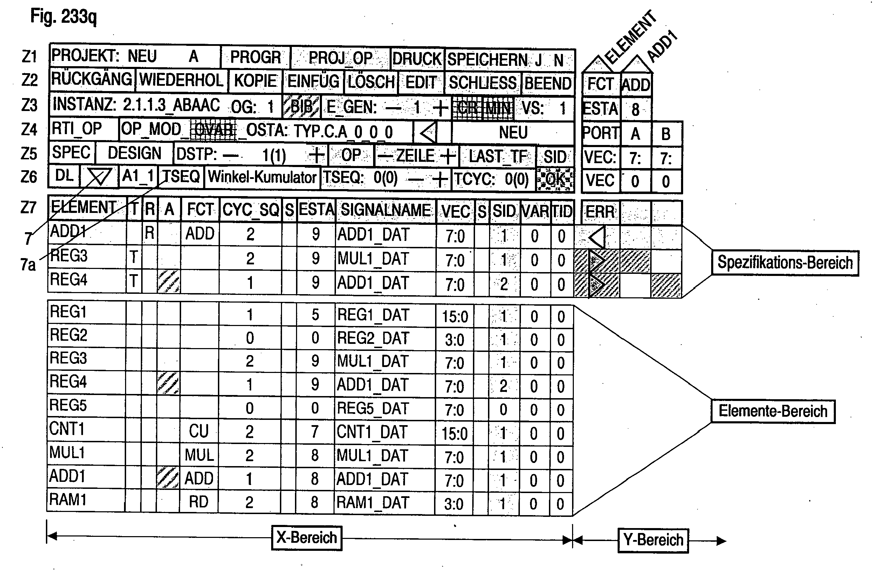

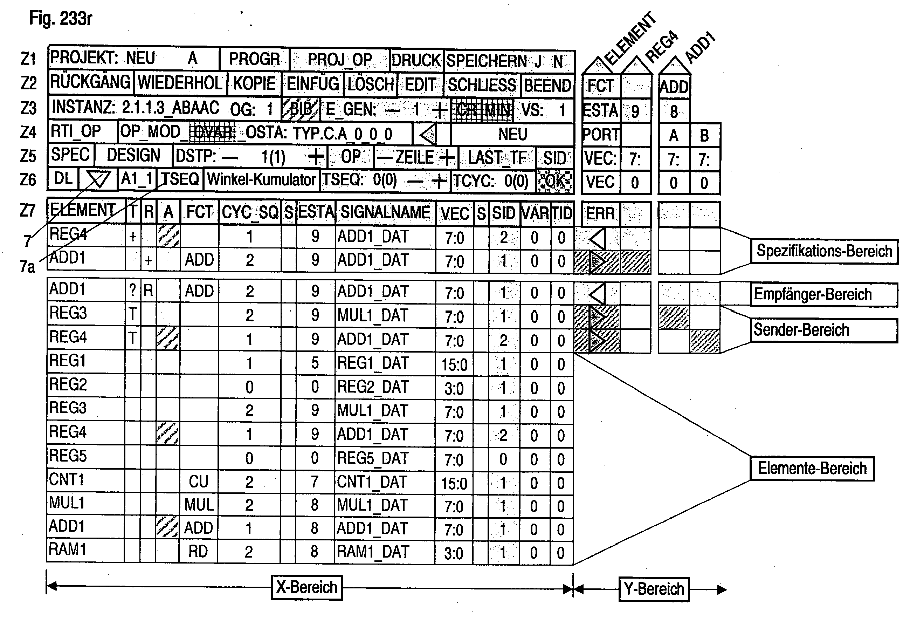

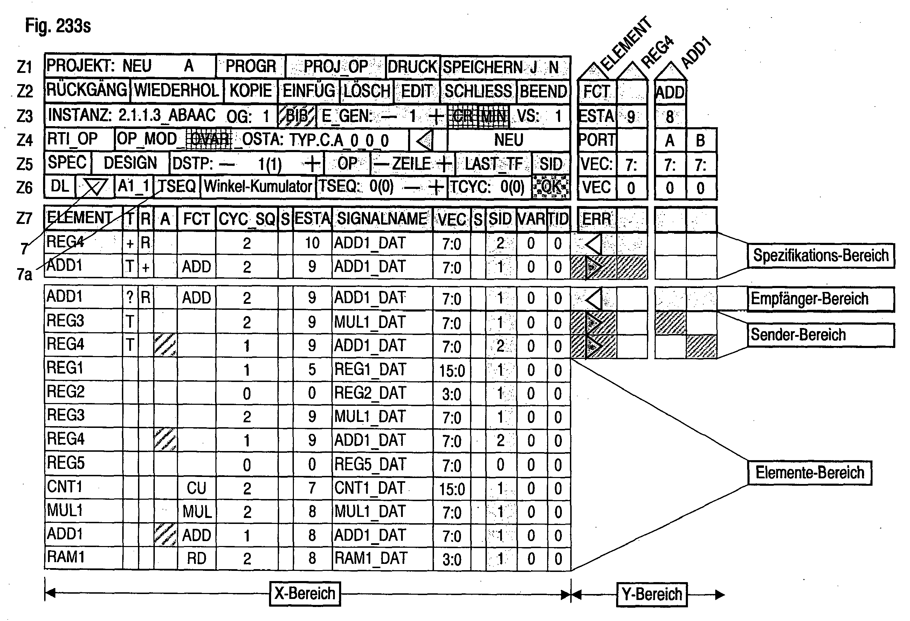

In **Fig.233p** wird die fünfte "TSEQ" mit Empfänger "ADD1" und den Sendern "REG3" und "REG4" spezifiziert und in **Fig.233q** in Spalte "R" bestätigt. Nach dem Transfer von "ADD1" vom Spezifikations-Bereich, Fig.233q, in den Empfänger-Bereich, **Fig.233r****,** wird automatisch in Spalte "T" ein "?" gesetzt, das kennzeichnet, daß die ADD1-Daten noch im aktuellen Designstep "1" an einen Empfänger transferiert werden müssen. Ausserdem ist in Fig.233r die sechste und letzte "TSEQ" mit Empfänger "REG4" und Sender "ADD1" spezifiziert und in **Fig.233s** in Spalte "R" bestätigt.

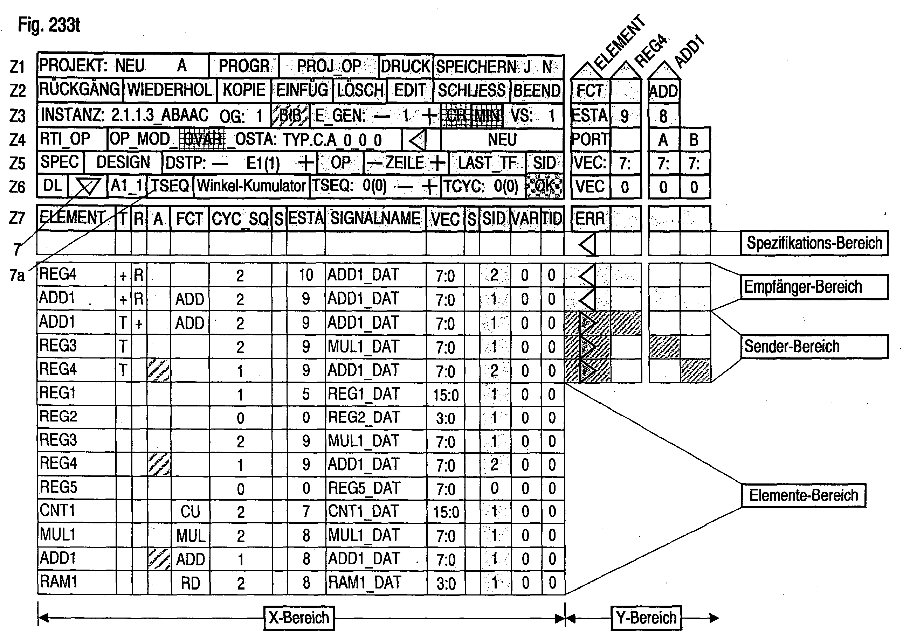

**Fig.233t** zeigt "REG4" im Empfänger-Bereich und "ADD1" im Sender-Bereich nach dem Transfer aus dem Spezifikations-Bereich von Fig.233s. Durch den Transfer des Senders "ADD1" vom Spezifikations-Bereich, Fig.233s, in den Sender-Bereich, Fig.233t, wird für "ADD1" im Empfänger-Bereich in Spalte "T" das "?" automatisch gelöscht und durch ein "+" ersetzt, das kennzeichnet, daß "ADD1" seine Daten zu einem Empfänger, im Beispiel zum "REG4", transferiert hat. Ausserdem wurde durch Klick in die Schaltfläche "OK" in "Z6" der Designstep "1", mit "DSTP:E1(1)" in Zeile "Z5", beendet.

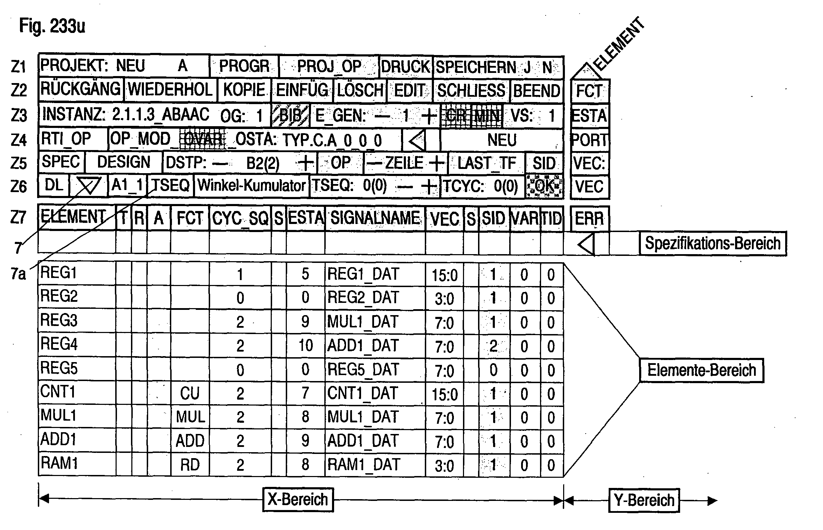

Mit nochmaligem Klick in die Schaltfläche "OK" in Zeile "Z6" wird der Beginn des Designstep "2", mit "DSTP:B2(2)" in "Z5", mit den Werten der Spalten "CYC_SQ" und "ESTA" des Elemente-Bereichs dargestellt, wie **Fig.233u** zeigt. Darin sind abschließend für die TSEQ-Spezifizierung alle Elemente des Zyklus-Bereichs "A1" durch die Markierung in Spalte "A" gekennzeichnet. Wie bei der RTI-Spezifizierung der Nicht-Zyklus-Bereiche können bei der RTI-Spezifizierung der Zyklus-Bereiche die Designsteps durch Klicks in die Schaltfläche DSTP"-" in "Z5" rückwärts von "B2(2)" nach "E1(2)", nach "B1(2)2, nach "E0(2)" und nach "B0(2)" gezählt bzw. angezeigt werden. Mit Klicks in die Schaltfläche DSTP"+" in "Z5" werden die Designsteps in umgekehrter Richtung gezählt bzw. angezeigt. Bei einer TSEQ-Spezifizierung eines Zyklus-Bereichs ist in Zeile "Z5" die Schaltfläche "OP" deaktiviert, in Zeile "Z6" die Schaltfläche "Zyklus-Bereich mit zugehörigem Operations-Zyklus", im Beispiel "A1_1" aktiviert und die Schaltfläche "TSEQ" deaktiviert.

### Beschreibung zu Fig.234a-234y:

Nachdem die sechste und damit letzte Transfer-Sequenz "TSEQ6", mit Datenübernahme in "REG4", der Blockstruktur von Fig.232a spezifiziert wurde, wird die Schaltfläche "TSEQ" in Zeile "Z6" durch Klick aktiviert und damit der komplette Transfer für den ersten Transfer-Zyklus, mit Anzeigefläche "TCYC:1(1)" in Zeile "Z6", dargestellt, wie **Fig.234a** zeigt. Dabei ist die DSTP-Anzeigefläche in "Z5" und die Schaltfläche "TSEQ:" in "Z6" automatisch deaktiviert. Die Transfer-Reihenfolge ergibt sich wie folgt. Erste Transfer-Sequenz "TSEQ1": CNT1-CU mit einem Zählschritt, "TSEQ2": von CNT1 nach RAM1, "TSEQ3": von RAM1 und REG2 nach MUL1, "TSEQ4": von MUL1 nach REG3, "TSEQ5": von REG3 und REG4 nach ADD1, und "TSEQ6": von ADD1 nach REG4. In den Empfänger-Koordinatenfeldern werden automatisch die Transfer-Sequenz-Nummern, im Beispiel sind das die Nummern "1" bis "6", eingetragen. In Zyklus-Bereich-Strukturen, in denen jeweils mehrere Elemente parallel mit einer Transfer-Sequenz ihre Datenverarbeitung durchführen, erhalten jeweils diese Elemente als Empfänger in ihren Koordinatenfeldern gleiche Transfer-Sequenz-Nummern. Eine Alternative zur Darstellung der kompletten Transfer-Sequenzen, Fig.234a, für den ersten Transfer-Zyklus "TCYC:1(1)" ist die schrittweise Darstellung der Transfer-Sequenzen "TSEQ1", "TSEQ2", bis "TSEQ6". Hierzu wird die Schaltfläche "TSEQ:" in "Z6" durch Klick aktiviert und damit auf den Wert "TSEQ:1(6) gesetzt und es wird die erste "TSEQ" mit "CNT1" im Empfänger-Bereich angezeigt. Durch Klicks in die Schaltfläche "+" in Zeile "Z6" können dann schrittweise im Empfänger-/Sender-Bereich die Transfers für "TSEQ:2(6)", "TSEQ:3(6)" bis "TSEQ:6(6)" angezeigt werden. Mit Klicks in die Schaltfläche "-" in "Z6" ergibt sich die Anzeige der Transfers in umgekehrter Richtung. Sollen für die TSEQ-Spezifikation noch Änderungen oder/und Erweiterungen eingebracht werden, wird die Schaltfläche "TSEQ" neben "A1_1" in "Z6" durch Klick deaktiviert. Damit wird wieder der Spezifikationsmodus mit dem letzten Designstep, DSTP:B2(2), Fig.233u, angezeiingaktiver Schaltfläche "TSEQ" neben "A1_1", Fig.234a erfolgt mit Bestätigung durch "OK" in "Z6" der Wechsel zum Bildschirm "CYCLE-ARRAY-ÜBERSICHT", **Fig.234b****,** in dem automatisch in Spalte "TSEQ" in den Zeilen "Z5a" und "Z6a" die Anzahl der spezifizierten Transfer-Sequenzen mit "TSEQ=6" eingetragen wurde und die abgeschlossene TSEQ-Spezifikation durch die aktivierten Schaltflächen "SPEC" in "Z1" und "TSEQ" in "Z3" gekennzeichnet ist. Soll nochmal in den RTI-OP-BS zum TSEQ-Spezifikationsmodus gewechselt werden, Fig.233u, so erfolgt dies durch Klick in die Schaltfläche "SPEC" in "Z1" von Fig.234b.

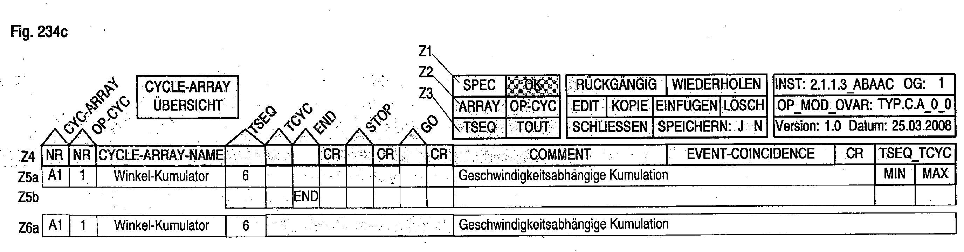

Durch Klick in die Schaltfläche "OK" in "Z1", Fig.234b, wird die Schaltfläche "TSEQ" in "Z3" deaktiviert und automatisch der Bildschirm für eine Spezifizierung des Zyklusendes "END" vorbereitet, wie **Fig.234c** zeigt. Hierbei ist die Schaltfläche "SPEC" in "Z1" aktiv und es wird in Zeile "Z4" die Schaltfläche "END" aktiviert. Ausserdem wird automatisch die Zeile "Z5b" generiert, in Spalte "END" der Spezifikations-Titel "END" eingetragen und die Schaltflächen in "Z5b" in den Spalten "TSEQ" und "TCYC" markiert bzw. für einen Spezifikations-Eintrag vorbereitet.

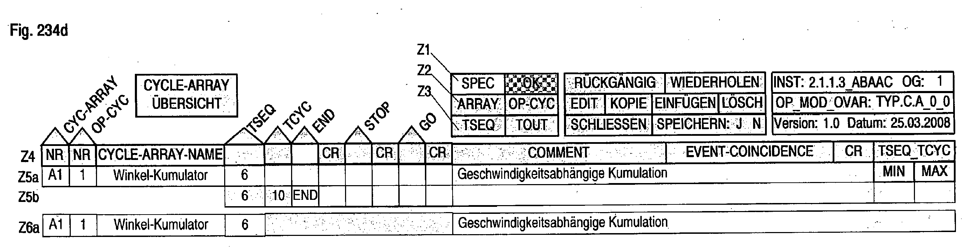

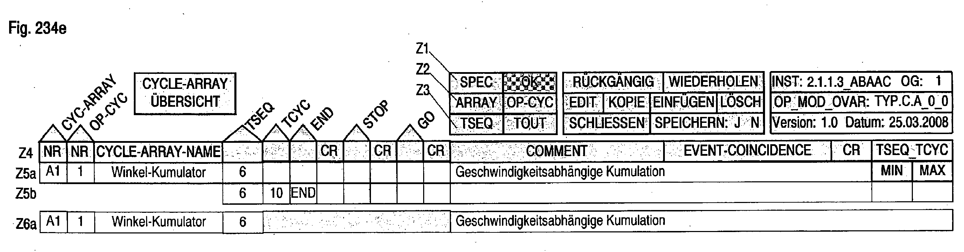

In **Fig.234d** wurde beispielsweise das Zyklus-Ende mit "TSEQ=6" und "TCYC=10" eingetragen. Mit Bestätigung durch "OK" in "Z1" wird die Schaltfläche "SPEC" in "Z1", sowie die Schaltfläche in Zeile "Z4" in Spalte "END" deaktiviert und die Einträge für das Zyklus-Ende in "Z5b" demarkiert und gültig, wie **Fig.234e** zeigt.

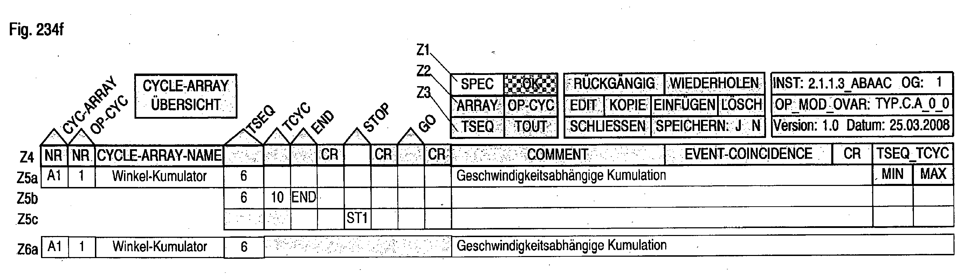

Soll vor dem Zyklus-Ende ein Zyklus-Stop "STOP" spezifiziert werden, dann wird in "Z4" die Schaltfläche "STOP" und in "Z1" die Schaltfläche "SPEC" durch Klick aktiviert, wie in **Fig.234f** dargestellt. Hierbei wird automatisch die Zeile "Z5c" generiert, in Spalte "STOP" der Spezifikations-Titel "ST1" für den ersten Stop eingetragen und die Schaltflächen in "Z5c" in den Spalten "TSEQ" und "TCYC" markiert bzw. für einen Spezifikations-Eintrag vorbereitet. Die STOP-Eintragungen werden automatisch durchnumeriert und beginnen mit "ST1".

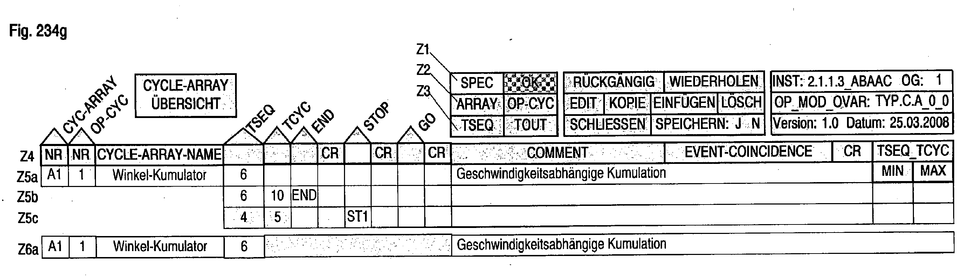

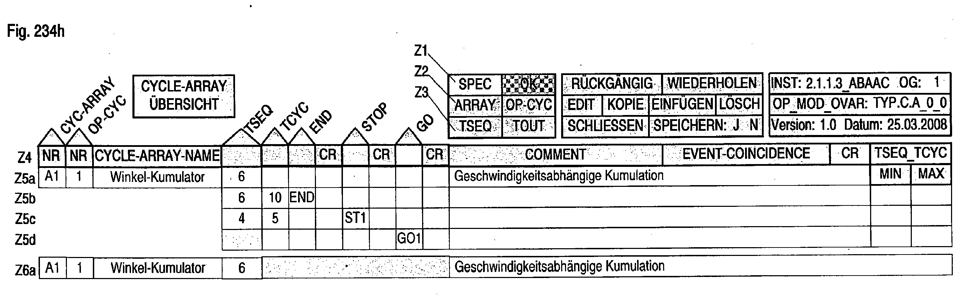

In **Fig.234g** wurden für "STOP" die Spezifikations-Werte in "Z5c" mit "TSEQ=4" und "TCYC=5" manuell eingetragen. Mit Bestätigung durch "OK" in "Z1" wird die Schaltfläche in "Z4" in Spalte "STOP" deaktiviert, die Spezifikations-Einträge für "ST1" in "Z5c" demarkiert bzw. gültig und es wird automatisch die Spezifizierung für die Zyklus-Fortführung mit "GO1", **Fig.234h****,** vorbereitet. Dabei wird in "Z4" die Schaltfläche "GO" aktiviert, die Zeile "Z5d" generiert, in Spalte "GO" der Spezifikations-Titel "GO1" eingetragen und die Schaltfläche in "Z5d" in Spalte "TSEQ" markiert bzw. für einen Spezifikations-Eintrag vorbereitet. Die Numerierung für "STOP" und nachfolgendem "GO" wird identisch ausgeführt, im Beispiel ist das "ST1" und "GO1".

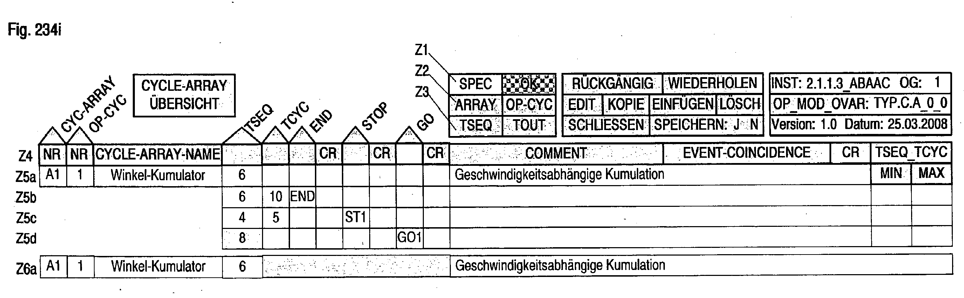

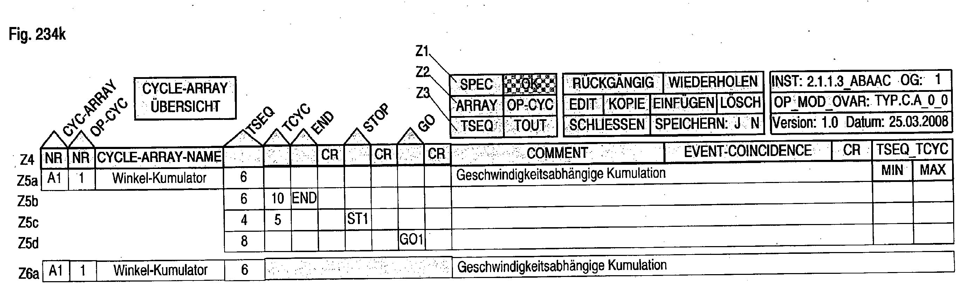

In **Fig.234i** wurde für "GO1" der Spezifikations-Wert in "Z5d" mit "TSEQ=8" manuell eingetragen. Mit Bestätigung durch "OK" in "Z1" wird die Schaltfläche "SPEC" in "Z1", sowie die Schaltfläche in "Z4" in Spalte "GO" deaktiviert und der Spezifikations-Eintrag für "GO1" in "Z5d" demarkiert und gültig, wie **Fig.234k** zeigt. Der GO1-Eintrag mit "TSEQ=8" entspricht acht (8) Transfer-Sequenzen in Folge mit ausschließlich speichernden Elementen. Transfer-Sequenzen zwischen speichernden Elementen und kombinatorischen Elementen oder zwischen kombinatorischen Elementen untereinander kommen nicht in Betracht. In Fig.234k wurde der Eintrag von einem "STOP" bzw. "GO" realisiert. Die zusätzliche Generierung von "ST2" bzw. "GO2" und weiterer STOPs bzw. GOs erfolgt nach dem Bedienungs-Verfahren, wie für "ST1" bzw. "GO1" beschrieben, dabei werden automatisch die erforderlichen Z5-Zeilen generiert. Sollen Werte für "END" oder "STOP" oder "GO" geändert werden, dann wird in den Spalten "TSEQ" bzw. "TCYC" die Schaltfläche, in der eine Änderung eingetragen werden soll, durch Klick markiert und der neue Wert eingetragen und durch "OK" in "Z1" bestätigt. Soll eine STOP- bzw. GO-Zeile gelöscht werden, dann wird in Spalte "STOP" die Schaltfläche des zu löschenden ST-Eintrags durch Klick markiert und die Zeile durch nachfolgenden Klick in die Schaltfläche "LÖSCH" in "Z2" gelöscht. Dabei wird die zugehörige GO-Zeile automatisch mit gelöscht. Bei bestehenden mehrfachen STOP- bzw. GO-Zeilen erfolgt dabei automatisch die Anpassung der Numerierungs-Kontinuität.

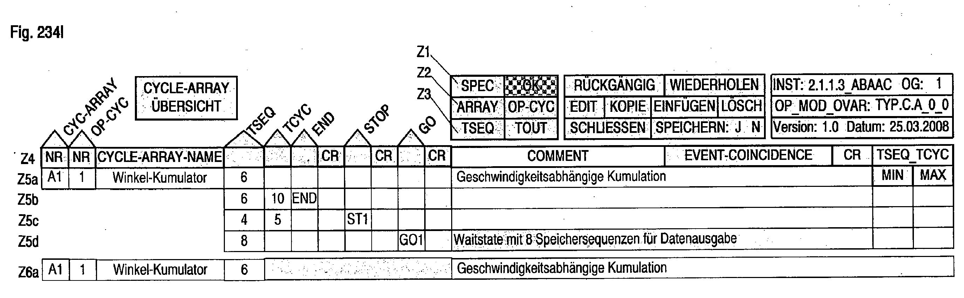

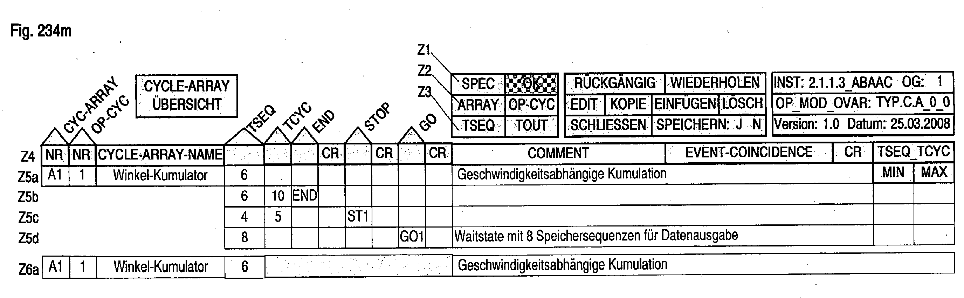

In **Fig.234l** wurde in "Z4" die Schaltfläche "COMMENT" durch Klick aktiviert. Zusätzlich wurde in Spalte "COMMENT" in "Z5d" durch Klick die Zeile markiert und ein beispielsweiser Kommentar eingetragen. Nach Bestätigung des Eintrags mit "OK" in "Z1" wird der Kommentar gültig und die Markierung in "Z5d" gelöscht, wie **Fig.234m** zeigt.

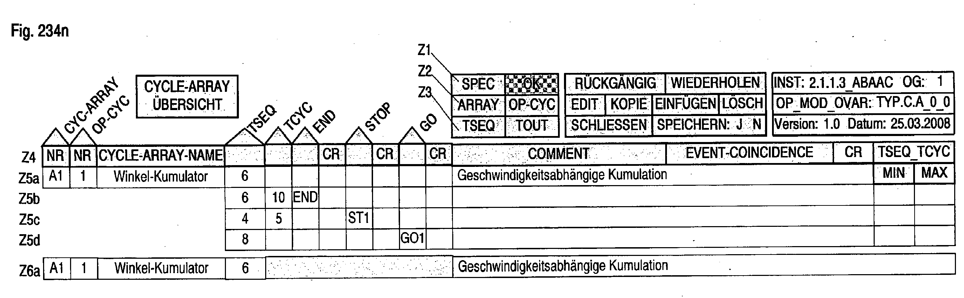

Mit Klick in die Schaltfläche "COMMENT" in "Z4" wird diese deaktiviert und der Kommentar in "Z5d" weggeschaltet, wie **Fig.234n** zeigt. Mit erneutem Klick in die Schaltfläche "COMMENT" in "Z4" wird diese wieder aktiviert und der Kommentar in "Z5d" wieder angezeigt. Auf diese Weise können Kommentare in alle Z5-Zeilen eingetragen werden. Für eine Kommentar-Änderung ist die Schaltfläche "COMMENT" in "Z4" zu aktivieren und zusätzlich in Spalte "COMMENT" die zu ändernde Z5-Zeile durch Klick zu markieren.

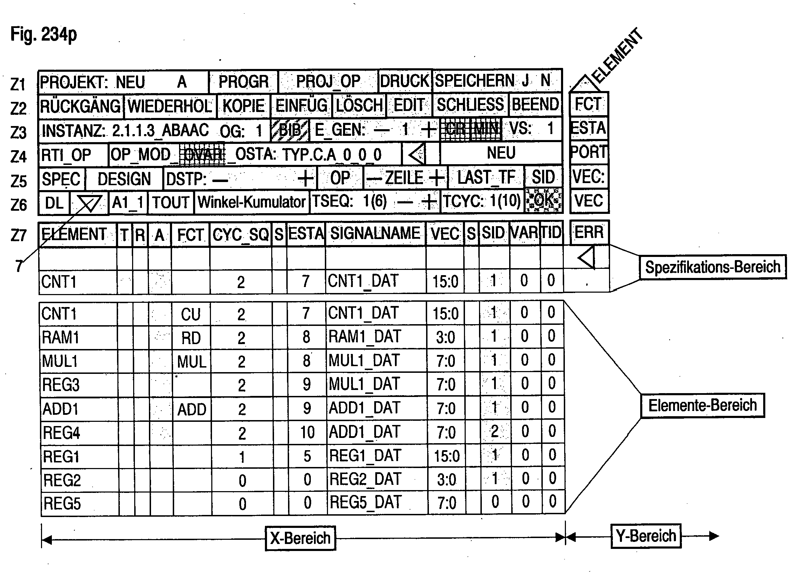

In **Fig.234o** wurde für eine Spezifizierung des Daten-Transfers vom Zyklus-Bereich "A1" nach aussen, die Schaltfläche Transfer-Out "TOUT" in "Z3" durch Klick aktiviert. Mit Klick in die Schaltfläche "SPEC" in "Z1" erfolgt die Umschaltung vom Bildschirm "CYCLE-ARRAY-ÜBERSICHT" in den "RTI-OP-BS", **Fig.234p****,** in dem die Spezifikations-Aufgabe mit der aktivierten Schaltfläche "TOUT" in "Z6" angezeigt wird. Dabei steht in "Z6" die Anzeige für die Transfersequenz auf "TSEQ:1(6)" und ist aktiviert, die für den Transfercyclus auf "TCYC:1(10)" und ist nicht aktiviert. Die Schaltflächen "TSEQ:" und "TCYC:" können alternativ durch Klick aktiviert bzw. deaktiviert werden. Der jeweils aktivierten Schaltfläche sind die daneben liegenden Schaltflächen "-" und "+" zugeordnet, mit denen die "TSEQ" oder der "TCYC" abwärts bzw. aufwärts gezählt werden kann. Beim Aufwärtszählen bzw. Abwärtszählen der "TSEQ" wird an den Übertragsstellen der "TCYC" um Eins erhöht bzw. um Eins erniedrigt. Die Elemente des Zyklus-Bereichs "A1" sind in Spalte "A" durch markierte Schaltflächen gekennzeichnet und im Elemente-Bereich von oben nach unten in der Reihenfolge ihrer Transfersequenz-Nummern angeordnet, beginnend mit "CNT1" für "TSEQ1", "RAM1" für "TSEQ2", bis zum Ende des Zyklus-Bereichs "A1" mit "REG4" für "TSEQ6". Für "TSEQ:1(6)" in "Z6" ist im Spezifikations-Bereich der TOUT-Sender "CNT1" angeordnet. Der Empfänger ausserhalb des Zyklus-Bereichs "A1" ist noch nicht ausgewählt, deshalb ist die Empfänger-Zeile oberhalb der Sender-Zeile im Spezifikations-Bereich noch leer.

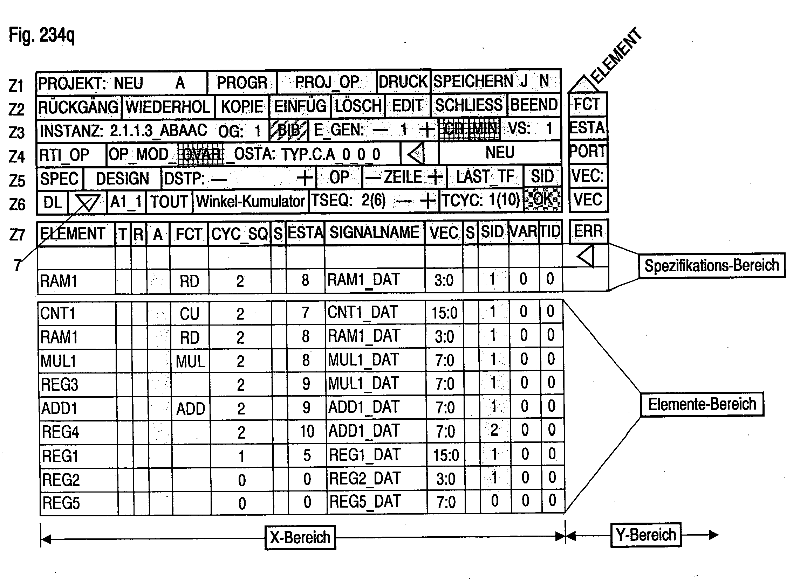

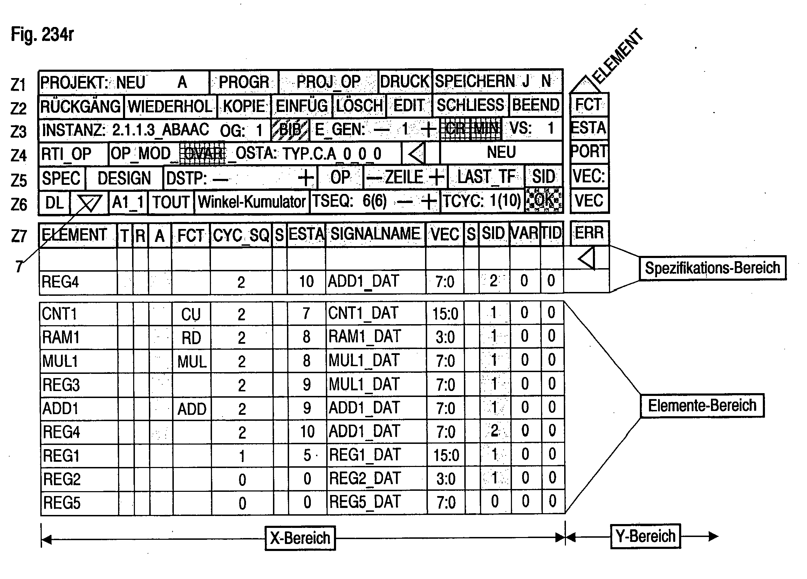

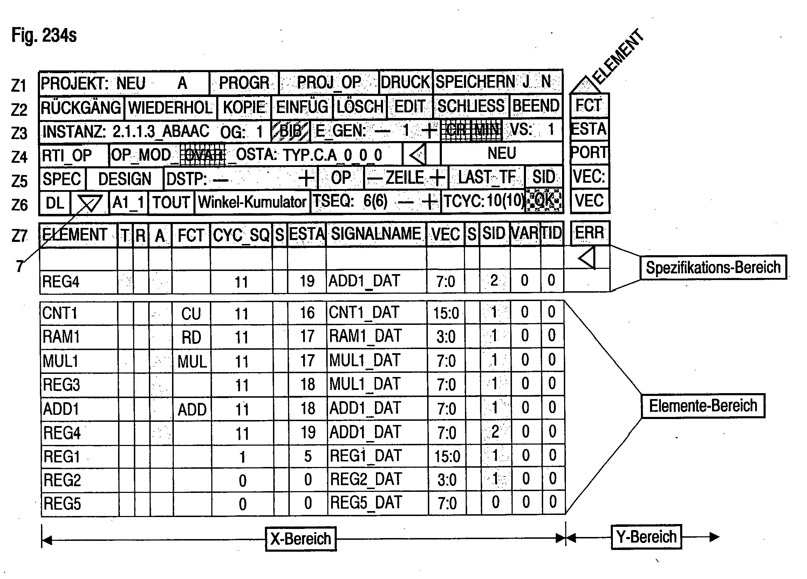

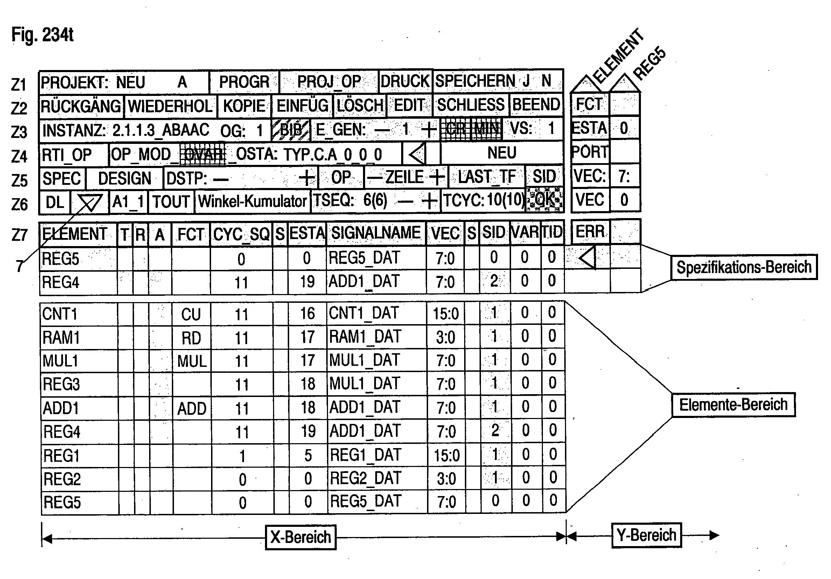

In **Fig.234q** wurde die Transfersequenz um Eins auf "TSEQ:2(6)" in "Z6" hochgezählt. Damit wird automatisch im Spezifikations-Bereich der Sender "RAM1", der die "TSEQ2" repräsentiert, angezeigt. In **Fig.234r** wurde die Transfersequenz auf "TSEQ6" hochgezählt und damit automatisch "REG4" als Sender in den Spezifikations-Bereich gebracht. Nach Aktivierung der Schaltfläche "TCYC:" in "Z6" wurde der Transfercyclus auf "TCYC:10(10)" hochgezählt, wie **Fig.234s** zeigt. Dabei wurden die Werte in Spalte "CYC_SQ" und "ESTA" automatisch angepaßt. Für den Transfer von "REG4" des Zyklus-Bereichs nach aussen wurde "REG5" als Empfänger in den Zyklus-Bereich transferiert, wie in **Fig.234t** dargestellt.

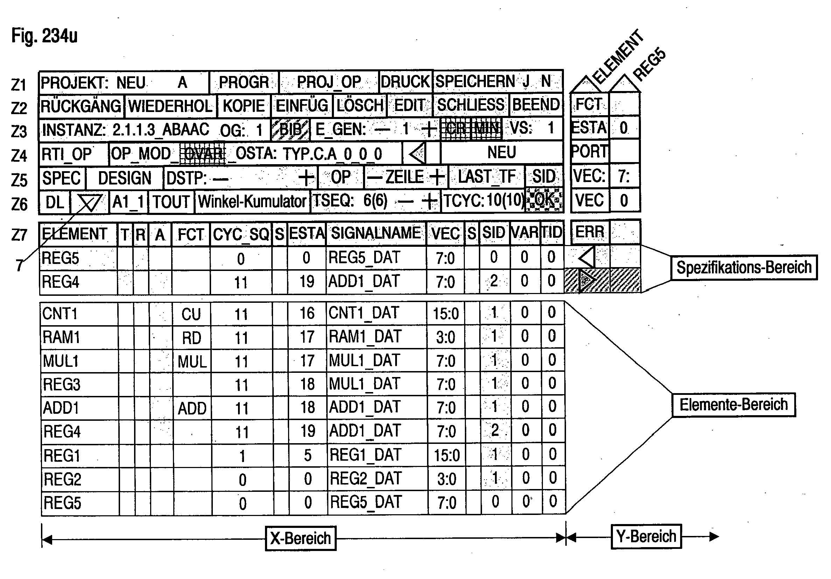

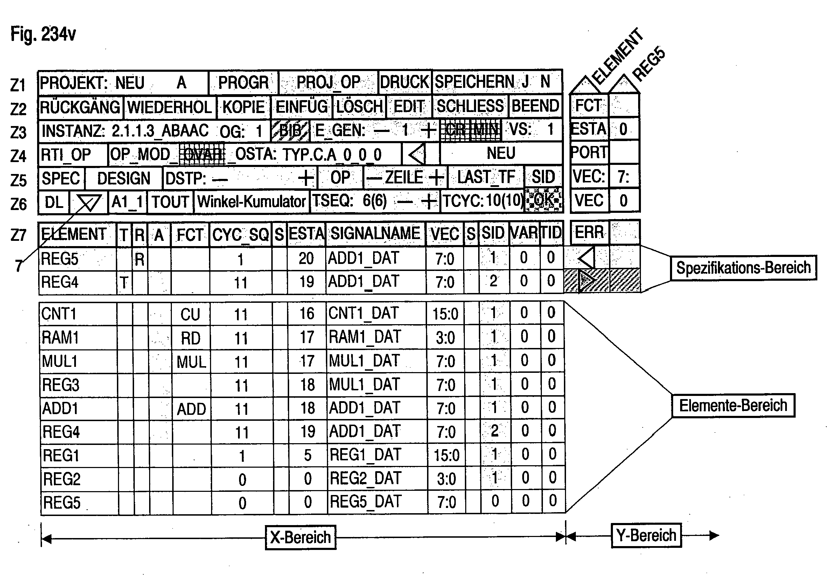

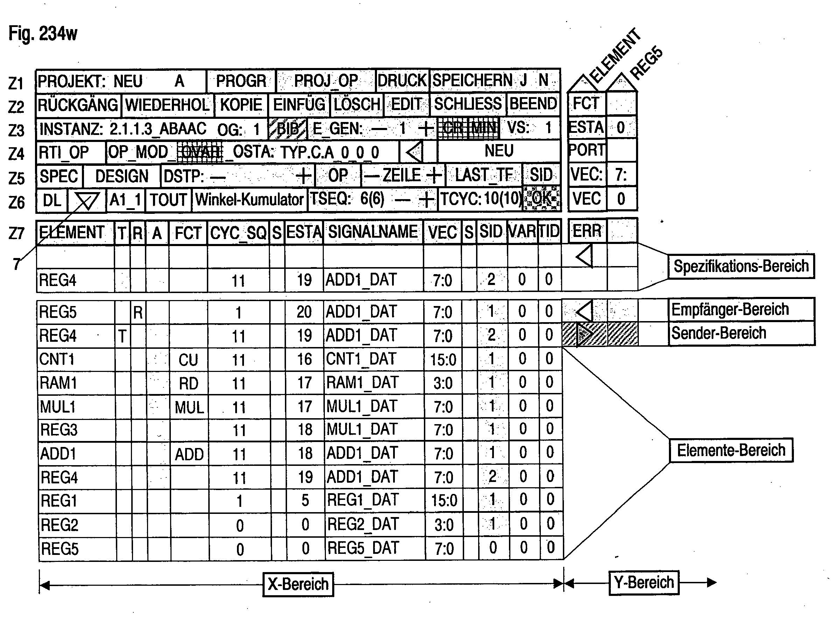

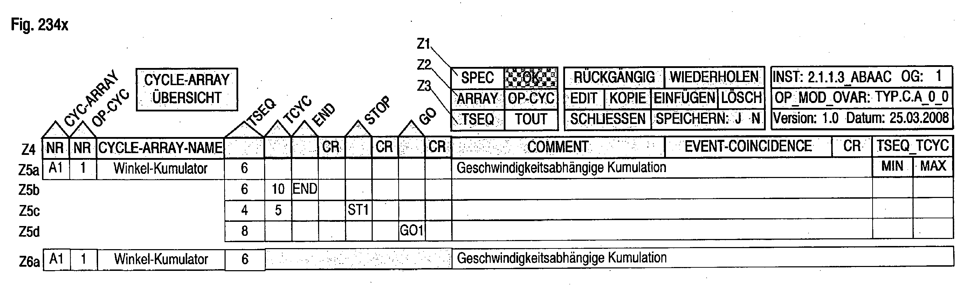

In **Fig.234u** wurde im Spezifikations-Bereich der Sender "REG4" dem Empfänger "REG5" zugewiesen und in **Fig.234v** bestätigt. **Fig.234w** zeigt den Empfänger "REG5" im Empfänger-Bereich und den Sender "REG4" im Sender-Bereich nach dem Transfer aus dem Spezifikations-Bereich. Dabei verbleibt der Sender "REG4" zusätzlich im Spezifikations-Bereich, entsprechend "TSEQ:6(6)" in "Z6", und kann beispielsweise einem weiteren Empfänger ausserhalb des Zyklus-Bereichs "A1" zugewiesen werden. In einer TOUT-Spezifikation können beliebig viele Daten-Transfers für einen oder mehrere TSEQ- und TCYC-Werte, vom Zyklus-Bereich nach aussen spezifiziert werden. Zur schnellen, schrittweisen Darstellung der Transfers wird durch Klick in die Schaltfläche "SPEC" in "Z5" diese Schaltfläche auf "SHOW" umgeschaltet. Damit wird automatisch der erste Transfer bzw. die ersten Transfers des niedrigsten TCYC- und TSEQ-Wertes im Empfänger-/Sender-Bereich dargestellt. Dabei werden in Zeile "Z6" die zugehörigen TCYC- und TSEQ-Werte angezeigt, die Schaltfläche "TSEQ:" ist aktiv, die von "TCYC:" ist passiv geschaltet. Durch Klick in die Schaltfläche "+" in "Z6" werden die TCYC-/TSEQ-Werte in "Z6" für den nächst folgenden Transfer bzw. die nächst folgenden Transfers erhöht und der Transfer bzw. die Transfers im Empfänger-/Sender-Bereich dargestellt. Mit einem nächsten Klick in die Schaltfläche "+" in "Z6" erfolgt die Darstellung des nächsten Transfers bzw. der nächsten Transfers, usw.. Mit Klicks in die Schaltfläche "-" in "Z6" kann die Transfer-Reihenfolge rückwärts angezeigt werden. Mit Klick in die Schaltfläche "OK" in "Z6", Fig.234w, erfolgt der Wechsel zum Bildschirm "CYCLE-ARRAY-ÜBERSICHT", in dem die Schaltflächen "SPEC" in "Z1" und "TOUT" in "Z3" aktiviert sind, wie **Fig.234x** zeigt.

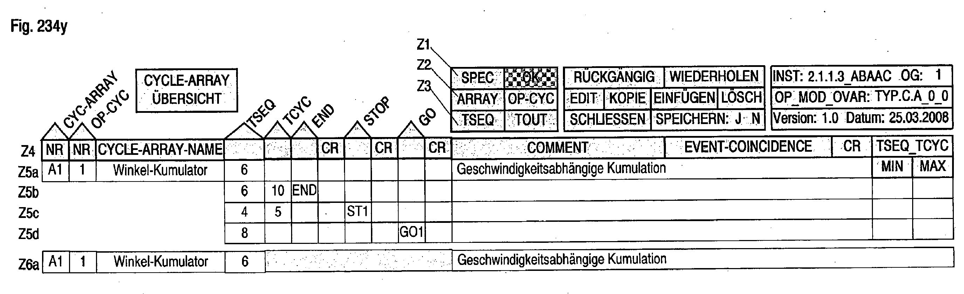

Nach Klick in die Schaltfläche "OK" in "Z1" sind die Schaltflächen "SPEC" und "TOUT" deaktiviert, wie in **Fig.234y** dargestellt. Sollen in der TOUT-Spezifizierung Erweiterungen oder/und Änderungen durchgeführt werden, dann erfolgt ein erneuter Wechsel von der "CYCLE-ARRAY-ÜBERSICHT" zum "RTI_OP_BS" durch Klicks in die Schaltflächen "TOUT" in "Z3" und "SPEC" in "Z1". Im vorliegenden Beispiel würde dann der "RTI-OP-BS" durch Fig.234w dargestellt werden.

### Beschreibung zu Fig.235a-235k:

Im Vorstehenden wurden Transfer-Ende "END", "STOP" und "GO" des Zyklus-Bereichs "A1" durch absolute Werte für "TSEQ" und "TCYC" spezifiziert. Alternativ hierzu können "END", "STOP" und "GO" auch über Kriterien "CR" spezifiziert werden. Mit Abschluß der Spezifizierung von "TSEQ" wird automatisch die Spezifizierung von "END" durch absolute Werte von "TSEQ" und "TCYC" vorbereitet, wie in Fig.234c dargestellt. Soll "END" durch Kriterien "CR" spezifiziert werden, wird in Zeile "Z4" die Schaltfläche "CR" von "END" durch Klick aktiviert. Hierdurch wird in "Z4" die Schaltfläche "EVENT-COINCIDENCE" aktiviert, in "Z5b" die Schaltflächen in den Spalten "TSEQ", "TCYC" demarkiert und der Eintrag "END" von Spalte "END" in die Spalte "CR" von "END" verschoben, wie **Fig.235a** zeigt. Ausserdem wird in "Z5b" in Spalte "EVENT-COINCIDENCE" die Schaltfläche markiert und "CR=" eingetragen, sowie die Schaltflächen in den Spalten "MIN" und "MAX" markiert. Durch Doppelklick in die Schaltfläche "CR", neben "EVENT-COINCIDENCE", in Zeile "Z4" wird ein CR-Bildschirm-Fenster geöffnet. Im CR-Bildschirm-Fenster, nicht dargestellt, wird für das Zyklus-Ende "END" ein Kriterium "CR" definiert das, wie bekannt, aus entsprechenden Ereignis-Koinzidenzen "EVENT-COINCIDENCE" besteht. Wie bereits unter Fig.233e bzw. Fig.233f beschrieben, erfolgt die CR-Spezifizierung für einen Zyklus-Bereich, im Beispiel für "A1", unter der CR-Verwaltungsgruppe2. Im CR-Bildschirm-Fenster, nicht dargestellt, werden bei der Spezifizierung von CR-Ereignis-Koinzidenzen für einen Zyklus-Bereich, zusätzlich Minimal-Werte und Maximal-Werte für "TSEQ_TCYC" festgelegt.

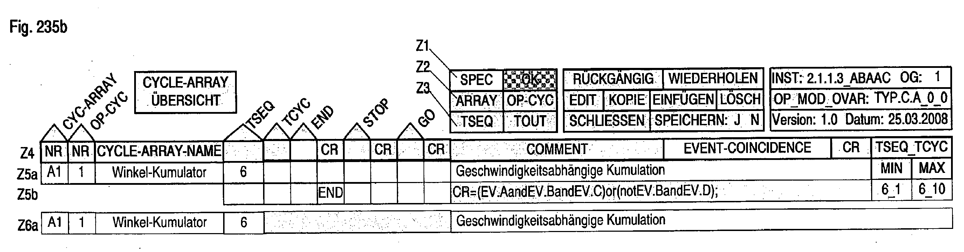

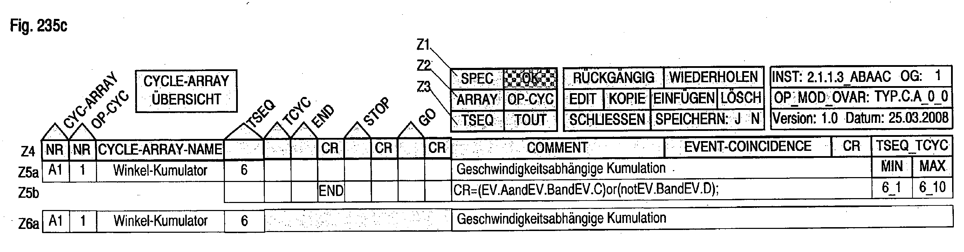

Nach Bestätigung der CR-Ereignis-Koinzidenzen und der Minimal-/Maximal-Werte für "TSEQ_TCYC" erfolgt mit dem Schliessen des CR-Bildschirm-Fensters der Wechsel zum "RTI-OP-BS", wie in **Fig.235b** dargestellt. Hierin ist in Zeile "Z5b" für das Zyklus-Ende ein beispielweises Kriterium "CR" mit den Ereignis-Koinzidenzen "(Event.A und Event.B und Event.C) oder (Nicht-Event.B und Event.D);" spezifiziert und die Grenzwerte für "TSEQ_TCYC" mit "MIN=6_1" und "MAX=6_10" festgelegt. Sollen noch Änderungen oder/und Erweiterungen ausgeführt werden, erfolgt nochmal ein Doppelklick in die Schaltfläche "CR", neben "EVENT-COINCIDENCE", in Zeile "Z4", und damit der Wechsel in das CR-Bildschirm-Fenster. Durch Klick in die Schaltfläche "OK" in "Z1", Fig.235b, wird die Spezifikation des Zyklus-Endes bestätigt, die Schaltflächen "SPEC" in "Z1", "END" mit "CR" und "EVENT-COINCIDENCE" in "Z4" deaktiviert, sowie in "Z5b" die Schaltflächen in den Spalten "EVENT-COINCIDENCE", "MIN" und "MAX" demarkiert, wie **Fig.235c** zeigt.

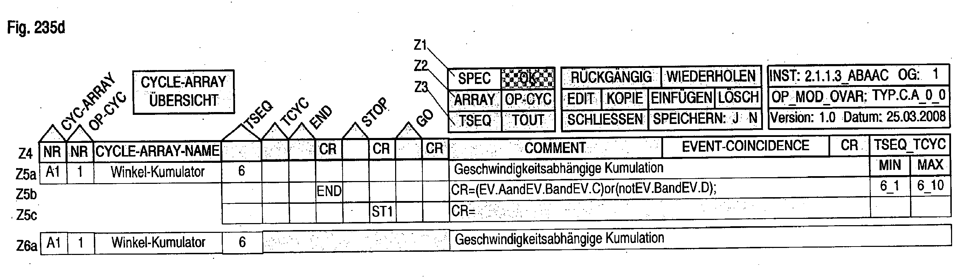

Die Vorbereitung für die Spezifizierung eines ersten Transfer-Stops "STOP" durch ein Kriterium "CR" zeigt **Fig.235d****.** Dabei werden durch Klick in die Schaltflächen "CR" von "STOP" in "Z4" und "SPEC" in "Z1", diese Schaltflächen aktiviert und automatisch die Schaltflächen in "Z4" für "STOP" und "EVENT-COINCIDENCE" mit aktiviert. Ausserdem wird die Zeile "Z5c" generiert und in dieser Zeile, in Spalte "CR" von "STOP" automatisch Stop1 "ST1" und "CR=" auf markiertem Hintergrund in Spalte "EVENT-COINCIDENCE" eingetragen, sowie die Schaltflächen in den Spalten "MIN" und "MAX" markiert. Durch Doppelklick in die Schaltfläche "CR", neben "EVENT-COINCIDENCE", in Zeile "Z4" wird das CR-Bildschirm-Fenster geöffnet und es kann für den Stop "ST1" ein Kriterium "CR" mit MIN-/MAX-Werten für "TSEQ_TCYC" spezifiziert und in die "CYCLE-ARRAY-ÜBERSICHT" übertragen und bestätigt werden.

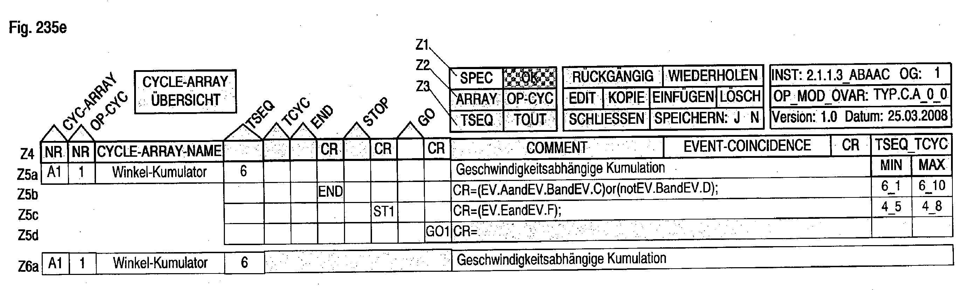

In **Fig.235e** wurde die Vorbereitung für die Spezifizierung eines ersten Transfer-GOs "GO1" durch ein Kriterium "CR" dargestellt. Die Vorbereitung ist identisch zu der von Stop "ST1", mit der Ausnahme, daß in Zeile "Z4" an Stelle der Schaltfläche "CR" von "STOP" die Schaltfläche "CR" von "GO" aktiviert und die Zeile "Z5d" generiert wird. Sind bei der Vorbereitung für die Spezifizierung von Transfer-STOP bzw. Transfer-GO durch ein Kriterium "CR" bereits absolute Werte für "TSEQ" und "TCYC" eingetragen, so werden diese, wie vorstehend bei Transfer-END dargestellt und beschrieben, automatisch gelöscht. Für Stop "ST1", Fig.235e, sind in Zeile "Z5c" für "CR" eine beispielsweise Ereignis-Koinzidenz und für "TSEQ_TCYC" beispielsweise MIN-/MAX-Werte eingetragen und bestätigt.

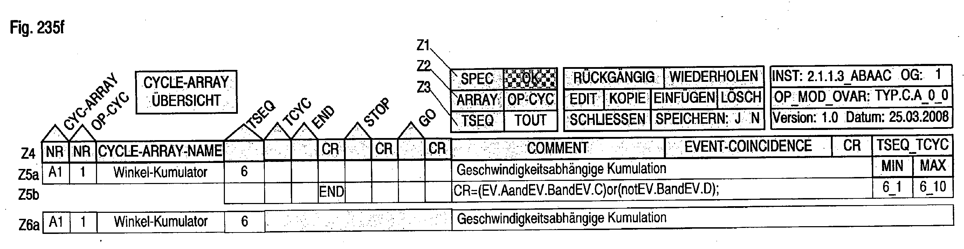

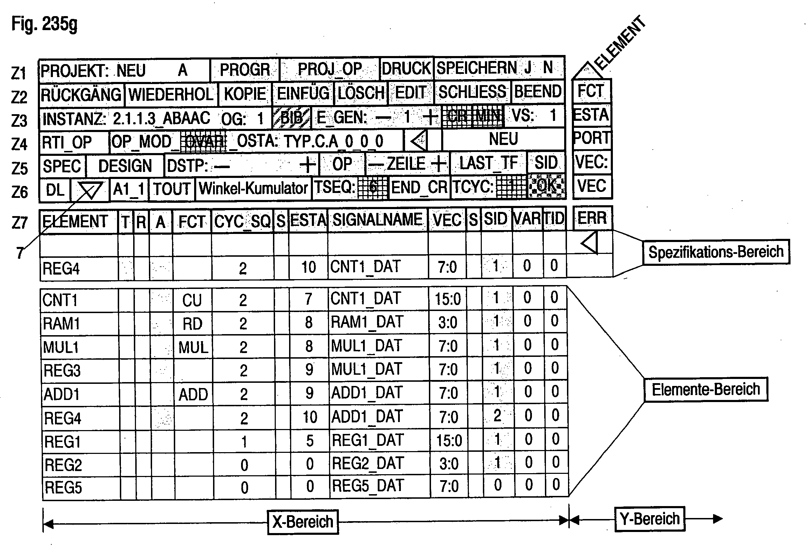

In **Fig.235f** ist die Spezifizierung "TOUT" für das Transfer-END vorbereitet. Dabei sind durch Klicks die Schaltflächen "TOUT" in "Z3" und "END" in "Z5b" diese aktiviert. Durch Klick in die Schaltfläche "SPEC" in "Z1" erfolgt der Wechsel zum RTI-OP-BS, wie **Fig.235g** zeigt. Darin werden die Schaltflächen in "Z3" für "CR" mit "MIN", beispielsweise auf kariertem Hintergrund, und in "Z6" mit "TOUT", "END_CR" und den Minimalwerten "TSEQ=6", "TCYC=1", beispielsweise auf kariertem Hintergrund, angezeigt. Mit "TSEQ:6" wird im Spezifikations-Bereich automatisch der Sender "REG4" eingetragen. "END_CR" bedeutet, daß das Transferzyklus-Ende durch ein Kriterium "CR" spezifiziert wurde. Die Werte in den Spalten "CYC_SQ" und "ESTA" entsprechen den Minimalwerten von "TSEQ_TCYC=6_1" von Fig.235f.

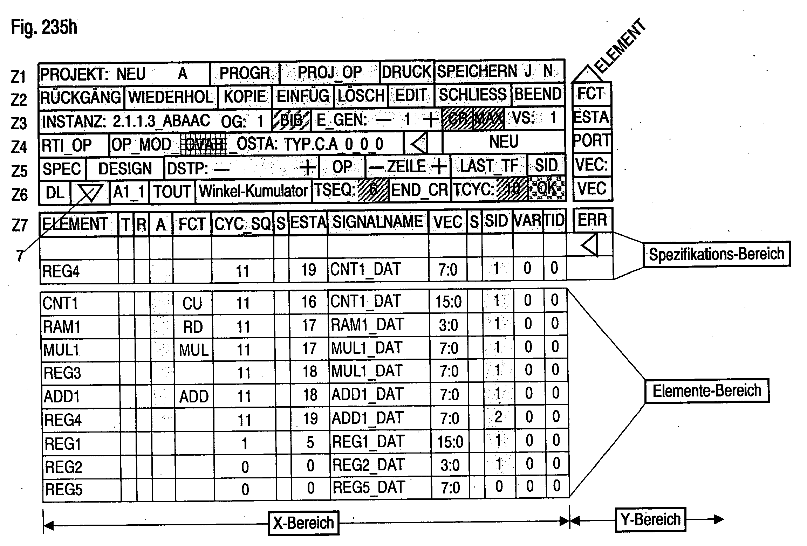

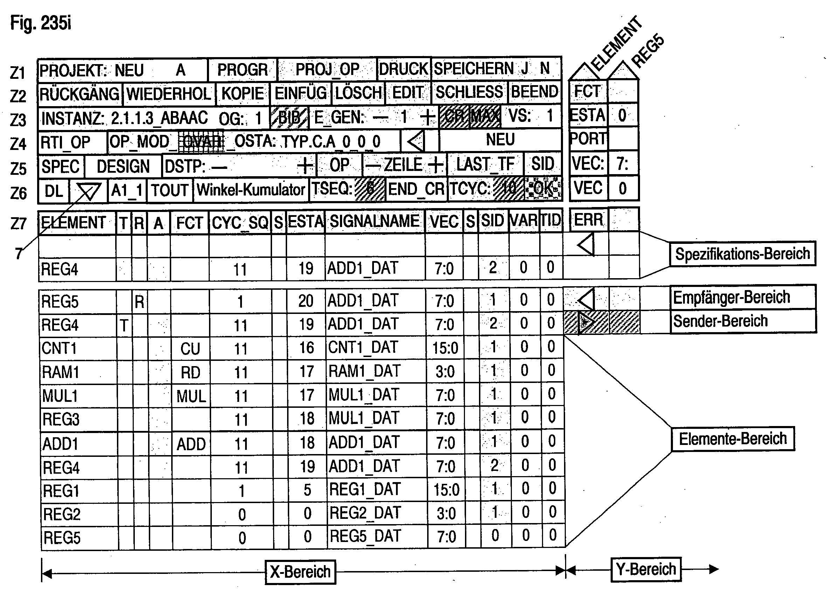

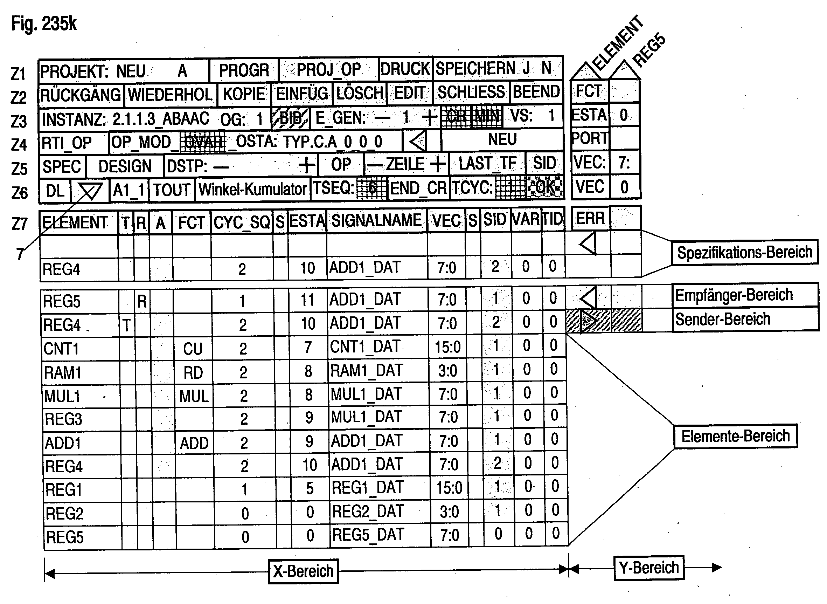

Durch Klick in die Schaltfläche "MIN" in "Z3" erfolgt die Umschaltung auf "MAX", beispielsweise auf schraffiertem Hintergrund, und es werden für "TSEQ:" bzw. "TCYC:" die Maximalwerte in "Z6", beispielsweise auf schraffiertem Hintergrund angezeigt, wie in **Fig.235h** dargestellt. Die Werte in den Spalten "CYC_SQ" und "ESTA" entsprechen den Maximalwerten von "TSEQ_TCYC=6_10" von Fig.235f. In **Fig.235i** ist der Stand der TOUT-Spezifikation nach Zuweisung der REG4-Daten zu REG5, Bestätigung und Transfer in den Empfänger- bzw. Sender-Bereich dargestellt. Durch Klick in die Schaltfläche "MAX" in "Z3", Fig.235i, wurde auf "MIN" umgeschaltet, wie **Fig.235k** zeigt. Hierdurch werden in "Z6" die TSEQ-/TCYC-Minimalwerte und der Stand der TOUT-Spezifikation nach Zuweisung der REG4-Daten zu REG5, Bestätigung und Transfer in den Empfänger- bzw. Sender-Bereich dargestellt. Sind für TSEQ-MIN und TSEQ-MAX unterschiedliche Werte spezifiziert, dann ergeben sich bei der TOUT-Spezifikation für TSEQ-MIN und TSEQ-MAX entsprechende, unterschiedliche Sender. Soll für einen Transfer-STOP, beispielsweise für "ST1 ", eine TOUT-Spezifikation durchgeführt werden, dann werden in der "CYCLE-ARRAY-ÜBERSICHT" die Schaltflächen "TOUT" in "Z3" und "ST1" in "Z5c", Fig.235e, aktiviert und es wird mit Klick in die Schaltfläche "SPEC" in "Z1" zum RTI-OP-BS gewechselt. Dort sind in Zeile "Z6" die Schaltflächen für die Spezifikation mit "TOUT" und für Stop mit "ST1_CR" aktiviert, für "TSEQ:" und "TCYC:" werden Minimum-Werte angezeigt.

### Beschreibung zu Fig.236a-236k:

Nachfolgend wird in der CYCLE-ARRAY-ÜBERSICHT auf Basis der Darstellung von **Fig.236a** der Zyklus-Bereich "A1" um einen Operations-Zyklus "OP-CYC" erweitert und zusätzlich ein neuer Zyklus-Bereich "CYC-ARRAY" hinzugefügt. Zur Erweiterung eines Zyklus-Bereichs um einen Operations-Zyklus wird durch Klick die Schaltfläche "OP-CYC" in Zeile "Z2" aktiviert und nachfolgend der Zyklus-Bereich ausgewählt, für den die Operationszyklus-Erweiterung durchgeführt werden soll. Die Zyklusbereichs-Auswahl erfolgt unterhalb des Spezifikations-Bereichs, im Register-Bereich, der mit der Zeile "Z6a" beginnt.

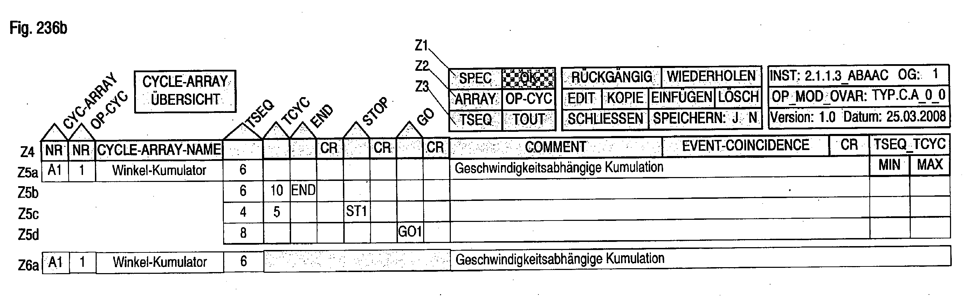

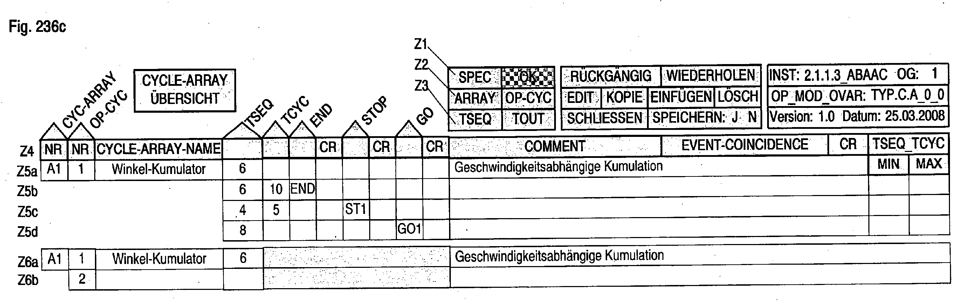

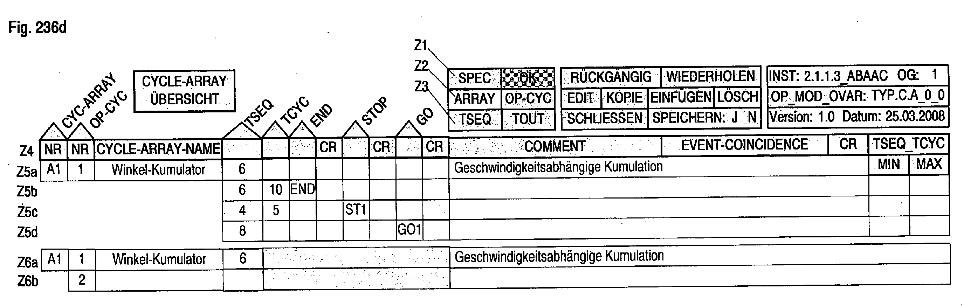

Im Beispiel wird die Zeile "Z6a" durch Kick an beliebiger Stelle ausgewählt und damit in Spalte "CYC-ARRAY" aktiviert bzw. markiert, wie **Fig.236b** zeigt. Mit Klick in die Schaltfläche "OK" in "Z1" wird die Zeile "Z6b" für "OP-CYC=2" generiert und die Schaltflächen "OP-CYC" in "Z2" und "A1" in "Z6a" deaktiviert, wie in **Fig.236c** dargestellt. Für die Generierung eines neuen Zyklus-Bereichs wird die Schaltfläche "ARRAY" in "Z2" durch Klick aktiviert, **Fig.236d****,** und mit nachfolgendem Klick in die Schaltfläche "OK" in "Z1" bestätigt.

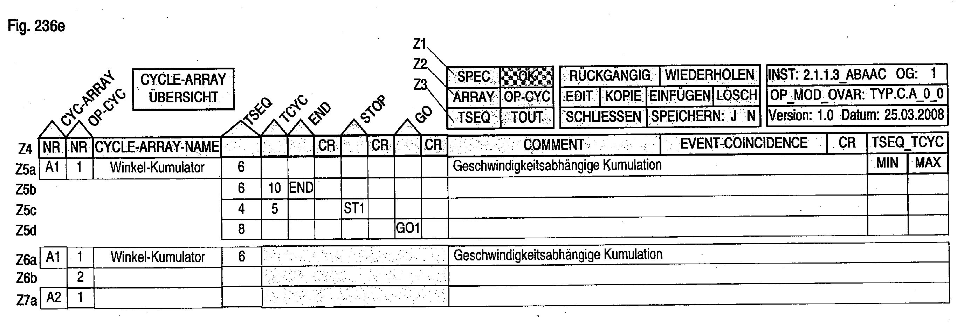

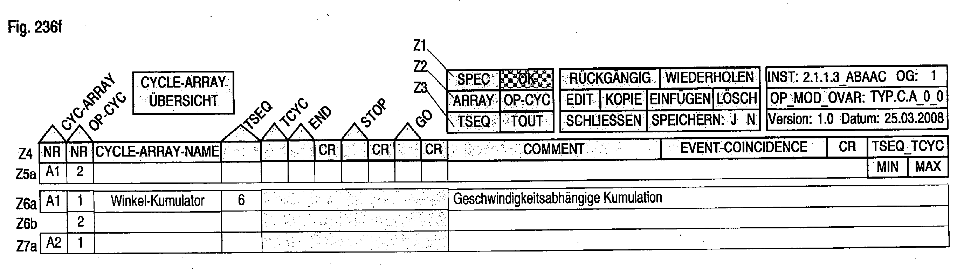

Der neue Zyklus-Bereich "A2" mit Zeile "Z7a" ist in **Fig.236e** dargestellt, die Schaltfläche "ARRAY" in "Z2" wurde durch die Bestätigung deaktiviert. Soll in den Spezifikations-Bereich, Zeilen "Z5", ein neuer Operations-Zyklus oder/und ein neuer Zyklus-Bereich eingetragen werden, so erfolgt der Transfer durch Auswahl der entsprechenden Zeile im Register-Bereich und Doppelklick in die ausgewählte Zeile, beispielsweise im markierten Bereich. Im Beispiel, **Fig.236f****,** wurde die Zeile "Z6b", "OP-CYC=2" von "A1", durch Doppelklick in den Spezifikations-Bereich "Z5a" transferiert.

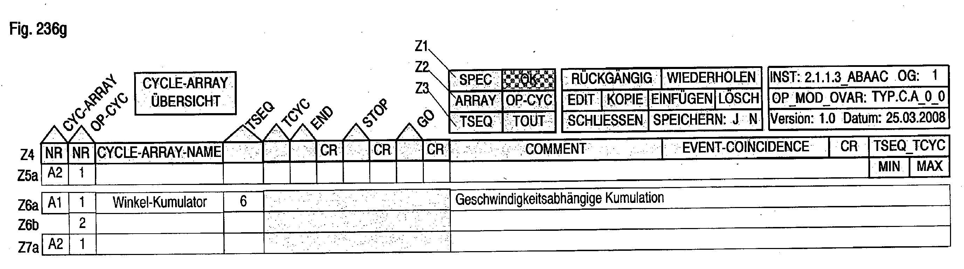

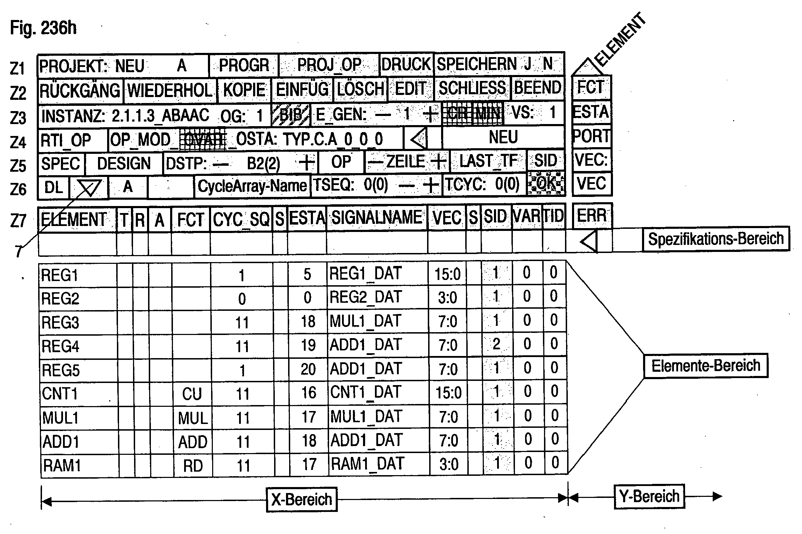

In **Fig.236g** wurde die Zeile "Z7a" des Register-Bereichs, mit "CYC-ARRAY=A2" und "OP-CYC=1", durch Doppelklick in den Spezifikations-Bereich, "Z5a", transferiert. Nach Abschluß der Spezifikation mit dem Bildschirm "CYCLE-ARRAY-ÜBERSICHT" wird mit Klick in die Schaltfläche "SCHLIESSEN" in Zeile "Z3" der Bildschirm "CYCLE-ARRAY-ÜBERSICHT" geschlossen und es erfolgt der Wechsel zum "RTI-OP-BS", wie in **Fig.236h** dargestellt. Vor dem Schließen des Bildschirms "CYCLE-ARRAY-ÜBERSICHT" wird geprüft, ob alle Programmeingaben mit "SPEICHERN" abgeschlossen wurden, wenn nicht, wird die Schaltfläche "SPEICHERN: JA/NEIN" aktiviert bzw. hellgetastet und der Bildschirm "CYCLE-ARRAY-ÜBERSICHT" durch Klick in die Schaltfläche SPEICHERN "JA" oder "NEIN" geschlossen. Im RTI-OP-BS, Fig.236h, wird in Zeile "Z5" der letzte Stand der Spezifikation des RTI-Allgemein-Bereichs, vor Spezifizierung des Zyklus-Bereichs "A1", mit "DSTP:B2(2)" angezeigt, dabei ist die Schaltfläche "OP" in "Z5" aktiv. In Zeile "Z6" sind alle Schaltflächen für die Spezifizierung eines Zyklus-Bereichs passiv geschaltet. Die Werte in den Spalten "CYC_SQ" und "ESTA" entsprechen den Werten der Spezifizierung des RTI-Allgemein-Bereichs additiv der Werte der Spezifizierung des Zyklus-Bereichs "A1". Dabei wurde für den Zyklus-Bereich "A1" ein Zyklus-Ende mit absoluten Werten für "TSEQ=6" und "TCYC=10" angenommen.

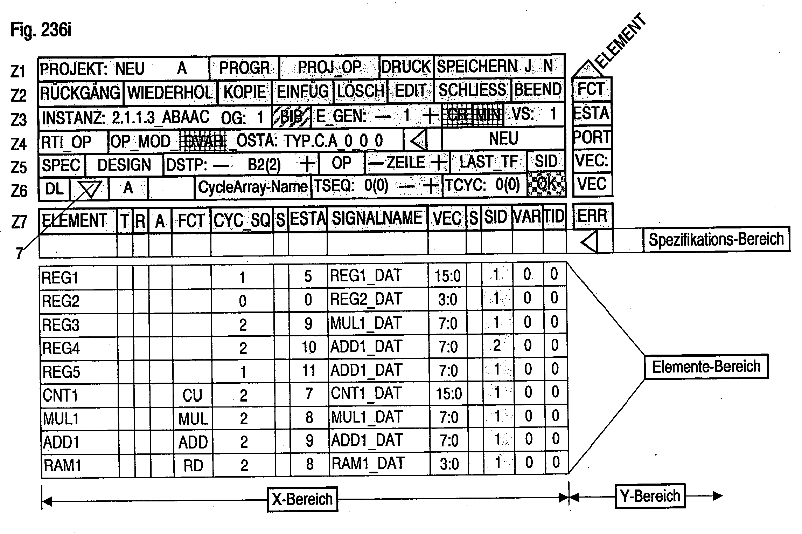

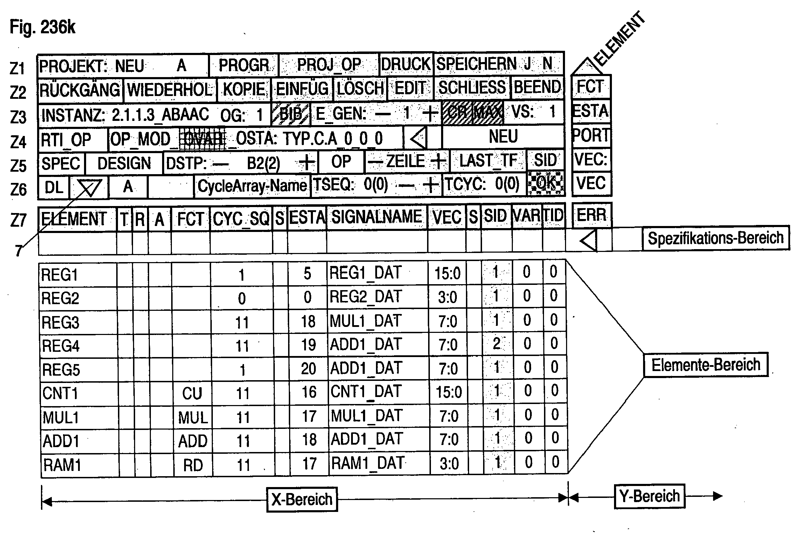

Wurde für "A1" das Zyklus-Ende durch ein Kriterium "CR" spezifiziert, wie in Fig.235c mit "TSEQ_TCYC" Minimalwert "6_1" und Maximalwert "6_10" dargestellt, dann werden im RTI-OP-BS, **Fig.236i****,** in den Spalten "CYC_SQ" und "ESTA" die Minimalwerte für "TSEQ_TCYC=6_1" angezeigt. Durch Klick in die Schaltfläche CR "MIN" in Zeile "Z3" wird die Schaltfläche auf "MAX", entsprechend "TSEQ_TCYC=6_10" in Fig.235c, umgeschaltet und es werden die Maximalwerte in den Spalten "CYC_SQ" und "ESTA" angezeigt, wie in **Fig.236k** dargestellt. Die bei einer RTI-Operations-Spezifizierung durch Kriterien "CR" auftretenden MIN-/MAX-Werte für Counter-Sequenzen im Allgemein-Bereich "CR-Verwaltungsgruppe1", bzw. MIN-/MAX-Werte für "CYC_SQ" von Zyklus-Bereichen "CR-Verwaltungsgruppe2", werden in Summe im SPV automatisch berechnet und im RTI-OP-BS in den Spalten "CYC_SQ" und "ESTA" den Elementen zugeordnet. Die Umschaltung der MIN-/MAX-Werte erfolgt in Zeile "Z3" durch einen Klick in die Schaltfläche "MAX" neben "CR", Fig.236k, von MAX nach MIN und mit dem nächsten Klick von MIN nach MAX, usw..

### Beschreibung zu Fig.237a-237d:

Vorstehend wurde an Beispielen die RTI-Operations-Spezifizierung im SPV für eine beispielsweise RTI-Basisoperation "OP_MOD_OVAR:TYP.C.A_0_0" erläütert. Die Spezifikations-Versions-Nummer in Zeile "Z3" war "VS:1", wie **Fig.237a** zeigt.

Nachfolgend werden für eine Änderung einer bestehenden RTI-Basisoperations-Spezifizierung die funktionellen Eigenschaften des RTI-OP-BS beschrieben. Eine Änderung einer RTI-Basisoperations-Spezifizierung kann nur im Modus "SPEC, DESIGN" in "Z5" durchgeführt werden. Wie vorstehend erläutert, sind für jeden "DSTP" alle "DVSTPs" im Empfänger-/Sender-Bereich dargestellt und es können die "DSTP" aufsteigend mit "E0()", "E1()", "E2()", usw., bzw. absteigend angewählt werden.

Sollen bei einem Empfänger in einem "DVSTP" ein oder mehrere Sender ausgetauscht werden, bezeichnet mit Änderungsmodus1 "ÄND-MOD1", so wird durch Klick in die Schaltfläche der Zeile des ausgewählten Empfängers in Spalte "R" der Empfänger vom Empfänger-Bereich in den Spezifikations-Bereich transferiert. Dabei werden die zugehörigen Sender automatisch vom Sender-Bereich in den Spezifikations-Bereich mit transferiert. Das Kriterium für eine DVSTP-Änderung ist der Transfer eines DVSTP vom Empfänger-/Sender-Bereich in den Spezifikations-Bereich. Im Spezifikations-Bereich sind Empfänger und Sender im Status vor einer DVSTP-Bestätigung, d. h., die Elemente-Schaltflächen in den Spalten "R" bzw. "T" sind markiert, aber ohne Eintrag "R" bzw. "T". Im Spezifikations-Bereich werden die Sender entfernt, die durch neue Sender ersetzt werden sollen. Dies erfolgt durch Klick in die Schaltflächen der entsprechenden Sender-Zeilen in Spalte "T". Anschließend erfolgt die Auswahl und der Transfer der neuen Sender in den Spezifikations-Bereich, wie bekannt, aus dem Elemente-Bereich oder/und Empfänger-Bereich. Nach Bestätigung des geänderten "DVSTP" im Spezifikations-Bereich durch Klick in die Schaltfläche der Empfänger-Zeile in Spalte "R", erfolgt durch Klick in die Schaltfläche des Empfängers in Spalte "ELEMENT" der Transfer des Empfängers in den Empfänger-Bereich bzw. der Sender in den Sender-Bereich. Danach führt das SPV automatisch für den in Änderung befindlichen "DVSTP" in seinem "DSTP" und die folgenden "DSTPs" eine ESTA-Überprüfung/-Korrektur durch, die durch blinken der Anzeigefläche "VS:" in "Z3" gekennzeichnet ist. Dabei werden auch mögliche Anpassungen von dynamischen Signalnamen durchgeführt. Für die Zeit der automatischen Korrekturen im SPV blinkt das Anzeigefeld "VS:", manuelle Arbeitsschritte können in dieser Zeit nicht ausgeführt werden. Nach Beendigung der ESTA-Überprüfung/-Korrektur bzw. möglichen Anpassungen von dynamischen Signalnamen schaltet "VS:" wieder auf konstante Anzeige.

Ist bei einem Empfänger mit mehr als einem Inputport ein neuer dynamischer Signalname zu generieren, dann kann abhängig von einer SPV-System-Einstellung, der alte dynamische Signalname oder der statische Signalname als dynamischer Signalname bei der ESTA-Überprüfung/-Korrektur automatisch eingesetzt werden.

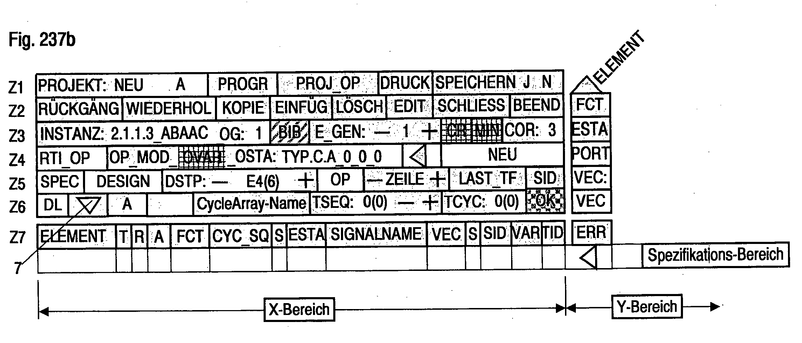

Falls ein oder mehrere manuelle Einträge von dynamischen Signalnamen erforderlich sind, erfolgt nach Abschluß der ESTA-Überprüfung/-Korrektur automatisch die Vorbereitung für den ersten manuellen Eintrag eines dynamischen Signalnamens. Hierzu schaltet automatisch der RTI-OP-BS in Zeile "Z3" von Version "VS" auf Korrektur "COR" um, wie in **Fig.237b** dargestellt, und zeigt die Anzahl der erforderlichen manuellen Korrekturen von dynamischen Signalnamen an. Im Beispiel wurden drei Signalnamen-Korrekturen angenommen. Die Vorbereitung für einen manuellen Eintrag eines dynamischen Signalnamens wurde im Rahmen der RTI-Operations-Spezifizierung erläutert. Nach dem manuellen Eintrag des ersten dynamischen Signalnamens und Bestätigung durch "OK" wird automatisch in Transferrichtung die nächste manuelle Korrektur eines dynamischen Signalnamens vorbereitet. Diese kann noch im "DSTP" der ersten Änderung oder in einem folgenden "DSTP" liegen. Nach jeder erfolgten und mit "OK" bestätigten manuellen Korrektur eines dynamischen Signalnamens wird die Korrektur-Anzahl um Eins erniedrigt. Wurde in einem "DSTP" die letzte Korrektur eines dynamischen Signalnamens mit "OK" bestätigt, erfolgt automatisch die Umschaltung der Anzeigefläche in "Z3" von "COR:1" nach "VS:1". Während der Bearbeitung einer DVSTP-Änderung kann keine neue DVSTP-Änderung begonnen werden.

Bei der vorstehend beschriebenen Änderung wurden an einem Empfänger die alten Sender gegen neue Sender ausgetauscht.

Bei einem weiteren Änderungsmodus "ÄND-MOD2" in einem "DVSTP" erfolgt der Austausch des Empfängers, die Sender werden beispielsweise nicht ausgetauscht. Beispielsweise wird, ein Addierer "ADD1" durch einen Multiplizierer "MUL1" ersetzt. Zur Durchführung der Änderung wird "ADD1" mit seinen Sendern in den Spezifikations-Bereich transferiert und "ADD1" durch Klick in Spalte "ELEMENT" aus dem Spezifikations-Bereich entfernt. Danach wird der Empfänger "MUL1" aus dem Elemente-Bereich in den Spezifikations-Bereich transferiert, der DVSTP durch Klick in die Schaltfläche der MUL1-Zeile in Spalte "R" bestätigt und "MUL1" mit seinen Sendern durch Klick in die Schaltfläche der MUL1-Zeile in Spalte "ELEMENT" vom Spezifikations-Bereich in den Empfänger-Bereich bzw. Sender-Bereich transferiert. In diesem Änderungsmodus können dem neuen Empfänger auch neue Sender zugewiesen werden. Die Anpassung des dynamischen Signalnamens für den neuen Empfänger "MUL1" bzw. der dynamischen Signalnamen der Empfänger im nachfolgenden Transferweg sowie die ESTA-Überprüfung/-Korrektur werden im "ÄND-MOD2" identisch zum "ÄND-MOD1" durchgeführt.

Bei einem weiteren Änderungsmodus "ÄND-MOD3" wird in einem "DVSTP" der Empfänger ersatzlos entfernt. Damit entfallen auch die zu diesem Empfänger gehörenden Sender. Die Eliminierung des Empfängers wird durch Doppelklick im Empfänger-Bereich in sein Koordinatenfeld im Y-Bereich, in dem ein "?" gesetzt wird, vorbereitet. Durch erneuten Doppelklick in das Koordinatenfeld wird dieser Schritt rückgängig gemacht und das "?" wieder gelöscht. Alternativ kann dieser Schritt auch durch Klick in die Schaltfläche "RÜCKGÄNG" in "Z2" rückgängig gemacht werden. Mit Bestätigung einer Empfänger-Eliminierung durch "OK" in "Z6" werden im X-Bereich die Empfänger-Zeile und die zugehörigen Sender-Zeilen gelöscht. Die Empfänger-Spalte im Y-Bereich wird dabei automatisch gelöscht, wenn der Empfänger in keinem weiteren "DVSTP" mehr spezifiziert ist. War der Empfänger auch Sender für in Transferrichtung nachfolgende Empfänger, beispielsweise für vier Empfänger, im gleichen oder/und folgenden "DSTPs", dann wechselt automatisch die Anzeige von "VS:1" nach Korrektur "COR:4" in "Z3". Ausserdem wird automatisch auf den "DSTP" geschaltet, in dem die erste DVSTP-Änderung durchzuführen ist. In diesem "DSTP" wurde der zu ändernde "DVSTP" automatisch in den Spezifikations-Bereich gebracht. An Stelle des fehlenden Senders ist dort eine Leerzeile plaziert, in die ein aus dem Elemente-Bereich oder Empfänger-Bereich ausgewählter Sender transferiert und dem Empfänger zugewiesen wird. Anschließend wird der mit neuem Sender ergänzte "DVSTP" im Spezifikations-Bereich bestätigt und in den Empfänger-/Sender-Bereich transferiert. Nach Bestätigung der Änderung in "COR4" durch "OK" in "Z6", wechselt die Anzeige von "COR:4" in "Z3" nach "COR:3" und es wird der nächste zu ändernde "DVSTP" im Spezifikations-Bereich automatisch angezeigt. Die Durchführung der DVSTP-Änderung in "COR3" ist identisch zu der in "COR4". Nach Bestätigung der Änderung in "COR3" durch "OK" in "Z6", wechselt die Anzeige von "COR:3" in "Z3" nach "COR:2" und es wird der nächste zu ändernde "DVSTP" im Spezifikations-Bereich automatisch angezeigt. Nach Änderung des letzten "DVSTPs" und Bestätigung durch "OK" in "Z6" wechselt automatisch in "Z3" die Anzeige von "COR:1" nach "VS:1" und "VS" in den Blinkzustand. Dabei führt das SPV eine Überprüfung/ Korrektur von "ESTA" und dynamischen Signalnamen durch, wie vorstehend unter "ÄND-MOD1" beschrieben. Nach Abschluß der automatischen Überprüfung bzw. Korrekturen schaltet der RTI-OP-BS auf konstante Anzeige "VS" in "Z3" um.

Falls manuelle Änderungen von dynamischen Signalen erforderlich sind, wird automatisch in "Z3" die Anzeige von Version "VS" auf Korrektur "COR" umgeschaltet und die Anzahl der erforderlichen manuellen Korrekturen von dynamischen Signalnamen eingetragen, wie unter "ÄND-MOD1" beschrieben. Die Durchführung der manuellen Änderung von dynamischen Signalnamen ist im "ÄND-MOD3" identisch zum "ÄND-MOD1".

Wie vorstehend beschrieben, können bei der Spezifizierung einer RTI-Basisoperation beliebige "DVSTPs" in beliebigen "DSTPs" geändert werden. Ausserdem können auch neue "DVSTPs" in beliebigen "DSTPs" oder/und "DSTPs" hinzugefügt werden.

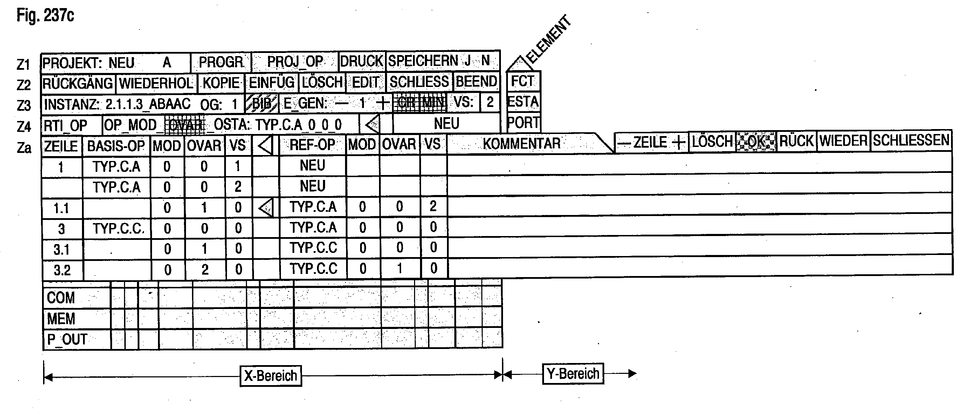

Die Abspeicherung der Ergebnisse einer RTI-Operations-Spezifikation erfolgt, wie vorstehend beschrieben, durch Klick in die Schaltfläche "SPEICHERN" in Zeile "Z1". Nach Abschluß einer RTI-Operations-Spezifikation kann vor dem Abspeichern der Ergebnisse der Versions-Stand "VS:" in "Z3" manuell erhöht werden, beispielsweise von "VS:1" nach "VS:2". Mit dem Abspeichern der RTI-Operations-Spezifikation wird automatisch die Spezifikations-Version "VS" in "Z3" und in das RTI-Operationsfenster übertragen, wie **Fig.237c** zeigt.

Vorstehend wurden die Änderungsmodis "ÄND-MOD1", "ÄND-MOD2" und "ÄND-MOD3" für die Spezifizierung einer RTI-Basisoperation beschrieben. Wie vorangegangen unter Fig.65 und Fig.98a bis Fig.98h erläutert, kann eine RTI-Basisoperation in ihrem Ablauf durch Fehlerereignisse oder/und Entscheidungskriterien beeinflußt bzw. variiert werden. Für jede Kombination bestimmter Fehlerereignisse bzw. bestimmter Entscheidungskriterien wird eine zu einer RTI-Basisoperation abweichende RTI-Basisoperations-Variante durch Änderung der RTI-Basisoperation oder einer RTI-Basisoperatiöns-Variante erzeugt. Nachfolgend wird die Vorgehensweise für die beispielsweise Erzeugung einer ersten RTI-Basisoperations-Variante beschrieben. Hierzu wird im RTI-Operationsfenster die zu erstellende RTI-Basisoperations-Variante, beispielsweise "OP_MOD_ OVAR:TYP.C.A_0_1" eingetragen und die RTI-Basisoperation "OP_MOD_OVAR:TYP.C.A_0_0" als Referenz-Operation "REF-OP" zugewiesen, wie Fig.237c zeigt.

**Fig.237d** zeigt nach dem Schliessen des RTI-Operationsfensters in Zeile "Z4" die vom RTI-Operationsfenster übernommene, zu spezifizierende RTI-Basisoperations-Variante und die RTI-Basisoperation als Referenz. Ausserdem wurde in "Z3" manuell die Version "VS:1" eingetragen.

Bei der Spezifizierung der RTI-Basisoperations-Variante, die am Anfang der Spezifizierung identisch zur RTI-Basisoperation ist, durch Änderung der RTI-Basisoperation gelten die vorstehend beschriebenen Änderungs-Modi, "ÄND-MOD1", "ÄND-MOD2" und "ÄND-MOD3".

Wie in Fig.98a bis Fig.98h dargestellt und beschrieben, wird jedes Empfänger-Element dessen "DVSTP" durch Änderung vom "DVSTP" der RTI-Basisoperation abweicht mit einer Variations-Nummer "VAR-Nummer" größer Null bzw. einer Transferidentifier-Nummer "TID-Nummer" größer Null gekennzeichnet. Bei einer RTI-Basisoperation besitzen alle Empfangs-Elemente "VAR0" und "TID0". Die VAR- bzw. TID-Nummern werden im RTI-OP-BS vom SPV automatisch generiert und in den Spalten "VAR" bzw. "TID" den Empfangs-Elementen im Empfangs-Bereich bzw. im Spezifikations-Bereich zugeordnet. Wird bei der Spezifizierung einer RTI-Basisoperations-Variante ein neuer, in der RTI-Referenzoperation bzw. - Basisoperation nicht enthaltener, "DVSTP" verwendet, erfolgt für das Empfänger-Element im Empfänger-Bereich bzw. im Spezifikations-Bereich in der Spalte "VAR" und in der Spalte "TID" der Eintrag "+1". Wird bei einer weiteren RTI-Basisoperations-Variante an diesem Empfangs-Element eine Änderung durchgeführt, dann erfolgt in Spalte "VAR" oder/und "TID" automatisch der Eintrag "+2", usw.. Wird bei einer RTI-Basisoperations-Variante ein Empfangs-Element eliminiert, dann bleibt im X-Bereich die Elemente-Zeile im Empfänger-Bereich mit allen Einträgen erhalten und es erfolgt automatisch der Eintrag in Spalte "VAR" mit "-1". Ausserdem entfallen beispielsweise die zugehörigen Sender. Die zugehörige Empfänger-Spalte im Y-Bereich wird beispielsweise gelöscht, wenn der Empfänger in keinem "DVSTP" mehr spezifiziert wurde. Durch die Plazierung des Cursors in eine Empfänger-Zeile in Spalte "VAR" bzw. "TID" mit einem VAR- bzw. TID-Eintrag verschieden von Null und Drücken der rechten Maustaste wird der "DVSTP" der RTI-Basisoperation angezeigt. Dabei wird der aktuelle "DVSTP" nicht verdeckt. Im Falle von "VAR" bzw. "TID" mit "+1", "+2", usw., gibt es keine DVSTP-Anzeige der RTI-Basisoperation, da dieser "DVSTP" in der RTI-Basisoperation nicht existiert.

### Beschreibung zu Fig.238a-238k:

Vorstehend wurde die Spezifizierung von Operationen "OPn" in einer RTI dargestellt und beschrieben. Nachfolgend wird die Spezifizierung von Projekt-Operationen "PROJ_OPn" behandelt. Hierzu werden entsprechend der Blockstruktur von Fig.62 die Verbindungen der Primär-Operationsgruppen "POGn" und der Intern-Primär-Operationsgruppe "1.IPOG" mit den Operationsgruppen "OGn" der RTIn bzw. dem Projekt-Outputport "H" spezifiziert, wie die Figuren **Fig.238a** bis **Fig.238k** zeigen. Ausserdem wird für eine Primär-Operation "POP" der "C.POG" und für eine Intern-Primär-Operation "IPOP" der "1.IPOG" die Zuweisung der Operationen "OPn" zu den RTIn und der "POP" der "1.IPOG" zum Projekt-Outputport "H" spezifiziert, wie in **Fig.239a** bis **Fig.239z** dargestellt. Der Projekt-Operations-Bildschirm "PROJ-OP-BS" wird über das SPV-Programmfenster in Fig.8 durch Klick in die Schaltfläche "PROJ_OP" geöffnet.

**Fig.238a** zeigt den "PROJ-OP-BS" mit aktivierter Anzeigefläche "PROJ_OP" in Zeile "Z1", in dem nachfolgend die Verbindungen der "POGn" bzw. der "1.IPOG" mit den RTIn bzw. dem Projekt-Outputport "H", entsprechend der Blockstruktur von Fig.62 eingetragen werden. Die Verbindung bzw. die Operationen "OP" von der 1.IPOG zum Projekt-Outputport "F" bzw. von der D.POG zum Projekt-Outputport "G" wird, wie weiter oben erläutert, bei der RTI-Operations-Spezifizierung behandelt. Die Funktionen der Schaltflächen in den Zeilen "Z1" und "Z2" in Fig.238a sind identisch zu denen in "Z1" und "Z2" des RTI-OP-BS.

Die Funktionen der Schaltflächen in "Z3" sind folgende:
Bei aktivierter Schaltfläche "CONNECT" erfolgt die Spezifizierung der Verbindungen zwischen "POGn" bzw. "IPOGn" und "RTIn" sowie zwischen "IPOGn" und Projekt-Outputports, die "POPn" senden. Für die Spezifikation "CONNECT" wird nur der Bildschirm-X-Bereich benötigt. Wird die Schaltfläche "OPERATION" durch Klick aktiviert, erfolgt die Spezifizierung der "POPn" bzw. "IPOPn" in Zusammenhang mit den "RTI-OPn" bzw. im Falle einer "IPOP" auch mit den "POPn" am Projekt-Outputport. Mit der Schaltfläche ZEILE:"+" können für die Spezifikation "CONNECT" schrittweise zur Zeile "Z5a" weitere Zeilen hinzugefügt und mit ZEILE:"-" wieder entfernt werden. Die Aktivierung der Schaltfläche "SPEC" durch Klick ist Voraussetzung für eine Spezifikations-Ausführung. Durch Klick in die Schaltfläche "OK" werden die entsprechenden Spezifikationsschritte bestätigt.

Die Bedeutung der Spalten der Zeile "Z4" ist folgende:
In Spalte "POG" ist die POG durch den Eintrag ihres Projekt-Inputports, beispielsweise mit "A", "B", etc., mit "A.POG", "B.POG", etc., definiert. In Spalte "IPOG" ist die IPOG durch den Eintrag einer laufenden Nummer, beispielsweise mit "1", "2", etc., mit "1.IPOG", "2.IPOG", etc., definiert. Die Spalte "Pfeil" wird anschließend bei der Spezifizierung erläutert. In Spalte "PO-POP" werden Projekt-Outputports eingetragen, über die POPn gesendet werden. In der Spalte "RTI:PFAD_NAME_OG" wird die RTI mit ihrer Operationsgruppe definiert. In Spalte "RTI-FCT-NAME" können RTI-Funktionsnamen eingetragen werden.

In **Fig.238b** wurde durch Klick die Schaltfläche "SPEC" in "Z3" aktiviert, dabei wird die Schaltfläche "ZEILE:" mit aktiviert. Die Zeilen-Anzeige stand dabei auf "1" und es wurden durch sieben Klicks in die Schaltfläche ZEILE"+", zusätzlich zur Zeile "Z5a", sieben weitere Zeilen erzeugt und in der Zeilen-Anzeige mit "8" angezeigt. Hierbei sind alle Zeilen markiert und für einen Eintrag vorbereitet. Ausserdem wurden in den Spalten "POG" und "IPOG" die zu Fig.62 entsprechenden Eintragungen eingebracht.

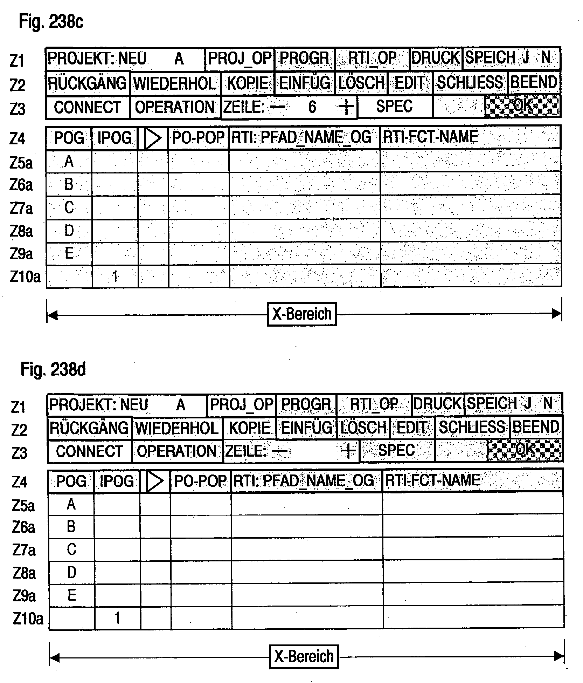

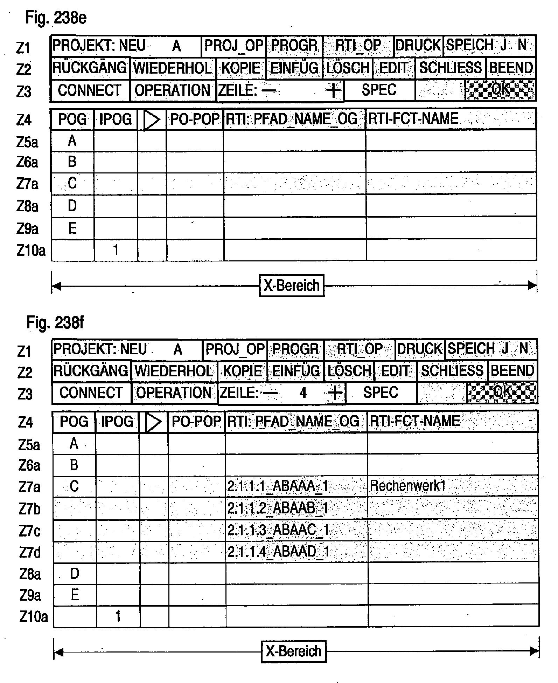

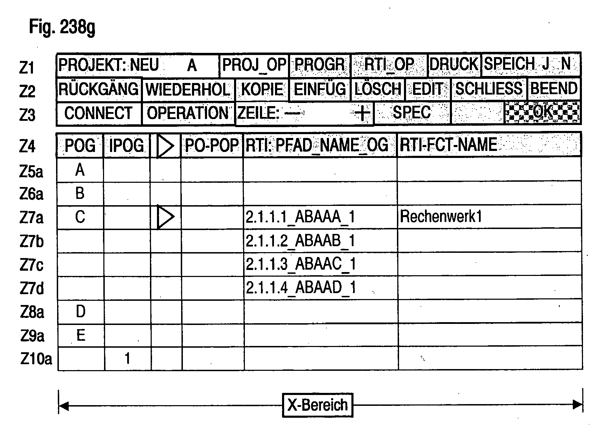

In **Fig.238c** wurden durch zwei Klicks in die Schaltfläche ZEILE:"-" die überschüssigen Zeiten "Z11a" und "Z12a" entfernt. Damit wird in der Zeilen-Anzeige der Wert "6" angezeigt. Mit Klick in die Schaltfläche "OK" in "Z3", werden in "Z3" die Schaltfläche "SPEC" und die Schaltfläche "ZEILE:" deaktiviert, die Zeilen-Anzeige weggeschaltet und die Zeilen "Z5a" und folgende demarkiert, wie **Fig.238d** zeigt. Zur Spezifikation der Verbindungen von C.POG zu den RTIn wurde bei aktivierter Schaltfläche "SPEC" in "Z3", durch Klick in die Zeile "Z7a" an beliebiger Stelle, diese Zeile markiert, wie **Fig.238e** zeigt. Nach Aktivierung der Schaltfläche "ZEILE:" in "Z3" durch Klick, wird die Zeilen-Anzeige auf "1" gesetzt und es werden durch drei Klicks in die Schaltfläche ZEILE:"+" zusätzlich die Zeilen "Z7b", "Z7c" und "Z7d" generiert bzw. markiert und die Zeilen-Anzahl mit ZEILE:"4" angezeigt, wie in **Fig.238f** dargestellt. Ausserdem wurden die C.POG-Verbindungen zu den RTIn und der Funktionsname für die RTI "2.1.1.1_ABAAA_1" mit "Rechenwerk1" eingetragen. Nach Klick in die Schaltfläche "OK" in "Z3" werden die Schaltflächen "SPEC" und "ZEILE" deaktiviert, die Zeilen-Anzeige weggeschaltet und die Zeilen "Z7a" bis "Z7d" demarkiert, wie **Fig.238g** zeigt. Dabei wurde automatisch in der Spalte "Pfeil" für C.POG ein Pfeil generiert, der auf die angeschlossene RTI-Gruppe zeigt.

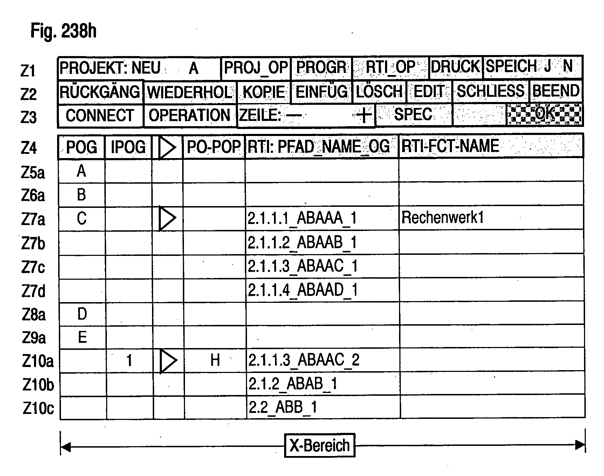

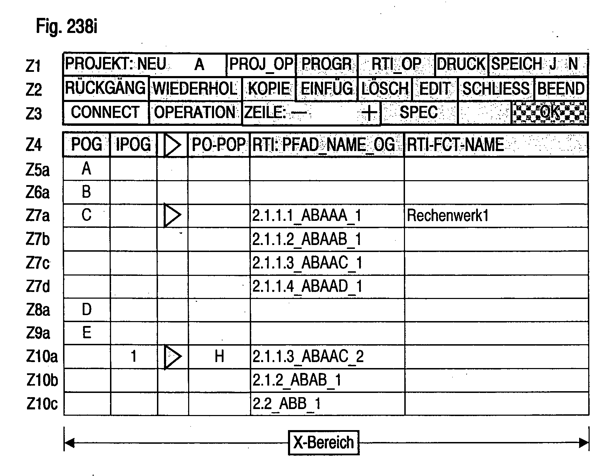

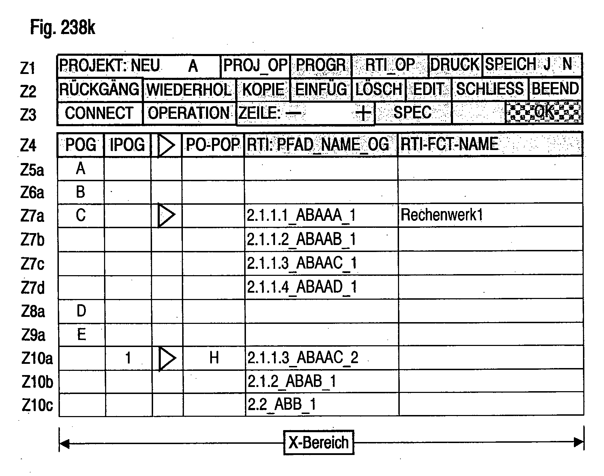

In **Fig.238h** wurden, entsprechend der Blockstruktur in Fig.62, zusätzlich für 1.IPOG die Verbindungen zu den RTIn und zum Projekt-Outputport "H" spezifiziert und dargestellt. Vor einem Spezifikationswechsel von "CONNECT" nach "OPE-RATION" wird die zu spezifizierende POG bzw. IPOG durch Klick in Spalte "Pfeil" ausgewählt. Dabei wird der Pfeil der ausgewählten POG bzw. IPOG markiert. In **Fig.238i** wurde "1.IPOG" und in **Fig.238k** "C.POG" ausgewählt.

### Beschreibung zu Fig.239a-239z:

**Fig.239a** zeigt den Bildschirm nach Umschaltung der Spezifikationsart von "CONNECT" nach "OPERATION". Dabei haben sich im X-Bereich in Zeile "Z3" folgende Schaltflächen-Änderungen ergeben:
An Stelle von "ZEILE:" steht der Operations-State "OSTA:", die Schaltfläche "ALL" ist neu hinzu gekommen. Bei der Umschaltung der Spezifikationsart wurde im Bildschirm "CONNECT", Fig.238k, die Primär-Operationsgruppe "C.POG" mit seinen angeschlossenen RTIn ausgewählt.

Im Bildschirm "OPERATION", Fig.239a, werden die RTIn im Y-Bereich als Empfänger mit ihren Operationsgruppen "OGn" dargestellt. Der Pfeil in der Zeile "Z5" symbolisiert die Richtung vom Sender zum Empfänger. In der Spalte "POG" steht "C" für die Primär-Operationsgruppe "C.POG" und wird beispielsweise durch Markierung unterlegt. Am Beginn einer Operations-Spezifikation steht in "Z3" der Eintrag "OSTA:1(1)". Dabei bedeutet "1" den aktuellen, ersten OSTA-Wert. In den nächsten Operations-Spezifikations-Steps wird der "OSTA" kontinuierlich hochgezählt mit "OSTA:2(2)", "OSTA:3(3)", usw.. Der OSTA-Klammerwert ist immer mit dem maximalen OSTA-Wert identisch. Wird der aktuelle, maximale OSTA-Wert zu kleineren OSTA-Werten hin verändert, wie nachfolgend gezeigt wird, behält der OSTA-Klammerwert den maximalen OSTA-Wert.

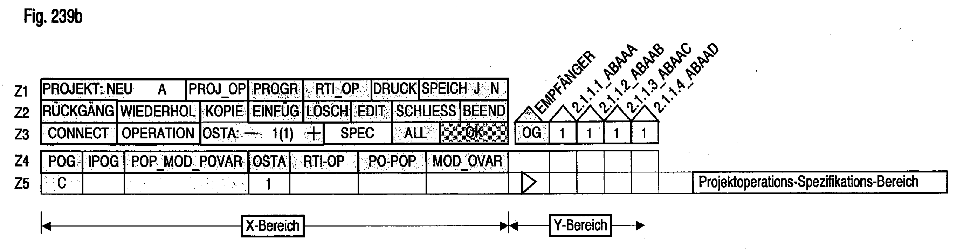

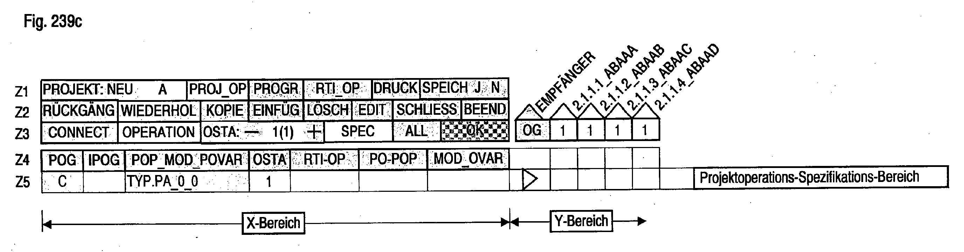

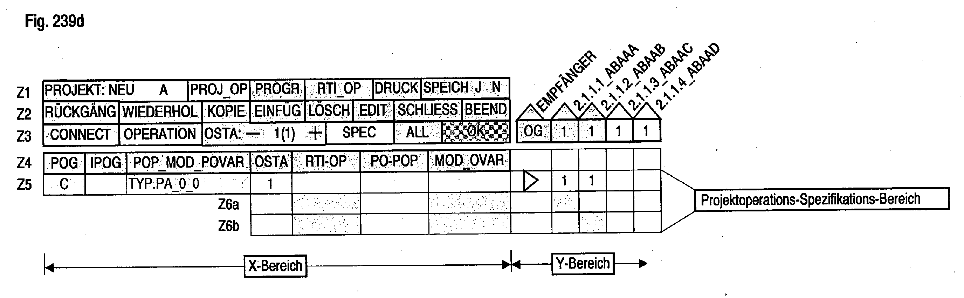

In **Fig.239b** wurde in "Z3" die Schaltfläche "SPEC" durch Klick aktiviert. Hierdurch wird in "Z5" in Spalte "POP_MOD_POVAR" die Schaltfläche durch Markierung für einen Eintrag vorbereitet und in Spalte "OSTA" der Wert "1" eingetragen. "POP" bzw. "MOD" stehen für den in der "C.POG" empfangenen Primär-Operationstyp bzw. dessen Operationsmodus, "POVAR" steht für Primär-Basisoperations-Variation. **Fig.239c** zeigt einen beispielsweisen Eintrag für "POP_MOD_POVAR". In **Fig.239d** wurden für Operationen mit "OSTA=1" im Y-Bereich in Zeile "Z5" beispielsweise die RTIn "ABAAA" und "ABAAB" durch Klick in ihre Koordinatenfelder ausgewählt, die hierdurch automatisch den OSTA-Eintrag "1" erhalten. Dabei erfolgt automatisch die Generierung der Zeilen "Z6a" bzw. "Z6b", die automatisch über markierte Koordinatenfelder den RTIn "ABAAA" bzw. "ABAAB" zugewiesen werden. Die Zeilen "Z6a" und "Z6b" sind durch Markierung für einen Eintrag des RTI-Operationstyps in Spalte "RTI-OP" und des RTI-Operations-Modus bzw. der RTI-Basisoperations-Variation in Spalte "MOD_OVAR" vorbereitet.

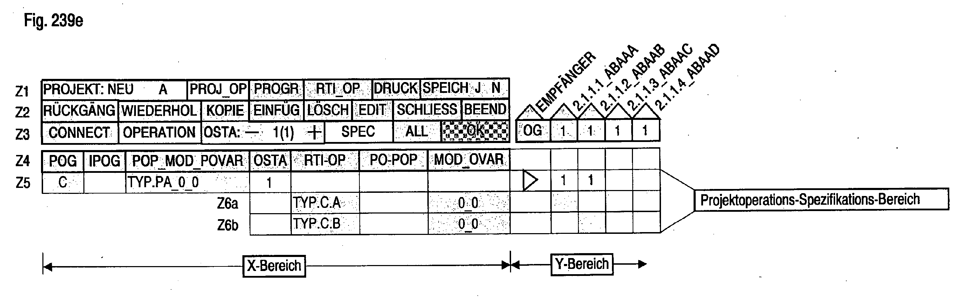

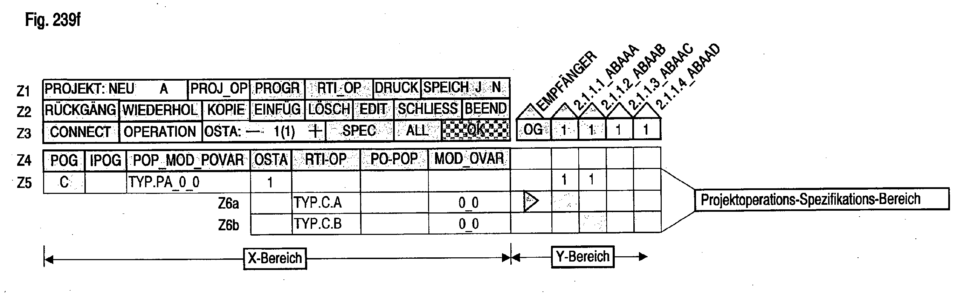

In **Fig.239e** wurden beispielsweise Einträge in den Spalten "RTI-OP" und "MOD_OVAR" ausgeführt. Mit Klick in die Schaltfläche "OK" in "Z3" wird die Schaltfläche "SPEC" in "Z3" deaktiviert und die Markierungen in "Z6a" und "Z6b" im X-Bereich gelöscht, wie **Fig.239f** zeigt. Ausserdem wird der Pfeil im Y-Bereich in Spalte "EMPFÄNGER" von "Z5", Fig.239e, zur ersten RTI "ABAAA" in "Z6a" transferiert und durch Markierung aktiviert. Soll die RTI "ABAAB" für eine Operations-Spezifizierung ausgewählt werden, wird durch Klick in die Schaltfläche in Spalte "EMPFÄNGER" in Zeile "Z6b" der Pfeil auf die zu spezifizierende RTI "ABAAB" ausgerichtet. Mit Klick in die Schaltfläche "RTI_OP" in "Z1" wechselt der Bildschirm von "PROJ_OP", Fig.239f, zum Bildschirm "RTI_OP" mit geöffnetem "RTI-Operationsfenster", wie beispielsweise Fig.99k zeigt. Dabei wird automatisch im Bildschirm "RTI_OP" in Zeile "Z3" an Stelle von "INSTANZ:2.1.1.3_ABAAC" die "INSTANZ:2.1.1.1_ABAAA" mit zugehöriger "OG" eingetragen und im "RTI-Operationsfenster" der Pfeil von ZEILE"2" nach ZEILE"1" in die zu spezifizierende RTI-Operation verschoben. Nach dem Schließen des "RTI-Operationsfenster" steht im Bildschirm "RTI_OP" in Zeile "Z4" die zu spezifizierende RTI-Operation. Besteht im "RTI-Operationsfenster" noch kein Eintrag für die zu spezifizierende RTI-Operation, dann wird automatisch links vom Pfeil in einer neuen Zeile die zu spezifizierende RTI-Operation vom Bildschirm "PROJ_OP" übernommen. In den Spalten rechts vom Pfeil in "REF-OP", "MOD" und "OVAR" sind die Einträge manuell zu ergänzen.

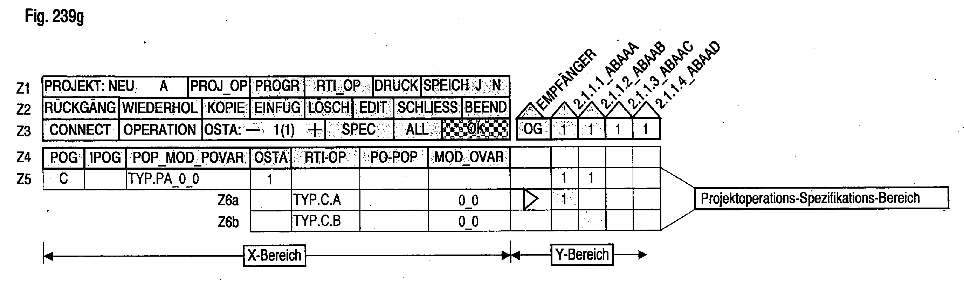

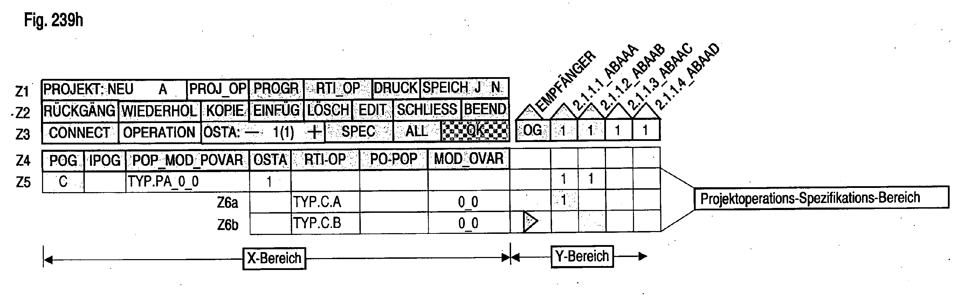

Nach Spezifizierung der ausgewählten RTI-Operation erfolgt durch Klick in die Schaltfläche "PROJ_OP" im Bildschirm "RTI_OP" der Wechsel vom Bildschirm "RTI-OP" in den Bildschirm "PROJ_OP", wie **Fig.239g** zeigt. Dabei wird automatisch im markierten Koordinatenfeld im Y-Bereich in Spalte "ABAAA" der "OSTA=1" eingetragen und der zugehörige Pfeil in Spalte "EMPFÄNGER" demarkiert. Durch Klick in die Schaltfläche in Spalte "EMPFÄNGER" in Zeile "Z6b" wird der Pfeil auf die nächste zu spezifizierende RTI "ABAAB" ausgerichtet, wie **Fig.239h** zeigt.

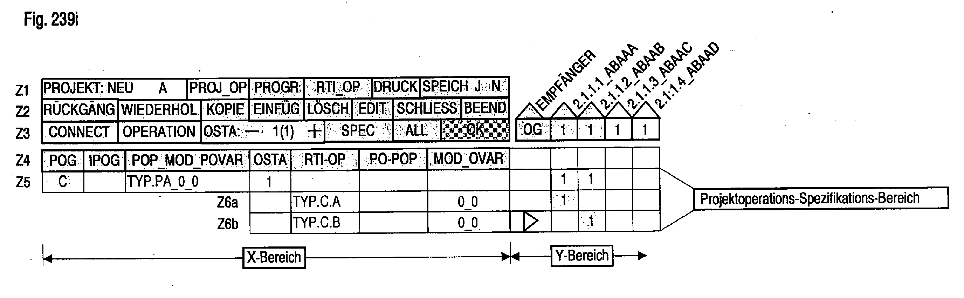

**Fig.239i** zeigt den Bildschirm "PROJ_OP" nach erfolgter Operations-Spezifizierung der RTI "ABAAB" durch Eintrag von "OSTA=1" im markierten Koordinatenfeld und demarkiertem Pfeil. Damit sind für "OSTA=1" alle RTI-Operationen spezifiziert.

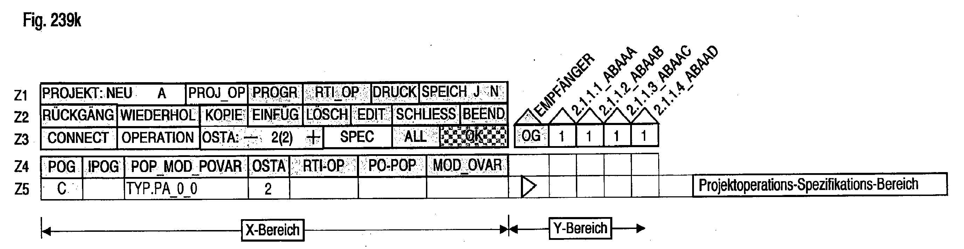

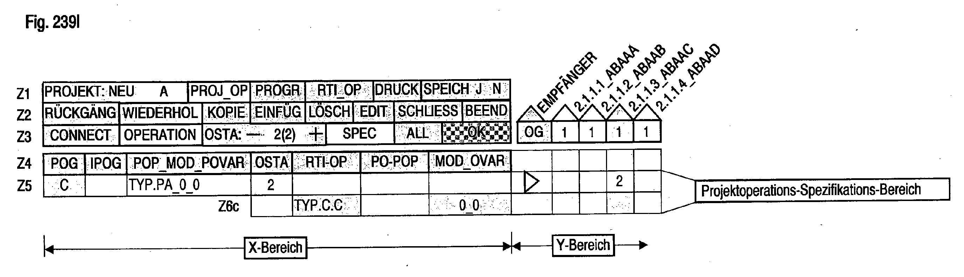

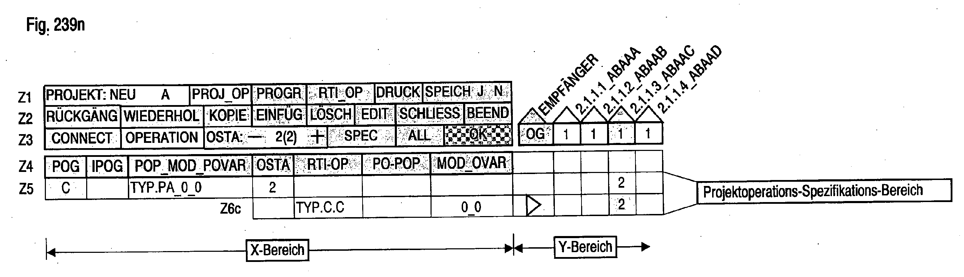

In **Fig.239k** wurde bei aktivierter Schaltfläche "SPEC" in "Z3" der "OSTA" durch Klick in die Schaltflächen OSTA:"+" auf "OSTA:2(2)" erhöht. Dabei wird automatisch in "Z5" in Spalte "OSTA" der Wert "2" eingetragen. Nach Auswahl der RTI "ABAAC" und Eintrag von "RTI-OP=TYP.C.C" bzw. "MOD_OVAR=0_0", **Fig.239l****,** erfolgt mit Klick in die Schaltfläche "OK" in "Z3" die Ausrichtung des Pfeils auf das markierte Koordinatenfeld der RTI "ABAAC" und mit einem weiteren Klick in die Pfeilfläche die Aktivierung bzw. Markierung des Pfeils, wie **Fig.239m** zeigt. **Fig.239n** zeigt den Bildschirm "PROJ_OP" nach Operations-Spezifizierung der RTI "ABAAC".

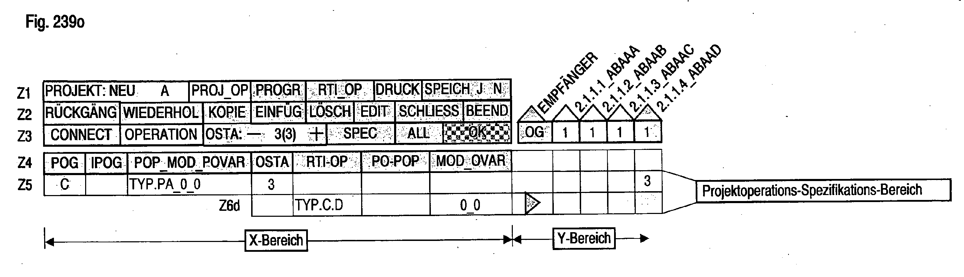

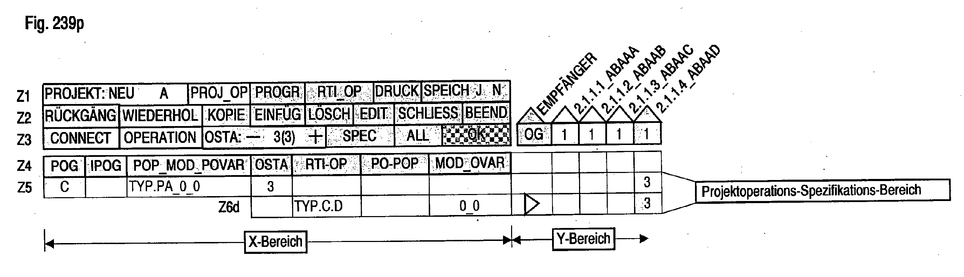

Für "OSTA=3" wurde die RTI "ABAAD" für eine Operations-Spezifizierung vorbereitet, wie **Fig.239o** zeigt. **Fig.239p** zeigt den Bildschirm "PROJ_OP" nach der Operations-Spezifizierung der RTI "ABAAD".

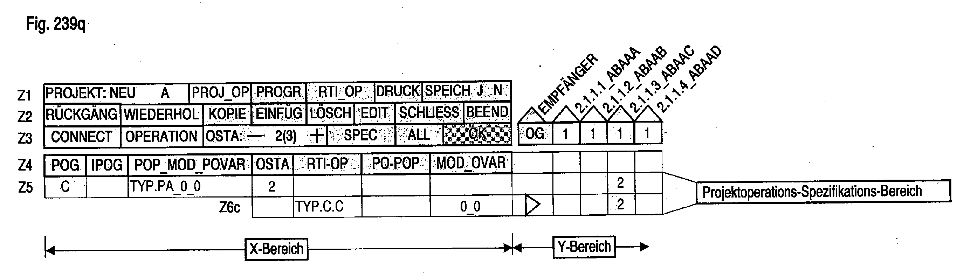

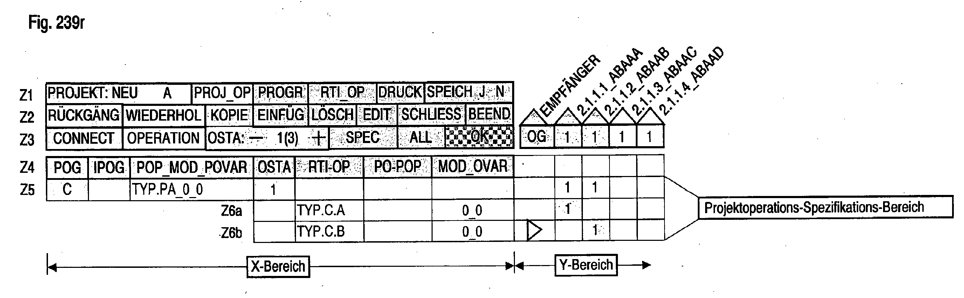

In **Fig.239q** wurde durch Klick in die Schaltfläche OSTA:"-" der "OSTA=2" eingestellt und damit die Anzeige nach der Operations-Spezifizierung der RTI "ABAAC" im Bildschirm "PROJ_OP" hergestellt. Bei nochmaligem Klick in die Schaltfläche OSTA:"-" wird der "OSTA=1" eingestellt und damit die Einträge nach der Operations-Spezifizierung der RTI "ABAAB" im Bildschirm "PROJ_OP" angezeigt, wie in **Fig.239r** dargestellt.

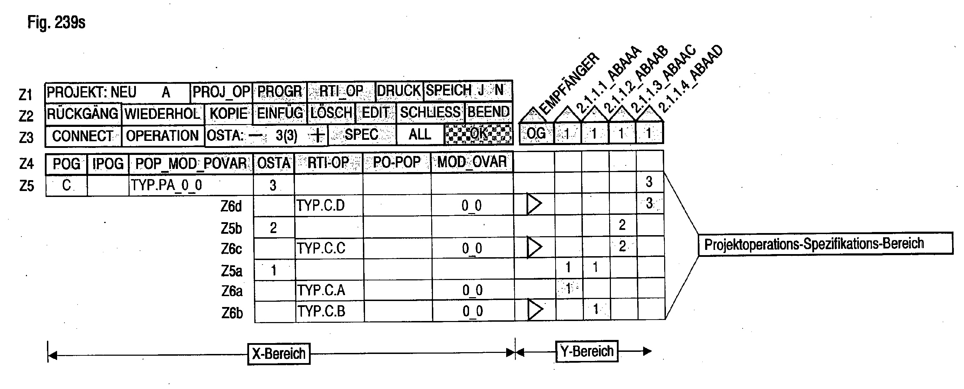

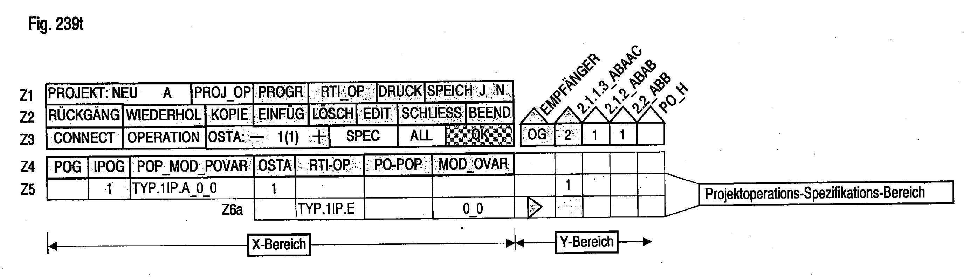

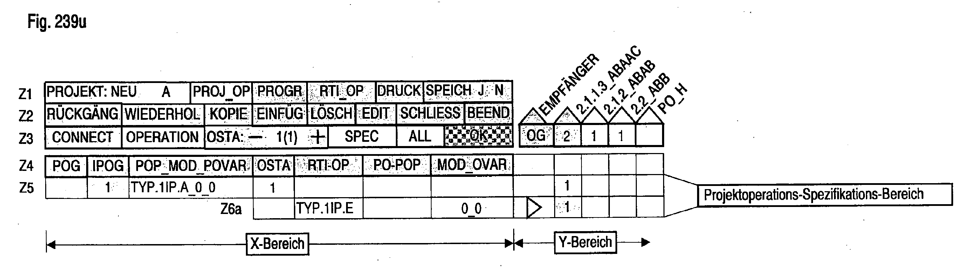

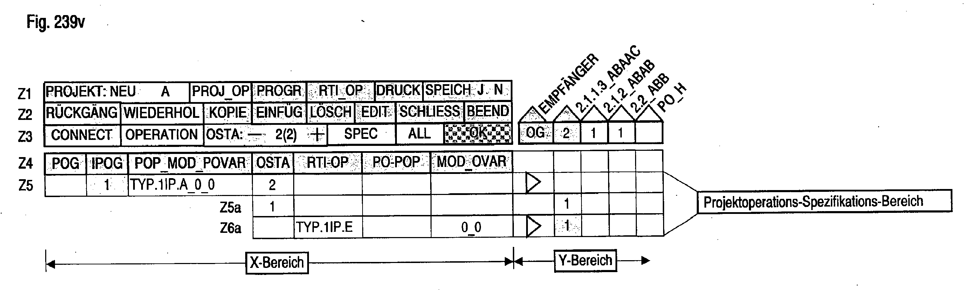

Sollen alle Einträge der durchgeführten RTI-Operations-Spezifikationen für "OSTA=1", "OSTA=2" und "OSTA=3" im Bildschirm "PROJ_OP" dargestellt werden, erfolgt dies durch Klick in die Schaltfläche "ALL" in "Z3", wie **Fig.239s** zeigt. In **Fig.239t** ist für die Intern-Primär-Operation 1.IPOG "TYP.1IP.A" mit "MOD_POVAR= 0_0" die erste Operations-Spezifikation für die RTI "ABAAC" vorbereitet und in **Fig.239u** nach Abschluß dargestellt. Nach Umschaltung auf "OSTA=2" bei aktivierter Schaltfläche "ALL" in "Z3", bleibt die erste Operations-Spezifikation für die RTI "ABAAC" durch die Zeilen "Z5a" und "Z6a" bestehen, wie **Fig.239v** zeigt.

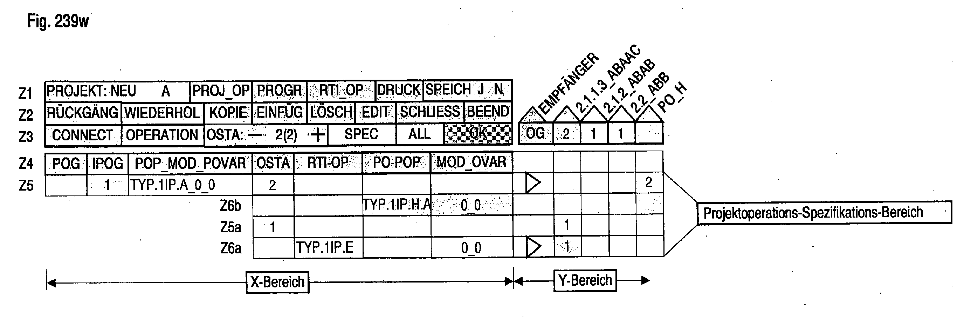

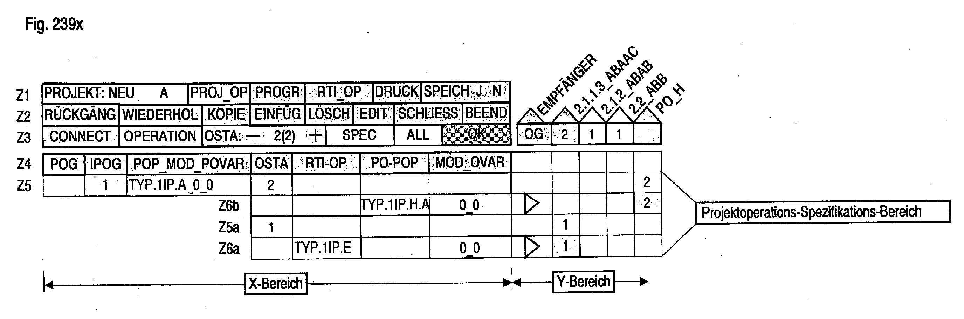

In **Fig.239w** wurde mit "OSTA=2" eine "POP" mit "PO-POP=TYP.1IP.H.A" und "MOD_OVAR=0_0" als zweite Operations-Spezifikation für den Projekt-Outputport "H" vorbereitet. Nachdem die POP-Anforderung über den Projekt-Outputport "H" in einem anderen Projekt empfangen und spezifiziert wird, erfolgt mit Klick in die Schaltfläche "OK" in "Z3" direkt die Beendigung der POP-Spezifizierung für das sendende Projekt, wie **Fig.239x** zeigt.

Im empfangenden Projekt wird die POP über einen Projekt-Inputport zu einer POG übertragen. Für die Spezifizierung der POP im empfangenden Projekt können beispielsweise die Sendedaten der RTI "ABAAC", die mit "OSTA=1" spezifiziert wurden, verwendet werden.

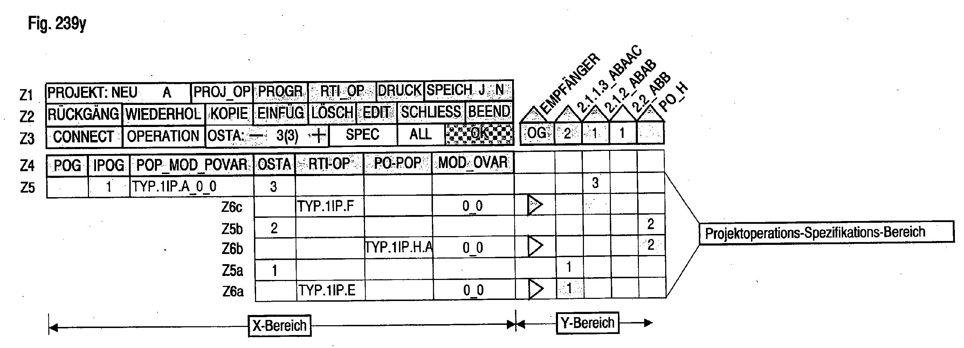

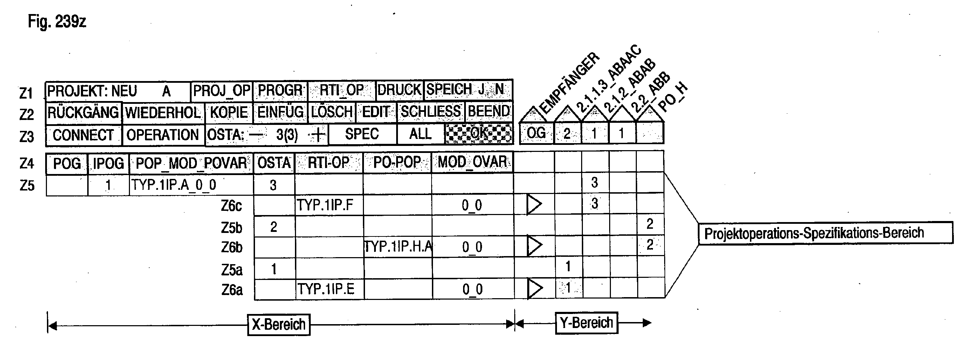

**Fig.239y** zeigt für "OSTA=3" die Vorbereitung der Operations-Spezifizierung der RTI "ABAB" mit "RTI-OP=TYP.1IP.F und "MOD_OVAR=0_0". **Fig.239z** zeigt die abgeschlossene Operations-Spezifizierung der RTI "ABAB" im Bildschirm "PROJ_OP".

### Beschreibung zu Fig.240a-240c:

Nachfolgend werden für eine Primäroperation "POP" am Projekt-Inputport "C" beispielsweise Operations-Ablaufvarianten beschrieben. Hierzu zeigt die Blockstruktur von **Fig.240a** den Primäroperations-Anforderungsweg vom Projekt-Inputport "C" zur Primäroperationsgruppe "C.POG" und die Operations-Anforderungswege von der "C.POG" zu den "RTIn", "ABAAA", "ABAAB", "ABAAC" und "ABAAD". Der Empfang der Operations-Anforderungen erfolgt über die Operationsgruppe "OG1" in allen "RTIn". Wie unter Fig.64 beschrieben, werden für die POP- und OP-Anforderungswege einheitliche Controlsignal-Strukturen verwendet. Das sind für die Übertragung von POP- bzw. OP-Anforderungen die Operations-Controlsignale "OCTR" und in Operations-Übertragungs-Gegenrichtung die Controlsignale "CTR" und die Operations-Variationssignale "OVAR". Die Pfeile "DIN" bzw. "DOUT" repräsentieren den allgemeinen Dateninput bzw. Datenoutput der "RTIn". Zusätzlich sind spezielle Datenverbindungen zwischen den "RTIn" dargestellt. Dies sind die Datenverbindungen "2.1.1.1_DATAA" von "ABAAA" nach "ABAAC", "2.1.1.2_DATA.B" von "ABAAB" nach "ABAAD" und "2.1.1.3_DATA.C" von "ABAAC" nach "ABAAD". Die Blockstruktur von Fig.240a dient nur der Erläuterung und ist nicht Gegenstand des SPV.

In der Tabelle von **Fig.240b** sind den Primär-Basisoperations-Varianten "PO-VAR=1" bis "POVAR=7" beispielsweise Kombinationen von RTI-Basisoperations-Varianten "OVAR" zugewiesen. An "C.POG" wurde der Empfang einer beispielsweisen Primäroperation "POP" mit "TYP.P.A" und Modus "MOD=0" angenommen. Für alle RTI-Operationen gilt beispielsweise der Modus "MOD=0". Die "C.POG" sendet mit Operationsstate "OSTA=1" bei "POVAR=0" bis "POVAR=7" beispielsweise an die RTI "ABAAA" die Operation "TYP.A.A" und an die RTI "ABAAB" die Operation "TYP. B.A".

Für die Primär-Basisoperation mit "POVAR=0" sendet "C.POG" mit "OSTA=2" an die RTI "ABAAC" die Operation "TYP.C.A", mit "OSTA=3" an die RTI "ABAAD" die Operation "TYP.D.A". Für eine Primär-Basisoperation mit "POVAR=0" führen alle beteiligten "RTIn" Basisoperationen mit "OVAR=0" aus.

Der Primär-Basisoperations-Variante mit "POVAR=1" wird beispielsweise bei "OSTA=1" von der RTI "ABAAA" eine RTI-Basisoperations-Variante mit "OVAR=1" zugewiesen. Hierdurch ist beispielsweise der ABAAA-Ergebnis-Output "2.1.1.1_DATAA" verändert, der nachfolgend mit "OSTA=2" in der RTI "ABAAC" operativ weiter verarbeitet wird. Deshalb sendet die "C.POG" bei "OSTA=2" an die RTI "ABAAC", entsprechend dem geänderten Dateninput "2.1.1.1_DATA.A", eine beispielsweise Operation "TYP.C.B", die beispielsweise einen geänderten ABAAC-Datenoutput "2.1.1.3_DATA.C" zur Folge hat. Mit "OSTA=3" sendet die "C.POG" an die RTI "ABAAD", entsprechend dem geänderten ABAAD-Dateninput "2.1.1.3_DATA.C", eine beispielsweise Operation "TYP.D.B".

Der Primär-Basisoperations-Variante mit "POVAR=2" wird beispielsweise bei "OSTA=1" von der RTI "ABAAB" eine RTI-Basisoperations-Variante mit "OVAR=1" zugewiesen. Hierdurch ist beispielsweise der ABAAB-Ergebnis-Output "2.1.1.2_DATA.B" verändert, der nachfolgend mit "OSTA=3" in der RTI "ABAAD" operativ weiter verarbeitet wird. Deshalb sendet die "C.POG" bei "OSTA=3" an die RTI "ABAAD", entsprechend dem geänderten Dateninput "2.1.1.2_DATA.B", eine beispielsweise Operation "TYP.D.C".

Der Primär-Basisoperations-Variante mit "POVAR=3" wird beispielsweise bei "OSTA=1" von den RTIn "ABAAA" und "ABAAB" eine RTI-Basisoperations-Variante mit je "OVAR=1" zugewiesen. Hierdurch ist beispielsweise der ABAAA-Ergebnis-Output "2.1.1.1_DATA.A" verändert, der nachfolgend mit "OSTA=2" in der RTI "ABAAC" operativ weiter verarbeitet wird. Deshalb sendet die "C.POG" bei "OSTA=2" an die RTI "ABAAC", entsprechend dem geänderten Dateninput "2.1.1.1_DATA.A", die Operation "TYP.C.B", wie unter "POVAR=1", die einen geänderten ABAAC-Datenoutput "2.1.1.3_DATA.C" zur Folge hat. Mit "OSTA=3" sendet die "C.POG" an die RTI "ABAAD", entsprechend dem geänderten Dateninput "2.1.1.2_DATA.B" und "2.1.1.3_DATA.C", eine beispielsweise Operation "TYP.D.D".

Der Primär-Basisoperations-Variante mit "POVAR=4" wird beispielsweise bei "OSTA=1" von der RTI "ABAAA" eine RTI-Basisoperations-Variante mit "OVAR=2" zugewiesen. Hierdurch ist beispielsweise der ABAAA-Ergebnis-Output "2.1.1.1_DATAA" verändert, der nachfolgend mit "OSTA=2" in der RTI "ABAAC" operativ weiter verarbeitet wird. Deshalb sendet die "C.POG" bei "OSTA=2" an die RTI "ABAAC", entsprechend dem geänderten Dateninput "2.1.1.1_DATA.A", eine beispielsweise Operation "TYP.C.C", die beispielsweise einen geänderten ABAAC-Datenoutput "2.1.1.3_DATA.C" zur Folge hat. Mit "OSTA=3" sendet die "C.POG" an die RTI "ABAAD", entsprechend dem geänderten Dateninput "2.1.1.3_DATA.C", eine beispielsweise Operation "TYP.D.E".

Bei der Primär-Basisoperations-Variante "POVAR=5" wird der "C.POG" bei "OSTA=1" von der RTI "ABAAA" beispielsweise eine RTI-Basisoperations-Variante "OVAR=3" zugewiesen. Hierdurch soll beispielsweise der Primär-Operationsablauf mit "OSTA=2" enden. Mit "OSTA=2" sendet die "C.POG" an die RTI "ABAAD" eine beispielsweise Operation "TYP.D.F".

Bei der Primär-Basisoperations-Variante "POVAR=6" wird der "C.POG" bei "OSTA=1" von der RTI "ABAAA" beispielsweise eine RTI-Basisoperations-Variante "OVAR=4" zugewiesen. Hierdurch soll beispielsweise der Primär-Operationsablauf mit "OSTA=1"enden. Die ABAAB-RTI-Basisoperations-Variante wird dabei in der "C.POG" nicht ausgewertet, deshalb besitzt sie "OVAR=X".

Bei der Primär-Basisoperations-Variante "POVAR=7" entspricht der Primär-Operationsablauf für "OSTA=1" und "OSTA=2" dem Primär-Basisoperationsablauf mit "POVAR=0". Für "OSTA=3" wird der "C.POG" von der RTI "ABAAD" beispielsweise eine RTI-Basisoperations-Variante "OVAR=3" zugewiesen.

In **Fig.240c** ist für eine Operation "OP=TYP.A.A" mit Modus "MOD=0" an "OG1" der RTI "2.1.1.1_ABAAA" eine beispielsweise Abhängigkeit der RTI-Basisoperations-Variation "OVAR" von beispielsweisen externen Signalen "E_AVAR" und internen Signalen "SVAR" der RTI "2.1.1.1_ABAAA" in einer "Wahrheitstabelle" dargestellt. Wie unter Fig.65 erläutert, steht "AVAR" für asynchrone Variation und "SVAR" für synchrone Variation, der Vorsatz "E_" kennzeichnet externe AVAR- und SVAR-Signale die von einer "RTI" empfangen werden.

Beispielsweise setzt sich "E_AVAR" aus den Signalen Hardware-Error und Software-Error, "SVAR" aus den Signalen Command-Parity-Error "CMDPERR", Address-Parity-Error "ADRPERR" und Data-Parity-Error "DATPERR" zusammen. In den Signalspalten von "E_AVAR" bzw. "SVAR" der Wahrheitstabelle steht eine Null "0" für "Signal=nicht wahr", eine Eins "1" für "Signal=wahr" und ein "X" für "Signal=beliebig". Wie bereits unter Fig.98a bis Fig.98h erläutert, können an der Bildung von "OVAR" zusätzlich zu Fehlerereignissen auch Entscheidungskriterien beteiligt sein, die entsprechende SVAR- bzw. AVAR-Signale generieren. Jeder RTI-OVAR-Typ besitzt eine eigene, unverwechselbare Kombination aus einer oder mehreren Koinzidenzen von SVAR- bzw. AVAR-Signalen, durch die Fehler-ereignisse oder/und Entscheidungskriterien definiert werden, die einen zur RTI-Basisoperation geänderten RTI-Operationsablauf zur Folge haben. Die Unterscheidung der RTI-OVAR-Typen erfolgt durch eine laufende Nummer. Für eine RTI-Basisoperation ist "OVAR=0". Die RTI-Basisoperations-Varianten werden mit "OVAR=1", "OVAR=2", usw., durchnumeriert.

### Beschreibung zu Fig.241-248:

Mit den nachfolgend gezeigten Beispielen wird die Erzeugung des Parallel-State "PSTA" für eine RTI-Datenverarbeitung erläutert. In den Beispielen ist der Elemente-State "ESTA" dargestellt, seine Generierung wurde vorangegangen beschrieben und deshalb nachfolgend nicht mehr erläutert,

**Fig.241** zeigt den Zustand der RTI-Elemente vor einer Datenverarbeitung. Dabei ist an den RTI-Inputports (PI1, PI2) und an den speichernden Elementen (SHR, REG1, RAM, REG2, REG3, REG4) der PSTA Null, das kombinatorische Element (ADD1) und der RTI-Outputport (PO1) besitzt noch keinen PSTA.

In **Fig.241a** hat das Schieberegister "SHR" Daten vom RTI-Inputport "PI1" in einem Vier-Bit-Streaming übernommen. Die Bildung des SHR-PSTA erfolgt unabhängig vom SHR-Empfangs-Modus (seriell oder parallel). Mit Datenübernahme wird der SHR-PSTA um Eins auf PSTA:1 erhöht. Gleichzeitig übernimmt "REG1" Einfach-Daten vom RTI-Inputport "PI2" und erhöht seinen PSTA auf Eins.

**Fig.241 b** zeigt die RAM-Funktion Read "RD" mit RAM-Adress-Übergabe von REG1. Der RAM-PSTA erhöht sich gegenüber dem PSTA des sendenden Elements (REG1-PSTA:1) um Eins auf RAM-PSTA:2.

In **Fig.241c** übergibt das RAM seine Lesedaten an REG3. Gegenüber dem RAM-PSTA:2 erhöht sich der REG3-PSTA um Eins auf PSTA:3.

In **Fig.241d** werden die SHR-Paralleldaten, PSTA:1, im REG2 mit PSTA:2 übernommen.

In **Fig.241e** erfolgt die Datenverarbeitung im ersten Datenverarbeitungs-Schritt (Daten-Verarbeitungs-Step "DVSTP1") mit der Addition der REG2-Daten mit den REG3-Daten im Addierer "ADD1". Im DVSTP1 besitzen kombinatorische Elemente, im Beispiel ADD1, noch keinen PSTA, jedoch einen ESTA.

**Fig.241f** zeigt die Weiterführung der Datenverarbeitung von Fig.241e mit DVSTP2, in dem das Additions-Ergebnis von ADD1 in REG4 übernommen wird. Für REG4 ergibt sich der PSTA:4 aus dem maximalen PSTA der sendenden Elemente REG2 und REG3 plus Eins. Mit Daten-Übernahme im zweiten Datenverarbeitungs-Schritt in einem speichernden Element oder einem RTI-Outputport, wird den sendenden Elementen ein Hold-Parallel-State "PSTA:H" zugewiesen, der aus dem PSTA bei Daten-Übernahme in einem speichernden Element oder einem RTI-Outputport gebildet wird. Für ein speicherndes Element ergibt sich der PSTA:H für die Zuweisung an die sendenden Elemente mit PSTA:H = PSTA minus Eins. Für einen RTI-Outputport ergibt sich der PSTA:H für die Zuweisung an die sendenden Elemente mit PSTA:H = PSTA. Im Beispiel Fig.241f wird beim Daten-Empfang von REG4 der PSTA:H zu den sendenden Elementen ADD1, REG2 und REG3 mit PSTA:H3 zugewiesen. Für REG3 ist PSTA:3 identisch mit PSTA:H3, deshalb wird dieser nicht notiert.

In **Fig.241g** besitzt REG4 den PSTA:4, der beim Daten-Empfang am RTI-Port "PO1" mit PSTA:4 zugewiesen wird.

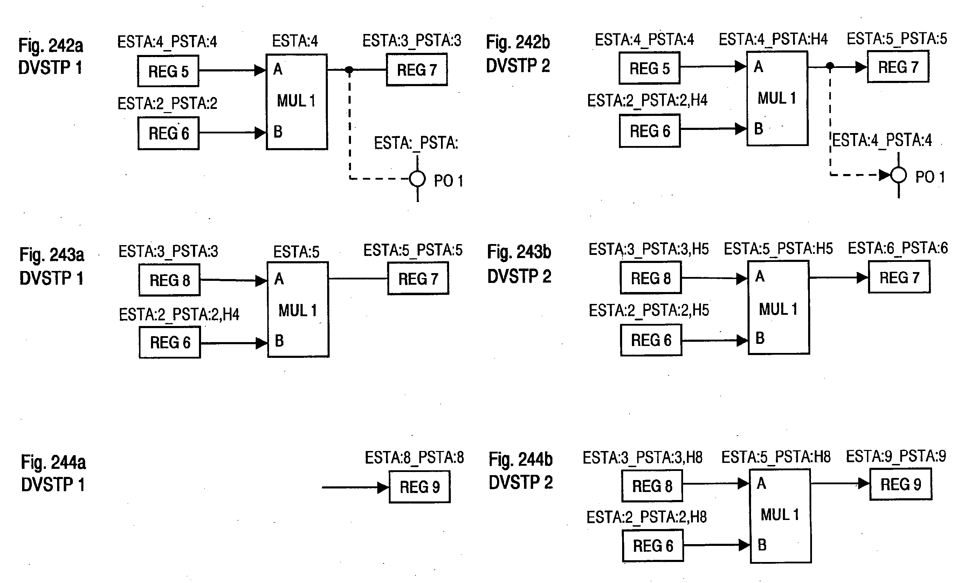

Nachfolgend werden mit **Fig.242a bis Fig.248b** weitere Beispiele der PSTA-Bildung erläutert. Dabei ist in **Fig.242a bis Fig.248a** der erste Daten-Verarbeitungs-Step "DVSTP1" und in **Fig.242b bis 248b** der zweite Daten-Verarbeitungs-Step "DVSTP2" je einer Datenverarbeitung dargestellt. Für ESTA, PSTA und PSTA:H wurden in Fig.242a bis Fig.248a beispielsweise Werte angenommen.

Im DVSTP1, **Fig.242a bis Fig.246a** werden Daten zweier Speicher-Elemente mit je einem kombinatorischen Element (MUL1, ADD2, ADD3) verknüpft. Dabei wird generell den kombinatorischen Elementen kein PSTA zugeteilt.

In **Fig.242b bis Fig.246b** werden im DVSTP2 die Ergebnis-Daten der kombinatorischen Elemente (MUL1, ADD2, ADD3) den Speicher-Elementen (REG7, REG9, REG6) bzw. den RTI-Outputports (PO1, PO2) zugewiesen und abgespeichert bzw. übernommen. Die Bildung von PSTA und PSTA:H wird im Folgenden für den DVSTP2 erläutert.

In **Fig.242b** besitzt REG5 den maximalen PSTA der sendenden Elemente mit PSTA:4, der mit plus Eins von REG7 mit PSTA:5 übernommen wird. Ist vor Daten-Übernahme eines speichernden Empfangs-Elements, beispielsweise bei REG7, der PSTA oder PSTA:H höher als der maximale PSTA der den Dateninput sendenden Elemente, beispielsweise bei REG5 und REG6, dann wird der PSTA des speichernden Empfangs-Elements mit der Daten-Übernahme gegenüber seinem maximalen PSTA oder PSTA:H vor der Daten-Übernahme um Eins erhöht. Der Hold-PSTA "PSTA:H" für die sendenden Elemente ergibt sich im DVSTP2 aus dem neu gebildeten PSTA beim Daten-Empfang eines Speicher-Elements. Es gilt: Neu gebildeter PSTA beim Daten-Empfang des Speicher-Elements, im Beispiel bei REG7 ist das PSTA:5, minus Eins, ergibt PSTA:H für die Zuweisung an die sendenden Elemente, im Beispiel wird PSTA:H4 für MUL1 und REG6 zugewiesen. Für REG5 wird PSTA:H4 nicht notiert, da er identisch zu PSTA:4 ist. Sendende Elemente im DVSTP2 können kombinatorische Elemente oder/und speichernde Elemente oder/und RTI-Inputports sein, denen ein entsprechender PSTA:H zugewiesen wird. Empfangs-Elemente im DVSTP2 sind speichernde Elemente oder RTI-Outputports.

In Fig.242b erfolgt im DVSTP2 alternativ zu REG7 die Daten-Übernahme vom RTI-Outputport "PO1". Dabei besitzt REG5 den maximalen PSTA der sendenden Elemente mit PSTA:4, der von PO1 übernommen wird. Ist vor Daten-Übernahme eines RTI-Outputports, beispielsweise bei PO1, der PSTA höher als der maximale PSTA der den Dateninput sendenden Elemente, beispielsweise bei REG5 oder REG6, dann wird der PSTA des Empfangs-Output-Elements, im Beispiel PO1, mit der Daten-Übernahme gegenüber seinem maximalen PSTA vor der Daten-Übernahme um Eins erhöht. Der Hold-PSTA "PSTA:H" für die sendenden Elemente ergibt sich im DVSTP2 aus dem neu gebildeten PSTA beim Daten-Empfang eines RTI-Outputports. Es gilt: Neu gebildeter PSTA beim Daten-Empfang eines RTI-Outputports, im Beispiel bei PO1 ist das PSTA:4, wird den sendenden Elementen mit PSTA:H zugewiesen, im Beispiel wird MUL1 und REG6 der PSTA:H4 zugewiesen. Für REG5 wird PSTA:H4 nicht notiert, da er identisch zu PSTA:4 ist.

In **Fig.243b** ist vor dem DVSTP2 der REG7-PSTA größer als der maximale PSTA der sendenden Speicher-Elemente REG5 und REG6. Deshalb wird mit DVSTP2 der PSTA des Empfangs-Speicher-Elements REG7 von PSTA:5 um Eins auf PSTA:6 erhöht. Die Zuweisung des PSTA:H an die den Dateninput sendenden Elemente (MUL1, REG8, REG6) ergibt sich mit REG7-PSTA:6 minus Eins zu PSTA:H5.

In gleicher Weise wie in Fig.243b erfolgt die Bildung von REG9-PSTA:9 und die von PSTA:H8 mit DVSTP2 in **Fig.244b,** auf der Basis von REG9-PSTA:8 vor dem DVSTP2, wie **Fig.244a** zeigt.

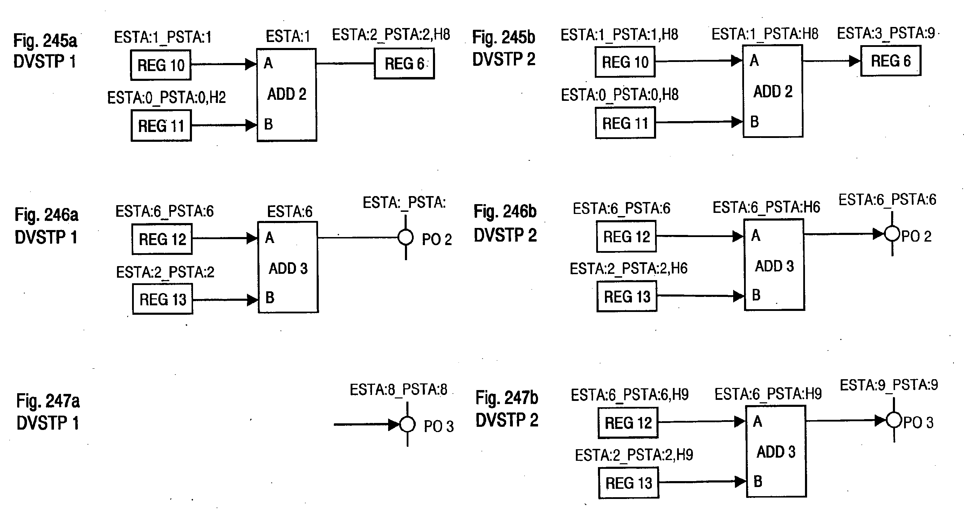

In **Fig.245a** wurde der maximale PSTA für REG6 mit PSTA:H8 angenommen. Wie oben erwähnt, besitzt hier REG11 einen PSTA:H2 aus einer vorherigen Verwendung. Damit ergibt sich mit DVSTP2 in **Fig.245b** ein REG6-PSTA:9 und ein PSTA:H8.

In **Fig.246b** wurde mit DVSTP2 von PO2 der maximale PSTA von den sendenden Speicher-Elementen mit REG12-PSTA:6 übernommen und entsprechend der PSTA:H6 gebildet.

In gleicher Weise wie in Fig.246b erfolgt die Bildung von PO3-PSTA:9 und die von PSTA:H9 mit DVSTP2 in **Fig.247b****,** auf der Basis von PO3-PSTA:8 vor dem DVSTP2, wie **Fig.247a** zeigt.

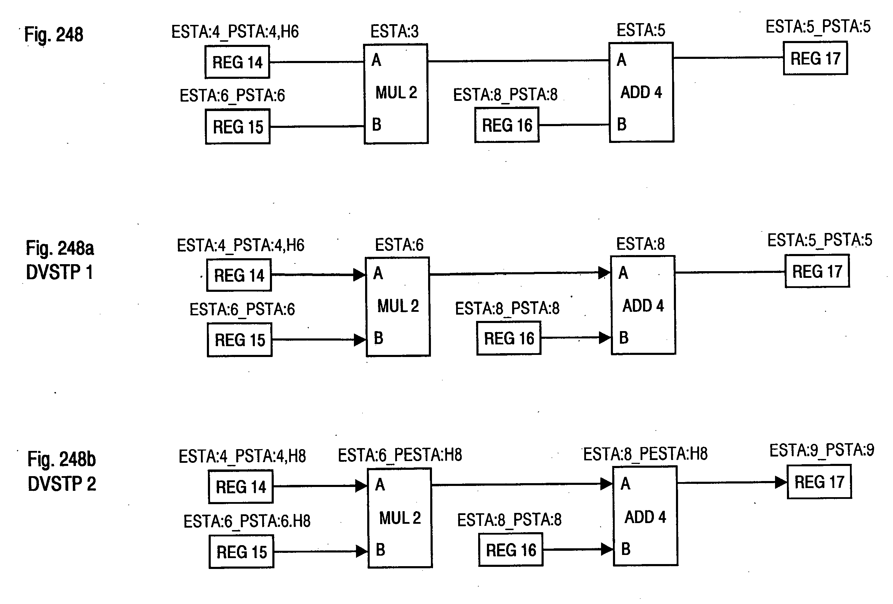

**Fig.248** zeigt eine Datenverarbeitungs-Anordnung mit zwei in Daten-Transfer-Richtung seriell angeordneten Kombinatorik-Elementen (MUL2, ADD4) mit angenommenen PSTA-Werten und noch ohne DVSTP.

In **Fig.248a** wird mit DVSTP1 den Kombinatorik-Elementen MUL2 und ADD4 der ESTA zugewiesen. Der MUL2-ESTA:6 resultiert aus dem REG15-ESTA:6, der ADD4-ESTA:8 aus dem REG16-ESTA:B.

Mit DVSTP2, **Fig.248b** wird das ADD4-Ergebnis in REG17 übernommen sowie der REG17-PSTA und der PSTA:H gebildet. Durch REG16-PSTA:8 wird der REG17-PSTA:9. Der PSTA:H8 ergibt sich durch REG17-PSTA:9 minus Eins und wird den Elementen ADD4, MUL2, REG14 und REG15 zugewiesen. Für REG16 wird PSTA:H8 nicht notiert, da er identisch zu PSTA:8 ist.

### Beschreibung zu Fig.249a-250b:

Die Behandlung des ESTA ist in **Fig.249a** für die Datenverarbeitung in Fig.241 a bis Fig.241g und in **Fig.249b** für die Datenverarbeitung in Fig.242a bis Fig.247b in einer Übersicht dargestellt.

Die Behandlung des PSTA ist in **Fig.250a** für die Datenverarbeitung in Fig.241a bis Fig.241g und in **Fig.250b** für die Datenverarbeitung in Fig.242a bis Fig.247b in einer Übersicht dargestellt.

Nachfolgend die Behandlung des ESTA, Aufbau der Übersicht und Bezeichnungen.

Die Übersicht in **Fig.249a** ist von links nach rechts in vier Blöcke eingeteilt: Angabe der Figuren zur Datenverarbeitung, Daten-Sender (Speicher-Element oder RTI-Inputport "PI"), Daten-Verarbeitung (Kombinatorik-Element), DatenEmpfänger (Speicher-Element oder RTI-Outputport "PO").

Die Bezeichnungen in den Blöcken bedeuten:
DVSTP: Datenverarbeitungs-Step (die Klammer-Werte stehen für die Reihenfolge der Datenverarbeitung), ELEM: Element, FCT: Elemente-Funktion (LF:Least-Bit First, RD: Read-Data aus RAM, PD: Parallel-Data aus SHR), ASTA: Elemente-Aktions-State (wird mit jeder Beteiligung an der Datenverarbeitung um Eins hochgezählt), ESTA: Elemente-State, (ESTA): Elemente-State vor einem DVSTP.

Wie aus Fig.249a ersichtlich, erfolgt der Transfer der ersten Datenverarbeitung von Fig.241a gleichzeitig mit DVSTP1 von PI1 und PI2 zu den Speicher-Elementen SHR und REG1. Der Transfer der zweiten, dritten und vierten Datenverarbeitung, entsprechend Fig.241b, Fig.241c und Fig.241d erfolgt mit DVSTP1 von Speicher-Element zu Speicher-Element. In der fünften Datenverarbeitung, Fig.241e und 241f, erfolgt der Transfer mit DVSTP1 von REG2 und REG3 zu ADD1 und mit DVSTP2 von ADD1 zu REG4. Bei der sechsten Datenverarbeitung, Fig.241g, erfolgt der Daten-Transfer mit DVSTP1 von REG4 zu PO1.

In **Fig.249b** ist eine Übersicht über die ESTA-Behandlung bei der Datenverarbeitung nach Fig.242 bis Fig.247 gegeben. Der Aufbau der Übersicht und die Bezeichnungen sind identisch zu Fig.249a. Bei den Datenverarbeitungs-Beispielen erfolgt der Daten-Transfer mit DVSTP1 von den Speicher-Elementen zu den Kombinatorik-Elementen und mit DVSTP2 von den Kombinatorik-Elementen zu den Speicher-Elementen oder zu den RTI-Outputports. Bei Fig.244a wurden für das Empfangs-Element REG9 und bei Fig.247a für das Empfangs-Element PO3 spezielle ESTA-Werte angenommen, die mit DVSTP1 übernommen wurden.

Eine Übersicht über die PSTA-Behandlung bei der Datenverarbeitung nach Fig.241a bis Fig.247g ist mit **Fig.250a** und nach Fig.242a bis Fig.247b mit **Fig.250b** gegeben. Der Aufbau der Übersicht, die Bezeichnungen und die Daten-Transfer-Algorithmen sind in der identisch zur Fig.249a und in der Fig.250b identisch zur Fig.249b. Die Klammerwerte (PSTA) und (PSTA:H) sind Werte vor einem DVSTP. Der PSTA des Empfangs-Speicher-Elements oder RTI-Outputports weist mit Daten-Empfang (Load) den sendenden Elementen den entsprechenden PSTA:H (Hold) zu. In Fig.250a, Spalte PSTA, ist das PI1-Sende-Streaming mit "(0:3)" und das korrespondierende SHR-Empfangs-Streaming mit "(1:4)" notiert.

Im SPV wird der Elemente-State "ESTA", der Parallel-State "PSTA", der Hold-Parallel-State "PSTA:H" und der Aktions-State "ASTA" automatisch erzeugt.

Durch ESTA sind an jedem Element für jeden DVSTP einer RTI-Operation die Daten eindeutig definiert. Ausserdem zeigt ESTA exakt die logische Tiefe in Datenverarbeitungs-Schritten (DVSTPs) an, ausgehend von den RTI-Inputports in Transfer-Richtung über die seriell angesteuerten Empfangs-Speicher-Elemente bis zu den RTI-Outputports.

Durch PSTA ist festgelegt, welche Elemente gleichzeitig eine Datenverarbeitung ausführen. Der Daten-Transfer für eine Datenverarbeitung kann wie folgt ausgeführt werden:
Vom RTI-Inputport über ein oder mehrere Kombinatorik-Elemente zu einem Empfangs-Speicher-Element oder direkt, ohne Kombinatorik-Elemente, zum Empfangs-Speicher-Element, oder
von Sende-Speicher-Elementen über ein oder mehrere Kombinatorik-Elemente zu einem Empfangs-Speicher-Element oder RTI-Outputport, oder direkt, ohne Kombinatorik-Elemente, zum Empfangs-Speicher-Element oder RTI-Outputport.

Mit PSTA:H ist für ein Speicher-Element die erforderliche Daten-Verfügbarkeit festgelegt, nach der erst wieder neue Daten übernommen werden können. Die Übernahme neuer Daten in einem Speicher-Element erfolgt generell mit PSTA:H plus Eins. Für Kombinatorik-Elemente stellt PSTA:H sicher, dass ein Kombinatorik-Element in einem PSTA nicht mehrfach verwendet werden kann.

Der ASTA wird bei jedem Element mit jeder Datenverärbeitungs-Aktion um Eins hochgezählt und ist vor Beginn einer RTI-Operation/-Datenverarbeitung Null. Beschreibung zu Fig.251-254:

**Fig.251** zeigt in der RTI_A eine Elemente-Konfiguration mit Angabe von ESTA "E", PSTA "P" und VAR "V" noch vor Beginn einer Datenverarbeitung. Die Elemente-Input-Variation "VAR" ist unter Fig.98a bis Fig.98h beschrieben. ASTA wurde nicht dargestellt, nachdem alle Elemente nur eine Aktion im Datenverarbeitungs-Ablauf ausführen.

In **Fig.251a bis Fig.251i** werden für die RTI_A zu einer Basis-Operation "OP.1" acht Basis-Operations-Varianten dargestellt. Die Abhängigkeit der Basis-Operations-Varianten von Kriterien und Fehler-Ereignissen ist in **Fig.252** dargestellt.

**Fig.251a** zeigt den Datenverarbeitungs-Ablauf einer Basis-Operation "OP.1". Dabei ist die Operations-Variation Null "OVAR0". Die zu OVAR0 korrespondierenden Kriterien (CR) und Fehler-Ereignisse (Parity-Error "PE") sind: CR1=00, CR2=00, CR3=00, CR4=X, PE1=PE2=PE3=PE4=0.

Die Anzeigen und die Elemente für die Bildung von "CR" und "PE" sind grau markiert.

**Fig.251b** zeigt die erste Basis-Operations-Variation OVAR1 mit CR1=00, CR2=00, CR3=01, CR4=X, PE1=PE2=PE3=PE4=0. Dabei wird gegenüber der Basis-Operation der REG16-Output geändert an PO2 zugewiesen. Nachdem das Element PO2 nicht in der Basis-Operation verwendet wurde, wird die Elemente-Ansteuer-Variation "VAR" mit "V+1" gekennzeichnet. Bei erneuter geändeter PO2-Ansteuerung würde VAR um Eins erhöht und mit "V+2" gekennzeichnet, usw.. Im Fall einer geänderten Ansteuerung von PO2 und gleichzeitiger Verwendung in der Basis-Operation, würde die PO2-Ansteuer-Variation "VAR" mit "V1" gekennzeichnet. Bei erneuter geändeter PO2-Ansteuerung würde VAR um Eins erhöht und mit "V2" gekennzeichnet, usw.. Die Behandlung von PO2-VAR gilt für alle Elemente, die in den Beispielen von Fig.251a bis Fig.251i verwendet werden.

**Fig.251c** zeigt die zweite Basis-Operations-Variation OVAR2 mit CR1=01, CR2=00, CR3=00, CR4=X, PE1=PE2=PE3=PE4=0. Dabei erfolgt eine geänderte Ansteuerung gegenüber der Basis-Operation an MUL1/A mit REG8-Output.

**Fig.251d** zeigt die dritte Basis-Operations-Variation OVAR3 mit CR1=01, CR2=00, CR3=01, CR4=X, PE1=PE2=PE3=PE4=0. Dabei erfolgt eine geänderte Ansteuerung gegenüber der Basis-Operation an MUL1/A mit REG8-Output und an PO2 mit REG16-Output.

**Fig.251e** zeigt die vierte Basis-Operations-Variation OVAR4 mit CR1=00, CR2=01, CR3=X, CR4=01, PE1=PE2=PE3=PE4=0. Dabei werden gegenüber der Basis-Operation folgende neue Elemente angesteuert: ADD1, REG13, ADD2, REG17, PO3, CMP4 und REG19.

**Fig.251f** zeigt die fünfte Basis-Operations-Variation OVAR5 mit CR1=00, CR2=01, CR3=X, CR4=01, PE1=PE2=PE3=PE4=0. Dabei werden gegenüber der Basis-Operation folgende neue Elemente angesteuert: ADD1, REG13, ADD2, REG17, PO3, CMP4 und REG19. Ausserdem wurde gegenüber OVAR4 der REG17-Output geändert PO4 zugewiesen.

**Fig.251g** zeigt die sechste Basis-Operations-Variation OVAR6 mit CR1=01, CR2=01, CR3=X, CR4=00, PE1=PE2=PE3=PE4=0. Dabei werden gegenüber der Basis-Operation folgende neue Elemente angesteuert: ADD1, REG13, ADD2, REG17, PO3, CMP4 und REG19. Ausserdem wurden gegenüber OVAR5 folgende Ansteuerungen geändert: ADD1/B wurde der REG8-Output und PO3 der REG17-Output zugewiesen.

**Fig.251h** zeigt die siebte Basis-Operations-Variation OVAR7 mit CR1=01, CR2=01, CR3=X, CR4=01, PE1=PE2=PE3=PE4=0. Dabei werden gegenüber der Basis-Operation folgende neue Elemente angesteuert: ADD1, REG13, ADD2, REG17, PO3, CMP4 und REG19. Ausserdem wurde gegenüber OVAR6 der REG8-Output dem RTI-Outputport PO4 zugewiesen.

**Fig.251i** zeigt die achte Basis-Operations-Variation OVAR8 mit CR1=X, CR2=X, CR3=X, CR4=X, PE1=1 or PE2=1 or PE3=1 or PE4=1. Dabei werden nur noch die Elemente für die Bildung von CR1, CR2, PE1, PE2, PE3 und PE4 angesteuert.

**Fig.252** zeigt für die vorangegangen beschriebenen Datenverarbeitungs-Beispiele in der RTI_A, Fig.251a bis 251i, die Bildung der Codierung der SVAR-Signale CR1 bis CR4 und PE1 bis PE4 mit Zuordnung zu OVAR0 bis OVAR8.

Die Synchron-Variations-Signale "SVAR" werden in der RTI_A mit CR1, CR2, CR3, CR4 und PE1, PE2, PE3, PE4, erzeugt. Bei der Steuerung des Datenverarbeitungs-Ablaufs muß auf die Gültigkeit von SVAR gewartet werden. Auf die Gültigkeit von AVAR-Signalen ist nicht zu warten, sie werden nur abgefragt.

Die Signale "AVAR" (Asynchrones Variations-Signal) in der RTI und die von extern der RTI zugeführten Signale "E_SVAR", "E_AVAR", wurden in den Datenverarbeitungs-Beispielen der RTI_A nicht verwendet.

**Fig.253** zeigt die Zuordnung der Datenverarbeitungs-Aktivität jedes Elements mit seiner Elemente-Input-Variation "VAR" zum Parallel-State "PSTA" für OVAR0 bis OVAR8. Für Elemente die mehr als einen DVSTP ausführen, im Beispiel nicht der Fall, kann in der Spalte "VAR" ein entsprechender Wert für ASTA größer Eins zugeordnet werden. VAR=0 "VAR0" ist der Elemente-Input für die Basis-Operation "OP.1" in der "RTI_A". VAR=1 "VAR1" ist eine erste Elemente-Input-Variation gegenüber VAR0. VAR+1 bedeutet die Verwendung von Elementen, die bei der Basis-Operation nicht verwendet wurden. VAR+2 bedeutet einen gegenüber VAR+1 geänderten Elemente-Input. VAR wird vom SPV automatisch erzeugt. Die SVAR-Signale CR1 bis CR4 und PE1 bis PE4 sind mit PSTA=2 gültig. Die SVAR-Signale und die Elemente zur Bildung der SVAR-Signale sind in Fig.253 grau markiert. Der Basis-Operation (OVAR0) und jeder Basis-Operations-Variation (OVAR1 bis OVAR8) ist eine bestimmte Codierung aus Operationsablauf- und/oder FehlerKriterien, im Beispiel ist das die SVAR-Signal-Codierung, zugeordnet, so dass mit Gültigkeit der Codierung aus Operationsablauf- und/oder Fehler-Kriterien, im Beispiel ist das die Codierung aus SVAR-Signalen, OVAR definiert ist.

Mit den oben genannten Festlegungen ist in jedem PSTA für jede Codierung aus Operationsablauf- und/oder Fehler-Kriterien, im Beispiel ist das die SVAR-Signal-Codierung, die Ansteuerung des Daten-Inputs (VAR) für jedes Element definiert. Damit kann für einen kompletten RTI-Operationsablauf die SPV-Spezifikation beispielsweise in eine Programmier-Hochsprache ("C", "C++", "VHDL", "VERILOG", etc.) compiliert werden, in dem jedem Element für jeden DVSTP mit "if, then, else" die Codierung der Operationsablauf- und/oder Fehler-Kriterien zugeordnet werden.

Die Zuordnung der Codierung der Operationsablauf- und/oder Fehler-Kriterien (SVAR, AVAR, E_SVAR, E_AVAR) zu jedem Element für jeden DVSTP, im Beispiel die SVAR-Signale CR1 bis CR4 und PE1 bis PE4, setzt voraus, dass zu jedem Elemente-DVSTP die entscheidenden SVAR- oder/und E_SVAR-Signale gültig sind.

Die SVAR-Signale werden ausschließlich bei einem RTI-Operationsablauf in der RTI erzeugt, die E_SVAR-Signale werden der RTI von aussen zugeführt. Im Beispiel (Fig.251, Fig.251a-Fig.251i, Fig.252, Fig.253) wird der Operationsablauf von "OP.1" in der RTI_A nur von SVAR-Signalen gesteuert. Im SPV wird bei der Spezifizierung einer RTI-Operation automatisch auf SVAR-Signal-Gültigkeit für alle DVSTPs der an der Datenverarbeitung beteiligten Elemente geprüft.

In Fig.253 ist die SVAR-Signal-Gültigkeit für die DVSTPs der Elemente ADD1, REG13, ADD2, REG17, PO3, PO4, CMP4 und REG19 nicht erfüllt. Die DVSTPs von Elementen, die noch ohne SVAR-Signal-Gültigkeit sind, werden im SPV automatisch zu höheren PSTA-Werten hin verschoben, bei denen sie SVAR-Signal-Gültigkeit besitzen. Im Beispiel werden die DVSTPs der Elemente ADD1, REG13, ADD2, REG17, PO3, PO4, CMP4 und REG19 um plus einem PSTA-Wert verschoben, wie Fig.254 zeigt.

Bei E_SVAR-Signalen wird auf die Signal-Gültigkeit für VAR-Entscheidungen bei Elemente-DVSTPs im entsprechenden PSTA gewartet.

AVAR- und E_AVAR-Signale werden bei Elemente-DVSTPs nur abgefragt, auf die Signal-Gültigkeit wird nicht gewartet.

## Patentansprüche

1. Computergestütztes Entwicklungsverfahren zur Erzeugung von Hardware-Systemen oder/und Software-Systemen, bestehend aus Komponenten/Objekten unterschiedlicher Wertigkeit, die in den niederwertigsten Komponenten/Objekten eine beliebige Anzahl von Elementen umfassen können wobei der Datenverarbeitungsablauf durch sequenzielle Datenverarbeitungssteps (DVSTPs) gebildet wird, **gekennzeichnet durch** folgende Schritte:
- Definieren von hierarchischen Operationen und Verteilung zu den Komponenten/Objekten **durch** eine einheitliche Anordnung von Operationsgruppen, bestehend aus Intern-Primär-Operationsgruppen (IPOGn) für die Bildung von Intern-Primär-Operationen (IPOPn) aus Signal-Koinzidenzen und Umsetzung einer Intern-Primär-Operation (IPOP) in eine oder mehrere Operationen (OPn) und Verteilung zu den niederwertigsten Komponenten/Objekten (Register-Transfer-Instanzen "RTIn"), oder/und
- umsetzen einer Intern-Primär-Operation (IPOP) einer Intern-PrimärOperationsgruppe (IPOG) in eine oder mehrere Primär-Operationen (POPn) und Verteilung zu Primär-Operationsgruppen (POGn),
- umsetzen einer Primär-Operation (POP) einer Primär-Operationsgruppe (POG) in eine oder mehrere Operationen (OPn) und Verteilung zu einer oder mehreren Register-Transfer-Instanzen (RTIn),
- Anordnung einer oder mehrerer Operationsgruppen (OGn) in einer Register-Transfer-Instanz (RTI) für den Empfang von Operationen (OPn), die in Abhängigkeit von Bedingungen und Fehlerereignissen (Kriterien) den Datenverarbeitungsablauf in einer Register-Transfer-Instanz (RTI) steuern,
- wobei jede Register-Transfer-Instanz (RTI) Elemente aufweist, mit denen die Entwicklung der Datenverarbeitung aus Operationen (OPn) in sequenziellen Datenverarbeitungs-Steps (DVSTPs) erfolgt.

2. Computergestütztes Entwicklungsverfahren zur Erzeugung von Hardware-Systemen oder/und Software-Systemen, bestehend aus Komponenten/Objekten unterschiedlicher Wertigkeit, die in den niederwertigsten Komponenten/Objekten eine beliebige Anzahl von Elementen umfassen können wobei der Datenverarbeitungsablauf durch sequenzielle Datenverarbeitungssteps (DVSTPs) gebildet wird, **gekennzeichnet durch** folgende Schritte:
- Definieren einer Operation (OP) einer Register-Transfer-Instanz (RTI), in Abhängigkeit von Bedingungen und Fehlerereignissen (Kriterien), getrennt in RTI-Basisoperation und einzelnen RTI-Basisoperations-Varianten, die **durch** eine RTI-Basisoperations-Varianten-Nummer (OVARx) definiert sind,
- die RTI-Basisoperations-Varianten-Nummer (OVARx) wird für eine RTI-Basisoperation gleich Null (OVAR0) gesetzt und für RTI-Basisoperations-Varianten fortlaufend durchnumeriert (OVAR1, OVAR2, ...),
- die in einer Intern-Primär-Operationsgruppe (IPOG) oder einer PrimärOperationsgruppe (POG) definierten Operationen (OPn) werden einer oder mehreren Register-Transfer-Instanzen (RTIn) zugewiesen, in denen die Datenverarbeitung mit Bildung der RTI-Basisoperations-Varianten-Nummer (OVARx), in Abhängigkeit von den Bedingungen und Fehlerereignissen (Kriterien), entwickelt wird,
- **durch** Zuweisung der RTI-Basisoperations-Varianten-Nummern (OVARx), nach Entwicklung der Datenverarbeitung in den Register-Transfer-Instanzen (RTIn),an die Intern-Primär-Operationsgruppe (IPOG) oder an die Primär-Operationsgruppe (POG), von der die RTI-Operationen (OPn) zugewiesen wurden, werden nachfolgende RTI-Operationen (OPn) ergebnisabhängig definiert.

3. Computergestütztes Entwicklungsverfahren zur Erzeugung von Hardware-Systemen oder/und Software-Systemen, bestehend aus Komponenten/Objekten unterschiedlicher Wertigkeit, die in den niederwertigsten Komponenten/Objekten eine beliebige Anzahl von Elementen umfassen können wobei der Datenverarbeitungsablauf durch sequenzielle Datenverarbeitungssteps (DVSTPs) gebildet wird, **gekennzeichnet durch** folgende Schritte:
- Die Zuweisung der RTI-Basisoperations-Varianten-Nummern (OVARx) von den Register-Transfer-Instanzen (RTIn) an die Primär-Operationsgruppe (POG) definiert eine Primär-Basisoperations-Varianten-Nummer (POVARx) der Primär-Operationsgruppe (POG),
- die Primär-Basisoperations-Varianten-Nummer (POVARx) wird für eine Primär-Basisoperation gleich Null (POVAR0) gesetzt, wenn alle von der Primär-Operationsgruppe (POG) an die Register-Transfer-Instanzen (RTIn) zugewiesenen Operationen (OPn) als RTI-Basisoperationen (OVAR0) abgelaufen sind,
- die Primär-Basisoperations-Varianten-Nummer (POVARx) wird größer Null (POVAR1, POVAR2, ...) gesetzt, wenn eine oder mehrere von der Primär-Operationsgruppe (POG) an die Register-Transfer-Instanzen (RTIn) zugewiesene Operationen (OPn) als RTI-Basisoperations-Varianten (OVAR1, OVAR2, ...) abgelaufen sind,
- die Primär-Basisoperations-Varianten-Nummern (POVARx) von PrimärOperationsgruppen (POGn) werden an die Intern-Primär-Operationsgruppe (IPOG) zugewiesen, von der die Primär-Operationen (POPn) zugewiesen wurden,
- **durch** Zuweisung der Primär-Basisoperations-Varianten-Nummern (POVARx) von den Primär-Operationsgruppen (POGn) an die Intern-PrimärOperationsgruppe (IPOG), von der die Primär-Operationen (POPn) zugewiesen wurden, werden nachfolgende Primär-Operationen (POPn) ergebnisabhängig definiert.

4. Computergestütztes Entwicklungsverfahren zur Erzeugung von Hardware-Systemen oder/und Software-Systemen, bestehend aus Komponenten/Objekten unterschiedlicher Wertigkeit, die in den niederwertigsten Komponenten/Objekten eine beliebige Anzahl von Elementen umfassen können wobei der Datenverarbeitungsablauf durch sequenzielle Datenverarbeitungssteps (DVSTPs) gebildet wird, **gekennzeichnet durch** folgende Schritte:
- In einer Register-Transfer-Instanz (RTI) erhalten alle Elemente eine Variations-Nummer (VARy), die für eine RTI-Operation (OP) an jedem ElementeInput für jeden Datenverarbeitungsstep (DVSTP) die Zuweisung von Sendedaten automatisch definiert,
- bei RTI-Basisoperationen (OVAR0) werden für alle Elemente einer Register-Transfer-Instanz (RTI) die Variations-Nummern (VARy) gleich Null (VAR0) gesetzt,
- bei RTI-Basisoperations-Varianten (OVAR1, OVAR2, ...) werden für die Elemente einer Register-Transfer-Instanz (RTI) die Werte der Variations-Nummern (VARy) größer oder gleich Null gesetzt,
- wobei für eine RTI-Operation (OP) in einer Register-Transfer-Instanz (RTI) eine bestimmte Kombination aus Bedingungen und Fehlerereignissen (Kriterien) einer bestimmten Kombination der den Elementen zugeordneten Variations-Nummern (VARy) entspricht,
- Elemente in einer RTI-Basisoperations-Variante, die nicht in der RTI-Basisoperation verwendet wurden erhalten automatisch eine Zusatzkennung (+) in der Variations-Nummer (VARy) mit VAR+y,
- alle Elemente einer Register-Transfer-Instanz (RTI) erhalten zusätzlich zur Variations-Nummer (VARy) einen Aktions-State (ASTA), der für eine RTI-Operation (OP) die Anzahl der Daten-Empfangsvorgänge an Elementen definiert und den Variations-Nummern (VARy) zugeordnet ist,
- die Variations-Nummern (VARy) und die Aktions-States (ASTA) werden bei der Entwicklung der Datenverarbeitung in einer Register-Transfer-Instanz (RTI) für jeden Elemente-Datenempfang automatisch gebildet.

5. Computergestütztes Entwicklungsverfahren zur Erzeugung von Hardware-Systemen oder/und Software-Systemen, bestehend aus Komponenten/Objekten unterschiedlicher Wertigkeit, die in den niederwertigsten Komponenten/Objekten eine beliebige Anzahl von Elementen umfassen können wobei der Datenverarbeitungsablauf durch sequenzielle Datenverarbeitungssteps (DVSTPs) gebildet wird, **gekennzeichnet durch** folgende Schritte:
- In einer Register-Transfer-Instanz (RTI) erhalten RTI-Inputports (PI) und speichernde Elemente, beispielsweise Register (REG), Counter (CNT), Shiftregister (SHR), Memory (MEM), einen Parallel-State (PSTA) und einen Parallel-State-Hold (PSTA:H), wobei der Parallel-State-Hold (PSTA:H) gleich oder größer als der Parallel-State (PSTA) ist und der Parallel-State (PSTA) und der Parallel-State-Hold (PSTA:H) bei RTI-Operationsbeginn auf Null gesetzt wird,
- der Parallel-State-Hold (PSTA:H) eines speichernden Elements wird mit jedem Datenempfang, unabhängig vom Empfang von Einfachdaten oder Mehrfachdaten (Streaming), um Eins erhöht und der PSTA-Wert gleich dem PSTA:H-Wert gesetzt, wenn der Parallel-State-Hold (PSTA:H) vor dem Datenempfang gleich oder größer als der maximale Parallel-State (PSTA) der den Dateninput sendenden Elemente ist, sonst wird der maximale PSTA-Wert der den Dateninput sendenden Elemente um Eins erhöht vom Parallel-State (PSTA) und Parallel-State-Hold (PSTA:H) des empfangenden speichernden Elements übernommen,
- mit dem Datenempfang eines speichernden Elements wird stets der gebildete "PSTA-Wert minus Eins" zurückgeführt und vom Parallel-State-Hold (PSTA:H) der den Dateninput sendenden Elemente und RTI-Inputports (PI) übernommen, wenn ihr PSTA:H-Wert kleiner als der zurückgeführte "PSTA-Wert minus Eins" ist,
- für speichernde Elemente wird bei Ausführung von Funktionssteps, beispielsweise Count, unabhängig von der Anzahl der Funktionssteps, der PSTA:H-Wert um Eins erhöht und der PSTA-Wert gleich dem PSTA:H-Wert gesetzt und mit dem letzten Funktionsstep ein Gültigkeits-Signal (Valid) erzeugt,
- beim Datenwechsel an RTI-Inputports (PI) wird der PSTA-Wert gleich dem PSTA:H-Wert gesetzt,
- Outputports (PO) einer Register-Transfer-Instanz (RTI) erhalten einen Parallel-State (PSTA), der bei RTI-Operationsbeginn auf Null gesetzt wird,
- der Parallel-State (PSTA) eines RTI-Outputports (PO) wird mit jeder Datenübernahme, unabhängig von der Übernahme von Einfachdaten oder Mehrfachdaten (Streaming), um Eins erhöht, wenn der Parallel-State (PSTA) vor der Datenübernahme gleich oder größer als der maximale Parallel-State (PSTA) der den Dateninput sendenden Elemente ist, sonst wird der maximale PSTA-Wert der den Dateninput sendenden Elemente vom Parallel-State (PSTA) des empfangenden RTI-Outputports (PO) übernommen,
- mit dem Datenempfang des RTI-Outputports (PO) wird stets der gebildete PSTA-Wert zurückgeführt und vom Parallel-State-Hold (PSTA:H) der den Dateninput sendenden Elemente übernommen, wenn ihr PSTA:H-Wert kleiner als der zurückgeführte PSTA-Wert ist,
- der Parallel-State-Hold (PSTA:H) eines kombinatorischen Elements (COM) übernimmt den zurückgeführten "PSTA-Wert minus Eins" eines speichernden Elements oder den zurückgeführten PSTA-Wert eines RTI-Outputports (PO), wenn die bestehenden PSTA:H-Werte des kombinatorischen Elements (COM) ungleich dem zurückgeführten "PSTA-Wert minus Eins" eines speichernden Elements oder "PSTA-Wert" eines RTI-Outputports (PO) sind, sonst erfolgt eine automatische Ergänzung **durch** ein zusätzliches kombinatorisches Element (COM) gleichen Typs (Erhöhung der Elemente-Anzahl) im Transferpfad des speichernden Elements oder des RTI-Outputports (PO),
- in kombinatorischen Elementen (COM) wird mit jedem Datenverarbeitungs-Step (DVSTP) der maximale Parallel-State (PSTA) der den Dateninput sendenden Elemente in Transferrichtung durchgereicht,
- bei der Entwicklung der Datenverarbeitung in einer Register-Transfer-Instanz (RTI) werden der Parallel-State (PSTA) und der Parallel-State-Hold (PSTA:H) automatisch gebildet,
- wobei der Parallel-State (PSTA) in einer Register-Transfer-Instanz (RTI) für eine RTI-Operation (OP) die Elemente als Empfänger, die jeweils gleichzeitig einen Datenverarbeitungs-Step (DVSTP) ausführen (parallele Datenverarbeitung) und die Reihenfolge der Datenverarbeitungs-Steps (DVSTPs) von Elementen (serielle Datenverarbeitung) in Folge mit PSTA1, PSTA2, PSTA3, usw., automatisch definiert, während der Parallel-State-Hold (PSTA:H) die Datenhaltung der speichernden Elemente und der RTI-Inputports im Datenverarbeitungsablauf automatisch sichert.

6. Computergestütztes Entwicklungsverfahren zur Erzeugung von Hardware-Systemen oder/und Software-Systemen, bestehend aus Komponenten/Objekten unterschiedlicher Wertigkeit, die in den niederwertigsten Komponenten/Objekten eine beliebige Anzahl von Elementen umfassen können wobei der Datenverarbeitungsablauf durch sequenzielle Datenverarbeitungssteps (DVSTPs) gebildet wird, **gekennzeichnet durch** folgende Schritte:
- Automatische Erzeugung eines Compiler-Listings für jede Operation (OP) einer Register-Transfer-Instanz (RTI) aus den gebildeten PSTA-Werten, den RTI-Basisoperations-Varianten-Nummern (OVARx), den Variationsnummern (VARy) und den Aktions-States (ASTA) der an der Datenverarbeitung beteiligten Elemente,
- automatische Compilierung des Compiler-Listings in eine Hochsprache, für die entwickelten Hardware-Komponenten/Objekte in "VHDL", "Verilog", etc., inklusive der automatischen Erzeugung der Steuerung für die Datenverarbeitung in jeder Operation (OP) der Register-Transfer-Instanzen (RTIn), oder/und für die entwickelten Software-Komponenten/Objekte in "C", "C++", etc..

7. Computergestütztes Entwicklungsverfahren nach Anspruch 2 oder 3, **gekennzeichnet durch** folgenden weiteren Schritt:
- Erzeugen einer RTI-Basisoperations-Variante **durch** Änderung oder/und Erweiterung von Datenverarbeitungs-Steps (DVSTPs) einer RTI-Referenz-Operation (OP), einer RTI-Basisoperation oder einer bereits vorliegenden RTI-Basisoperations-Variante.

8. Computergestütztes Entwicklungsverfahren nach Anspruch 1, 2, 3 oder 6, **gekennzeichnet durch** folgende weitere Schritte:
- Die Bedingungen und Fehler-Ereignisse, die **durch** Signale intern in der Register-Transfer-Instanz (RTI) gebildet oder/und von aussen in die Register-Transfer-Instanz (RTI) geführt werden, definieren für eine Operation (OP) in einer Register-Transfer-Instanz (RTI) zwei Signaltypen, einen Signaltyp Synchron-Variation (SVAR) und einen Signaltyp Asynchron-Variation (AVAR), die eine Operation (OP) in einer Register-Transfer-Instanz (RTI) unterschiedlich steuern,
- wird der Signaltyp Synchron-Variation (SVAR) intern in einer RegisterTransfer-Instanz (RTI) erzeugt und ist sein Parallel-State (PSTA) für die Auswertung der Bedingungen und Fehler-Ereignisse gleich oder größer als der Parallel-State (PSTA) für die Ausführung der zugehörigen Datenverarbeitungs-Steps (DVSTPs), die von den Bedingungen und Fehler-Ereignissen abhängen, dann wird im Compiler-Listing der Parallel-State (PSTA) für die Ausführung der Datenverarbeitungs-Steps (DVSTPs) gegenüber dem Parallel-State (PSTA) für die Auswertung der Bedingungen und Fehler-Ereignisse automatisch um einen Parallel-State (PSTA) erhöht,
- empfängt eine Register-Transfer-Instanz (RTI) von aussen den Signaltyp Synchron-Variation (SVAR), dann wird in einer RTI-Operation (OP) bei der Auswertung der Bedingungen und Fehler-Ereignisse an definierten Parallel-States (PSTAs), vor Ausführung von Datenverarbeitungs-Steps (DVSTPs), auf die Signal-Gültigkeit der Bedingungen und Fehler-Ereignisse, **durch** ein Gültigkeits-Signal (Valid), gewartet,
- beim Signaltyp Asynchron-Variation (AVAR) wird in einer Operation (OP) in einer Register-Transfer-Instanz (RTI) bei der Auswertung der Bedingungen und Fehler-Ereignisse nur der aktuelle Zustand ohne Wartezeit abgefragt.

9. Computergestütztes Entwicklungsverfahren nach Anspruch 1, 2 oder 3, **gekennzeichnet durch** folgende weitere Schritte:
- Für die Anforderung von Operationen (OPn) und die Rückmeldung der Ausführung von Operationen (OPn) wird eine systemübergreifende einheitliche Controlsignal-Struktur verwendet, die aus folgenden Controlsignalen besteht:
- Operations-Controlsignale (OCTR) für die Zuweisung von Operationen (OPn) von einer Intern-Primär-Operationsgruppe (IPOG) oder einer PrimärOperationsgruppe (POG) zu Operationsgruppen (OGn) von RegisterTransfer-Instanzen (RTin), und von Primär-Operationen (POPn) von einer Intern-Primär-Operationsgruppe (IPOG) zu Primär-Operationsgruppen (POGn),
- Basisoperations-Varianten-Signale (OVAR) für die Rückmeldung der Ausführung einer Operation (OP) in einer Register-Transfer-Instanz (RTI), in Abhängigkeit von Bedingungen und Fehlerereignissen, zu einer Intern-PrimärOperationsgruppe (IPOG) oder einer Primär-Operationsgruppe (POG), von der die Operation (OP) zugewiesen wurde,
- Primär-Basisoperations-Varianten-Signale (POVAR) für die Rückmeldung der Ausführung einer Primär-Operation (POP) in einer Primär-Operationsgruppe (POG) zu der Intern-Primär-Operationsgruppe (IPOG), von der die Primär-Operation (POP) zugewiesen wurde, in Abhängigkeit der Basisoperations-Varianten-Signale (OVAR) von den Register-Transfer-Instanzen (RTIn), die mit Operationen (OPn) von der Primär-Operationsgruppe (POG) beauftragt wurden.

10. Computergestütztes Entwicklungsverfahren nach Anspruch 1, 2 oder 3, **gekennzeichnet durch** folgende weitere Schritte:
- Bei einer Operations-Anforderung (OP) von einer Primär-Operationsgruppe (POG) oder Intern-Primär-Operationsgruppe (IPOG) an eine Register-Transfer-Instanz (RTI), bei der im RTI-Operationsablauf Daten in eine oder mehrere externe Register-Transfer-Instanzen (RTIn) geschrieben oder/und aus einer oder mehreren externen Register-Transfer-Instanzen (RTIn) gelesen werden, erfolgt die Anforderung einer RTI-Operation (OP) für externes Schreiben oder/und Lesen direkt von der mit einer Operation (OP) beauftragten Register-Transfer-Instanz (RTI) über Operations-Controlsignale (OCTR) zu externen Register-Transfer-Instanzen (RTIn),
- nach Ausführung der Operation (OP) "Schreiben oder/und Lesen" in den externen Register-Transfer-Instanzen (RTIn) senden diese ihre externen Basisoperations-Varianten-Nummern (OVARx) oder ihre SVAR-/AVAR-Signale (Bedingungen oder/und Fehler-Kriterien) an die beauftragende Register-Transfer-Instanz (RTI),
- die von einer Primär-Operationsgruppe (POG) oder Intern-Primär-Operationsgruppe (IPOG) mit einer Operation (OP) beauftragte Register-Transfer-Instanz (RTI), sendet an die Primär-Operationsgruppe (POG) oder Intern-Primär-Operationsgruppe (IPOG), von der die Operation (OP) zugewiesen wurde, eine zusammengefasste Basisoperations-Varianten-Nummer (OVARx), abgeleitet aus der eigenen Basisoperations-Varianten-Nummer (OVARx) und den externen Basisoperations-Varianten-Nummern (OVARx) oder den externen SVAR-/AVAR-Signalen.

11. Computergestütztes Entwicklungsverfahren nach Anspruch 4, 5 oder 6, **gekennzeichnet durch** folgende weitere Schritte:
- Speichernde Elemente einer Register-Transfer-Instanz (RTI), beispielsweise Register (REG), Counter (CNT), Shiftregister (SHR), Memory (MEM) erhalten einen Elemente-State (ESTA), der bei Operations-Beginn auf Null gesetzt wird,
- der Elemente-State (ESTA) wird bei jeder Datenübernahme eines speichernden Elements mit Einfach-Daten um Eins und mit Mehrfach-Daten (Streaming) um die Anzahl der Mehrfach-Daten erhöht, wenn der Elemente-State (ESTA) vor der Datenübernahme gleich oder größer als der maximale Elemente-State (ESTA) der den Dateninput sendenden Elemente ist, sonst wird der maximale Elemente-State (ESTA) der den Dateninput sendenden Elemente um Eins erhöht übernommen,
- der Elemente-State (ESTA) wird bei Ausführung von Funktionssteps, beispielsweise Count, mit jedem Funktionsstep um Eins erhöht,
- RTI-Inputports (PI), RTI-Outputports (PO) und kombinatorische Elemente (COM) einer Register-Transfer-Instanz (RTI) erhalten einen Elemente-State (ESTA), der bei Operations-Beginn auf Null gesetzt wird,
- der Elemente-State (ESTA) für RTI-Inputports (PI) wird bei jedem Datenwechsel um Eins erhöht,
- der Elemente-State (ESTA) bei RTI-Outputports (PO) wird mit jeder Übernahme von Einfach-Daten um Eins und von Mehrfach-Daten (Streaming) um die Anzahl der Mehrfach-Daten erhöht, wenn der Elemente-State (ESTA) vor der Datenübernahme gleich oder größer als der maximale Elemente-State (ESTA) der den Dateninput sendenden Elemente ist, sonst wird der maximale Elemente-State (ESTA) der den Dateninput sendenden Elemente übernommen,
- der Elemente-State (ESTA) von kombinatorischen Elementen (COM) wird mit jeder Übernahme von Einfach-Daten um Eins und von Mehrfach-Daten (Streaming) um die Anzahl der Mehrfach-Daten erhöht, wenn der Elemente-State (ESTA) vor der Datenübernahme gleich oder größer als der maximale Elemente-State (ESTA) der den Dateninput sendenden Elemente ist, sonst wird der maximale Elemente-State (ESTA) der den Dateninput sendenden Elemente übernommen,
- die Werte für ESTA werden bei der Entwicklung der Datenverarbeitung in einer Register-Transfer-Instanz (RTI) automatisch gebildet,
- wobei der Elemente-State (ESTA) in einer Register-Transfer-Instanz (RTI) die sequenzielle Tiefe der Daten-Transferpfade für eine RTI-Operation (OP) **durch** die automatische Generierung der Anzahl der sequenziellen Dateneingabe-/Datenverarbeitungs-Steps (DVSTPs) für jeden Daten-Transferpfad definiert.

12. Computergestütztes Entwicklungsverfahren nach Anspruch 4, **gekennzeichnet durch** folgende weitere Schritte:
- In einer Register-Transfer-Instanz (RTI) erhalten alle Elemente eine Transfer-Identifier-Nummer (TIDz), die für eine RTI-Basisoperation und ihre RTI-Basisoperations-Varianten an jedem Elemente-Output den Ergebnis-Daten-Typ definiert,
- bei RTI-Basisoperationen werden für alle Elemente einer Register-Transfer-Instanz (RTI) die Transferidentifier-Nummern (TIDz) gleich Null (TID0) gesetzt,
- bei RTI-Basisoperations-Varianten (OVARx>0) einer Register-Transfer-Instanz (RTI) werden die Transferidentifier-Nummern (TIDz) der Elemente größer oder gleich Null gesetzt,
- für RTI-Basisoperations-Varianten wird für jeden Elemente-Output mit jedem neuen Ergebnis-Daten-Typ eine neue Transfer-Identifier-Nummer (TID1, TID2, ...) automatisch gebildet,
- zu den unterschiedlichen Transferidentifier-Nummern (TID1, TID2, ...) können zur Bezeichnung von Ergebnis-Datentypen an jedem Elemente-Output, zusätzlich zu einem statischen Signalnamen, unterschiedliche dynamische Signalnamen generiert werden,
- der Ergebnis-Daten-Typ am Elemente-Output wird abhängig von der Variations-Nummer (VARy) des jeweiligen Elements und von der Kombination der am Elemente-Daten-Input empfangenen TIDz-Werte bestimmt,
- alle Elemente einer Register-Transfer-Instanz (RTI) erhalten zusätzlich zur Transfer-Identifier-Nummer (TIDz) einen Aktions-State (ASTA), der in einer RTI-Operation (OP) die Anzahl der Daten-Empfangsvorgänge des jeweiligen Elements definiert und den Transfer-Identifier-Nummern (TIDz) zugeordnet ist,
- die Transferidentifier-Nummern (TIDz), die Variations-Nummern (VARy) und die Aktions-States (ASTA) werden bei der Entwicklung der Datenverarbeitung für jede Operation (OP) in den Register-Transfer-Instanzen (RTIn) für jeden Elemente-Daten-Empfang automatisch gebildet.

13. Computergestütztes Entwicklungsverfahren mit einer festgelegten System/Komponenten/Objekt-Hierarchie und definierten System/Komponenten/Objekt-Sende/Empfangs-Ports, bei denen Verbindungen von Sendeports von System/Komponenten/Objekten zu Empfangsports von System/Komponenten/Objekten, oder umgekehrt, zugewiesen werden, **gekennzeichnet durch** folgende Schritte:
- Bilden einer X/Y-Matrix aus einem X-Bereich und einem Y-Bereich und Anordnung von System/Komponenten/Objekten mit Sendeports in Zeilen des X-Bereichs und System/Komponenten/Objekten mit Empfangsports in Spalten des Y-Bereichs, oder
- anordnen von System/Komponenten/Objekten mit Empfangsports in Zeilen des X-Bereichs und System/Komponenten/Objekten mit Sendeports in Spalten des Y-Bereichs,
- die Zuordnung der Verbindungen der Sendeports zu den Empfangsports von System/Komponenten/Objekten erfolgt an den Kreuzungspunkten der Zeilen des X-Bereichs mit den Spalten des Y-Bereichs in der X/Y-Matrix.
